(19) Europäisches Patentamt
European Patent Office
Office européen des brevets

(11) EP 2 548 257 B1

(12) # EUROPEAN PATENT SPECIFICATION

(45) Date of publication and mention of the grant of the patent:
**11.09.2019 Bulletin 2019/37**

(21) Application number: **11712377.8**

(22) Date of filing: **17.03.2011**

(51) Int Cl.:
***H01M 8/22*** *(2006.01)* ***H01M 14/00*** *(2006.01)*
***G21B 3/00*** *(2006.01)* ***H01M 4/86*** *(2006.01)*
***H01M 4/94*** *(2006.01)* ***H01M 4/96*** *(2006.01)*
***C01B 3/00*** *(2006.01)*

(86) International application number:
**PCT/US2011/028889**

(87) International publication number:
**WO 2011/116236 (22.09.2011 Gazette 2011/38)**

(54) **ELECTROCHEMICAL HYDROGEN-CATALYST POWER SYSTEM**
ELEKTROCHEMISCHES WASSERSTOFFKATALYSATORENERGIESYSTEM
SYSTÈME ÉLECTRIQUE ÉLECTROCHIMIQUE À CATALYSEUR D'HYDROGÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority:
**15.10.2010 US 393719 P**
**07.05.2010 US 332526 P**
**03.12.2010 US 419590 P**
**25.06.2010 US 358667 P**
**20.12.2010 US 425105 P**
**27.08.2010 US 377613 P**
**09.07.2010 US 363090 P**
**24.03.2010 US 317176 P**
**18.06.2010 US 356348 P**
**17.09.2010 US 383929 P**
**12.11.2010 US 413243 P**
**30.04.2010 US 329959 P**
**21.05.2010 US 347130 P**
**16.07.2010 US 365051 P**
**07.01.2011 US 430814 P**
**01.10.2010 US 389006 P**
**28.01.2011 US 437377 P**
**11.02.2011 US 442015 P**
**13.08.2010 US 373495 P**
**06.08.2010 US 371592 P**
**18.03.2010 US 315186 P**
**29.10.2010 US 408384 P**
**04.03.2011 US 449474 P**
**30.07.2010 US 369289 P**

(43) Date of publication of application:
**23.01.2013 Bulletin 2013/04**

(73) Proprietor: **Blacklight Power, Inc.**
**Cranbury, NJ 08512 (US)**

(72) Inventor: **MILLS, Randell, L.**
**Princeton**
**NJ 08540 (US)**

(74) Representative: **Uexküll & Stolberg**
**Partnerschaft von**
**Patent- und Rechtsanwälten mbB**
**Beselerstraße 4**
**22607 Hamburg (DE)**

(56) References cited:
**WO-A2-2010/014684**
**US-A- 3 057 946**
**US-A- 3 669 750**
**US-A- 4 659 554**
**US-A1- 2009 148 731**

- **MILLS R ET AL: "Novel alkali and alkaline earth hydrides for high voltage and high energy density batteries", BATTERY CONFERENCE ON APPLICATIONS AND ADVANCES, 2002. THE SEVENTEENTH ANNUAL 15-18 JANUARY 2002, PISCATAWAY, NJ, USA,IEEE, 15 January 2002 (2002-01-15), pages 1-6, XP010579484, ISBN: 978-0-7803-7132-3**
- **A Rathke: "A critical analysis of the hydrino model", New Journal of Physics, vol. 7, 19 May 2005 (2005-05-19), pages 127-127, XP055096289, DOI: 10.1088/1367-2630/7/1/127**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

## CROSS-REFERENCES TO RELATED APPLICATIONS

This application claims the benefit of priority of U.S. Provisional Application Nos. 61/315,186, filed March 18, 2010; 61/317,176 filed March 24, 2010; 61/329,959 filed April 30, 2010; 61/332,526 filed May 7, 2010; 61/347,130 filed May 21, 2010; 61/356,348 filed June 18, 2010; 61/358,667 filed June 25, 2010; 61/363,090 filed July 9, 2010; 61/365,051 filed July 16, 2010; 61/369,289 filed July 30, 2010; 61/371,592 filed August 6, 2010; 61/373,495 filed August 13, 2010; 61/377,613 filed August 27, 2010; 61/383,929 filed September 17, 2010; 61/389,006 filed October 1, 2010; 61/393,719 filed October 15, 2010; 61/408,384 filed October 29, 2010; 61/413,243 filed November 12, 2010; 61/419,590 filed December 3, 2010; 61/425,105 filed December 20, 2010; 61/430,814 filed January 7, 2011; 61/437,377 filed January 28, 2011; 61/442,015 filed February 11, 2011 and 61/449,474 filed March 4, 2011.

Document US3057946 discloses an electrochemical power system including a fuel cell comprising an anode capable of oxidizing a species comprising hydrogen, a cathode capable of reducing at least one of $0_2$ or $H_20$.

## SUMMARY OF DISCLOSED EMBODIMENTS:

The present disclosure is directed to a system according to claim 1.

## BRIEF DESCRIPTION OF THE DRAWINGS

FIGURE 1 is a schematic drawing of an energy reactor and power plant in accordance with the present disclosure.

FIGURE 2 is a schematic drawing of an energy reactor and power plant for recycling or regenerating the fuel in accordance with the present disclosure.

FIGURE 3 is a schematic drawing of a power reactor in accordance with the present disclosure.

FIGURE 4 is a schematic drawing of a system for recycling or regenerating the fuel in accordance with the present disclosure.

FIGURE 5 is a schematic drawing of a multi-tube reaction system further showing the details of a unit energy reactor and power plant for recycling or regenerating the fuel in accordance with the present disclosure.

FIGURE 6 is a schematic drawing of a tube of a multi-tube reaction system comprising a reaction chamber and a metal-condensation and re-hydriding chamber separated by a sluice or gate valve for evaporating metal vapor, rehydriding of the metal, and re-supplying regenerated alkali hydridein accordance with the present disclosure.

FIGURE 7 is a schematic drawing of a thermally coupled multi-cell bundle wherein cells in the power-production phase of the cycle heat cells in the regeneration phase and the bundle is immsersed in water such that boiling and steam production occurs on the outer surface of the outer annulus with a heat gradient across the gap in accordance with the present disclosure.

FIGURE 8 is a schematic drawing of a plurality of thermally coupled multi-cell bundles wherein the bundles may be arranged in a boiler box in accordance with the present disclosure.

FIGURE 9 is a schematic drawing of a boiler that houses the reactor bundles and channels the steam into a domed manifold in accordance with the present disclosure.

FIGURE 10 is a schematic drawing of a power generation system wherein steam is generated in the boiler of FIGURE 9 and is channeled through the domed manifold to the steam line, a steam turbine receives the steam from boiling water, electricity is generated with a generator, and the steam is condensed and pumped back to the boiler in accordance with the present disclosure.

FIGURE 11 is a schematic drawing of a multi-tube reaction system comprising a bundle of reactor cells in thermal contact and separated from a heat exchanger by a gas gap in accordance with the present disclosure.

FIGURE 12 is a schematic drawing of a multi-tube reaction system comprising alternate layers of insulation, reactor cells, thermally conductive medium, and heat exchanger or collector in accordance with the present disclosure.

FIGURE 13 is a schematic drawing of a single unit of a multi-tube reaction system comprising alternate layers of insulation, reactor cells, thermally conductive medium, and heat exchanger or collector in accordance with the present disclosure.

FIGURE 14 is a schematic drawing of a boiler system comprising the multi-tube reaction system of FIGURE 12 and a coolant (saturated water) flow regulating system in accordance with the present disclosure.

FIGURE 15 is a schematic drawing of a power generation system wherein steam is generated in the boiler of FIGURE 14 and output from the steam-water separator to the main steam line, a steam turbine receives the steam from boiling water, electricity is generated with a generator, and the steam is condensed and pumped back to the boiler

in accordance with the present disclosure.

FIGURE 16 is a schematic drawing of the steam generation flow diagram in accordance with the present disclosure.

FIGURE 17 is a schematic drawing of a discharge power and plasma cell and reactor in accordance with the present disclosure.

FIGURE 18 is a schematic drawing of a battery and fuel cell in accordance with the present disclosure.

FIGURE 19 is a car architecture utilizing a CIHT cell stack in accordance with the present disclosure.

FIGURE 20 is a schematic drawing of a CIHT cell in accordance with the present disclosure.

FIGURE 21 is a schematic drawing of a three half-cell CIHT cell in accordance with the present disclosure.

FIGURE 22 is a schematic drawing of a CIHT cell comprising $H_2O$ and $H_2$ collection and recycling systems in accordance with the present disclosure.

## DETAILED DESCRIPTION OF THE EMBODIMENTS OF THE DISCLOSURE

The present disclosure is directed to catalyst systems to release energy from atomic hydrogen to form lower energy states wherein the electron shell is at a closer position relative to the nucleus. The released power is harnessed for power generation and additionally new hydrogen species and compounds are desired products. These energy states are predicted by classical physical laws and require a catalyst to accept energy from the hydrogen in order to undergo the corresponding energy-releasing transition.

Classical physics gives closed-form solutions of the hydrogen atom, the hydride ion, the hydrogen molecular ion, and the hydrogen molecule and predicts corresponding species having fractional principal quantum numbers. Using Maxwell's equations, the structure of the electron was derived as a boundary-value problem wherein the electron comprises the source current of time-varying electromagnetic fields during transitions with the constraint that the bound $n$ = 1 state electron cannot radiate energy. A reaction predicted by the solution of the H atom involves a resonant, nonradiative energy transfer from otherwise stable atomic hydrogen to a catalyst capable of accepting the energy to form hydrogen in lower-energy states than previously thought possible. Specifically, classical physics predicts that atomic hydrogen may undergo a catalytic reaction with certain atoms, excimers, ions, and diatomic hydrides which provide a reaction with a net enthalpy of an integer multiple of the potential energy of atomic hydrogen, $E_h$ = 27.2 $eV$ where $E_h$ is one Hartree. Specific species (e.g. $He^+$, $Ar^+$, $Sr^+$, K, Li, HCl, and NaH, OH, SH, she, $H_2O$, nH (n = integer)) identifiable on the basis of their known electron energy levels are required to be present with atomic hydrogen to catalyze the process. The reaction involves a nonradiative energy transfer followed by $q \cdot 13.6\ eV$ continuum emission or $q \cdot 13.6\ eV$ transfer to H to form extraordinarily hot, excited-state H and a hydrogen atom that is lower in energy than unreacted atomic hydrogen that corresponds to a fractional principal quantum number. That is, in the formula for the principal energy levels of the hydrogen atom:

$$E_n = -\frac{e^2}{n^2 8\pi\varepsilon_o a_H} = -\frac{13.598\ eV}{n^2}. \tag{1}$$

$$n = 1, 2, 3, \ldots \tag{2}$$

where $a_H$ is the Bohr radius for the hydrogen atom (52.947 pm), $e$ is the magnitude of the charge of the electron, and $\varepsilon_o$ is the vacuum permittivity, fractional quantum numbers:

$$n = 1, \frac{1}{2}, \frac{1}{3}, \frac{1}{4}, \ldots, \frac{1}{p};\quad \text{where } p \leq 137 \text{ is an integer} \tag{3}$$

replace the well known parameter $n$ = integer in the Rydberg equation for hydrogen excited states and represent lower-energy-state hydrogen atoms called "hydrinos." Then, similar to an excited state having the analytical solution of Maxwell's equations, a hydrino atom also comprises an electron, a proton, and a photon. However, the electric field of the latter increases the binding corresponding to desorption of energy rather than decreasing the central field with the absorption of energy as in an excited state, and the resultant photon-electron interaction of the hydrino is stable rather than radiative.

The $n$ = 1 state of hydrogen and the $n = \frac{1}{\text{integer}}$ states of hydrogen are nonradiative, but a transition between two nonradiative states, say $n$ = 1 to $n$ =1/2, is possible via a nonradiative energy transfer. Hydrogen is a special case of the stable states given by Eqs. (1) and (3) wherein the corresponding radius of the hydrogen or hydrino atom is given by

$$r = \frac{a_H}{p}, \quad (4)$$

where $p$ = 1,2,3,.... In order to conserve energy, energy must be transferred from the hydrogen atom to the catalyst in units of

$$m \cdot 27.2\ eV,\ m = 1,2,3,4,.... \quad (5)$$

and the radius transitions to $\frac{a_H}{m+p}$. The catalyst reactions involve two steps of energy release: a nonradiative energy transfer to the catalyst followed by additional energy release as the radius decreases to the corresponding stable final state. It is believed that the rate of catalysis is increased as the net enthalpy of reaction is more closely matched to $m \cdot 27.2\ eV$. It has been found that catalysts having a net enthalpy of reaction within ±10%, preferably ±5%, of $m \cdot 27.2\ eV$ are suitable for most applications. In the case of the catalysis of hydrino atoms to lower energy states, the enthalpy of reaction of $m \cdot 27.2 eV$ (Eq. (5)) is relativistically corrected by the same factor as the potential energy of the hydrino atom.

Thus, the general reaction is given by

$$m \cdot 27.2\ eV + Cat^{q+} + H\left[\frac{a_H}{p}\right] \to Cat^{(q+r)+} + re^- + H^*\left[\frac{a_H}{(m+p)}\right] + m \cdot 27.2\ eV \quad (6)$$

$$H^*\left[\frac{a_H}{(m+p)}\right] \to H\left[\frac{a_H}{(m+p)}\right] + [(p+m)^2 - p^2] \cdot 13.6\ eV - m \cdot 27.2\ eV \quad (7)$$

$$Cat^{(q+r)+} + re^- \to Cat^{q+} + m \cdot 27.2\ eV \text{ and} \quad (8)$$

the overall reaction is

$$H\left[\frac{a_H}{p}\right] \to H\left[\frac{a_H}{(m+p)}\right] + [(p+m)^2 - p^2] \cdot 13.6\ eV \quad (9)$$

$q$, $r$, $m$, and $p$ are integers. $H^*\left[\frac{a_H}{(m+p)}\right]$ has the radius of the hydrogen atom (corresponding to 1 in the denominator) and a central field equivalent to ($m$ + $p$) times that of a proton, and $H\left[\frac{a_H}{(m+p)}\right]$ is the corresponding stable state with the radius of $\frac{1}{(m+p)}$ that of H. As the electron undergoes radial acceleration from the radius of the hydrogen atom to a radius of $\frac{1}{(m+p)}$ this distance, energy is released as characteristic light emission or as third-body kinetic energy. The emission may be in the form of an extreme-ultraviolet continuum radiation having an edge at $[(p + m)^2 - p^2 - 2m] \cdot 13.6\ eV$ or $\frac{91.2}{[(p+m)^2 - p^2 - 2m]}\ nm$ and extending to longer wavelengths. In addition to radiation, a resonant kinetic energy transfer to form fast H may occur. Subsequent excitation of these fast $H(n=1)$ atoms by collisions with

the background $H_2$ followed by emission of the corresponding $H(n=3)$ fast atoms gives rise to broadened Balmer $\alpha$ emission. Alternatively, fast H is a direct product of H or hydrino serving as the catalyst wherein the acceptance of the resonant energy transfer regards the potential energy rather than the ionization energy. Conservation of energy gives a proton of the kinetic energy corresponding to one half the potential energy in the former case and a catalyst ion at essentially rest in the latter case. The H recombination radiation of the fast protons gives rise to broadened Balmer $\alpha$ emission that is disproportionate to the inventory of hot hydrogen consistent with the excess power balance.

In the present disclosure the terms such as hydrino reaction, H catalysis, H catalysis reaction, catalysis when referring to hydrogen, the reaction of hydrogen to form hydrinos, and hydrino formation reaction all refer to the reaction such as that of Eqs. (6-9)) of a catalyst defined by Eq. (5) with atomic H to form states of hydrogen having energy levels given by Eqs. (1) and (3). The corresponding terms such as hydrino reactants, hydrino reaction mixture, catalyst mixture, reactants for hydrino formation, reactants that produce or form lower-energy state hydrogen or hydrinos are also used interchangeably when referring to the reaction mixture that performs the catalysis of H to H states or hydrino states having energy levels given by Eqs. (1) and (3).

The catalytic lower-energy hydrogen transitions of the present disclosure require a catalyst that may be in the form of an endothermic chemical reaction of an integer *m* of the potential energy of uncatalyzed atomic hydrogen, 27.2 *eV,* that accepts the energy from atomic H to cause the transition. The endothermic catalyst reaction may be the ionization of one or more electrons from a species such as an atom or ion (e.g. $m = 3$ for $Li \rightarrow Li^{2+}$) and may further comprise the concerted reaction of a bond cleavage with ionization of one or more electrons from one or more of the partners of the initial bond (e.g. $m = 2$ for $N\alpha H \rightarrow N\alpha^{2+} + H$). $He^+$ fulfills the catalyst criterion a chemical or physical process with an enthalpy change equal to an integer multiple of 27.2 *eV* since it ionizes at 54.417 *eV,* which is $2 \cdot 27.2$ *eV.* An integer number of hydrogen atoms may also serve as the catalyst of an integer multiple of *27.2 eV* enthalpy. Hydrogen atoms $H(1/p)$ $p = 1,2,3,...137$ can undergo further transitions to lower-energy states given by Eqs. (1) and (3) wherein the transition of one atom is catalyzed by one or more additional H atoms that resonantly and nonradiatively accepts $m \cdot 27.2$ *eV* with a concomitant opposite change in its potential energy. The overall general equation for the transition of $H(1/p)$ to $H(1/(p+m))$ induced by a resonance transfer of $m \cdot 272$ *eV* to $H(1/p')$ is represented by

$$H(1/p') + H(1/p) \rightarrow H + H(1/(p+m)) + \left[2pm + m^2 - p'^2 + 1\right] \cdot 13.6\ eV \qquad (10)$$

Hydrogen atoms may serve as a catalyst wherein $m = 1$, $m = 2$, and $m = 3$ for one, two, and three atoms, respectively, acting as a catalyst for another. The rate for the two-atom-catalyst, $2H$, may be high when extraordinarily fast H collides with a molecule to form the 2H wherein two atoms resonantly and nonradiatively accept 54.4*eV* from a third hydrogen atom of the collision partners. By the same mechanism, the collision of two hot $H_2$ provide 3H to serve as a catalyst of 3.27.2 *eV* for the fourth. The EUV continua at 22.8 nm and 10.1 nm, extraordinary (>100 eV) Balmer $\alpha$ line broadening, highly excited H states, the product gas $H_2(1/4)$, and large energy release is observed consistent with predictions.

H(1/4) is a preferred hydrino state based on its multipolarity and the selection rules for its formation. Thus, in the case that H(1/3) is formed, the transition to H(1/4) may occur rapidly catalyzed by H according to Eq. (10). Similarly, H(1/4) is a preferred state for a catalyst energy greater than or equal to 81.6 eV corresponding to m=3 in Eq. (5). In this case the energy transfer to the catalyst comprises the 81.6 eV that forms that H*(1/4) intermediate of Eq. (7) as well as an integer of 27.2 eV from the decay of the intermediate. For example, a catalyst having an enthalpy of 108.8 eV may form H*(1/4) by accepting 81.6 eV as well as 27.2 eV from the H*(1/4) decay energy of 122.4 eV. The remaining decay energy of 95.2 eV is released to the environment to form the preferred state H(1/4) that then reacts to form $H_2(1/4)$.

A suitable catalyst can therefore provide a net positive enthalpy of reaction of $m \cdot 27.2$ *eV.* That is, the catalyst resonantly accepts the nonradiative energy transfer from hydrogen atoms and releases the energy to the surroundings to affect electronic transitions to fractional quantum energy levels. As a consequence of the nonradiative energy transfer, the hydrogen atom becomes unstable and emits further energy until it achieves a lower-energy nonradiative state having a principal energy level given by Eqs. (1) and (3). Thus, the catalysis releases energy from the hydrogen atom with a commensurate decrease in size of the hydrogen atom, $r_n = n\alpha_H$ where *n* is given by Eq. (3). For example, the catalysis of $H(n = 1)$ to $H(n=1/4)$ releases 204 *eV,* and the hydrogen radius decreases from $\alpha_H$ to $\frac{1}{4}a_H$.

The catalyst product, $H(1/p)$, may also react with an electron to form a hydrino hydride ion $H^-(1/p)$, or two $H(1/p)$ may react to form the corresponding molecular hydrino $H_2(1/p)$. Specifically, the catalyst product, $H(1/p)$, may also react with an electron to form a novel hydride ion $H^-(1/p)$ with a binding energy $E_B$:

$$E_B = \frac{\hbar^2\sqrt{s(s+1)}}{8\mu_e a_0^2\left[\frac{1+\sqrt{s(s+1)}}{p}\right]^2} - \frac{\pi\mu_0 e^2\hbar^2}{m_e^2}\left(\frac{1}{a_H^3} + \frac{2^2}{a_0^3\left[\frac{1+\sqrt{s(s+1)}}{p}\right]^3}\right) \quad (11)$$

where $p$ = integer >1, $s$ =1/ 2, $\hbar$ is Planck's constant bar, $\mu_o$ is the permeability of vacuum, $m_e$ is the mass of the electron, $\mu_e$ is the reduced electron mass given by $\mu_e = \frac{m_e m_p}{\frac{m_e}{\sqrt{\frac{3}{4}}} + m_p}$ where $m_p$ is the mass of the proton, $a_o$ is the Bohr radius, and the ionic radius is $r_1 = \frac{a_0}{p}\left(1+\sqrt{s(s+1)}\right).$ From Eq. (11), the calculated ionization energy of the hydride ion is 0.75418 *eV,* and the experimental value is 6082.99 ± 0.15 $cm^{-1}$ (0.75418 eV). The binding energies of hydrino hydride ions were confirmed by XPS.

Upfield-shifted NMR peaks are direct evidence of the existence of lower-energy state hydrogen with a reduced radius relative to ordinary hydride ion and having an increase in diamagnetic shielding of the proton. The shift is given by the sum of that of an ordinary hydride ion $H^-$ and a component due to the lower -energy state:

$$\frac{\Delta B_T}{B} = -\mu_0\frac{e^2}{12m_e a_0\left(1+\sqrt{s(s+1)}\right)}(1+\alpha 2\pi p) = -(29.9+1.37p)\,ppm \quad (12)$$

where for $H^-$ $p$ = 0 and $p$ = integer > 1 for $H^-(1/p)$ and $\alpha$ is the fine structure constant. The predicted peaks were observed by solid and liquid proton NMR.

$H(1/p)$ may react with a proton and two $H(1/p)$ may react to form $H_2(1/p)^+$ and $H_2(1/p)$, respectively. The hydrogen molecular ion and molecular charge and current density functions, bond distances, and energies were solved from the Laplacian in ellipsoidal coordinates with the constraint of nonradiation.

$$(\eta-\zeta)R_\xi\frac{\partial}{\partial\xi}(R_\xi\frac{\partial\phi}{\partial\xi}) + (\zeta-\xi)R_\eta\frac{\partial}{\partial\eta}(R_\eta\frac{\partial\phi}{\partial\eta}) + (\xi-\eta)R_\zeta\frac{\partial}{\partial\zeta}(R_\zeta\frac{\partial\phi}{\partial\zeta}) = 0 \quad (13)$$

The total energy $E_T$ of the hydrogen molecular ion having a central field of $+pe$ at each focus of the prolate spheroid molecular orbital is

$$E_T = -p^2\left\{\begin{array}{l}\frac{e^2}{8\pi\varepsilon_o a_H}(4\ln 3 - 1 - 2\ln 3)\left[1+p\sqrt{\frac{2\hbar\sqrt{\frac{\frac{2e^2}{4\pi\varepsilon_o(2a_H)^3}}{m_e}}}{m_e c^2}}\right] \\ -\frac{1}{2}\hbar\sqrt{\frac{\frac{pe^2}{4\pi\varepsilon_o\left(\frac{2a_H}{p}\right)^3} - \frac{pe^2}{8\pi\varepsilon_o\left(\frac{3a_H}{p}\right)^3}}{\mu}}\end{array}\right\} \quad (14)$$

$$= -p^2 16.13392\ eV - p^3 0.118755\ eV$$

where $p$ is an integer, $c$ is the speed of light in vacuum, and $\mu$ is the reduced nuclear mass. The total energy of the hydrogen molecule having a central field of + $pe$ at each focus of the prolate spheroid molecular orbital is

$$E_T = -p^2 \left\{ \begin{array}{l} \frac{e^2}{8\pi\varepsilon_o a_0}\left[\left(2\sqrt{2}-\sqrt{2}+\frac{\sqrt{2}}{2}\right)\ln\frac{\sqrt{2}+1}{\sqrt{2}-1}-\sqrt{2}\right]\left[1+p\sqrt{\frac{2\hbar\sqrt{\frac{\frac{e^2}{4\pi\varepsilon_o a_0^3}}{m_e}}}{m_e c^2}}\right] \\ -\frac{1}{2}\hbar\sqrt{\frac{\frac{pe^2}{8\pi\varepsilon_o\left(\frac{a_0}{p}\right)^3}-\frac{pe^2}{8\pi\varepsilon_o\left(\frac{\left(1+\frac{1}{\sqrt{2}}\right)a_0}{p}\right)^3}}{\mu}} \end{array} \right\} \quad (15)$$
$$= -p^2 31.351\ eV - p^3 0.326469\ eV$$

The bond dissociation energy, $E_D$, of the hydrogen molecule $H_2(1/p)$ is the difference between the total energy of the corresponding hydrogen atoms and $E_T$

$$E_D = E(2H(1/p)) - E_T \quad (16)$$

where

$$E(2H(1/p)) = -p^2 27.20\ eV \quad (17)$$

$E_D$ is given by Eqs. (16-17) and (15):

$$\begin{aligned} E_D &= -p^2 27.20\ eV - E_T \\ &= -p^2 27.20\ eV - \left(-p^2 31.351\ eV - p^3 0.326469\ eV\right) \\ &= p^2 4.151\ eV + p^3 0.326469\ eV \end{aligned} \quad (18)$$

The NMR of catalysis-product gas provides a definitive test of the theoretically predicted chemical shift of $H_2(1/4)$. In general, the $^1H$ NMR resonance of $H_2(1/p)$ is predicted to be upfield from that of $H_2$ due to the fractional radius in elliptic coordinates wherein the electrons are significantly closer to the nuclei. The predicted shift, $\frac{\Delta B_T}{B}$, for $H_2(1/p)$ is given by the sum of that of $H_2$ and a term that depends on $p$ = integer > 1 for $H_2(1/p)$:

$$\frac{\Delta B_T}{B} = -\mu_0\left(4-\sqrt{2}\ln\frac{\sqrt{2}+1}{\sqrt{2}-1}\right)\frac{e^2}{36 a_0 m_e}\left(1+\pi\alpha p\right) \quad (19)$$

$$\frac{\Delta B_T}{B} = -\left(28.01+0.64p\right) ppm \quad (20)$$

where for $H_2$ $p$ = 0. The experimental absolute $H_2$ gas-phase resonance shift of -28.0 ppm is in excellent agreement with the predicted absolute gas-phase shift of -28.01 ppm (Eq. (20)). The predicted NMR peak for the favored product

$H_2(1/4)$ was observed by solid and liquid NMR including on cryogenically collected gas from plasmas showing the predicted continuum radiation and fast H.

The vibrational energies, $E_{vib}$, for the $\upsilon = 0$ to $\upsilon = 1$ transition of hydrogen-type molecules $H_2(1/p)$ are

$$E_{vib} = p^2 0.515902\ eV \tag{21}$$

where $p$ is an integer .

The rotational energies, $E_{rot}$, for the $J$ to $J$+1 transition of hydrogen-type molecules $H_2(1/p)$ are

$$E_{rot} = E_{J+1} - E_J = \frac{\hbar^2}{I}[J+1] = p^2(J+1)0.01509\ eV \tag{22}$$

where $p$ is an integer and $I$ is the moment of inertia. Ro-vibrational emission of $H_2(1/4)$ was observed on e-beam excited molecules in gases and trapped in solid matrix .

The $p^2$ dependence of the rotational energies results from an inverse $p$ dependence of the internuclear distance and the corresponding impact on the moment of inertia $I$. The predicted internuclear distance 2c' for $H_2(1/p)$ is

$$2c' = \frac{a_o\sqrt{2}}{p} \tag{23}$$

CATALYSTS

$He^+$, $Ar^+$, $Sr^+$, Li, K, NaH, nH (n = integer), and $H_2O$ are predicted to serve as catalysts since they meet the catalyst criterion a chemical or physical process with an enthalpy change equal to an integer multiple of the potential energy of atomic hydrogen, 27.2 *eV.* Specifically, a catalytic system is provided by the ionization of $t$ electrons from an atom each to a continuum energy level such that the sum of the ionization energies of the $t$ electrons is approximately $m \cdot 27.2\ eV$ where $m$ is an integer. One such catalytic system involves lithium atoms. The first and second ionization energies of lithium are 5.39172 *eV* and 75.64018 *eV,* respectively. The double ionization ($t$ = 2) reaction of $Li$ to $Li^{2+}$ then, has a net enthalpy of reaction of 81.0319 *eV,* which is equivalent to 3.27.2 *eV* .

$$81.0319\ eV + Li(m) + H\left[\frac{a_H}{p}\right] \rightarrow Li^{2+} + 2e^- + H\left[\frac{a_H}{(p+3)}\right] + [(p+3)^2 - p^2]\cdot 13.6\ eV \tag{24}$$

$$Li^{2+} + 2e^- \rightarrow Li(m) + 81.0319\ eV \tag{25}$$

And, the overall reaction is

$$H\left[\frac{a_H}{p}\right] \rightarrow H\left[\frac{a_H}{(p+3)}\right] + [(p+3)^2 - p^2]\cdot 13.6\ eV \tag{26}$$

where $m$ = 3 in Eq. (5). The energy given off during catalysis is much greater than the energy lost to the catalyst. The energy released is large as compared to conventional chemical reactions. For example, when hydrogen and oxygen gases undergo combustion to form water

$$H_2\ (g) + \frac{1}{2}O_2\ (g) \rightarrow H_2O\ (l) \tag{27}$$

the known enthalpy of formation of water is $\Delta H_f$ = -286 *kJ/mole* or 1.48 eV per hydrogen atom. By contrast, each ($n$=1)

ordinary hydrogen atom undergoing a catalysis step to $n=\frac{1}{2}$ releases a net of 40.8 $eV$. Moreover, further catalytic transitions may occur: $n=\frac{1}{2}\rightarrow\frac{1}{3},\ \frac{1}{3}\rightarrow\frac{1}{4},\ \frac{1}{4}\rightarrow\frac{1}{5},$ and so on. Once catalysis begins, hydrinos autocatalyze further in a process called disproportionation wherein H or H(1/p) serves as the catalyst for another H or H(1/p') (p may equal p').

Certain molecules may also serve to affect transitions of H to form hydrinos. In general, a compound comprising hydrogen such as $MH$, where M is an element other than hydrogen, serves as a source of hydrogen and a source of catalyst. A catalytic reaction is provided by the breakage of the $M$ - $H$ bond plus the ionization of $t$ electrons from the atom $M$ each to a continuum energy level such that the sum of the bond energy and ionization energies of the $t$ electrons is approximately $m \cdot 27.2\ eV$, where $m$ is an integer. One such catalytic system involves sodium hydride. The bond energy of $NaH$ is 1.9245 $eV$, and the first and second ionization energies of Na are 5.13908 $eV$ and 47.2864 $eV$, respectively. Based on these energies NaH molecule can serve as a catalyst and H source, since the bond energy of NaH plus the double ionization ($t$ = 2) of Na to $Na^{2+}$ is 54.35 $eV$ (2· 27.2 $eV$). The concerted catalyst reactions are given by

$$54.35\ eV+NaH\rightarrow Na^{2+}+2e^{-}+H\left[\frac{a_H}{3}\right]+[3^2-1^2]\cdot 13.6\ eV \tag{28}$$

$$Na^{2+}+2e^{-}+H\rightarrow NaH+54.35\ eV \tag{29}$$

And, the overall reaction is

$$H\rightarrow H\left[\frac{a_H}{3}\right]+[3^2-1^2]\cdot 13.6\ eV \tag{30}$$

With $m$ = 2, the product of catalyst NaH is $H$(1/3) that reacts rapidly to form $H$(1/4), then molecular hydrino, $H_2$(1/4), as a preferred state. Specifically, in the case of a high hydrogen atom concentration, the further transition given by Eq. (10) of $H$(1/3) ($p$ = 3) to $H$(1/4)($p$ + $m$ = 4) with $H$ as the catalyst ($p'$ = 1; $m$ = 1) can be fast:

$$H(1/3)\xrightarrow{H}H(1/4)+95.2\ eV \tag{31}$$

The corresponding molecular hydrino $H_2$(1/4) and hydrino hydride ion $H^-$ (1/4) are preferred final products consistent with observation since the $p$ = 4 quantum state has a multipolarity greater than that of a quadrupole giving $H$(1/4) a long theoretical lifetime for further catalysis.

Helium ions can serve as a catalyst because the second ionization energy of helium is 54.417 $eV$, which is equivalent to 2.27.2 $eV$. In this case, 54.417 $eV$ is transferred nonradiatively from atomic hydrogen to $He^+$ which is resonantly ionized. The electron decays to the $n$ = 1/3 state with the further release of 54.417 $eV$ as given in Eq. (33). The catalysis reaction is

$$54.417\ eV+He^{+}+H[a_H]\rightarrow He^{2+}+e^{-}+H^*\left[\frac{a_H}{3}\right]+54.4\ eV \tag{32}$$

$$H^*\left[\frac{a_H}{3}\right]\rightarrow H\left[\frac{a_H}{3}\right]+54.4\ eV \tag{33}$$

$$He^{2+}+e^{-}\rightarrow He^{+}+54.417\ eV \tag{34}$$

And, the overall reaction is

$$H[a_H] \rightarrow H\left[\frac{a_H}{3}\right] + 54.4\ eV + 54.4\ eV \quad (35)$$

wherein $H*\left[\frac{a_H}{3}\right]$ has the radius of the hydrogen atom and a central field equivalent to 3 times that of a proton and $H\left[\frac{a_H}{3}\right]$ is the corresponding stable state with the radius of 1/3 that of H. As the electron undergoes radial acceleration from the radius of the hydrogen atom to a radius of 1/3 this distance, energy is released as characteristic light emission or as third-body kinetic energy. Characteristic continuum emission starting at 22.8 nm (54.4 *eV*) and continuing to longer wavelengths was observed as predicted for this transition reaction as the energetic hydrino intermediate decays. The emission has been observed by EUV spectroscopy recorded on pulsed discharges of helium with hydrogen. Alternatively, a resonant kinetic energy transfer to form fast *H* may occur consistent with the observation of extraordinary Balmer $\alpha$ line broadening corresponding to high-kinetic energy H.

Hydrogen and hydrinos may serves as catalysts. Hydrogen atoms $H(1/p)$ $p$ = 1,2,3,...137 can undergo transitions to lower-energy states given by Eqs. (1) and (3) wherein the transition of one atom is catalyzed by a second that resonantly and nonradiatively accepts $m \cdot 27.2\ eV$ with a concomitant opposite change in its potential energy. The overall general equation for the transition of $H(1/p)$ to $H(1/(m+p))$ induced by a resonance transfer of $m \cdot 272\ eV$ to $H(1/p')$ is represented by Eq. (10). Thus, hydrogen atoms may serve as a catalyst wherein $m$ = 1, $m$ = 2, and $m$ = 3 for one, two, and three atoms, respectively, acting as a catalyst for another. The rate for the two- or three-atom-catalyst case would be appreciable only when the *H* density is high. But, high H densities are not uncommon. A high hydrogen atom concentration permissive of 2H or 3H serving as the energy acceptor for a third or fourth may be achieved under several circumstances such as on the surface of the Sun and stars due to the temperature and gravity driven density, on metal surfaces that support multiple monolayers, and in highly dissociated plasmas, especially pinched hydrogen plasmas. Additionally, a three-body H interaction is easily achieved when two *H* atoms arise with the collision of a hot *H* with $H_2$. This event can commonly occur in plasmas having a large population of extraordinarily fast H. This is evidenced by the unusual intensity of atomic H emission. In such cases, energy transfer can occur from a hydrogen atom to two others within sufficient proximity, being typically a few angstroms via multipole coupling. Then, the reaction between three hydrogen atoms whereby two atoms resonantly and nonradiatively accept 54.4 *eV* from the third hydrogen atom such that 2*H* serves as the catalyst is given by

$$54.4\ eV + 2H + H \rightarrow 2H^+_{fast} + 2e^- + H*\left[\frac{a_H}{3}\right] + 54.4\ eV \quad (36)$$

$$H*\left[\frac{a_H}{3}\right] \rightarrow H\left[\frac{a_H}{3}\right] + 54.4\ eV \quad (37)$$

$$2H^+_{fast} + 2e^- \rightarrow 2H + 54.4\ eV \quad (38)$$

And, the overall reaction is

$$H \rightarrow H\left[\frac{a_H}{3}\right] + [3^2 - 1^2] \cdot 13.6\ eV \quad (39)$$

Since the $H*\left[\frac{a_H}{3}\right]$ intermediate of Eq. (37) is equivalent to that of Eq. (33), the continuum emission is predicted to be the same as that with $He^+$ as the catalyst. The energy transfer to two *H* causes pumping of the catalyst excited states, and fast *H* is produced directly as given by Eqs. (36-39) and by resonant kinetic energy transfer as in the case of $He^+$ as the catalyst. The 22.8 nm continuum radiation, pumping of *H* excited states, and fast *H* were also observed with hydrogen plasmas wherein 2*H* served as the catalyst.

The predicted product of both of the helium ion and 2*H* catalyst reactions given by Eqs. (32-35) and Eqs. (36-39), respectively, is *H*(1/3). In the case of a high hydrogen atom concentration, the further transition given by Eq. (10) of *H*(1/3)($p$ = 3) to *H*(1/4) ($p + m = 4$) with *H* as the catalyst ($p' = 1$; $m = 1$) can be fast as given by Eq. (31). A secondary continuum band is predicted arising from the subsequently rapid transition of the $He^+$ catalysis product $\left[\frac{a_H}{3}\right]$ (Eqs. (32-35)) to the $\left[\frac{a_H}{4}\right]$ state wherein atomic hydrogen accepts 27.2 from $\left[\frac{a_H}{3}\right]$. This 30.4 nm continuum was observed, as well. Similarly, when $Ar^+$ served as the catalyst, its predicted 91.2 nm and 45.6 nm continua were observed. The predicted fast *H* was observed as well. Additionally, the predicted product $H_2(1/4)$ was isolated from both $He^+$ and 2*H* catalyst reactions and identified by NMR at its predicted chemical shift given by Eq. (20).

In another *H* -atom catalyst reaction involving a direct transition to $\left[\frac{a_H}{4}\right]$ state, two hot $H_2$ molecules collide and dissociate such that three *H* atoms serve as a catalyst of 3.27.2 *eV* for the fourth. Then, the reaction between four hydrogen atoms whereby three atoms resonantly and nonradiatively accept 81.6 *eV* from the fourth hydrogen atom such that 3*H* serves as the catalyst is given by

$$81.6\ eV + 3H + H \rightarrow 3H^+_{fast} + 3e^- + H^*\left[\frac{a_H}{4}\right] + 81.6\ eV \tag{40}$$

$$H^*\left[\frac{a_H}{4}\right] \rightarrow H\left[\frac{a_H}{4}\right] + 122.4\ eV \tag{41}$$

$$3H^+_{fast} + 3e^- \rightarrow 3H + 81.6\ eV \tag{42}$$

And, the overall reaction is

$$H \rightarrow H\left[\frac{a_H}{4}\right] + [4^2 - 1^2] \cdot 13.6\ eV \tag{43}$$

The extreme-ultraviolet continuum radiation band due to the $H^*\left[\frac{a_H}{4}\right]$ intermediate of Eq. (40) is predicted to have short wavelength cutoff at 122.4 *eV* (10.1 nm) and extend to longer wavelengths. This continuum band was confirmed experimentally. In general, the transition of *H* to $H\left[\frac{a_H}{p = m+1}\right]$ due by the acceptance of $m \cdot 27.2\ eV$ gives a continuum band with a short wavelength cutoff and energy $E_{\left(H \rightarrow H\left[\frac{a_H}{p=m+1}\right]\right)}$ given by

$$E_{\left(H \rightarrow H\left[\frac{a_H}{p=m+1}\right]\right)} = m^2 \cdot 13.6\ eV \tag{44}$$

$$\lambda_{\left(H \rightarrow H\left[\frac{a_H}{p=m+1}\right]\right)} = \frac{91.2}{m^2}\ nm \tag{45}$$

and extending to longer wavelengths than the corresponding cutoff. The hydrogen emission series of 10.1 nm, 22.8 nm, and 91.2 nm continua were observed experimentally.

DATA

The data from a broad spectrum of investigational techniques strongly and consistently indicates that hydrogen can exist in lower-energy states than previously thought possible and support the existence of these states called hydrino, for "small hydrogen", and the corresponding hydride ions and molecular hydrino. Some of these prior related studies supporting the possibility of a novel reaction of atomic hydrogen, which produces hydrogen in fractional quantum states that are at lower energies than the traditional "ground" ($n$ = 1) state, include extreme ultraviolet (EUV) spectroscopy, characteristic emission from catalysts and the hydride ion products, lower-energy hydrogen emission, chemically-formed plasmas, Balmer $\alpha$ line broadening, population inversion of $H$ lines, elevated electron temperature, anomalous plasma afterglow duration, power generation, and analysis of novel chemical compounds and molecular hydrino.

The existence of hydrinos confirmed by multiple complementary methods demonstrates the potential for a new energy source. Hydrogen atoms may serve as a catalyst wherein $m$ = 1, $m$ = 2, and $m$ = 3 for one, two, and three atoms, respectively, acting as a catalyst for another. The rate for the two-atom-catalyst, $2H$, may be high when extraordinarily fast H collides with a molecule to form the $2H$ wherein two atoms resonantly and nonradiatively accept 54.4 $eV$ from a third hydrogen atom of the collision partners. By the same mechanism, the collision of two hot $H_2$ provide 3 $H$ to serve as a catalyst of $3 \cdot 27.2$ $eV$ for the fourth. The EUV continua at 91.2 nm, 22.8 nm and 10.1 nm, extraordinary (>50 eV) Balmer $\alpha$ line broadening, highly excited catalyst states, and the product gas $H_2$ (1 / 4) were observed as predicted.

Gases from the pulsed-plasma cells showing continuum radiation were collected and dissolved in $CDCl_3$. Molecular hydrino $H_2$ (1/ 4) was observed by solution NMR at the predicted chemical shift of 1.25 ppm on these as well as gases collected from multiple plasma sources including helium-hydrogen, water-vapor-assisted hydrogen, hydrogen, and so-called rt-plasmas involving an incandescently heated mixture of strontium, argon, and hydrogen. These results are in good agreement with prior results on synthetic reactions to form hydrino compounds comprising hydrinos. The $^1H$ MAS NMR value of 1.13 ppm observed for $H_2$(1/4) in solid $NaH*F$ corresponded to the solution value of 1.2 ppm and that of gases from plasma cells having a catalyst. The corresponding hydrino hydride ion $H^-$ (1/ 4) was observed from solid compounds at the predicted shift of -3.86 ppm in solution NMR and its ionization energy was confirmed at the predicted energy of 11 eV by X-ray photoelectron spectroscopy. $H_2$(1/4) and $H^-$(1/4) were also confirmed as the products of hydrino catalytic systems that released multiples of the maximum energy possible based on known chemistries; moreover, reactants systems were developed and shown to be thermally regenerative that are competitive as a new power source.

Specifically, in recent power generation and product characterization studies, atomic lithium and molecular $NaH$ served as catalysts since they meet the catalyst criterion a chemical or physical process with an enthalpy change equal to an integer multiple $m$ of the potential energy of atomic hydrogen, 27.2 $eV$ (e.g. $m$ = 3 for $Li$ and $m$ = 2 for $N\alpha H$). Specific predictions based on closed-form equations for energy levels of the corresponding hydrino hydride ions $H^-$ (1/4) of novel alkali halido hydrino hydride compounds ($MH*X$; $M = Li$ or $N\alpha$, $X = halide$) and molecular hydrino $H_2$ (1/4) were tested using chemically generated catalysis reactants.

First, $Li$ catalyst was tested. $Li$ and $LiNH_2$ were used as a source of atomic lithium and hydrogen atoms. Using water-flow, batch calorimetry, the measured power from 1g $Li$, 0.5g $LiNH_2$, 10g $LiBr$, and 15g $Pd/Al_2O_3$ was about 160W with an energy balance of $\Delta H$ = -19.1 $kJ$. The observed energy balance was 4.4 times the maximum theoretical based on known chemistry. Next, Raney nickel (R-Ni) served as a dissociator when the power reaction mixture was used in chemical synthesis wherein $LiBr$ acted as a getter of the catalysis product $H$(1/4) to form $LiH*X$ as well as to trap $H_2$ (1/4) in the crystal. The ToF-SIMs showed $LiH*X$ peaks. The $^1H$ MAS NMR $LiH*Br$ and $LiH*I$ showed a large distinct upfield resonance at about -2.5 ppm that matched $H^-$ (1/4) in a $LiX$ matrix. An NMR peak at 1.13 ppm matched interstitial $H_2$ (1/4), and the rotation frequency of $H_2$(1/4) of $4^2$ times that of ordinary $H_2$ was observed at 1989 $cm^{-1}$ in the FTIR spectrum. The XPS spectrum recorded on the $LiH*Br$ crystals showed peaks at about 9.5 eV and 12.3 eV that could not be assigned to any known elements based on the absence of any other primary element peaks, but matched the binding energy of $H^-$ (1/4) in two chemical environments. A further signature of the energetic process was the observation of the formation of a plasma called a resonant transfer- or rt-plasma at low temperatures (e.g. $\approx 10^3$ $K$) and very low field strengths of about 1-2 V/cm when atomic $Li$ was present with atomic hydrogen. Time-dependent line broadening of the $H$ Balmer $\alpha$ line was observed corresponding to extraordinarily fast $H$ (>40 eV).

$NaH$ uniquely achieves high kinetics since the catalyst reaction relies on the release of the intrinsic $H$, which concomitantly undergoes the transition to form $H$(1/3) that further reacts to form $H$(1/4). High-temperature differential scanning calorimetry (DSC) was performed on ionic $NaH$ under a helium atmosphere at an extremely slow temperature ramp rate (0.1°C/min) to increase the amount of molecular $NaH$ formation. A novel exothermic effect of -177 $kJ/moleNaH$ was observed in the temperature range of 640°C to 825°C. To achieve high power, R-Ni having a surface area of about 100 $m^2$ / g was surface-coated with $NaOH$ and reacted with $Na$ metal to form $NaH$. Using water-flow, batch calorimetry,

the measured power from 15g of R-Ni was about 0.5 kW with an energy balance of $\Delta H$ = -36 *kJ* compared to $\Delta H \approx 0$ *kJ* from the R-Ni starting material, R-NiAl alloy, when reacted with *Na* metal. The observed energy balance of the *NaH* reaction was -1.6X$10^4$ *kJ/mole* $H_2$, over 66 times the -241.8 *kJ/mole* $H_2$ enthalpy of combustion. With an increase in *NaOH* doping to 0.5 wt%, the *Al* of the R-Ni intermetallic served to replace *Na* metal as a reductant to generate *NaH* catalyst. When heated to 60°C, 15g of the composite catalyst material required no additive to release 11.7 kJ of excess energy and develop a power of 0.25 kW. The energy scaled linearly and the power increased nonlinearly wherein the reaction of 1 kg 0.5 wt% *NaOH*-doped R-Ni liberated 753.1 kJ of energy to develop a power in excess of 50 kW. Solution NMR on product gases dissolved in DMF-d7 showed $H_2(1/4)$ at 1.2 ppm.

The ToF-SIMs showed sodium hydrino hydride, $NaH_x$, peaks. The $^1H$ MAS NMR spectra of *NaH* * *Br* and *NaH* * *Cl* showed large distinct upfield resonance at -3.6 ppm and -4 ppm, respectively, that matched $H^-$ (1/4), and an NMR peak at 1.1 ppm matched $H_2$ (1/4). *NaH* * *Cl* from reaction of *NaCl* and the solid acid $KHSO_4$ as the only source of hydrogen comprised two fractional hydrogen states. The $H^-(1/4)$ NMR peak was observed at -3.97 ppm, and the $H^-(1/3)$ peak was also present at -3.15 ppm. The corresponding $H_2(1/4)$ and $H_2(1/3)$ peaks were observed at 1.15 ppm and 1.7 ppm, respectively. $^1H$ NMR of *NaH* * *F* dissolved in DMF-d7 showed isolated $H_2$ (1/4) and $H^-(1/4)$ at 1.2 ppm and -3.86 ppm, respectively, wherein the absence of any solid matrix effect or the possibility of alternative assignments confirmed the solid NMR assignments. The XPS spectrum recorded on *NaH* * *Br* showed the $H^-$ (1/4) peaks at about 9.5 eV and 12.3 eV that matched the results from *LiH* * *Br* and *KH* * *I;* whereas, sodium hydrino hydride showed two fractional hydrogen states additionally having the $H^-$ (1/3) XPS peak at 6 eV in the absence of a halide peak. The predicted rotational transitions having energies of $4^2$ times those of ordinary $H_2$ were also observed from $H_2(1/4)$ which was excited using a 12.5 keV electron beam.

Having met or exceeded existing performance characteristics, an additional cost effective regeneration chemistry was sought for hydrino-based power sources. Solid fuel or heterogeneous-catalyst systems were developed wherein the reactants of each can be regenerated from the products using commercial chemical-plant systems performing molten eutectic-salt electrolysis and thermal regeneration with a net energy gain from the chemical cycle. Catalyst systems comprised (i) a catalyst or source of catalyst and a source of hydrogen from the group of *LiH, KH,* and *NaH,* (ii) an oxidant from the group of $NiBr_2$, $MnI_2$, *AgCl*, $EuBr_2$, $SF_6$, *S*, $CF_4$, $NF_3$, $LiNO_3$, $M_2S_2O_8$ with *Ag,* and $P_2O_5$, (iii) a reductant from the group of *Mg* powder, or $MgH_2$, *Al* powder, or aluminum nano-powder (*Al* NP), *Sr,* and *Ca,* and (iv) a support from the group of AC, TiC, and $YC_2$. The typical metallic form of *Li* and *K* were converted to the atomic form and the ionic form of *NaH* was converted to the molecular form by using support such as an activated carbon (AC) having a surface area of 900 $m^2/g$ to disperse *Li* and *K* atoms and *NaH* molecules, respectively. The reaction step of a nonradiative energy transfer of an integer multiple of 27.2 *eV* from atomic hydrogen to the catalyst results in ionized catalyst and free electrons that causes the reaction to rapidly cease due to charge accumulation. The support also acted as a conductive electron acceptor of electrons released from the catalyst reaction to form hydrinos. Each reaction mixture further comprised an oxidant to serve as scavenger of electrons from the conductive support and a final electron-acceptor reactant as well as a weak reductant to assist the oxidant's function. In some cases, the concerted electron-acceptor (oxidation) reaction was also very exothermic to heat the reactants and enhance the rates to produce power or hydrino compounds. The energy balances of the heterogeneous catalyst systems were measured by absolute water-flow calorimetry, and the hydrino products were characterized by $^1H$ NMR, ToF-SIMs, and XPS. The heat was also recorded on a 10-fold scale-up reaction. The measured power and energy gain from these heterogeneous catalyst systems were up to 10 $W/cm^3_{(\text{reactant volume})}$ and a factor of over six times the maximum theoretical, respectively. The reaction scaled linearly to 580 kJ that developed a power of about 30 kW. Solution $^1H$ NMR on samples extracted from the reaction products in DMF-d7 showed the predicted $H_2$ (1/4) and $H^-(1/4)$ at 1.2 ppm and -3.8 ppm, respectively. ToF-SIMs showed sodium hydrino hydride peaks such as $NaH_x$, peaks with *NaH* catalyst, and the predicted 11 eV binding energy of $H^-(1/4)$ was observed by XPS.

The findings on the reaction mechanism of hydrino formation were applied to the development of a thermally reversible chemistry as a further commercial-capable power source. Each fuel system comprised a thermally-reversible reaction mixture of a catalyst or source of catalyst and a source of hydrogen (KH or NaH), a high-surface-area conductive support (TiC, TiCN, $Ti_3SiC_2$, WC, $YC_2$, Pd/C, carbon black (CB), and LiCl reduced to Li), and optionally a reductant (Mg, Ca, or Li). Additionally, two systems comprised an alkaline earth or alkali halide oxidant, or the carbon support comprised the oxidant. The reactions to propagate hydrino formation were oxidation-reduction reactions involving hydride-halide exchange, hydride exchange, or physi-dispersion. The forward reaction was spontaneous at reaction conditions, but it was shown by using product chemicals that the equilibrium could be shifted from predominantly the products to the reverse direction by dynamically removing the volatile reverse-reaction product, the alkali metal. The isolated reverse-reaction products can be further reacted to form the initial reactants to be combined to form the initial reaction mixture. The thermal cycle of reactants to products thermally reversed to reactants is energy neutral, and the thermal losses and energy to replace hydrogen converted to hydrinos are small compared to the large energy released in forming hydrinos. Typical parameters measured by absolute water-flow calorimetry were 2-5 times energy gain relative to regeneration chemistry, 7 $W\ cm^{-3}$, and 300-400 kJ/mole oxidant. The predicted molecular hydrino and hydrino hydride products

$H_2(1/4)$ and $H^-(1/4)$ corresponding to 50 MJ/mole $H_2$ consumed were confirmed by the solution $^1H$ NMR peak at 1.2 ppm and XPS peak at 11 eV, respectively. Product regeneration in the temperature range of 550-750 °C showed that the cell operation temperature was sufficient to maintain the regeneration temperature of cells in the corresponding phase of the power-regeneration cycle wherein the forward and reverse reaction times were comparable. The results indicate that continuous generation of power liberated by forming hydrinos is commercially feasible using simplistic and efficient systems that concurrently maintain regeneration as part of the thermal energy balance. The system is closed except that only hydrogen consumed in forming hydrinos needs to be replaced. Hydrogen to form hydrinos can be obtained ultimately from the electrolysis of water with 200 times the energy release relative to combustion.

In recent spectroscopy studies, atomic catalytic systems involving helium ions and two *H* atoms were used. The second ionization energy of helium is 54.4 *eV;* thus, the ionization reaction of $He^+$ to $He^{2+}$ has a net enthalpy of reaction of 54.4 *eV* which is equivalent to 2·27.2 *eV.* Furthermore, the potential energy of atomic hydrogen is 27.2 *eV* such that two *H* atoms formed from $H_2$ by collision with a third, hot *H* can also act as a catalyst for this third *H* to cause the same transition as $He^+$ as the catalyst. The energy transfer is predicted to pump the $He^+$ ion energy levels and increase the electron excitation temperature of *H* in helium-hydrogen and hydrogen plasmas, respectively. Following the energy transfer to the catalyst, the radius of the *H* atom is predicted to decrease as the electron undergoes radial acceleration to a stable state having a radius that is 1/3 the radius of the uncatalyzed hydrogen atom with the further release of 54.4 *eV* of energy. This energy may be emitted as a characteristic EUV continuum with a cutoff at 22.8 nm and extending to longer wavelengths, or as third-body kinetic energy wherein a resonant kinetic-energy transfer to form fast *H* occurs. Subsequent excitation of these fast $H(n=1)$ atoms by collisions with the background species followed by emission of the corresponding $H(n=3)$ fast atoms is predicted to give rise to broadened Balmer $\alpha$ emission. The product $H(1/3)$ reacts rapidly to form $H(1/4)$, then molecular hydrino, $H_2(1/4)$, as a preferred state. Extreme ultraviolet (EUV) spectroscopy and high-resolution visible spectroscopy were recorded on microwave plasmas, glow discharge, and pulsed discharges of helium with hydrogen and hydrogen alone. Pumping of the $He^+$ ion lines occurred with the addition of hydrogen, and the excitation temperature of hydrogen plasmas under certain conditions was very high. Furthermore, for both plasmas providing catalysts $He^+$ and $2H$, respectively, the EUV continuum and extraordinary (>50 eV) Balmer $\alpha$ line broadening were observed. $H_2(1/4)$ was observed by solution NMR at 1.25 ppm on gases collected from helium-hydrogen and water-vapor-assisted hydrogen plasmas and dissolved in $CDCl_3$. The experimental confirmation of all four of these predictions for transitions of atomic hydrogen to form hydrinos was achieved.

Additional EUV studies showed the 22.8 nm continuum band in pure hydrogen discharges and an additional continuum band from the decay of the intermediate corresponding to the hydrino state H(1/4) by using different electrode materials that maintain a high voltage, optically-thin plasma during the short pulse discharge. Since the potential energy of atomic hydrogen is 27.2 *eV* two *H* atoms formed from $H_2$ by collision with a third, hot *H* can act as a catalyst for this third *H* by accepting 2·27.2 *eV* from it. By the same mechanism, the collision of two hot $H_2$ provide 3 *H* to serve as a catalyst of 3·27.2 *eV* for the fourth. Following the energy transfer to the catalyst an intermediate is formed having the radius of the *H* atom and a central field of 3 and 4 times the central field of a proton, respectively, due to the contribution of the photon of each intermediate. The radius is predicted to decrease as the electron undergoes radial acceleration to a stable state having a radius that is 1/3 ($m = 2$) or 1/4 ($m = 3$) the radius of the uncatalyzed hydrogen atom with the further release of 54.4 *eV* and 122.4 *eV* of energy, respectively. This energy emitted as a characteristic EUV continuum with a cutoff at 22.8 nm and 10.1 nm, respectively, was observed from pulsed hydrogen discharges. The hydrogen emission series of 10.1 nm, 22.8 nm, and 91.2 nm continua was observed.

These data such as NMR shifts, ToF-SIMs masses, XPS binding energies, FTIR, and emission spectrum are characteristic of and identify hydrino products of the catalysts systems that comprise an aspect of the present disclosure. The continua spectra directly and indirectly match significant celestial observations. Hydrogen self-catalysis and disproportionation may be reactions occurring ubiquitously in celestial objects and interstellar medium comprising atomic hydrogen. Stars are sources of atomic hydrogen and hydrinos as stellar wind for interstellar reactions wherein very dense stellar atomic hydrogen and singly ionized helium, $He^+$, serve as catalysts in stars. Hydrogen continua from transitions to form hydrinos matches the emission from white dwarfs, provides a possible mechanism of linking the temperature and density conditions of the different discrete layers of the coronal/chromospheric sources, and provides a source of the diffuse ubiquitous EUV cosmic background with a 10.1 nm continuum matching the observed intense 11.0-16.0 nm band in addition to resolving the identity of the radiation source behind the observation that diffuse H $\alpha$ emission is ubiquitous throughout the Galaxy and widespread sources of flux shortward of 912 *Å* are required. Moreover, the product hydrinos provides resolution to the identity of dark matter.

I. Hydrinos

A hydrogen atom having a binding energy given by

$$Binding\ Energy = \frac{13.6\ eV}{(1/p)^2} \quad (46)$$

where p is an integer greater than 1, preferably from 2 to 137, is the product of the H catalysis reaction of the present disclosure. The binding energy of an atom, ion, or molecule, also known as the ionization energy, is the energy required to remove one electron from the atom, ion or molecule. A hydrogen atom having the binding energy given in Eq. (46) is hereafter referred to as a "hydrino atom" or "hydrino." The designation for a hydrino of radius $\frac{a_H}{p}$, where $a_H$ is the radius of an ordinary hydrogen atom and $p$ is an integer, is $H\left[\frac{a_H}{p}\right]$. A hydrogen atom with a radius $\alpha_H$ is hereinafter referred to as "ordinary hydrogen atom" or "normal hydrogen atom." Ordinary atomic hydrogen is characterized by its binding energy of 13.6 eV.

Hydrinos are formed by reacting an ordinary hydrogen atom with a suitable catalyst having a net enthalpy of reaction of

$$m \cdot 27.2\ eV \quad (47)$$

where $m$ is an integer. It is believed that the rate of catalysis is increased as the net enthalpy of reaction is more closely matched to $m \cdot 27.2\ eV$. It has been found that catalysts having a net enthalpy of reaction within ±10%, preferably ±5%, of $m \cdot 27.2\ eV$ are suitable for most applications.

This catalysis releases energy from the hydrogen atom with a commensurate decrease in size of the hydrogen atom, $r_n = na_H$. For example, the catalysis of $H(n=1)$ to $H(n=1/2)$ releases 40.8 $eV$, and the hydrogen radius decreases from $\alpha_H$ to $\frac{1}{2}a_H$. A catalytic system is provided by the ionization of $t$ electrons from an atom each to a continuum energy level such that the sum of the ionization energies of the $t$ electrons is approximately $m \cdot 27.2\ eV$ where $m$ is an integer.

A further example to such catalytic systems given supra (Eqs. (6-9) involves cesium. The first and second ionization energies of cesium are 3.89390 $eV$ and 23.15745 $eV$, respectively. The double ionization ($t$ = 2) reaction of $Cs$ to $Cs^{2+}$, then, has a net enthalpy of reaction of 27.05135 $eV$, which is equivalent to $m$ = 1 in Eq. (47).

$$27.05135\ eV + Cs(m) + H\left[\frac{a_H}{p}\right] \rightarrow Cs^{2+} + 2e^- + H\left[\frac{a_H}{(p+1)}\right] + [(p+1)^2 - p^2] \cdot 13.6\ eV \quad (48)$$

$$Cs^{2+} + 2e^- \rightarrow Cs(m) + 27.05135\ eV. \quad (49)$$

And the overall reaction is

$$H\left[\frac{a_H}{p}\right] \rightarrow H\left[\frac{a_H}{(p+1)}\right] + [(p+1)^2 - p^2] \cdot 13.6\ eV. \quad (50)$$

An additional catalytic system involves potassium metal. The first, second, and third ionization energies of potassium are 4.34066 $eV$, 31.63 $eV$, 45.806 $eV$, respectively. The triple ionization ($t$ = 3) reaction of $K$ to $K^{3+}$, then, has a net enthalpy of reaction of 81.7767 $eV$, which is equivalent to $m$ = 3 in Eq. (47).

$$81.7767\ eV + K(m) + H\left[\frac{a_H}{p}\right] \rightarrow K^{3+} + 3e^- + H\left[\frac{a_H}{(p+3)}\right] + [(p+3)^2 - p^2] \cdot 13.6\ eV \quad (51)$$

$$K^{3+} + 3e^- \rightarrow K(m) + 81.7426\ eV. \quad (52)$$

And the overall reaction is

$$H\left[\frac{a_H}{p}\right] \rightarrow H\left[\frac{a_H}{(p+3)}\right] + [(p+3)^2 - p^2] \cdot 13.6\ eV. \tag{53}$$

As a power source, the energy given off during catalysis is much greater than the energy lost to the catalyst. The energy released is large as compared to conventional chemical reactions. For example, when hydrogen and oxygen gases undergo combustion to form water

$$H_2\ (g) + \frac{1}{2}O_2\ (g) \rightarrow H_2O\ (l) \tag{54}$$

the known enthalpy of formation of water is $\Delta H_f$ = -286 *kJ/mole* or 1.48 eV per hydrogen atom. By contrast, each ($n$ = 1 ) ordinary hydrogen atom undergoing catalysis releases a net of 40.8 *eV*. Moreover, further catalytic transitions may occur: $n = \frac{1}{2} \rightarrow \frac{1}{3}, \frac{1}{3} \rightarrow \frac{1}{4}, \frac{1}{4} \rightarrow \frac{1}{5},$ and so on. Once catalysis begins, hydrinos autocatalyze further in a process called disproportionation. This mechanism is similar to that of an inorganic ion catalysis. But, hydrino catalysis should have a higher reaction rate than that of the inorganic ion catalyst due to the better match of the enthalpy to $m \cdot 272\ eV$.

Hydrogen catalysts capable of providing a net enthalpy of reaction of approximately $m \cdot 27.2\ eV$ where $m$ is an integer to produce a hydrino (whereby $t$ electrons are ionized from an atom or ion) are given in TABLE 1. The atoms or ions given in the first column are ionized to provide the net enthalpy of reaction of $m \cdot 27.2\ eV$ given in the tenth column where $m$ is given in the eleventh column. The electrons, that participate in ionization are given with the ionization potential (also called ionization energy or binding energy). The ionization potential of the $n$ th electron of the atom or ion is designated by $IP_n$ and is given by the CRC. That is for example, $Li + 5.39172\ eV \rightarrow Li^+ + e^-$ and $Li^+ + 75.6402\ eV \rightarrow Li^{2+} + e^-$. The first ionization potential, $IP_1 = 5.39172\ eV$, and the second ionization potential, $IP_2 = 75.6402\ eV$, are given in the second and third columns, respectively. The net enthalpy of reaction for the double ionization of $Li$ is 81.0319 $eV$ as given in the tenth column, and $m$ = 3 in Eq. (5) as given in the eleventh column.

TABLE 1. Hydrogen Catalysts.

| Catalyst | IP1 | IP2 | IP3 | IP4 | IP5 | IP6 | IP7 | IP8 | Enthalpy | m |
|---|---|---|---|---|---|---|---|---|---|---|
| Li | 5.39172 | 75.6402 | | | | | | | 81.032 | 3 |
| Be | 9.32263 | 18.2112 | | | | | | | 27.534 | 1 |
| Mg | 7.646235 | 15.03527 | 80.1437 | 109.2655 | 141.27 | | | | 353.3607 | 13 |
| K | 4.34066 | 31.63 | 45.806 | | | | | | 81.777 | 3 |
| Ca | 6.11316 | 11.8717 | 50.9131 | 67.27 | | | | | 136.17 | 5 |
| Ti | 6.8282 | 13.5755 | 27.4917 | 43.267 | 99.3 | | | | 190.46 | 7 |
| V | 6.7463 | 14.66 | 29.311 | 46.709 | 65.2817 | | | | 162.71 | 6 |
| Cr | 6.76664 | 16.4857 | 30.96 | | | | | | 54.212 | 2 |
| Mn | 7.43402 | 15.64 | 33.668 | 51.2 | | | | | 107.94 | 4 |
| Fe | 7.9024 | 16.1878 | 30.652 | | | | | | 54.742 | 2 |
| Fe | 7.9024 | 16.1878 | 30.652 | 54.8 | | | | | 109.54 | 4 |
| Co | 7.881 | 17.083 | 33.5 | 51.3 | | | | | 109.76 | 4 |
| Co | 7.881 | 17.083 | 33.5 | 51.3 | 79.5 | | | | 189.26 | 7 |
| Ni | 7.6398 | 18.1688 | 35.19 | 54.9 | 76.06 | | | | 191.96 | 7 |
| Ni | 7.6398 | 18.1688 | 35.19 | 54.9 | 76.06 | 108 | | | 299.96 | 11 |
| Cu | 7.72638 | 20.2924 | | | | | | | 28.019 | 1 |
| Zn | 9.39405 | 17.9644 | | | | | | | 27.358 | 1 |
| Zn | 9.39405 | 17.9644 | 39.723 | 59.4 | 82.6 | 108 | 134 | 174 | 625.08 | 23 |
| Ga | 5.999301 | 20.51514 | | | | | | | 26.5144 | 1 |
| As | 9.8152 | 18.633 | 28.351 | 50.13 | 62.63 | 127.6 | | | 297.16 | 11 |
| Se | 9.75238 | 21.19 | 30.8204 | 42.945 | 68.3 | 81.7 | 155.4 | | 410.11 | 15 |

(continued)

| Catalyst | IP1 | IP2 | IP3 | IP4 | IP5 | IP6 | IP7 | IP8 | Enthalpy | m |
|---|---|---|---|---|---|---|---|---|---|---|
| Kr | 13.9996 | 24.3599 | 36.95 | 52.5 | 64.7 | 78.5 | | | 271.01 | 10 |
| Kr | 13.9996 | 24.3599 | 36.95 | 52.5 | 64.7 | 78.5 | 111 | | 382.01 | 14 |
| Rb | 4.17713 | 27.285 | 40 | 52.6 | 71 | 84.4 | 99.2 | | 378.66 | 14 |
| Rb | 4.17713 | 27.285 | 40 | 52.6 | 71 | 84.4 | 99.2 | 136 | 514.66 | 19 |
| Sr | 5.69484 | 11.0301 | 42.89 | 57 | 71.6 | | | | 188.21 | 7 |
| Nb | 6.75885 | 14.32 | 25.04 | 38.3 | 50.55 | | | | 134.97 | 5 |
| Mo | 7.09243 | 16.16 | 27.13 | 46.4 | 54.49 | 68.8276 | | | 220.10 | 8 |
| Mo | 7.09243 | 16.16 | 27.13 | 46.4 | 54.49 | 68.8276 | 125.664 | 143.6 | 489.36 | 18 |
| Ru | 7.3605 | 16.76 | 28.47 | 50 | 60 | | | | 162.5905 | 6 |
| Pd | 8.3369 | 19.43 | | | | | | | 27.767 | 1 |
| Sn | 7.34381 | 14.6323 | 30.5026 | 40.735 | 72.28 | | | | 165.49 | 6 |
| Te | 9.0096 | 18.6 | | | | | | | 27.61 | 1 |
| Te | 9.0096 | 18.6 | 27.96 | | | | | | 55.57 | 2 |
| Cs | 3.8939 | 23.1575 | | | | | | | 27.051 | 1 |
| Ba | 5.211664 | 10.00383 | 35.84 | 49 | 62 | | | | 162.0555 | 6 |
| Ba | 5.21 | 10 | 37.3 | | | | | | | |
| Ce | 5.5387 | 10.85 | 20.198 | 36.758 | 65.55 | | | | 138.89 | 5 |
| Ce | 5.5387 | 10.85 | 20.198 | 36.758 | 65.55 | 77.6 | | | 216.49 | 8 |
| Pr | 5.464 | 10.55 | 21.624 | 38.98 | 57.53 | | | | 134.15 | 5 |
| Sm | 5.6437 | 11.07 | 23.4 | 41.4 | | | | | 81.514 | 3 |
| Gd | 6.15 | 12.09 | 20.63 | 44 | | | | | 82.87 | 3 |
| Dy | 5.9389 | 11.67 | 22.8 | 41.47 | | | | | 81.879 | 3 |
| Pb | 7.41666 | 15.0322 | 31.9373 | | | | | | 54.386 | 2 |
| Pt | 8.9587 | 18.563 | | | | | | | 27.522 | 1 |
| $He^+$ | | 54.4178 | | | | | | | 54.418 | 2 |
| $Na^+$ | | 47.2864 | 71.6200 | 98.91 | | | | | 217.816 | 8 |
| $Mg^{2+}$ | | | 80.1437 | | | | | | 80.1437 | 3 |
| $Rb^+$ | | 27.285 | | | | | | | 27.285 | 1 |
| $Fe^{3+}$ | | | | 54.8 | | | | | 54.8 | 2 |
| $Mo^{2+}$ | | | 27.13 | | | | | | 27.13 | 1 |
| $Mo^{4+}$ | | | | | 54.49 | | | | 54.49 | 2 |
| $In^{3+}$ | | | | 54 | | | | | 54. | 2 |
| $Ar^+$ | | 27.62 | | | | | | | 27.62 | 1 |
| $Sr^+$ | | 11.03 | 42.89 | | | | | | 53.92 | 2 |

The hydrino hydride ion of the present disclosure can be formed by the reaction of an electron source with a hydrino, that is, a hydrogen atom having a binding energy of about $\frac{13.6\ eV}{n^2}$, where $n = \frac{1}{p}$ and *p* is an integer greater than 1. The hydrino hydride ion is represented by $H^-(n = 1/p)$ or $H^-(1/p)$:

$$H\left[\frac{a_H}{p}\right] + e^- \rightarrow H^-(n = 1/p) \tag{55}$$

$$H\left[\frac{a_H}{p}\right] + e^- \rightarrow H^-(1/p). \tag{56}$$

The hydrino hydride ion is distinguished from an ordinary hydride ion comprising an ordinary hydrogen nucleus

and two electrons having a binding energy of about 0.8 eV. The latter is hereafter referred to as "ordinary hydride ion" or "normal hydride ion." The hydrino hydride ion comprises a hydrogen nucleus including proteum, deuterium, or tritium, and two indistinguishable electrons at a binding energy according to Eqs. (57-58).

The binding energy of a hydrino hydride ion can be represented by the following formula:

$$Binding\ Energy = \frac{\hbar^2\sqrt{s(s+1)}}{8\mu_e a_0^2\left[\frac{1+\sqrt{s(s+1)}}{p}\right]^2} - \frac{\pi\mu_0 e^2\hbar^2}{m_e^2}\left(\frac{1}{a_H^3} + \frac{2^2}{a_0^3\left[\frac{1+\sqrt{s(s+1)}}{p}\right]^3}\right) \quad (57)$$

where $p$ is an integer greater than one, $s = 1/2$, $\pi$ is pi, $\hbar$ is Planck's constant bar, $\mu_o$ is the permeability of vacuum, $m_e$ is the mass of the electron, $\mu_e$ is the reduced electron mass given by $\mu_e = \frac{m_e m_p}{\frac{m_e}{\sqrt{\frac{3}{4}}} + m_p}$ where $m_p$ is the mass of the proton, $\alpha_H$ is the radius of the hydrogen atom, $a_o$ is the Bohr radius, and $e$ is the elementary charge. The radii are given by

$$r_2 = r_1 = a_0\left(1+\sqrt{s(s+1)}\right);\ s = \frac{1}{2}. \quad (58)$$

The binding energies of the hydrino hydride ion, $H^-(n=1/p)$ as a function of $p$, where $p$ is an integer, are shown in TABLE 2.

TABLE 2. The representative binding energy of the hydrino hydride ion $H^-(n = 1/p)$ as a function of $p$, Eq. (57).

| Hydride Ion | $r_1(a_o)$[a] | Binding Energy (eV)[b] | Wavelength (nm) |
|---|---|---|---|
| $H^-(n=1)$ | 1.8660 | 0.7542 | 1644 |
| $H^-(n=1/2)$ | 0.9330 | 3.047 | 406.9 |
| $H^-(n=1/3)$ | 0.6220 | 6.610 | 187.6 |
| $H^-(n=1/4)$ | 0.4665 | 11.23 | 110.4 |
| $H^-(n=1/5)$ | 0.3732 | 16.70 | 74.23 |
| $H^-(n=1/6)$ | 0.3110 | 22.81 | 54.35 |
| $H^-(n=1/7)$ | 0.2666 | 29.34 | 42.25 |
| $H^-(n=1/8)$ | 0.2333 | 36.09 | 34.46 |
| $H^-(n=1/9)$ | 0.2073 | 42.84 | 28.94 |
| $H^-(n=1/10)$ | 0.1866 | 49.38 | 25.11 |
| $H^-(n=1/11)$ | 0.1696 | 55.50 | 22.34 |
| $H^-(n=1/12)$ | 0.1555 | 60.98 | 20.33 |
| $H^-(n=1/13)$ | 0.1435 | 65.63 | 18.89 |
| $H^-(n=1/14)$ | 0.1333 | 69.22 | 17.91 |
| $H^-(n=1/15)$ | 0.1244 | 71.55 | 17.33 |
| $H^-(n=1/16)$ | 0.1166 | 72.40 | 17.12 |
| $H^-(n=1/17)$ | 0.1098 | 71.56 | 17.33 |
| $H^-(n=1/18)$ | 0.1037 | 68.83 | 18.01 |
| $H^-(n=1/19)$ | 0.0982 | 63.98 | 19.38 |
| $H^-(n=1/20)$ | 0.0933 | 56.81 | 21.82 |
| $H^-(n=1/21)$ | 0.0889 | 47.11 | 26.32 |
| $H^-(n=1/22)$ | 0.0848 | 34.66 | 35.76 |
| $H^-(n=1/23)$ | 0.0811 | 19.26 | 64.36 |

(continued)

| Hydride Ion | $r_1(a_o)$[a] | Binding Energy (eV)[b] | Wavelength (nm) |
|---|---|---|---|
| $H^-(n=1/24)$ | 0.0778 | 0.6945 | 1785 |

a Eq. (58)
b Eq. (57)

According to the present disclosure, a hydrino hydride ion ($H^-$) having a binding energy according to Eqs. (57-58) that is greater than the binding of ordinary hydride ion (about 0.75 eV) for $p$ = 2 up to 23, and less for $p$ = 24 ($H^-$) is provided. For $p$ = 2 to $p$ = 24 of Eqs. (57-58), the hydride ion binding energies are respectively 3, 6.6, 11.2, 16.7, 22.8, 29.3, 36.1, 42.8, 49.4, 55.5, 61.0, 65.6, 69.2, 71.6, 72.4, 71.6, 68.8, 64.0, 56.8, 47.1, 34.7, 19.3, and 0.69 eV. Exemplary compositions comprising the novel hydride ion are also provided herein.

Exemplary compounds are also provided comprising one or more hydrino hydride ions and one or more other elements. Such a compound is referred to as a "hydrino hydride compound."

Ordinary hydrogen species are characterized by the following binding energies (a) hydride ion, 0.754 eV ("ordinary hydride ion"); (b) hydrogen atom ("ordinary hydrogen atom"), 13.6 eV; (c) diatomic hydrogen molecule, 15.3 eV ("ordinary hydrogen molecule"); (d) hydrogen molecular ion, 16.3 eV ("ordinary hydrogen molecular ion"); and (e) $H_3^+$, 22.6 eV ("ordinary trihydrogen molecular ion"). Herein, with reference to forms of hydrogen, "normal" and "ordinary" are synonymous.

According to a further embodiment of the present disclosure, a compound is provided comprising at least one increased binding energy hydrogen species such as (a) a hydrogen atom having a binding energy of about $\frac{13.6\ eV}{\left(\frac{1}{p}\right)^2}$, such as within a range of about 0.9 to 1.1 times $\frac{13.6\ eV}{\left(\frac{1}{p}\right)^2}$ where p is an integer from 2 to 137; (b) a hydride ion ($H^-$) having a binding energy of about

$$\text{Binding Energy} = \frac{\hbar^2\sqrt{s(s+1)}}{8\mu_e a_0^2\left[\frac{1+\sqrt{s(s+1)}}{p}\right]^2} - \frac{\pi\mu_0 e^2\hbar^2}{m_e^2}\left(\frac{1}{a_H^3} + \frac{2^2}{a_0^3\left[\frac{1+\sqrt{s(s+1)}}{p}\right]^3}\right),$$

such as within a range of about 0.9 to 1.1 times

$$\text{Binding Energy} = \frac{\hbar^2\sqrt{s(s+1)}}{8\mu_e a_0^2\left[\frac{1+\sqrt{s(s+1)}}{p}\right]^2} - \frac{\pi\mu_0 e^2\hbar^2}{m_e^2}\left(\frac{1}{a_H^3} + \frac{2^2}{a_0^3\left[\frac{1+\sqrt{s(s+1)}}{p}\right]^3}\right)$$

where p is an integer from 2 to 24; (c) $H_4^+(1/p)$; (d) a trihydrino molecular ion, $H_3^+(1/p)$, having a binding energy of about $\frac{22.6}{\left(\frac{1}{p}\right)^2}\ eV$ such as within a range of about 0.9 to 1.1 times $\frac{22.6}{\left(\frac{1}{p}\right)^2}\ eV$ where p is an integer from 2 to 137; (e) a

dihydrino having a binding energy of about $\frac{15.3}{\left(\frac{1}{p}\right)^2} eV$ such as within a range of about 0.9 to 1.1 times $\frac{15.3}{\left(\frac{1}{p}\right)^2} eV$ where p is an integer from 2 to 137; (f) a dihydrino molecular ion with a binding energy of about $\frac{16.3}{\left(\frac{1}{p}\right)^2} eV$ such as within a range of about 0.9 to 1.1 times $\frac{16.3}{\left(\frac{1}{p}\right)^2} eV$ where p is an integer, preferably an integer from 2 to 137.

According to a further embodiment of the present disclosure, a compound is provided comprising at least one increased binding energy hydrogen species such as (a) a dihydrino molecular ion having a total energy of about

$$E_T = -p^2 \left\{ \begin{array}{l} \frac{e^2}{8\pi\varepsilon_o a_H}(4\ln 3 - 1 - 2\ln 3)\left[1 + p\sqrt{\frac{2\hbar\sqrt{\frac{\frac{2e^2}{4\pi\varepsilon_o (2a_H)^3}}{m_e}}}{m_e c^2}}\right] \\ -\frac{1}{2}\hbar\sqrt{\frac{\frac{pe^2}{4\pi\varepsilon_o\left(\frac{2a_H}{p}\right)^3} - \frac{pe^2}{8\pi\varepsilon_o\left(\frac{3a_H}{p}\right)^3}}{\mu}} \end{array} \right\} \quad (59)$$

$$= -p^2 16.13392\ eV - p^3 0.118755\ eV$$

such as within a range of about 0.9 to 1.1 times

$$E_T = -p^2 \left\{ \begin{array}{l} \frac{e^2}{8\pi\varepsilon_o a_H}(4\ln 3 - 1 - 2\ln 3)\left[1 + p\sqrt{\frac{2\hbar\sqrt{\frac{\frac{2e^2}{4\pi\varepsilon_o (2a_H)^3}}{m_e}}}{m_e c^2}}\right] \\ -\frac{1}{2}\hbar\sqrt{\frac{\frac{pe^2}{4\pi\varepsilon_o\left(\frac{2a_H}{p}\right)^3} - \frac{pe^2}{8\pi\varepsilon_o\left(\frac{3a_H}{p}\right)^3}}{\mu}} \end{array} \right\}$$

$$= -p^2 16.13392\ eV - p^3 0.118755\ eV$$

where $p$ is an integer, $\hbar$ is Planck's constant bar, $m_e$ is the mass of the electron, $c$ is the speed of light in vacuum, and $\mu$ is the reduced nuclear mass, and (b) a dihydrino molecule having a total energy of about

$$E_T = -p^2 \left\{ \frac{\frac{e^2}{8\pi\varepsilon_o a_0}\left[\left(2\sqrt{2}-\sqrt{2}+\frac{\sqrt{2}}{2}\right)\ln\frac{\sqrt{2}+1}{\sqrt{2}-1}-\sqrt{2}\right]\left[1+p\sqrt{\frac{2\hbar\sqrt{\frac{\frac{e^2}{4\pi\varepsilon_o a_0^3}}{m_e}}}{m_e c^2}}\right]}{-\frac{1}{2}\hbar\sqrt{\frac{\frac{pe^2}{8\pi\varepsilon_o\left(\frac{a_0}{p}\right)^3}-\frac{pe^2}{8\pi\varepsilon_o\left(\frac{\left(1+\frac{1}{\sqrt{2}}\right)a_0}{p}\right)^3}}{\mu}}} \right\} \quad (60)$$

$$= -p^2 31.351\ eV - p^3 0.326469\ eV$$

such as within a range of about 0.9 to 1.1 times

$$E_T = -p^2 \left\{ \frac{\frac{e^2}{8\pi\varepsilon_o a_0}\left[\left(2\sqrt{2}-\sqrt{2}+\frac{\sqrt{2}}{2}\right)\ln\frac{\sqrt{2}+1}{\sqrt{2}-1}-\sqrt{2}\right]\left[1+p\sqrt{\frac{2\hbar\sqrt{\frac{\frac{e^2}{4\pi\varepsilon_o a_0^3}}{m_e}}}{m_e c^2}}\right]}{-\frac{1}{2}\hbar\sqrt{\frac{\frac{pe^2}{8\pi\varepsilon_o\left(\frac{a_0}{p}\right)^3}-\frac{pe^2}{8\pi\varepsilon_o\left(\frac{\left(1+\frac{1}{\sqrt{2}}\right)a_0}{p}\right)^3}}{\mu}}} \right\}$$

$$= -p^2 31.351\ eV - p^3 0.326469\ eV$$

where *p* is an integer and $\alpha_o$ is the Bohr radius.

According to one embodiment of the present disclosure wherein the compound comprises a negatively charged increased binding energy hydrogen species, the compound further comprises one or more cations, such as a proton, ordinary $H_2^+$, or ordinary $H_3^+$.

A method is provided herein for preparing compounds comprising at least one hydrino hydride ion. Such compounds are hereinafter referred to as "hydrino hydride compounds." The method comprises reacting atomic hydrogen with a catalyst having a net enthalpy of reaction of about $\frac{m}{2}\cdot 27\ eV$, where m is an integer greater than 1, preferably an integer less than 400, to produce an increased binding energy hydrogen atom having a binding energy of about $\frac{13.6\ eV}{\left(\frac{1}{p}\right)^2}$ where *p* is an integer, preferably an integer from 2 to 137. A further product of the catalysis is energy. The increased binding energy hydrogen atom can be reacted with an electron source, to produce an increased binding energy hydride ion. The increased binding energy hydride ion can be reacted with one or more cations to produce a compound comprising at least one increased binding energy hydride ion.

The novel hydrogen compositions of matter can comprise:

(a) at least one neutral, positive, or negative hydrogen species (hereinafter "increased binding energy hydrogen species") having a binding energy

(i) greater than the binding energy of the corresponding ordinary hydrogen species, or

(ii) greater than the binding energy of any hydrogen species for which the corresponding ordinary hydrogen species is unstable or is not observed because the ordinary hydrogen species' binding energy is less than thermal energies at ambient conditions (standard temperature and pressure, STP), or is negative; and

(b) at least one other element. The compounds of the present disclosure are hereinafter referred to as "increased binding energy hydrogen compounds."

By "other element" in this context is meant an element other than an increased binding energy hydrogen species. Thus, the other element can be an ordinary hydrogen species, or any element other than hydrogen. In one group of compounds, the other element and the increased binding energy hydrogen species are neutral. In another group of compounds, the other element and increased binding energy hydrogen species are charged such that the other element provides the balancing charge to form a neutral compound. The former group of compounds is characterized by molecular and coordinate bonding; the latter group is characterized by ionic bonding.

Also provided are novel compounds and molecular ions comprising

(a) at least one neutral, positive, or negative hydrogen species (hereinafter "increased binding energy hydrogen species") having a total energy

(i) greater than the total energy of the corresponding ordinary hydrogen species, or

(ii) greater than the total energy of any hydrogen species for which the corresponding ordinary hydrogen species is unstable or is not observed because the ordinary hydrogen species' total energy is less than thermal energies at ambient conditions, or is negative; and

(b) at least one other element.

The total energy of the hydrogen species is the sum of the energies to remove all of the electrons from the hydrogen species. The hydrogen species according to the present disclosure has a total energy greater than the total energy of the corresponding ordinary hydrogen species. The hydrogen species having an increased total energy according to the present disclosure is also referred to as an "increased binding energy hydrogen species" even though some embodiments of the hydrogen species having an increased total energy may have a first electron binding energy less that the first electron binding energy of the corresponding ordinary hydrogen species. For example, the hydride ion of Eqs. (57-58) for $p = 24$ has a first binding energy that is less than the first binding energy of ordinary hydride ion, while the total energy of the hydride ion of Eqs. (57-58) for $p = 24$ is much greater than the total energy of the corresponding ordinary hydride ion.

Also provided herein are novel compounds and molecular ions comprising

(a) a plurality of neutral, positive, or negative hydrogen species (hereinafter "increased binding energy hydrogen species") having a binding energy

(i) greater than the binding energy of the corresponding ordinary hydrogen species, or

(ii) greater than the binding energy of any hydrogen species for which the corresponding ordinary hydrogen species is unstable or is not observed because the ordinary hydrogen species' binding energy is less than thermal energies at ambient conditions or is negative; and

(b) optionally one other element. The compounds of the present disclosure are hereinafter referred to as "increased binding energy hydrogen compounds."

The increased binding energy hydrogen species can be formed by reacting one or more hydrino atoms with one or more of an electron, hydrino atom, a compound containing at least one of said increased binding energy hydrogen species, and at least one other atom, molecule, or ion other than an increased binding energy hydrogen species.

Also provided are novel compounds and molecular ions comprising

(a) a plurality of neutral, positive, or negative hydrogen species (hereinafter "increased binding energy hydrogen species") having a total energy

(i) greater than the total energy of ordinary molecular hydrogen, or

(ii) greater than the total energy of any hydrogen species for which the corresponding ordinary hydrogen species is unstable or is not observed because the ordinary hydrogen species' total energy is less than thermal energies

at ambient conditions or is negative; and

(b) optionally one other element. The compounds of the present disclosure are hereinafter referred to as "increased binding energy hydrogen compounds".

In an embodiment, a compound is provided comprising at least one increased binding energy hydrogen species chosen from (a) hydride ion having a binding energy according to Eqs. (57-58) that is greater than the binding of ordinary hydride ion (about 0.8 eV) for $p$ = 2 up to 23, and less for $p$ = 24 ("increased binding energy hydride ion" or "hydrino hydride ion"); (b) hydrogen atom having a binding energy greater than the binding energy of ordinary hydrogen atom (about 13.6 eV) ("increased binding energy hydrogen atom" or "hydrino"); (c) hydrogen molecule having a first binding energy greater than about 15.3 eV ("increased binding energy hydrogen molecule" or "dihydrino"); and (d) molecular hydrogen ion having a binding energy greater than about 16.3 eV ("increased binding energy molecular hydrogen ion" or "dihydrino molecular ion").

II. Power Reactor and System

According to another embodiment of the present disclosure, a hydrogen catalyst reactor for producing energy and lower-energy hydrogen species is provided. As shown in FIGURE 1, a hydrogen catalyst reactor 70 comprises a vessel 72 that comprises an energy reaction mixture 74, a heat exchanger 80, and a power converter such as a steam generator 82 and turbine 90. In an embodiment, the catalysis involves reacting atomic hydrogen from the source 76 with the catalyst 78 to form lower-energy hydrogen "hydrinos" and produce power. The heat exchanger 80 absorbs heat released by the catalysis reaction, when the reaction mixture, comprised of hydrogen and a catalyst, reacts to form lower-energy hydrogen. The heat exchanger exchanges heat with the steam generator 82 that absorbs heat from the exchanger 80 and produces steam. The energy reactor 70 further comprises a turbine 90 that receives steam from the steam generator 82 and supplies mechanical power to a power generator 97 that converts the steam energy into electrical energy, which can be received by a load 95 to produce work or for dissipation. In an embodiment, the reactor may be at least partially enclosed with a heat pipe that transfers heat to a load. The load may be a Stirling engine or steam engine to produce electricity. The Stirling engine or steam engine may be used for stationary or motive power. Alternatively, hydride electric or electric systems may convert heat to electric for stationary or motive power. A suitable steam engine for distributed power and motive applications is Cyclone Power Technologies Mark V Engine. Other converters are known by those skilled in the Art. For example, the system may comprise thermoelectric or thermionic converters. The reactor may be one of a multi-tube reactor assembly.

In an embodiment, the energy reaction mixture 74 comprises an energy releasing material 76, such as a fuel supplied through supply passage 62. The reaction mixture may comprise a source of hydrogen isotope atoms or a source of molecular hydrogen isotope, and a source of catalyst 78 which resonantly remove approximately $m \cdot 27.2\ eV$ to form lower-energy atomic hydrogen where $m$ is an integer, preferably an integer less than 400, wherein the reaction to lower energy states of hydrogen occurs by contact of the hydrogen with the catalyst. The catalyst may be in the molten, liquid, gaseous, or solid state. The catalysis releases energy in a form such as heat and forms at least one of lower-energy hydrogen isotope atoms, lower-energy hydrogen molecules, hydride ions, and lower-energy hydrogen compounds. Thus, the power cell also comprises a lower-energy hydrogen chemical reactor.

The source of hydrogen can be hydrogen gas, dissociation of water including thermal dissociation, electrolysis of water, hydrogen from hydrides, or hydrogen from metal-hydrogen solutions. In another embodiment, molecular hydrogen of the energy releasing material 76 is dissociated into atomic hydrogen by a molecular hydrogen dissociating catalyst of the mixture 74. Such dissociating catalysts or dissociators may also absorb hydrogen, deuterium, or tritium atoms and/or molecules and include, for example, an element, compound, alloy, or mixture of noble metals such as palladium and platinum, refractory metals such as molybdenum and tungsten, transition metals such as nickel and titanium, and inner transition metals such as niobium and zirconium. Preferably, the dissociator has a high surface area such as a noble metal such as Pt, Pd, Ru, Ir, Re, or Rh, or Ni on $Al_2O_3$, $SiO_2$, or combinations thereof.

In an embodiment, a catalyst is provided by the ionization of $t$ electrons from an atom or ion to a continuum energy level such that the sum of the ionization energies of the $t$ electrons is approximately $m \cdot 27.2\ eV$ where $t$ and $m$ are each an integer. A catalyst may also be provided by the transfer of $t$ electrons between participating ions. The transfer of $t$ electrons from one ion to another ion provides a net enthalpy of reaction whereby the sum of the $t$ ionization energies of the electron-donating ion minus the ionization energies of $t$ electrons of the electron-accepting ion equals approximately $m \cdot 27.2\ eV$ where $t$ and $m$ are each an integer. In another embodiment, the catalyst comprises $MH$ such as $NaH$ having an atom $M$ bound to hydrogen, and the enthalpy of $m \cdot 27.2\ eV$ is provided by the sum of the $M$ - $H$ bond energy and the ionization energies of the $t$ electrons.

In an embodiment, a source of catalyst comprises a catalytic material 78 supplied through catalyst supply

passage 61, that typically provides a net enthalpy of approximately $\frac{m}{2}\cdot 27.2\ eV$ plus or minus 1 *eV*. The catalysts comrpise atoms, ions, molecules, and hydrinos that accept energy from atomic hydrogen and hydrinos. In embodiments, the catalyst may comprise at least one species chosen from molecules of AlH, BiH, ClH, CoH, GeH, InH, NaH, RuH, SbH, SeH, SiH, SnH, $C_2$, $N_2$, $O_2$, $CO_2$, $NO_2$, and $NO_3$ and atoms or ions of Li, Be, K, Ca, Ti, V, Cr, Mn, Fe, Co, Ni, Cu, Zn, As, Se, Kr, Rb, Sr, Nb, Mo, Pd, Sn, Te, Cs, Ce, Pr, Sm, Gd, Dy, Pb, Pt, Kr, $2K^+$, $He^+$, $Ti^{2+}$, $Na^+$, $Rb^+$, $Sr^+$, $Fe^{3+}$, $Mo^{2+}$, $Mo^{4+}$, $In^{3+}$, $He^+$, $Ar^+$, $Xe^+$, $Ar^{2+}$ and $H^+$, and $Ne^+$ and $H^+$.

In an embodiment of a power system, the heat is removed by a heat exchanger having a heat exchange medium. The heat exchanger may be a water wall and the medium may be water. The heat may be transferred directly for space and process heating. Alternatively, the heat exchanger medium such as water undergoes a phase change such as conversion to steam. This conversion may occur in a steam generator. The steam may be used to generate electricity in a heat engine such as a steam turbine and a generator.

An embodiment of an hydrogen catalyst energy and lower-energy-hydrogen species-producing reactor 5, for recycling or regenerating the fuel in accordance with the present disclosure, is shown in FIGURE 2 and comprises a boiler 10 which contains a fuel reaction mixture 11 that may be a mixture of a source of hydrogen, a source of catalyst, and optionally a solvent that may be vaporized, a hydrogen source 12, steam pipes and steam generator 13, a power converter such as a turbine 14, a water condenser 16, a water-make-up source 17, a fuel recycler 18, and a hydrogen-dihydrino gas separator 19. At Step 1, the fuel, such as one that is gaseous, liquid, solid, or a heterogeneous mixture comprising multiple phases, comprising a source of catalyst and a source of hydrogen reacts to form hydrinos and lower-energy hydrogen products. At Step 2, the spent fuel is reprocessed to re-supply the boiler 10 to maintain thermal power generation. The heat generated in the boiler 10 forms steam in the pipes and steam generator 13 that is delivered to the turbine 14 that in turn generates electricity by powering a generator. At Step 3, the water is condensed by the water condensor 16. Any water loss may be made up by the water source 17 to complete the cycle to maintain thermal to electric power conversion. At Step 4, lower-energy hydrogen products such as hydrino hydride compounds and dihydrino gas may be removed, and unreacted hydrogen may be returned to the fuel recycler 18 or hydrogen source 12 to be added back to spent fuel to make-up recycled fuel. The gas products and unreacted hydrogen may be separated by hydrogen-dihydrino gas separator 19. Any product hydrino hydride compounds may be separated and removed using fuel recycler 18. The processing may be performed in the boiler or externally to the boiler with the fuel returned. Thus, the system may further comprise at least one of gas and mass transporters to move the reactants and products to achieve the spent fuel removal, regeneration, and re-supply. Hydrogen make-up for that spent in the formation of hydrinos is added from the source 12 during fuel reprocessing and may involve recycled, unconsumed hydrogen. The recycled fuel maintains the production of thermal power to drive the power plant to generate electricity.

The reactor may be run in a continuous mode with hydrogen addition and with separation and addition or replacement to counter the minimum degradation of the reactants. Alternatively, the reacted fuel is continuously regenerated from the products. In one embodiment of the latter scheme, the reaction mixture comprises species that can generate the reactants of atomic or molecular catalyst and atomic hydrogen that further react to form hydrinos, and the product species formed by the generation of catalyst and atomic hydrogen can be regenerated by at least the step of reacting the products with hydrogen. In an embodiment, the reactor comprises a moving bed reactor that may further comprise a fluidized-reactor section wherein the reactants are continuously supplied and side products are removed and regenerated and returned to the reactor. In an embodiment, the lower-energy hydrogen products such as hydrino hydride compounds or dihydrino molecules are collected as the reactants are regenerated. Furthermore, the hydrino hydride ions may be formed into other compounds or converted into dihydrino molecules during the regeneration of the reactants.

The reactor may further comprise a separator to separate components of a product mixture such as by evaporation of the solvent if one is present. The separator may, for example, comprise sieves for mechanically separating by differences in physical properties such as size. The separator may also be a separator that exploits differences in density of the component of the mixture, such as a cyclone separator. For example, at least two of the groups chosen from carbon, a metal such as Eu, and an inorganic product such as KBr can be separated based on the differences in density in a suitable medium such as forced inert gas and also by centrifugal forces. The separation of components may also be based on the differential of the dielectric constant and chargeability. For example, carbon may be separated from metal based on the application of an electrostatic charge to the former with removal from the mixture by an electric field. In the case that one or more components of a mixture are magnetic, the separation may be achieved using magnets. The mixture may be agitated over a series of strong magnets alone or in combination with one or more sieves to cause the separation based on at least one of the stronger adherence or attraction of the magnetic particles to the magnet and a size difference of the two classes of particles. In an embodiment of the use of sieves and an applied magnetic field, the latter adds an additional force to that of gravity to draw the smaller magnetic particles through the sieve while the other particles of the mixture are retained on the sieve due to their larger size.

The reactor may further comprise a separator to separate one or more components based on a differential phase change or reaction. In an embodiment, the phase change comprises melting using a heater, and the liquid is separated from the solid by methods known in the art such as gravity filtration, filtration using a pressurized gas assist, centrifugation, and by applying vacuum. The reaction may comprise decomposition such as hydride decomposition or reaction to from a hydride, and the separations may be achieved by melting the corresponding metal followed by its separation and by mechanically separating the hydride powder, respectively. The latter may be achieved by sieving. In an embodiment, the phase change or reaction may produce a desired reactant or intermediate. In certain embodiments, the regeneration including any desired separation steps may occur inside or outside of the reactor.

Other methods known by those skilled in the art that can be applied to the separations of the present disclosure by application of routine experimentation. In general, mechanical separations can be divided into four groups: sedimentation, centrifugal separation, filtration, and sieving. In one embodiment, the separation of the particles is achieved by at least one of sieving and use of classifiers. The size and shape of the particle may be chosen in the starting materials to achieve the desired separation of the products.

The power system may further comprise a catalyst condensor to maintain the catalyst vapor pressure by a temperature control that controls the temperature of a surface at a lower value than that of the reaction cell. The surface temperature is maintained at a desired value that provides the desired vapor pressure of the catalyst. In an embodiment, the catalyst condensor is a tube grid in the cell. In an embodiment with a heat exchanger, the flow rate of the heat transfer medium may be controlled at a rate that maintains the condensor at the desired lower temperature than the main heat exchanger. In an embodiment, the working medium is water, and the flow rate is higher at the condensor than the water wall such that the condensor is the lower, desired temperature. The separate streams of working media may be recombined and transferred for space and process heating or for conversion to steam.

The cells of the present disclosure comprise the catalysts, reaction mixtures, methods, and systems disclosed herein wherein the cell serves as a reactor and at least one component to activate, initiate, propagate, and/or maintain the reaction and regenerate the reactants. According to the present disclosure, the cells comprise at least one catalyst or a source of catalyst, at least one source of atomic hydrogen, and a vessel. The electrolytic cell energy reactor such as a eutectic-salt electrolysis cell, plasma electrolysis reactor, barrier electrode reactor, RF plasma reactor, pressurized gas energy reactor, gas discharge energy reactor, preferably pulsed discharge, and more preferably pulsed pinched plasma discharge, microwave cell energy reactor, and a combination of a glow discharge cell and a microwave and or RF plasma reactor of the present disclosure comprises: a source of hydrogen; one of a solid, molten, liquid, gaseous, and heterogeneous source of catalyst or reactants in any of these states to cause the hydrino reaction by a reaction amongst the reactants; a vessel comprising the reactants or at least containing hydrogen and the catalyst wherein the reaction to form lower-energy hydrogen occurs by contact of the hydrogen with the catalyst or by reaction of the catalyst such as M or MH (M is alkali metal) or BaH; and optionally a component for removing the lower-energy hydrogen product. In an embodiment, the reaction to form lower-energy state hydrogen is facilitated by an oxidation reaction. The oxidation reaction may increase the reaction rate to form hydrinos by at least one of accepting electrons from the catalyst and neutralizing the highly-charged cation formed by accepting energy from atomic hydrogen. Thus, these cells may be operated in a manner that provides such an oxidation reaction. In an embodiment, the electrolysis or plasma cell may provide an oxidation reaction at the anode wherein hydrogen provided by a method such as sparging and catalyst react to form hydrinos via the participating oxidation reaction. In a further embodiment, the cell comprises a grounded conductor such as a filament that may also be at an elevated temperature. The filament may be powered. The conductor such as a filament may be electrically floating relative to the cell. In an embodiment, the hot conductor such as a filament may boil off electrons as well as serve as a ground for those ionized from the catalyst. The boiled off electrons could neutralize the ionized catalyst. In an embodiment, the cell further comprises a magnet to deflect ionized electrons from the ionized catalyst to enhance the rate of the hydrino reaction.

In an embodiment of the aqueous electrolysis cell, the cathode and anode separation is small such that oxygen from the anode reacts with hydrogen from the cathode to form at least one of OH radicals (TABLE 3) and $H_2O$ that serve as the source of catalyst or catalyst to form hydrinos. Oxygen and hydrogen that may comprise atoms may react in the electrolyte, or hydrogen and oxygen may react on at least one electrode surface. The electrode may be catalytic to form at least one of OH radicals and $H_2O$. The at least one of OH radicals and $H_2O$ may also form by the oxidation of $OH^-$ at the anode or by a reduction reaction such as one involving $H^+$ and $O_2$ at the cathode. The electrolyte such as MOH (M =alkali metal) is selected to optimize the production of hydrinos formed by at least one of OH and $H_2O$ catalyst. In a fuel cell embodiment, oxygen and hydrogen may be reacted to form at least one of OH radicals and $H_2O$ that form hydrinos. $H^+$ may be reduced at the cathode in the presence of $O_2$ to form the at least one of OH radicals and $H_2O$ that react to form hydrinos, or $O_2^-$ may be oxidized at the anode in the presence of hydrogen to form at least one of OH and $H_2O$.

The electrolyte such as MOH (M = alkali metal) is selected to optimize the production of hydrinos by a catalyst

such as at least one of OH and $H_2O$. In an embodiment, the concentration of the electrolyte is high such as 0.5M to saturated. In an embodiment, the electrolyte is a saturated hydroxide such as saturated LiOH, NaOH, KOH, RbOH, or CsOH. The anode and cathode comprise materials that are stable in base during electrolysis. An exemplary electrolysis cell may comprise a nickel or a noble metal anode such as Pt/Ti and a nickel or carbon cathode such as [Ni/KOH (saturated aq)/Ni] and [PtTi/KOH (saturated aq)/Ni]. Pulsing the electrolysis also transiently creates a high $OH^-$ concentration at the cathode wherein a suitable cathode is a metal that forms a hydride that favors the formation of at least one of OH and $H_2O$ catalyst during at least the off phase of the pulse. In an embodiment, the electrolyte comprises or additionally comprises a carbonate such as an alkali carbonate such as $K_2CO_3$. During electrolysis, peroxy species may form such as peroxocarbonic acid or an alkali percarbonate that may be a source of $OOH^-$ or OH that serve as a source of catalyst or catalyst to form hydrinos or may form $H_2O$ that serves as the catalyst.

H may react with electrons from the formation of the catalyst ion such as $Na^{2+}$ and $K^{3+}$ and stabilize each. H may be formed by the reaction $H_2$ with a dissociator. In an embodiment, a hydrogen dissociator such as Pt/Ti is added to the hydrino reactants such as NaH Mg TiC, NaH $MgH_2$ TiC, KH Mg TiC, KH $MgH_2$ TiC, NaH Mg $H_2$, and KH Mg $H_2$. Additionally, H may be produced by using a hot filament such as a Pt or W filament in the cell. A noble gas such as He may be added to increase the H atom population by increasing the H half-life for recombination. Many gaseous atoms have a high electron affinity and can serve as an electron scavenger from catalyst ionization. In an embodiment, one or more atoms are provided to the reaction mixture. In an embodiment, a hot filament provides the atoms. Suitable metals and elements to vaporize by heating with the electron affinity () are: Li (0.62 eV), Na (0.55 eV), Al (0.43 eV), K (0.50 eV), V (0.53 eV), Cr (0.67 eV), Co (0.66 eV), Ni (1.16 eV), Cu, (1.24 eV), Ga (0.43 eV), Ge (1.23 eV), Se (2.02 eV), Rb (0.49 eV), Y (0.30 eV), Nb (0.89 eV), Mo (0.75 eV), Tc (0.55 eV), Ru (1.05 eV), Rh (1.14 eV), Pd (0.56 eV), Ag (1.30 eV), In (0.3 eV), Sn (1.11 eV), Sb (1.05 eV), Te (1.97 eV), Cs (0.47 eV), La (0.47 eV), Ce (0.96 eV), Pr (0.96 eV), Eu (0.86 eV), Tm (1.03 eV), W (0.82 eV), Os (1.1 eV), Ir (1.56 eV), Pt (2.13 eV), Au (2.31 eV), Bi (0.94 eV). The diatomic and higher multi-atomic species have similar electron affinities in many cases and are also suitable electron acceptors. Suitable diatomic electron acceptors are $Na_2$ (0.43 eV) and $K_2$ (0.497 eV), which are the dominant form of gaseous Na and K.

Mg does not form a stable anion (electron affinity EA= 0 eV). Thus, it may serve as an intermediate electron acceptor. Mg may serve as a reactant to form hydrinos in a mixture comprising at least two of a source of catalyst and H such as KH, NaH, or BaH, and reductant such as an alkaline earth metal, a support such as TiC, and an oxidant such as an alkali or alkaline earth metal halide. Other atoms that do not form stable negative ions could also serve as an intermediate to accept electrons from the ionizing catalyst. The electrons may be transferred to the ion formed by the energy transfer from H. The electrons may also be transferred to an oxidant. Suitable metals with an electron affinity of 0 eV are Zn, Cd, and Hg.

In an embodiment, the reactants a comprise a catalyst or source of catalyst and a source of hydrogen such as NaH, KH or BaH, optionally a reductant such as an alkaline earth metal or hydride such as Mg and $MgH_2$, a support such as carbon, carbide, or a boride and optionall an oxidant such as a metal halide or hydride. Suitable carbon, carbides and borides are carbon black, Pd/C, Pt/C, TiC, $Ti_3SiC_2$, $YC_2$, TaC, $Mo_2C$, SiC, WC, C, $B_4C$, HfC, $Cr_3C_2$, ZrC, $CrB_2$, VC, $ZrB_2$, $MgB_2$, $NiB_2$, NbC, and $TiB_2$. In an embodiment, the reaction mixture is in contact with an electrode that conducts electrons ionized from the catalyst. The electrode may be the cell body. The electrode may comprise a large surface area electrical conductor such as stainless steel (SS) wool. The conduction to the electrode may be through the electrically conductive support such as metal carbide such as TiC. The electrode may be positively biased and may further be connected to a counter electrode in the cell such as a center-line electrode. The counter electrode may be separated from the reactants and may further provide a return path for the current conducted through the first positively biased electrode. The return current may comprise anions. The anions may be formed by reduction at the counter electrode. The anions may comprise atomic or diatomic alkali metal anions such as $Na^-$, $K^-$, $Na_2^-$, and $K_2^-$. The metal vapor such as $Na_2$ or $K_2$ may be formed and maintained from the metal or hydride such as NaH or KH by maintaining the cell at an elevated temperature such as in the range of about 300 °C to 1000 °C. The anions may further comprise $H^-$ formed from atomic hydrogen. The reduction rate may be increased by using an electrode with a high surface area. In an embodiment, the cell may comprise a dissociator such as a chemical dissociator such as Pt/Ti, a filament, or a gas discharge. The electrode, dissociator, or filament generally comprises an electron emitter to reduce species such as gaseous species to ions. The electron emitter may be made to be a more efficient source of electros by coating it. Suitable coated emitters are a thoriated W or Sr or Ba doped metal electrode or filament. A low-power discharge may be maintained between the electrodes using a current-limiting external power supply.

In an embodiment, the temperature of a working medium may be increased using a heat pump. Thus, space and process heating may be supplied using the power cell operating at a temperature above ambient wherein a working medium is increased in temperature with a component such as a heat pump. With sufficient elevation of the temperature, a liquid to gas phase transition may occur, and the gas may be used for pressure volume (PV) work. The PV work may

comprise powering a generator to produce electricity. The medium may then be condensed, and the condensed working medium may be returned to the reactor cell to be reheated and recirculated in the power loop.

In an embodiment of the reactor, a heterogeneous catalyst mixture comprising a liquid and solid phase is flowed through the reactor. The flow may be achieved by pumping. The mixture may be a slurry. The mixture may be heated in a hot zone to cause the catalysis of hydrogen to hydrinos to release heat to maintain the hot zone. The products may be flowed out of the hot zone, and the reactant mixture may be regenerated from the products. In another embodiment, at least one solid of a heterogeneous mixture may be flowed into the reactor by gravity feed. A solvent may be flowed into the reactor separately or in combination with one or more solids. The reactant mixture may comprise at least one of the group of a dissociator, a high-surface-area (HSA) material, R-Ni, Ni, NaH, Na, NaOH, and a solvent.

In an embodiment, one or more reactants, preferably a source of halogen, halogen gas, source of oxygen, or solvent, are injected into a mixture of the other reactants. The injection is controlled to optimize the excess energy and power from the hydrino-forming reaction. The cell temperature at injection and rate of injection may be controlled to achieve the optimization. Other process parameters and mixing can be controlled to further the optimization using methods known to those skilled in the art of process engineering.

For power conversion, each cell type may be interfaced with any of the known converters of thermal energy or plasma to mechanical or electrical power which include for example, a heat engine, steam or gas turbine system, Sterling engine, or thermionic or thermoelectric converters. Further plasma converters comprise the magnetic mirror magnetohydrodynamic power converter, plasmadynamic power converter, gyrotron, photon bunching microwave power converter, charge drift power, or photoelectric converter. In an embodiment, the cell comprises at least one cylinder of an internal combustion engine.

III. Hydrogen Gas Cell and Solid, Liquid, and Heterogeneous Fuel Reactor

According to an embodiment of the present disclosure, a reactor for producing hydrinos and power may take the form of a reactor cell. A reactor of the present disclosure is shown in FIGURE 3. Reactant hydrinos are provided by a catalytic reaction with catalyst. Catalysis may occur in the gas phase or in solid or liquid state.

The reactor of FIGURE 3 comprises a reaction vessel 261 having a chamber 260 capable of containing a vacuum or pressures greater than atmospheric. A source of hydrogen 262 communicating with chamber 260 delivers hydrogen to the chamber through hydrogen supply passage 264. A controller 263 is positioned to control the pressure and flow of hydrogen into the vessel through hydrogen supply passage 264. A pressure sensor 265 monitors pressure in the vessel. A vacuum pump 266 is used to evacuate the chamber through a vacuum line 267.

In an embodiment, the catalysis occurs in the gas phase. The catalyst may be made gaseous by maintaining the cell temperature at an elevated temperature that, in turn, determines the vapor pressure of the catalyst. The atomic and/or molecular hydrogen reactant is also maintained at a desired pressure that may be in any pressure range. In an embodiment, the pressure is less than atmospheric, preferably in the range about 10 millitorr to about 100 Torr. In another embodiment, the pressure is determined by maintaining a mixture of source of catalyst such as a metal source and the corresponding hydride such as a metal hydride in the cell maintained at the desired operating temperature.

A source of suitable catalyst 268 for generating hydrino atoms can be placed in a catalyst reservoir 269, and gaseous catalyst can be formed by heating. The reaction vessel 261 has a catalyst supply passage 270 for the passage of gaseous catalyst from the catalyst reservoir 269 to the reaction chamber 260. Alternatively, the catalyst may be placed in a chemically resistant open container, such as a boat, inside the reaction vessel.

The source of hydrogen can be hydrogen gas and the molecular hydrogen. Hydrogen may be dissociated into atomic hydrogen by a molecular hydrogen dissociating catalyst. Such dissociating catalysts or dissociators include, for example, Raney nickel (R-Ni), precious or noble metals, and a precious or noble metal on a support. The precious or noble metal may be Pt, Pd, Ru, Ir, and Rh, and the support may be at least one of Ti, Nb, $Al_2O_3$, $SiO_2$ and combinations thereof. Further dissociators are Pt or Pd on carbon that may comprise a hydrogen spillover catalyst, nickel fiber mat, Pd sheet, Ti sponge, Pt or Pd electroplated on Ti or Ni sponge or mat, TiH, Pt black, and Pd black, refractory metals such as molybdenum and tungsten, transition metals such as nickel and titanium, inner transition metals such as niobium and zirconium, and other such materials known to those skilled in the art. In an embodiment, hydrogen is dissociated on Pt or Pd. The Pt or Pd may be coated on a support material such as titanium or $Al_2O_3$. In another embodiment, the dissociator is a refractory metal such as tungsten or molybdenum, and the dissociating material may be maintained at elevated temperature by temperature control component 271, which may take the form of a heating coil as shown in cross section in FIGURE 3. The heating coil is powered by a power supply 272. Preferably, the dissociating material is maintained at the operating temperature of the cell. The dissociator may further be operated at a temperature above the cell temperature to more effectively dissociate, and the elevated temperature may prevent the catalyst from condensing on the dissociator. Hydrogen dissociator can also be provided by a hot filament such as 273 powered by supply 274.

In an embodiment, the hydrogen dissociation occurs such that the dissociated hydrogen atoms contact gaseous

catalyst to produce hydrino atoms. The catalyst vapor pressure is maintained at the desired pressure by controlling the temperature of the catalyst reservoir 269 with a catalyst reservoir heater 275 powered by a power supply 276. When the catalyst is contained in a boat inside the reactor, the catalyst vapor pressure is maintained at the desired value by controlling the temperature of the catalyst boat, by adjusting the boat's power supply. The cell temperature can be controlled at the desired operating temperature by the heating coil 271 that is powered by power supply 272. The cell (called a permeation cell) may further comprise an inner reaction chamber 260 and an outer hydrogen reservoir 277 such that hydrogen may be supplied to the cell by diffusion of hydrogen through the wall 278 separating the two chambers. The temperature of the wall may be controlled with a heater to control the rate of diffusion. The rate of diffusion may be further controlled by controlling the hydrogen pressure in the hydrogen reservoir.

To maintain the catalyst pressure at the desire level, the cell having permeation as the hydrogen source may be sealed. Alternatively, the cell further comprises high temperature valves at each inlet or outlet such that the valve contacting the reaction gas mixture is maintained at the desired temperature. The cell may further comprise a getter or trap 279 to selectively collect the lower-energy-hydrogen species and/or the increased-binding-energy hydrogen compounds and may further comprise a selective valve 280 for releasing dihydrino gas product.

In an embodiment, the reactants such as the solid fuel or heterogeneous-catalyst fuel mixture 281 are reacted in the vessel 260 by heating with heaters 271. A further added reactant such as at least one of an exothermic reactant, preferably having fast kinetics, may be flowed from vessel 282 into the cell 260 through control valve 283 and connection 284. The added reactant may be a source of halogen, halogen, source of oxygen, or solvent. The reactant 281 may comprise a species that reacts with the added reactant. A halogen may be added to form a halide with reactant 281, or a source of oxygen may be added to reactant 281 to form an oxide, for example.

The catalyst may be at least one of the group of atomic lithium, potassium, or cesium, NaH molecule or BaH molecule, 2H, and hydrino atoms, wherein catalysis comprises a disproportionation reaction. Lithium catalyst may be made gaseous by maintaining the cell temperature in about the 500-1000 °C range. Preferably, the cell is maintained in about the 500-750 °C range. The cell pressure may be maintained at less than atmospheric, preferably in the range about 10 millitorr to about 100 Torr. Most preferably, at least one of the catalyst and hydrogen pressure is determined by maintaining a mixture of catalyst metal and the corresponding hydride such as lithium and lithium hydride, potassium and potassium hydride, sodium and sodium hydride, and cesium and cesium hydride in the cell maintained at the desired operating temperature. The catalyst in the gas phase may comprise lithium atoms from the metal or a source of lithium metal. Preferably, the lithium catalyst is maintained at the pressure determined by a mixture of lithium metal and lithium hydride at the operating temperature range of about 500-1000 °C and most preferably, the pressure with the cell at the operating temperature range of about 500-750 °C. In other embodiments, K, Cs, Na, and Ba replace Li wherein the catalyst is atomic K, atomic Cs, molecular NaH, and molecular BaH.

In an embodiment of the gas cell reactor comprising a catalyst reservoir or boat, gaseous Na, NaH catalyst, or the gaseous catalyst such as Li, K, and Cs vapor is maintained in a super-heated condition in the cell relative to the vapor in the reservoir or boat which is the source of the cell vapor. In one embodiment, the superheated vapor reduces the condensation of catalyst on the hydrogen dissociator or the dissociator of at least one of metal and metal hydride molecules disclosed *infra.* In an embodiment comprising Li as the catalyst from a reservoir or boat, the reservoir or boat is maintained at a temperature at which Li vaporizes. $H_2$ may be maintained at a pressure that is lower than that which forms a significant mole fraction of LiH at the reservoir temperature. The pressures and temperatures that achieve this condition can be determined from the data plots of $H_2$ pressure versus LiH mole fraction at given isotherms that are known in the art. In an embodiment, the cell reaction chamber containing a dissociator is operated at a higher temperature such that the Li does not condense on the walls or the dissociator. The $H_2$ may flow from the reservoir to the cell to increase the catalyst transport rate. Flow such as from the catalyst reservoir to the cell and then out of the cell is a method to remove hydrino product to prevent hydrino product inhibition of the reaction. In other embodiments, K, Cs, and Na replace Li wherein the catalyst is atomic K, atomic Cs, and molecular NaH.

Hydrogen is supplied to the reaction from a source of hydrogen. For example, the hydrogen is supplied by permeation from a hydrogen reservoir. The pressure of the hydrogen reservoir may be in the range of 10 Torr to 10,000 Torr, preferably 100 Torr to 1000 Torr, and most preferably about atmospheric pressure. The cell may be operated in the temperature of about 100 °C to 3000 °C, preferably in the temperature of about 100 °C to 1500 °C, and most preferably in the temperature of about 500 °C to 800 °C.

The source of hydrogen may be from decomposition of an added hydride. A cell design that supplies $H_2$ by permeation is one comprising an internal metal hydride placed in a sealed vessel wherein atomic H permeates out at high temperature. The vessel may comprise Pd, Ni, Ti, or Nb. In an embodiment, the hydride is placed in a sealed tube such as a Nb tube containing a hydride and sealed at both ends with seals such as Swagelocks. In the sealed case, the hydride could be an alkaline or alkaline earth hydride. Alternatively, in this as well as the internal-hydride-reagent case, the hydride could be at least one of the group of saline hydrides, titanium hydride, vanadium, niobium, and tantalum hydrides, zirconium and hafnium hydrides, rare earth hydrides, yttrium and scandium hydrides, transition element hydrides, intermetalic hydrides, and their alloys.

In an embodiment the hydride and the operating temperature ± 200 °C, based on each hydride decomposition temperature, is chosen from at least one of the list of:
a rare earth hydride with an operating temperature of about 800 °C; lanthanum hydride with an operating temperature of about 700 °C; gadolinium hydride with an operating temperature of about 750 °C; neodymium hydride with an operating temperature of about 750 °C; yttrium hydride with an operating temperature of about 800 °C; scandium hydride with an operating temperature of about 800 °C; ytterbium hydride with an operating temperature of about 850-900 °C; titanium hydride with an operating temperature of about 450 °C; cerium hydride with an operating temperature of about 950 °C; praseodymium hydride with an operating temperature of about 700 °C; zirconium-titanium (50%/50%) hydride with an operating temperature of about 600 °C; an alkali metal/alkali metal hydride mixture such as Rb/RbH or K/KH with an operating temperature of about 450 °C; and an alkaline earth metal/alkaline earth hydride mixture such as $Ba/BaH_2$ with an operating temperature of about 900-1000 °C.

Metals in the gas state can comprise diatomic covalent molecules. An objective of the present disclosure is to provide atomic catalyst such as Li as well as K and Cs. Thus, the reactor may further comprise a dissociator of at least one of metal molecules ("MM") and metal hydride molecules ("MH"). Preferably, the source of catalyst, the source of $H_2$, and the dissociator of MM, MH, and HH, wherein M is the atomic catalyst are matched to operate at the desired cell conditions of temperature and reactant concentrations for example. In the case that a hydride source of $H_2$ is used, in an embodiment, its decomposition temperature is in the range of the temperature that produces the desired vapor pressure of the catalyst. In the case of that the source of hydrogen is permeation from a hydrogen reservoir to the reaction chamber, preferable sources of catalysts for continuous operation are Sr and Li metals since each of their vapor pressures may be in the desired range of 0.01 to 100 Torr at the temperatures for which permeation occurs. In other embodiments of the permeation cell, the cell is operated at a high temperature permissive of permeation, then the cell temperature is lowered to a temperature which maintains the vapor pressure of the volatile catalyst at the desired pressure.

In an embodiment of a gas cell, a dissociator comprises a component to generate catalyst and H from sources. Surface catalysts such as Pt on Ti or Pd, iridium, or rhodium alone or on a substrate such as Ti may also serve the role as a dissociator of molecules of combinations of catalyst and hydrogen atoms. Preferably, the dissociator has a high surface area such as $Pt/AlO_2O_3$ or $Pd/Al_2O_3$.

The $H_2$ source can also be $H_2$ gas. In this embodiment, the pressure can be monitored and controlled. This is possible with catalyst and catalyst sources such as K or Cs metal and $LiNH_2$, respectively, since they are volatile at low temperature that is permissive of using a high-temperature valve. $LiNH_2$ also lowers the necessary operating temperature of the Li cell and is less corrosive which is permissive of long-duration operation using a feed through in the case of plasma and filament cells wherein a filament serves as a hydrogen dissociator.

Further embodiments of the gas cell hydrogen reactor having NaH as the catalyst comprise a filament with a dissociator in the reactor cell and Na in the reservoir. $H_2$ may be flowed through the reservoir to main chamber. The power may be controlled by controlling the gas flow rate, $H_2$ pressure, and Na vapor pressure. The latter may be controlled by controlling the reservoir temperature. In another embodiment, the hydrino reaction is initiated by heating with the external heater and an atomic H is provided by a dissociator.

The reaction mixture may be agitated by methods known in the art such as mechanical agitation or mixing. The agitation system may comprise one or more piezoelectric transducers. Each piezoelectric transducer may provide ultrasonic agitation. The reaction cell may be vibrated and further contain agitation elements such as stainless steel or tungsten balls that are vibrated to agitate the reaction mixture. In another embodiment, mechanical agitation comprises ball milling. The reactant may also be mixed using these methods, preferably by ball milling. The mixing may also be by pneumatic methods such as sparging.

In an embodiment, the catalyst is formed by mechanical agitation such as, for example, at least one of vibration with agitation elements, ultrasonic agitation, and ball milling. The mechanical impact or compression of sound waves such as ultrasound may cause a reaction or a physical change in the reactants to cause the formation of the catalyst, preferably NaH molecules. The reactant mixture may or may not comprise a solvent. The reactants may be solids such as solid NaH that is mechanically agitated to form NaH molecules. Alternatively, the reaction mixture may comprise a liquid. The mixture may have at least one Na species. The Na species may be a component of a liquid mixture, or it may be in solution. In an embodiment, sodium metal is dispersed by high-speed stirring of a suspension of the metal in a solvent such as an ether, hydrocarbon, fluorinated hydrocarbon, aromatic, or heterocyclic aromatic solvent. The solvent temperature may be held just above the melting point of the metal.

## IV. Fuels-Types

An embodiment of the present disclosure is directed to a fuel comprising a reaction mixture of at least a source of hydrogen and a source of catalyst to support the catalysis of hydrogen to form hydrinos in at least one of gaseous, liquid, and solid phases or a possible mixture of phases. The reactants and reactions given herein for solid and liquid fuels are also reactants and reactions of heterogeneous fuels comprising a mixture of phases.

In certain embodiments, an objective of the present disclosure is to provide atomic catalysts such as Li as well as K and Cs and molecular catalysts NaH and BaH. Metals form diatomic covalent molecules. Thus, in solid-fuels, liquid-fuels, and heterogeneous-fuels embodiments, the reactants comprise alloys, complexes, sources of complexes, mixtures, suspensions, and solutions that may reversibly form with a metal catalyst M and decompose or react to provide a catalyst such as Li, NaH, and BaH. In another embodiment, at least one of the catalyst source and atomic hydrogen source further comprises at least one reactant that reacts to form at least one of the catalyst and atomic hydrogen. In another embodiment, the reaction mixture comprises NaH catalyst or a source of NaH catalyst or other catalyst such as Li or K that may form via the reaction of one or more reactants or species of the reaction mixture or may form by a physical transformation. The transformation may be solvation with a suitable solvent.

The reaction mixture may further comprise a solid to support the catalysis reaction on a surface. The catalyst or a source of catalyst such as NaH may be coated on the surface. The coating may be achieved by mixing a support such as activated carbon, TiC, WC, R-Ni with NaH by methods such as ball milling. The reaction mixture may comprise a heterogeneous catalyst or a source of heterogeneous catalyst. In an embodiment, the catalyst such as NaH is coated on the support such as activated carbon, TiC, WC, or a polymer by the method of incipient wetness, preferably by using an aportic solvent such as an ether. The support may also comprise an inorganic compound such as an alkali halide, preferably at least one of NaF and $HNaF_2$ wherein NaH serves as the catalyst and a fluorinated solvent is used.

In an embodiment of a liquid fuel, the reaction mixture comprises at least one of a source of catalyst, a catalyst, a source of hydrogen, and a solvent for the catalyst. In other embodiments, the present disclosure of a solid fuel and a liquid fuel further comprises combinations of both and further comprises gaseous phases as well. The catalysis with the reactants such as the catalyst and atomic hydrogen and sources thereof in multiple phases is called a heterogeneous reaction mixture and the fuel is called a heterogeneous fuel. Thus, the fuel comprises a reaction mixture of at least a source of hydrogen to undergo transition to hydrinos, states given by Eq. (46), and a catalyst to cause the transitions having the reactants in at least one of liquid, solid, and gaseous phases. Catalysis with the catalyst in a different phase from the reactants is generally known in the art as a heterogeneous catalysis that is an embodiment of the present disclosure. Heterogeneous catalysts provide a surface for the chemical reaction to take place on and comprise embodiments of the present disclosure. The reactants and reactions given herein for solid and liquid fuels are also reactants and reactions of heterogeneous fuels.

For any fuel of the present disclosure, the catalyst or source of catalyst such as NaH may be mixed with other components of the reaction mixture such as a support such as a HSA material by methods such as mechanical mixing or by ball milling. In all cases additional hydrogen may be added to maintain the reaction to form hydrinos. The hydrogen gas may be any desired pressure, preferably in the range of 0.1 to 200 atm. Alternatives sources of hydrogen comprise at least one of the group of $NH_4X$ (X is an anion, preferably a halide), $NaBH_4$, $NaAlH_4$, a borane, and a metal hydride such as an alkali metal hydride, alkaline earth metal hydride preferably $MgH_2$, and a rare earth metal hydride preferably $LaH_2$ and $GdH_2$.

A. Support

In certain embodiments, the solid, liquid, and heterogeneous fuels of the present disclosure comprise a support. The support comprises properties specific for its function. For example, in the case that the support functions as an electron acceptor or conduit, the support is preferably conductive. Additionally, in the case that the support disperses the reactants, the support preferably has a high surface area. In the former case, the support such as a HSA support may comprise a conductive polymer such as activated carbon, graphene, and heterocyclic polycyclic aromatic hydrocarbons that may be macromolecular. The carbon may preferably comprise activated carbon (AC), but may also comprise other forms such as mesoporous carbon, glassy carbon, coke, graphitic carbon, carbon with a dissociator metal such as Pt or Pd wherein the wt% is 0.1 to 5 wt%, transition metal powders having preferably one to ten carbon layers and more preferably three layers, and a metal or alloy coated carbon, preferably nanopowder, such as a transition metal preferably at least one of Ni, Co, and Mn coated carbon. A metal may be intercalated with the carbon. In the case that the intercalated metal is Na and the catalyst is NaH, preferably the Na intercalation is saturated. Preferably, the support has a high surface area. Common classes of organic conductive polymers that may serve as the support are at least one of the group of poly(acetylene)s, poly(pyrrole)s, poly(thiophene)s, poly(aniline)s, poly(fluorene)s, poly(3-alkylthiophene)s, polytetrathiafulvalenes, polynaphthalenes, poly(p-phenylene sulfide), and poly(para-phenylene vinylene)s. These linear backbone polymers are typically known in the art as polyacetylene, polyaniline, etc. "blacks" or "melanins". The support may be a mixed copolymer such as one of polyacetylene, polypyrrole, and polyaniline. Preferably, the conductive polymer support is at least one of typically derivatives of polyacetylene, polyaniline, and polypyrrole. Other support comprise other elements than carbon such as the conducting polymer polythiazyl ($(S\text{-}N)_x$).

In another embodiment, the support is a semiconductor. The support may be a Column IV element such as carbon, silicon, germanium, and $\alpha$ -gray tin. In addition to elemental materials such as silicon and germanium, the semiconductor support comprises a compound material such as gallium arsenide and indium phosphide, or alloys such

as silicon germanium or aluminum arsenide. Conduction in materials such as silicon and germanium crystals can be enhanced in an embodiment by adding small amounts (e.g. 1-10 parts per million) of dopants such as boron or phosphorus as the crystals are grown. The doped semiconductor may be ground into a powder to serve as a support.

In certain embodiments, the HSA support is a metal such as a transition metal, noble metal, intermetallic, rare earth, actinide, lanthanide, preferably one of La, Pr, Nd, and Sm, Al, Ga, In, Tl, Sn, Pb, metalloids, Si, Ge, As, Sb, Te, Y, Zr, Nb, Mo, Tc, Ru, Rh, Pd, Ag, Cd, Hf, Ta, W, Re, Os, Ir, Pt, Au, Hg, alkali metal, alkaline earth metal, and an alloy comprising at least two metals or elements of this group such as a lanthanide alloy, preferably $LaNi_5$ and Y-Ni. The support may be a noble metal such as at least one of Pt, Pd, Au, Ir, and Rh or a supported noble metal such as Pt or Pd on titanium (Pt or Pd/Ti).

In other embodiments, the HSA material comprises at least one of cubic boron nitride, hexagonal boron nitride, wurtzite boron nitride powder, heterodiamond, boron nitride nanotubes, silicon nitride, aluminum nitride, titanium nitride (TiN), titanium aluminum nitride (TiAlN), tungsten nitride, a metal or alloy, preferably nanopowder, coated with carbon such as at least one of Co, Ni, Fe, Mn, and other transition metal powders having preferably one to ten carbon layers and more preferably three layers, metal or alloy coated carbon, preferably nanopowder, such as a transition metal preferably at least one of Ni, Co, and Mn coated carbon, carbide, preferably a powder, beryllium oxide (BeO) powder, rare earth oxide powder such as $La_2O_3$, $Zr_2O_3$, $Al_2O_3$, sodium aluminate, and carbon such as fullerene, graphene, or nanotubes, preferably single-walled.

The carbide may comprise one or more of the bonding types: salt-like such as calcium carbide ($CaC_2$), covalent compounds such as silicon carbide (SiC) and boron carbide ($B_4C$ or $BC_3$), and interstitial compounds such as tungsten carbide. The carbide may be an acetylide such as $Au_2C_2$, $ZnC_2$, and $CdC_2$ or a methide such as $Be_2C$, aluminum carbide ($Al_4C_3$), and carbides of the type $A_3MC$ where A is mostly a rare earth or transition metal such as Sc, Y, La-Na,Gd-Lu, and M is a metallic or semimetallic main group element such as Al, Ge, In, Tl, Sn, and Pb. The carbide having $C_2^{2-}$ ions may comprise at least one of carbides $M_2^I C_2$ with the cation $M^I$ comprising an alkali metal or one of the coinage metals, carbides $M^{II}C_2$ with the cation $M^{II}$ comprising an alkaline earth metal, and preferably carbides $M_2^{III}(C_2)_3$ with the cation $M^{III}$ comprising Al, La, Pr, or Tb. The carbide may comprise an ion other than $C_2^{2-}$ such as those of the group of $YC_2$, $TbC_2$, $YbC_2$, $UC_2$, $Ce_2C_3$, $Pr_2C_3$, and $Tb_2C_3$. The carbide may comprise a sesquicarbide such as $Mg_2C_3$, $Sc_3C_4$, and $Li_4C_3$. The carbide may comprise a ternary carbide such as those containing lanthanide metals and transition metals that may further comprise $C_2$ units such as $Ln_3M(C_2)_2$ where M is Fe, Co, Ni, Ru, Rh, Os, and Ir, $Dy_{12}Mn_5C_{15}$, $Ln_{3.67}FeC_6$, $Ln_3Mn(C_2)_2$ (Ln=Gd and Tb), and $ScCrC_2$. The carbide may further be of the classification "intermediate" transition metal carbide such as iron carbide ($Fe_3C$ or $FeC_2$:Fe). The carbide may be at least one from the group of, lanthanides ($MC_2$ and $M_2C_3$) such as lanthanum carbide ($LaC_2$ or $La_2C_3$), yttrium carbide, actinide carbides, transition metal carbides such as scandium carbide, titanium carbide (TiC), vanadium carbide, chromium carbide, manganese carbide, and cobalt carbide, niobium carbide, molybdenum carbide, tantalum carbide, zirconium carbide, and hafnium carbide. Further suitable carbides comprise at least one of $Ln_2FeC_4$, $Sc_3CoC_4$, $Ln_3MC_4$ (M=Fe, Co, Ni, Ru, Rh, Os, Ir), $Ln_3Mn_2C_6$, $Eu_{3.16}NiC_6$, $ScCrC_2$, $Th_2NiC_2$, $Y_2ReC_2$, $Ln_{12}M_5C_{15}$ (M=Mn, Re), YCoC, $Y_2ReC_2$, and other carbides known in the art.

In an embodiment, the support is an electrically-conductive carbide such as TiC, TiCN, $Ti_3SiC_2$, or WC and HfC, $Mo_2C$, TaC, $YC_2$, ZrC, $Al_4C_3$, SiC, and $B_4C$. Further suitable carbides comprise $YC_2$, $TbC_2$, YbC2, $LuC_2$, $Ce_2C_3$, $Pr_2C_3$, and $Tb_2C_3$. Additional suitable carbides comprise at least one from the group of $Ti_2AlC$, $V_2AlC$, $Cr_2AlC$, $Nb_2AlC$, $Ta_2AlC$, $Ti_2AlN$, $Ti_3AlC_2$, $Ti_4AlN_3$, $Ti_2GaC$, $V_2GaC$, $Cr_2GaC$, $Nb_2GaC$, $Mo_2GaC$, $Ta_2GaC$, $Ti_2GaN$, $Cr_2GaN$, $V_2GaN$, $Sc_2InC$, $Ti_2InC$, $Zr_2InC$, $Nb_2InC$, $Hf_2InC$, $Ti_2InN$, $Zr_2InN$, $Ti_2TlC$, $Zr_2TlC$, $Hf_2TlC$, $Zr_2TlN$, $Ti_3SiC_2$, $Ti_2GeC$, $Cr_2GeC$, $Ti_3GeC_2$, $Ti_2SnC$, $Zr_2SnC$, $Nb_2SnC$, $Hf_2SnC$, $Hf_2SnN$, $Ti_2PbC$, $Zr_2PbC$, $Hf_2PbC$, $V_2PC$, $Nb_2PC$, $V_2AsC$, $Nb_2AsC$, $Ti_2SC$, $Zr_2SC0.4$, and $Hf_2SC$. The support may be a metal boride. The support or HSA material may be a boride, preferably a two-dimensional network boride that may be conducting such as $MB_2$ wherein M is a metal such as at least one of Cr, Ti, Mg, Zr, and Gd ($CrB_2$, $TiB_2$, $MgB_2$, $ZrB_2$, $GdB_2$).

In a carbon-HSA material embodiment, Na does not intercalate into the carbon support or form an acetylide by reacting with the carbon. In an embodiment, the catalyst or source of catalyst, preferably NaH, is incorporated inside of the HSA material such as fullerene, carbon nanotubes, and zeolite. The HSA material may further comprise graphite, graphene, diamond-like carbon (DLC), hydrogenated diamond-like carbon (HDLC), diamond powder, graphitic carbon, glassy carbon, and carbon with other metals such as at least one of Co, Ni, Mn, Fe, Y, Pd, and Pt, or dopants comprising other elements such as fluorinated carbon, preferably fluorinated graphite, fluorinated diamond, or tetracarbon fluoride ($C_4F$). The HSA material may be fluoride passivated such as fluoride coated metal or carbon or comprise a fluoride such

as a metal fluoride, preferably an alkali or rare earth fluoride.

A suitable support having a large surface area is activated carbon. The activated carbon can be activated or reactivated by physical or chemical activation. The former activation may comprise carbonization or oxidation, and the latter activation may comprise impregnation with chemicals.

The reaction mixture may further comprise a support such as a polymer support. The polymer support may be chosen from poly(tetrafluoroethylene) such as TEFLON™, polyvinylferrocene, polystyrene, polypropylene, polyethylene, polyisoprene, poly(aminophosphazene), a polymer comprising ether units such as polyethylene glycol or oxide and polypropylene glycol or oxide, preferably arylether, a polyether polyol such as poly(tetramethylene ether) glycol (PTMEG, polytetrahydrofuran, "Terathane", "polyTHF"), polyvinyl formal, and those from the reaction of epoxides such as polyethylene oxide and polypropylene oxide. In an embodiment, the HSA comprises fluorine. The support may comprise as at least one of the group of fluorinated organic molecules, fluorinated hydrocarbons, fluorinated alkoxy compounds, and fluorinated ethers. Exemplary fluorinated HSAs are TEFLON™, TEFLON™-PFA, polyvinyl fluoride, PVF, poly(vinylidene fluoride), poly(vinylidene fluoride-co-hexafluoropropylene), and perfluoroalkoxy polymers.

## B. Solid Fuels

The solid fuel comprises a catalyst or source of catalyst to form hydrinos such as at least one catalyst such as one chosen from LiH, Li, NaH, Na, KH, K, RbH, Rb, CsH, and BaH, a source of atomic hydrogen and at least one of a HSA support, getter, a dispersant, and other solid chemical reactants that perform the one or more of the following functions (i) the reactants form the catalyst or atomic hydrogen by undergoing a reaction such as one between one or more components of the reaction mixture or by undergoing a physical or chemical change of at least one component of the reaction mixture and (ii) the reactants initiate, propagate, and maintain the catalysis reaction to form hydrinos. The cell pressure may preferably be in the range of about 1 Torr to 100 atmospheres. The reaction temperature is preferably in the range of about 100 °C to 900 °C. The many examples of solid fuels given in the present disclosure including the reaction mixtures of liquid fuels comprising a solvent except with the exception of the solvent are not meant to be exhaustive. Based on the present disclosure other reaction mixtures are taught to those skilled in the art.

The source of hydrogen may comprise hydrogen or a hydride and a dissociator such as Pt/Ti, hydrided Pt/Ti, Pd, Pt, or Ru/$Al_2O_3$, Ni, Ti, or Nb powder. At least one of the HSA support, getter, and dispersant may comprise at least one of the group of a metal powder such as Ni, Ti, or Nb powder, R-Ni, $ZrO_2$, $Al_2O_3$, NaX (X=F, Cl, Br, I), $Na_2O$, NaOH, and $Na_2CO_3$. In an embodiment, a metal catalyzes the formation of NaH molecules from a source such as a Na species and a source of H. The metal may be a transition, noble, intermetallic, rare earth, lanthanide, and actinide metal, as well as others such as aluminum, and tin.

## C. Hydrino Reaction Activators

The hydrino reaction may be activated or initiated and propagated by one or more chemical other reactions. These reactions can be of several classes such as (i) exothermic reactions which provide the activation energy for the hydrino reaction, (ii) coupled reactions that provide for at least one of a source of catalyst or atomic hydrogen to support the hydrino reaction, (iii) free radical reactions that, in an embodiment, serve as an acceptor of electrons from the catalyst during the hydrino reaction, (iv) oxidation-reduction reactions that, in an embodiment, serve as an acceptor of electrons from the catalyst during the hydrino reaction, (v) exchange reactions such as anion exchange including halide, sulfide, hydride, arsenide, oxide, phosphide, and nitride exchange that in an embodiment, facilitate the action of the catalyst to become ionized as it accepts energy from atomic hydrogen to form hydrinos, and (vi) getter, support, or matrix-assisted hydrino reaction that may provide at least one of a chemical environment for the hydrino reaction, act to transfer electrons to facilitate the H catalyst function, undergoes a reversible phase or other physical change or change in its electronic state, and binds a lower-energy hydrogen product to increase at least one of the extent or rate of the hydrino reaction. In an embodiment, the reaction mixture comprises a support, preferably an electrically conductive support, to enable the activation reaction.

In an embodiment a catalyst such as *Li, K,* and *NaH* serves to form hydrinos at a high rate by speeding up the rate limiting step, the removal of electrons from the catalyst as it is ionized by accepting the nonradiative resonant energy transfer from atomic hydrogen to form hydrinos. The typical metallic form of *Li* and *K* may be converted to the atomic form and the ionic form of *NaH* may be converted to the molecular form by using a support or HSA material such as activated carbon (AC), Pt/C, Pd/C, TiC, or WC to disperse the catalyst such as *Li* and *K* atoms and *NaH* molecules, respectively. Preferably, the support has a high surface area and conductivity considering the surface modification upon reaction with other species of the reaction mixture. The reaction to cause a transition of atomic hydrogen to form hydrinos requires a catalyst such as *Li, K,* or *NaH* and atomic hydrogen wherein *NaH* serves as a catalyst and source of atomic hydrogen in a concerted reaction. The reaction step of a nonradiative energy transfer of an integer multiple of 27.2 *eV* from atomic hydrogen to the catalyst results in ionized catalyst and free electrons that causes the reaction to rapidly

cease due to charge accumulation. The support such as AC may also act as a conductive electron acceptor, and final electron-acceptor reactants comprising an oxidant, free radicals or a source thereof, are added to the reaction mixture to ultimately scavenge electrons released from the catalyst reaction to form hydrinos. In addition a reductant may be added to the reaction mixture to facilitate the oxidation reaction. The concerted electron-acceptor reaction is preferably exothermic to heat the reactants and enhance the rates. The activation energy and propagation of the reaction may be provided by a fast, exothermic, oxidation or free radical reaction such as that of $O_2$ or $CF_4$ with *Mg* or *Al* wherein radicals such as $CF_x$ and F and $O_2$ and O serve to ultimately accept electrons from the catalyst via support such as AC. Other oxidants or sources of radicals singly or in combination may be chosen from the group of $O_2$, $O_3$, $N_2O$ $NF_3$, $M_2S_2O_8$ (M is an alkali metal), S, $CS_2$, and $SO_2$, $MnI_2$, $EuBr_2$, AgCl, and others given in the Electron Acceptor Reactions section.

Preferably, the oxidant accepts at least two electrons. The corresponding anion may be $O_2^{2-}$, $S^{2-}$, $C_2S_4^{2-}$ (tetrathiooxalate anion), $SO_3^{2-}$, and $SO_4^{2-}$. The two electrons may be accepted from a catalyst that becomes doubly ionized during catalysis such as NaH and Li (Eqs. (28-30) and (24-26)). The addition of an electron acceptor to the reaction mixture or reactor applies to all cell embodiments of the present disclosure such as the solid fuel and heterogeneous catalyst embodiments as well as electrolysis cells, and plasma cells such as glow discharge, RF, microwave, and barrier-electrode plasma cells and plasma electrolysis cells operated continuously or in pulsed mode. An electron conductive, preferably unreactive, support such as AC may also be added to the reactants of each of these cell embodiments. An embodiment of the microwave plasma cell comprises a hydrogen dissociator such as a metal surface inside of the plasma chamber to support hydrogen atoms.

In embodiments, mixtures of species, compounds, or materials of the reaction mixture such as a source of catalyst, a source of an energetic reaction such as a metal and at least one of a source of oxygen, a source of halogen, and a source of free radicals, and a support may be used in combinations. Reactive elements of compounds or materials of the reaction mixture may also be used in combinations. For example, the source of fluorine or chlorine may be a mixture of $N_xF_y$ and $N_xCl_y$, or the halogen may be intermixed such as the in compound $N_xF_yCl_r$. The combinations could be determined by routine experimentation by those skilled in the art.

a. Exothermic Reactions

In an embodiment, the reaction mixture comprises a source of catalyst or a catalyst such as at least one of NaH, BaH, K, and Li and a source of hydrogen or hydrogen and at least one species that undergoes reaction. The reaction may be very exothermic and may have fast kinetics such that it provides the activation energy to the hydrino catalyst reaction. The reaction may be an oxidation reaction. Suitable oxidation reactions are the reaction of species comprising oxygen such as the solvent, preferably an ether solvent, with a metal such as at least one of Al, Ti, Be, Si, P, rare earth metals, alkali metals, and alkaline earth metals. More preferably, the exothermic reaction forms an alkali or alkaline earth halide, preferably $MgF_2$, or halides of Al, Si, P, and rare earth metals. Suitable halide reactions are the reaction of a species comprising a halide such as the solvent, preferably a fluorocarbon solvent, with at least one of a metal and a metal hydride such as at least one of Al, rare earth metals, alkali metals, and alkaline earth metals. The metal or metal hydride may be the catalyst or a source of the catalyst such as NaH, BaH, K, or Li. The reaction mixture may comprise at least NaH and $NaAlCl_4$ or $NaAlF_4$ having the products NaCl and NaF, respectively. The reaction mixture may comprise at least NaH a fluorosolvent having the product NaF.

In general, the product of the exothermic reaction to provide the activation energy to the hydrino reaction may be a metal oxide or a metal halide, preferably a fluoride. Suitable products are $Al_2O_3$, $M_2O_3$ (M=rare earth metal), $TiO_2$, $Ti_2O_3$, $SiO_2$, $PF_3$ or $PF_5$, $AlF_3$, $MgF_2$, $MF_3$ (M=rare earth metal), NaF, $NaHF_2$, KF, $KHF_2$, LiF, and $LiHF_2$. In an embodiment wherein Ti undergoes the exothermic reaction, the catalyst is $Ti^{2+}$ having a second ionization energy of 27.2 eV (m=1 in Eq. (5)). The reaction mixture may comprise at least two of NaH, Na, NaNH2, NaOH, Teflon, fluorinated carbon, and a source of Ti such as Pt/Ti or Pd/Ti. In an embodiment wherein Al undergoes the exothermic reaction, the catalyst is AlH as given in TABLE 3. The reaction mixture may comprise at least two of NaH, Al, carbon powder, a fluorocarbon, preferably a solvent such as hexafluorobenzene or perfluoroheptane, Na, NaOH, Li, LiH, K, KH, and R-Ni. Preferably, the products of the exothermic reaction to provide the activation energy are regenerated to form the reactants for another cycle of forming hydrinos and releasing the corresponding power. Preferably, metal fluoride products are regenerated to metals and fluorine gas by electrolysis. The electrolyte may comprise a eutetic mixture. The metal may be hydrided and the carbon product and any $CH_4$ and hydrocarbons products may be fluorinated to form the initial metal hydride and fluorocarbon solvent, respectively.

In an embodiments of the exothermic reaction to activate the hydrino transition reaction at least one of the group of a rare earth metal (M), Al, Ti, and Si is oxidized to the corresponding oxide such as $M_2O_3$, $Al_2O_3$, $Ti_2O_3$, and $SiO_2$, respectively. The oxidant may be an ether solvent such as 1,4-benzodioxane (BDO) and may further comprise a

fluorocarbon such as hexafluorobenzene (HFB) or perfluoroheptane to accelerate the oxidation reaction. In an exemplary reaction, the mixture comprises NaH, activated carbon, at least one of Si and Ti, and at least one of BDO and HFB. In the case of Si as the reductant, the product $SiO_2$ may be regenerated to Si by $H_2$ reduction at high temperature or by reaction with carbon to form Si and CO and $CO_2$. A certain embodiment of the reaction mixture to form hydrinos comprises a catalyst or a source of catalyst such as at least one of Na, NaH, K, KH, Li, and LiH, a source of exothermic reactants or exothermic reactants, preferably having fast kinetics, that activate the catalysis reaction of H to form hydrinos, and a support. The exothermic reactants may comprise a source of oxygen and a species that reacts with oxygen to form an oxide. For x and y being integers, preferably the oxygen source is $H_2O$, $O_2$, $H_2O_2$, $MnO_2$, an oxide, an oxide of carbon, preferably CO or $CO_2$, an oxide of nitrogen, $N_xO_y$ such as $N_2O$ and $NO_2$, an oxide of sulfur, $S_xO_y$, preferably an oxidant such as $M_2S_xO_y$ (M is an alkali metal) that may optionally be used with an oxidation catalyst such as silver ion, $Cl_xO_y$ such as $Cl_2O$, and $ClO_2$ preferably from $NaClO_2$, concentrated acids and their mixtures such as $HNO_2$, $HNO_3$, $H_2SO_4$, $H_2SO_3$, HCl, and HF, preferably, the acid forms nitronium ion $(NO_2^+)$, NaOCl, $I_xO_y$, preferably $I_2O_5$, $P_xO_y$, $S_xO_y$, an oxyanion of an inorganic compound such as one of nitrite, nitrate, chlorate, sulfate, phosphate, a metal oxide such as cobalt oxide, and oxide or hydroxide of the catalyst such as NaOH, and perchlorate wherein the cation is a source of the catalyst such as Na, K, and Li, an oxygen-containing functional group of an organic compound such as an ether, preferably one of dimethoxyethane, dioxane, and 1,4-benzodioxane (BDO), and the reactant species may comprise at least one of the group of a rare earth metal (M), Al, Ti, and Si, and the corresponding oxide is $M_2O_3$, $Al_2O_3$, $Ti_2O_3$, and $SiO_2$, respectively. The reactant species may comprise the metal or element of the oxide products of at least one of the group of $Al_2O_3$ aluminum oxide, $La_2O_3$ lanthanum oxide, MgO magnesium oxide, $Ti_2O_3$ titanium oxide, $Dy_2O_3$ dysprosium oxide, $Er_2O_3$ erbium oxide, $Eu_2O_3$ europium oxide, LiOH lithium hydroxide, $Ho_2O_3$ holmium oxide, $Li_2O$ lithium oxide, $Lu_2O_3$ lutetium oxide, $Nb_2O_5$ niobium oxide, $Nd_2O_3$ neodymium oxide, $SiO_2$ silicon oxide, $Pr_2O_3$ praseodymium oxide, $Sc_2O_3$ scandium oxide, $SrSiO_3$ strontium metasilicate, $Sm_2O_3$ samarium oxide, $Tb_2O_3$ terbium oxide, $Tm_2O_3$ thulium oxide, $Y_2O_3$ yttrium oxide, and $Ta_2O_5$ tantalum oxide, $B_2O_3$ boron oxide, and zirconium oxide. The support may comprise carbon, preferably activated carbon. The metal or element may be at a least one of Al, La, Mg, Ti, Dy, Er, Eu, Li, Ho, Lu, Nb, Nd, Si, Pr, Sc, Sr, Sm, Tb, Tm, Y, Ta, B, Zr, S, P, C, and their hydrides.

In another embodiment, the oxygen source may be at least one of an oxide such as $M_2O$ where M is an alkali metal, preferably $Li_2O$, $Na_2O$, and $K_2O$, a peroxide such as $M_2O_2$ where M is an alkali metal, preferably $Li_2O_2$, $Na_2O_2$, and $K_2O_2$, and a superoxide such as $MO_2$ where M is an alkali metal, preferably $Li_2O_2$, $Na_2O_2$, and $K_2O_2$. The ionic peroxides may further comprise those of Ca, Sr, or Ba.

In another embodiment, at least one of the source of oxygen and the source of exothermic reactants or exothermic reactants, preferably having fast kinetics, that activate the catalysis reaction of H to form hydrinos comprises one or more of the group of $MNO_3$, MNO, $MNO_2$, $M_3N$, $M_2NH$, $MNH_2$, MX, $NH_3$, $MBH_4$, $MAlH_4$, $M_3AlH_6$, MOH, $M_2S$, MHS, MFeSi, $M_2CO_3$, $MHCO_3$, $M_2SO_4$, $MHSO_4$, $M_3PO_4$, $M_2HPO_4$, $MH_2PO_4$, $M_2MoO_4$, $MNbO_3$, $M_2B_4O_7$ (M tetraborate), $MBO_2$, $M_2WO_4$, $MAlCl_4$, $MGaCl_4$, $M_2CrO_4$, $M_2Cr_2O_7$, $M_2TiO_3$, $MZrO_3$, $MAlO_2$, $MCoO_2$, $MGaO_2$, $M_2GeO_3$, $MMn_2O_4$, $M_4SiO_4$, $M_2SiO_3$, $MTaO_3$, $MCuCl_4$, $MPdCl_4$, $MVO_3$, $MIO_3$, $MFeO_2$, $MIO_4$, $MClO_4$, $MScO_n$, $MTiO_n$, $MVO_n$, $MCrO_n$, $MCr_2O_n$, $MMn_2O_n$, $MFeO_n$, $MCoO_n$, $MNiO_n$, $MNi_2O_n$, $MCuO_n$, and $MZnO_n$, where M is Li, Na or K and n=1, 2,3, or 4, an oxyanion, an oxyanion of a strong acid, an oxidant, a molecular oxidant such as $V_2O_3$, $I_2O_5$, $MnO_2$, $Re_2 0_7$, $CrO_3$, $RuO_2$, AgO, PdO, $PdO_2$, PtO, $PtO_2$, $I_2O_4$, $I_2O_5$, $I_2O_9$, $SO_2$, $SO_3$, $CO_2$, $N_2O$, NO, $NO_2$, $N_2O_3$, $N_2O_4$, $N_2O_5$, $Cl_2O$, $ClO_2$, $Cl_2O_3$, $Cl_2O_6$, $Cl_2O_7$, $PO_2$, $P_2O_3$, and $P_2O_5$, $NH_4X$ wherein X is a nitrate or other suitable anion known to those skilled in the art such as one of the group comprising $F^-$, $Cl^-$, $Br^-$, $I^-$, $NO_3^-$, $NO_2^-$, $SO_4^{2-}$, $HSO_4^-$, $CoO_2^-$, $IO_3^-$, $IO_4^-$, $TiO_3^-$, $CrO_4^-$, $FeO_2^-$, $PO_4^{3-}$, $HPO_4^{2-}$, $H_2PO_4^-$, $VO_3^-$, $ClO_4^-$ and $Cr_2O_7^{2-}$ and other anions of the reactants. The reaction mixture may additionally comprise a reductant. In an embodiment, $N_2O_5$ is formed from a reaction of a mixture of reactants such as $HNO_3$ and $P_2O_5$ that reacts according to $2P_2O_5 + 12\ HNO_3$ to $4H_3PO_4 + 6N_2O_5$.

In an embodiment wherein oxygen or a compound comprising oxygen participates in the exothermic reaction, $O_2$ may serve as a catalyst or a source of a catalyst. The bond energy of the oxygen molecule is 5.165 eV, and the first, second, and third ionization energies of an oxygen atom are 13.61806 *eV*, 35.11730 *eV*, and 54.9355 *eV*, respectively. The reactions $O_2 \rightarrow O + O^{2+}$, $\overline{O}_2 \rightarrow O + O^{3+}$, and $20 \rightarrow 2O^+$ provide a net enthalpy of about 2, 4, and 1 times $E_h$, respectively, and comprise catalyst reactions to from hydrino by accepting these energies from H to cause the formation of hydrinos.

Additionally, the source of an exothermic reaction to activate the hydrino reaction may be a metal alloy forming reaction, preferably between Pd and Al initiated by melting the Al. The exothermic reaction preferably produces energetic particles to activate the hydrino-forming reaction. The reactants may be a pyrogen or pyrotechnic composition. In another embodiment, the activation energy may be provided by operating the reactants at a very high temperature such as in the range of about 1000-5000 °C, preferably in the range of about 1500-2500 °C. The reaction vessel may comprise a

high-temperature stainless steel alloy, a refractory metal or alloy, alumina, or carbon. The elevated reactant temperature may be achieved by heating the reactor or by an exothermic reaction.

The exothermic reactants may comprise a halogen, preferably fluorine or chlorine, and a species that reacts with the fluorine or chlorine to form a fluoride or chloride, respectively. Suitable halogen sources are $B_xX_y$, preferably $BF_3$, $B_2F_4$, $BCl_3$, or $BBr_3$ and $S_xX_y$, preferably $SCl_2$ or $S_xF_y$ (X is a halogen; x and y are integers). Suitable fluorine sources are fluorocarbons such as $CF_4$, hexafluorbenzene, and hexadecafluoroheptane, xenon fluorides such as $XeF_2$, $XeF_4$, and $XeF_6$, $B_xF_y$, preferably $BF_3$, $B_2F_4$, $SF_x$ such as, fluorosilanes, fluorinated nitrogen, $N_xF_y$, preferably $NF_3$, $NF_3O$, SbFx, BiFx, preferably $BiF_5$, $S_xF_y$ (x and y are integers) such as $SF_4$, $SF_6$, or $S_2F_{10}$, fluorinated phosphorous, $M_2SiF_6$ wherein M is an alkali metal such as $Na_2SiF_6$ and $K_2SiF_6$, $MSiF_6$ wherein M is an alkaline earth metal such as $MgSiF_6$, $GaSiF_3$, $PF_5$, $MPF_6$ wherein M is an alkali metal, $MHF_2$ wherein M is an alkali metal such as $NaHF_2$ and $KHF_2$, $K_2TaF_7$, $KBF_4$, $K_2MnF_6$, and $K_2ZrF_6$ wherein other similar compounds are anticipated such as those having another alkali or alkaline earth metal substitution such as one of Li, Na, or K as the alkali metal. Suitable sources of chlorine are $Cl_2$ gas, $SbCl_s$, and chlorocarbons such as $CCl_4$, chloroform, $B_xCl_y$, preferably $BCl_3$, $B_2Cl_4$, $BCl_3$, $N_xCl_y$, preferably $NCl_3$, $S_xCl_y$, preferably $SCl_2$ (x and y are integers). The reactant species may comprise at least one of the group of an alkali or alkaline earth metal or hydride, a rare earth metal (M), Al, Si, Ti, and P that forms the corresponding fluoride or chloride. Preferably the reactant alkali metal corresponds to that of the catalyst, the alkaline earth hydride is $MgH_2$, the rare earth is La, and Al is a nanopowder. The support may comprise carbon, preferably activated carbon, mesoporous carbon, and the carbon using in Li ion batteries. The reactants may be in any molar ratios. Preferably, the reactant species and the fluorine or chlorine are in about the stoichiometric ratio as the elements of the fluoride or chlorine, the catalyst is in excess, preferably in about the same molar ratio as the element that reacts with the fluorine or chlorine, and the support is in excess.

The exothermic reactants may comprise a halogen gas, preferably chlorine or bromine, or a source of halogen gas such as HF, HCl, HBr, HI, preferably $CF_4$ or $CCl_4$, and a species that reacts with the halogen to form a halide. The source of halogen may also be a source of oxygen such as $C_xO_yX_r$ wherein X is halogen, and x, y, and r are integers and are known in the art. The reactant species may comprise at least one of the group of an alkali or alkaline earth metal or hydride, a rare earth metal, Al, Si, and P that forms the corresponding halide. Preferably the reactant alkali metal corresponds to that of the catalyst, the alkaline earth hydride is $MgH_2$, the rare earth is La, and Al is a nanopowder. The support may comprise carbon, preferably activated carbon. The reactants may be in any molar ratios. Preferably, the reactant species and the halogen are in about an equal stoichiometric ratio, the catalyst is in excess, preferably in about the same molar ratio as the element that reacts with the halogen, and the support is in excess. In an embodiment, the reactants comprise, a source of catalyst or a catalyst such as Na, NaH, K, KH, Li, LiH, and $H_2$, a halogen gas, preferably, chlorine or bromine gas, at least one of Mg, $MgH_2$, a rare earth, preferably La, Gd, or Pr, Al, and a support, preferably carbon such as activated carbon.

b. Free Radical Reactions

In an embodiment, the exothermic reaction is a free radical reaction, preferably a halide or oxygen free radical reaction. The source of halide radicals may be a halogen, preferably $F_2$ or $Cl_2$, or a fluorocarbon, preferably $CF_4$. A source of F free radicals is $S_2F_{10}$. The reaction mixture comprising a halogen gas may further comprise a free radical initiator. The reactor may comprise a source of ultraviolet light to form free radials, preferably halogen free radicals and more preferably chlorine or fluorine free radicals. The free radical initiators are those commonly known in the art such as peroxides, azo compounds and a source of metal ions such as a metal salt, preferably, a cobalt halide such as $CoCl_2$ that is a source of $Co^{2+}$ or $FeSO_4$ which is a source of $Fe^{2+}$. The latter are preferably reacted with an oxygen species such as $H_2O_2$ or $O_2$. The radical may be neutral.

The source of oxygen may comprise a source of atomic oxygen. The oxygen may be singlet oxygen. In an embodiment, singlet oxygen is formed from the reaction of NaOCl with $H_2O_2$. In an embodiment, the source of oxygen comprises $O_2$ and may further comprise a source of free radicals or a free radical initiator to propagate a free radical reaction, preferably a free radical reaction of O atoms. The free radical source or source of oxygen may be at least one of ozone or an ozonide. In an embodiment, the reactor comprises an ozone source such as an electrical discharge in oxygen to provide ozone to the reaction mixture.

The free radical source or source of oxygen may further comprise at least one of a peroxo compound, a peroxide, $H_2O_2$, a compound containing an azo group, $N_2O$, NaOCl, Fenton's reagent, or a similar reagent, OH radical or a source thereof, perxenate ion or a source thereof such as an alkali or alkaline earth perxenate, preferably, sodium perxenate ($Na_4XeO_6$) or potassium perxenate ($K_4XeO_6$), xenon tetraoxide ($XeO_4$), and perxenic acid ($H_4XeO_6$), and a source of metal ions such as a metal salt. The metal salt may be at least one of $FeSO_4$, $AlCl_3$, $TiCl_3$, and, preferably, a cobalt halide such as $CoCl_2$ that is a source of $Co^{2+}$.

In an embodiment, free radicals such as Cl are formed from a halogen such as $Cl_2$ in the reaction mixture such as NaH + $MgH_2$ + support such as activated carbon (AC) + halogen gas such as $Cl_2$. The free radicals may be formed

by the reaction of a mixture of $Cl_2$ and a hydrocarbon such as $CH_4$ at an elevated temperature such as greater than 200 °C. The halogen may be in molar excess relative to the hydrocarbon. The chlorocarbon product and Cl radicals may react with the reductant to provide the activation energy and pathway for forming hydrinos. The carbon product may be regenerated using the synthesis gas (syngas) and Fischer-Tropsch reactions or by direct hydrogen reduction of carbon to methane. The reaction mixture may comprise a mixture of $O_2$ and $Cl_2$ at an elevated temperature such as greater than 200 °C. The mixture may react to form $Cl_xO_y$ (x and y are integers) such as ClO, $Cl_2O$, and $ClO_2$. The reaction mixture may comprise $H_2$ and $Cl_2$ at an elevated temperature such as greater than 200 °C that may react to form HCl. The reaction mixture may comprise $H_2$ and $O_2$ with a recombiner such as Pt/Ti, Pt/C, or Pd/C at a slightly elevated temperature such as greater than 50 °C that may react to form $H_2O$. The recombiner may operate at elevated pressure such as in the range of greater than one atmosphere, preferably in the range of about 2 to 100 atmospheres. The reaction mixture may be nonstoichiometric to favor free radical and singlet oxygen formation. The system may further comprise a source of ultraviolet light or plasma to form free radicals such as a RF, microwave, or glow discharge, preferably high-voltage pulsed, plasma source. The reactants may further comprise a catalyst to form at least one of atomic free radicals such as Cl, O, and H, singlet oxygen, and ozone. The catalyst may be a noble metal such as Pt. In an embodiment to form Cl radicals, the Pt catalyst is maintained at a temperature greater than the decomposition temperature of platinum chlorides such as $PtCl_2$, $PtCl_3$, and $PtCl_4$ which have decomposition temperatures of 581 °C, 435 °C, and 327 °C, respectively. In an embodiment, Pt may be recovered from a product mixture comprising metal halides by dissolving the metal halides in a suitable solvent in which the Pt, Pd or their halides are not soluble and removing the solution. The solid that may comprise carbon and Pt or Pd halide may be heated to form Pt or Pd on carbon by decomposition of the corresponding halide.

In an embodiment, $N_2O$, $NO_2$, or NO gas is added reaction mixture. $N_2O$ and $NO_2$ may serve as a source of NO radical. In another embodiment, the NO radical is produced in the cell, preferably by the oxidation of $NH_3$. The reaction may be the reaction of $NH_3$ with $O_2$ on platinum or platinum-rhodium at elevated temperature. NO, $NO_2$, and $N_2O$ can be generated by known industrial methods such as by the Haber process followed by the Ostwald process. In one embodiment, the exemplary sequence of steps are:

$$N_2 \xrightarrow[\substack{Haber\\process}]{H_2} NH_3 \xrightarrow[\substack{Ostwald\\process}]{O_2} NO,\ N_2O,\ NO_2. \tag{61}$$

Specifically, the Haber process may be used to produce $NH_3$ from $N_2$ and $H_2$ at elevated temperature and pressure using a catalyst such as $\alpha$ -iron containing some oxide. The Ostwald process may be used to oxidize the ammonia to NO, $NO_2$, and $N_2O$ at a catalyst such as a hot platinum or platinum-rhodium catalyst. Alkali nitrates can be regenerated using the methods disclosed supra.

The system and reaction mixture may initiate and support a combustion reaction to provide at least one of singlet oxygen and free radicals. The combustion reactants may be nonstoichiometric to favor free radical and singlet oxygen formation that react with the other hydrino reaction reactants. In an embodiment, an explosive reaction is suppressed to favor a prolonged steady reaction, or an explosive reaction is caused by the appropriate reactants and molar ratios to achieve the desired hydrino reaction rate. In an embodiment, the cell comprises at least one cylinder of an internal combustion engine.

c. Electron Acceptor Reactions

In an embodiment, the reaction mixture further comprises an electron acceptor. The electron acceptor may act as a sink for the electrons ionized from the catalyst when energy is transferred to it from atomic hydrogen during the catalytic reaction to form hydrinos. The electron acceptor may be at least one of a conducting polymer or metal support, an oxidant such as group VI elements, molecules, and compounds, a free radical, a species that forms a stable free radical, and a species with a high electron affinity such as halogen atoms, $O_2$, C, $CF_{1,2,3\text{ or }4}$, Si, S, $P_xS_y$, $CS_2$, $S_xN_y$ and these compounds further comprising O and H, Au, At, $Al_xO_y$ (x and y are integers), preferably $AlO_2$ that in an embodiment is an intermediate of the reaction of $Al(OH)_3$ with Al of R-Ni, ClO, $Cl_2$, $F_2$, $AlO_2$, $B_2N$, $CrC_2$, $C_2H$, $CuCl_2$, $CuBr_2$, $MnX_3$ (X = halide), $MoX_3$ (X = halide), $NiX_3$ (X = halide), $RuF_{4,\ 5,\text{ or }6}$, $ScX_4$ (X = halide), $WO_3$, and other atoms and molecules with a high electron affinity as known by those skilled in the art. In an embodiment, the support acts as an electron acceptor from the catalyst as it is ionized by accepting the nonradiative resonant energy transfer from atomic hydrogen. Preferably, the support is at least one of conductive and forms stable free radicals. Suitable such supports are conductive polymers. The support may form a negative ion over a macrostructure such as carbon of Li ion batteries that form $C_6$ ions. In another embodiment, the support is a semiconductor, preferably doped to enhance the conductivity. The reaction mixture further comprises free radicals or a source thereof such as O, OH, $O_2$, $O_3$, $H_2O_2$, F, Cl, and NO that may serve as a scavenger for the free radicals formed by the support during catalysis. In an embodiment, the free radical such as

NO may form a complex with the catalyst or source of catalyst such an alkali metal. In another embodiment, the support has unpaired electrons. The support may be paramagnetic such as a rare earth element or compound such as $Er_2O_3$. In an embodiment, the catalyst or source of catalyst such as Li, NaH, BaH, K, Rb, or Cs is impregnated into the electron acceptor such as a support and the other components of the reaction mixture are add. Preferably, the support is AC with intercalated NaH or Na.

d. Oxidation-Reduction Reactions

In an embodiment, the hydrino reaction is activated by an oxidation-reduction reaction. In an exemplary embodiment, the reaction mixture comprises at least two species of the group of a catalyst, a source of hydrogen, an oxidant, a reductant, and a support. The reaction mixture may also comprise a Lewis acid such as Group 13 trihalides, preferably at least one of $AlCl_3$, $BF_3$, $BCl_3$, and $BBr_3$. In certain embodiments, each reaction mixture comprises at least one species chosen from the following genus of components (i) - (iv).

(i) A catalyst chosen from Li, *LiH,* K, *KH*, *NaH,* Rb, RbH, Cs, and CsH.
(ii) A source of hydrogen chosen from $H_2$ gas, a source of $H_2$ gas, or a hydride.
(iii) A support chosen from carbon, carbiodes, and borides such as TiC, $YC_2$, $Ti_3SiC_2$, TiCN, $MgB_2$, SiC, $B_4C$, or WC.
(iv) An oxidant chosen from a metal compound such as one of halides, phosphides, borides, oxides, hydroxides, silicides, nitrides, arsenides, selenides, tellurides, antimonides, carbides, sulfides, hydrides, carbonate, hydrogen carbonate, sulfates, hydrogen sulfates, phosphates, hydrogen phosphates, dihydrogen phosphates, nitrates, nitrites, permanganates, chlorates, perchlorates, chlorites, perchlorites, hypochlorites, bromates, perbromates, bromites, perbromites, iodates, periodates, iodites, periodites, chromates, dichromates, tellurates, selenates, arsenates, silicates, borates, cobalt oxides, tellurium oxides, and other oxyanions such as those of halogens, P, B, Si, N, As, S, Te, Sb, C, S, P, Mn, Cr, Co, and Te wherein the metal preferably comprises a transition metal, Sn, Ga, In, an alkali metal or alkaline earth metal; the oxidant further comprising a lead compound such as a lead halide, a germanium compound such as a halide, oxide, or sulfide such as $GeF_2$, GeCl2, $GeBr_2$, $GeI_2$, GeO, GeP, GeS, $GeI_4$, and $GeCl_4$, fluorocarbon such as *$CF_4$* or $ClCF_3$, chlorocarbon such as $CCl_4$, *$O_2$*, *$MNO_3$*, *$MClO_4$*, *$MO_2$*, *$NF_3$*, *$N_2O$,* NO, $NO_2$, a boron-nitrogen compound such as $B_3N_3H_6$, a sulfur compound such as $SF_6$, *S, $SO_2$*, $SO_3$, $S_2O_5Cl_2$, $F_5SOF$, $M_2S_2O_8$, $S_xX_y$ such as $S_2Cl_2$, $SCl_2$, $S_2Br_2$, or $S_2F_2$, $CS_2$, $SO_xX_y$ such as $SOCl_2$, $SOF_2$, $SO_2F_2$, or $SOBr_2$, $X_xX'_y$ such as $ClF_5$, $X_xX'_yO_z$ such as $ClO_2F$, $ClO_2F_2$, $ClOF_3$, $ClO_3F$, and $ClO_2F_3$, boron-nitrogen compound such as $B_3N_3H_6$, Se, Te, Bi, As, Sb, Bi, $TeX_x$, preferably $TeF_4$, $TeF_6$, $TeO_x$, preferably $TeO_2$ or $TeO_3$, $SeX_x$, preferably $SeF_6$, $SeO_x$, preferably $SeO_2$ or $SeO_3$, a tellurium oxide, halide, or other tellurium compound such as $TeO_2$, $TeO_3$, $Te(OH)_6$, $TeBr_2$, $TeCl_2$, $TeBr_4$, $TeCl_4$, $TeF_4$, $TeI_4$, $TeF_6$, CoTe, or NiTe, a selenium oxide, halide, sulfide, or other selenium compound such as $SeO_2$, $SeO_3$, $Se_2Br_2$, $Se_2Cl_2$, $SeBr_4$, $SeCl_4$, $SeF_4$, $SeF_6$, $SeOBr_2$, $SeOCl_2$, $SeOF_2$, $SeO_2F_2$, $SeS_2$, $Se_2S_6$, $Se_4S_4$, or $Se_6S_2$, P, $P_2O_5$, $P_2S_5$, $P_xX_y$ such as $PF_3$, $PCl_3$, $PBr_3$, $PI_3$, $PF_5$, $PCl_5$, $PBr_4F$, or $PCl_4F$, $PO_xX_y$ such as $POBr_3$, $POI_3$, $POCl_3$ or $POF_3$, $PS_xX_y$ (M is an alkali metal, x, y and z are integers, X and X' are halogen) such as $PSBr_3$, $PSF_3$, $PSCl_3$, a phosphorous-nitrogen compound such as $P_3N_5$, $(Cl_2PN)_3$, $(Cl_2PN)_4$, or $(Br_2PN)_x$, an arsenic oxide, halide, sulfide, selenide, or telluride or other arsenic compound such as AlAs, $As_2I_4$, $As_2Se$, $AS_4S_4$, $AsBr_3$, $AsCl_3$, $AsF_3$, $AsI_3$, $As_2O_3$, $As_2Se_3$, $As_2S_3$, $As_2Te_3$, $AsCl_5$, $AsF_5$, $As_2O_5$, $As_2Se_5$, or $As_2S_5$, an antimony oxide, halide, sulfide, sulfate, selenide, arsenide, or other antimony compound such as SbAs, $SbBr_3$, $SbCl_3$, $SbF_3$, $SbI_3$, $Sb_2O_3$, SbOCl, $Sb_2Se_3$, $Sb_2(SO4)_3$, $Sb_2S_3$, $Sb_2Te_3$, $Sb_2O_4$, $SbCl_5$, $SbF_5$, $SbCl_2F_3$, $Sb_2O_5$, or $Sb_2S_5$, an bismuth oxide, halide, sulfide, selenide, or other bismuth compound such as BiAsO4, $BiBr_3$, $BiCl_3$, $BiF_3$, $BiF_5$, $Bi(OH)_3$, $BiI_3$, $Bi_2O_3$, BiOBr, BiOCl, BiOI, $Bi_2Se_3$, $Bi_2S_3$, $Bi_2Te_3$, or $Bi_2O_4$, $SiCl_4$, $SiBr_4$, a metal oxide, hydroxide, or halide such as a transition metal halide such as $CrCl_3$, $ZnF_2$, $ZnBr_2$, $ZnI_2$, $MnCl_2$, $MnBr_2$, $MnI_2$, $CoBr_2$, $CoI_2$, $CoCl_2$, $NiCl_2$, $NiBr_2$, $NiF_2$, $FeF_2$, $FeCl_2$, $FeBr_2$, $FeCl_3$, $TiF_3$, CuBr, $CuBr_2$, $VF_3$, and $CuCl_2$, a metal halide such as $SnF_2$, $SnCl_2$, $SnBr_2$, $SnI_2$, $SnF_4$, $SnCl_4$, $SnBr_4$, $SnI_4$, InF, InCl, InBr, InI, AgCl, AgI, $AlF_3$, $AlBr_3$, $AlI_3$, $YF_3$, $CdCl_2$, $CdBr_2$, $CdI_2$, $InCl_3$, $ZrCl_4$, $NbF_5$, $TaCl_5$, $MoCl_3$, $MoCl_5$, $NbCl_5$, $AsCl_3$, $TiBr_4$, $SeCl_2$, $SeCl_4$, $InF_3$, $InCl_3$, $PbF_4$, $TeI_4$, $WCl_6$, $OsCl_3$, $GaCl_3$, $PtCl_3$, $ReCl_3$, $RhCl_3$, $RuCl_3$, metal oxide or hydroxide such as $Y_2O_3$, FeO, $Fe_2O_3$, or NbO, NiO, $Ni_2O_3$, SnO, $SnO_2$, $Ag_2O$, AgO, $Ga_2O$, $As_2O_3$, $SeO_2$, $TeO_2$, $In(OH)_3$, $Sn(OH)_2$, $In(OH)_3$, $Ga(OH)_3$, and $Bi(OH)_3$, $CO_2$, $As_2Se_3$, $SF_6$, S, $SbF_3$, $CF_4$, *$NF_3$*, a permanganate such as $KMnO_4$ and $NaMnO_4$, $P_2O_5$, a nitrate such as $LiNO_3$, $NaNO_3$ and $KNO_3$, and a boron halide such as $BBr_3$ and $BI_3$, a group 13 halide, preferably an indium halide such as $InBr_2$, $InCl_2$, and $InI_3$, a silver halide, preferably AgCl or AgI, a lead halide, a cadmium halide, a zirconoium halide, preferably a transition metal oxide, sulfide, or halide (Sc, Ti, V, Cr, Mn, Fe, Co, Ni, Cu, or Zn with F, Cl, Br or I), a second or third transition series halide, preferably $YF_3$, oxide, sulfide preferably $Y_2S_3$, or hydroxide, preferably those of Y, Zr, Nb, Mo, Tc, Ag, Cd, Hf, Ta, W, Os, such as $NbX_3$, $NbX_5$, or $TaX_5$ in the case of halides, a metal sulfide such as $Li_2S$, ZnS, FeS, NiS, MnS, $Cu_2S$, CuS, and SnS, an alkaline earth halide such as $BaBr_2$, $BaCl_2$, $BaI_2$, $SrBr_2$, $SrI_2$, $CaBr_2$, $CaI_2$, $MgBr_2$, or $MgI_2$, a rare earth halide such as $EuBr_3$, $LaF_3$, $LaBr_3$, $CeBr_3$, $GdF_3$, $GdBr_3$, preferably in the II state such as one of $CeI_2$, $EuF_2$, EuCl2, $EuBr_2$, $EuI_2$, $DyI_2$, $NdI_2$, $SmI_2$, $YbI_2$, and $TmI_2$, a metal boride such as a europium

boride, an $MB_2$ boride such as $CrB_2$, $TiB_2$, $MgB_2$, $ZrB_2$, and $GdB_2$ an alkali halide such as LiCl, RbCl, or CsI, and a metal phosphide, an alkaline earth phosphide such as $Ca_3P_2$, a noble metal halide, oxide, sulfide such as $PtCl_2$, $PtBr_2$, $PtI_2$, $PtCl_4$, $PdCl_2$, $PbBr_2$, and $PbI_2$, a rare earth sulfide such as CeS, other suitable rare earths are those of La and Gd, a metal and an anion such as $Na_2TeO_4$, $Na_2TeO_3$, $Co(CN)_2$, CoSb, CoAs, $Co_2P$, CoO, CoSe, CoTe, NiSb, NiAs, NiSe, $Ni_2Si$, MgSe, a rare earth telluride such as EuTe, a rare earth selenide such as EuSe, a rare earth nitride such as EuN, a metal nitride such as AlN, and GdN, and an alkaline earth nitride such as $Mg_3N_2$, a compound containing at least two atoms from the group of oxygen and different halogen atoms such as $F_2O$, $Cl_2O$, $ClO_2$, $Cl_2O_6$, $Cl_2O_7$, ClF, $ClF_3$, $ClOF_3$, $ClF_5$, $ClO_2F$, $ClO_2F_3$, $ClO_3F$, $BrF_3$, BrF5, $I_2O_5$, IBr, ICl, $ICl_3$, IF, $IF_3$, $IF_5$, $IF_7$, and a metal second or third transition series halide such as $OsF_6$, $PtF_6$, or $IrF_6$, an alkali metal compound such as a halide, oxide or sulfide, and a compound that can form a metal upon reduction such as an alkali, alkaline earth, transition, rare earth, Group 13, preferably In, and Group 14, preferably Sn, a metal hydride such as a rare earth hydride, alkaline earth hydride, or alkali hydride wherein the catalyst or source of catalyst may be a metal such as an alkali metal when the oxidant is a hydride, preferably a metal hydride. Suitable oxidants are metal halides, sulfides, oxides, hydroxides, selenides, nitrides, and arsenides, and phosphides such as alkaline earth halides such as $BaBr_2$, $BaCl_2$, $BaI_2$, $CaBr_2$, $MgBr_2$, or $MgI_2$, a rare earth halide such as $EuBr_2$, $EuBr_3$, $EuF_3$, $LaF_3$, $GdF_3$ $GdBr_3$, $LaF_3$, $LaBr_3$, $CeBr_3$, $CeI_2$, $PrI_2$, $GdI_2$, and $LaI_2$, a second or third series transition metal halide such as $YF_3$, an alkaline earth phosphide, nitride, or arsenide such as $Ca_3P_2$, $Mg_3N_2$, and $Mg_3As_2$, a metal boride such as $CrB_2$ or $TiB_2$, an alkali halide such as LiCl, RbCl, or CsI, a metal sulfide such as $Li_2S$, ZnS, $Y_2S_3$, FeS, MnS, $Cu_2S$, CuS, and $Sb_2S_5$, a metal phosphide such as $Ca_3P_2$, a transition metal halide such as $CrCl_3$, $ZnF_2$, $ZnBr_2$, $ZnI_2$, $MnCl_2$, $MnBr_2$, $MnI_2$, $CoBr_2$, $CoI_2$, $CoCl_2$, $NiBr_2$, $NiF_2$, $FeF_2$, $FeCl_2$, $FeBr_2$, $TiF_3$, CuBr, $VF_3$, and $CuCl_2$, a metal halide such as $SnBr_2$, $SnI_2$, InF, InCl, InBr, InI, AgCl, AgI, $AlI_3$, $YF_3$, $CdCl_2$, $CdBr_2$, $CdI_2$, $InCl_3$, $ZrCl_4$, $NbF_5$, $TaCl_5$, $MoCl_3$, $MoCl_5$, $NbCl_5$, $AsCl_3$, $TiBr_4$, $SeCl_2$, $SeCl_4$, $InF_3$, $PbF_4$, and $TeI_4$, metal oxide or hydroxide such as $Y_2O_3$, FeO, NbO, $In(OH)_3$, $As_2O_3$, $SeO_2$, $TeO_2$, $BI_3$, $CO_2$, $As_2Se_3$, metal nitride such a $Mg_3N_2$, or AlN, metal phosphide such as $Ca_3P_2$, $SF_6$, S, $SbF_3$, $CF_4$, $NF_3$, $KMnO_4$, $NaMnO_4$, $P_2O_5$, $LiNO_3$, $NaNO_3$, $KNO_3$, and a metal boride such as$BBr_3$. Suitable oxidants include at least one of the list of $BaBr_2$, $BaCl_2$, $EuBr_2$, $EuF_3$, $YF_3$, $CrB_2$, $TiB_2$, LiCl, RbCl, CsI, $Li_2S$, ZnS, $Y_2S_3$, $Ca_3P_2$, $MnI_2$, $CoI_2$, $NiBr_2$, $ZnBr_2$, $FeBr_2$, $SnI_2$, InCl, AgCl, $Y_2O_3$, $TeO_2$, $CO_2$, $SF_6$, S, $CF_4$, $NaMnO_4$, $P_2O_5$, $LiNO_3$. Suitable oxidants include at least one of the list of $EuBr_2$, $BaBr_2$, $CrB_2$, $MnI_2$, and AgCl. Suitable sulfide oxidants comprise at least one $Li_2S$, ZnS, and $Y_2S_3$. In certain embodiments, the oxide oxidant is $Y_2O_3$.

In additional embodiments, each reaction mixture comprises at least one species chosen from the following genus of components (i) - (iii) described above, and further comprises (iv) at least one reductant chosen from a metal such as an alkali, alkaline earth, transition, second and third series transition, and rare earth metals and aluminum. Preferably the reductant is one from the group of Al, Mg, $MgH_2$, Si, La, B, Zr, and Ti powders, and $H_2$.

In further embodiments, each reaction mixture comprises at least one species chosen from the following genus of components (i) - (iv) described above, and further comprises (v) a support, such as a conducting support chosen from AC, 1% Pt or Pd on carbon (Pt/C, Pd/C), and carbide, preferably TiC or WC.

The reactants may be in any molar ratio, but in certain embodiments they are in about equal molar ratios.

A suitable reaction system comprising (i) a catalyst or a source of catalyst, (ii) a source of hydrogen, (iii) an oxidant, (iv) a reductant, and (v) a support comprises NaH, BaH, or KH as the catalyst or source of catalyst and source of H, one of $BaBr_2$, $BaCl_2$, $MgBr_2$, $MgI_2$, $CaBr_2$, $EuBr_2$, $EuF_3$, $YF_3$, $CrB_2$, $TiB_2$, LiCl, RbCl, CsI, $Li_2S$, ZnS, $Y_2S_3$, $Ca_3P_2$, $MnI_2$, $CoI_2$, $NiBr_2$, $ZnBr_2$, $FeBr_2$, $SnI_2$, InCl, AgCl, $Y_2O_3$, $TeO_2$, $CO_2$, $SF_6$, S, $CF_4$, $NaMnO_4$, $P_2O_5$, $LiNO_3$, as the oxidant, Mg or $MgH_2$ as the reductant wherein $MgH_2$ may also serve as the source of H, and AC, TiC, or WC as the support. In the case that a tin halide is the oxidant, Sn product may serve as at least one of the reductant and conductive support in the catalysis mechanism.

In another suitable reaction system comprising (i) a catalyst or a source of catalyst, (ii) a source of hydrogen, (iii) an oxidant, and (iv) a support comprises NaH, BaH, or KH as the catalyst or source of catalyst and source of H, one of $EuBr_2$, $BaBr_2$, $CrB_2$, $MnI_2$, and AgCl as the oxidant, and AC, TiC, or WC as the support. The reactants may be in any molar ratio, but preferably they are in about equal molar ratios.

The catalyst, the source of hydrogen, the oxidant, the reductant, and the support may be in any desired molar ratio. In an embodiment having the reactants, the catalyst comprising KH or NaH, the oxidant comprising at least one of $CrB_2$, $AgCl_2$, and a metal halide from the group of an alkaline earth, transition metal, or rare earth halide, preferably a bromide or iodide, such as $EuBr_2$, $BaBr_2$, and $MnI_2$, the reductant comprising Mg or $MgH_2$, and the support comprising AC, TiC, or WC, the molar ratios are about the same. Rare earth halides may be formed by the direct reaction of the corresponding halogen with the metal or the hydrogen halide such as HBr. The dihalide may be formed from the trihalide by $H_2$ reduction.

Additional oxidants are those that have a high dipole moment or form an intermediate with a high dipole moment. Preferably, the species with a high dipole moment readily accepts electrons from the catalyst during the catalysis reaction. The species may have a high electron affinity. In an embodiment, electron acceptors have a half-filled or about half-filled electron shell such as Sn, Mn, and Gd or Eu compounds having half-filled $sp^3$, 3d, and 4f shells, respectively. Representative oxidants of the latter type are metals corresponding to $LaF_3$, $LaBr_3$, $GdF_3$, $GdCl_3$, $GdBr_3$, $EuBr_2$, $EuI_2$, $EuCl_2$, $EuF_2$, $EuBr_3$, $EuI_3$, $EuCl_3$, and $EuF_3$. In an embodiment, the oxidant comprises a compound of a nonmetal such as at least one of P, S, Si, and C that preferably has a high oxidation state and further comprises atoms with a high electronegativity such as at least one of F, Cl, or O. In another embodiment, the oxidant comprises a compound of a metal such as at least one of Sn and Fe that has a low oxidation state such as II and further comprises atoms with a low electronegativity such as at least one of Br or I. A singly-negatively charged ion such as $MnO_4^-$, $ClO_4^-$, or $NO_3^-$ is favored over a doubly-negatively charged one such as $CO_3^{2-}$ or $SO_4^{2-}$. In an embodiment, the oxidant comprises a compound such as a metal halide corresponding to a metal with a low melting point such that it may be melted as a reaction product and removed from the cell. Suitable oxidants of low-melting-point metals are halides of In, Ga, Ag, and Sn. The reactants may be in any molar ratio, but preferably they are in about equal molar ratios.

In an embodiment, the reaction mixture comprises (i) a catalyst or a source of catalyst comprising a metal or a hydride from the Group I elements, (ii) a source of hydrogen such as $H_2$ gas or a source of $H_2$ gas, or a hydride, (iii) an oxidant comprising an atom or ion or a compound comprising at least one of the elements from Groups 13, 14, 15, 16, and 17; preferably chosen from the group of F, Cl, Br, I, B, C, N, O, Al, Si, P, S, Se, and Te, (iv) a reductant comprising an element or hydride, preferably one or more element or hydride chosen Mg, $MgH_2$, Al, Si, B, Zr, and a rare earth metal such as La, and (v) a support that is preferably conductive and preferably does not react to form another compound with other species of the reaction mixture. Suitable supports preferably comprise carbon such as AC, graphene, carbon impregnated with a metal such as Pt or Pd/C, and carbide, preferably TiC or WC.

In an embodiment, the reaction mixture comprises (i) a catalyst or a source of catalyst comprising a metal or a hydride from the Group I elements, (ii) a source of hydrogen such as $H_2$ gas or a source of $H_2$ gas, or a hydride, (iii) an oxidant comprising a halide, oxide, or sulfide compound, preferably a metal halide, oxide, or sulfide, more preferably a halide of the elements from Groups IA, IIA, 3d, 4d, 5d, 6d, 7d, 8d, 9d, 10d, 11d, 12d, and lanthanides, and most preferably a transition metal halide or lanthanide halide, (iv) a reductant comprising an element or hydride, preferably one or more element or hydride chosen from Mg, $MgH_2$, Al, Si, B, Zr, and a rare earth metal such as La, and (v) a support that is preferably conductive and preferably does not react to form another compound with other species of the reaction mixture. Suitable supports preferably comprise carbon such as AC, carbon impregnated with a metal such as Pt or Pd/C, and carbide, preferably TiC or WC.

In an embodiment, the reaction mixture comprises a catalyst or a source of catalyst and hydrogen or a source of hydrogen and may further comprise other species such as a reductant, a support, and an oxidant wherein the mixture comprises at least two species selected from $BaBr_2$, $BaCl_2$, $TiB_2$, $CrB_2$, LiCl, RbCl, LiBr, KI, $MgI_2$, $Ca_3P_2$, $Mg_3As_2$, $Mg_3N_2$, AlN, $Ni_2Si$, $Co_2P$, $YF_3$, $YCl_3$, $YI_3$, NiB, $CeBr_3$, MgO,$Y_2S_3$, $Li_2S$, $GdF_3$, $GdBr_3$, $LaF_3$, $AlI_3$, $Y_2O_3$, $EuBr_3$, $EuF_3$, $Cu_2S$, MnS, ZnS, $TeO_2$, $P_2O_5$, $SnI_2$, $SnBr_2$, $CoI_2$, $FeBr_2$, $FeCl_2$, $EuBr_2$, $MnI_2$, InCl, AgCl, AgF, $NiBr_2$, $ZnBr_2$, $CuCl_2$, $InF_3$, alkali metals, alkali hydrides, alkali halides such as LiBr, KI, RbCl, alkaline earth metals, alkaline earth hydrides, alkaline earth halides such as $BaF_2$, $BaBr_2$, $BaCl_2$, $BaI_2$, $CaBr_2$, $SrI_2$, $SrBr_2$, $MgBr_2$, and $MgI_2$, AC, carbides, borides, transition metals, rare earth metals, Ga, In, Sn, Al, Si, Ti, B, Zr, and La.

### e. Exchange Reactions. Thermally Reversible Reactions, and Regeneration

In an embodiment, the oxidant and at least one of the reductant, the source of catalyst, and the catalyst may undergo a reversible reaction. In an embodiment, the oxidant is a halide, preferably a metal halide, more preferably at least one of a transition metal, tin, indium, alkali metal, alkaline earth metal, and rare earth halide, most preferably a rare earth halide. The reversible reaction is preferably a halide exchange reaction. Preferably, the energy of the reaction is low such that the halide may be reversibly exchanged between the oxidant and the at least one of the reductant, source of catalyst, and catalyst at a temperature between ambient and 3000 °C, preferably between ambient and 1000 °C. The reaction equilibrium may be shifted to drive the hydrino reaction. The shift may be by a temperature change or reaction concentration or ratio change. The reaction may be sustained by addition of hydrogen. In a representative reaction, the exchange is

$$n_1 M_{ox} X_x + n_2 M_{cat/red} \square\ n_1 M_{ox} + n_2 M_{cat/red} X_y \qquad (62)$$

where $n_1$, $n_2$, x, and y are integers, X is a halide, and $M_{ox}$ is the metal of the oxidant, $M_{red/cat}$ is the metal of the at least one of the reductant, source of catalyst, and catalyst. In an embodiment, one or more of the reactants is a hydride and the reaction further involves a reversible hydride exchange in addition to a halide exchange. The reversible reaction may be controlled by controlling the hydrogen pressure in addition to other reaction conditions such as the temperature

and concentration of reactants. An exemplary reaction is

$$n_1M_{ox}X_x + n_2M_{cat/red}H\square\ n_1M_{ox}H + n_2M_{cat/red}X_y \qquad (63)$$

. In an embodiment, one or more of the reactants is a hydride, and the reaction involves a reversible hydride exchange. The reversible reaction may be controlled by controlling the temperature in addition to other reaction conditions such as the hydrogen pressure and concentration of reactants. An exemplary reaction is

$$n_1M_{cat}H_x + n_2M_{red1} + n_3M_{red2}\square\ n_3M_{cat} + n_4M_{red1}H_y + n_5M_{red2}H_z \qquad (64)$$

. where $n_1$, $n_2$, $n_3$, $n_4$, $n_5$, x, y, and z are integers including 0, $M_{cat}$ is the metal of the source of catalyst, and catalyst and $M_{red}$ is the metal of one of the reductants. The reaction mixture may comprise a catalyst or a source of catalyst, hydrogen or a source of hydrogen, a support, and at least one or more of a reductant such as an alkaline earth metal, an alkali metal such as Li, and another hydride such as an alkaline earth hydride or alkali hydride. In an embodiment comprising a catalyst or source of catalyst comprising at least an alkali metal such as KH, BaH, or NaH, regeneration is achieved by evaporating the alkali metal and hydriding it to form an initial metal hydride. In an embodiment, the catalyst or source of catalyst and source of hydrogen comprises NaH or KH, and the metal reactant for hydride exchange comprises Li. Then, the product LiH is regenerated by thermal decomposition. Since the vapor pressure of Na or K is much higher than that of Li, the former may be selectively evaporated and rehydrided and added back to regenerate the reaction mixture. In another embodiment, the reductant or metal for hydride exchange may comprise two alkaline earth metals such as Mg and Ca. The regeneration reaction may further comprise the thermal decomposition of another metal hydride under vacuum wherein the hydride is a reaction product such as $MgH_2$ or $CaH_2$. In an embodiment, the hydride is that of an intermetalic or is a mixture of hydrides such as one comprising H and at least two of Na, Ca, and Mg. The mixed hydride may have a lower decomposition temperature than the most stable single-metal hydride. In an embodiment, the hydride lowers the $H_2$ pressure to prevent hydrogen embrittlement of the reactor system. The support may comprise carbide such as TiC. The reaction mixture may comprise NaH TiC Mg and Ca. The alkaline earth hydride product such as $CaH_2$ may be decomposed under vacuum at elevated temperature such as >700 °C. The alkali metal such as Na may be evaporated and rehydrided. The other alkaline earth metal such as magnesium may also be evaporated and condensed separately. The reactants may be recombined to form the initial reaction mixture. The reagents may be in any molar ratios. In a further embodiment, the evaporated metal such as Na is returned by a wick or capillary structure. The wick may be that of a heat pipe. Alternatively, the condensed metal may fall back to the reactants by gravity. Hydrogen may be supplied to form NaH. In another embodiment, the reductant or metal for hydride exchange may comprise an alkali metal or a transition metal. The reactants may further comprise a halide such as an alkali halide. In an embodiment, a compound such as a halide may serve as the support. The compound may be a metal compound such as a halide. The metal compound may be reduced to the corresponding conductive metal to comprise a support. Suitable reaction mixtures are NaH TiC Mg Li, NaH TiC $MgH_2$ Li, NaH TiC Li, NaH Li, NaH TiC Mg LiH, NaH TiC $MgH_2$ LiH, NaH TiC LiH, NaH LiH, NaH TiC, NaH TiC Mg LiBr, NaH TiC Mg LiCl, NaH Mg LiBr, NaH Mg LiCl, NaH Mg Li, NaH $MgH_2$ LiBr, NaH $MgH_2$ LiCl, NaH Mg LiH, KH TiC Mg Li, KH TiC $MgH_2$ Li, KH TiC Li, KH Li, KH TiC Mg LiH, KH TiC $MgH_2$ LiH, KH TiC LiH, KH LiH, KH TiC, KH TiC Mg LiBr, KH TiC Mg LiCl, KH Mg LiBr, KH Mg LiCl, KH Mg Li, KH $MgH_2$ LiBr, KH $MgH_2$ LiCl, and KH Mg LiH. Other suitable reaction mixtures are NaH $MgH_2$ TiC, NaH $MgH_2$ TiC Ca, Na $MgH_2$ TiC, Na $MgH_2$ TiC Ca, KH $MgH_2$ TiC, KH $MgH_2$ TiC Ca, K $MgH_2$ TiC, and K $MgH_2$ TiC Ca. Other suitable reaction mixtures comprise NaH Mg, NaH Mg TiC, and NaH Mg AC. AC is a preferred support for NaH + Mg since neither Na or Mg intercalates to any extent and the surface area of AC is very large. The reaction mixture may comprise a mixture of hydrides in a fixed reaction volume to establish a desired hydrogen pressure at a selected temperature. The hydride mixture may comprise an alkaline earth metal and its hydride such as Mg and $MgH_2$. In addition, hydrogen gas may be added. A suitable pressure range is 1 atm to 200 atm. A suitable reaction mixture is one or more of the group of KH Mg TiC + $H_2$, KH $MgH_2$ TiC + $H_2$, KH Mg $MgH_2$ TiC + $H_2$, NaH Mg TiC + $H_2$, NaH $MgH_2$ TiC + $H_2$, and NaH Mg $MgH_2$ TiC + $H_2$. Other suitable supports in addition to TiC are $YC_2$, $Ti_3SiC_2$, TiCN, $MgB_2$, SiC, $B_4C$, or WC.

In an embodiment, the reaction mixture may comprise at least two of a catalyst or a source of catalyst and a source of hydrogen such as an alkali metal hydride, a reductant such as an alkaline earth metal, Li or LiH, and a getter or support such as an alkali metal halide. The nonconductive support may be converted to a conductive support such as a metal during the reaction. The reaction mixture may comprise NaH Mg and LiCl or LiBr. Then, conductive Li may form during the reaction. An exemplary experimental results is

031010WFCKA2#1626; 1.5" LDC; 8.0gNaH#8+8.0g Mg#6+3.4g LiCl#2+20.0g TiC #105; Tmax: 575 °C; Ein: 284 kJ; dE: 12 kJ; Theoretical Energy: 2.9 kJ; Energy Gain: 4.2.

In an embodiment, the reaction mixture such as MH (M is an alkali metal), a reductant such as Mg, a support such as TiC or WC, and an oxidant such as MX (M is an alkali metal, X is a halide) or $MX_2$ (M is an alkaline earth metal, X is a halide), the product comprises a metal hydrino hydride such as MH(/p). The hydrino hydride may be converted

to molecular hydrino by stiochiometric addition of an acid such as HCl that may be a pure gas. The product metal halide may be regenerated to metal hydride by molten electrolysis followed by hydriding the metal.

In an embodiment, the reaction mixture comprises a halide that is a source of catalyst such as an alkali halide and a reductant such as a rare earth metal and a source of hydrogen such as a hydride or $H_2$. Suitable reacts are Mg + RbF and an H source and Mg + LiCl and an H source. The reaction proceeds with the formation of $Rb^+$ and Li catalyst, respectively.

A suitable reaction temperature range is one at which the hydrino reaction occurs. The temperature may be in the range at which at least one component of the reaction mixture melts, undergoes a phase change, undergoes a chemical change such as decomposition, or at least two components of the mixture react. The reaction temperature may within the range of 30 °C to 1200 °C. A suitable temperature range is 300 °C to 900 °C. The reaction temperature range for a reaction mixture comprising at least NaH may be greater than 475 °C. The reaction temperature for a reaction mixture comprising a metal halide or hydride may be at or above the regeneration reaction temperature. A suitable temperature range for the reaction mixture comprising an alkali, alkaline earth, or rare earth halide and a catalyst or source of catalyst comprising an alkali metal or alkali metal hydride is 650 °C to 850 °C. For a reaction comprising a mixture that forms an alkali metal carbon as a product such as $MC_x$ (M is an alkali metal), the temperature range may at the formation temperature of the alkali metal carbon or above. The reaction may be run at a temperature at which $MC_x$ undergoes regeneration to M and C under reduced pressure.

In an embodiment, the volatile species is a metal such as an alkali metal. Suitable metals comprise Na and K. During regeneration, the metal may condense in a cooler section of the system such as a vertical tube that may comprise a side arm to the reactor. The metal may add to a reservoir of metal. The reservoir may have a hydrogen supply feed below the surface to form the metal hydride such as NaH or KH wherein the metal column in the tube maintains the hydrogen in proximity to the supply. The metal hydride may be formed inside of a capillary system such as the capillary structure of a heat pipe. The capillary may selectively wick the metal hydride into a section of the reactor having the reaction mixture such that the metal hydride is added to the reaction mixture. The capillary may be selective for ionic over metallic liquids. The hydrogen in the wick may be at a sufficient pressure to maintain the metal hydride as a liquid.

The reaction mixture may comprise at least two of a catalyst or source of catalyst, hydrogen or a source of hydrogen, a support, a reductant, and an oxidant. In an embodiment, an intermetalic may serve as at least one of a solvent, a support, and a reductant. The intermetalic may comprise at least two alkaline earth metals such as a mixture of Mg and Ca or a mixture of an alkaline earth metal such as Mg and a transition metal such Ni. The intermetalic may serve as a solvent for at least one of the catalyst or source of catalyst and hydrogen or source of hydrogen. NaH or KH may be solublized by the solvent. The reaction mixture may comprise NaH Mg Ca and a support such as TiC. The support may be an oxidant such as carbon or carbide. In an embodiment, the solvent such as an alkaline earth metal such as Mg interacts with a catalyst or source of catalyst such as an alkli metal hydride such as NaH ionic compound to form NaH molecules to permit the further reaction to form hydrinos. The cell may be operated at this temperature with $H_2$ periodically added to maintain the heat production.

In an embodiment, the oxidant such as an alkali metal halide, alkaline earth metal halide, or a rare earth halide, preferably LiCl, LiBr, RbCl, $MgF_2$, $BaCl_2$, $CaBr_2$, $SrCl_2$, $BaBr_2$, $BaI_2$, $EuX_2$ or $GdX_3$ wherein X is halide or sulfide, most preferably $EuBr_2$, is reacted with the catalyst or source of catalyst, preferably NaH or KH, and optionally a reductant, preferably Mg or $MgH_2$, to form $M_{ox}$ or $M_{ox}H_2$ and the halide or sulfide of the catalyst such as NaX or KX. The rare earth halide may be regenerated by selectively removing the catalyst or source of catalyst and optionally the reductant. In an embodiment, $M_{ox}H_2$ may be thermally decomposed and the hydrogen gas removed by methods such as pumping. The halide exchange (Eqs. (62-63)) forms the metal of the catalyst. The metal may be removed as a molten liquid or as an evaporated or sublimed gas leaving the metal halide such as the alkaline earth or rare earth halide. The liquid may be removed, for example, by methods such as centrifugation or by a pressurized inert gas stream. The catalyst or source of catalyst may be rehydrided where appropriate to regenerate the original reactants that are recombined into the originally mixture with the rare earth halide and the support. In the case that Mg or $MgH_2$ is used as the reductant, Mg may be first removed by forming the hydride with $H_2$ addition, melting the hydride, and removing the liquid. In an embodiment wherein X=F, $MgF_2$ product may be converted to $MgH_2$ by F exchange with the rare earth such as $EuH_2$ wherein molten $MgH_2$ is continuously removed. The reaction may be carried out under high pressure $H_2$ to favor the formation and selective removal of $MgH_2$. The reductant may be rehydrided and added to the other regenerated reactants to form the original reaction mixture. In another embodiment, the exchange reaction is between metal sulfides or oxides of the oxidant and the at least one of the reductant, source of catalyst, and catalyst. An exemplary system of each type is 1.66g KH + 1g Mg + 2.74g $Y_2S_3$ + 4g AC and 1g NaH + 1g Mg + 2.26g $Y_2O_3$ + 4g AC.

The selective removal of the catalyst, source of catalyst, or the reductant may be continuous wherein the catalyst, source of catalyst, or the reductant may be recycled or regenerated at least partially within the reactor. The reactor may further comprise a still or reflux component such as still 34 of FIGURE 4 to remove the catalyst, source of catalyst, or the reductant and return it to the cell. Optionally, it may be hydrided or further reacted and this product may be returned. The cell may be filled with a mixture of an inert gas and $H_2$. The gas mixture may comprise a gas heavier

than $H_2$ such that $H_2$ is buoyed to the top of the reactor. The gas may be at least one of Ne, Ar, Ne, Kr, and Xe. Alternatively, the gas may be an alkali metal or hydride such as K, $K_2$, KH or NaH. The gas may be formed by operating the cell at a high temperature such as about the boiling point of the metal. The section having a high concentration of $H_2$ may be cooler such that a metal vapor condenses in this region. The metal vapor may react with $H_2$ to from the metal hydride, and the hydride may be returned to the cell. The hydride may be returned by an alternative pathway than the one that resulted in the transport of the metal. Suitable metals are catalysts or sources of catalyst. The metal may be an alkali metal and the hydride may be an alkali metal hydride such as Na or K and NaH or KH, respectively. LiH is stable to 900 °C and melts at 688.7 °C; thus, it can be added back to the reactor without thermal decomposition at a corresponding regeneration temperature less than the LiH decomposition temperature.

The reaction temperature may be cycled between two extremes to continuously recycle the reactants by an equilibrium shift. In an embodiment, the system heat exchanger has the capacity to rapidly change the cell temperature between a high and low value to shift the equilibrium back and forth to propagate the hydrino reaction.

In another embodiment, the reactants may be transported into a hot reaction zone by a mechanical system such as a conveyor or auger. The heat may be extracted by a heat exchanger and supplied to a load such as a turbine and generator. The product may be continuously regenerated or regenerated in batch as it is moved in a cycle back to the hot reaction zone. The regeneration may be thermally. The regeneration may be by evaporating a metal such as one comprising the catalysts or source of catalyst. The removed metal may be hydrided and combined with the balance of the reaction mixture before entering the hot reaction zone. The combining may further comprise the step of mixing.

The regeneration reaction may comprise a catalytic reaction with an added species such as hydrogen. In an embodiment, the source of catalyst and H is KH and the oxidant is $EuBr_2$. The thermally driven regeneration reaction may be

$$2KBr + Eu \text{ to } EuBr_2 + 2K \qquad (65)$$

or

$$2KBr + EuH_2 \text{ to } EuBr_2 + 2KH. \qquad (66)$$

Alternatively, $H_2$ may serve as a regeneration catalyst of the catalyst or source of catalyst and oxidant such as KH and $EuBr_2$, respectively:

$$3KBr + 1/2H_2 + EuH_2 \text{ to } EuBr_3 + 3KH. \qquad (67)$$

Then, $EuBr_2$ is formed from $EuBr_3$ by $H_2$ reduction. A possible route is

$$EuBr_3 + 1/2H_2 \text{ to } EuBr_2 + HBr. \qquad (68)$$

The HBr may be recycled:

$$HBr + KH \text{ to } KBr + H_2 \qquad (69)$$

with the net reaction being:

$$2KBr + EuH_2 \text{ to } EuBr_2 + 2KH. \qquad (70)$$

The rate of the thermally driven regeneration reaction can be increased by using a different pathway with a lower energy known to those skilled in the art:

$$2KBr + H_2 + Eu \text{ to } EuBr_2 + 2KH \qquad (71)$$

$$3KBr + 3/2H_2 + Eu \text{ to } EuBr_3 + 3KH \text{ or} \qquad (72)$$

$$EuBr_3 + 1/2H_2 \text{ to } EuBr_2 + HBr. \qquad (73)$$

The reaction given by Eq. (71) is possible since an equilibrium exists between a metal and the corresponding hydride in the presence of $H_2$ such as

$$Eu + H_2 \square\ EuH_2. \qquad (74)$$

The reaction pathway may involve intermediate steps of lower energy known to those skilled in the art such as

$$2KBr + Mg + H_2 \text{ to } MgBr_2 + 2KH \text{ and} \quad (75)$$

$$MgBr_2 + Eu + H_2 \text{ to } EuBr_2 + MgH_2 \quad (76)$$

The reaction mixture may comprise a support such as support such as TiC, $YC_2$, $B_4C$, NbC, and Si nanopowder.

The KH or K metal may be removed as a molten liquid or as an evaporated or sublimed gas leaving the metal halide such as the alkaline earth or rare earth halide. The liquid may be removed by methods such as centrifugation or by a pressurized inert gas stream. In other embodiments, another catalyst or catalyst source such as NaH, LiH, RbH, CsH, BaH, Na, Li, Rb, Cs may substitute for KH or K, and the oxidant may comprise another metal halide such as another rare earth halide or an alkaline earth halide, preferably $MgF_2$, $MgCl_2$, $CaBr_2$, $CaF_2$, $SrCl_2$, $SrI_2$, $BaBr_2$, or $BaI_2$.

In the case that the reactant-product energy gap is small, the reactants may be regenerated thermally. For example, it is thermodynamically favorable to thermally reverse the reaction given by

$$EuBr_2 + 2KH \rightarrow 2KBr + EuH_2 \; \Delta H = -136.55 \; kJ \quad (77)$$

by several pathways to achieve the following:

$$2KBr + Eu \rightarrow EuBr_2 + 2K \quad (78)$$

The reaction can be driven more to completion by dynamically removing potassium. The reaction given by Eq. (78) was confirmed by reacting a two-to-one molar mixture of *KBr* and *Eu* (3.6g (30 mmoles) of *KBr* and 2.3g (15 mmoles) of *Eu*) in an alumina boat wrapped in nickel foil in a 1 inch OD quartz tube at 1050 °C for 4 hours under an argon atmosphere. Potassium metal was evaporated from the hot zone, and the majority product identified by XRD was $EuBr_2$. In another embodiment, $EuBr_2$ was formed according to the reaction given by Eq. (78) by reacting about a two-to-one molar mixture of *KBr* and *Eu* (4.1g (34.5 mmoles) of *KBr* and 2.1g (13.8 mmoles) of *Eu*) wrapped in stainless steel foil crucible in a 0.75 inch OD stainless steel tube open at one end in a 1 inch OD vacuum-tight quartz tube. The reaction was run at 850 °C for one hour under vacuum. Potassium metal was evaporated from the hot zone, and the majority product identified by XRD was $EuBr_2$. In an embodiment, a reaction mixture such as a salt mixture is used to lower the melting point of the regeneration reactants. A suitable mixture is a eutectic salt mixture of a plurality of cations of a plurality of catalysts such as alkali meal cations. In other embodiments, mixtures of metals, hydrides, or other compounds or elements are used to lower the melting point of the regeneration reactants.

The energy balance from non-hydrino chemistry of this hydrino catalyst system is essentially energy neutral such that with each power and regeneration cycle maintained concurrently to constitute a continuous power source, 900 $kJ / mole \; EuBr_2$ are released per cycle in an experimentally measured case. The observed power density was about 10 $W/cm^3$. The temperature limit is that set by the failure of the vessel material. The net fuel balance of the hydrino reaction is $50MJ / mole \; H_2$ consumed to form $H_2$ (1/4).

In an embodiment, the oxidant is $EuX_2$ (X is a halide) hydrate wherein the water may be present as a minority species such that its stoichiometry is less than one. The oxidant may further comprise europium, halide, and oxide such as EuOX, preferably EuOBr or a mixture with $EuX_2$. In another embodiment, the oxidant is $EuX_2$ such as $EuBr_2$ and the support is carbide such as $YC_2$ or TiC.

In an embodiment, the metal catalyst or source of catalyst such as K or Na is evaporated from a hot zone as the exchange reaction such as the halide exchange reaction occurs with the regeneration of the oxidant such as $EuBr_2$. The catalyst metal may be condensed in a condensing chamber having a valve such as a gate valve or sluice valve that when closed isolates the chamber from the main reactor chamber. The catalyst metal may be hydrided by adding a source of hydrogen such as hydrogen gas. Then, the hydride may be added back to the reaction mixture. In an embodiment, the valve is opened and the hydride heated to the melting point such that it flows back into the reaction chamber. Preferably the condensing chamber is above the main reaction chamber such that the flow is at least partially by gravity. The hydride may also be added back mechanically. Other suitable reactions systems that are regenerated thermally comprise at least NaH, BaH, or KH and an alkali halide such as LiBr, LiCl, Ki, and RbCl or alkaline earth halide such as $MgF_2$, $MgCl_2$, $CaBr_2$, $CaF_2$, $SrCl_2$, $SrI_2$, $BaCl_2$, $BaBr_2$, or $BaI_2$.

The reaction mixture may comprise an intermetalic such as $Mg_2Ba$ as the reductant or as a support and may further comprise mixtures of oxidants such as mixtures of alkaline earth halides alone such as $MgF_2$ + $MgCl_2$ or with alkali halides such as KF + $MgF_2$ or $KMgF_3$. These reactants may be regenerated thermally from the products of the reaction mixture. During regeneration of $MgF_2$ + $MgCl_2$, $MgCl_2$ may be dynamically removed as a product of an exchange reaction of Cl for F. The removal may be by evaporation, sublimation, or precipitation from a liquid mixture in at least

the latter case.

In another embodiment, the reactant-product energy gap is larger and the reactants may still be regenerated thermally by removing at least one species. For example, at temperatures less than 1000 °C it is thermodynamically unfavorable to thermally reverse the reaction given by

$$MnI_2 + 2KH + Mg \rightarrow 2KI + Mn + MgH_2 \ \Delta H = -373.0\ kJ \qquad (79)$$

But, by removing a species such as K there are several pathways to achieve the following:

$$2KI + Mn \rightarrow MnI_2 + 2K \qquad (80)$$

Thus, nonequilibrium thermodynamics apply, and many reaction systems can be regenerated that are not thermodynamically favorable considering just the equilibrium thermodynamics of a closed system.

The reaction given by Eq. (80) can be driven to more completion by dynamically removing potassium. The reaction given by Eq. (80) was confirmed by reacting a two-to-one molar mixture of *KI* and *Mn* in a 0.75 inch OD vertical stainless steel tube open at one end in a 1 inch OD vacuum-tight quartz tube. The reaction was run at 850 °C for one hour under vacuum. Potassium metal was evaporated from the hot zone, and the $MnI_2$ product was identified by XRD.

In another embodiment, the metal halide that may serve as an oxidant comprises an alkali metal such as KI, LiBr, LiCl, or RbCl, or an alkaline earth halide. A suitable alkaline earth halide is a magnesium halide. The reaction mixture may comprise a source of catalyst and a source of H such as KH, BaH, or NaH, an oxidant such as one of $MgF_2$, $MgBr_2$, $MgCl_2$, $MgBr_2$, $MgI_2$, and mixtures such as $MgBr_2$ and $MgI_2$ or a mixed-halide compound such as MgIBr, a reductant such as Mg metal powder, and a support such as TiC, $YC_2$, $Ti_3SiC_2$, TiCN, $MgB_2$, SiC, $B_4C$, or WC. An advantage to the magnesium halide oxidant is that Mg powder may not need to be removed in order to regenerate the reactant oxidant. The regeneration may be by heating. The thermally driven regeneration reaction may be

$$2KX + Mg \text{ to } MgX_2 + 2K \qquad (81)$$

or

$$2KX + MgH_2 \text{ to } MgX_2 + 2KH \qquad (82)$$

wherein X is F, Cl, Br, or I. In other embodiments, another alkali metal or alkali metal hydride such as NaH or BaH may replace KH.

In another embodiment, the metal halide that may serve as an oxidant comprises an alkali metal halide such as KI wherein the metal is also the metal of the catalyst or source of catalyst. The reaction mixture may comprise a source of catalyst and a source of H such as KH or NaH, an oxidant such as one of KX or NaX wherein X is F, Cl, Br, or I, or mixtures of oxidants, a reductant such as Mg metal powder, and a support such as TiC, $YC_2$, $B_4C$, NbC, and Si nanopowder. An advantage to such a halide oxidant is that the system is simplified for regeneration of the reactant oxidant. The regeneration may be by heating. The thermally driven regeneration reaction may be

$$KX + KH \text{ to } KX + K(g) + H_2 \qquad (83)$$

the alkali metal such as K may be collected as a vapor, rehydrided, and added to the reaction mixture to form the initial reaction mixture.

LiH is stable to 900 °C and melts at 688.7 °C; thus, lithium halides such as LiCl and LiBr may serve as the oxidant or halide of a hydride-halide exchange reaction wherein another catalyst metal such as K or Na is preferentially evaporated during regeneration as LiH reacts to form the initial lithium halide. The reaction mixture may comprise the catalyst or source of catalyst and hydrogen or source of hydrogen such as KH or NaH, and may further comprise one or more of a reductant such as an alkaline earth metal such as Mg powder, a support such as $YC_2$, TiC, or carbon, and an oxidant such as an alkali halide such as LiCl or LiBr. The products may comprise the catalyst metal halide and lithium hydride. The power producing hydrino reaction and regeneration reaction may be, respectively:

$$MH + LiX \text{ to } MX + LiH \qquad (84)$$

and

$$MX + LiH \text{ to } M + LiX + 1/2H_2 \qquad (85)$$

wherein M is the catalyst metal such as an alkali metal such as K or Na and X is a halide such as Cl or Br. M is preferentially evaporated due to the high volatility of M and the relative instability of MH. The metal M may be separately hydrided and returned to the reaction mixture to regenerate it. In another embodiment, Li replaces LiH in the regeneration reaction since it has a much lower vapor pressure than K. For example at 722 °C, the vapor pressure of Li is 100 Pa; whereas, at a similar temperature, 756 °C, the vapor pressure of K is 100 kPa. Then, K can be selectively evaporated during a regeneration reaction between MX and Li or LiH in Eq. (85). In other embodiments, another alkali metal M such as Na substitutes for K.

In another embodiment, the reaction to form hydrinos comprises at least one of a hydride exchange and a halide exchange between at least two species such as two metals. At least one metal may be a catalyst or a source of a catalyst to form hydrinos such as an alkali metal or alkali metal hydride. The hydride exchange may be between at least two hydrides, at least one metal and at least one hydride, at least two metal hydrides, at least one metal and at least one metal hydride and other such combinations with the exchange between or involving two or more species. In an embodiment, the hydride exchange forms a mixed metal hydride such as $(M_1)_x(M_2)_yH_z$ wherein x,y, and z are integers and $M_1$ and $M_2$ are metals. In an embodiment, the mixed hydride comprises an alkali metal and an alkaline earth metal such as $KMgH_3$, $K_2MgH_4$, $NaMgH_3$, and $Na_2MgH_4$. The reaction mixture may be at least one of NaH and KH, at least one metal such as an alkaline earth metal or transition metal, and a support such as carbon or carbide. The reaction mixture may comprise NaH Mg and TiC or NaH or KH Mg TiC and MX wherein LiX wherein X is halide. A hydride exchange may occur between NaH and at least one of the other metals. In embodiments, the cell may comprise or form hydrides to form hydrinos. The hydrides may comprise mixed metal hydride such as $Mg_x(M_2)_yH_z$ wherein x, y, and z are integers and $M_2$ is a metal. In an embodiment, the mixed hydride comprises an alkali metal and Mg such as $KMgH_3$, $K_2MgH_4$, $NaMgH_3$, $Na_2MgH_4$, and mixed hydrides with doping that may increase H mobility. The doping may increase the H mobility by increasing the concentration of H vacancies. A suitable doping is with small amounts of substituents that can exist as monovalent cations in place of the normally divalent B-type cations of a perovskite structure. An example is Li doping to produce x vacancies such as in the case of $Na(Mg_{x-1}Li_x)H_{3-x}$. Exemplary cells are [Li/olefin separator LP 40/$NaMgH_3$] and [Li/LiCl-KCl/$NaMgH_3$].

In an embodiment, the catalyst is an atom or ion of at least one of a bulk material such as a metal, a metal of an intermetalic compound, a supported metal, and a compound, wherein at least one electron of the atom or ion accepts about an integer multiple of 27.2 eV from atomic hydrogen to form hydrinos. In an embodiment, $Mg^{2+}$ is a catalyst to form hydrinos since its third ionization energy (IP) is 80.14 eV. The catalyst may be formed in a plasma or comprise a reactant compound of the hydrino reaction mixture. A suitable Mg compound is one that provides $Mg^{2+}$ in an environment such that its third IP is more closed matched to the resonant energy of 81.6 eV given by Eq. (5) with m=3. Exemplary magnesium compounds include halides, hydrides, nitrides, carbides, and borides. In an embodiment, the hydride is a mixed metal hydride such as $Mg_x(M_2)_yH_z$ wherein x,y, and z are integers and $M_2$ is a metal. In an embodiment, the mixed hydride comprises an alkali metal and Mg such as $KMgH_3$, $K_2MgH_4$, $NaMgH_3$, and $Na_2MgH_4$. The catalyst reaction is given by Eqs. (6-9) wherein $Cat^{q+}$ is $Mg^{2+}$, r=1, and m=3. In another embodiment, $Ti^{2+}$ is a catalyst to form hydrinos since its third ionization energy (IP) is 27.49 eV. The catalyst may be formed in a plasma or comprise a reactant compound of the hydrino reaction mixture. A suitable Ti compound is one that provides $Ti^{2+}$ in an environment such that its third IP is more closed matched to the resonant energy of 27.2 eV given by Eq. (5) with m=1. Exemplary titanium compounds include halides, hydrides, nitrides, carbides, and borides. In an embodiment, the hydride is a mixed metal hydride such as $Ti_x(M_2)_yH_z$ wherein x,y, and z are integers and $M_2$ is a metal. In an embodiment, the mixed hydride comprises at least one of an alkali metal or alkaline earth metal and Ti such as $KTiH_3$, $K_2TiH_4$, $NaTiH_3$, $Na_2TiH_4$, and $MgTiH_4$.

Bulk magnesium metal comprises $Mg^{2+}$ ions and planar metal electrons as counter charges in a metallic lattice. The third ionization energy of Mg is $IP_3$=80.1437 eV. This energy is increased by the Mg molar metal bond energy of $E_b$=147.1 kJ/mole (1.525 eV) such that the sum of $IP_3$ and $E_b$ is about 3X27.2 eV that is a match to that necessary for Mg to serve as catalyst (Eq. (5)). The ionized third electron may be bound or conducted to ground by the metal particle comprising the ionized $Mg^{2+}$ center. Similarly, calcium metal comprises $Ca^{2+}$ ions and planar metal electrons as counter charges in a metallic lattice. The third ionization energy of Ca is $IP_3$=50.9131 eV. This energy is increased by the Ca molar metal bond energy of $E_b$=177.8 kJ/mole (1.843 eV) such that the sum of $IP_3$ and $2E_b$ is about 2X27.2 eV that is a match to that necessary for Ca to serve as catalyst (Eq. (5)). The fourth ionization energy of La is $IP_4$=49.95 eV. This energy is increased by the La molar metal bond energy of $E_b$=431.0 kJ/mole (4.47 eV) such that the sum of $IP_4$ and $E_b$ is about 2X27.2 eV that is a match to that necessary for La to serve as catalyst (Eq. (5)). Other such metals having the sum of the ionization energy of the lattice ion and the lattice energy or a small multiple thereof equal to about mX27.2 eV (Eq. (5)) such as Cs ($IP_2$= 23.15 eV), Sc ($IP_3$=24.75666 eV), Ti ($IP_3$=27.4917 eV), Mo ($IP_3$=27.13 eV), Sb ($IP_3$=25.3 eV), Eu ($IP_3$=24.92 eV), Yb ($IP_3$=25.05 eV), and Bi ($IP_3$=25.56 eV) may serve as catalysts. In an embodiment, Mg or Ca is a source of catalyst of the presently disclosed reaction mixtures. The reaction temperature may be controlled to control the rate of reaction to form hydrinos. The temperature may be in the range of about 25 °C to 2000 °C. A suitable temperature range is the metal melting point +/- 150 °C. Ca may also serve as a catalyst since the sum of the first four ionization energies ($IP_1$=6.11316 eV, $IP_2$=11.87172 eV, $IP_3$=50.9131 eV, $IP_4$=67.27 eV) is 136.17 eV that is 5X27.2 eV

(Eq. (5)).

In an embodiment, the catalyst reaction energy is the sum of the ionization of a species such as an atom or ion and either the bond energy of $H_2$ (4.478 eV) or the ionization energy of $H^-$ (IP=0.754 eV). The third ionization energy of Mg is $IP_3$=80.1437 eV. The catalyst reaction of $H^-$ with a $Mg^{2+}$ ion including one in a metal lattice has an enthalpy corresponding to IP $H^-$ + Mg $IP_3$~3X27.2 eV (Eq. (5)). The third ionization energy of Ca is $IP_3$=50.9131 eV. The catalyst reaction of $H^-$ with a $Ca^{2+}$ ion including one in a metal lattice has an enthalpy corresponding to IP $H^-$ + Ca $IP_3$~2X27.2 eV (Eq. (5)). The fourth ionization energy of La is $IP_4$=49.95 eV. The catalyst reaction of $H^-$ with a $La^{3+}$ ion including one in a metal lattice has an enthalpy corresponding to IP $H^-$ + La $IP_4$~2X27.2 eV (Eq. (5)).

In an embodiment, the ionization energy or energies of an ion of a metal lattice plus an energy less than or equal to the metal work function is a multiple of 27.2 eV such that the reaction of the ionization of the ion to a metal band up to the limit of ionization from the metal is of sufficient energy to match that required to be accepted to catalyst H to a hydrino state. The metal may be on a support that increases the work function. A suitable support is carbon or carbide. The work function of the latter is about 5 eV. The third ionization energy of Mg is $IP_3$=80.1437 eV, the third ionization energy of Ca is $IP_3$=50.9131 eV, and the fourth ionization energy of La is $IP_4$=49.95 eV. Thus, each of these metals on a carbon or carbide support may serve as a catalyst having a net enthalpy of 3X27.2 eV, 2X27.2 eV, and 2X27.2 eV, respectively. The work function of Mg is 3.66 eV; thus, Mg alone may serve as a catalyst of 3X27.2 eV.

The energy transfer from H to an acceptor such as an atom or ion cancels the central charge and binding energy of the electron of the acceptor. The energy transferred is allowed when equal to an integer of 27.2 eV. In the case that the acceptor electron is the outer electron of an ion in a metal or compound, the ion exists in a lattice such that the energy accepted in greater than the vacuum ionization energy of the acceptor electron. The lattice energy is increased by an amount less than or equal to the work function, the limiting component energy wherein the electron becomes ionized from the lattice. In an embodiment, the ionization energy or energies of an ion of a metal lattice plus an energy less than or equal to the metal work function is a multiple of 27.2 eV such that the reaction of the ionization of the ion to a metal band up to the limit of ionization from the metal is of sufficient energy to match that required to catalyst H to a hydrino state. The metal may be on a support that increases the work function. A suitable support is carbon or carbide. The work function of the latter is about 5 eV. The third ionization energy of Mg is $IP_3$=80.1437 eV, the third ionization energy of Ca is $IP_3$=50.9131 eV, and the fourth ionization energy of La is $IP_4$=49.95 eV. Thus, each of these metals on a carbon or carbide support may serve as a catalyst having a net enthalpy of 3X27.2 eV, 2X27.2 eV, and 2X27.2 eV, respectively. The work function of Mg is 3.66 eV; thus, Mg alone may serve as a catalyst of 3X27.2 eV. The same mechanism applies to an ion or compound. Such an ion can serve as a catalyst when the ionization energy or energies of an ion of an ionic lattice plus an energy less than or equal to the compound work function is a multiple of 27.2 eV.

Suitable supports for catalysts systems such as bulk catalysts such as Mg are at least one of TiC, $Ti_3SiC_2$, WC, TiCN, $MgB_2$, $YC_2$, SiC, and $B_4C$. In an embodiment, a support for a bulk catalyst may comprise a compound of the same or a different metal such as an alkali or alkaline earth halide. Suitable compounds for Mg catalyst are $MgBr_2$, $MgI_2$, $MgB_2$, $CaBr_2$, $CaI_2$, and $SrI_2$. The support may further comprise a halogenated compound such as a fluorocarbon such as Teflon, fluorinated carbon, hexafluorobenzene, and $CF_4$. The reaction products of magnesium fluoride and carbon may be regenerated by known methods such as molten electrolysis. Fluorinated carbon may be regenerated directly by using a carbon anode. Hydrogen may be supplied by permeation through a hydrogen permeable membrane. A suitable reaction mixture is Mg and a support such as TiC, $Ti_3SiC_2$, WC, TiCN, $MgB_2$, $YC_2$, SiC, and $B_4C$. The reactant may be in any molar ratio. The support may be in excess. The molar-ratio range maybe 1.5 to 10000. The hydrogen pressure may be maintained such that the hydriding of Mg is very low in extent to maintain Mg metal and an $H_2$ atmosphere. For example, the hydrogen pressure may be maintained sub-atmospheric at an elevated reactor temperature such as 1 to 100 torr at a temperature above 400°C. One skilled in the Art could determine a suitable temperature and hydrogen pressure range based on the magnesium hydride composition versus temperature and hydrogen pressure diagram.

The hydrino reaction mixture may comprise high surface area Mg, a support, a source of hydrogen such as $H_2$ or a hydride, and optionally other reactants such as an oxidant. The support such as at least one of TiC, $Ti_3SiC_2$, WC, TiCN, $MgB_2$, $YC_2$, SiC, and $B_4C$ can be regenerated by evaporating volatile metals. Mg may be removed by cleaning with anthracene · tetrahydrofuran (THF) wherein a Mg complex forms. Mg can be recovered by thermally decomposing the complex.

In an embodiment, the catalyst comprises a metal or compound that has an ionization energy equal to an integer multiple of 27.2 eV as determined by X-ray photoelectron spectroscopy. In an embodiment, NaH serves as the catalyst and source of H wherein the reaction temperature is maintained above the melting point of NaH of 638 °C at a hydrogen pressure of over 107.3 bar.

Al metal may serve as a catalyst. The first, second, and third ionization energies are 5.98577 eV, 18.82856 eV, and 28.44765 eV, respectively, such that the ionization of Al to $Al^{3+}$ 53.26198 eV. This enthalpy plus the Al bond energy at a defect is a match to 2X27.2 eV.

Another class of species that satisfies the catalyst condition of providing a net enthalpy of an integer multiple

of 27.2 eV is the combination of a hydrogen molecule and another species such as an atom or ion whereby the sum of the bond energy of $H_2$ and the ionization energies of one or more electrons of the other species is mX27.2 (Eq. (5)). For example, the bond energy of $H_2$ is 4.478 eV and the first and second ionization energies of Mg are $IP_1$=7.64624 eV and $IP_2$=15.03528 eV. Thus, Mg and $H_2$ may serve as a catalyst having a net enthalpy of 27.2 eV. In another embodiment, the catalyst condition of providing a net enthalpy of an integer multiple of 27.2 eV is satisfied by the combination of a hydride ion and another species such as an atom or ion whereby the sum of the ionization energies of $H^-$ and one or more electrons of the other species is mX27.2 (Eq. (5)). For example, the ionization energy of $H^-$ is 0.754 eV and the third ionization energy of Mg is $IP_3$=80.1437 eV. Thus, $Mg^{2+}$ and $H^-$ may serve as a catalyst having a net enthalpy of 3X27.2 eV.

Another class of species that satisfies the catalyst condition of providing a net enthalpy of an integer multiple of 27.2 eV is the combination of a hydrogen atom and another species such as an atom or ion whereby the sum of the ionization energies of the hydrogen atom and one or more electrons of the other species is mX27.2 (Eq. (5)). For example, the ionization energy of H is 13.59844 eV and the first, second, and third ionization energies of Ca are $IP_1$=6.11316 eV, $IP_2$=11.87172 eV, and $IP_3$=50.9131 eV. Thus, Ca and H may serve as a catalyst having a net enthalpy of 3X27.2 eV. Ca may also serve as a catalyst since the sum of it first, second, third, and fourth ($IP_4$=67.27 eV) ionization energies is 5X27.2 eV. In the latter case, since H(1/4) is a preferred case based on its stability, a H atom catalyzed by Ca may transition to the H(1/4) state wherein the energy transferred to Ca to cause it to be ionized to $Ca^{4+}$ comprises an 81.6 eV component to form the intermediate H*(1/4) and 54.56 eV released as part of the decay energy of H*(1/4).

In an embodiment, hydrogen atoms may serve as a catalyst. For example, hydrogen atoms may serve as a catalyst wherein $m$ = 1, $m$ = 2, and $m$ = 3 in Eq. (5) for one, two, and three atoms, respectively, acting as a catalyst for another. The rate for the two-atom-catalyst, $2H$, may be high when extraordinarily fast H collides with a molecule to form the $2H$ wherein two atoms resonantly and nonradiatively accept 54.4 $eV$ from a third hydrogen atom of the collision partners. By the same mechanism, the collision of two hot $H_2$ provide $3H$ to serve as a catalyst of $3 \cdot 27.2$ $eV$ for the fourth. The EUV continua at 22.8 nm and 10.1 nm, extraordinary (>50 eV) Balmer $\alpha$ line broadening, highly excited H states, and the product gas $H_2(1/4)$ were observed from plasma systems as predicted. High densities of H atoms for multi-body interactions may also by achieved on a support such as a carbide or boride. In an embodiment, the reaction mixture comprises a support such as TiC TiCN, WCnano, carbon black, $Ti_3SiC_2$, $MgB_2$, $TiB_2$, $Cr_3C_2$, $B_4C$, SiC, $YC_2$, and a source of hydrogen such as $H_2$ gas and a hydride such as $MgH_2$. The reaction mixture may further comprise a dissociator such as $Pd/Al_2O_3$, Pd/C, R-Ni, Ti powder, Ni powder, and $MoS_2$.

In an embodiment, the reaction mixture comprises at least two of a catalyst or a source of catalyst and hydrogen or a source of hydrogen such as KH, BaH, or NaH, a support such as a metal carbide preferably TiC, $Ti_3SiC_2$, WC, TiCN, $MgB_2$, $B_4C$, SiC, or $YC_2$, or a metal such as a transition metal such a Fe, Mn or Cr, a reductants such as an alkaline earth metal and an alkaline earth halide that may serve as an oxidant. Preferably, the alkaline earth halide oxidant and reductant comprise the same alkaline earth metal. Exemplary reaction mixtures comprise KH Mg TiC or $YC_2$ $MgCl_2$; KH Mg TiC or $YC_2$ $MgF_2$; KH Ca TiC or $YC_2$ $CaCl_2$; KH Ca TiC or $YC_2$ $CaF_2$; KH Sr TiC or $YC_2$ $SrCl_2$; KH Sr TiC or $YC_2$ $SrF_2$; KH Ba TiC or $YC_2$ $BaCl_2$; KH Ba TiC or $YC_2$ $BaBr_2$; and KH Ba TiC or $YC_2$ $BaI_2$.

In an embodiment, the reaction mixture comprises a catalyst or a source of catalyst and hydrogen or a source of hydrogen such as KH, BaH, or NaH and a support such as a metal carbide preferably TiC, $Ti_3SiC_2$, WC, TiCN, $MgB_2$, $B_4C$, SiC, or $YC_2$ or a metal such as a transition metal such a Fe, Mn or Cr. Suitable supports are those that cause the formation of the catalyst and hydrogen such that the H forms hydrinos. Exemplary reaction mixtures comprise KH $YC_2$; KH TiC; NaH $YC_2$, and NaH TiC.

In an embodiment, the reaction mixture comprises a catalyst or a source of a catalyst and hydrogen or a source of hydrogen such an alkali metal hydride. Suitable reactants are KH, BaH, and NaH. The reaction mixture may further comprise a reductant such as an alkaline earth metal, preferably Mg, and may additionally comprise a support wherein the support may be carbon such as activated carbon, a metal, or carbide. The reaction mixture may further comprise an oxidant such as an alkaline earth halide. In an embodiment, the oxidant may be the support such as carbon. The carbon may comprise forms such as graphite and activated carbon and may further comprise a hydrogen dissociator such as Pt, Pd, Ru, or Ir. Suitable such carbon may comprise Pt/C, Pd/C, Ru/C or Ir/C. The oxidant may form an intercalation compound with one or more metals or the reaction mixture. The metal may be the metal of the catalyst or source of catalyst such as an alkali metal. In an exemplary reaction, the intercalation compound may be $KC_x$ wherein x may be 8, 10, 24, 36, 48, 60. In an embodiment, the intercalation compound may be regenerated to the metal and carbon. The regeneration may be by heating wherein the metal may be dynamically removed to force the reaction further to completion. A suitable temperature for regeneration is in the range of about 500-1000 °C, preferably in the range of about 750-900 °C. The reaction may be further facilitated by the addition of another species such as a gas. The gas may be an inert gas or hydrogen. The source of hydrogen may be a hydride such as a source of catalysis such as KH or a source of oxidant such as $MgH_2$. Suitable gases are one or more of a noble gas and nitrogen. Alternatively, the gas could be ammonia or mixtures of or with other gases. The gas may be removed by means such as pumping. Other displacing agents comprise an intercalating agent other than that comprising the catalyst or source of catalyst such as

another alkali metal other than that corresponding to the catalyst or source of catalyst. The exchange may be dynamic or occur intermittently such that at least some of the catalyst or source of catalyst is regenerated. The carbon is also regenerated by means such as the more facile decomposition of the intercalation compound formed by the displacing agent. This may occur by heating or by using a gas displacement agent. Any methane or hydrocarbons formed from the carbon and hydrogen may be reformed on suitable catalysts to carbon and hydrogen. Methane can also be reacted with a metal such as an alkali metal to form the corresponding hydride and carbon. Suitable alkali metals are K and Na.

$NH_3$ solution dissolves K. In an embodiment, $NH_3$ may be at liquid densities when intercalated in carbon. Then, it may serve as a solvent to regenerate carbon from $MC_x$, and $NH_3$ is easily removed from the reaction chamber as a gas. In addition, $NH_3$ may reversibly react with M such as K to form the amide such as $KNH_2$ that may drive the reaction of M extraction from $MC_x$ to completion. In an embodiment, $NH_3$ is added to $MC_x$ at a pressure and under other reaction conditions such that carbon is regenerated as M is removed. $NH_3$ is then removed under vacuum. It may be recovered for another cycle of regeneration.

In another embodiment, the alkali metal may be removed from the intercalation product such as $MC_x$ (M is an alkali metal) to form the metal and carbon by extraction of the metal using a solvent of the metal. Suitable solvents that dissolve alkali metals are hexamethylphosphoramide ($OP(N(CH_3)_2)_3$, ammonia, amines, ethers, a complexing solvent, crown ethers, and cryptands and solvents such as ethers or an amide such as THF with the addition of a crown ether or cryptand. The rate of removal of the alkali metal may be increased using a sonicator. In an embodiment, a reaction mixture such one comprising a catalyst or a source of a catalyst and further comprising hydrogen or a source of hydrogen such an alkali metal hydride such as KH, BaH, or NaH, a reductant such as an alkaline earth metal, and a carbon support such as activated carbon is flowed through a power producing section to a section wherein the product is regenerated. The regeneration may be by using a solvent to extract any intercalated metal. The solvent may be evaporated to remove the alkali metal. The metal may be hydrided and combined with the regenerated carbon and reductant to form the initial reaction mixture that is then flowed into the power section to complete a cycle of power production and regeneration. The power-reaction section may be maintained at an elevated temperature to initiate the power reaction. The source of heat to maintain the temperature as well as that to provide heat for any other steps of the cycle such as solvent evaporation may be from the hydrino-forming reaction.

In an embodiment, the reaction conditions such as cell operating temperature is maintained such that the intercalation compound forms and decomposes dynamically wherein power and regeneration reactions are maintained synchronously. In another embodiment, the temperature is cycled to shift the equilibrium between intercalation formation and decomposition to alternately maintain power and regeneration reactions. In another embodiment, the metal and carbon may be regenerated from the intercalation compound electrochemically. In this case, the cell further comprises a cathode and anode and may also comprise a cathode and anode compartment in electrical contact by a suitable salt bridge. Reduced carbon may be oxidized to carbon and hydrogen may be reduced to hydride to regenerate the reactants such as KH and AC from $KC_x$. In an embodiment, the cell comprises a liquid potassium $K_m$ anode and an intercalated graphite cathode. The electrodes may be coupled by an electrolyte and salt bridge. The electrodes may be coupled by a solid potassium-glass electrolyte that may provide the transport of K+ ions from the anode to the cathode. The anode reaction may be

$$K^+ + e^- \text{ to } K_m \qquad (86)$$

The cathode reaction may involve a stage change such as n-1 to n wherein the higher the stage, the lesser the amount of K intercalated. In the case that the stage changes from 2 to 3, the reaction at the cathode may be

$$3C_{24}K \text{ to } 2C_{36}K + K^+ + e^- \qquad (87)$$

The overall reaction is then

$$3C_{24}K \text{ to } 2C_{36}K + K_m \qquad (88)$$

The cell may be operated cyclically or intermittently wherein the power reaction is run following a regeneration or partial regeneration of the reactants. The change of the emf by the injection of current into the system may cause the hydrino reaction to resume.

In an embodiment comprising a catalyst or source of catalyst, hydrogen or a source of hydrogen and at least one of an oxidant, a support, and a reductant wherein the oxidant may comprise a form of carbon such as the reaction mixture KH Mg AC, the oxidation reaction results in a metal intercalation compound that may be regenerated with elevated temperature and vacuum. Alternatively, carbon may be regenerated by using a displacing gas. The pressure range may be about 0.1 to 500 atmospheres. Suitable gases are $H_2$, a noble gas, $N_2$, or $CH_4$ or other volatile hydrocarbon. Preferably, the reduced carbon such as $KC_x$/AC is regenerated to a carbon such as AC without oxidizing or otherwise

reacting K to a compound that cannot be thermally converted back to K. After the K has been removed from the carbon by means such as evaporation or sublimation, the displacing gas may be pumped off, K may or may not be hydrided and returned to the cell, and the power reaction may be run again.

The intercalated carbon may be charged to increase the rate of catalysis to form hydrinos. The charging may change the chemical potential of the reactants. A high voltage may be applied by using an electrode in contact with the reactants with a counter electrode not in contact with the reactants. A voltage may be applied, as the reaction is ongoing. The pressure such as the hydrogen pressure may be adjusted to allow for a voltage that charges the reactants while avoiding a glow discharge. The voltage may be DC or RF or any desired frequency or waveform including pulsing with any offset in the range of the maximum voltage, and any voltage maximum, and duty cycle. In an embodiment, the counter electrode is in electrical contact with the reactants such that a current is maintained through the reactants. The counter electrode may be negative biased and the conductive cell grounded. Alternatively, the polarity may be reversed. A second electrode may be introduced such that the reactants are between the electrodes, and a current is flowed between the electrodes through at least one of the reactants.

In an embodiment, the reaction mixture comprises KH, Mg, and activated carbon (AC). In other embodiments the reaction mixture comprises one or more of LiH Mg AC; NaH Mg AC; KH Mg AC; RbH Mg AC; CsH Mg AC; Li Mg AC; Na Mg AC; K Mg AC; Rb Mg AC; and Cs Mg AC. In other exemplary embodiments, the reaction mixture comprises one or more of KH Mg AC $MgF_2$; KH Mg AC $MgCl_2$; KH Mg AC $MgF_2 + MgCl_2$; KH Mg AC $SrCl_2$; and KH Mg AC $BaBr_2$. The reaction mixture may comprise an intermetalic such as $Mg_2Ba$ as the reductant or as a support and may further comprise mixtures of oxidants such as mixtures of alkaline earth halides alone such as $MgF_2 + MgCl_2$ or with alkali halides such as KF + $MgF_2$ or $KMgF_3$. These reactants may be regenerated thermally from the products of the reaction mixture.

K will not intercalate in carbon at a temperature higher that 527 °C. In an embodiment, the cell is run at a greater temperature such that K intercalated carbon does not form. In an embodiment, K is added into the reaction cell at this temperature. The cell reactants may further comprise the redundant such as Mg. The $H_2$ pressure may be maintained at a level that will form KH insitu such as in the range of about 5 to 50 atm.

In another embodiment, AC is replaced by another material that reacts with the catalyst or source of catalyst such as K to form the corresponding ionic compound like $MC_x$ (M is an alkali metal comprising $M^+$ and $C_x^-$ ). The material may act as the oxidant. The material may form an intercalation compound with at least one of the catalyst, source of catalyst, and source of hydrogen such as K, Na, NaH, BaH, and KH. Suitable intercalating materials are hexagonal boron nitride and metal chalcogenides. Suitable chalcogenides are those having a layered structure such as $MoS_2$ and $WS_2$. The layered chalcogenide may be one or more form the list of $TiS_2$, $ZrS_2$, $HfS_2$, $TaS_2$, $TeS_2$, $ReS_2$, $PtS_2$, $SnS_2$, SnSSe, $TiSe_2$, $ZrSe_2$, $HfSe_2$, $VSe_2$, $TaSe_2$, $TeSe_2$, $ReSe_2$, $PtSe_2$, $SnSe_2$, $TiTe_2$, $ZrTe_2$, $VTe_2$, $NbTe_2$, $TaTe_2$, $MoTe_2$, $WTe_2$, $CoTe_2$, $RhTe_2$, $IrTe_2$, $NiTe_2$, $PdTe_2$, $PtTe_2$, $SiTe_2$, $NbS_2$, $TaS_2$, $MoS_2$, $WS_2$, $NbSe_2$, $NbSe_3$, $TaSe_2$, $MoSe_2$, $WSe_2$, and $MoTe_2$. Other suitable exemplary materials are silicon, doped silicon, silicides, boron, and borides. Suitable borides include those that form double chains and two-dimensional networks like graphite. The two-dimensional network boride that may be conducting may have a formula such as $MB_2$ wherein M is a metal such as at least one of Cr, Ti, Mg, Zr, and Gd ($CrB_2$, $TiB_2$, $MgB_2$, $ZrB_2$, $GdB_2$). The compound formation may be thermally reversible. The reactants may be regenerated thermally by removing the catalyst of source of catalyst.

In an embodiment, the reaction mixture comprising reactants that form an intercalation compound such as a metal graphite, metal hydride graphite, or similar compounds comprising an element other than carbon as the oxidant, is operated at a first power-cycle operating temperature that maximizes the yield of hydrinos. The cell temperature may then be changed to a second value or range that is optimal for regeneration during the regeneration cycle. In the case that the regeneration-cycle temperature is lower than the power-cycle temperature, the temperature may be lowered using a heat exchanger. In the case that the regeneration-cycle temperature is higher than the power-cycle temperature, the temperature may be raised using a heater. The heater may be a resistive heater using electricity produced from the thermal power evolved during the power-cycle. The system may comprise a heat exchanger such as a counter-current system wherein the heat loss is minimized as cooling regenerated reactants heat products to undergo regeneration. Alternatively to resistive heating, the mixture may be heated using a heat pump to reduce the electricity consumed. The heat loss may also be minimized by tranfer from a hotter to cooler object such as a cell using a heat pipe. The reactants may be continuously fed through a hot zone to cause the hydrino reaction and may be further flowed or conveyed to another region, compartment, reactor, or system wherein the regeneration may occur in batch, intermittently, or continuously wherein the regenerating products may be stationary or moving.

In an embodiment, NaOH is a source of NaH in a regenerative cycle. The reaction of $NaOH$ and $Na$ to $Na_2O$ and $NaH$ is

$$NaOH + 2Na \rightarrow Na_2O + NaH \ (-44.7\ \text{kJ/mole}) \qquad (89)$$

The exothermic reaction can drive the formation of NaH(g). Thus, NaH decomposition to Na or metal can serve as a reductant to form catalyst NaH(g). In an embodiment, $Na_2O$ formed as a product of a reaction to generate NaH catalyst such as that given by Eq. (89), is reacted with a source of hydrogen to form NaOH that can further serve as a source of NaH catalyst. In an embodiment, a regenerative reaction of NaOH from the product of Eq. (89) in the presence of atomic hydrogen is

$$Na_2O+1/2H \rightarrow NaOH + Na \ \Delta H = -11.6 \ kJ / mole \ NaOH \qquad (90)$$

$$NaH \rightarrow Na + H(1/3) \ \Delta H = -10{,}500 \ kJ/mole \ H \qquad (91)$$

and

$$NaH \rightarrow Na + H(1/4) \ \Delta H = -19{,}700 \ kJ / mole \ H \qquad (92)$$

Thus, a small amount of *NaOH* and *Na* from a source such as Na metal or NaH with a source of atomic hydrogen or atomic hydrogen serves as a catalytic source of the *NaH* catalyst, that in turn forms a large yield of hydrinos via multiple cycles of regenerative reactions such as those given by Eqs. (89-92). The reaction given by Eq. (90) may be enhanced by the use of a hydrogen dissociator to form atomic H from $H_2$. A suitable dissociator comprises at least one member from the group of noble metals, transition metals, Pt, Pd, Ir, Ni, Ti, and these elements on a support. The reaction mixture may comprise NaH or a source of NaH and NaOH or a source of NaOH and may further comprise at least one of reductant such as an alkaline earth metal such as Mg and a support such as carbon or carbide such as TiC, $YC_2$, $TiSiC_2$, and WC. The reaction may be run in a vessel that is inert to the reactants and products such as a Ni, Ag, Ni-plated, Ag-plated, or $Al_2O_3$ vessel.

In an embodiment, KOH is a source of K and KH in a regenerative cycle. The reaction of *KOH* and *K* to $K_2O$ and *KH* is

$$KOH + 2K \rightarrow K_2O + KH \ (+5.4 \text{ kJ/mole}) \qquad (93)$$

During the formation of KH, the hydrino reaction occurs. In an embodiment, $K_2O$ is reacted with a source of hydrogen to form KOH that can further serve as the reactant according to Eq. (93). In an embodiment, a regenerative reaction of KOH from Eq. (93) in the presence of atomic hydrogen is

$$K_2O+1/2H_2 \rightarrow KOH + K \ \Delta H = -63.1 \ kJ/mole \ KOH \qquad (94)$$

$$KH \rightarrow K + H(1/4) \ \Delta H = -19{,}\ 700 \ kJ / mole \ H \qquad (95)$$

Thus, a small amount of *KOH* and *K* from a source such as K metal or KH with a source of atomic hydrogen or atomic hydrogen serves as a catalytic source of the *KH* source of catalyst, that in turn forms a large yield of hydrinos via multiple cycles of regenerative reactions such as those given by Eqs. (93-95). The reaction given by Eq. (94) may be enhanced by the use of a hydrogen dissociator to form atomic H from $H_2$. A suitable dissociator comprises at least one member from the group of noble metals, transition metals, Pt, Pd, Ir, Ni, Ti, and these elements on a support. The reaction mixture may comprise KH or a source of KH and KOH or a source of KOH and may further comprise at least one of a reductant and a support such as carbon, a carbide, or a boride such as TiC, $YC_2$, $TiSiC_2$, $MgB_2$, and WC. In an embodiment, the support is nonreactive or has a low reactivity with KOH. The reaction mixture may further comprise at least one of KOH-doped support such as R-Ni, KOH, and KH.

The components of the reaction mixture may be in any molar ratios. A suitable ratio for a reaction mixture comprising a catalyst or source of catalyst and a source of hydrogen such as NaH or KH, a reductant, solvent, or hydride exchange reactant such as an alkaline earth metal such as Mg, and a support is one with the former two in near equimolar ratios and the support in excess. An exemplary suitable ratio of NaH or KH + Mg with a support such as AC is 5%, 5%, and 90%, respectively, wherein each mole % can be varied by a factor of 10 to add up to 100%. In the case that the support is TiC, an exemplary suitable ratio is 20%, 20%, and 60%, respectively, wherein each mole % can be varied by a factor of 10 to add up to 100%. A suitable ratio for a reaction mixture comprising a catalyst or source of catalyst and a source of hydrogen such as NaH or KH, a reductant, solvent, or hydride exchange reactant such as an alkaline earth metal such as Mg, a metal halide comprising an oxidant or halide exchange reactant such as an alkali metal, alkaline earth metal, transition metal, Ag, In, or rare earth metal halide, and a support is one with the former two in near equimolar ratios, the metal halide is equimolar or less abundant, and the support in excess. An exemplary suitable ratio of NaH or KH + Mg + MX or $MX_2$ wherein M is a metal and X is a halide with a support such as AC is 10%, 10%, 2%, and 78%,

respectively, wherein each mole % can be varied by a factor of 10 to add up to 100%. In the case that the support is TiC, an exemplary suitable ratio is 25%, 25%, 6% and 44%, respectively, wherein each mole % can be varied by a factor of 10 to add up to 100%.

In an embodiment, the power plant shown in FIGURE 2 comprises a multi-tube reactor wherein the hydrino reaction (power producing catalysis of H to form hydrinos) and regeneration reaction are temporally controlled between the reactors to maintain a desired power output over time. The cells may be heated to initiate the reaction, and the energy from the hydrino-forming reaction may be stored in a thermal mass including that of the cell and transferred under controlled conditions by a heat transfer medium and control system to achieve the desired contribution to the power over time. The regeneration reactions may be performed in the multiple cells in conjunction with the power reactions to maintain continuous operation. The regeneration may be performed thermally wherein the heat may be at least partially or wholly provided from the energy released in forming hydrinos. The regeneration may be performed in a contained unit associated with each tube (reactor) of the multi-tube reactor. In an embodiment, the heat from a power-producing cell may flow to a cell that is undergoing regeneration due to heat gradient. The flow may be through a thermally conductive medium including the coolant wherein the flow is controlled by valves and at least one flow controller and pump.

In an embodiment shown in FIGURE 5, the reactor comprises a main reactor 101 for the reactants to produce power by the catalysis of hydrogen to hydrinos and a second chamber 102 in communication with the main reactor. The two-chamber reactor 110 comprises a unit of a multi-unit assembly comprising a multi-tube reactor 100. Each unit further comprises a heat exchanger 103. Each cell may have a heat barrier such as insulation or a gas gap to control the heat transfer. The heat exchanger may be arranged such that the coldest part is at the second chamber at the region farthest from the main reaction chamber. The temperature may progressively increase as the heat exchanger approaches the bottom of the main reaction chamber. The heat exchanger may comprise tubing coiled around the chambers to maintain the temperature gradient along the heat exchanger. The heat exchanger may have a line 107 from the hottest part of the exchanger to a thermal load such as a steam generator 104, steam turbine 105, and generator 106. The line may be close to the bottom of the main reactor as shown in FIGURE 5 and may further be part of a closed primary circulation loop 115. The heat from the multi-tube reactor system may be transferred to the thermal load through a heat exchanger 111 that isolates the heat transfer medium of the power system (primary loop) from the thermal load such as a generator system, 104, 105, and 106. The working fluid such as high-temperature steam in the power conversion system may be received as low-temperature steam from the turbine by circulation line 113 and condensor 112 that may further comprise a heat-rejection heat exchanger. This power circulation system may comprise a secondary loop 116 for the working medium such as steam and water. In an alternative embodiment comprising a single loop heat transfer system, the line 115 connects directly with the steam generator 104, and the return line 108 connects directly with the condensor 112 wherein the circulation in either configuration may be provided by circulation pump 129.

In an embodiment, the chambers are vertical. The coldest part of the heat exchanger having a cold input line 108 may be at the top of the second chamber with a counter current heat exchange wherein the heat transfer medium such as a fluid or gas becomes hotter from the top of the second chamber towards the main chamber where the heat is taken off at about the middle of the main chamber with the line 107 to the thermal load. The chambers may communicate or be isolated by the opening and closing of a chamber separation valve such as a gate valve or sluice valve between the chambers. The reactor 110 may further comprise a gas exhaust 121 that may comprise a vacuum pump 127. The exhaust gas may be separated by a hydrino gas separator 122, and the hydrino gas may be used in chemical manufacturing in system 124. The hydrogen gas may be collected by a hydrogen gas recycler 123 that may return the recycled hydrogen by line 120 with the optional addition of gas hydrogen from supply 125.

In an embodiment using the exemplary reactants of KH and $SrBr_2$, the hydrino power reaction may be run, then the gate valve opened, K moves to the cold top of the second chamber as $SrBr_2$ is formed in the main chamber, the valve is closed, K is hydrided, the valved is opened, KH is dropped back into the main chamber, the valve is closed, and then the reaction hydrino-forming power proceeds with the regenerated $SrBr_2$ and KH. Mg metal may be collected in the second chamber as well. Due to its lower volatility it may be condensed separately from the K and returned to the first chamber separately. In other embodiments, KH may be replaced by another alkali metal or alkali metal hydride and the oxidant $SrBr_2$ may be replaced by another. The reactor is preferably a metal that is capable of high temperature operation and does not form an intermetalic with Sr over the operating temperature range. Suitable reactor materials are stainless steel and nickel. The reactor may comprise Ta or a Ta coating and may further comprise an intermetalic that resists further intermetalic formation such as an intermetalic of Sr and stainless steel or nickel.

The reaction may be controlled by controlling the pressure of an inert gas that may be introduced through the hydrogen gas intake 120 and removed by the gas exhaust 121. The sluice valve may be opened to allow the catalyst such as K to evaporate from the reaction chamber 101 to the chamber 102. The hydrogen may be pumped off using the gas exhaust 121. The catalyst or source of hydrogen such as KH may not be resupplied, or the amount may be controlled to terminate or decrease the power as desired. The reductant such as Mg may be hydrided to decrease the rate by adding $H_2$ through supply 120 and the sluice valve or by directly adding $H_2$ though a separate line. The thermal mass of the reactor 110 may be such that the temperature may not exceed the failure level with the complete reaction

of the reactants wherein the cessation regeneration cycle may be maintained.

The hydride such as KH may be added back to hot reaction mixture in a time duration substantially less that its thermal decomposition time in the case that the reactor temperature is greater that the hydride decomposition temperature. LiH is stable to 900 °C and melts at 688.7 °C; thus, it can be added back to the reactor without thermal decomposition at a corresponding regeneration temperature less than the LiH decomposition temperature. Suitable reaction mixtures comprising LiH are LiH Mg TiC $SrCl_2$, LiH Mg TiC $SrBr_2$, and LiH Mg TiC $BaBr_2$. Suitable reaction mixtures comprising LiH are LiH Mg TiC $SrCl_2$, LiH Mg TiC $SrBr_2$, LiH Mg TiC $BaBr_2$, and LiH Mg TiC $BaCl_2$

The heat cells undergoing regeneration may be heated by other cells producing power. The heat transfer between cells during power and regeneration cycles may be by valves controlling a flowing coolant. In an embodiment, the cells may comprise cylinders such as 1 to 4 inch diameter pipes. The cells may be embedded in a thermally conductive medium such as a solid, liquid, or gaseous medium. The medium may be water that may undergo boiling by a mode such as nucleate boiling at the wall of the cells. Alternatively, the medium may be a molten metal or salt or a solid such as copper shot. The cells may be square or rectangular to more effectively transfer heat between them. In an embodiment, the cells that are being regenerated are maintained above the regeneration temperature by heat transfer from the cells in the power-generation cycle. The heat transfer may be via the conductive medium. The cells producing power may produce a higher temperature than that required for regeneration in order to maintain some heat transfer to these cells. A heat load such as a heat exchanger or steam generator may receive heat from the conductive medium. A suitable location is at the periphery. The system may comprise a thermal barrier that maintains the conductive medium at a higher temperature than the heat load. The barrier may comprise insulation or a gas gap. The cells producing power heat those undergoing regeneration in a manner such that statistically the power output approaches a constant level as the number of cells increases. Thus, the power is statistically constant. In an embodiment, the cycle of each cell is controlled to select the cells producing powder to provide the heat for the selected regenerating cells. The cycle may be controlled by controlling the reaction conditions. The opening and closing of the means to allow metal vapor to condense away from the reaction mixture may be controlled to control each cell cycle.

In another embodiment, the heat flow may be passive and may also be active. Multiple cells may be embedded in a thermally conductive medium. The medium may be highly thermally conductive. Suitable media may be a solid such as metal including copper, aluminum, and stainless steel, a liquid such as a molten salt, or a gas such as a noble gas such as helium or argon.

The multi-tube reactor may comprise cells that are horizontally oriented with a dead space along the longitudinal axis of the cell that allows the metal vapor such as an alkali metal to escape during regeneration. The metal may condense in a cool region in contact with the cell interior at a location wherein the temperature may be maintained lower than the cell temperature. A suitable location is at the end of the cell. The cool region may be maintained at a desired temperature by a heat exchanger with a variable heat acceptance rate. The condensing region may comprise a chamber with a valve such as a gate valve that may be closed. The condensed metal such as K may be hydrided, and the hydride may be returned to the reactor by means such as mechanically or pneumatically. The reaction mixture may be agitated by methods known in the art such as mechanical mixing or mechanical agitation including vibration at low frequencies or ultrasonic. The mixing may also be by pneumatic methods such as sparging with a gas such as hydrogen or a noble gas.

In another embodiment of the multi-tube reactor that comprises cells that are horizontally oriented with a dead space along the longitudinal axis of the cell that allows the metal vapor such as an alkali metal to escape during regeneration, a region alone the length of the cell is maintained at a lower temperature than the reaction mixture. The metal may condense along this cool region. The cool region may be maintained at a desired temperature by a heat exchanger with a variable and controlled heat acceptance rate. The heat exchanger may comprise a conduit with flowing coolant or a heat pipe. The temperature of the cool region and the cell may be controlled to desired values based on the flow rate in the conduit or the heat transfer rate of the heat pipe controlled by parameters such as its pressure, temperature, and heat acceptance surface area. The condensed metal such as K or Na may be hydrided due to the presence of hydrogen in the cell. The hydride may be returned to the reactor and mixed with the other reactants by rotating the cell about it longitudinal axis. The rotation may be driven by an electric motor wherein the cells may be synchronized using gearing. To mix reactants, the rotation may be alternately in the clockwise and counterclockwise directions. The cell may be intermittently turned 360°. The rotation may be at a high angular velocity such that minimal change in heat transfer to the heat collector occurs. The fast rotation may be superimposed on a slow constant rotational rate to achieve further mixing of possible residual reactants such as metal hydride. Hydrogen may be supplied to each cell by a hydrogen line or by permeation through the cell wall or a hydrogen permeable membrane wherein hydrogen is supplied to a chamber containing the cell or the cells. The hydrogen may also be supplied by electrolysis of water. The electrolysis cell may comprise a rotating component of the cell such as a cylindrical rotational shaft along the center-line of the reactor cell.

Alternatively, one or more internal wiper blades or stirrer may be swept over the inner surface to mix the formed hydride with the other reactants. Each blade or stirrer may be rotated about a shaft parallel with the longitudinal cell axis. The blade may be driven using magnetic coupling of an internal blade with an external rotating source of magnetic field.

The vessel wall such as a stainless steel wall is permeable to magnetic flux. In an embodiment, the rotation rate of the cell or that of the blades or stirrers is controlled to maximize the power output as metal vapor is reacted to form metal hydride and is mixed with the reaction mixture. The reaction cells may be tubular with a circular, elliptic, square, rectangular, triangular or polyhedral cross-section. The heat exchanger may comprise coolant-carrying tubes or conduits that may have a square or rectangular as well as circular, elliptic, triangular or polyhedral cross-section to achieve a desired surface area. An array of square or rectangular tubes may comprise a continuous surface for heat exchange. The surface of each tube or conduit may be modified with fins or other surface-area-increasing materials.

In another embodiment, the reactor comprises multiple zones having different temperatures to selectively condense multiple selected components of or from the product mixture. These components may be regenerated into the initial reactants. In an embodiment, the coldest zone condenses an alkali metal such as that of the catalyst or source of catalyst such as at least one of Na and K. Another zone condenses as second component such as an alkaline earth metal such as magnesium. The temperature of the fist zone may be in the range 0 °C to 500 °C and that of the second zone may be in the range of 10 °C to 490 °C less than that of the first zone. The temperature of each zone may be controlled by a heat exchanger or collector of variable and controllable efficiency.

In another embodiment, the reactor comprises a reaction chamber capable of a vacuum or pressures greater than atmospheric, one or more inlets for materials in at least one of a gaseous, liquid, or solid state, and at least one outlet for materials. One outlet may comprise a vacuum line for pumping of a gas such as hydrogen. The reaction chamber further comprises reactants to form hydrinos. The reactor further comprises a heat exchanger within the reaction chamber. The heat exchanger may comprise conduits for coolant. The conduits may be distributed throughout the reaction chamber to receive heat from the reacting reaction mixture. Each conduit may have an insulating barrier between the reaction mixture and the wall of the conduit. Alternatively, the thermal conductivity of the wall may be such that a temperature gradient exists between the reactants and the coolant during operation. The insulation may be a vacuum gap or gas gap. The conduits may be tubes penetrating the reaction mixture and sealed at the point of penetration with the chamber wall to maintain the pressure integrity of the reaction chamber. The flow rate of the coolant such as water may be controlled to maintain a desired temperature of the reaction chamber and reactants. In another embodiment, the conduits are replaced by heat pipes that remove heat from the reaction mixture and transfer it to a heat sink such as a heat exchanger or boiler.

In an embodiment, the hydrino reactions are maintained and regenerated in a batch mode using thermally-coupled multi-cells arranged in bundles wherein cells in the power-production phase of the cycle heat cells in the regeneration phase. In this intermittent cell power design, the thermal power is statistically constant as the cell number becomes large, or the cells cycle is controlled to achieve steady power. The conversion of thermal power to electrical power may be achieved using a heat engine exploiting a cycle such as a Rankine, Brayton, Stirling, or steam-engine cycle.

Each cell cycle may be controlled by controlling the reactants and products of the hydrino chemistry. In an embodiment, the chemistry to drive the formation of hydrinos involves a halide-hydride exchange reaction between an alkali hydride catalyst and source of hydrogen and a metal halide oxidant such as an alkaline earth metal or alkali metal halide. The reaction is spontaneous in a closed system. However, the reverse reaction to form the initial alkali hydride and alkaline earth halide is thermally reversible when the system is open such that the alkali metal of the initial hydride is evaporated and removed from the other reactants. The subsequently condensed alkali metal is rehydrided and returned to the system. A cell comprising a reaction chamber 130 and a metal-condensation and re-hydriding chamber 131 separated by a sluice or gate valve 132 that controls the power and regeneration reactions by controlling the flow of evaporating metal vapor, the rehydriding of the metal, and the re-supply of the regenerated alkali hydride is shown in FIGURE 6. A cool zone at a desired temperature may be maintained in the condensation chamber by a heat exchanger 139 such as a water-cooling coil with a variable heat acceptance rate. Thus, the cell shown in Figure 6 comprises two chambers separated by a sluice or gate valve 132. With the reaction chamber 130 closed, the forward reaction is run to form of hydrinos and the alkali halide and alkaline earth hydride products. Then, the valve is opened, and heat from other cells causes the product metals to interchange the halide as the volatile alkali metal is evaporated and condensed in the other catalyst chamber 131 that is cooled by coolant loop 139. The valve is closed, the condensed metal is reacted with hydrogen to form the alkali hydride, and the valve is opened again to re-supply the reactants with the regenerated initial alkali hydride. Hydrogen is recycled with make-up added to replace that consumed to form hydrinos. The hydrogen is pumped from the reaction chamber through the gas exhaust line 133 by pump 134. Hydrino gas is exhausted at line 135. The remaining hydrogen is recycled through line 136 with make-up hydrogen added by line 137 from a hydrogen source and supplied to the catalyst chamber through line 138. A horizontally oriented cell is another design that allows for a greater surface area for the catalyst to evaporate. In this case, the hydride is re-supplied by mechanical mixing rather than just gravity feed. In another embodiment, the cell may be vertically tilted to cause the hydride to drop into the reaction chamber and to be mixed there in.

In an embodiment, the chamber 131 shown in FIGURE 6 further comprises a fractional distillation column or thermal separator that separates the chemical species of at least a reaction product mixture or regeneration reaction product mixture such as a mixture of alkali metal such as at least two of Li, Na, or K, an alkaline earth metal such a Mg,

and a metal halide such as LiCl or $SrBr_2$ that may be formed by an exchange reaction such as a metal halide-metal hydride exchange or other reaction that may occur during the distillation. A support such as TiC may remain in the reaction chamber 130. The alkaline metal may be rehydrided. The isolated species and reaction product species such as LiH, NaH, or KH, alkaline earth metal, and metal halide such as LiCl or $SrBr_2$ are returned to the reaction chamber 130 to reconstitute the original reaction mixture that forms hydrinos.

In an embodiment, a compound comprising H is decomposed to release atomic H that undergoes catalysis to from hydrinos wherein at least one H serves as the catalyst for at least another H. The H compound may be H intercalated into a matrix such as H in carbon or H in a metal such as R-Ni. The compound may be a hydride such as an alkali, alkaline earth, transition, inner transition, noble, or rare earth metal hydride, $LiAlH_4$, $LiBH_4$, and other such hydrides. The decomposition may be by heating the compound. The compound may be regenerated by means such as by controlling the temperature of the reactor and the pressure of hydrogen. Catalysis may occur during the regeneration of the compound comprising H. The decomposition and reforming may occur cyclically to maintain an output of power. In an embodiment, the hydride is decomposed by addition to a molten salt such as a molten eutectic salt such as a mixture of alkaline metal halides. The eutectic salt may be a hydride ion conductor such as LiCl-KCl or LiCl-LiF. The metal may be recovered by physical separation techniques such as those of the present disclosure, dehydrided and added back to the molten salt to make power again. The cycle may be repeated. Multiple thermally coupled cells with controlled phase differences in the power-regeneration cycle may produce continuous power.

In embodiments, the thermal reaction and regenerative systems comprise the alkali metal hydrogen chalcogenides, hydrogen oxyanions, H halogen systems and metal hydroxides and oxyhydroxides given in the CIHT cell section. A typical reaction is given by $MXH + 2M \rightarrow M_2X + MH(s)$ (Eqs. (217-233)). Suitable exemplary hydrogen chalcogenides are MOH, MHS, MHSe, and MHTe (M= Li, Na, K, Rb, Cs). The system may be regenerated by adding hydrogen. The MH product may be removed by evaporation or physical separation. MH may be decomposed to M and added back to the reaction mixture. The reaction mixture may further comprise a support such as carbon, a carbide, a nitride, or a boride.

A cell producing power elevates its temperature higher than that required for regeneration. Then, multiple cells 141 of FIGURE 7 and 148 of FIGURE 8 are arranged in bundles 147 arranged in a boiler 149 of FIGURE 8 such that cells being regenerated are maintained above the regeneration temperature such as about 700 °C by heat transfer from the cells in the power-generation cycle. The bundles may be arranged in a boiler box. Referring to FIGURE 7, a heat gradient drives heat transfer between cells 141 of each bundle in different stages of the power-regeneration cycle. To achieve a temperature profile such as one in the range of 750 °C on the highest-temperature power generation side of the gradient to about 700 °C on the lower-temperature regeneration side, the cells are embedded in a highly thermally conductive medium. A high-conductivity material 142 such as copper shot effectively transfers the heat between cells and to the periphery while maintaining a temperature profile in the bundle that achieves the regeneration and maintains the core temperature below that required by material limitations. The heat is ultimately transferred to a coolant such as water that is boiled at the periphery of each bundle comprising a boiler tube 143. A suitable temperature of the boiling water is in the temperature range of range of 250 °C-370 °C. These temperatures are high enough to achieve nucleate boiling, the most effective means of heat transfer to water medium; but are below the ceiling set by the excessive steam pressures at temperatures above this range. In an embodiment, due to the required much higher temperature in each cell bundle, a temperature gradient is maintained between each bundle and the heat load, the boiling water and subsequent systems. In an embodiment, a thermal barrier at the periphery maintains this gradient. Each multi-tube reactor cell bundle is encased in an inner cylindrical annulus or bundle confinement tube 144, and an insulation or vacuum gap 145 exists between the inner and an outer annulus to maintain the temperature gradient. The heat transfer control may occur by changing the gas pressure or by using a gas having a desired thermal conductivity in this gap. The outer wall of the outer annulus 143 is in contact with the water wherein nucleate boiling occurs on this surface to generate steam in a boiler such as one shown in FIGURE 10. A steam turbine may receive the steam from the boiling water, and electricity may be generated with a generator as shown in FIGURE 11.

The boiler 150 shown in FIGURE 9 comprises the multi-cell bundles 151, the cell reaction chambers 152, the catalyst chambers 153 to receive and hydride metal vapor, the conduits 154 containing hydrogen gas exhaust and supply lines and catalyst chamber coolant pipes, a coolant 155 such a water, and a steam manifold 156. The power generation system shown in FIGURE 10 comprises a boiler 158, high-pressure turbine 159, low-pressure turbine 160, generator 161, moisture separator 162, condenser 163, cooling tower 164, cooling water pump 165, condensate pump 166, boiler feedwater purification system 167, first stage feedwater heater 168, dearating feedwater tank 169, feedwater pump 170, booster pump 171, product storage and processor 172, reactant storage and processor 173, vacuum system 174, start-up heater 175, electrolyzer 176, hydrogen supply 177, coolant lines 178, coolant valve 179, reactant and product lines 180, and reactant and product line valves 181. Other components and modifications are anticipated in the present disclosure being known to those skilled in the Art.

The cell size, number of cells in each bundle, and the width of the vacuum gap are selected to maintain the desired temperature profile in each bundle, the desired temperature of the boiling water at the periphery of the power flow from the cells, and adequate boiling surface heat flux. Reaction parameters for the design analysis can be obtained

experimentally on the various possible hydride-halide exchange reactions and other reactants that result in the formation of hydrinos with significant kinetics and energy gain as well as comprising reactions that can be thermally regenerated as disclosed herein. Exemplary operating parameters for design engineering purposes are 5-10W/cc, 300-400 kJ/mole oxidant, 150 kJ/mole of K transported, 3 to 1 energy gain relative to regeneration chemistry, 50 MJ/mole $H_2$, regeneration temperature of 650 °C-750 °C, cell operation temperature sufficient to maintain regeneration temperature of cells in the corresponding phase of the power-regeneration cycle, regeneration time of 10 minutes, and reaction time of 1 minute.

In an exemplary 1 MW thermal system, the bundle consists of 33 close-packed tubes of 2 meter length, each with 5 cm ID embedded in high thermal conductivity copper shot. Thus, each tube has a working volume slightly less than four liters. Since the power and regeneration phase durations are 1 and 10 minutes, respectively, the choice of 33 tubes (a multiple of the cycle period, 11 min) results in instantaneous power from the bundle that is constant in time. The bundle confinement tube has a 34 cm inner diameter and a 6.4 mm wall thickness. The boiler tube inner diameter and wall thickness are 37.2 cm and 1.27 cm, respectively. Using the typical reaction parameters, each tube in the bundle produces a time-averaged power of about 1.6 kW of thermal power, and each bundle produces about 55 kW of thermal power. The temperature within the bundle ranges between about 782 °C at the center to 664 °C at the surface facing the gap. The heat flux at the surface of the boiler tube is about 22 $kW/m^2$ that maintains the temperature of the boiler tube external surface at 250 °C and is marginally high enough to result in nucleate boiling at the surface. Increasing the power density of the reaction beyond 7 W/cc or reducing the regeneration time increases the boiling flux resulting in greater boiling efficiency. About 18 such bundles should produce an output of 1 MW thermal.

An alternative system design to the boiler shown in FIGURE 9 is shown in FIGURE 11. The system comprises at least one thermally coupled multi-cell bundle and a peripheral water wall as the thermal load of the heat transferred across the gap. The reaction mixture to form hydrinos comprises a high-surface area electrically conductive support and a reductant such as an alkaline earth metal. These materials may also be highly thermally conductive such that they may at least partially substitute for the high-conductivity material of the bundle of FIGURE 9. The chemicals contribute to transferring heat between cells and to the periphery while maintaining an appropriate heat profile and gradient in the array. The steam generated in the tubes of the water wall may flow to a turbine and generator to produce electricity directly, or the water wall may feed steam into a primary steam loop that transfers heat to a secondary steam loop through a heat exchanger. The secondary loop may power a turbine and generator to produce electricity.

The system comprises multiple reactor cell arrays or cell bundles each with a heat collector. As shown in FIGURE 11, the reactor cells 186 may be square or rectangular in order to achieve close contact. The cells may be grouped in a bundle 185 with the heat transfer to the load 188 occurring from the bundle wherein the bundle temperature is maintained at least that required for regeneration. A temperature gradient may be maintained between a bundle and the heat load such as a heat collector or exchanger 188. The heat exchanger may comprise a water wall or set of circumferential tubes having flowing coolant wherein the flow may be maintained by at least one pump and may be encased in insulation 189. The reactor system may comprise a gas gap 187 between a heat collector or exchanger 188 and each multi-tube reactor cell or bundle 185 of multi-tube reactor cells. The heat transfer control may occur by changing the gas pressure or by using a gas having a desired thermal conductivity in the gas gap 187 between the bundle wall 185 and a heat collector or exchanger 188.

The cycle of each cell is controlled to select the cells producing powder to provide the heat for the selected regenerating cells. Alternatively, the cells producing power heat those undergoing regeneration in a random manner such that statistically the power output approaches a constant level as the number of cells increases. Thus, the power is statistically constant.

In another embodiment, the system comprises a gradient of power density increasing from the center out to maintain a desired temperature profile throughout the bundle. In another embodiment, heat is transferred from the cells to a boiler via heat pipes. The heat pipes may be interfaced with a heat exchanger or may be directly in contact with a coolant.

In an embodiment, the hydrino reactions are maintained and regenerated continuously in each cell wherein heat from the power production phase of a thermally reversible cycle provides the energy for regeneration of the initial reactants from the products. Since the reactants undergo both modes simultaneously in each cell, the thermal power output from each cell is constant. The conversion of thermal power to electrical power may be achieved using a heat engine exploiting a cycle such as a Rankine, Brayton, Stirling, or steam-engine cycle.

The multi-tube reactor system to continuously generate power shown in FIGURE 12 comprises a plurality of repeating planar layers of insulation 192, reactor cell 193, thermally conductive medium 194, and heat exchanger or collector 195. In an embodiment, each cell is a circular tube, and the heat exchanger is parallel with the cell and constantly accepts heat. FIGURE 13 shows a single unit of the multi-tube reactor system comprising the chemicals 197 comprising at least one of reactants and products, the insulation material 198, the reactor 199, and the thermal conductive material 200 with embedded water tubes 201 that comprise the heat exchanger or collector.

Each cell produces power continuously to elevate its reactant temperature higher than that required for regeneration. In an embodiment, the reaction to form hydrinos is a hydride exchange between an alkali hydride catalyst and

source of hydrogen and an alkaline earth metal or lithium metal. The reactants, exchange reactions, products, and regeneration reactions and parameters are disclosed herein. The multi-tube reaction system of FIGURE 12 comprising alternate layers of insulation, reactor cells, and heat exchanger maintains continuous power via a cell heat gradient. The reactant alkali hydride is continuously regenerated by product decomposition and alkali metal evaporation in the elevated-temperature bottom zone maintained by the reaction with condensation and rehydriding in a cooler top zone maintained by the heat collector. A rotating wiper blade rejoins the regenerated alkali hydride with the reaction mixture.

After the condensed metal such as K or Na is hydrided due to the presence of hydrogen in the cell including make-up hydrogen for that consumed to make hydrinos, the hydride is returned to the bottom of the reactor and mixed with the other reactants. One or more internal rotating wiper blades or stirrers may be swept along the inner cell wall to mix the formed hydride with the other reactants. Optionally, rejoining of the alkali hydride with the other reactants and chemical mixing is achieved by rotating the cell about it longitudinal axis. This rotation also transfers heat from the bottom position of the cell to the new top position following rotation; consequently, it provides another means to control the internal cell temperature gradient for alkali metal transport. However, the corresponding heat transfer rate is high requiring a very low rotational rate to maintain the heat gradient. The mixing rotation of the wiper blades or cells may be driven by an electric motor wherein the cells may be synchronized using gearing. The mixing may also be by magnetic induction through the cell wall of low permeability such as one of stainless steel.

In an embodiment, the initial alkali hydride is regenerated by evaporation at 400-550 °C and condensation at a temperature of about 100 °C lower in the presence of hydrogen that reacts to form the alkali hydride. Thus, a heat gradient exists between the reactants at an elevated temperature and a cooler zone in each cell that drives the thermal regeneration. The cells are horizontally oriented with a dead space along the longitudinal axis of the cell that allows the alkali metal vapor to escape from the reactants along the bottom of the cell during continuous regeneration. The metal condenses in the cooler zone along the top of the cell. The cooler region is maintained at the desired condensation temperature by a heat collector comprising boiler tubes with a variable heat acceptance rate at the top of each cell. The heat exchanger comprises a water wall of boiler tubes with flowing water heated to steam. Specifically, saturated water flows through the water tubes, absorbs energy from reactor, and evaporates to form steam. In another exemplary embodiment, the hot reactor zone is in a range of 750 °C $\pm$ 200 °C, and the colder zone is maintained in a range of 50 °C to 300 °C lower in temperature than the hot reactor zone. The reaction mixtures and thermal regeneration reactions may comprise those of the present disclosure. For example, a suitable reaction mixture comprises at least two of an alkali metal or its hydride, a source of hydrogen, a reductant such a an alkaline earth metal such a Mg or Ca, and a support such as TiC, $Ti_3SiC_2$, WC, TiCN, $MgB_2$, $B_4C$, SiC, and $YC_2$. The reactant may undergo a hydride-halide exchange reaction, and the regeneration reaction may be the thermally driven reverse exchange reaction.

The heat is ultimately transferred to water that is boiled in tubes peripherally to each reactor cell wherein the boiler tubes form a water wall. A suitable temperature of the boiling water is in the temperature range of range of 250 °C-370 °C. These temperatures are high enough to achieve nucleate boiling, the most effective means of heat transfer to water medium; but are below the ceiling set by the excessive steam pressures at temperatures above this range. The nucleate boiling of water occurs on the inner surface of each boiler tube 201 of FIGURE 13 wherein an even temperature distribution in the water wall is maintained due to the tubes being embedded in the highly conductive thermal medium 200 such as copper, and additionally the water that was not evaporated to steam is recirculated. Heat flows from the top cell wall through the medium to the boiler tubes. Due to the required much higher temperatures in each cell even at the lower end of its gradient, a second temperature gradient is maintained between each cell top and the heat load, the boiling water and subsequent systems. Since the boiler tubes have a higher capacity to remove heat than cell has to produce it, a second external thermal gradient is maintained by adding one or more thermal barriers between the top-half of the cell wall and the water wall. The desired high internal cell temperatures as well as the gradient are achieved by insulating at least one of the top-half of the cell and the outer wall of each boiler tube from the conductive medium. The cell temperatures and gradient are controlled to optimal values through the variable heat transfer by adjusting the thermal barriers at the top-half of the cell and the boiler tubes, the thermal conductivity of the medium penetrated by the boiler tubes, and the heat exchanger capacity and the steam flow rate in the tubes. In the former case, the thermal barriers may each comprise a gas or vacuum gap that is variable based on the gas composition and pressure.

The multi-tube reaction system is assembled into a boiler system shown in FIGURE 14 to output steam. The boiler system comprises the multi-tube reaction system shown in FIGURE 12 and a coolant (saturated water) flow regulating system. The reaction system comprising reactors 204 heats the saturated water and generates steam. The flow regulating system (i) collects the flow of saturated water in steam collection lines 205 and inlet recirculation pipe 206 an inputs the flow to the steam-water separator 207 that separates the steam and water, (ii) recirculates the separated water through the boiler tubes 208 using the recirculation pump 209, the outlet recirculation pipe 210, and water distribution lines 211, and (iii) outputs and channels the steam into a main steam line 212 to the turbine or load and heat exchanger. The pipes and lines may be insulated to prevent thermal losses. Input coolant such as condensed water from the turbine or return water from a thermal load and heat exchanger is input through inlet return water pipe 213, and the pressure is boosted by inlet booster pump 214.

The steam generated in the tubes of the water wall may flow to a turbine and generator to produce electricity directly, or the water wall may feed steam into a primary steam loop that transfers heat to a secondary steam loop through a heat exchanger. The secondary loop may power a turbine and generator to produce electricity. In an embodiment shown in FIGURE 15, steam is generated in the boiler system and output from the steam-water separator to the main steam line. A steam turbine receives the steam from boiling water, and electricity is generated with a generator. The steam is condensed and pumped back to the boiler system. The power generation system shown in FIGURE 15 comprises a boiler 217, heat exchanger 218, high-pressure turbine 219, low-pressure turbine 220, generator 221, moisture separator 222, condenser 223, cooling tower 224, cooling water pump 225, condensate pump 226, boiler feedwater purification system 227, first stage feedwater heater 228, dearating feedwater tank 229, feedwater pump 230, booster pump (214 of FIGURE 14), product storage and processor 232, reactant storage and processor 233, vacuum system 234, start-up heater 235, electrolyzer 236, hydrogen supply 237, coolant lines 238, coolant valve 239, reactant and product lines 240, and reactant and product line valves 241. Other components and modifications are anticipated in the present disclosure being known to those skilled in the Art.

Consider an exemplary 1 MW thermal system. To achieve a cell-bottom temperature in the range of 400-550 °C on the higher-temperature power generation side of the gradient and a temperature of about 100 °C lower at the regeneration side at the top, the cells have a heat collector only at the top as shown in FIGURE 12, the power-producing reactants are located in the bottom, and the bottom section of the cell is insulated. The selected system design parameters are the (1) cell dimensions, (2) number of cells in the system, (3) the thermal resistance of the material surrounding the bottom half of the cell, (4) the thermal barrier at the top-half of the exterior wall of the cell, (5) the thermal conductivity of the medium surrounding the top-half of the cell that is penetrated by the boiler tubes, (6) the thermal barrier at the exterior boiler tube wall, (7) the boiler tube number, dimensions, and spacing, (8) the steam pressure, and (9) the steam flow and recirculation rates. The system design parameters are selected to achieve or maintain the desired operating parameters of (1) temperature and internal and external temperature gradients of each cell, (2) temperature of the boiling water at the periphery of the power flow from the cells, and (3) adequate boiling surface heat flux. Reaction parameters for the design analysis can be obtained experimentally on the various possible hydride exchange reactions that result in the formation of hydrinos with significant kinetics and energy gain as well as comprising reactions that can be thermally regenerated. The power and regeneration chemistries and their parameters are disclosed herein. Typical operating parameters for design engineering purposes are 0.25 W/cc constant power, 0.67 W/g reactants, 0.38 g/cc reactant density, 50 MJ/mole $H_2$, 2 to 1 energy gain relative to hydride regeneration chemistry, equal reaction and regeneration times to maintain constant power output, and temperatures of 550 °C and 400-450 °C for power and regeneration, respectively, wherein the reaction temperature is sufficient to vaporize the alkali metal at the cell bottom, and the internal thermal gradient maintains the regeneration temperature at the cell top. Using the reactants and power densities, the reactant volume and total mass of the reactants to generate 1 MW of continuous thermal power are 3940 liter and 1500 kg, respectively. Using a 0.25% reactant fill factor, the total reactor volume is 15.8 $m^3$.

In the sample design, the boiler comprises 140 stainless steel reaction cells having a 176 cm length, 30.5 cm OD, a 0.635 cm cylindrical wall thickness, and 3.81 cm thick end plates. The wall thickness meets the design requirements for an internal pressure of 330 PSI at 550 °C due to the equilibrium decomposition pressure of the exemplary pressure-determining reactant NaH. Each cell weighs 120 kg and outputs 7.14 kW of thermal power. The bottom half of each tube is embedded in insulation. Copper or aluminum shot, a highly thermally conductive medium, that is penetrated with the water tubes surrounds the top-half of each cell. The temperature within the cell ranges between about 550 °C at the bottom wall to 400 °C at the wall surface facing shot. As shown in FIGURE 13, the 30.5 cm OD cross sectional span of each reactor is covered by six, 2.54 cm OD boiler (water) tubes with a thickness of 0.32 cm that are evenly spaced at 5.08 cm centers. The heat flux at the internal surface of each boiler tube is about 11.8 $kW/m^2$ that maintains the temperature of each boiler tube external surface at about 367 °C.

In an exemplary embodiment, the thermal power generated from the reactants is used to generate saturated steam at 360 °C. FIGURE 16 shows the flow diagram of steam generation. Water at room temperature (about 25 °C) flows into a heat exchanger where it is mixed with saturated steam and heated to a saturated temperature of 360 °C by the condensation of steam. A booster pump 251 increases the water pressure to a saturation pressure of 18.66 MPa at 360 ° C at the inlet of the steam-water separator 252. The saturated water flows through the boiler tubes of the water wall of the boiler system 253 to generate steam at the same temperature and pressure. Part of steam flows back to heat exchanger to preheat incoming return water from a turbine, while part of it goes to the turbine to generate electrical power. Additionally, the non-evaporated water in the water wall is recirculated to maintain an even temperature along each boiler tube. To achieve this, a steam collection line receives steam and non-evaporated water and deliveries it to a steam-water separator 252. Water is pumped from the bottom section of the separator to return to the boiler tubes through a water distribution line. The steam flows from the top of the separator 252 to the turbine with a fraction diverted to the heat exchanger to preheat the return water from the turbine. The saturated water flow rate from the 140-reactor system is 2.78 kg/s in the boiler tubes, and the total steam output flow rate is 1.39 kg/s.

In an embodiment, the reactants comprise at least two of a catalyst or a source of catalyst and a source of

hydrogen such as KH, a support such as carbon, and a reductant such as Mg. The product may be a metal-carbon product such as an intercalation product, $MH_yC_x$ and $MC_x$ (y may be a fraction or an integer, x is an integer) such as $KC_x$. The reactor may comprise one or more supplies of reactants, a reaction chamber maintained at an elevated temperature such that the flowing reactants undergo reaction therein to form hydrinos, a heat exchanger to remove heat from the reaction chamber, and a plurality of vessels to receive the product such as $KC_x$ and regenerate at least one of the reactants. The regeneration of carbon and M or MH from at least one of $MH_yC_x$ and $MC_x$ may by applying heat and vacuum wherein the collected evaporated metal M may be hydrided. In the case that the reductant is a metal, it may be recovered by evaporation as well. Each metal or hydride may be collected in one of the supplies of reactants. One of the supplies of reactants may comprise each vessel used to regenerate the carbon and containing the carbon and optionally the reductant.

The heat for regeneration may be supplied by the power from hydrinos. The heat may be transferred using the heat exchanger. The heat exchanger may comprise at least one heat pipe. The heat from the heated regeneration vessels may be delivered to a power load such as a heat exchanger or boiler. The flow of reactants or products such as those comprising carbon may be performed mechanically or achieved at least partially using gravity. The mechanical transporter may be an auger or a conveyor belt. In the case that the hydrino reaction is much shorter than the regeneration time, the volume of the regeneration vessels may exceed that of the hot reaction-zone. The volumes may be in a proportion to maintain a constant flow through the reaction zone.

In an embodiment, the rate of the evaporation, sublimation, or volatilization of the volatile metal such as an alkali or alkaline earth metal is limited by the surface area of the reactants relative to the vacuum space above them. The rate may be increased by rotating the cell or by other means of mixing to expose fresh surface to the vacuum space. In an embodiment, a reactant such as the reductant such as an alkaline earth metal such as Mg binds the particles of the support together to reduce their surface area. For example, Mg melts at 650 °C and may bind TiC particles together to reduce the surface area; this can be corrected by hydriding the metal such as Mg to $MgH_2$ and then forming a powder by grinding or pulverizing. A suitable method is ball milling. Alternatively, the hydride may be melted and removed as liquid or maintained as a liquid in case that this ameliorates the aggregation of the support particles. A suitable hydride is $MgH_2$ since the melting point is low, 327 °C.

In an embodiment, the reactor comprises a fluidized bed wherein the liquid reactants may comprise a coating on the support. The solid may be separated in a stage following reaction of the reactants to products including hydrinos. The separation may be with a cyclone separator. The separation allows for the condensation of metal vapor to force a reverse reaction for some products back to at least one original reactant. The original reaction mixture is regenerated, preferably thermally.

In an embodiment, an exemplary molten mixture material K/KH Mg $MgX_2$ (X is a halide) comprises a coating on TiC support rather than existing as separate phases. The K further comprises a vapor, and the pressure is preferably high in the power stage. The temperature in the power stage of the reactor is preferably higher than that required for regeneration such as about 600-800 °C. During regeneration of the reactants by a halide exchange reaction at the regeneration temperature or above, the K is condensed and KH is formed. The condensation may be at the temperature of about 100-400 °C wherein $H_2$ may be present to form KH. To permit the K condensation at low temperature and halide exchange reaction at high temperature, the reaction system further comprises a separator that removes the particles from vapor. This permits heated particles in one section or chamber and condensing vapor in another.

In other embodiments, the thermally reversible reaction comprises further exchange reactions, preferable between two species each comprising at least one metal atom. The exchange may be between a metal of the catalyst such as an alkali metal and the metal of the exchange partner such as an oxidant. The exchange may also be between the oxidant and the reductant. The exchanged species may be an anion such as a halide, hydride, oxide, sulfide, nitride, boride, carbide, silicide, arsenide, selenide, telluride, phosphide, nitrate, hydrogen sulfide, carbonate, sulfate, hydrogen sulfate, phosphate, hydrogen phosphate, dihydrogen phosphate, perchlorate, chromate, dichromate, cobalt oxide, and other oxyanions and anions known to those skilled in the art. The at least one of an exchange-partners may be comprise an alkali metal, alkaline earth metal, transition metal, second series transition metal, third series transition metal, noble metal, rare earth metal, Al, Ga, In, Sn, As, Se, and Te. Suitable exchanged anions are halide, oxide, sulfide, nitride, phosphide, and boride. Suitable metals for exchange are alkali, preferably Na or K, alkaline earth metal, preferably Mg or Ba, and a rare earth metal, preferably Eu or Dy, each as the metal or hydride. Exemplary catalyst reactants and with an exemplary exchange reaction are given infra. These reactions are not meant to be exhaustive and further examples would be known to those skilled in the art.

- 4g AC3-3 + 1g Mg + 1.66g KH + 2.5g DyI2, Ein:135.0 kJ, dE: 6.1 kJ, TSC: none, Tmax: 403 °C, theoretical is 1.89 kJ, gain is 3.22 times,

$$DyBr_2 + 2K \square 2KBr + Dy. \qquad (96)$$

- 4g AC3-3 + 1g Mg + 1g NaH + 2.09g EuF3, Ein:185.1 kJ, dE: 8.0 kJ, TSC: none, Tmax: 463 °C, theoretical is 1.69 kJ, gain is 4.73 times,

$$EuF_3 + 1.5Mg \square 1.5MgF_2 + Eu \quad (97)$$

$$EuF_3 + 3NaH \square 3NaF + Eu\ H_2 \quad (98)$$

- KH 8.3 gm+ Mg 5.0 gm + CAII-300 20.0gm + $CrB_2$ 3.7gm, Ein:317 kJ, dE: 19 kJ, no TSC with Tmax~340 °C, theoretical energy is endothermic 0.05 kJ, gain is infinite,

$$CrB_2 + Mg \square MgB_2. \quad (99)$$

- 0.70 g of $TiB_2$, 1.66 g of KH, 1 g of Mg powder and 4 g of CA-III 300 activated carbon powder (AC3-4) was finished. The energy gain was 5.1 kJ, but no cell temperature burst was observed. The maximum cell temperature was 431 °C, theoretical is 0.

$$TiB_2 + Mg \square MgB_2. \quad (100)$$

- 0.42 g of LiCl, 1.66 g of KH, 1 g of Mg powder and 4 g of AC3-4 was finished. The energy gain was 5.4 kJ, but no cell temperature burst was observed. The maximum cell temperature was 412 °C, theoretical is 0, the gain is infinity.

$$LiCl + KH \square KCl + LiH. \quad (101)$$

- 1.21 g of RbCl, 1.66 g of KH, 1 g of Mg powder and 4 g of AC3-4, energy gain was 6.0 kJ, but no cell temperature burst was observed. The maximum cell temperature was 442 °C, theoretical is 0.

$$RbCl + KH \square KCl + RbH. \quad (102)$$

- 4g AC3-5 + 1g Mg + 1.66g KH + 0.87g LiBr; Ein: 146.0 kJ; dE: 6.24 kJ; TSC: not observed; Tmax: 439 °C, theoretical is endothermic,

$$LiBr + KH \square KBr + LiH \quad (103)$$

- KH 8.3 gm+ Mg_ 5.0 gm + CAII-300 20.0gm + $YF_3$ 7.3 gm; Ein: 320 kJ; dE: 17 kJ; no TSC with Tmax~ 340 °C; Energy Gain ~ 4.5 X (X~0.74kJ * 5=3.7kJ),

$$YF_3 + 1.5Mg + 2KH \square 1.5MgF_2 + YH_2 + 2K. \quad (104)$$

- NaH 5.0 gm+ Mg 5.0 gm + CAII-300 20.0gm + $BaBr_2$ 14.85 gm (Dried); Ein: 328 kJ; dE: 16 kJ; no TSC with Tmax- 320 °C; Energy Gain 160X (X~0.02kJ*5=0.1 kJ),

$$BaBr_2 + 2NaH \square 2NaBr + BaH_2 \quad (105)$$

- KH 8.3 gm + Mg 5.0 gm + CAII-300 20.0gm + $BaCl_2$ 10.4 gm; Ein: 331 kJ; dE: 18 kJ No TSC with Tmax- 320 °C. Energy Gain ~ 6.9X (X~0.52x5=2.6 kJ)

$$BaCl_2 + 2KH \square 2KCl + BaH_2 \quad (106)$$

- NaH 5.0 gm+ Mg 5.0 gm + CAII-300 20.0gm + MgI2 13.9 gm; Ein: 315 kJ; dE: 16 kJ No TSC with Tmax- 340 °C. Energy Gain ~ 1.8X (X~1.75x5=8.75 kJ)

$$MgI_2 + 2NaH \square 2NaI + MgH_2 \quad (107)$$

- 4g AC3-2 + 1g Mg + 1g NaH + 0.97g ZnS; Ein:132.1kJ; dE: 7.5kJ; TSC: none; Tmax: 370 °C, theoretical is 1.4 kJ, gain is 5.33 times,

$$ZnS + 2NaH \square 2NaHS + Zn \quad (108)$$

$ZnS + Mg$ □ $MgS + Zn$. (109)

- 2.74 g of $Y_2S_3$, 1.66 g of KH, 1 g of Mg powder and 4 g of CA-III 300 activated carbon powder (dried at 300 °C), energy gain was 5.2 kJ, but no cell temperature burst was observed. The maximum cell temperature was 444 °C, theoretical is 0.41 kJ, gain is 12.64 times,

$Y_2S_3 + 3KH$ □ $3KHS + 2Y$ (110)

$Y_2S_3 + 6KH + 3Mg$ □ $3K_2S + 2Y + 3MgH_2$ (111)

$Y_2S_3 + 3Mg$ □ $3MgS + 2Y$. (112)

- 4g AC3-5 + 1g Mg + 1.66g KH + 1.82g $Ca_3P_2$; Ein:133.0 kJ; dE: 5.8 kJ; TSC: none; Tmax: 407 °C, the theoretical is endothermic, the gain is infinity.

- 20g AC3-5 + 5g Mg + 8.3g KH + 9.1g Ca3P2, Ein:282.1kJ, dE:18.1kJ, TSC: none, Tmax: 320 °C, theoretical is endothermic, the gain is infinity.

$Ca_3P_2 + 3Mg$ □ $Mg_3P_2 + 3Ca$. (113)

In an embodiment, the thermally regenerative reaction system comprises:

(i) at least one catalyst or a source of catalyst chosen from NaH, BaH, and KH;
(ii) at least one source of hydrogen chosen from NaH, KH, BaH, and $MgH_2$;
(iii) at least one oxidant chosen from an alkaline earth halide such as $BaBr_2$, $BaCl_2$, $BaI_2$, $CaBr_2$, $MgBr_2$, or $MgI_2$, a rare earth halide such as $EuBr_2$, $EuBr_3$, $EuF_3$, $DyI_2$, $LaF_3$, or $GdF_3$, a second or third series transition metal halide such as $YF_3$, a metal boride such as $CrB_2$ or $TiB_2$, an alkali halide such as LiCl, RbCl, or CsI, a metal sulfide such as $Li_2S$, ZnS or $Y_2S_3$, a metal oxide such as $Y_2O_3$, and a metal phosphide, nitride, or arsenide such as an alkaline earth phosphide, nitride, or arsenide such as $Ca_3P_2$, $Mg_3N_2$, and $Mg_3As_2$,
(iv) at least one reductant chosen from Mg and $MgH_2$; and
(v) a support chosen from AC, TiC, and WC.

In a further exemplary system capable of thermal regeneration, the exchange is between the catalyst or source of catalyst such as NaH, BaH, or KH and an alkaline earth halide such as $BaBr_2$ or $BaCl_2$ that may serve as an oxidant. Alkali metals and alkaline earth metals are not miscible in any portion. The melting points of Ba and Mg are 727 °C and 1090 °C, respectively; thus, separation during regeneration can easily be achieved. Furthermore, Mg and Ba do not form an intermetalic with the atomic % of Ba less than about 32% and the temperature maintained below about 600 °C. The heats of formation of $BaCl_2$, $MgCl_2$, $BaBr_2$, and $MgBr_2$ are -855.0 kJ/mole, -641.3 kJ/mole, -757.3 kJ/mole, and -524.3 kJ/mole, respectively; so, the barium halide is much more favored over the magnesium halide. Thus, thermal regeneration can be achieved from a suitable reaction mixture such as KH or NaH Mg TiC and $BaCl_2$ or $BaBr_2$ that forms the alkali halide and alkaline earth hydride. The regeneration can be achieved by heating the products and evaporating the alkali metal such that it is collected by means such as condensation. The catalysts may be rehydrided. In an embodiment, the removal of the alkali metal drives the reaction of the reformation of the alkaline earth halide. In other embodiments, a hydride may be decomposed by heating under vacuum when desirable. Since $MgH_2$ melts at 327 °C, it may be preferentially separated from other products by melting and selectively removing the liquid where desirable.

f. Getter. Support, or Matrix-Assisted Hydrino Reaction

In another embodiment, the exchange reaction is endothermic. In such an embodiment, the metal compound may serve as at least one of a favorable support or matrix for the hydrino reaction or getter for the product to enhance the hydrino reaction rate. Exemplary catalyst reactants and with an exemplary support, matrix, or getter are given infra. These reactions are not meant to be exhaustive and further examples would be known to those skilled in the art.

- 4g AC3-5 + 1g Mg + 1.66g KH + 2.23g $Mg_3As_2$, Ein:139.0 kJ, dE: 6.5 kJ, TSC: none, Tmax: 393 °C, the theoretical is endothermic, the gain is infinity.
- 20g AC3-5 + 5g Mg + 8.3g KH + 11.2g $Mg_3As_2$,Ein:298.6 kJ, dE:21.8 kJ, TSC: none, Tmax: 315 °C, theoretical is endothermic, the gain is infinity.
- 1.01 g of $Mg_3N_2$, 1.66 g of KH, 1 g of Mg powder and 4 g of AC3-4 in a 1" heavy duty cell, energy gain was 5.2

kJ, but no cell temperature burst was observed. The maximum cell temperature was 401 °C, theoretical is 0, the gain is infinity.

- 0.41 g of AlN, 1.66 g of KH, 1 g of Mg powder and 4 g of AC3-5 in a 1" heavy duty cell, energy gain was 4.9 kJ, but no cell temperature burst was observed. The maximum cell temperature was 407 °C, theoretical is endothermic.

In an embodiment, the thermally regenerative reaction system comprises at least two components chosen from (i)-(v):

(i) at least one catalyst or a source of catalyst chosen from NaH, BaH, KH, and $MgH_2$;
(ii) at least one source of hydrogen chosen from NaH, BaH, and KH;
(iii) at least one oxidant, matrix, second support, or getter chosen from a metal arsenide such as $Mg_3As_2$ and a metal nitride such as $Mg_3N_2$ or AlN;
(iv) at least one reductant chosen from Mg and $MgH_2$; and
(v) at least one support chosen from AC, TiC, or WC.

D. Liquid Fuels: Organic and Molten Solvent Systems

Further embodiments comprise a molten solid such as a molten salt or a liquid solvent contained in chamber 200. The liquid solvent may be vaporized by operating the cell at a temperature above the boiling point of the solvent. The reactants such as the catalyst may be dissolved or suspended in the solvent or reactants that form the catalyst and H may be suspended or dissolved in the solvent. A vaporized solvent may act as a gas with the catalyst to increase the rate of the hydrogen catalyst reaction to form hydrinos. The molten solid or vaporized solvent may be maintained by applying heat with heater 230. The reaction mixture may further comprise a solid support such as a HSA material. The reaction may occur at the surface due to the interaction of a molten solid, a liquid, or a gaseous solvent with the catalyst and hydrogen such as K or Li plus H or NaH. In an embodiment using a heterogeneous catalyst, a solvent of the mixture may increase the catalyst reaction rate.

In embodiments comprising hydrogen gas, the $H_2$ may be bubbled through the solution. In another embodiment, the cell is pressurized to increase the concentration of dissolved $H_2$. In a further embodiment, the reactants are stirred, preferably at high speed and at a temperature that is about the boiling point of the organic solvent and about the melting point of the inorganic solvent.

The organic solvent reaction mixture may be heated, preferably in the temperature range of about 26 °C to 400 °C, more preferably in the range of about 100 °C to 300 °C. The inorganic solvent mixture may be heated to a temperature above that at which the solvent is liquid and below a temperature that causes total decomposition of the NaH molecules.

The solvent may comprise a molten metal. Suitable metals have a low melting point such as Ga, In, and Sn. In another embodiment, the molten metal may serve as the support such as the conductive support. The reaction mixture may comprise at least three of a catalyst or a source of catalyst, hydrogen or a source of hydrogen, a metal, a reductant, and an oxidant. The cell may be operated such that the metal is molten. In an embodiment, the catalyst is selected from NaH or KH which also serves as the source of hydrogen, the reductant is Mg, and the oxidant is one of $EuBr_2$, $BaCl_2$, $BaBr_2$, AlN, $Ca_3P_2$, $Mg_3N_2$, $Mg_3As_2$, $MgI_2$, $CrB_2$, $TiB_2$, an alkali halide, $YF_3$, MgO, $Ni_2Si$, $Y_2S_3$, $Li_2S$, NiB, $GdF_3$, and $Y_2O_3$. In another embodiment, the oxidant is one of $MnI_2$, $SnI_2$, $FeBr_2$, $CoI_2$, $NiBr_2$, AgCl, and InCl.

a. Organic Solvents

The organic solvent may comprise one or more of the moieties that can be modified to further solvents by addition of functional groups. The moieties may comprise at least one of a hydrocarbon such as an alkane, cyclic alkane, alkene, cyclic alkene, alkyne, aromatic, heterocyclic, and combinations thereof, ether, halogenated hydrocarbon (fluoro, chloro, bromo, iodo hydrocarbon), preferably fluorinated, amine, sulfide, nitrile, phosphoramide (e.g. $OP(N(CH_3)_2)_3$), and aminophosphazene. The groups may comprise at least one of alkyl, cycloalkyl, alkoxycarbonyl, cyano, carbamoyl, heterocyclic rings containing C, O, N, S, sulfo, sulfamoyl, alkoxysulfonyl, phosphono, hydroxyl, halogen, alkoxy, alkylthiol, acyloxy, aryl, alkenyl, aliphatic, acyl, carboxyl, amino, cyanoalkoxy, diazonium, carboxyalkylcarboxamido, alkenylthio, cyanoalkoxycarbonyl, carbamoylalkoxycarbonyl, alkoxy carbonylamino, cyanoalkylamino, alkoxycarbonylalkylamino, sulfoalkylamino, alkylsulfamoylaklylamino, oxido, hydroxy alkyl, carboxy alkylcarbonyloxy, cyanoalkyl, carboxyalkylthio, arylamino, heteroarylamino, alkoxycarbonyl, alkylcarbonyloxy, cyanoalkoxy, alkoxycarbonylalkoxy, carbamoylalkoxy, carbamoylalkyl carbonyloxy, sulfoalkoxy, nitro, alkoxyaryl, halogenaryl, amino aryl, alkylaminoaryl, tolyl, alkenylaryl, allylaryl, alkenyloxyaryl, allyloxyaryl, cyanoaryl, carbamoylaryl, carboxyaryl, alkoxycarbonylaryl, alkylcarbonyoxyaryl, sulfoaryl, alkoxysulfoaryl, sulfamoylaryl, and nitroaryl. Preferably, the groups comprise at least one of alkyl, cycloalkyl, alkoxy, cyano, heterocyclic rings containing C, O, N, S, sulfo, phosphono, halogen, alkoxy, alkylthiol, aryl, alkenyl, aliphatic, acyl, alkyl amino, alkenylthio, arylamino, heteroarylamino, halogenaryl, amino aryl, alkylaminoaryl, alkenylaryl,

allylaryl, alkenyloxyaryl, allyloxyaryl, and cyanoaryl groups.

In an embodiment comprising a liquid solvent, the catalyst NaH is at least one of a component of the reaction mixture and is formed from the reaction mixture. The reaction mixture may further comprise at least one of the group of NaH, Na, $NH_3$, $NaNH_2$, $Na_2NH$, $Na_3N$, $H_2O$, NaOH, NaX (X is an anion, preferably a halide), $NaBH_4$, $NaAlH_4$, Ni, Pt black, Pd black, R-Ni, R-Ni doped with a Na species such as at least one of Na, NaOH, and NaH, a HSA support, getter, a dispersant, a source of hydrogen such as $H_2$, and a hydrogen dissociator. In other embodiments, Li, K, Rb, or Cs replaces Na. In an embodiment, the solvent has a halogen functional group, preferably fluorine. A suitable reaction mixture comprises at least one of hexafluorobenzene and octafluoronaphthalene added to a catalyst such as NaH, and mixed with a support such as activated carbon, a fluoropolymer or R-Ni. In an embodiment, the reaction mixture comprises one or more species from the group of Na, NaH, a solvent, preferably a fluorinated solvent, and a HSA material. A suitable fluorinated solvent for regeneration is $CF_4$. A suitable support or HSA material for a fluorinated solvent with NaH catalysts is NaF. In an embodiment, the reaction mixture comprises at least NaH, $CF_4$, and NaF. Other fluorine-based supports or getters comprise $M_2SiF_6$ wherein M is an alkali metal such as $Na_2SiF_6$ and $K_2SiF_6$, $MSiF_6$ wherein M is an alkaline earth metal such as $MgSiF_6$, $GaF_3$, $PF_5$, $MPF_6$ wherein M is an alkali metal, $MHF_2$ wherein M is an alkali metal such as $NaHF_2$ and $KHF_2$, $K_2TaF_7$, $KBF_4$, $K_2MnF_6$, and $K_2ZrF_6$ wherein other similar compounds are anticipated such as those having another alkali or alkaline earth metal substitution such as one of Li, Na, or K as the alkali metal.

b. Inorganic Solvents

In another embodiment, the reaction mixture comprises at least one inorganic solvent. The solvent may additionally comprise a molten inorganic compound such as a molten salt. The inorganic solvent may be molten NaOH. In an embodiment, the reaction mixture comprises a catalyst, a source of hydrogen, and an inorganic solvent for the catalyst. The catalyst may be at least one of NaH molecules, Li, and K. The solvent may be at least one of a molten or fused salt or eutectic such as at least one of the molten salts of the group of alkali halides and alkaline earth halides. The inorganic solvent of the NaH catalyst reaction mixture may comprise a low-melting eutectic of a mixture of alkali halides such as NaCl and KCl. The solvent may be a low-melting point salt, preferably a Na salt such as at least one of NaI (660 °C), $NaAlCl_4$ (160 °C), $NaAlF_4$, and compound of the same class as $NaMX_4$ wherein M is a metal and X is a halide having a metal halide that is more stable than NaX. The reaction mixture may further comprise a support such as R-Ni.

The inorganic solvent of the Li catalyst reaction mixture may comprise a low-melting eutectic of a mixture of alkali halides such as LiCl and KCl. The molten salt solvent may comprise a fluorine-based solvent that is stable to NaH. The melting point of $LaF_3$ is 1493 °C and the melting point of NaF is 996 °C. A ball-milled mixture in appropriate ratios, with optionally other fluorides, comprises a fluoride-salt solvent that is stable to NaH and melts preferably in the range of 600 °C-700 °C. In a molten-salt embodiment, the reaction mixture comprises NaH + salt mixture such as NaF-KF-LiF (11.5-42.0-46.5) MP=454 °C or NaH + salt mixture such as LiF-KF (52%-48%) MP=492 °C.

V. Regeneration Systems and Reactions

A schematic drawing of a system for recycling or regenerating the fuel in accordance with the present disclosure is shown in FIGURE 4. In an embodiment, the byproducts of the hydrino reaction comprise a metal halide MX, preferably NaX or KX. Then, the fuel recycler 18 (FIGURE 4) comprises a separator 21 to separate inorganic compounds such as NaX from the support. In an embodiment, the separator or a component thereof comprises a shifter or cyclone separator 22 that performs the separation based on density differences of the species. A further separator or component thereof comprises a magnetic separator 23 wherein magnetic particles such as nickel or iron are pulled out by a magnet while nonmagnetic material such as MX flow through the separator. In another embodiment, the separator or a component thereof comprises a differential product solubilization or suspension system 24 comprising a component solvent wash 25 that dissolves or suspends at least one component to a greater extent than another to permit the separation, and may further comprise a compound recovery system 26 such as a solvent evaporator 27 and compound collector 28. Alternatively, the recovery system comprises a precipitator 29 and a compound dryer and collector 30. In an embodiment, waste heat from the turbine 14 and water condensor 16 shown in FIGURE 4 is used to heat at least one of the evaporator 27 and dryer 30 (FIGURE 4). Heat for any other of the stages of the recycler 18 (FIGURE 4) may comprise the waste heat.

The fuel recycler 18 (FIGURE 4) further comprises an electrolyzer 31 that electrolyzes the recovered MX to metal and halogen gas or other halogenated or halide product. In an embodiment, the electrolysis occurs within the power reactor 36, preferably from a melt such as a eutectic melt. The electrolysis gas and metal products are separately collected at highly volatile gas collector 32 and a metal collector 33 that may further comprise a metal still or separator 34 in the case of a mixture of metals, respectively. If the initial reactant is a hydride, the metal is hydrided by a hydriding reactor 35 comprising a cell 36 capable of pressures less than, greater than, and equal to atmospheric, an inlet and outlet 37 for the metal and hydride, an inlet for hydrogen gas 38 and its valve 39, a hydrogen gas supply 40, a gas outlet 41 and its valve 42, a pump 43, a heater 44, and pressure and temperature gauges 45. In an embodiment, the hydrogen

supply 40 comprises an aqueous electrolyzer having a hydrogen and oxygen gas separator. The isolated metal product is at least partially halogenated in a halogenation reactor 46 comprising a cell 47 capable of pressures less than, greater than, and equal to atmospheric, an inlet for the carbon and outlet for the halogenated product 48, an inlet for fluorine gas 49 and its valve 50, a halogen gas supply 51, a gas outlet 52 and its valve 53, a pump 54, a heater 55, and pressure and temperature gauges 56. Preferably, the reactor also contains catalysts and other reactants to cause the metal 57 to become the halide of the desired oxidation state and stoichiometry as the product. The at least two of the metal or metal hydride, metal halide, support, and other initial reactants are recycled to the boiler 10 after being mixed in a mixer 58 for another power-generation cycle.

In exemplary hydrino and regeneration reactions, the reaction mixture comprises NaH catalyst, Mg, $MnI_2$, and support, activated carbon, WC or TiC. In an embodiment, the source of exothermic reaction is the oxidation reaction of metal hydrides by $MnI_2$ such as

$$2KH + MnI_2 \rightarrow 2KI + Mn + H_2 \qquad (114)$$

$$Mg + MnI_2 \rightarrow MgI_2 + Mn. \qquad (115)$$

KI and $MgI_2$ may be electrolyzed to $I_2$, K, and Mg from a molten salt. The molten electrolysis may be performed using a Downs cell or modified Downs cell. Mn may be separated using a mechanical separator and optionally sieves. Unreacted Mg or $MgH_2$ may be separated by melting and by separation of solid and liquid phases. The iodides for the electrolysis may be from the rinse of the reaction products with a suitable solvent such as deoxygenated water. The solution may be filtered to remove the support such as AC and optionally the transition metal. The solid may be centrifuged and dried, preferably using waste heat from the power system. Alternative, the halides may be separated by melting them followed by separation of the liquid and solid phases. In another embodiment, the lighter AC may initially be separated from the other reaction products by a method such as cyclone separation. K and Mg are immiscible, and the separated metals such as K may be hydrided with $H_2$ gas, preferably from the electrolysis of $H_2O$. The metal iodide may be formed by know reactions with the separated metal or with the metal, unseparated from AC. In an embodiment, Mn is reacted with HI to form $MnI_2$, and $H_2$ that is recycled and reacted with $I_2$ to form HI. In other embodiments, other metals, preferably a transition metal, replaces Mn. Another reductant such as Al may replace Mg. Another halide, preferably chloride may replace iodide. LiH, KH, RbH, or CsH may replace NaH.

In exemplary hydrino and regeneration reactions, the reaction mixture comprises NaH catalyst, Mg, AgCl, and support, activated carbon. In an embodiment, the source of exothermic reaction is the oxidation reaction of metal hydrides by AgCl such as

$$KH + AgCl \rightarrow KCl + Ag + 1/2H_2 \qquad (116)$$

$$Mg + 2AgCl \rightarrow MgCl_2 + 2Ag. \qquad (117)$$

KCl and $MgCl_2$ may be electrolyzed to $Cl_2$, K, and Mg from a molten salt. The molten electrolysis may be performed using a Downs cell or modified Downs cell. Ag may be separated using a mechanical separator and optionally sieves. Unreacted Mg or $MgH_2$ may be separated by melting and by separation of solid and liquid phases. The chlorides for the electrolysis may be from the rinse of the reaction products with a suitable solvent such as deoxygenated water. The solution may be filtered to remove the support such as AC and optionally the Ag metal. The solid may be centrifuged and dried, preferably using waste heat from the power system. Alternative, the halides may be separated by melting them followed by separation of the liquid and solid phases. In another embodiment, the lighter AC may initially be separated from the other reaction products by a method such as cyclone separation. K and Mg are immiscible, and the separated metals such as K may be hydrided with $H_2$ gas, preferably from the electrolysis of $H_2O$. The metal chloride may be formed by know reactions with the separated metal or with the metal, unseparated from AC. In an embodiment, Ag is reacted with $Cl_2$ to form AgCl, and $H_2$ that is recycled and reacted with $I_2$ to form HI. In other embodiments, other metals, preferably a transition metal or In, replaces Ag. Another reductant such as Al may replace Mg. Another halide, preferably chloride may replace iodide. LiH, KH, RbH, or CsH may replace NaH.

In an embodiment, the reaction mixture is regenerated from hydrino reaction products. In exemplary hydrino and regeneration reactions, the solid fuel reaction mixture comprises KH or NaH catalyst, Mg or $MgH_2$, and alkaline earth halide such as $BaBr_2$, and support, activated carbon, WC, or preferably TiC. In an embodiment, the source of exothermic reaction is the oxidation reaction of metal hydrides or metals by $BaBr_2$ such as

$$2KH + Mg + BaBr_2 \rightarrow 2\,KBr + Ba + MgH_2 \qquad (118)$$

$$2NaH + Mg + BaBr_2 \rightarrow 2NaBr + Ba + MgH_2. \qquad (119)$$

The melting points of Ba, magnesium, $MgH_2$, NaBr, and KBr are 727 °C, 650 °C, 327 °C, 747 °C, and 734 °C, respectively. Thus, $MgH_2$ can be separated from barium and any Ba-Mg intermetalic by maintaining the $MgH_2$ with optional addition of $H_2$, preferentially melting the $MgH_2$, and separating the liquid from the reaction-product mixture. Optionally, it may be thermally decomposed to Mg. Next, the remaining reaction products may be added to an electrolysis melt. Solid support and Ba precipitates to form preferably separable layers. Alternatively, Ba may be separated as a liquid by melting. Then, NaBr or KBr may be electrolyzed to form the alkali metal and $Br_2$. The latter is reacted with Ba to form $BaBr_2$. Alternatively, Ba is the anode, and $BaBr_2$ forms directly in the anode compartment. The alkali metal may be hydrided following electrolysis or formed in the cathode compartment during electrolysis by bubbling $H_2$ in this compartment. Then, $MgH_2$ or Mg, NaH or KH, $BaBr_2$, and support are retuned to the reaction mixture. In other embodiments, another alkaline earth halide such as $BaI_2$, $MgF_2$, $SrCl_2$, $CaCl_2$, or $CaBr_2$, replaces $BaBr_2$.

In another embodiment, the regeneration reactions may occur without electrolysis due to the small energy difference between the reactants and products. The reactions given by Eqs. (118-119) may be reversed by changing the reactions condition such as temperature or hydrogen pressure. Alternatively, a molten or volatile species such as K or Na may be selectively removed to drive the reaction backwards to regenerate a reactant or a species that can be further reacted and added back to the cell to form the original reaction mixture. In another embodiment, the volatile species may be continually refluxed to maintain the reversible reaction between the catalyst or source of catalyst such as NaH, BaH, KH, Na, or K and the initial oxidant such as an alkaline earth halide or rare earth halide. In an embodiment, the reflux is achieved using a still such as still 34 shown in FIGURE 4. The still may comprise a wick or capillary system that forms droplets of the volatile species such as K or other alkali metal. The droplets may fall into the reaction chamber by gravity. The wick or capillary may be similar to that of a molten-metal heat pipe, or the still may comprise a molten metal heat pipe. The heat pipe could return the volatile species such as a metal such as K to the reaction mixture via a wick. In another embodiment, the hydride may be formed and wiped mechanically from a collection surface or structure. The hydride may fall back into the reaction mixture by gravity. The return supplying may be continuously or intermittently. In this embodiment, the cell could be horizontal with a vapor space along the horizontal axis of the cell, and the condensor section may be at the end of the cell. The amount of volatile species such as K may be present in the cell at about equal stoichiometry or less with the metal of the oxidant such that it is limiting to cause the formation of the oxidant in the reverse reaction when the volatile species is in transport in the cell. Hydrogen may be supplied to the cell at a controlled optimal pressure. Hydrogen may be bubbled through the reaction mixture to increase its pressure. The hydrogen may be flowed through the material to maintain a desired hydrogen pressure. The heat may be removed for the condensing section by a heat exchanger. The heat transfer may be by boiling of a coolant such as water. The boiling may be nucleate boiling to increase the heat transfer rate.

In another embodiment comprising a reaction mixture of more than one volatile species such as metals, each species may be evaporate or sublimed to a gaseous state and condensed. Each species may be condensed at a separate region based on differences in vapor pressure with temperature relationships between species. Each species may be further reacted with other reactants such as hydrogen or directly returned to the reaction mixture. The combined reaction mixture may comprise the regenerated initial reaction mixture to form hydrinos. The reaction mixture may comprise at least two species of the group of a catalyst, a source of hydrogen, an oxidant, a reductant, and a support. The support may also comprise the oxidant. Carbon or carbide are such suitable supports. The oxidant may comprise an alkaline earth metal such as Mg, and the catalyst and source of H may comprise KH. K and Mg may be thermally volatilized and condensed as separate bands. K may be hydrided to KH by treatment with $H_2$, and KH may be returned to the reaction mixture. Alternatively, K may be returned and then reacted with hydrogen to form KH. Mg may be directly returned to the reaction mixture. The products may be continuously or intermittently regenerated back onto the initial reactants as power is generated by forming hydrinos. The corresponding H that is consumed is replaced to maintain power output.

In another embodiment, the reaction conditions such as the temperature or hydrogen pressure may be changed to reverse the reaction. In this case, the reaction is initially run in the forward direction to form hydrinos and the reaction mixture products. Then, the products other than lower-energy hydrogen are converted to the initial reactants. This may be performed by changing the reaction conditions and possibly adding or removing at least partially the same or other products or reactant as those initially used or formed. Thus, the forward and regeneration reactions are carried out in alternating cycles. Hydrogen may be added to replace that consumed in the formation of hydrinos. In another embodiment, reaction conditions are maintained such as an elevated temperature wherein the reversible reaction is optimized such that both the forward and reverse reactions occur in a manner that achieves the desired, preferably maximum, rate of hydrino formation.

In exemplary hydrino and regeneration reactions, the solid fuel reaction mixture comprises NaH catalyst, Mg, $FeBr_2$, and support, activated carbon. In an embodiment, the source of exothermic reaction is the oxidation reaction of metal hydrides by $FeBr_2$ such as

$$2NaH + FeBr_2 \rightarrow 2NaBr + Fe + H_2 \qquad (120)$$

$$Mg + FeBr_2 \rightarrow MgBr_2 + Fe. \quad (121)$$

NaBr and $MgBr_2$ may be electrolyzed to $Br_2$, Na, and Mg from a molten salt. The molten electrolysis may be performed using a Downs cell or modified Downs cell. Fe is ferromagnetic and may be separated magnetically using a mechanical separator and optionally sieves. In another embodiment, ferromagnetic Ni may replace Fe. Unreacted Mg or $MgH_2$ may be separated by melting and by separation of solid and liquid phases. The bromides for the electrolysis may be from the rinse of the reaction products with a suitable solvent such as deoxygenated water. The solution may be filtered to remove the support such as AC and optionally the transition metal. The solid may be centrifuged and dried, preferably using waste heat from the power system. Alternative, the halides may be separated by melting them followed by separation of the liquid and solid phases. In another embodiment, the lighter AC may initially be separated from the other reaction products by a method such as cyclone separation. Na and Mg are immiscible, and the separated metals such as Na may be hydrided with $H_2$ gas, preferably from the electrolysis of $H_2O$. The metal bromide may be formed by know reactions with the separated metal or with the metal, not separated from AC. In an embodiment, Fe is reacted with HBr to form $FeBr_2$, and $H_2$ that is recycled and reacted with $Br_2$ to form HBr. In other embodiments, other metals, preferably a transition metal, replaces Fe. Another reductant such as Al may replace Mg. Another halide, preferably chloride may replace bromide. LiH, KH, RbH, or CsH may replace NaH.

In exemplary hydrino and regeneration reactions, the solid fuel reaction mixture comprises KH or NaH catalyst, Mg or MgH2, $SnBr_2$, and support, activated carbon, WC, or TiC. In an embodiment, the source of exothermic reaction is the oxidation reaction of metal hydrides or metals by $SnBr_2$ such as

$$2KH + SnBr_2 \rightarrow 2KBr + Sn + H_2 \quad (122)$$

$$2NaH + SnBr_2 \rightarrow 2NaBr + Sn + H_2 \quad (123)$$

$$Mg + SnBr_2 \rightarrow MgBr_2 + Sn. \quad (124)$$

The melting points of tin, magnesium, $MgH_2$, NaBr, and KBr are 119 °C, 650 °C, 327 °C, 747 °C, and 734 °C, respectively. Tin-magnesium alloy will melt above a temperature such as 400 °C for about 5wt% Mg as given in its alloys phase diagram. In an embodiment, tin and magnesium metals and alloys are separated from the support and halides by melting the metals and alloys and separating the liquid and solid phases. The alloy may be reacted with $H_2$ at a temperature that forms $MgH_2$ solid and tin metal. The solid and liquid phases may be separated to give $MgH_2$ and tin. The $MgH_2$ may be thermally decomposed to Mg and $H_2$. Alternatively, $H_2$ may be added to the reaction products in situ at a temperature selective to convert any unreacted Mg and any Sn-Mg alloy to solid $MgH_2$ and liquid tin. The tin may be selectively removed. Then, $MgH_2$ may be heated and removed as a liquid. Next, halides may be removed from the support by methods such (1) melting them and separation of the phases, (2) cyclone separation based on density differences wherein a dense support such as WC is preferred, or (3) sieving based on size differences. Alternatively, the halides may be dissolved in a suitable solvent, and the liquid and solid phases separated by methods such as filtering. The liquid may be evaporated and then the halides may be electrolyzed from the melt to Na or K and possibly Mg metals that are immiscible and each separated. In another embodiment K is formed by reduction of the halide using Na metal that is regenerated by electrolysis of a sodium halide, preferably the same halide as formed in the hydrino reactor. In addition, halogen gas such as $Br_2$ is collected from the electrolysis melt and reacted with isolated Sn to form $SnBr_2$ that is recycled for another cycle of the hydrino reaction together with NaH or KH, and Mg or $MgH_2$ wherein the hydrides are formed by hydriding with $H_2$ gas. In an embodiment, HBr is formed and reacted with Sn to from $SnBr_2$. HBr may be formed by reaction of $Br_2$ and $H_2$ or during electrolysis by bubbling $H_2$ at the anode that has an advantage of lowering the electrolysis energy. In other embodiment another metal replaces Sn, preferably a transition metal, and another halide may replace Br such as I.

In another embodiment, at the initial step, all of the reaction products are reacted with aqueous HBr, and the solution is concentrated to precipitate $SnBr_2$ from $MgBr_2$ and KBr solution. Other suitable solvents and separation methods may be used to separate the salts. $MgBr_2$ and KBr are then electrolyzed to Mg and K. Alternatively, Mg or $MgH_2$ is first removed using mechanical or by selective solvent methods such that only KBr need be electrolyzed. In an embodiment, Sn is removed as a melt from solid $MgH_2$ that may be formed by adding $H_2$ during or after the hydrino reaction. $MgH_2$ or Mg, KBr, and support are then added to the electrolysis melt. The support settles in a sedimentary zone due to its large particle size. $MgH_2$ and KBr form part of the melt and separate based on density. Mg and K are immiscible, and K also forms a separate phase such that Mg and K are collected separately. The anode may be Sn such that K, Mg, and $SnBr_2$ are the electrolysis products. The anode may be liquid tin or liquid tin may be sparged at the anode to react with bromine and form $SnBr_2$. In this case the energy gap for regeneration is the compound gap versus the higher elemental gap corresponding to elemental products at both electrodes. In a further embodiment, the

reactants comprise KH, support, and $SnI_2$ or $SnBr_2$. The Sn may be removed as a liquid, and the remaining products such as KX and support may be added to the electrolysis melt wherein the support separates based on density. In this case, a dense support such as WC is preferred.

The reactants may comprise an oxygen compound to form an oxide product such as an oxide of the catalyst or source of catalyst such as that of NaH, Li, or K and an oxide of the reductant such as that of Mg, $MgH_2$, Al, Ti, B, Zr, or La. In an embodiment, the reactants are regenerated by reacting the oxide with an acid such as a hydrogen halide acid, preferably HCl, to form the corresponding halide such as the chloride. In an embodiment, an oxidized carbon species such as carbonate, hydrogen carbonate, a carboxylic acid species such as oxalic acid or oxalate may be reduced by a metal or a metal hydride. Preferably, at least one of Li, K, Na, LiH, KH, NaH, Al, Mg, and $MgH_2$ reacts with the species comprising carbon and oxygen and forms the corresponding metal oxide or hydroxide and carbon. Each corresponding metal may be regenerated by electrolysis. The electrolysis may be performed using a molten salt such as that of a eutectic mixture. The halogen gas electrolysis product such as chlorine gas may be used to form the corresponding acid such as HCl as part of a regeneration cycle. The hydrogen halide acid HX may be formed by reacting the halogen gas with hydrogen gas and by optionally dissolving the hydrogen halide gas into water. Preferably the hydrogen gas is formed by electrolysis of water. The oxygen may be a reactant of the hydrino reaction mixture or may be reacted to form the source of oxygen of the hydrino reaction mixture. The step of reacting the oxide hydrino reaction product with acid may comprise rinsing the product with acid to form a solution comprising the metal salts. In an embodiment, the hydrino reaction mixture and the corresponding product mixture comprises a support such as carbon, preferably activated carbon. The metal oxides may be separated from the support by dissolving them in aqueous acid. Thus, the product may be rinsed with acid and may further be filtered to separate the components of the reaction mixture. The water may be removed by evaporation using heat, preferably waste heat from the power system, and the salts such as metal chlorides may be added to the electrolysis mixture to form the metals and halogen gas. In an embodiment, any methane or hydrocarbon product may be reformed to hydrogen and optionally carbon or carbon dioxide. Alternatively, the methane was be separated from the gas product mixture and sold as a commercial product. In another embodiment, the methane may be formed into other hydrocarbon products by methods known in the art such as Fischer-Tropsch reactions. The formation of methane may be suppressed by adding an interfering gas such as an inert gas and by maintaining unfavorable conditions such as a reduced hydrogen pressure or temperature.

In another embodiment, metal oxides are directly electrolyzed from a eutectic mixture. Oxides such as MgO may be reacted to water to form hydroxides such as $Mg(OH)_2$. In an embodiment, the hydroxide is reduced. The reductant may be an alkaline metal or hydride such as Na or NaH. The product hydroxide may be electrolyzed directly as a molten salt. Hydrino reaction products such as alkali metal hydroxides may also be used as a commercial product and the corresponding halides acquired. The halides may then be electrolyzed to halogen gas and metal. The halogen gas may be used as a commercial industrial gas. The metal may be hydrided with hydrogen gas, preferably for the electrolysis of water, and supplied to the reactor as a part of the hydrino reaction mixture.

The reductant such as an alkali metal can be regenerated from the product comprising a corresponding compound, preferably NaOH or $Na_2O$, using methods and systems known to those skilled in the art. One method comprises electrolysis in a mixture such as a eutectic mixture. In a further embodiment, the reductant product may comprise at least some oxide such as a reductant metal oxide (e.g. MgO). The hydroxide or oxide may be dissolved in a weak acid such as hydrochloric acid to form the corresponding salt such as NaCl or $MgCl_2$. The treatment with acid may also be an anhydrous reaction. The gases may be streaming at low pressure. The salt may be treated with a product reductant such as an alkali or alkaline earth metal to form the original reductant. In an embodiment, the second reductant is an alkaline earth metal, preferably Ca wherein NaCl or $MgCl_2$ is reduced to Na or Mg metal. The additional product of $CaCl_3$ is recovered and recycled as well. In alternative embodiment, the oxide is reduced with $H_2$ at high temperature.

In exemplary hydrino and regeneration reactions, the reaction mixture comprises NaH catalyst, $MgH_2$, $O_2$, and support, activated carbon. In an embodiment, the source of exothermic reaction is the oxidation reaction of metal hydrides by $O_2$ such as

$$MgH_2 + O_2 \rightarrow Mg\,(OH)_2 \qquad (125)$$

$$MgH_2 + 1.5O_2 + C \rightarrow MgCO_3 + H_2 \qquad (126)$$

$$NaH + 3/2O_2 + C \rightarrow NaHCO_3 \qquad (127)$$

$$2NaH + O_2 \rightarrow 2NaOH. \qquad (128)$$

Any MgO product may be converted to the hydroxide by reaction with water

$$MgO + H_2O \rightarrow Mg(OH)_2. \qquad (129)$$

Sodium or magnesium carbonate, hydrogen carbonate, and other species comprising carbon and oxygen may be reduced with Na or NaH:

$$NaH + Na_2CO_3 \rightarrow 3NaOH + C + 1/H_2 \qquad (130)$$

$$NaH + 1/3MgCO_3 \rightarrow NaOH + 1/3C + 1/3Mg \qquad (131)$$

$Mg(OH)_2$ can be reduced to Mg using Na or NaH:

$$2Na + Mg(OH)_2 \rightarrow 2NaOH + Mg. \qquad (132)$$

Then, NaOH can be electrolyzed to Na metal and NaH and $O_2$ directly from the melt. The Castner process may be used. A suitable cathode and anode for a basic solution is nickel. The anode may also be carbon, a noble metal such as Pt, a support such as Ti coated with a noble metal such as Pt, or a dimensionally stable anode. In another embodiment, NaOH is converted to NaCl by reaction with HCl wherein the NaCl electrolysis gas $Cl_2$ may be reacted with $H_2$ from the electrolysis of water to form the HCl. The molten NaCl electrolysis may be performed using a Downs cell or modified Downs cell. Alternatively, HCl may be produced by chloralkali electrolysis. The aqueous NaCl for this electrolysis may be from the rinse of the reaction products with aqueous HCl. The solution may be filtered to remove the support such as AC that may be centrifuged and dried, preferably using waste heat from the power system.

In an embodiment, the reaction step comprise, (1) rinse the products with aqueous HCl to form metal chlorides from species such as hydroxides, oxides, and carbonates, (2) convert any evolved $CO_2$ to water and C by $H_2$ reduction using the water gas shift reaction and the Fischer Tropsch reaction wherein the C is recycled as the support at step 10 and the water may be used at steps, 1, 4, or 5, (3) filter and dry the support such as AC wherein the drying may include the step of centrifugation, (4) electrolyze water to $H_2$ and $O_2$ to supply steps 8 to 10, (5) optionally form $H_2$ and HCl from the electrolysis of aqueous NaCl to supply steps 1 and 9, (6) isolate and dry the metal chlorides, (7) electrolyze a melt of the metal chloride to metals and chlorine, (8) form HCl by reaction of $Cl_2$ and $H_2$ to supply step 1, (9) hydride any metal to form the corresponding starting reactant by reaction with hydrogen, and (10) form the initial reaction mixture with the addition of $O_2$ from step 4 or alternatively using $O_2$ isolated from the atmosphere.

In another embodiment, at least one of magnesium oxide and magnesium hydroxide are electrolyzed from a melt to Mg and $O_2$. The melt may be a NaOH melt wherein Na may also be electrolyzed. In an embodiment, carbon oxides such as carbonates and hydrogen carbonates may be decomposed to at least one of CO and $CO_2$ that may be added to the reaction mixture as a source of oxygen. Alternatively, the carbon oxide species such as $CO_2$ and CO may be reduced to carbon and water by hydrogen. $CO_2$ and CO and may be reduced by the water gas shift reaction and the Fischer Tropsch reaction.

In exemplary hydrino and regeneration reactions, the reaction mixture comprises NaH catalyst, $MgH_2$, $CF_4$, and support, activated carbon. In an embodiment, the source of exothermic reaction is the oxidation reaction of metal hydrides by $CF_4$ such as

$$2MgH_2 + CF_4 \rightarrow C + 2MgF_2 + 2H_2 \qquad (133)$$

$$2MgH_2 + CF_4 \rightarrow CH_4 + 2MgF_2 \qquad (134)$$

$$4NaH + CF_4 \rightarrow C + 4NaF + 2H_2 \qquad (135)$$

$$4NaH + CF_4 \rightarrow CH_4 + 4NaF. \qquad (136)$$

NaF and $MgF_2$ may be electrolyzed to $F_2$, Na, and Mg from a molten salt that may additionally comprise HF. Na and Mg are immiscible, and the separated metals may be hydrided with $H_2$ gas, preferably from the electrolysis of $H_2O$. The $F_2$ gas may be reacted with carbon and any $CH_4$ reaction product to regenerate $CF_4$. Alternatively and preferably, the anode of the electrolysis cell comprises carbon, and the current and electrolysis conditions are maintained such that $CF_4$ is the anode electrolysis product.

In exemplary hydrino and regeneration reactions, the reaction mixture comprises NaH catalyst, $MgH_2$, $P_2O_5$ ($P_4O_{10}$), and support, activated carbon. In an embodiment, the source of exothermic reaction is the oxidation reaction of metal hydrides by $P_2O_5$ such as

$$5MgH_2 + P_2O_5 \rightarrow 5MgO + 2P + 5H_2 \qquad (137)$$

$$5NaH + P_2O_5 \rightarrow 5NaOH + 2P. \quad (138)$$

Phosphorous can be converted to $P_2O_5$ by combustion in $O_2$

$$2P + 2.5O_2 \rightarrow P_2O_5. \quad (139)$$

The MgO product may be converted to the hydroxide by reaction with water

$$MgO + H_2O \rightarrow Mg(OH)_2. \quad (140)$$

$Mg(OH)_2$ can be reduced to Mg using Na or NaH:

$$2Na + Mg(OH)_2 \rightarrow 2NaOH + Mg. \quad (141)$$

Then, NaOH can be electrolyzed to Na metal and NaH and $O_2$ directly from the melt, or it may be converted to NaCl by reaction with HCl wherein the NaCl electrolysis gas $Cl_2$ may be reacted with $H_2$ from the electrolysis of water to from the HCl. In embodiments, metals such as Na and Mg may be converted to the corresponding hydrides by reaction with $H_2$, preferably from the electrolysis of water.

In exemplary hydrino and regeneration reactions, the solid fuel reaction mixture comprises NaH catalyst, $MgH_2$, $NaNO_3$, and support, activated carbon. In an embodiment, the source of exothermic reaction is the oxidation reaction of metal hydrides by $NaNO_3$ such as

$$NaNO_3 + NaH + C \rightarrow Na_2CO_3 + 1/2N_2 + 1/2H_2 \quad (142)$$

$$NaNO_3 + 1/2H_2 + 2NaH \rightarrow 3NaOH + 1/2N_2 \quad (143)$$

$$NaNO_3 + 3MgH_2 \rightarrow 3MgO + NaH + 1/2N_2 + 5/2H_2. \quad (144)$$

Sodium or magnesium carbonate, hydrogen carbonate, and other species comprising carbon and oxygen may be reduced with Na or NaH:

$$NaH + Na_2CO_3 \rightarrow 3NaOH + C + 1/H_2 \quad (145)$$

$$NaH + 1/3MgCO_3 \rightarrow NaOH + 1/3C + 1/3Mg. \quad (146)$$

Carbonates can also be decomposed from aqueous media to the hydroxides and $CO_2$

$$Na_2CO_3 + H_2O \rightarrow 2NaOH + CO_2. \quad (147)$$

Evolved $CO_2$ may be reacted to water and C by $H_2$ reduction using the water gas shift reaction and the Fischer Tropsch reaction

$$CO_2 + H_2 \rightarrow CO + H_2O \quad (148)$$

$$CO + H_2 \rightarrow C + H_2O. \quad (149)$$

The MgO product may be converted to the hydroxide by reaction with water

$$MgO + H_2O \rightarrow Mg(OH)_2. \quad (150)$$

$Mg(OH)_2$ can be reduced to Mg using Na or NaH:

$$2Na + Mg(OH)_2 \rightarrow 2NaOH + Mg. \quad (151)$$

Alkali nitrates can be regenerated using the methods known to those skilled in the art. In an embodiment, $NO_2$, can be generated by known industrial methods such as by the Haber process followed by the Ostwald process. In one embodiment, the exemplary sequence of steps are:

$$N_2 \xrightarrow[\substack{Haber\\process}]{H_2} NH_3 \xrightarrow[\substack{Ostwald\\process}]{O_2} NO_2. \quad (152)$$

Specifically, the Haber process may be used to produce $NH_3$ from $N_2$ and $H_2$ at elevated temperature and pressure using a catalyst such as $\alpha$-iron containing some oxide. The Ostwald process may be used to oxidize the ammonia to $NO_2$, at a catalyst such as a hot platinum or platinum-rhodium catalyst. The heat may be waste heat from the power system. $NO_2$ may be dissolved in water to form nitric acid that is reacted with NaOH, $Na_2CO_3$, or $NaHCO_3$ to form sodium nitrate. Then, the remaining NaOH can be electrolyzed to Na metal and NaH and $O_2$ directly from the melt, or it may be converted to NaCl by reaction with HCl wherein the NaCl electrolysis gas $Cl_2$ may be reacted with $H_2$ from the electrolysis of water to from the HCl. In embodiments, metals such as Na and Mg may be converted to the corresponding hydrides by reaction with $H_2$, preferably from the electrolysis of water. In other embodiments, Li and K replace Na.

In exemplary hydrino and regeneration reactions, the reaction mixture comprises NaH catalyst, $MgH_2$, $SF_6$, and support, activated carbon. In an embodiment, the source of exothermic reaction is the oxidation reaction of metal hydrides by $SF_6$ such as

$$4MgH_2 + SF_6 \rightarrow 3MgF_2 + 4H_2 + MgS \quad (153)$$

$$7NaH + SF_6 \rightarrow 6NaF + 3H_2 + NaHS. \quad (154)$$

NaF and $MgF_2$ and the sulfides may be electrolyzed to Na and Mg from a molten salt that may additionally comprise HF. The fluorine electrolysis gas may react with the sulfides to form $SF_6$ gas that may be removed dynamically. The separation of $SF_6$ from $F_2$ may be by methods known in the art such as cryo-distillation, membrane separation, or chromatography using a medium such as molecular sieves. NaHS melts at 350 °C and may be part of the molten electrolysis mixture. Any MgS product may be reacted with Na to form NaHS wherein the reaction may occur in situ during electrolysis. S and metals may be products formed during electrolysis. Alternatively, the metals may be in minority such that the more stable fluorides are formed, or $F_2$ may be added to form the fluorides.

$$3MgH_2 + SF_6 \rightarrow 3MgF_2 + 3H_2 + S \quad (155)$$

$$6NaH + SF_6 \rightarrow 6NaF + 3H_2 + S. \quad (156)$$

NaF and $MgF_2$ may be electrolyzed to $F_2$, Na, and Mg from a molten salt that may additionally comprise HF. Na and Mg are immiscible, and the separated metals may be hydrided with $H_2$ gas, preferably, the make up is from the electrolysis of $H_2O$. The $F_2$ gas may be reacted with sulfur to regenerate $SF_6$.

In exemplary hydrino and regeneration reactions, the reaction mixture comprises NaH catalyst, $MgH_2$, $NF_3$, and support, activated carbon. In an embodiment, the source of exothermic reaction is the oxidation reaction of metal hydrides by $NF_3$ such as

$$3MgH_2 + 2NF_3 \rightarrow 3MgF_2 + 3H_2 + N_2 \quad (157)$$

$$6MgH_2 + 2NF_3 \rightarrow 3MgF_2 + Mg_3N_2 + 6H_2 \quad (158)$$

$$3NaH + NF_3 \rightarrow 3NaF + 1/2N_2 + 1.5H_2. \quad (159)$$

NaF and $MgF_2$ may be electrolyzed to $F_2$, Na, and Mg from a molten salt that may additionally comprise HF. The conversion of $Mg_3N_2$ to $MgF_2$ may occur in the melt. Na and Mg are immiscible, and the separated metals may be hydrided with $H_2$ gas, preferably from the electrolysis of $H_2O$. The $F_2$ gas may be reacted with $NH_3$, preferably in a copper-packed reactor, to form $NF_3$. Ammonia may be created from the Haber process. Alternatively, $NF_3$ may be formed by the electrolysis of $NH_4F$ in anhydrous HF.

In exemplary hydrino and regeneration reactions, the solid fuel reaction mixture comprises NaH catalyst, $MgH_2$, $Na_2S_2O_8$ and support, activated carbon. In an embodiment, the source of exothermic reaction is the oxidation reaction of metal hydrides by $Na_2S_2O_8$ such as

$$8MgH_2 + Na_2S_2O_8 \rightarrow 2MgS + 2NaOH + 6MgO + 6H_2 \quad (160)$$

$$7MgH_2 + Na_2S_2O_8 + C \rightarrow 2MgS + Na_2CO_3 + 5MgO + 7H_2 \quad (161)$$

$$10NaH + Na_2S_2O_8 \rightarrow 2Na_2S + 8NaOH + H_2 \qquad (162)$$

$$9NaH + Na_2S_2O_8 + C \rightarrow 2Na_2S + Na_2CO_3 + 5NaOH + 2H_2. \qquad (163)$$

Any MgO product may be converted to the hydroxide by reaction with water

$$MgO + H_2O \rightarrow Mg(OH)_2. \qquad (164)$$

Sodium or magnesium carbonate, hydrogen carbonate, and other species comprising carbon and oxygen may be reduced with Na or NaH:

$$NaH + Na_2CO_3 \rightarrow 3NaOH + C + 1/H_2 \qquad (165)$$

$$NaH + 1/3MgCO_3 \rightarrow NaOH + 1/3C + 1/3Mg. \qquad (166)$$

MgS can be combusted in oxygen, hydrolyzed, exchanged with Na to form sodium sulfate, and electrolyzed to $Na_2S_2O_8$

$$2MgS + 10H_2O + 2NaOH \rightarrow Na_2S_2O_8 + 2Mg(OH)_2 + 9H_2. \qquad (167)$$

$Na_2S$ can be combusted in oxygen, hydrolyzed to sodium sulfate, and electrolyzed to form $Na_2S_2O_8$

$$2Na_2S + 10H_2O \rightarrow Na_2S_2O_8 + 2NaOH + 9H_2 \qquad (168)$$

$Mg(OH)_2$ can be reduced to Mg using Na or NaH:

$$2Na + Mg(OH)_2 \rightarrow 2NaOH + Mg. \qquad (169)$$

Then, NaOH can be electrolyzed to Na metal and NaH and $O_2$ directly from the melt, or it may be converted to NaCl by reaction with HCl wherein the NaCl electrolysis gas $Cl_2$ may be reacted with $H_2$ from the electrolysis of water to from the HCl.

In exemplary hydrino and regeneration reactions, the solid fuel reaction mixture comprises NaH catalyst, $MgH_2$, S, and support, activated carbon. In an embodiment, the source of exothermic reaction is the oxidation reaction of metal hydrides by S such as

$$MgH_2 + S \rightarrow MgS + H_2 \qquad (170)$$

$$2NaH + S \rightarrow Na_2S + H_2. \qquad (171)$$

The magnesium sulfide may be converted to the hydroxide by reaction with water

$$MgS + 2H_2O \rightarrow Mg(OH)_2 + H_2S. \qquad (172)$$

$H_2S$ may be decomposed at elevated temperature or used to covert $SO_2$ to S. Sodium sulfide can be converted to the hydroxide by combustion and hydrolysis

$$Na_2S + 1.5O_2 \rightarrow Na_2O + SO_2$$

$$Na_2O + H_2O \rightarrow 2NaOH \qquad (173)$$

$Mg(OH)_2$ can be reduced to Mg using Na or NaH:

$$2Na + Mg(OH)_2 \rightarrow 2NaOH + Mg. \qquad (174)$$

Then, NaOH can be electrolyzed to Na metal and NaH and $O_2$ directly from the melt, or it may be converted to NaCl by reaction with HCl wherein the NaCl electrolysis gas $Cl_2$ may be reacted with $H_2$ from the electrolysis of water to from the HCl. $SO_2$ can be reduced at elevated temperature using $H_2$

$$SO_2 + 2H_2S \rightarrow 3S + 2H_2O. \qquad (175)$$

In embodiments, metals such as Na and Mg may be converted to the corresponding hydrides by reaction with $H_2$, preferably from the electrolysis of water. In other embodiments, the S and metal may be regenerated by electrolysis from a melt.

In exemplary hydrino and regeneration reactions, the reaction mixture comprises NaH catalyst, $MgH_2$, $N_2O$, and support, activated carbon. In an embodiment, the source of exothermic reaction is the oxidation reaction of metal hydrides by $N_2O$ such as

$$4MgH_2 + N_2O \rightarrow MgO + Mg_3N_2 + 4H_2 \qquad (176)$$

$$NaH + 3N_2O + C \rightarrow NaHCO_3 + 3N_2 + 1/2H_2. \qquad (177)$$

The MgO product may be converted to the hydroxide by reaction with water

$$MgO + H_2O \rightarrow Mg(OH)_2. \qquad (178)$$

Magnesium nitride may also be hydrolyzed to magnesium hydroxide:

$$Mg_3N_2 + 6H_2O \rightarrow 3Mg(OH)_2 + 3H_2 + N_2. \qquad (179)$$

Sodium carbonate, hydrogen carbonate, and other species comprising carbon and oxygen may be reduced with Na or NaH:

$$NaH + Na_2CO_3 \rightarrow 3NaOH + C + 1/H_2. \qquad (180)$$

$Mg(OH)_2$ can be reduced to Mg using Na or NaH:

$$2Na + Mg(OH)_2 \rightarrow 2NaOH + Mg. \qquad (181)$$

Then, NaOH can be electrolyzed to Na metal and NaH and $O_2$ directly from the melt, or it may be converted to NaCl by reaction with HCl wherein the NaCl electrolysis gas $Cl_2$ may be reacted with $H_2$ from the electrolysis of water to from the HCl. Ammonia created from the Haber process is oxidized (Eq. (152)) and the temperature is controlled to favor production of $N_2O$ that is separated from other gasses of the steady state reaction product mixture.

In exemplary hydrino and regeneration reactions, the reaction mixture comprises NaH catalyst, $MgH_2$, $Cl_2$, and support, such as activated carbon, WC or TiC. The reactor may further comprise a source of high-energy light, preferably ultraviolet light to dissociate $Cl_2$ to initiate the hydrino reaction. In an embodiment, the source of exothermic reaction is the oxidation reaction of metal hydrides by $Cl_2$ such as

$$2NaH + Cl_2 \rightarrow 2NaCl + H_2 \qquad (182)$$

$$MgH_2 + Cl_2 \rightarrow MgCl_2 + H_2. \qquad (183)$$

NaCl and $MgCl_2$ may be electrolyzed to $Cl_2$, Na, and Mg from a molten salt. The molten NaCl electrolysis may be performed using a Downs cell or modified Downs cell. The NaCl for this electrolysis may be from the rinse of the reaction products with aqueous solution. The solution may be filtered to remove the support such as AC that may be centrifuged and dried, preferably using waste heat from the power system. Na and Mg are immiscible, and the separated metals may be hydrided with $H_2$ gas, preferably from the electrolysis of $H_2O$. An exemplary result follows:

- 4g WC + 1g MgH2 + 1g NaH + 0.01mol C12 initiated with UV lamp to dissociate $Cl_2$ to Cl, Ein:162.9 kJ, dE:16.0 kJ, TSC: 23-42 °C, Tmax: 85 °C, theoretical is 7.10 kJ, gain is 2.25 times.

The reactants comprising a catalyst or a catalyst source such as NaH, K, or Li or their hydrides, a reductant such as an alkaline metal or hydride, preferably Mg, MgH2, or Al, and an oxidant such as $NF_3$ can be regenerated by electrolysis. Preferably, metal fluoride products are regenerated to metals and fluorine gas by electrolysis. The electrolyte may comprise a eutectic mixture. The mixture may further comprise HF. $NF_3$ may be regenerated by the electrolysis of $NH_4F$ in anhydrous HF. In another embodiment, $NH_3$ is reacted with $F_2$ in a reactor such as a copper-packed reactor. $F_2$ may be generated by electrolysis using a dimensionally stable anode or a carbon anode using conditions that favor $F_2$ production. $SF_6$ may be regenerated by reaction of S with $F_2$. Any metal nitride that may form in the hydrino reaction may be regenerated by at least one of thermal decomposition, $H_2$ reduction, oxidation to the oxide or hydroxide and reaction to the halide followed by electrolysis, and reaction with halogen gas during molten electrolysis of a metal halide.

$NCl_3$ can be formed by reaction of ammonia and chlorine gas or by reaction of ammonium salts such as $NH_4Cl$ with chlorine gas. The chlorine gas may be from the electrolysis of chloride salts such as those from the product reaction mixture. The $NH_3$ may be formed using the Haber process wherein the hydrogen may be from electrolysis, preferably of water. In an embodiment, $NCl_3$ is formed in situ in the reactor by the reaction of at least one of $NH_3$ and an ammonium salt such as $NH_4Cl$ with $Cl_2$ gas. In an embodiment, $BiF_5$ can be regenerated by reaction of $BiF_3$ with $F_2$ formed from electrolysis of metal fluorides.

In an embodiment wherein a source of oxygen or halogen optionally serves as a reactant of an exothermic activation reaction, an oxide or halide product is preferably regenerated by electrolysis. The electrolyte may comprise a eutectic mixture such as a mixture of $Al_2O_3$ and $Na_3AlF_6$; $MgF_2$, NaF, and HF; $Na_3AlF_6$; NaF, $SiF_4$, and HF; and $AlF_3$, NaF, and HF. The electrolysis of $SiF_4$ to Si and $F_2$ may be from an alkali fluoride eutectic mixture. Since Mg and Na have low miscibility, they can be separated in phases of the melts. Since Al and Na have low miscibility, they can be separated in phases of the melts. In another embodiment, the electrolysis products can be separated by distillation. In further embodiment, $Ti_2O_3$ is regenerated by reaction with C and $Cl_2$ to form CO and $TiCl_4$ that is further reacted with Mg to form Ti and $MgCl_2$. Mg and $Cl_2$ may be regenerated by electrolysis. In the case that MgO is the product, Mg can be regenerated by the Pidgeon process. In an embodiment, MgO is reacted with Si to form $SiO_2$ and Mg gas that is condensed. The product $SiO_2$ may be regenerated to Si by $H_2$ reduction at high temperature or by reaction with carbon to form Si and CO and $CO_2$. In another embodiment, Si is regenerated by electrolysis using a method such as the electrolysis of solid oxides in molten calcium chloride. In an embodiment, chlorate or perchlorate such as an alkali chlorate or perchlorate is regenerated by electrolytic oxidation. Brine may be electrolytically oxidized to chlorate and perchlorate.

To regenerate the reactants, any oxide coating on a metal support that may be formed may be removed by dilute acid following separation from the reactant or product mixture. In another embodiment, the carbide is generated from the oxide by reaction with carbon with release of carbon monoxide or dioxide.

In the case that the reaction mixture comprises a solvent, the solvent may be separated from other reactants or products to be regenerated by removing the solvent using evaporation or by filtration or centrifugation with retention of the solids. In the case that other volatile components such as alkali metals are present, they may be selectively removed by heating to a suitably elevated temperature such that they are evaporated. For example, a metal such that Na metal is collected by distillation and a support such as carbon remains. The Na may be rehydrided to NaH and returned to the carbon with solvent added to regenerate the reaction mixture. Isolated solids such as R-Ni may be regenerated separately as well. The separated R-Ni may be hydrided by exposure to hydrogen gas at a pressure in the range of 0.1 to 300 atm.

The solvent may be regenerated in the case that it decomposes during the catalyst reaction to form hydrinos. For example, the decomposition products of DMF may be dimethylamine, carbon monoxide, formic acid, sodium formate, and formaldhyde. In an embodiment, dimethyl formamide is produced either with catalyzed reaction of dimethyl amine and carbon monoxide in methanol or the reaction of methyl formate with dimethyl amine. It may also be prepared by reacting dimethylamine with formic acid.

In an embodiment, an exemplary ether solvent may be regenerated from the products of the reaction mixture. Preferably, the reaction mixture and conditions are chosen such that reaction rate of ether is minimized relative to the rate to form hydrinos such that any ether degradation is insignificant relative to the energy produced from the hydrino reaction. Thus, ether may be added back as needed with the ether degradation product removed. Alternatively, the ether and reaction conditions may be chosen such that the ether reaction product may be isolated and the ether regenerated.

An embodiment comprises at least one of the following: the HSA is a fluoride, the HSA is a metal, and the solvent is fluorinated. A metal fluoride may be a reaction product. The metal and fluorine gas may be generated by electrolysis. The electrolyte may comprise the fluoride such as NaF, $MgF_2$, $AlF_3$, or $LaF_3$ and may additionally comprise at least one other species such as HF and other salts that lowers the melting point of the fluoride, such as those disclosed in U.S. Pat. No. 5,427,657. Excess HF may dissolve $LaF_3$. The electrodes may be carbon such as graphite and may also form fluorocarbons as desired degradation products. In an embodiment, at least one of the metal or alloy, preferably nanopowder, coated with carbon such as carbon-coated Co, Ni, Fe, other transition metal powders, or alloys, and the metal-coated carbon, preferably nanopowder, such as carbon coated with a transition metal or alloy, preferably at least one of Ni, Co, Fe, and Mn coated carbon, comprise particles that are magnetic. The magnetic particles may be separated from a mixture such as a mixture of a fluoride such as NaF and carbon by using a magnet. The collected particles may be recycled as part of the reaction mixture to form hydrinos.

In an embodiment wherein at least one of the solvent, support, or getter comprises fluorine, products comprise possibly carbon, in cases such that the solvent or support is a fluorinated organic, as well as fluorides of the catalyst metal such as $NaHF_2$, and NaF. This is in addition to lower-energy hydrogen products such as molecular hydrino gas that may be vented or collected. Using $F_2$, the carbon may be etched away as $CF_4$ gas that may be used as a reactant in another cycle of the reaction to make power. The remaining products of NaF and $NaHF_2$ may be electrolyzed to Na and $F_2$. The Na may be reacted with hydrogen to form NaH and the $F_2$ may be used to etch carbon product. The NaH,

remaining NaF, and $CF_4$ may be combined to run another cycle of the power-production reaction to form hydrinos. In other embodiments, Li, K, Rb, or Cs may replace Na.

VI. Other Liquid and Heterogeneous Fuel Embodiments

In the present disclosure a "liquid-solvent embodiment" comprises any reaction mixture and the corresponding fuel comprising a liquid solvent such as a liquid fuel and a heterogeneous fuel.

In another embodiment comprising a liquid solvent, one of atomic sodium and molecular NaH is provided by a reaction between a metallic, ionic, or molecular form of Na and at least one other compound or element. The source of Na or NaH may be at least one of metallic Na, an inorganic compound comprising Na such as NaOH, and other suitable Na compounds such as $NaNH_2$, $Na_2CO_3$, and $Na_2O$, NaX (X is a halide), and NaH(s). The other element may be H, a displacing agent, or a reducing agent. The reaction mixture may comprise at least one of (1) a solvent, (2) a source of sodium such as at least one of Na(m), NaH, $NaNH_2$, $Na_2CO_3$, $Na_2O$, NaOH, NaOH doped-R-Ni, NaX (X is a halide), and NaX doped R-Ni, (3) a source of hydrogen such as $H_2$ gas and a dissociator and a hydride, (4) a displacing agent such as an alkali or alkaline earth metal, preferably Li, and (5) a reducing agent such as at least one of a metal such as an alkaline metal, alkaline earth metal, a lanthanide, a transition metal such as Ti, aluminum, B, a metal alloy such as AlHg, NaPb, NaAl, LiAl, and a source of a metal alone or in combination with reducing agent such as an alkaline earth halide, a transition metal halide, a lanthanide halide, and aluminum halide. Preferably, the alkali metal reductant is Na. Other suitable reductants comprise metal hydrides such as $LiBH_4$, $NaBH_4$, $LiAlH_4$, $NaAlH_4$, $RbBH_4$, $CsBH_4$, $Mg(BH_4)_2$, or $Ca(BH_4)_2$. Preferably, the reducing agent reacts with NaOH to form a NaH molecules and a Na product such as Na, NaH(s), and $Na_2O$. The source of NaH may be R-Ni comprising NaOH and a reactant such as a reductant to form NaH catalyst such as an alkali or alkaline earth metal or the Al intermetallic of R-Ni. Further exemplary reagents are an alkaline or alkaline earth metal and an oxidant such as $AlX_3$, $MgX_2$, $LaX_3$, $CeX_3$, and $TiX_n$ where X is a halide, preferably Br or I. Additionally, the reaction mixture may comprise another compound comprising a getter or a dispersant such as at least one of $Na_2CO_3$, $Na_3SO_4$, and $Na_3PO_4$ that may be doped into the dissociator such as R-Ni. The reaction mixture may further comprise a support wherein the support may be doped with at least one reactant of the mixture. The support may have preferably a large surface area that favors the production of NaH catalyst from the reaction mixture. The support may comprise at least one of the group of R-Ni, Al, Sn, $Al_2O_3$ such as gamma, beta, or alpha alumina, sodium aluminate (beta-aluminas have other ions present such as $Na^+$ and possess the idealized composition $Na_2O.11Al_2O_3$), lanthanide oxides such as $M_2O_3$ (preferably M= La, Sm, Dy, Pr, Tb, Gd, and Er), Si, silica, silicates, zeolites, lanthanides, transition metals, metal alloys such as alkali and alkali earth alloys with Na, rare earth metals, $SiO_2$-$Al_2O_3$ or $SiO_2$ supported Ni, and other supported metals such as at least one of alumina supported platinum, palladium, or ruthenium. The support may have a high surface area and comprise a high-surface-area (HSA) materials such as R-Ni, zeolites, silicates, aluminates, aluminas, alumina nanoparticles, porous $Al_2O_3$, Pt, Ru, or Pd/$Al_2O_3$, carbon, Pt or Pd/C, inorganic compounds such as $Na_2CO_3$, silica and zeolite materials, preferably Y zeolite powder, and carbon such as fullerene or nanotubes. In an embodiment, the support such as $Al_2O_3$ (and the $Al_2O_3$ support of the dissociator if present) reacts with the reductant such as a lanthanide to form a surface-modified support. In an embodiment, the surface Al exchanges with the lanthanide to form a lanthanide-substituted support. This support may be doped with a source of NaH molecules such as NaOH and reacted with a reductant such as a lanthanide. The subsequent reaction of the lanthanide-substituted support with the lanthanide will not significantly change it, and the doped NaOH on the surface can be reduced to NaH catalyst by reaction with the reductant lanthanide. In other embodiments given herein, Li, K, Rb, or Cs may replace Na.

In an embodiment comprising a liquid solvent, wherein the reaction mixture comprises a source of NaH catalyst, the source of NaH may be an alloy of Na and a source of hydrogen. The alloy may comprise at least one of those known in the art such as an alloy of sodium metal and one or more other alkaline or alkaline earth metals, transition metals, Al, Sn, Bi, Ag, In, Pb, Hg, Si, Zr, B, Pt, Pd, or other metals and the H source may be $H_2$ or a hydride.

The reagents such as the source of NaH molecules, the source of sodium, the source of NaH, the source of hydrogen, the displacing agent, and the reducing agent are in any desired molar ratio. Each is in a molar ratio of greater than 0 and less than 100%. Preferably, the molar ratios are similar.

In a liquid-solvent embodiment, the reaction mixture comprises at least one species of the group comprising a solvent, Na or a source of Na, NaH or a source of NaH, a metal hydride or source of a metal hydride, a reactant or source of a reactant to form a metal hydride, a hydrogen dissociator, and a source of hydrogen. The reaction mixture may further comprise a support. A reactant to form a metal hydride may comprise a lanthanide, preferably La or Gd. In an embodiment, La may reversibly react with NaH to form $LaH_n$ (n=1,2,3). In an embodiment, the hydride exchange reaction forms NaH catalyst. The reversible general reaction may be given by

$$NaH + M \square Na + MH \qquad (184)$$

The reaction given by Eq. (184) applies to other *MH* -type catalysts given in TABLE 3. The reaction may proceed with the formation of hydrogen that may be dissociated to form atomic hydrogen that reacts with Na to form NaH catalyst. The dissociator is preferably at least one of Pt, Pd, or Ru/$Al_2O_3$ powder, Pt/Ti, and R-Ni. Preferentially, the dissociator support such as $Al_2O_3$ comprises at least surface La substitution for Al or comprises Pt, Pd, or Ru/$M_2O_3$ powder wherein M is a lanthanide. The dissociator may be separated from the rest of the reaction mixture wherein the separator passes atomic H.

A suitable liquid-solvent embodiment comprises the reaction mixture of a solvent, NaH, La, and Pd on $Al_2O_3$ powder wherein the reaction mixture may be regenerated in an embodiment by removing the solvent, adding $H_2$, separating NaH and lanthanum hydride by sieving, heating lanthanum hydride to form La, and mixing La and NaH. Alternatively, the regeneration involves the steps of separating Na and lanthanum hydride by melting Na and removing the liquid, heating lanthanum hydride to form La, hydriding Na to NaH, mixing La and NaH, and adding the solvent. The mixing of La and NaH may be by ball milling.

In a liquid-solvent embodiment, a high-surface-area material such as R-Ni is doped with NaX (X=F, Cl, Br, I). The doped R-Ni is reacted with a reagent that will displace the halide to form at least one of Na and NaH. In an embodiment, the reactant is at least an alkali or alkaline earth metal, preferably at least one of K, Rb, Cs. In another embodiment, the reactant is an alkaline or alkaline earth hydride, preferably at least one of KH, RbH, CsH, $MgH_2$ and $CaH_2$. The reactant may be both an alkali metal and an alkaline earth hydride. The reversible general reaction may be given by

$$NaX + MH \, \square \, NaH + MX \qquad (185)$$

D. Additional MH-Type Catalysts and Reactions

In general, MH type hydrogen catalysts to produce hydrinos provided by the breakage of the M-H bond plus the ionization of t electrons from the atom M each to a continuum energy level such that the sum of the bond energy and ionization energies of the t electrons is approximately $m \cdot 27.2\ eV$ where $m$ is an integer are given in TABLE 3A. Each MH catalyst is given in the first column and the corresponding M-H bond energy is given in column two. The atom M of the MH species given in the first column is ionized to provide the net enthalpy of reaction of $m \cdot 27.2\ eV$ with the addition of the bond energy in column two. The enthalpy of the catalyst is given in the eighth column where $m$ is given in the ninth column. The electrons that participate in ionization are given with the ionization potential (also called ionization energy or binding energy). For example, the bond energy of $NaH$, 1.9245 $eV$ , is given in column two. The ionization potential of the nth electron of the atom or ion is designated by $IP_n$ and is given by the CRC. That is for example, Na + 5.13908 $eV \rightarrow Na^+ + e^-$ and $Na^+$ + 47.2864 $eV \rightarrow Na^{2+} + e^-$. The first ionization potential, $IP_1$ = 5.13908 $eV$, and the second ionization potential, $IP_2$ = 47.2864 $eV$, are given in the second and third columns, respectively. The net enthalpy of reaction for the breakage of the $NaH$ bond and the double ionization of $Na$ is 54.35 $eV$ as given in the eighth column, and $m$ = 2 in Eq. (47) as given in the ninth column. The bond energy of BaH is 1.98991 eV and $IP_1$ $IP_2$, and $IP_3$ are 5.2117 eV, 10.00390 eV, and 37.3 eV, respectively. The net enthalpy of reaction for the breakage of the BaH bond and the triple ionization of Ba is 54.5 eV as given in the eighth column, and m=2 in Eq. (47) as given in the ninth column. The bond energy of SrH is 1.70 eV and $IP_1$, $IP_2$, $IP_3$, $IP_4$, and $IP_5$ are 5.69484 eV, 11.03013 eV, 42.89 eV, 57 eV, and 71.6 eV, respectively. The net enthalpy of reaction for the breakage of the SrH bond and the ionization of Sr to $Sr^{5+}$ is 190 eV as given in the eighth column, and m=7 in Eq. (47) as given in the ninth column. Additionally, H can react with each of the H(1/p) products of the MH catalysts given in TABLE 3A to form a hydrino having a quantum number p increased by one (Eq. (10)) relative to the catalyst reaction product of MH alone as given by exemplary Eq. (31).

TABLE 3A. MH type hydrogen catalysts capable of providing a net enthalpy of reaction of approximately $m \cdot 27.2\ eV$ $m \cdot 27.2\ eV$. Energies in eV's.

| Catalyst | M-H Bond Energy | $IP_1$ | $IP_2$ | $IP_3$ | $IP_4$ | $IP_5$ | Enthalpy | m |
|---|---|---|---|---|---|---|---|---|
| AlH | 2.98 | 5.985768 | 18.82855 | | | | 27.79 | 1 |
| AsH | 2.84 | 9.8152 | 18.633 | 28.351 | 50.13 | | 109.77 | 4 |
| BaH | 1.99 | 5.21170 | 10.00390 | 37.3 | | | 54.50 | 2 |
| BiH | 2.936 | 7.2855 | 16.703 | | | | 26.92 | 1 |
| CdH | 0.72 | 8.99367 | 16.90832 | | | | 26.62 | 1 |
| ClH | 4.4703 | 12.96763 | 23.8136 | 39.61 | | | 80.86 | 3 |
| CoH | 2.538 | 7.88101 | 17.084 | | | | 27.50 | 1 |

(continued)

| Catalyst | M-H Bond Energy | $IP_1$ | $IP_2$ | $IP_3$ | $IP_4$ | $IP_5$ | Enthalpy | m |
|---|---|---|---|---|---|---|---|---|
| GeH | 2.728 | 7.89943 | 15.93461 | | | | 26.56 | 1 |
| InH | 2.520 | 5.78636 | 18.8703 | | | | 27.18 | 1 |
| NaH | 1.925 | 5.139076 | 47.2864 | | | | 54.35 | 2 |
| NbH | 2.30 | 6.75885 | 14.32 | 25.04 | 38.3 | 50.55 | 137.26 | 5 |
| OH | 4.4556 | 13.61806 | 35.11730 | | | | 53.3 | 2 |
| OH | 4.4556 | 13.61806 | 35.11730 | 54.9355 | | | 108.1 | 4 |
| OH | 4.4556 | 13.61806+ 13.6 KE | 35.11730+ 13.6 KE | | | | 80.39 | 3 |
| RhH | 2.50 | 7.4589 | 18.08 | | | | 28.0 | 1 |
| RuH | 2.311 | 7.36050 | 16.76 | | | | 26.43 | 1 |
| SH | 3.67 | 10.36001 | 23.3379 | 34.79 | 47.222 | 72.5945 | 191.97 | 7 |
| SbH | 2.484 | 8.60839 | 16.63 | | | | 27.72 | 1 |
| SeH | 3.239 | 9.75239 | 21.19 | 30.8204 | 42.9450 | | 107.95 | 4 |
| SiH | 3.040 | 8.15168 | 16.34584 | | | | 27.54 | 1 |
| SnH | 2.736 | 7.34392 | 14.6322 | 30.50260 | | | 55.21 | 2 |
| SrH | 1.70 | 5.69484 | 11.03013 | 42.89 | 57 | 71.6 | 190 | 7 |
| TlH | 2.02 | 6.10829 | 20.428 | | | | 28.56 | 1 |

In other embodiments, $MH^-$ type hydrogen catalysts to produce hydrinos provided by the transfer of an electron to an acceptor A, the breakage of the M-H bond plus the ionization of *t* electrons from the atom M each to a continuum energy level such that the sum of the electron transfer energy comprising the difference of electron affinity (EA) of MH and A, M-H bond energy, and ionization energies of the *t* electrons from M is approximately $m \cdot 27.2\ eV$ where *m* is an integer are given in TABLE 3B. Each $MH^-$ catalyst, the acceptor A, the electron affinity of MH, the electron affinity of A, and the M-H bond energy, are is given in the first, second, third and fourth columns, respectively. The electrons of the corresponding atom M of MH that participate in ionization are given with the ionization potential (also called ionization energy or binding energy) in the subsequent columns and the enthalpy of the catalyst and the corresponding integer *m* are given in the last column. For example, the electron affinities of OH and H are 1.82765 eV and 0.7542 eV, respectively, such that the electron transfer energy is 1.07345 eV as given in the fifth column. The bond energy of OH is 4.4556 eV is given in column six. The ionization potential of the *n*th electron of the atom or ion is designated by $IP_n$. That is for example, $O + 13.61806\ eV \rightarrow O^+ + e^-$ and $O^+ + 35.11730\ eV \rightarrow O^{2+} + e^-$. The first ionization potential, $IP_1 = 13.61806\ eV$, and the second ionization potential, $IP_2 = 35.11730\ eV$, are given in the seventh and eighth columns, respectively. The net enthalpy of the electron transfer reaction, the breakage of the OH bond, and the double ionization of O is 54.27 eV as given in the eleventh column, and $m = 2$ in Eq. (47) as given in the twelfth column. Additionally, H can react with each of the H(1/p) products of the MH catalysts given in TABLE 3B to form a hydrino having a quantum number p increased by one (Eq. (10)) relative to the catalyst reaction product of MH alone as given by exemplary Eq. (31). In other embodiments, the catalyst for H to form hydrinos is provided by the ionization of a negative ion such that the sum of its EA plus the ionization energy of one or more electrons is approximately $m \cdot 27.2\ eV$ where *m* is an integer. Alternatively, the first electron of the negative ion may be transferred to an acceptor followed by ionization of at least one more electron such that the sum of the electron transfer energy plus the ionization energy of one or more electrons is approximately $m \cdot 27.2\ eV$ where *m* is an integer. The electron acceptor may be H.

TABLE 3B. $MH^-$ type hydrogen catalysts capable of providing a net enthalpy of reaction of approximately $m \cdot 27.2\ eV$. Energies in eV's.

| Catalyst | Acceptor (A) | EA (MH) | EA (A) | Electron Transfer | M-H Bond Energy | $IP_1$ | $IP_2$ | $IP_3$ | $IP_4$ | Enthalpy | m |
|---|---|---|---|---|---|---|---|---|---|---|---|
| $OH^-$ | H | 1.82765 | 0.7542 | 1.07345 | 4.4556 | 13.61806 | 35.11730 | | | 54.27 | 2 |
| $SiH^-$ | H | 1.277 | 0.7542 | 0.5228 | 3.040 | 8.15168 | 16.34584 | | | 28.06 | 1 |
| $CoH^-$ | H | 0.671 | 0.7542 | -0.0832 | 2.538 | 7.88101 | 17.084 | | | 27.42 | 1 |
| $NiH^-$ | H | 0.481 | 0.7542 | -0.2732 | 2.487 | 7.6398 | 18.16884 | | | 28.02 | 1 |
| $SeH^-$ | H | 2.2125 | 0.7542 | 1.4583 | 3.239 | 9.75239 | 21.19 | 30.8204 | 42.9450 | 109.40 | 4 |

In other embodiments, $MH^+$ type hydrogen catalysts to produce hydrinos are provided by the transfer of an electron from an donor A which may be negatively charged, the breakage of the M-H bond, and the ionization of *t* electrons from the atom M each to a continuum energy level such that the sum of the electron transfer energy comprising the difference of ionization energies of MH and A, bond M-H energy, and ionization energies of the *t* electrons from M is approximately $m \cdot 27.2\ eV$ where *m* is an integer.

In an embodiment, a species such as an atom, ion, or molecule serves as a catalyst to cause molecular hydrogen to undergo a transition to molecular hydrino $H_2(1/p)$ (p is an integer). Similarly to the case with H the catalyst accepts energy from $H_2$ which in this case may be about m48.6 eV wherein m is an integer as given in Mills GUTCP. Suitable exemplary catalysts that form $H_2(1/p)$ by the direct catalysis of $H_2$ are O, V, and Cd that form $O^{2+}$, $V^{4+}$ , and $Cd^{5+}$ during the catalysis reaction corresponding to m = 1, m = 2, and m = 4, respectively. The energy may be released as heat or light or as electricity wherein the reactions comprise a half-cell reaction.

## VIII. Hydrogen Gas Discharge Power and Plasma Cell and Reactor

A hydrogen gas discharge power and plasma cell and reactor of the present disclosure is shown in FIGURE 17. The hydrogen gas discharge power and plasma cell and reactor of FIGURE 17, includes a gas discharge cell 307 comprising a hydrogen gas-filled glow discharge vacuum vessel 315 having a chamber 300. A hydrogen source 322 supplies hydrogen to the chamber 300 through control valve 325 via a hydrogen supply passage 342. A catalyst is contained in the cell chamber 300. A voltage and current source 330 causes current to pass between a cathode 305 and an anode 320. The current may be reversible.

In an embodiment, the material of cathode 305 may be a source of catalyst such as Fe, Dy, Be, or Pd. In another embodiment of the hydrogen gas discharge power and plasma cell and reactor, the wall of vessel 313 is conducting and serves as the cathode that replaces electrode 305, and the anode 320 may be hollow such as a stainless steel hollow anode. The discharge may vaporize the catalyst source to catalyst. Molecular hydrogen may be dissociated by the discharge to form hydrogen atoms for generation of hydrinos and energy. Additional dissociation may be provided by a hydrogen dissociator in the chamber.

Another embodiment of the hydrogen gas discharge power and plasma cell and reactor where catalysis occurs in the gas phase utilizes a controllable gaseous catalyst. The gaseous hydrogen atoms for conversion to hydrinos are provided by a discharge of molecular hydrogen gas. The gas discharge cell 307 has a catalyst supply passage 341 for the passage of the gaseous catalyst 350 from catalyst reservoir 395 to the reaction chamber 300. The catalyst reservoir 395 is heated by a catalyst reservoir heater 392 having a power supply 372 to provide the gaseous catalyst to the reaction chamber 300. The catalyst vapor pressure is controlled by controlling the temperature of the catalyst reservoir 395, by adjusting the heater 392 through its power supply 372. The reactor further comprises a selective venting valve 301. A chemically resistant open container, such as a stainless steel, tungsten or ceramic boat, positioned inside the gas discharge cell may contain the catalyst. The catalyst in the catalyst boat may be heated with a boat heater using an associated power supply to provide the gaseous catalyst to the reaction chamber. Alternatively, the glow gas discharge cell is operated at an elevated temperature such that the catalyst in the boat is sublimed, boiled, or volatilized into the gas phase. The catalyst vapor pressure is controlled by controlling the temperature of the boat or the discharge cell by adjusting the heater with its power supply. To prevent the catalyst from condensing in the cell, the temperature is maintained above the temperature of the catalyst source, catalyst reservoir 395 or catalyst boat.

In an embodiment, the catalysis occurs in the gas phase, lithium is the catalyst, and a source of atomic lithium such as lithium metal or a lithium compound such as $LiNH_2$ is made gaseous by maintaining the cell temperature in the range of about 300-1000 °C. Most preferably, the cell is maintained in the range of about 500-750 °C. The atomic and/or molecular hydrogen reactant may be maintained at a pressure less than atmospheric, preferably in the range of about 10 millitorr to about 100 Torr. Most preferably, the pressure is determined by maintaining a mixture of lithium metal and lithium hydride in the cell maintained at the desired operating temperature. The operating temperature range is preferably in the range of about 300-1000 °C and most preferably, the pressure is that achieved with the cell at the operating temperature range of about 300-750 °C. The cell can be controlled at the desired operating temperature by the heating coil such as 380 of FIGURE 17 that is powered by power supply 385. The cell may further comprise an inner reaction chamber 300 and an outer hydrogen reservoir 390 such that hydrogen may be supplied to the cell by diffusion of hydrogen through the wall 313 separating the two chambers. The temperature of the wall may be controlled with a heater to control the rate of diffusion. The rate of diffusion may be further controlled by controlling the hydrogen pressure in the hydrogen reservoir.

In another embodiment of a system having a reaction mixture comprising species of the group of Li, $LiNH_2$, $Li_2NH$, $Li_3N$, $LiNO_3$, LiX, $NH_4X$ (X is a halide), $NH_3$, $LiBH_4$, $LiAlH_4$, and $H_2$, at least one of the reactants is regenerated by adding one or more of the reagents and by a plasma regeneration. The plasma may be one of the gases such as $NH_3$ and $H_2$. The plasma may be maintained in situ (in the reaction cell) or in an external cell in communication with the reaction cell. In other embodiments, K, Cs, and Na replace Li wherein the catalyst is atomic K, atomic Cs, and molecular

NaH.

In an embodiment, SrH may serve as a MH type hydrogen catalyst to produce hydrinos provided by the breakage of the Sr-H bond plus the ionization of 6 electrons from the atom Sr each to a continuum energy level such that the sum of the bond energy and ionization energies of the 6 electrons is approximately $m \cdot 27.2\ eV$ where $m$ is 7 as given in TABLE 3A. SrH may be formed in a plasma or gas cell.

In another embodiment, OH may serve as a MH type hydrogen catalyst to produce hydrinos provided by the breakage of the O-H bond plus the ionization of 2 or 3 electrons from the atom O each to a continuum energy level such that the sum of the bond energy and ionization energies of the 2 or 3 electrons is approximately $m \cdot 27.2\ eV$ where $m$ is 2 or 4, respectively, as given in TABLE 3A. In another embodiment, $H_2O$ is formed in a plasma reaction by the reaction of plasma species such as $OH^-$ and H, $OH^-$ and $H^+$, or $OH^+$ and $H^-$ such that $H_2O$ serves as the catalyst. At least one of OH and $H_2O$ may be formed by discharge in water vapor, or the plasma may comprise a source of OH and $H_2O$ such as a glow discharge, microwave, or RF plasma of a gas or gases that comprise H and O. The plasma power may be applied intermittently such as in the form of pulsed power as disclosed in Mills Prior Publications.

To maintain the catalyst pressure at the desire level, the cell having permeation as the hydrogen source may be sealed. Alternatively, the cell further comprises high temperature valves at each inlet or outlet such that the valve contacting the reaction gas mixture is maintained at the desired temperature.

The plasma cell temperature can be controlled independently over a broad range by insulating the cell and by applying supplemental heater power with heater 380. Thus, the catalyst vapor pressure can be controlled independently of the plasma power.

The discharge voltage may be in the range of about 100 to 10,000 volts. The current may be in any desired range at the desired voltage. Furthermore, the plasma may be pulsed at any desired frequency range, offset voltage, peak voltage, peak power, and waveform.

In another embodiment, the plasma may occur in a liquid medium such as a solvent of the catalyst or of reactants of species that are a source of the catalyst.

## IX. Fuel Cell and Battery

An embodiment of the fuel cell and a battery 400 is shown in FIGURE 18. The hydrino reactants comprising a solid fuel or a heterogeneous catalyst comprise the reactants for corresponding cell half reactions. A catalyst-induced-hydrino-transition (CIHT) cell is enabled by the unique attributes of the catalyzed hydrino transition. The CIHT cell of the present disclosure is a hydrogen fuel cell that generates an electromotive force (EMF) from the catalytic reaction of hydrogen to lower energy (hydrino) states. Thus, it serves as a fuel cell for the direct conversion of the energy released from the hydrino reaction into electricity.

Due to oxidation-reduction cell half reactions, the hydrino-producing reaction mixture is constituted with the migration of electrons through an external circuit and ion mass transport through a separate path to complete an electrical circuit. The overall reactions and corresponding reaction mixtures that produce hydrinos given by the sum of the half-cell reactions may comprise the reaction types considered for thermal power production given in the present disclosure. The free energy $\Delta G$ from the hydrino reaction gives rise to a potential that may be an oxidation or reduction potential depending on the oxidation-reduction chemistry to constitute the hydrino-producing reaction mixture. The potential may be used to generate a voltage in a fuel cell. The potential V may be expressed in terms of the free energy $\Delta G$:

$$V = \frac{-\Delta G}{nF} \quad (186)$$

wherein F is the Faraday constant. Given the free energy is about -20 MJ/mole H for the transition to H(1/4), the voltage may be high depending on the other cell components such as the chemicals, electrolyte, and electrodes. In an embodiment wherein the voltage is limited by the oxidation-reduction potentials of these or other components, the energy may be manifest as a higher current and corresponding power contribution from hydrino formation. As indicated by Eqs. (6-9), the energy of the hydrino transition may be released as continuum radiation. Specifically, energy is transferred to the catalyst nonradiatively to form a metastable intermediate, which decays in plasma systems with the emission of continuum radiation as the electron translates from the initial to final radius. In condensed matter such as the CIHT cell, this energy may internally convert into energetic electrons manifest as a cell current and power contribution at potentials similar to the chemical potential of the cell reactants. Thus, the power may manifest as higher current at lower voltage than that given by Eq. (186). The voltage will also be limited by the kinetics of the reaction; so, high kinetics to form hydrinos is favorable to increase the power by increasing at least one of the current and voltage. Since the cell reaction may be driven by the large exothermic reaction of H with a catalyst to form hydrino, in an embodiment, the free energy of the conventional oxidation-reduction cell reactions to form the reactants to form hydrinos may be any value possible. Suitable

ranges are about +1000 kJ/mole to -1000 kJ/mole, about +1000 kJ/mole to -100 kJ/mole, about +1000 kJ/mole to -10 kJ/mole, and about +1000 kJ/mole to 0 kJ/mole. Due to negative free energy to form hydrinos, at least one of the cell current, voltage, and power are higher than those due to the free energy of the non-hydrino reactions that can contribute to the current, voltage, and power. This applies to the open circuit voltage and that with a load. Thus, in an embodiment, the CIHT cell is distinguished over any prior Art by at least one of having a voltage higher than that predicted by the Nernst equation for the non-hydrino related chemistry including the correction of the voltage due to any polarization voltage when the cell is loaded, a higher current than that driven by convention chemistry, and a higher power than that driven by conventional chemistry.

Regarding FIGURE 18, the fuel or CIHT cell 400 comprises a cathode compartment 401 with a cathode 405, an anode compartment 402 with an anode 410, a salt bridge 420, reactants that constitute hydrino reactants during cell operation with separate electron flow and ion mass transport, and a source of hydrogen. In general embodiments, the CIHT cell is a hydrogen fuel cell that generates an electromotive force (EMF) from the catalytic reaction of hydrogen to lower energy (hydrino) states. Thus, it serves as a fuel cell for the direct conversion of the energy released from the hydrino reaction into electricity. In another embodiment, the CIHT cell produces at least one of electrical and thermal power gain over that of an applied electrolysis power through the electrodes 405 and 410. The cell consumes hydrogen in forming hydrinos and requires hydrogen addition; otherwise, in an embodiment, the reactants to form hydrinos are at least one of thermally or electrolytically regenerative. Different reactants or the same reactants under different states or conditions such as at least one of different temperature, pressure, and concentration are provided in different cell compartments that are connected by separate conduits for electrons and ions to complete an electrical circuit between the compartments. The potential and electrical power gain between electrodes of the separate compartments or thermal gain of the system is generated due to the dependence of the hydrino reaction on mass flow from one compartment to another. The mass flow provides at least one of the formation of the reaction mixture that reacts to produce hydrinos and the conditions that permit the hydrino reaction to occur at substantial rates. The mass flow further requires that electrons and ions be transported in the separate conduits that connect the compartments. The electrons may arise from at least one of the ionization of the catalyst during the reaction of atomic hydrogen with the catalyst and by an oxidation or reduction reaction of a reactant species such as an atom, a molecule, a compound, or a metal. The ionization of the species in a compartment such as the anode compartment 402 may be due to at least one of (1) the favorable free energy change from its oxidation, the reduction of a reactant species in the separate compartment such as the cathode 401, and the reaction of the migrating ion that balances charge in the compartments to electroneutrality and (2) the free energy change due to hydrino formation due to the oxidation of the species, the reduction of a species in the separate compartment, and the reaction of the migrating ion that results in the reaction to form hydrinos. The migration of the ion may be through the salt bridge 420. In another embodiment, the oxidation of the species, the reduction of a species in the separate compartment, and the reaction of the migrating ion may not be spontaneous or may occur at a low rate. An electrolysis potential is applied to force the reaction wherein the mass flow provides at least one of the formation of the reaction mixture that reacts to produce hydrinos and the conditions that permit the hydrino reaction to occur at substantial rates. The electrolysis potential may be applied through the external circuit 425. The reactants of each half-cell may be at least one of supplied, maintained, and regenerated by addition of reactants or removal of products through passages 460 and 461 to sources of reactants or reservoirs for product storage and regeneration 430 and 431.

In an embodiment, at least one of the atomic hydrogen and the hydrogen catalyst may be formed by a reaction of the reaction mixture and one reactant that by virtue of it undergoing a reaction causes the catalysis to be active. The reactions to initiate the hydrino reaction may be at least one of exothermic reactions, coupled reactions, free radical reactions, oxidation-reduction reactions, exchange reactions, and getter, support, or matrix-assisted catalysis reactions. In an embodiment, the reaction to form hydrinos provides electrochemical power. The reaction mixtures and reactions to initiate the hydrino reaction such as the exchange reactions of the present disclosure are the basis of a fuel cell wherein electrical power is developed by the reaction of hydrogen to form hydrinos. Due to oxidation-reduction cell half reactions, the hydrino-producing reaction mixture is constituted with the migration of electrons through an external circuit and ion mass transport through a separate path to complete an electrical circuit. The overall reactions and corresponding reaction mixtures that produce hydrinos given by the sum of the half-cell reactions may comprise the reaction types for thermal power and hydrino chemical production of the present disclosure. Thus, ideally, the hydrino reaction does not occur or does not occur at an appreciable rate in the absence of the electron flow and ion mass transport.

The cell comprises at least a source of catalyst or a catalyst and a source of hydrogen or hydrogen. A suitable catalyst or source of catalyst and a source of hydrogen are those selected from the group of Li, LiH, Na, NaH, K, KH, Rb, RbH, Cs, CsH, Ba, BaH, Ca, CaH, Mg, $MgH_2$, $MgX_2$ (X is a halide) and $H_2$. Further suitable catalysts are given in TABLE 3. In an embodiment, a positive ion may undergo reduction at the cathode. The ion may be a source of the catalyst by at least one of reduction and reaction at the cathode. In an embodiment, an oxidant undergoes reaction to form the hydrino reactants that then react to form hydrinos. Alternatively, the final electron-acceptor reactants comprise an oxidant. The oxidant or cathode-cell reaction mixture may be located in the cathode compartment 401 having cathode

405. Alternatively, the cathode-cell reaction mixture is constituted in the cathode compartment from ion and electron migration. In one embodiment of the fuel cell, the cathode compartment 401 functions as the cathode. During operation, a positive ion may migrate from the anode to the cathode compartment. In certain embodiments, this migration occurs through a salt bridge 420. Alternatively, a negative ion may migrate from the cathode to anode compartment through a salt bridge 420. The migrating ion may be at least one of an ion of the catalyst or source of catalyst, an ion of hydrogen such as $H^+$, $H^-$, or $H^-(1/p)$, and the counterion of the compound formed by reaction of the catalyst or source of catalyst with the oxidant or anion of the oxidant. Each cell reaction may be at least one of supplied, maintained, and regenerated by addition of reactants or removal of products through passages 460 and 461 to sources of reactants or reservoirs for product storage and optionally regeneration 430 and 431. In general, suitable oxidants are those disclosed as hydrino reactants such as hydrides, halides, sulfides, and oxides. Suitable oxidants are metal hydrides such as alkali and alkaline earth hydrides and metal halides such as alkali, alkaline earth, transition, rare earth, silver, and indium metal halides as well as oxygen or a source of oxygen, a halogen, preferably $F_2$ or $Cl_2$, or a source of halogen, $CF_4$, $SF_6$, and $NF_3$. Other suitable oxidants comprise free radicals, or a source thereof, and a source of a positively-charged counter ion that are the components of the cathode-cell reaction mixture that ultimately scavenge electrons released from the catalyst reaction to form hydrinos.

In an embodiment, the chemistry yields the active hydrino reactants in the cathode compartment of the fuel cell wherein the reduction potential may include a large contribution from the catalysis of H to hydrino. The catalyst or source of catalyst may comprise a neutral atom or molecule such as an alkali metal atom or hydride that may form by the reduction of a positive species such as the corresponding alkali metal ion. The potential of the catalyst ion to be reduced to the catalyst and the H electron to transition to a lower electronic state gives rise to a contribution to the potential given by Eq. (186) based on $\Delta G$ of the reaction. In an embodiment, the cathode half-cell reduction reaction and any other reactions comprise the formation of the catalyst and atomic hydrogen and the catalysis reaction of H to hydrino. The anode half-cell reaction may comprise the ionization of a metal such as a catalyst metal. The ion may migrate to the cathode and be reduced, or an ion of the electrolyte may be reduced to form the catalyst. The catalyst may be formed in the presence of H. Exemplary reactions are

**Cathode half-cell reaction:**

$$Cat^{q+} + qe^- + H\left[\frac{a_H}{p}\right] \rightarrow Cat + H\left[\frac{a_H}{(m+p)}\right] + [(p+m)^2 - p^2]\cdot 13.6\ eV + E_R \qquad (187)$$

wherein $E_R$ is the reduction energy of $Cat^{q+}$ .

**Anode half-cell reaction:**

$$Cat + E_R \rightarrow Cat^{q+} + qe^- \qquad (188)$$

Other suitable reductants are metals such a transition metals.

**Cell reaction:**

$$H\left[\frac{a_H}{p}\right] \rightarrow H\left[\frac{a_H}{(m+p)}\right] + [(p+m)^2 - p^2]\cdot 13.6\ eV \qquad (189)$$

With the migration of the catalyst cation through a suitable salt bridge or electrolyte, the catalyst may be regenerated in the cathode compartment and replaced at the anode. Then, the fuel cell reactions may be maintained by replacement of cathode-compartment hydrogen reacted to form hydrino. The hydrogen may be from the electrolysis of water. The product from the cell may be molecular hydrino formed by reaction of hydrino atoms. In the case that H(1/4) is the product, the energy of these reactions are

$$2H(1/4) \rightarrow H_2(1/4) + 87.31\ eV \quad (190)$$

$$H_2O + 2.962\ eV \rightarrow H_2 + 0.5O_2 \quad (191)$$

The balanced fuel cell reactions for LiH given by Eqs. (187-191) in units of kJ/mole are

$$Li^+ + e^- + H \rightarrow Li + H(1/4) + 19{,}683\ kJ/mole + E_R \quad (192)$$

$$Li + E_R \rightarrow Li^+ + e^- \quad (193)$$

$$0.5\ (2H(1/4) \rightarrow H_2(1/4) + 8424 kJ/mole) \quad (194)$$

$$\underline{0.5(H_2O + 285.8 kJ/mole \rightarrow H_2 + 0.5O_2)} \quad (195)$$

$$0.5H_2O \rightarrow 0.5O + 0.5H_2(1/4) + 23{,}752\ kJ/mole \quad (196)$$

In other embodiments, Na, K, Rb, or Cs substitutes for Li.

During operation, the catalyst reacts with atomic hydrogen, the nonradiative energy transfer of an integer multiple of 27.2 *eV* from atomic hydrogen to the catalyst results in the ionization of the catalyst with a transient release of free electrons, and a hydrino atom forms with a large release of energy. In an embodiment, this reaction may occur in the anode compartment 402 such that the anode 410 ultimately accepts the ionized-electron current. The current may also be from the oxidation of a reductant in the anode compartment. In one embodiment of the fuel cell, the anode compartment 402 functions as the anode. At least one of *Li, K,* and *NaH* may serve as the catalysts to form hydrinos. A support such as carbon powder, carbide such as TiC, WC, $YC_2$, or $Cr_3C_2$, or a boride may serve as a conductor of electrons in electrical contact with an electrode such as the anode that may serve as a current collector. The conducted electrons may be from ionization of the catalyst or oxidation of a reductant. Alternatively, the support may comprise at least one of the anode and cathode electrically connected to a load with a lead. The anode lead as well as the cathode lead connecting to the load may be any conductor such as a metal.

In the case that the chemistry yields the active hydrino reactants in the anode compartment of the fuel cell, the oxidation potential and electrons may have a contribution from the catalyst mechanism. As shown by Eqs. (6-9), the catalyst may comprise a species that accepts energy from atomic hydrogen by becoming ionized. The potential of the catalyst to become ionized and the H electron to transition to a lower electronic state gives rise to contribution to the potential given by Eq. (186) based on $\Delta G$ of the reaction. Since NaH is a concerted internal reaction to form hydrino with the ionization of Na to $Na^{2+}$ as given by Eqs. (28-30), Eq. (186) should especially hold in this case. In an embodiment, the anode half-cell oxidation reaction comprises the catalysis ionization reaction. The cathode half-cell reaction may comprise the reduction of H to hydride. Exemplary reactions are

**Anode half-cell reaction:**

$$m \cdot 27.2\ eV + Cat + H\left[\frac{a_H}{p}\right] \rightarrow Cat^{r+} + re^- + H\left[\frac{a_H}{(m+p)}\right] + [(p+m)^2 - p^2] \cdot 13.6\ eV \quad (197)$$

**Cathode half-cell reaction:**

$$\frac{r}{2}\left(MH_2 + 2e^- + E_R \rightarrow M + 2H^-\right) \quad (198)$$

wherein $E_R$ is the reduction energy of metal hydride $MH_2$. Suitable oxidants are hydrides such as rare earth hydrides, titanium hydride, zirconium hydride, yttrium hydride, LiH, NaH, KH, and BaH, chalocogenides, and compounds of a M-N-H system such as Li-N-H system. With the migration of the catalyst cation or the hydride ion through a suitable salt bridge or electrolyte, the catalyst and hydrogen may be regenerated in the anode compartment. In the case that the stable oxidation state of the catalyst is *Cat,* the salt bridge or electrolyte reaction is

**Salt bridge or electrolyte reaction:**

$$Cat^{r+} + rH^- \rightarrow Cat + H + \frac{(r-1)}{2}H_2 + m \cdot 27.2\ eV + \left(\frac{(r-1)}{2}4.478 - r(0.754)\right)eV \qquad (199)$$

wherein 0.754 eV is the hydride ionization energy and 4.478 eV is the bond energy of $H_2$. The catalyst or source of catalyst may be a hydride that may also serve as a source of H. Then, the salt bridge reaction is

**Salt bridge or electrolyte reaction:**

$$Cat^{r+} + rH^- \rightarrow CatH + \frac{(r-1)}{2}H_2 + \begin{pmatrix} m \cdot 27.2\ eV \\ + \left(\frac{(r-1)}{2}4.478 - r(0.754)\right)eV \\ + E_L \end{pmatrix} \qquad (200)$$

wherein $E_L$ is lattice energy of *CatH.* Then, the fuel cell reactions may be maintained by replacement of hydrogen to the cathode compartment, or *CatH* in the electrolyte may react with M to form $MH_2$. That exemplary reaction of M = La is given by

$$La + H_2 \rightarrow LaH_2 + 2.09eV \qquad (201)$$

In the former case, hydrogen may be from the recycling of excess hydrogen from the anode compartment formed in the reduction of $Cat^{r+}$. Hydrogen replacement for that consumed to form H(1/4) then $H_2(1/4)$ may from the electrolysis of water.

Suitable reactants that are a source of the catalyst are LiH, NaH, KH, and BaH. The balanced fuel cell reactions for KH given by Eqs. (197-201) and (190-191) in units of kJ/mole are with $LaH_2$ as the H source are

$$7873\ kJ/mole + KH \rightarrow K^{3+} + 3e^- + H(1/4) + 19{,}683\ kJ/mole \qquad (202)$$

$$1.5(LaH_2 + 2e^- + E_R \rightarrow La + 2H^-) \qquad (203)$$

$$K^{3+} + 3H^- \rightarrow KH + H_2 + 7873\ kJ/mole + 213.8\ kJ/mole + E_L \qquad (204)$$

$$1.5(La + H_2 \rightarrow LaH_2 + 201.25kJ/mole) \qquad (205)$$

$$0.5\ (2H(1/4) \rightarrow H_2\ (1/4) + 8424kJ/mole) \qquad (205)$$

$$\underline{0.5(H_2O + 285.8kJ/mole \rightarrow H_2 + 0.5O_2)} \qquad (207)$$

$$0.5H_2O \rightarrow 0.5O + 0.5H_2(1/4) - 1.5E_R + E_L + 24{,}268\ kJ/mole \qquad (208)$$

To good approximation, the net reaction is given by

$$0.5H_2O \rightarrow 0.50 + 0.5H_2(1/4) + 24{,}000\ kJ/mole \qquad (209)$$

The balanced fuel cell reactions for NaH given by Eqs. (197-201) and (190-191) are

$$5248\ kJ/mole + NaH \rightarrow Na^{2+} + 2e^- + H(1/3) + 10{,}497\ kJ/mole \qquad (210)$$

$$1(LaH_2 + 2e^- + E_R \rightarrow La + 2H^-) \qquad (211)$$

$$Na^{2+} + 2H^- \rightarrow NaH + 0.5H_2 + 5248\ kJ/mole + 70.5\ kJ/mole \quad (212)$$

$$1(La + H_2 \rightarrow LaH_2 + 201.25kJ/mole) \quad (213)$$

$$\underline{0.5\ (H_2O + 285.8kJ/mole \rightarrow H_2 + 0.5O_2)} \quad (214)$$

$$0.5H_2O \rightarrow 0.5O + H(1/3) - E_R + 10{,}626\ kJ/mole \quad (215)$$

wherein the term 5248 *kJ/mole* of Eq. (212) includes $E_L$. To good approximation, the net reaction is given by

$$0.5H_2O \rightarrow 0.5O + H(1/3) + 10{,}626\ kJ/mole \quad (216)$$

Additional energy is given off for the transition of H(1/3) to H(1/4) (Eq. (31)), and then by forming $H_2(1/4)$ as the final product.

In an embodiment comprising a metal anode half-cell reactant such as an alkali metal M, the anode and cathode reactions are matched so that the energy change due to M migration is essentially zero. Then, M may serve as a hydrino catalyst of H at the cathode since the catalyst enthalpy is sufficiently matched to m27.2 eV. In an embodiment wherein the source of M is an alloy such as at the anode, the reduction of $M^+$ at the cathode forms the same alloy of M with the further reaction of M with H to form hydrinos. Alternatively, the anode alloy has essentially the same oxidation potential as M. In an embodiment, the electron affinity determines the hydrino reaction contribution to the CIHT cell voltage since the transition of the hydrino intermediate from the initial to the final state and radius is a continuum transition. Cell materials such as the electrode material and half-cell reactants are selected to achieve the desired voltage based on the limiting electron affinity of the materials.

The high-energy release and scalability of the CIHT cell stack is enabling of power applications in microdistributed, distributed, and central electrical power. In addition, a transformational motive power source is made possible by CIHT cell technology, especially since the system is direct-electrical with dramatic cost and system-complexity reductions compared to a thermal-based system. A car architecture utilizing a CIHT cell stack shown in FIGURE 19 comprises a CIHT cell stack 500, a source of hydrogen such as an electrolysis cell and a water tank or a hydrogen tank 501, at least one electric motor 502, an electronic control system 503, and a gear train or transmission 504. In general, applications include thermal such as resistive heating, electrical, motive, and aviation and others known by those skilled in the Art. In the latter case, electric-motor driven external turbines could replace jet engines, and an electric-motor driven propeller could replace the corresponding internal combustion engine.

In an embodiment, the principles of basic cell operation involve ionic transport of hydrogen through a hydride-ion ($H^-$) conducting, molten electrolyte, and reaction with a catalyst such as an alkali metal to form at least one of a hydride and hydrinos. An exemplary electrolyte is LiH dissolved in the eutectic molten salt LiCl-KCl. In the cell, the molten, $H^-$ conducting electrolyte may be confined in a chamber formed between two hydrogen-permeable, solid, metallic foil electrodes such as one of V, Nb, Fe, Fe-Mo alloy, W, Rh, Ni, Zr, Be, Ta, Rh, Ti, and Th foils, which also act as current collectors. The foil may further comprise alloys and coatings such as silver-palladium alloy having its surface in contact with the electrolyte coated with iron such as sputtered iron. The $H_2$ gas first diffuses through the cathode electrode and forms a hydride ion by the reaction $H + e^-$ to $H^-$ at the cathode-electrolyte interface. The $H^-$ ion subsequently migrates through the electrolyte under a chemical potential gradient. The gradient may be created by the presence of the catalyst such as alkali metal in the anode chamber. The $H^-$ ion releases the electron to form hydrogen atoms by the reaction $H^-$ to $H + e^-$ at the anode-electrolyte interface. The hydrogen atom diffuses through the anode electrode and reacts with the catalyst such as an alkali metal to form at least one of metal hydride, metal-H molecule, and a hydrino. The ionization of the catalyst may also contribute to the anode current. Other reactants may be present in the anode compartment to cause or increase the rate of the hydrino reaction such as a support such as TiC and a reductant, catalyst, and hydride exchange reactant such as Mg or Ca. The released electron or electrons flows through an external circuit to complete the charge balance. In another embodiment, the anode is not significantly H permeable such that $H_2$ gas is preferentially released at the anode rather metal hydride formation following H permeation through the anode metal.

The reactants may be regenerated thermally or electrolytically. The products may be regenerated in the cathode or anode compartments. Or, they may be sent to a regenerator using a pump for example wherein any of the regeneration chemistries of the present disclosure or known to those skilled in the Art may be applied to regenerate the initial reactants. Cells undergoing the hydrino reaction may provide heat to those undergoing regeneration of the reactants. In the case that the products are raised in temperature to achieve the regeneration, the CIHT cell products and regenerated reactants may be passed through a recuperator while sent to and from the regenerator, respectively, in order recover heat and increase the cell efficiency and system energy balance.

In an embodiment that forms a metal hydride with ion migration, the metal hydride such as an alkali hydride is thermally decomposed. The $H_2$ gas may be separated from the alkali metal by an $H_2$-permeable, solid, metallic membrane

and moved into the cathode chamber of the cell. The hydrogen-depleted alkali metal may be moved to the anode chamber of the cell such that the reaction involving the transport of $H^-$ can be perpetuated.

The migrating ion may be that of the catalyst such as an alkali metal ion such as $Na^+$. The ion may be reduced and may optionally be reacted with hydrogen to form the catalyst or source of catalyst and source of hydrogen such as one of LiH, NaH, KH, and BaH whereby the catalyst and hydrogen react to form hydrinos. The energy released in forming hydrinos produces an EMF and heat. Thus, in other embodiments, the hydrino reaction may occur in the cathode compartment to provide a contribution to the cell EMF. An exemplary cell is [Na/BASE/Na molten or eutectic salt R-Ni] wherein BASE is beta alumina solid electrolyte. In an embodiment, the cell may comprise [M/BASE/proton conductor electrolyte] wherein M is an alkali metal such as Na. The proton conductor electrolyte may be a molten salt. The molten salt may be reduced to hydrogen at the cathode with the counterion forming a compound with M. Exemplary proton conductors electrolytes are those of the disclosure such as protonated cations such as ammonium. The electrolytes may comprise an ionic liquid. The electrolyte may have a low melting point such as in the range of 100-200°C. Exemplary electrolytes are ethylammonium nitrate, ethylammonium nitrate doped with dihydrogen phosphate such as about 1% doped, hydrazinium nitrate, $NH_4PO_3$-$TiP_2O_7$, and a eutectic salt of $LiNO_3$-$NH_4NO_3$. Other suitable electrolytes may comprise at least one salt of the group of $LiNO_3$, ammonium triflate (Tf = $CF_3SO_3^-$), ammonium trifluoroacetate (TFAc =$CF_3COO^-$) ammonium tetrafluorobarate ($BF_4^-$), ammonium methanesulfonate ($CH_3SO_3^-$), ammonium nitrate ($NO_3^-$), ammonium thiocyanate ($SCN^-$), ammonium sulfamate ($SO_3NH_2^-$), ammonium bifluoride ($HF_2^-$) ammonium hydrogen sulfate ($HSO_4^-$) ammonium bis(trifluoromethanesulfonyl)imide (TFSI = $CF_3SO_2)_2N^-$), ammonium bis(perfluoroehtanesulfonyl)imide (BETI = $CF_3CF_2SO_2)_2N^-$), hydrazinium nitrate and may further comprise a mixture such as a eutectic mixture further comprising at least one of $NH_4NO_3$, $NH_4$Tf, and $NH_4$TFAc. Other suitable solvents comprise acids such as phosphoric acid.

In an embodiment, the cell comprises an anode that is a source of migrating ion $M^+$ that may be a metal ion such as an alkali metal ion. The cell may further comprise a salt bridge selective for $M^+$. The ion selective salt bridge may be BASE. The cathode half-cell reactants may comprise a cation exchange material such as a cation-exchange resin. The cathode half-cell may comprise an electrolyte such as an ionic liquid or an aqueous electrolyte such as an alkali metal halide, nitrate, sulfate, perchlorate, phosphate, carbonate, hydroxide, or other similar electrolyte. The cation exchange membrane may be protonated in the oxidized state. During discharge, $M^+$ may displace $H^+$ that is reduced to H. The formation of H gives rise to the formation of hydrinos. Exemplary cells are [Na, Na alloy, or Na chalcogenide/BASE, ionic liquid, eutetic salt, aqueous electrolyte/cation exchange resin]. The cell may regenerated electrolytically or by acid exchange with the cation exchanger.

In an embodiment, a pressure or temperature gradient between the two half-cell compartments effects the formation of hydrino reactants or the hydrino reaction rate. In an embodiment, the anode compartment comprises an alkali metal at a higher temperature or pressure than that of the same alkali metal in the cathode compartment. The pressure or temperature difference provides an EMF such that the metal such as sodium is oxidized at the anode.

The ion is transported through an ion selective membrane such as beta alumina or $Na^+$ glass that is selective for $Na^+$ ions. The migrating ions are reduced at the cathode. For example, $Na^+$ is reduced to form Na. The cathode compartment further comprises hydrogen that may be supplied by permeation through a membrane or a source of hydrogen provided as a reactant to form hydrinos. Other reactants may be present in the cathode compartment such as a support such as TiC and a reductant, catalyst, and hydride exchange reactant such as Mg or Ca or their hydrides. The source of H may react with the alkali metal to form the hydride. In an embodiment, NaH is formed. A suitable form of NaH is the molecular form that further reacts to form hydrinos. The energy release from the formation of metal hydride and hydrinos provides a further driving force for the ionization and migration of ions such as $Na^+$ to increase the power output from the cell. Any metal hydride such as NaH that is not reacted to form hydrino from the H may be thermally decomposed such that the hydrogen and metal such as Na are recycled. The metal such as Na may be increased in pressure at the anode cell compartment by an electromagnetic pump. An exemplary cell is [Na/beta alumina/$MgH_2$ and optionally a support such as TiC or WC]. Na is oxidized to $Na^+$ at the anode, migrates through the salt bridge beta alumina, is reduced to Na at the cathode, and reacts with $MgH_2$ in the cathode compartment to form NaH that further reacts to form hydrinos. The hydride or one or more other cathode reactants or species may be molten at the cell operating temperature. The cell may comprise an electrolyte. Exemplary electrolytes are molten electrolytes such as NaH-NaOH, NaOH (MP=323 °C), NaH-NaI (MP=220°C), NaH-$NaAlEt_4$, NaOH-NaBr-NaI, NaCN-NaI-NaF and NaF-NaCl-NaI.

NaOH may comprise a cathode reactant wherein the cell may form hydrinos by the reactions that give rise to H or a hydride. The reaction of *NaOH* and *Na* to $Na_2O$ and *NaH*(*s*) calculated from the heats of formation releases $\Delta H = -44.7\ kJ\ /\ mole\ NaOH$ :

$$NaOH + 2Na \rightarrow Na_2O + NaH(s)\ \Delta H = -44.7\ kJ\ /\ mole\ NaOH. \quad (217)$$

This exothermic reaction can drive the formation of *NaH*(*g*) and was exploited to drive the very exothermic reaction given

by Eqs. (28-31).

$$NaH \rightarrow Na + H(1/3)\ \Delta H = -10{,}500\ kJ\ /\ mole\ H \qquad (218)$$

and

$$NaH \rightarrow Na + H(1/4)\ \Delta H = -19{,}700\ kJ\ /\ mole\ H. \qquad (219)$$

The regenerative reaction in the presence of atomic hydrogen is

$$Na_2O + H \rightarrow NaOH + Na\ \Delta H = -11.6\ kJ\ /\ mole\ NaOH \qquad (220)$$

Exemplay cells are [M/BASE/M'OH] (M and M' are alkali metals that may be the same), [Na/BASE/ NaOH], [Na/BASE/ NaOH NaI], [Na/BASE/ NaOH NaBr], [Na/BASE/ NaOH NaBr NaI], [Na/BASE/NaBH4 NaOH], [K/K BASE/RbOH], [K/K BASE/CsOH], [Na/Na BASE/RbOH], and [Na/Na BASE/CsOH]. Another alkali may replace Na. Exemplary cells are [K/K BASE/mixture of KOH and $MNH_2$ (M = alkali metal)] and [Na/Na BASE/NaOH CsI (hydrino getter]. The cell may further comprise a conducting matrix material such as carbon, a carbide, or boride to increase the conductivity of the half-cell reactants such as the alkali hydroxide. The cathode MOH may comprise a eutectic mixture of alkali hydroxides such as NaOH and KOH that has a eutectic point at 170°C and 41 wt% NaOH. The anode may comprise K and Na or both.

In an embodiment, the cathode comprises an alkali hydroxide such as NaOH and further comprises a source of atomic H such as a dissociator and hydrogen such as R-Ni, $PdC(H_2)$, $PtC(H_2)$, $IrC(H_2)$. The source of atomic hydrogen may be a hydride such as an intermetallic hydride such as $LaNi_5H_6$, a rare earth hydride such as $CeH_2$ or $LaH_2$, a transition metal hydride such as $TiH_2$ or $NiH_2$, or an inner transition metal hydride such as $ZrH_2$. The source of atomic hydrogen may be mixed with the alkali hydroxide. Exemplary cells are [Na/BASE/NaOH and R-Ni, $PdC(H_2)$, $PtC(H_2)$, $IrC(H_2)$, $LaNi_5H_6$, $CeH_2$, $LaH_2$, $TiH_2$, $NiH_2$, or $ZrH_2$]. The H may serve as at least one of a reactant and catalyst to from hydrinos. The H may also serve to accept an electron from $OH^-$ to form $H^-$ and OH with the transition of H of OH to form H(1/p) according to the reactions of TABLE 3.

In an embodiment, ions and electrons migrate internally between the half-cells and through the external circuit, respectively, and combine at the cathode. The reduction reaction and potentially at least another subsequent half-cell reaction results in an alteration of a partial charge of the H of a source of H to reverse from a deficit to an excess relative to neutral. During this alteration with the formation of H from the source, the formation of hydrinos by a portion of the H occurs. Alternatively, ions and electrons migrate internally between the half-cells and through the external circuit, respectively, and electrons are ionized from the ions such as $H^-$ at the anode. The oxidation reaction and potentially at least another subsequent half-cell reaction results in an alteration of a partial charge of the H of a source of H such as $H^-$ to reverse from a excess to an deficit relative to neutral. During this alteration with the formation of H from the source, the formation of hydrinos by a portion of the H occurs. As examples, consider the partial positive charge on the H of each of the OH functional group of NaOH of the cell [Na/BASE/NaOH] and the NH group that forms during operation of the cell [$Li_3N$/LiCl-KCl/$CeH_2$]. In the former case, $Na^+$ is reduced at the cathode to Na that reacts with NaOH to form NaH wherein the H may be at least partially negatively charged. In the latter case, $H^-$ is oxidized at the anode and reacts with $Li_3N$ to form $Li_2NH$ and $LiNH_2$ whereby the charge on the H undergoes alteration from an excess to a deficit. During these alterations hydrinos are formed. Exemplary states that may accelerate the reaction to form hydrinos in the former and latter cases are $Na\overset{\delta-}{H}\cdots\overset{\delta'+}{H}ONa$ and $\overset{\delta-}{H}\cdots\overset{\delta'+}{H}NLi_2$, respectively. In an embodiment, a state such as $Na\overset{\delta-}{H}\cdots\overset{\delta'+}{H}ONa$ or $\overset{\delta-}{H}\cdots\overset{\delta'+}{H}NLi_2$ is formed in modified carbon of the current disclosure.

In other embodiments, NaOH is replaced by another reactant with Na that forms a hydride or H such as other hydroxides, acid salts, or ammoniun salts such as at least one of alkali hydroxides, alkaline earth hydroxides, transition metal hydroxides and oxyhydroxides and ammonium halides such as $NH_4Cl$, $NH_4Br$, NiO(OH), $Ni(OH)_2$, CoO(OH), $HCoO_2$, $HCrO_2$, GaO(OH), InOOH, $Co(OH)_2$, $Al(OH)_3$, AlO(OH), $NaHCO_3$, $NaHSO_4$, $NaH_2PO_4$, $Na_2HPO_4$. Further exemplary suitable oxyhyroxides are at least one of the group of bracewellite (CrO(OH)), diaspore (AlO(OH)), ScO(OH), YO(OH), VO(OH), goethite ($\alpha$-$Fe^{3+}$O(OH)), groutite ($Mn^{3+}$O(OH)), guyanaite (CrO(OH)), montroseite ((V,Fe)O(OH)), CoO(OH), NiO(OH), $Ni_{1/2}Co_{1/2}O(OH)$, and $Ni_{1/3}Co_{1/3}Mn_{1/3}O(OH)$, RhO(OH), InO(OH), tsumgallite (GaO(OH)), manganite ($Mn^{3+}$O(OH)), yttrotungstite-(Y) $YW_2O_6(OH)_3$, yttrotungstite-(Ce) ((Ce, Nd, Y)$W_2O_6(OH)_3$), unnamed (Nd-analogue of yttrotungstite-(Ce)) ((Nd, Ce, La)$W_2O_6(OH)_3$), frankhawthorneite ($Cu_2[(OH)_2[TeO_4]$), khinite

$(Pb^{2+}Cu_3^{2+}(TeO_6)(OH)_2)$, and parakhinite $(Pb^{2+}Cu_3^{2+}TeO_6(OH)_2)$. An exemplary reaction involving $Al(OH)_3$ is

$$3Na + Al(OH)_3 \rightarrow NaOH + NaAlO_2 + NaH + 1/2H_2 \qquad (221)$$

An exemplary corresponding cell is [Na/BASE/$Al(OH)_3$ Na eutetic salt]. Other suitable cells are [Na/BASE/ at least one of alkali hydroxides, alkaline earth hydroxides, transition metal hydroxides or oxyhydroxides such as CoO(OH), $HCoO_2$, $HCrO_2$, GaO(OH), InOOH, $Co(OH)_2$, NiO(OH), $Ni(OH)_2$, $Al(OH)_3$, AlO(OH), $NaHCO_3$, $NaHSO_4$, $NaH_2PO_4$, $Na_2HPO_4$ electrolyte such as a eutetic salt]. In other embodiments, another alkali metal is substituted for a given one. The oxidant of the cathode half-cell such as hydroxides, oxyhydroxides, ammonium compounds, and hydrogen acid anion compounds may be intercalated in a matrix such as carbon.

In an embodiment having H bond to another element wherein the H is acidic, the migrating ion $M^+$ may exchange with the acidic H, released as $H^+$, and $H^+$ may be subsequently reduced to $H_2$. This reaction may be suppressed to favor the formation of MH by addition of hydrogen such as high pressure $H_2$ gas wherein the formation of MH favors the formation of hydrinos.

The cathode or anode half-cell reactant comprising a source of H may comprise an acid. The H of the reactant may be bound to oxygen or a halide, for example. Suitable acids are those known in the Art such as HF, HBr, HI, $H_2S$, nitric, nitrous, sulfuric, sulfurous, phosphoric, carbonic, acetic, oxalic, perchloric, chloric, chlorous, hypochlorous, borinic, metaborinic, boric such as $H_3BO_3$ or $HBO_2$, silicic, metasilicic, orthosilicic, arsenic, arsenoius, sellenic, sellenous, tellurous, and telluric acid. An exemplary cell is [M or M alloy/BASE or separator and electrolyte comprising an organic solvent and a salt/acid such as HF, HBr, HI, $H_2S$, nitric, nitrous, sulfuric, sulfurous, phosphoric, carbonic, acetic, oxalic, perchloric, chloric, chlorous, hypochlorous, borinic, metaborinic, boric such as $H_3BO_3$ or $HBO_2$, silicic, metasilicic, orthosilicic, arsenic, arsenoius, sellenic, sellenous, tellurous, and telluric acid].

In embodiments, the electrolyte and separator may be those of Li ion batteries wherein Li may be replaced by another alkali such as Na when the corresponding ion is the migrating ion. The electrolyte may be a Na solid electrolyte or salt bridge such as NASICON. The source of H such as a hydroxide such as NaOH, H acid salt such as $NaHSO_4$, or oxyhydroxide such a CoO(OH) or $HCoO_2$ may be intercalated in carbon. Exemplary cells are [Na/olefin separator LP 40 NaPF6/NaOH or NaOH intercalated C], [Na/Na solid electrolyte or salt bridge such as NASICON /NaOH or NaOH intercalated C], and [Li, LiC, Li or Li alloy such as $Li_3Mg$/ separator such as olefin membrane and organic electrolyte such as $LiPF_6$ electrolyte solution in DEC or $LiBF_4$ in tetrahydrofuran (THF) or a eutectic salt/ alkali hydroxides, alkaline earth hydroxides, transition metal hydroxides or oxyhydroxides, acid salts, or ammonium salts such as CoO(OH), $HCoO_2$, $HCrO_2$, GaO(OH), InOOH, $Co(OH)_2$, NiO(OH), $Ni(OH)_2$, $Al(OH)_3$, AlO(OH), $NH_4Cl$, $NH_4Br$, $NaHCO_3$, $NaHSO_4$, $NaH_2PO_4$, $Na_2HPO_4$ or these compounds intercalated in C]. A conducting matrix or support may be added such as carbon, a carbide, or a boride. A suitable lead for a basic electrolyte is Ni.

The cell may be regenerated by the chemical and physical methods of the disclosure. For example, the cell comprising [Na/BASE/NaOH NaI], [Na/BASE/NaOH], or [Na/BASE/NaOH R-Ni mixed] may be regenerated by addition of $H_2$ to the product $Na_2O$ to form NaOH and at least one of Na and NaH. In an embodiment, the regeneration of $Na_2O$ is performed in an inert vessel that is resistant to forming and oxide such as a Ni, Ag, Co, or alumina vessel. The product of discharge such as $Na_2O$ may be melted, ground, milled, or processed by means known in the Art to increase the surface area before hydrogenation. The amount of hydrogen may be controlled to stoichiometrically form a mixture of Na and NaOH. The temperature may also be controlled such that Na and NaOH are preferred. The at least one of Na and NaH may be removed by distillation or by separation based on density. In an embodiment, the cell is operated at about 330°C and not significantly higher in temperature. Below this temperature NaOH would solidify, and above this temperature Na would dissolve in the molten NaOH. As desired, the less dense Na forms a separate layer on the molten NaOH, and in an embodiment, is physically separated by means such a pumping. The Na is returned to the anode. NaH may be thermally decomposed to Na and returned to the anode. In an embodiment, of the thermal reactor the products may be regenerated in the same manner. In an exemplary system, $H_2$ is added to a closed system comprising the cell [Na/BASE/hydrogen-chalcogenide such as NaOH]. In this case, a mixture of Na and NaH serves as the anode and $Na_2O$ can be regenerated continuously.

The regeneration reaction

$$Na_2O + H_2 \text{ to } NaOH + NaH \qquad (222)$$

may be performed in a pressure vessel that may be the half-cell. Suitable temperatures are in the range of about 25°C to 450°C and about 150°C to 250°C. The reaction rate is higher at a more elevated temperature such as about 250°C. The hydrogenation may occur at lower temperature such as about 25°C with ball milling and a hydrogen pressure of about 0.4 MPa. 50% completion of the reaction (Eq. (222)) can be achieved at a temperature as low as 60°C at 10 MPa

for 48 hrs, and the reaction goes to completion by raising the temperature to 100°C. Suitable pressures are in the range of greater than zero to about 50 MPa. In exemplary embodiments, hydrogen absorption to 3 wt% (theoretical hydrogen capacity is 3.1 wt%) occurs at 1.8 MPa with the temperature maintained at each of 175, 200, 225, and 250 °C. The absorption isotherms at these temperatures are very similar; whereas, the one at 150°C shows slightly less hydrogen absorption of 2.85 wt% at 1.8 MPa. The $Na_2O$ hydrogenation reaction is capable of rapid kinetics. For example, at a pressure of 0.12 MPa, 1.5 wt% hydrogen can be absorbed in 20 minutes at 150 °C, and more than 2 wt% hydrogen can be absorbed in 5 minutes at 175-250°C. The NaH is separated from NaOH by physical and evaporative methods known in the art. In the latter case, the system comprises an evaporative or sublimation system and at least one of the evaporated or sublimed Na and NaH is collected and Na or NaH is returned to the anode half-cell. The evaporative or sublimation separation may be under a hydrogen atmosphere. Isolated NaH may be separately decomposed using at least one of heating and applying reduced pressure. Certain catalysts such as $TiCl_3$ and $SiO_2$ may be used to hydrogenate $Na_2O$ at a desired temperature that are known in the Art for similar systems.

In another embodiment based on the Na, NaOH, NaH $Na_2O$ phase diagram, the regeneration may be achieved by controlling the cell temperature and hydrogen pressure to shift the reaction equilibrium

$$Na_2O(s) + NaH(s)\square\ 2NaOH(1) + Na(1) \qquad (223)$$

which occurs at about the range of 412 + 2°C and 182 + 10 torr. The liquids form to separable layers wherein the Na layer is removed. The solution may be cooled to form molten Na and solid NaOH that allows further Na to be removed.

The hydrogen from the reaction of M with MOH (M is alkali) may be stored in a hydrogen storage material that may be heated to by a heater such as an electrical heater to supply hydrogen during regeneration. The M (e.g. Na) layer is pumped to the anode by a pump such as an electromagnetic pump or may be flowed to the anode.

Referring to FIGURE 18, in an embodiment of an exemplay cell [Na/BASE/NaOH], the molten salt comprising a mixture of product and reactants is regenerated in the cathode compartment 420 by supplying hydrogen through inlet 460 at a controlled pressure using hydrogen source and pump 430. The molten salt temperature is maintained by heater 411 such that a Na layer forms on top and is pumped to the anode compartment 402 by pump 440. In another embodiment also shown in FIGURE 18, the molten salt comprising a mixture of product and reactants is flowed into regeneration cell 412 from the cathode compartment 401 through channel 419 and through 416 and 418, each comprising at least one of a valve and a pump. Hydrogen is supplied and the pressure is controlled by hydrogen source and pump 413 connected to the regeneration cell 412 by a line 415 with the flow controlled by a control valve 414. The molten salt temperature is maintained with heater 411. The hydrogenation causes Na to form a separate layer that is pumped from the top of the regeneration cell 412 to the cathode chamber 402 through channel 421 through 422 and 423, each comprising at least one of a valve and a pump. In an embodiment such as one comprising a continuous cathode salt flow mode, the channel 419 extends below the Na layer to supply flowing salt from the cathode compartment to the lower layer comprising at least $Na_2O$ and NaOH. Any of the cathode or anode compartments, or regeneration cell may further comprise a stirrer to mix the contents at a desire time in the power or regeneration reactions.

In an embodiment, the cell has at least the cathode reaction product $Li_2O$ that is converted to at least LiOH wherein LiOH is a cathode reactant. The regeneration of LiOH may be addition of $H_2$. LiH may be also form. The LiH and LiOH may form two separate layers due to the difference in densities. The conditions of temperature and hydrogen pressure may be adjusted to achieve the separation. The LiH may be physically moved to the anode half-cell. The LiH may be thermally decomposed to Li or used directly as an anode reactant. The anode may further comprise another compound or element that reacts and stores hydrogen such as a hydrogen storage material such as Mg. During cell operation at least one reaction occurs to form $Li^+$ such as LiH may be in equilibrium with Li that ionizes, LiH may ionize to $Li^+$ directly, and LiH may undergo a hydride exchange reaction with a H storage material such as Mg and the Li ionizes. The cell may have an electrolyte such as a solid electrolyte that may be BASE. In another embodiment, $Li_2O$ is converted to LiOH and LiH, and Li is returned to the anode by electrolysis such that LiOH remains as a cathode reactant. In an embodiment comprising another alkali metal as the anode such as Na or K, the cathode half-cell reaction product mixture may comprise some $Li_2O$ and MOH and optionally $M_2O$ (M=alkali). The reduction of $Li_2O$ and $M_2O$ to LiOH and LiH and optionally MH and MOH occurs by reaction with $H_2$ followed by the spontaneous reaction of LiH and MOH to LiOH and MH. M may be dynamically removed to drive the reaction in non-equilibrium mode. The removal may be by distillation with M condensed in a separate chamber or a different part of the reactor. The MH or M is isolated and returned to the anode.

The reactants may be continuously fed through the half cells to cause the hydrino reaction and may be further flowed or conveyed to another region, compartment, reactor, or system wherein the regeneration may occur in batch, intermittently, or continuously wherein the regenerating products may be stationary or moving.

In an embodiment, the reverse reaction of the metal hydride metal chalcogenide reaction is the basis of a half-cell reaction to form hydrinos. The half-cell reactant may be the dehydrogenated chalcogenide such as $Na_2O$, $Na_2S$, $Na_2Se$, $Na_2Te$, and other such chalcogenides. In the case that the migrating ion is $H^+$, the metal chalcogenide reactant

is in the cathode half-cell. Exemplary reactions are
Anode

$$H_2 \text{ to } 2H^+ + 2e^- \qquad (224)$$

Cathode

$$Na_2O + 2H^+ + 2e^- \text{ to } NaOH + NaH$$

Overall reaction

$$Na_2O + H_2 \text{ to } NaOH + NaH \qquad (225)$$

In a similar cell, $H^+$ displaces Na in NaY. Exemplary cells are [proton source such as PtC($H_2$)/proton conductor such as Nafion, ionic liquid, or aqueous electrolyte/NaY (sodium zeolite that reacts with $H^+$ to form HY (protonated zeolite)) CB] and [proton source such as PtC($H_2$)/proton conductor such as HCl-LiCl-KCl/NaY (sodium zeolite that reacts with $H^+$ to form HY (protonated zeolite)) CB]. $H^+$ may also displace $H^+$ as in the case of the exemplary cell [proton source such as PtC($H_2$)/proton conductor such as HCl-LiCl-KCl/HY (hydogen zeolite that reacts with $H^+$ to form hydrogen gas CB]. In other embodiments, the cell reactant comprises metal-coated zeolite such as nickel-coated zeolite that is doped with $K^+$ or $Na^+$.

In the case that the migrating ion is $H^-$, the metal chalcogenide reactant is in the anode half-cell. Exemplary reactions are
Cathode

$$CeH_2 + 2e^- \text{ to } Ce + 2H^- \qquad (226)$$

Anode

$$Na_2O + 2H^- \text{ to } NaOH + NaH + 2e^-$$

Overall reaction

$$Na_2O + CeH_2 \text{ to } NaOH + NaH + Ce \qquad (227)$$

Exemplary cells are [proton source such as PtC($H_2$)/proton conductor such as Nafion/chalcogenide such as $Na_2O$] and [chalcogenide such as $Na_2O$/hydride ion conductor such as a eutectic salt such as a mixture or alkali halides such as LiCl-KCl/hydride source such as a metal hydride such as a transition, inner transition, rare earth, alkali, or alkaline earth hydride such as $TiH_2$, $ZrH_2$ or $CeH_2$].

In another embodiment, the half-cell reactant may be at least one of an oxide such as $M_2O$ where M is an alkali metal, preferably $Li_2O$, $Na_2O$, and $K_2O$, a peroxide such as $M_2O_2$ where M is an alkali metal, preferably $Li_2O_2$, $Na_2O_2$, and $K_2O_2$, and a superoxide such as $MO_2$ where M is an alkali metal, preferably $Li_2O_2$, $Na_2O_2$, and $K_2O_2$. The ionic peroxides may further comprise those of Ca, Sr, or Ba. A suitable solvent is a eutectic salt, solid electrolyte, or organic or ionic solvent.

In a general embodiment, a metal chalcogenide reacts with a metal atom formed by the reduction of the corresponding cation at the cathode. The reaction of metal M with a hydrogen chalcogenide XH is given by

$$MXH + 2M \rightarrow M_2X + MH(s) \qquad (228)$$

This exothermic reaction can drive the formation of $MH(g)$ to drive the very exothermic reaction given by Eqs. (28-31). The chalcogenide may be at least one of O, S, Se, and Te. The metal M may be at least one of Li, Na, K, Rb, and Cs. In addition to O, another exemplary chalcogenide reaction involves S. The reaction of *NaSH* and *Na* to $Na_2S$ and $NaH(s)$ calculated from the heats of formation releases $\Delta H = -91.2\ kJ / mole\ Na$ :

$$NaSH + 2Na \rightarrow Na_2S + NaH(s)\ \Delta H = -91.2\ kJ / mole\ Na. \qquad (229)$$

This exothermic reaction can drive the formation of $NaH(g)$ to drive the very exothermic reaction given by Eqs. (28-31). Exemplary cells are [Na/BASE/NaHS (MP=350 °C)], [Na/BASE/NaHSe], and [Na/BASE/NaHTe]. In other embodiments, another alkali metal is substituted for a given one.

Additional suitable hydrogen chalcogenides are those having a layered structure absent the H such as hydrogenated alkaline earth chalcogenides and hydrogenated $MoS_2$ and $WS_2$, $TiS_2$, $ZrS_2$, $HfS_2$, $TaS_2$, $TeS_2$, $ReS_2$, $PtS_2$, $SnS_2$, SnSSe, $TiSe_2$, $ZrSe_2$, $HfSe_2$, $VSe_2$, $TaSe_2$, $TeSe_2$, $ReSe_2$, $PtSe_2$, $SnSe_2$, $TiTe_2$, $ZrTe_2$, $VTe_2$, $NbTe_2$, $TaTe_2$, $MoTe_2$, $WTe_2$, $CoTe_2$, $RhTe_2$, $IrTe_2$, $NiTe_2$, $PdTe_2$, $PtTe_2$, $SiTe_2$, $NbS_2$, $TaS_2$, $MoS_2$, $WS_2$, $NbSe_2$, $NbSe_3$, $TaSe_2$, $MoSe_2$, $WSe_2$, $MoTe_2$, and $LiTiS_2$. In general, a cathode half-cell reactant may comprise a compound comprising metal, hydrogen, and chalcogenide.

In general, the cathode half-cell reactants may comprise an acidic H that undergoes reduction with the migrating ion such as $M^+$ balancing the charge. The reaction of metal M with HX' (X' is the corresponding anion of an acid) is given by

$$MX'H + 2M \rightarrow M_2X' + MH(s) \qquad (230)$$

wherein M may be an alkali metal. This exothermic reaction can drive the formation of $MH(g)$ to drive the very exemplary exothermic reaction given by Eqs. (6-9) and (28-31). An exemplary acid reaction involves a compound comprising a metal halide such as an alkali or alkaline earth halide and an acid such as a hydrogen halide. The reaction of $KHF_2$ and K to 2KF and KH calculated from the heats of formation releases $\Delta H = -132.3\ kJ / mole\ K$ :

$$KHF_2 + 2K \rightarrow 2KF + KH\ \Delta H = -132.3\ kJ / mole\ K. \qquad (231)$$

An exemplary cell is [K/BASE/$KHF_2$ (MP=238.9 °C)]. In the case that Na replaces K, the enthalpy change is $\Delta H = -144.6\ kJ / mole\ Na.$ An exemplary cell is [Na/olefin separator $NaPF_6$ LP40/$NaHF_2$ (MP=>160 dec °C)]. The acidic H may be that of a salt of a multiprotic acid such as $NaHSO_4$, $NaHSO_3$, $NaHCO_3$, $NaH_2PO_4$, $Na_2HPO_4$, $NaHCrO_4$, $NaHCr_2O_7$, $NaHC_2O_4$, $NaHSeO_3$, $NaHSeO_4$, $Na_2HAsO_4$, $NaHMoO_4$, $NaHB_4O_7$ $NaHWO_4$, $NaHTiO_3$, $NaHGeO_3$, $Na_3HSiO_4$, $Na_2H_2SiO_4$, $NaH_3SiO_4$, $NaHSiO_3$, and a metal such as an alkali metal and a hydrogen oxyanion, a hydrogen oxyanion of a strong acid, and ammonium compounds such as $NH_4X$ wherein X is an anion such as halide or nitrate. Exemplary cells are [Na/BASE/$NaHSO_4$ (MP=350 °C) or $NaHSO_3$ (MP=315 °C)] and [Na/olefin separator $NaPF_6$ LP40/$NaHCO_3$, $NaH_2PO_4$, $Na_2HPO_4$, $NaHCrO_4$, $NaHCr_2O_7$, $NaHC_2O_4$, $NaHSeO_3$, $NaHSeO_4$, $Na_2HAsO_4$, $NaHMoO_4$, $NaHB_4O_7$ $NaHWO_4$, $NaHTiO_3$, $NaHGeO_3$, $Na_3HSiO_4$, $Na_2H_2SiO_4$, $NaH_3SiO_4$, $NaHSiO_3$, and a metal such as an alkali metal and a hydrogen oxyanion, a hydrogen oxyanion of a strong acid, and ammonium compounds such as $NH_4X$ wherein X is an anion such as halide or nitrate]. Other alkali metals may substitute for Na. In embodiments, the electrolyte may be an aqueous salt of the migrating ion.

Additional suitable oxidants are that can be synthesized by methods known in the Art such as oxidation of the metal oxide in a basic solution are $WO_2(OH)$, $WO_2(OH)_2$, $VO(OH)$, $VO(OH)_2$, $VO(OH)_3$, $V_2O_2(OH)_2$, $V_2O_2(OH)_4$, $V_2O_2(OH)_6$, $V_2O_3(OH)_2$, $V_2O_3(OH)_4$,$V_2O_4(OH)_2$, $FeO(OH)$, $MnO(OH)$, $MnO(OH)_2$, $Mn_2O_3(OH)$, $Mn_2O_2(OH)_3$, $Mn_2O(OH)_5$, $MnO_3(OH)$, $MnO_2(OH)_3$, $MnO(OH)_5$, $Mn_2O_2(OH)_2$, $Mn_2O_6(OH)_2$, $Mn_2O_4(OH)_6$, $NiO(OH)$, $TiO(OH)$, $TiO(OH)_2$, $Ti_2O_3(OH)$, $Ti_2O_3(OH)_2$, $Ti_2O_2(OH)_3$, $Ti_2O_2(OH)_4$, and $NiO(OH)$. In general, the oxidant may be $M_xO_yH_z$ wherein x, y, and z are integers and M is a metal such as a transition, inner transition, or rare earth metal such as metal oxyhydroxides. In the case that the migrating ion of the cell is $Li^+$ with reduction at the cathode, the reaction to form hydrino may be

$$CoO(OH) \text{ or } HCoO_2 + 2Li \text{ to } LiH + LiCoO2 \qquad (232)$$

$$LiH \text{ to } H(1/p) + Li \qquad (233)$$

In an embodiment, H of $CoO(OH)$ or $HCoO_2$ is intercalated between the $CoO_2$ planes. The reaction with lithium results in at least one of Li replacing H in the structure, LiH is an intercalation product (in the disclosure, insertion can also be used in lieu of intercalation), LiH is a separate product. At least one of the following results, some of the H reacts to form hydrinos during the reaction or hydrinos are formed from the products. Exemplary cells are [Li, Na, K, Li alloy such as $Li_3Mg$, LiC, or modified carbon such as $C_xKH_y$ such as $C_8KH_{0.6}$/BASE or olefin separator Li, Na, or $KPF_6$ LP40/$CoO(OH)$, $HCoO_2$, $HCrO_2$, $GaO(OH)$, $InOOH$, $WO_2(OH)$, $WO_2(OH)_2$, $VO(OH)$, $VO(OH)_2$, $VO(OH)_3$, $V_2O_2(OH)_2$, $V_2O_2(OH)_4$, $V_2O_2(OH)_6$, $V_2O_3(OH)_2$, $V_2O_3(OH)_4$,$V_2O_4(OH)_2$, $FeO(OH)$, $MnO(OH)$, $MnO(OH)_2$, $Mn_2O_3(OH)$, $Mn_2O_2(OH)_3$, $Mn_2O(OH)_5$, $MnO_3(OH)$, $MnO_2(OH)_3$, $MnO(OH)_5$, $Mn_2O_2(OH)_2$, $Mn_2O_6(OH)_2$, $Mn_2O_4(OH)_6$, $NiO(OH)$, $TiO(OH)$, $TiO(OH)_2$, $Ti_2O_3(OH)$, $Ti_2O_3(OH)_2$, $Ti_2O_2(OH)_3$, $Ti_2O_2(OH)_4$, $NiO(OH)$, and $M_xO_yH_z$ wherein x, y, and z are integers and M is a metal such as a transition, inner transition, or rare earth metal)]. In other embodiments, the alkali may be substituted with another.

In an embodiment, the H of the reactant such as an oxyhydroxide or base such as NaOH is hydrogen bonded. In an embodiment, the $O - H \cdots H$ distance may be in the range of about 2 to 3 Å and preferably in the range of about 2.2 to 2.7 Å. A metal such as an alkali metal comprising the reduced migrating ion reacts with the hydrogen-bonded H to form hydrinos. The H bonding may involve H bound to atoms such as O and N wherein the H bond may be with another

functional group such as a carbonyl (C=O), C-O, S=O, S-O, N=O, N-O, and other such groups known in the Art. An exemplary cathode reactant may be a hydroxide or oxyhydroxide mixed with a compound with a carbonyl group such as a ketone, or a carbonate such as an alkali carbonate, DEC, EC, or DMC or other H bonding group such as C-O, S=O, S-O, N=O, or N-O. Exemplary suitable compounds are ethers, sulfides, disulfides, sulfoxides, sulfones, sulfites, sulfate, sulfonates, nitrates, nitrtites, and nitro and nitroso compounds. In an embodiment, the H bonded cathode reactants further comprises some water that participates in the H bonding and increases the rate to form hydrinos. The water may be intercalated in carbon to form another modified carbon of the disclosure. The carbon may be activated with electronegative groups such as C-O, C=0, and carboxylate groups that can hydrogen bond to added H. Carbon can be oxidatively activated with treatment with air, $O_2$, or $HNO_3$, or activated by treatment with water and/or $CO_2$ at 800-1000°C. The carbon may comprise a dissociator such as Pt/C or Pd/C that is activated. Atomic H is formed by the dissociator that H bonds in the carbon matrix. The activation may be by methods such as steam treatment or activation. In another embodiment, a hydride material such as R-Ni is water or steam activated. The activation may be by heating to a temperature in the range of about 25 °C to 200°C while flowing a mixture of steam or water vapor and an inert gas such as argon. Other suitable activated materials comprise intercalating materials such as hBN, chalcogenides, carbon, carbides, and borides such as $TiB_2$ that are functionalized with H bonding electronegative groups. The H bonding reactant may also comprise protonated zeolite (HY). H bonding is temperature sensitive; thus, in an embodiment, the temperature of the H-bonded reactants is controlled to control the rate of the hydrino reaction and consequently, one of the voltage, current, and power of the CIHT cell. FTIR may be recorded on oxyhydroxides and other similar cathode materials to study H bonding species such as O-H and hydrogen that is H bonded to O.

In embodiments of cells comprising an alkali hydroxide cathode half-cell reactant, a solvent may be added to at least the cathode half-cell to at least partially dissolve the alkali hydroxide. The solvent may be capable of H bonding such as water or an alcohol such as methanol or ethanol. The cell may comprise an electrolyte comprising an organic solvent. Exemplary cells are [Na/Celgard LP 30/ NaOH + H bonding matrix or solvent such as an alcohol], [Li/Celgard LP 30/ LiOH + H bonding matrix or solvent such as an alcohol], and [K/Celgard LP 30/ KOH + H bonding matrix or solvent such as an alcohol] and [Na/Celgard LP 30/ NaOH + methanol or ethanol], [Li/Celgard LP 30/ LiOH + methanol or ethanol], and [K/Celgard LP 30/ KOH + methanol or ethanol]. The solvent of the cell having an organic solvent as part of the electrolyte may be selected to partially dissolve the alkali hydroxide. The cell may comprise a salt bridge to separate dissolved alkali hydroxide of one half-cell from another. The solvent added to at least partially dissolve the alkali hydroxide may be water. Alternatively, an alkali hydroxide may be formed from water during discharge or formed from a solute such as a carbonate. Exemplary cells are [Li LP 30/ $Li^+$ glass /water], [Li LP 30/ $Li^+$ glass /aqueous base such as LiOH or $Li_2CO_3$], [Li LP 30/Whatman GF/D glass fiber sheet/water], [Li LP 30/Whatman GF/D glass fiber sheet/aqueous base such as LiOH or $Li_2CO_3$], [Na LP 30/$Na^+$ glass/water], [Na LP 30/$Na^+$ glass/aqueous base such as NaOH or $Na_2CO_3$], [K LP 30/$K^+$ glass/water], [K LP 30/$K^+$ glass/aqueous base such as KOH or $K_2CO_3$]. The performance of the alkali hydroxide cathode cell of the exemplary type [Na/CG2400+Na-LP40/NaOH] may also be enhanced by heating wherein a thermally-stable solvent is used.

In an embodiment, at least one of the half-cell reactant such as the cathode half-cell reactants may comprise an aqueous acid. Exemplary cell are [Li LP 30/Whatman GF/D glass fiber sheet/aqueous acid such as HCl], [Na LP 30/$Na^+$ glass/aqueous acid such as HCl], and [K LP 30/$K^+$ glass/aqueous acid such as HCl]. The pH of neutral, basic, and acidic electrolytes or solvents may be adjusted by addition of acid or base to optimize the rate of hydrino formation.

In another embodiment, having no electrolyte, a high surface area support/hydride serves to wick Na metal formed on the surface from reduction of $Na^+$. Suitable supports are such R-Ni and TiC. Optionally, the cathode reactants comprise a molten hydride such as $MgH_2$ (MP 327°C) wherein a hydrogen atmosphere may be supplied to maintain the hydride. In other embodiments, M (alkali metal such as Li or K) replaces Na wherein exemplary cells are [K/K-BASE/KI KOH] [K/K-BASE/KOH] (K-BASE is potassium beta alumina), [LiLi-BASE or $Al_2O_3$/LiI LiOH] [Li/Li-BASE or $Al_2O_3$/LiOH] (Li-BASE is lithium beta alumina). Suitable exemplary molten hydride comprising mixtures are the eutectic mixtures of NaH-$KBH_4$ at about 43 + 57 mol % having the melt temperature is about 503 °C, KH-$KBH_4$ at about 66 + 34 mol % having the melt temperature is about 390 °C, NaH-$NaBH_4$ at about 21 + 79 mol % having the melt temperature is about 395 °C, $KBH_4$-$LiBH_4$ at about 53 + 47 mol % having the melt temperature is about 103 °C, $NaBH_4$-$LiBH_4$ at about 41.3 + 58.7 mol % having the melt temperature is about 213 °C, and $KBH_4$-$NaBH_4$ at about 31.8 + 68.2 mol % having the melt temperature is about 453 °C wherein the mixture may further comprise an alkali or alkaline earth hydride such as LiH, NaH, or KH. Other exemplary hydrides are $Mg(BH_4)_2$ (MP 260°C) and $Ca(BH_4)_2$ (367°C).

In a general embodiment, the reaction to form H and form the catalyst such as Li, NaH, K, or H as the catalyst whereby hydrinos are formed comprises a reaction of a reactant that comprises H. The H of the reactant may be bound to any element. Suitable sources of H comprise H bound to another element wherein the bond has a large dipole moment. The bonding may be covalent, ionic, metallic, coordinate, three-centered, van der Waals, physi-absorption, chemi-absorption, electrostatic, hydrophilic, hydrophobic, or other form of bonding known in the Art. Suitable elements are Group III, IV, V, VI, and VII atoms such as boron, carbon, nitrogen, oxygen, halogen, aluminum, silicon, phosphorous, sulfur, selenium, and tellurium. The reaction may comprise an exchange or extraction reaction of H. The reaction may

comprise a reduction reaction of the reactant that comprises H. The reaction may involve a direct cathode reduction or reduction by an intermediate that was first reduced at the cathode. For example, H bound to an atom such as B, C, N, O, or X (X = halogen) of an inorganic or organic compound may undergo reaction with an alkali metal atom M to form at least one of H, $H_2$, and MH wherein the reaction further results in the formation of hydrinos. M may be formed in the cathode half-cell from the migration of $M^+$. The bonding of the H containing reactant may be any form such as van der Waals, physi-absorption, and chemi-absorption. Exemplary compounds comprising H bound to another atom are $B_xH_y$ (x and y are integers), H intercalated carbon, an alkyne such as acetylene, 1-nonyne, or phenylacetylene, compounds having a BN-H group such as $NH_3BH_3$, $NH_3$, a primary or secondary amine, amide, phthalimide, phthalhydrazide, polyamide such as a protein, urea or similar compound or salt, imide, aminal or aminoacetal, hemiaminal, guanidine or similar compound such as a derivative of arginine or salts thereof such as guanidinium chloride, triazabicyclodecene, $MNH_2$, $M_2NH$, $MNH_2BH_3$, MNHR (M is a metal such as an alkali metal) (R is an organic group), diphenylbenzidine sulfonate, $M(OH)_x$ or MO(OH) (M is a metal such as an alkali, alkaline earth, transition, or inner transition metal), $H_2O$, $H_2O_2$, and ROH (R is an organic group of an alcohol) such as ethanol, erythritol ($C_4H_{10}O_4$), galactitol (Dulcitol), (2R,3S,4R,5S)-hexane-1,2,3,4,5,6-hexol, or polyvinyl alcohol (PVA), or a similar compound such as at least one of the group comprising those having SiOH groups such as a silanol and a silicic acid and one having BOH groups such as a borinic acid, an alkyl borinic acid, and boric acid such as $H_3BO_3$ or $HBO_2$. Other exemplary reactants comprising H are RMH wherein M is a Group III, IV, V, or VI element and R is organic such as an alkyl group, RSH such as thiols, $H_2S$, $H_2S_2$, $H_2Se$, $H_2Te$, HX (X is a halogen), MSH, MHSe, MHTe, $M_xH_yX_z$ (X is an acid anion, M is a metal such as an alkali, alkaline earth, transition, inner transition, or rare earth metal, and x,y,z are integers), $AlH_3$, $SiH_4$, $Si_xH_y$, $Si_xH_yX_z$ (X is a halogen), $PH_3$, $P_2H_4$, $GeH_4$, $Ge_xH_y$, $Ge_xH_yX_z$ (X is a halogen), $AsH_3$, $As_2H_4$, $SnH_4$, $SbH_3$, and $BiH_3$. Exemplary cells are [M, M alloy, or M intercalated compound/BASE, or olefin separator, organic solvent, and a salt, or aqueous salt electrolyte/ $B_xH_y$ (x and y are integers), H intercalated carbon, an alkyne such as acetylene, 1-nonyne, or phenylacetylene, $NH_3BH_3$, $NH_3$, a primary or secondary amine, amide, polyamide such as a protein, urea, imide, aminal or aminoacetal, hemiaminal, guanidine or similar compound such as a derivative of arginine or salts thereof such as guanidinium chloride, triazabicyclodecene, $MNH_2$, $M_2NH$, $MNH_2BH_3$, MNHR (M is a metal such as an alkali metal) (R is an organic group), diphenylbenzidine sulfonate, $M(OH)_x$ or MO(OH) (M is a metal such as an alkali, alkaline earth, transition, or inner transition metal), $H_2O$, $H_2O_2$, and ROH (R is an organic group of an alcohol) such as ethanol or polyvinyl alcohol, or a similar compound such as at least one of the group comprising those having SiOH groups such as a silanol and a silicic acid and one having BOH groups such as a borinic acid, an alkyl borinic acid, boric acid such as $H_3BO_3$ or $HBO_2$, $H_2S$, $H_2S_2$, $H_2Se$, H2Te, HX (X is a halogen), MSH, MHSe, MHTe, $M_xH_yX_z$ (X is an acid anion, M is a metal such as an alkali, alkaline earth, transition, inner transition, or rare earth metal, and x,y,z are integers), $AlH_3$, $SiH_4$, $Si_xH_y$, $Si_xH_yX_z$ (X is a halogen), $PH_3$, $P_2H_4$, $GeH_4$, $Ge_xH_y$, $Ge_xH_yX_z$ (X is a halogen), $AsH_3$, $As_2H_4$, $SnH_4$, $SbH_3$, and $BiH_3$], [Na/BASE/polyvinyl alcohol], [Na or K/olefin separator and organic solvent and a salt/phenylacetylene], [Li/Celgard LP 30/phthalimide], and [Li/Celgard LP 30/phthalhydrazide].

In an embodiment, the OH group may be more like a basic inorganic group such as hydroxide ion ($OH^-$) than an organic OH group such as that of an alcohol or an acidic group. Then, the central atom bound to O is more metallic.

In an embodiment, a half-cell reactant comprises a compound with internal H bonding such as aspirin or o-methoxy-phenol. An exemplary cell is [Li/Celgard LP 30/ o-methoxy-phenol]. In an embodiment, at least on half-cell reactant is a periodic H bonded compound such as silicates with $H^+$ and possibly some alkali metal ion comprising the positive ion such as HY. Other periodic H bonded compounds comprise proteins such as those comprising serine, threonine, and arginine, DNA, polyphosphate, and ice. In an embodiment, the cell is operated below the melting point of water such that ice comprises a proton conductor. Exemplary cells are [Pt/C($H_2$)/Nafion/ice methylene blue], [Pt/C($H_2$)/Nafion/ice anthraquinone], and [Pt/C($H_2$)/Nafion/ice polythiophene or polypyrrole]. (The symbol "/" is used to designate the compartments of the cell and also used, where appropriate, to designate "on" such as Pt on carbon for Pt/C. Thus, in the disclosure such "on" designation may also be without the symbol / wherein it is inherent to one skilled in the Art that PtC for example means Pt on carbon.)

The H of the reactant may be bound to a metal such as a rare earth, transition, inner transition, alkali or alkaline earth metal. The H reactant may comprise a hydride. The hydride may be a metal hydride. In an exemplary reaction, H is extracted from a hydride such as a metal hydride to form $M^+$ $H^-$ wherein $M^+$ is a counterion such as that of an electrolyte, and $H^-$ migrates to the anode, is oxidized to H, and reacts with an acceptor such as those of the disclosure.

The H of the H reactant may undergo exchange with another reactant that comprises an ionic metallic compound such as a metal salt such as a metal halide. The reaction may comprise a hydride-halide exchange reaction. Exemplary hydride-halide exchange reactions are given in the disclosure. The cell may comprise a source of halide in the cathode half-cell such as halogen gas, liquid or solid, a halide salt bridge, and a hydride such as a metal halide in the anode half-cell. Halide may be formed in the cathode half-cell, migrate through the salt bridge, and become oxidized in the anode half-cell and react with a metal hydride to form the metal halide and H atoms and $H_2$ gas wherein hydrinos are formed during the halide-hydride exchange. Exemplary cells are [halogen such as $I_2$(s)/halide salt bridge such as AgI/metal hydride such as $MnH_2$], [$Br_2$(1)/AgBr/metal hydride such as $EuH_2$], and [$Cl_2$(g)/AgCl/$SrH_2$].

In an embodiment, the cell comprises a source of $Na^+$ ions, a medium to selectively transport $Na^+$ ions, and a sink for $Na^+$ ions and a source of H to form NaH catalyst and hydrinos. The source of H may be a hydride such as metal hydride. Suitable metal hydrides are rare earth, transition metal, inner transition metal, alkali, and alkaline earth metal hydrides, and other hydrides of elements such as B and Al. The cell may comprise a Na source anode such as a Na intercalation compound, nitride, or chalcogenide, at least one of an electrolyte, separator, and salt bridge, and a cathode comprising at least one of a metal hydride such as a rare earth hydride, transition metal hydride such as R-Ni or $TiH_2$, or inner transition metal hydride such as $ZrH_2$, a hydrogenated matrix material such as hydrogenated carbon such as active carbon, a Na intercalation compound such as a metal oxide or metal oxyanion such as $NaCoO_2$, or $NaFePO_4$, or other chalcogenide. Exemplary sodium cathode materials are a sink of Na comprising oxides such as $Na_xWO_3$, $Na_xV_2O_5$, $NaCoO_2$, $NaFePO_4$, $NaMn_2O_4$, $NaNiO_2$, $Na_2FePO_4F$, $NaV_2O_5$, $Na_2Fe_{1-x}Mn_xPO_4F$, $Na_x[Na_{0.33}Ti_{1.67}O_4]$, or $Na_4Ti_5O_{12}$, layered transition metal oxides such as Ni-Mn-Co oxides such as $NaNi_{1/3}Co_{1/3}Mn_{1/3}O_2$, and $Na(Na_aNi_xCo_yMn_z)O_2$, and $NaTi_2O_4$. Exemplary sodium anode materials are a source of Na such as graphite ($NaC_6$), hard carbon ($NaC_6$), titanate ($Na_4Ti_5O_{12}$), Si ($Na_{4.4}Si$), and Ge ($Na_{4.4}Ge$). An exemplary cell is [NaC/ polypropylene membrane saturated with a 1 M $NaPF_6$ electrolyte solution in 1:1 dimethyl carbonate/ethylene carbonate/$NaCoO_2$ R-Ni]. The electrolyte may be a low-melting point salt, preferably a Na salt such as at least one of NaI (660 °C), $NaAlCl_4$ (160 °C), $NaAlF_4$, and compound of the same class as $NaMX_4$ wherein M is a metal and X is a halide having a metal halide such as one that is more stable than NaX. At least one half-cell reaction mixture may further comprise a support such as R-Ni or a carbide such as TiC. Exemplary cells are [Na/sodium beta alumina/$NaAlCl_4$ TiC $MH_2$ such as $TiH_2$, $ZrH_2$ or $LaH_2$]. In other embodiments, K replaces Na. In an embodiment, the alkali metal M such as Na is formed by the reduction of $M^+$ in a porous material such as a porous metal hydride such that M is prevented from contracting any reactive electrolyte such as $MAlCl_4$.

In other embodiments of the disclosure, an alkali metal may replace another. For example, the anode comprising an alkali metal may be an alloy such as one of $Li_3Mg$, $K_3Mg$, and $Na_3Mg$ wherein different alkali metals are suitable half-cell reactants.

In another embodiment, Na-based CIHT cell comprises a cathode, an anode, and an electrolyte wherein at least one component comprises hydrogen or a source of hydrogen. In one embodiment, the cathode contains an electrochemically active sodium based material such as a reversible intercalation deintercalation material. The material may also comprise a species that serves as a capacitor material during charge and discharge. Suitable Na reversible intercalation deintercalation materials comprise transition oxides, sulfides, phosphates, and fluorides. The material may contain an alkali metal such as Na or Li that may be deintercalated during charging and may further be exchanged by methods such as electrolysis. The electrochemically active sodium based material of US Patent No. US 7,759, 008 B2 (July 20, 2010) are herein incorporated by reference. The sodium based active material is primarily a sodium metal phosphate selected from compounds of the general formula:

$$A_aM_b(XY_4)_cZ_d,$$

wherein

i. A is selected from the group consisting of sodium and mixtures of sodium with other alkali metals, and $0<a\leq9$;
ii. M comprises one or more metals, comprising at least one metal which is capable of undergoing oxidation to a higher valence state, and $1\leq b\leq3$;
iii. $XY_4$ is selected from the group consisting of $X'O_{4-x}Y'_x$, $X'O_{4-y}Y'_{2y}$, $X''S_4$, and mixtures thereof, where X' is P, As, Sb, Si, Ge, S, and mixtures thereof; X'' is P, As, Sb, Si, Ge and mixtures thereof; Y' S is halogen; $0\leq x<3$; and $0<y<4$; and $0<c\leq3$ ;
iv. Z is OH, halogen, or mixtures thereof, and $0\leq d\leq6$; and wherein M, X, Y, Z, a, b, c, d, x and y are selected so as to maintain electroneutrality of the compound.

Non-limiting examples of preferred sodium containing active materials include $NaVPO_4F$, $Na_{1+y}VPO_4F_{1+y}$, $NaVOPO_4$, $Na_3V_2(PO_4)_2F_3$, $Na_3V_2(PO_4)_3$, $NaFePO_4$, $NaFe_xMg_{1-x}PO_4$, $Na_2FePO_4F$ and combinations thereof, wherein $0<x<1$, and $-0.2\leq y\leq0.5$. Another preferred active material has the general formula $Li_{1-z}Na_zVPO_4F$ wherein $0<z<1$. In addition to vanadium (V), various transition metals and non-transition metal elements can be used individually or in combination to prepare sodium based active materials. In embodiments, H partially substitutes for Na or Li of the electrochemically active sodium based material. At least one of the cathode, anode, or electrolyte further comprises H or a source of H. The cell design may be that of the CIHT cells having electrochemically active lithium based materials with Na replacing Li and may further comprise these electrochemically active sodium based materials replacing the corresponding ones of the lithium-based cells. In other embodiments, another alkali metal such as Li or K may substitute for Na.

The anode may comprise Na/carbon wherein the electrolyte may comprise an inorganic Na compound such as $NaClO_4$ and an organic solvent such as EC:DEC, PC:DMC, or PC:VC. The electrolyte may comprise the solid electrolyte NASICON ($Na_3Zr_2Si_2PO_{12}$). The sodium CIHT cell may comprise [Na or NaC/$Na_3Zr_2Si_2POi_2$/$Na_3V_2(PO_4)_3$]

and [$Na_3V_2(PO_4)_3$/$Na_3Zr_2Si_2PO_{12}$/$Na_3V_2(PO_4)_3$].

In an embodiment, Na may serve as an anode reactant and as an electrolyte of cathode half-cell wherein a Na concentration gradient may exist due to a mixture with another molten element or compound of the cathode half-cell. The cell further comprises a source of H such as a hydride cathode reactant and may further comprise a support. Exemplary concentration cells having $Na^+$ as the migrating ion that may be through a salt bridge such as beta alumina solid electrolyte (BASE) are [Na/BASE/Na at a lower concentration that the anode half-cell due to other molten elements or compounds such as at least one of In, Ga, Te, Pb, Sn, Cd, Hg, P, S, I, Se, Bi, and As, H source such as hydride, and optionally a support].

In other embodiments, the cathode material is an intercalation compound with the intercalating species such as an alkali metal or ion such as Na or $Na^+$ replaced by H or $H^+$. The compound may comprise intercalated H. The compound may comprise a layered oxide compound such as $NaCoO_2$ with at least some Na replaced by H such as CoO(OH) also designated $HCoO_2$. The cathode half-cell compound may be a layered compound such as a layered chalcogenide such as a layered oxide such as $NaCoO_2$ or $NaNiO_2$ with at least some intercalated alkali metal such as Na replaced by intercalated H. In an embodiment, at least some H and possibly some Na is the intercalated species of the charged cathode material and Na intercalates during discharge. Suitable intercalation compounds with H replacing at least some of the Na's are those that comprise the anode or cathode of a Li or Na ion battery such as those of the disclosure. Suitable exemplary intercalation compounds comprising $H_xNa_y$ or H substituting for Na are Na graphite, $Na_xWO_3$, $Na_xV_2O_5$, $NaCoO_2$, $NaFePO_4$, $NaMn_2O_4$, $NaNiO_2$, $Na_2FePO_4F$, $NaMnPO_4$, $VOPO_4$ system, $NaV_2O_5$, $NaMgSO_4F$, $NaMSO_4F$ (M=Fe, Co, Ni, transition metal), $NaMPO_4F$ (M=Fe, Ti), $Na_x[Na_{0.33}Ti_{1.67}O_4]$, or $Na_4Ti_5O_{12}$, layered transition metal oxides such as Ni-Mn-Co oxides such as $NaNi_{1/3}Co_{1/3}Mn_{1/3}O_2$, and $Na(Na_aNi_xCo_yMn_z)O_2$, and $NaTi_2O_4$, and other Na layered chalcogenides and intercalation materials of the disclosure such as Na reversible intercalation deintercalation materials comprising transition oxides, sulfides, phosphates, and fluorides. Other suitable intercalations compounds comprise oxyhydroxides such at least one from the group of AlO(OH), ScO(OH), YO(OH), VO(OH), CrO(OH), MnO(OH) ($\alpha$-MnO(OH) groutite and $\gamma$-MnO(OH) manganite), FeO(OH), CoO(OH), NiO(OH), RhO(OH), GaO(OH), InO(OH), $Ni_{1/2}Co_{1/2}O(OH)$, and $Ni_{1/3}Co_{1/3}Mn_{1/3}O(OH)$. Exemplary cells are [Na source such as Na, Na alloy such as NaC or $Na_3Mg$/eutectic salt, organic electrolyte such as LP 40 with $NaPF_6$, an ionic liquid, or solid sodium electrolyte such as BASE or NASICON/intercalation compounds comprising $H_xNa_y$ or H substituting in the group of Na graphite, $Na_xWO_3$, $Na_xV_2O_5$, $NaCoO_2$, $NaFePO_4$, $NaMn_2O_4$, $NaNiO_2$, $Na_2FePO_4F$, $NaMnPO_4$, $VOPO_4$ system, $NaV_2O_5$, $NaMgSO_4F$, $NaMSO_4F$ (M=Fe, Co, Ni, transition metal), $NaMPO_4F$ (M=Fe, Ti), $Na_x[Na_{0.33}Ti_{1.67}O_4]$, or $Na_4Ti_5O_{12}$, layered transition metal oxides such as Ni-Mn-Co oxides such as $NaNi_{1/3}Co_{1/3}Mn_{1/3}O_2$, and $Na(Na_aNi_xCo_yMn_z)O_2$, and $NaTi_2O_4$, and other Na layered chalcogenides and intercalation materials of the disclosure such as Na reversible intercalation deintercalation materials comprising transition oxides, sulfides, phosphates, and fluorides] and [Na source such as Na, Na alloy such as NaC or $Na_3Mg$/eutectic salt, organic electrolyte such as LP 40 with $NaPF_6$, an ionic liquid, or solid sodium electrolyte such as BASE or NASICON/at least one of the group of AlO(OH), ScO(OH), YO(OH), VO(OH), CrO(OH), MnO(OH) ($\alpha$-MnO(OH) groutite and $\gamma$-MnO(OH) manganite), FeO(OH), CoO(OH), NiO(OH), RhO(OH), GaO(OH), InO(OH), $Ni_{1/2}Co_{1/2}O(OH)$, and $Ni_{1/3}Co_{1/3}Mn_{1/3}O(OH)$]. Other alkali metals may substitute for Na such as K.

In an embodiment, the cathode product formed from the reduction of the migrating ion and any possible further reaction with a cathode reactant may be regenerated by non-electrolysis as well as electrolysis techniques. The product may be regenerated to the anode starting material by the methods of the present disclosure for reaction mixtures. For example, the product comprising the element(s) of the migrating ion may be physically or thermally separated and regenerated and returned to the anode. The separation may be by thermal decomposition of a hydride and the evaporation of the metal that is the reduced migrating ion. The cathode product of the migrating ion may also be separated and reacted with anode products to form the starting reactants. The hydride of the cathode reactants may be regenerated by adding hydrogen, or the hydride may be formed in a separate reaction chamber following separation of the corresponding cathode reaction products necessary to from the starting hydride. Similarly, any other cathode staring reactants may be regenerated by separation and chemical synthesis steps in situ or in a separate vessel to form the reactants.

In an embodiment of the CIHT cell, another cation replaces $Na^+$ as the mobile ion. The mobile ion may be reduced at the cathode to form the catalyst or source of catalyst, such as NaH, K, Li, $Sr^+$, or BaH. The electrolyte may comprise $\beta$"-Alumina (beta prime-prime alumina) or beta alumina as well complexed with the corresponding mobile ion. Thus, the solid electrolyte may comprise $Al_2O_3$ complexed with at least one of $Na^+$, $K^+$, $Li^+$, $Sr^{2+}$, and $Ba^{2+}$ and may also be complexed with at least one of $H^+$, $Ag^+$, or $Pb^{2+}$. The electrolyte or salt bridge may be an ion impregnated glass such as $K^+$ glass. In an embodiment with $H^+$ as the mobile ion, $H^+$ is reduced to H at the cathode to serve as a source of atomic hydrogen for catalysis to hydrinos. In a general embodiment, the anode compartment comprises an alkali metal, the solid electrolyte comprises the corresponding migrating metal ion complexed to beta alumina, and the cathode compartment comprises a source of hydrogen such as a hydride or $H_2$. The migrating metal ion may be reduced to the metal at the cathode. The metal or a hydride formed from the metal may be the catalyst or source of catalyst. Hydrinos are formed by the reaction of the catalyst and hydrogen. The cell may be operated in a temperature range that provides a favorable conductivity. A suitable operating temperature range is 250 °C to 300 °C. Other exemplary sodium ion

conducting salt bridges are NASICON ($Na_3Zr_2Si_2PO_{12}$) and $Na_xWO_3$. In other embodiments, another metal such as Li or K may replace Na. In an embodiment, at least one of the cell components such as the, salt bridge, and cathode and anode reactants comprises a coating that is selectively permeable to a given species. An example is a zirconium oxide coating that is selectively permeable to $OH^-$. The reactants may comprise micro-particles encapsulated in such a coating such that they selectively react with the selectively permeable species. Lithium solid electrolytes or salt bridges may be halide stabilized $LiBH_4$ such as $LiBH_4$-LiX (X = halide), $Li^+$ impregnated $Al_2O_3$ (Li-$\beta$-alumina), $Li_2S$ based glasses, $Li_{0.29+d}La_{0.57}TiO_3$ (d =0 to 0.14), $La_{0.51}Li_{0.34}TiO_{2.94}$, $Li_9AlSiO_8$, $Li_{14}ZnGe_4O_{16}$ (LISICON), $Li_xM_{1-y}M'_yS_4$ (M = Si, Ge, and M' = P, Al, Zn, Ga, Sb)(thio-LISICON), $Li_{2.68}PO_{3.73}N_{0.14}$ (LIPON), $Li_5La_3Ta_2O_{12}$, $Li_{1.3}Al_{0.3}Ti_{1.7}(PO_4)_3$, $LiM_2(PO_4)_3$, $M^{1V}$ = Ge, Ti, Hf, and Zr, $Li_{1+x}Ti_2(PO_4)_3$ ($0 \le x \le 2$) $LiNbO_3$, lithium silicate, lithium aluminate, lithium aluminosilicate, solid polymer or gel, silicon dioxide ($SiO_2$), aluminum oxide ($Al_2O_3$), lithium oxide ($Li_2O$), $Li_3N$, $Li_3P$, gallium oxide ($Ga_2O_3$), phosphorous oxide ($P_2O_5$), silicon aluminum oxide, and solid solutions thereof and others known in the art. An exemplary cell is [Li/Li solid electrolyte/R-Ni].

In a type of hydride exchange reaction, the hydride exchange reaction may comprise the reduction of a hydride other than that of the catalyst or source of catalyst such as an alkali hydride such as LiH, KH, or NaH or BaH. The hydride ions stabilize the highly ionized catalyst cation of the transition state. The purpose of the different hydride is to force the reaction to proceed to a greater extent in forward direction of forming the transition state and hydrinos. Suitable different hydrides are alkaline earth hydrides such as BaH and $MgH_2$, different alkali hydrides such as LiH with KH or NaH, transition metal hydrides such as $TiH_2$, and rare earth hydrides such as $EuH_2$, $GdH_2$, and $LaH_2$.

In an embodiment, the electrons and catalyst ion recombine in the transition state such that the catalysis reaction will not occur. The external provision of a counterion to the ionized catalyst such as hydride ions facilitates the catalysis and formation of ionized catalyst such as $Na^{2+}$ or $K^{3+}$. This is further facilitated by the components of the reaction mixture of a conducting support such as TiC and optionally a reductant such as an alkaline earth metal or its hydride such as $MgH_2$ or other source of hydride ions. Thus, the CIHT cell may perform as a battery and provide power to a variable load on demand wherein the load completes the circuit for the flow of electrons from the anode compartment and the flow of counterions from the cathode compartment. Furthermore, such a circuit for at least one of electrons and counterions enhances the rate of the hydrino reaction in an embodiment.

Regarding FIGURE 18, the fuel cell 400 comprises a cathode compartment 401 with a cathode 405, an anode compartment 402 with an anode 410, a salt bridge 420, hydrino reactants, and a source of hydrogen. The anode compartment reactants may comprise a catalyst or a source of catalyst and hydrogen or a source of hydrogen such as LiH, NaH, BaH, or KH and may further comprise one or more of a support such as TiC and a reductant such as at least one of an alkaline earth metal and its hydride such as Mg and $MgH_2$ and an alkali metal and its hydride such as Li and LiH. The cathode compartment reactants may comprise a source of an exchangeable species such as an anion such a halide or hydride. Suitable reactants are metal hydrides such as alkaline earth or alkali metal hydrides such as $MgH_2$, BaH, and LiH. The corresponding metals such as Mg and Li may be present in the cathode compartment.

The salt bridge may comprise an anion conducting membrane and/or an anion conductor. The salt bridgen may conduct a cation. The salt bridge may be formed of a zeolite or alumina such as one saturated with the cation of the catalyst such as sodium aluminate, a lanthanide boride (such as $MB_6$, where $M$ is a lanthanide), or an alkaline earth boride (such as $MB_6$ where $M$ is an alkaline earth). A reactant or cell component may be an oxide. The electrochemical species in an oxide may be oxide ions or protons. The salt bridge may conduct oxide ions. Typical examples of oxide conductors are yttria-stabilized zirconia (YSZ), gadolinia doped ceria (CGO), lanthanum gallate, and bismuth copper vanadium oxide such as $BiCuVO_x$). Some perovskite materials such as $La_{1-x}Sr_xCo_yO_{3-d}$ also show mixed oxide and electron conductivity. The salt bridge may conduct protons. Doped barium cerates and zirconates are good proton conductors or conductors of protonated oxide ions. The $H^+$ conductor may be a $SrCeO_3$-type proton conductors such as strontium cerium yttrium niobium oxide. $H_xWO_3$ is another suitable proton conductor. Nafion, similar membranes, and related compounds are also suitable proton conductors, and may further serve as cation conductors such as $Na^+$ or $Li^+$ conductors. The proton conductor may comprise a solid film of HCl-LiCl-KCl molten salt electrolyte on a metal mesh such as SS that may serve as a proton conductor salt bridge for a cell having an organic electrolyte. The cation electrolyte may undergo exchange with Nafion to form the corresponding ion conductor. The proton conductor may be an anhydrous polymer such as ionic liquid based composite membrane such as Nafion and ionic liquids such as 1-ethyl-3-methylimidazolium trifluoro-methanesulphonate and 1-ethyl-3-methylimidazolium tetrafluoroborate, or a polymer comprising proton donor and acceptor groups such as one having benzimidazole moieties such as poly-[(1-(4,4'-diphenylether)-5-oxybenzimidazole)-benzimidazole] that may also be blended with Nafion and further doped such as with inorganic electron-deficient compounds such as BN nanoparticles.

In other embodiments, one or more of a number of other ions known to those skilled in the Art may be mobile within solids such as $Li^+$, $Na^+$, $Ag^+$, $F^-$, $Cl^-$, and $N^{3-}$. Corresponding good electrolyte materials that use any of these ions are $Li_3N$, Na-$\beta$-$Al_2O_3$, AgI, $PbF_2$, and $SrCl_2$. Alkali salt-doped polyethylene oxide or similar polymers may serve as an electrolyte/separator for a migrating alkali metal ion such as $Li^+$. In an embodiment, the salt bridge comprises the solidied molten electrolyte of the cell formed by cooling in specific location such as in a separating plane. The cooling may be

achieved by using a heat sink such as a heat conductor such as a metal plate that is porous. Additionally, the alkali and alkaline earth hydrides, halides, and mixtures, are good conductors of hydride ion $H^-$. Suitable mixtures comprise a eutectic molten salt. The salt bridge may comprise a hydride and may selectively conduct hydride ions. The hydride may be very thermally stable. Due to their high melting points and thermal decomposition temperatures, suitable hydrides are saline hydrides such as those of lithium, calcium, strontium, and barium, and metal hydrides such as those of rare earth metals such as Eu, Gd, and La. In the latter case, H or protons may diffuse through the metal with a conversion from or to $H^-$ at the surface. The salt bridge may be a hydride ion conducting solid-electrolyte such as $CaCl_2$-$CaH_2$. Suitable hydride ion conducting solid electrolytes are $CaCl_2$-$CaH_2$ (5 to 7.5 mol%) and $CaCl_2$-LiCl-$CaH_2$. Exemplary cells comprising a $H^-$ conducing salt bridge are [Li/eutetic salt such as LiCl-KCl LiH/$CaCl_2$-$CaH_2$/ eutetic salt such as LiCl-KCl LiH /Fe($H_2$)] and [Li or Li alloy/$CaCl_2$-$CaH_2$/ eutetic salt such as LiCl-KCl LiH /Fe($H_2$)].

The cathode and anode may be an electrical conductor. The conductor may be the support and further comprise a lead for each of the cathode and anode that connects each to the load. The lead is also a conductor. A suitable conductor is a metal, carbon, carbide, or a boride. A suitable metal is a transition metal, stainless steel, noble metal, inner transition metal such as Ag, alkali metal, alkaline earth metal, Al, Ga, In, Sn, Pb, and Te.

The cell may comprise a solid, molten, or liquid cell. The latter may comprise a solvent. The operating conditions may be controlled to achieve a desired state or property of at least one reactant or cell component such as those of the cathode cell reactants, anode cell reactants, the salt bridge, and cell compartments. Suitable states are solid, liquid, and gaseous, and suitable properties are the conductivity to ions and electrons, physical properties, miscibility, diffusion rate, and reactivity. In the case that one or more reactants are maintained in a molten state the temperature of the compartment may be controlled to be above the reactant melting point. Exemplary melting points of Mg, $MgH_2$, K, KH, Na, NaH, Li, and LiH are 650 °C, 327 °C, 63.5 °C, 619 °C, 97.8 °C, 425 °C (dec), 180.5 °C, and 688.7 °C, respectively. The heat may be from the catalysis of hydrogen to hydrinos. Alternatively, the oxidant and/or reductant reactants are molten with heat supplied by the internal resistance of the fuel cell or by external heater 450. In an embodiment, the CIHT cell is surrounded by insulation such that comprising as a double-walled evacuated jacket such as a sheet metal jacket filled with insulation for conductive and radiative heat loss that is known to those skilled in the Art. In an embodiment, the configuration is a thermodynamically efficient retainer of heat such as a right cylindrical stack that provides an optimal volume to surface area ratio to retain heat. In an embodiment, the reactants of at least one of the cathode and anode compartments are at least partially solvated by a solvent. The solvent may dissolve the catalyst or source of catalyst such as alkali metals and hydrides such as LiH, Li NaH, Na, KH, K, BaH, and Ba. Suitable solvents are those disclosed in the Organic Solvent section and Inorganic Solvent section. Suitable solvents that dissolve alkali metals are hexamethylphosphoramide ($OP(N(CH_3)_2)_3$, ammonia, amines, ethers, a complexing solvent, crown ethers, and cryptands and solvents such as ethers or an amide such as THF with the addition of a crown ether or cryptand.

The fuel cell may further comprise at least one hydrogen system 460, 461, 430, and 431 for measuring, delivering, and controlling the hydrogen to at least one compartment. The hydrogen system may comprise a pump, at least one value, one pressure gauge and reader, and control system for supplying hydrogen to at least one of the cathode and anode compartments. The hydrogen system may recycle hydrogen from one compartment to another. In an embodiment, the hydrogen system recycles $H_2$ gas from the anode compartment to the cathode compartment. The recycling may be active or passive. In the former case, $H_2$ may be pumped from the anode to the cathode compartment during operation, and in the latter case, $H_2$ may diffuse or flow from the anode to the cathode compartment due to a build up of pressure in the anode compartment during operation according to the reaction such as those of Eqs. (199-200).

The products may be regenerated in the cathode or anode compartments. The products may be sent to a regenerator wherein any of the regeneration chemistries of the present disclosure may be applied to regenerate the initial reactants. Cell undergoing the hydrino reaction may provide heat to those undergoing regeneration of the reactants.

In an embodiment, the fuel cell comprises anode and cathode compartments each containing an anode and cathode, the corresponding reaction mixture, and a salt bridge between the compartments. The compartments may comprise inert nonconductive cell walls. Suitable container materials are carbides and nitrides such as SiC, $B_4C$, $BC_3$, or TiN or a stainless steel tube internally coated with carbides and nitrides such as SiC, $B_4C$ or $BC_3$, or TiN. Alternatively, the cell may be lined with an inert insulator such as MgO, SiC, $B_4C$, $BC_3$, or TiN. The cell may be made of a conducting material with an insulating separator. Suitable cell materials are stainless steel, transition metals, noble metals, refractory metals, rare earth metals, Al, and Ag. The cells may each have an inert insulating feedthrough. Suitable insulating separators and materials for the electrical feedthroughs are MgO and carbides and nitrides such as SiC, $B_4C$, $BC_3$, or TiN. Other cell, separator, and feed throughs may be used that are known to those skilled in the Art. The exemplary cathode and anode each comprises stainless steel wool with a stainless steel lead connected to a cell feed through with silver solder. The exemplary anode reaction mixture comprises (i) a catalyst or source of catalyst and a source of hydrogen from the group of Li, LiH, Na, NaH, K, KH, Rb, RbH, Cs, CsH, Ba, BaH, Ca, CaH, Mg, $MgH_2$, $MgX_2$ (X is a halide) and $H_2$, optionally (ii) a reductant from the group of Mg, Ca, Sr, Ba, and Li, and (ii) a support from the group of C, Pd/C, Pt/C, TiC, and $YC_2$. The exemplary cathode reaction mixture comprises (i) an oxidant from the group of $MX_2$ (M = Mg, Ca, Sr, Ba; X = H, F, Cl, Br, I) and LiX (X = H, Cl, Br), optionally (ii) a reductant from the group of Mg, Ca, Sr,

Ba, and Li, and optionally (iii) a support from the group of C, Pd/C, Pt/C, TiC, and $YC_2$. The exemplary salt bridge comprises a metal hydride having high temperature stability pressed or formed into a slab. The salt bridge may be from the group of metal hydrides of LiH, $CaH_2$, $SrH_2$, $BaH_2$, $LaH_2$, $GdH_2$, and $EuH_2$. Hydrogen or a hydride may be added to either cell compartment that may further comprise a hydrogen dissociator such as Pd or Pt/C. In an embodiment wherein $Mg^{2+}$ is the catalyst, the source of catalyst may be a mixed metal hydride such as $Mg_x(M_2)_yH_z$ wherein x, y, and z are integers and $M_2$ is a metal. In an embodiment, the mixed hydride comprises an alkali metal and Mg such as $KMgH_3$, $K_2MgH_4$, $NaMgH_3$, $Na_2MgH_4$, and mixed hydrides with doping that may increase H mobility. The doping may increase the H mobility by increasing the concentration of H vacancies. A suitable doping is with small amounts of substituents that can exist as monovalent cations in place of the normally divalent B-type cations of a perovskite structure. An example is Li doping to produce x vacancies such as in the case of $Na(Mg_{x-1}Li_x)H_{3-x}$.

In an embodiment, a mixed hydride is formed from an alloy during discharge such as one comprising an alkali metal and an alkaline earth metal such as $M_3Mg$ (M= alkali). The anode may be the alloy and the cathode may comprise a source of H such as a hydride or H from a H-permeable cathode and $H_2$ gas such as $Fe(H_2)$ or $H_2$ gas and a dissociator such as $PtC(H_2)$. The cell may comprise and electrolyte such as a hydride conductor such as a molten eutectic salt such as a mixture of alkali halides such as LiCl-KCl. Exemplary cells are [$Li_3Mg$, $Na_3Mg$, or $K_3Mg$/LiCl-KCl LiH/$TiH_2$, $CeH_2$, $LaH_2$, or $ZrH_2$].

In an embodiment, the anode and cathode reactions comprise different reactants to form hydrinos or the same reactant maintained with at least one of different concentrations, different amounts, or under different conditions such that a voltage develops between the two half-cells that may supply power to the external load through the anode and cathode leads. In an embodiment, the anode reaction mixture comprises (i) a catalyst or source of catalyst and a source of hydrogen such as at least one from the group of Li, LiH, Na, NaH, K, KH, Rb, RbH, Cs, CsH, Ba, BaH, Ca, CaH, Mg, $MgH_2$, $MgX_2$ (X is a halide) and $H_2$, optionally (ii) a reductant such as at least one from the group of Mg, Ca, Sr, Ba, and Li, and (ii) a support such as at least one from the group of C, Pd/C, Pt/C, TiC, and $YC_2$. The cathode reaction mixture comprises (i) a catalyst or source of catalyst and a source of hydrogen such as at least one from the group of Li, LiH, Na, NaH, K, KH, Rb, RbH, Cs, CsH, Ba, BaH, Ca, CaH, Mg, $MgH_2$, $MgX_2$ (X is a halide) and $H_2$, optionally (ii) a reductant such as at least one from the group of Mg, Ca, Sr, Ba, Li, and $H_2$, and (ii) a support such as at least one from the group of C, Pd/C, Pt/C, TiC, and $YC_2$. Optionally, each half-cell reaction mixture may comprise an oxidant such as at least one from the group of $MX_2$ (M = Mg, Ca, Sr, Ba; X = H, F, Cl, Br, I) and LiX (X = H, Cl, Br). In an exemplary embodiment, the anode reaction mixture comprises KH Mg TiC and the cathode reaction mixture comprises NaH Mg TiC. In other exemplary embodiments, the cells comprise Mg $MgH_2$ TiC//NaH $H_2$, KH TiC Mg//NaH TiC, KH TiC Li//NaH TiC, Mg TiC $H_2$//NaH TiC, KH $MgH_2$ TiC Li// KH Mg TiC LiBr, KH Mg TiC//KH Mg TiC $MX_2$ ($MX_2$ is an alkaline earth halide), NaH Mg TiC//KH Mg TiC $MX_2$ wherein // designates the salt bridge that may be a hydride. Hydrogen or a hydride may be added to either cell compartment that may further comprise a hydrogen dissociator such as Pd or Pt/C.

The reactants of at least one half-cell may comprise a hydrogen storage material such as a metal hydride, a species of a M-N-H system such as $LiNH_2$, $Li_2NH$, or $Li_3N$, and a alkali metal hydride further comprising boron such as borohydrides or aluminum such as aluminohydides. Further suitable hydrogen storage materials are metal hydrides such as alkaline earth metal hydrides such as $MgH_2$, metal alloy hydrides such as $BaReH_9$, $LaNi_5H_6$, $FeTiH)_{1\cdot7}$, and $MgNiH_4$, metal borohydrides such as $Be(BH_4)_2$, $Mg(BH_4)_2$, $Ca(BH_4)_2$, $Zn(BH_4)_2$, $Sc(BH_4)_3$, $Ti(BH_4)_3$, $Mn(BH_4)_2$, $Zr(BH_4)_4$, $NaBH_4$, $LiBH_4$, $KBH_4$, and $Al(BH_4)_3$, $AlH_3$, $NaAlH_4$, $Na_3AlH_6$, $LiAlH_4$, $Li_3AlH_6$, LiH, $LaNi_5H_6$, $La_2Co_1Ni_9H_6$, and $TiFeH_2$, $NH_3BH_3$, polyamionborane, amine borane complexes such as amine borane, boron hydride ammoniates, hydrazine-borane complexes, diborane diammoniate, borazine, and ammonium octahydrotriborates or tetrahydroborates, imidazolium ionic liquids such as alkyl(aryl)-3-methylimidazolium N-bis(trifluoromethanesulfonyl)imidate salts, phosphonium borate, and carbonite substances. Further exemplary compounds are ammonia borane, alkali ammonia borane such as lithium ammonia borane, and borane alkyl amine complex such as borane dimethylamine complex, borane trimethylamine complex, and amino boranes and borane amines such as aminodiborane, n-dimethylaminodiborane, tris(dimethylamino)borane, di-n-butylboronamine, dimethylaminoborane, trimethylaminoborane, ammonia-trimethylborane, and triethylaminoborane. Further suitable hydrogen storage materials are organic liquids with absorbed hydrogen such as carbazole and derivatives such as 9-(2-ethylhexyl)carbazole, 9-ethylcarbazole, 9-phenylcarbazole, 9-methylcarbazole, and 4,4'-bis(N-carbazolyl)-1,1'-biphenyl.

In an embodiment, at least one cell additionally comprises an electrolyte. The electrolyte may comprise a molten hydride. The molten hydride may comprise a metal hydride such as alkali metal hydride or an alkaline earth metal hydride. The molten hydride may be dissolved in a salt. The salt may have a low melting point such as a eutectic salt wherein one of the cations may be the same as that of the metal hydride. The salt may comprise LiH dissolved in a LiCl/KCl mixture or a mixture such as $LiF/MgF_2$. The salt may comprise one or more halides of the same cation as that of the catalyst or are more stable compounds than the halide compound that may form from the reaction of the catalyst with the halide of the salt such as the mixture LiH with LiCl/KCl. The eutectic salt may comprises an alkaline earth fluoride such as $MgF_2$ and the fluoride of the catalyst metal such as an alkali metal fluoride. The catalyst or source of catalyst and source of hydrogen may comprise an alkali metal hydride such as LiH, NaH, or KH, or BaH. Alternatively, the salt

mixture comprises mixed halides of the same alkali metal as the catalyst metal since a halide-hydride exchange reaction with the catalyst hydride would result in no net reaction. Suitable mixtures of mixed halides and catalyst hydride are at least two of KF, KCl, KBr, and KI with KH and Li or Na replacing K. Preferably the salt is a hydride ion conductor. In addition to halides, other suitable molten salt electrolytes that may conduct hydride ions are hydroxides such as KH in KOH or NaH in NaOH, and metalorganic systems such as NaH in $NaAl(Et)_4$. The cell may be made of metals such as Al, stainless steel, Fe, Ni, Ta, or comprise a graphite, boron nitride, MgO, alumina, or quartz crucible.

The electrolyte may comprise a eutectic salt of two or more fluorides such as at least two compounds of the group of the alklali halides and alkaline earth halides. Exemplary salt mixtures include LiF-$MgF_2$, NaF-$MgF_2$, KF-$MgF_2$, and NaF-$CaF_2$. Exemplary reaction mixtures comprise NaH NaF $MgF_2$ TiC, NaH NaF $MgF_2$ Mg TiC, KH KF $MgF_2$ TiC, KH KF $MgF_2$ Mg TiC, NaH NaF $CaF_2$ TiC, NaH NaF $CaF_2$ Mg TiC, KH NaF $CaF_2$ TiC, and KH NaF $CaF_2$ Mg TiC. Other suitable solvents are organic chloro aluminate molten salts and systems based on metal borohydrides and metal aluminum hydrides. Additional suitable electrolytes that may be molten mixtures such as molten eutectic mixtures are given in TABLE 4.

TABLE 4. Molten Salt Electrolytes.

| | | | | |
|---|---|---|---|---|
| AlCl3-CaCl2 | AlCl3-CoCl2 | AlCl3-FeCl2 | AlCl3-KCl | AlCl3-LiCl |
| AlCl3-MgCl2 | AlCl3-MnCl2 | AlCl3-NaCl | AlCl3-NiCl2 | AlCl3-ZnCl2 |
| BaCl2-CaCl2 | BaCl2-CsCl | BaCl2-KCl | BaCl2-LiCl | BaCl2-MgCl2 |
| BaCl2-NaCl | BaCl2-RbCl | BaCl2-SrCl2 | CaCl2-CaF2 | CaCl2-CaO |
| CaCl2-CoCl2 | CaCl2-CsCl | CaCl2-FeCl2 | CaCl2-FeCl3 | CaCl2-KCl |
| CaCl2-LiCl | CaCl2-MgCl2 | CaCl2-MgF2 | CaCl2-MnCl2 | CaCl2-NaAlCl4 |
| CaCl2-NaCl | CaCl2-NiCl2 | CaCl2-PbCl2 | CaCl2-RbCl | CaCl2-SrCl2 |
| CaCl2-ZnCl2 | CaF2-KCaCl3 | CaF2-KF | CaF2-LiF | CaF2-MgF2 |
| CaF2-NaF | CeCl3-CsCl | CeCl3-KCl | CeCl3-LiCl | CeCl3-NaCl |
| CeCl3-RbCl | CoCl2-FeCl2 | CoCl2-FeCl3 | CoCl2-KCl | CoCl2-LiCl |
| CoCl2-MgCl2 | CoCl2-MnCl2 | CoCl2-NaCl | CoCl2-NiCl2 | CsBr-CsCl |
| CsBr-CsF | CsBr-CsI | CsBr-CsNO3 | CsBr-KBr | CsBr-LiBr |
| CsBr-NaBr | CsBr-RbBr | CsCl-CsF | CsCl-CsI | CsCl-CsNO3 |
| CsCl-KCl | CsCl-LaCl3 | CsCl-LiCl | CsCl-MgCl2 | CsCl-NaCl |
| CsCl-RbCl | CsCl-SrCl2 | CsF-CsI | CsF-CsNO3 | CsF-KF |
| CsF-LiF | CsF-NaF | CsF-RbF | CsI-KI | CsI-LiI |
| CsI-NaI | CsI-RbI | CsNO3-CsOH | CsNO3-KNO3 | CsNO3-LiNO3 |
| CsNO3-NaNO3 | CsNO3-RbNO3 | CsOH-KOH | CsOH-LiOH | CsOH-NaOH |
| CsOH-RbOH | FeCl2-FeCl3 | FeCl2-KCl | FeCl2-LiCl | FeCl2-MgCl2 |
| FeCl2-MnCl2 | FeC12-NaCl | FeCl2-NiCl2 | FeCl3-LiCl | FeCl3-MgCl2 |
| FeCl3-MnCl2 | FeCl3-NiCl2 | K2CO3-K2SO4 | K2CO3-KF | K2CO3-KNO3 |
| K2CO3-KOH | K2CO3-Li2CO3 | K2CO3-Na2CO3 | K2SO4-Li2SO4 | K2SO4-Na2SO4 |
| KAlCl4-NaAlCl4 | KAlCl4-NaCl | KBr-KCl | KBr-KF | KBr-KI |
| KBr-KNO3 | KBr-KOH | KBr-LiBr | KBr-NaBr | KBr-RbBr |
| KCl-K2CO3 | KCl-K2SO4 | KCl-KF | KCl-KI | KCl-KNO3 |
| KCl-KOH | KCl-LiCl | KCl-LiF | KCl-MgCl2 | KCl-MnCl2 |
| KCl-NaAlCl4 | KCl-NaCl | KCl-NiCl2 | KCl-PbCl2 | KCl-RbCl |
| KCl-SrCl2 | KCl-ZnCl2 | KF-K2SO4 | KF-KI | KF-KNO3 |
| KF-KOH | KF-LiF | KF-MgF2 | KF-NaF | KF-RbF |
| KFeCl3-NaCl | KI-KNO3 | KI-KOH | KI-LiI | KI-NaI |
| KI-RbI | KMgCl3-LiCl | KMgCl3-NaCl | KMnCl3-NaCl | KNO3-K2SO4 |
| KNO3-KOH | KNO3-LiNO3 | KNO3-NaNO3 | KNO3-RbNO3 | KOH-K2SO4 |
| KOH-LiOH | KOH-NaOH | KOH-RbOH | LaCl3-KCl | LaCl3-LiCl |
| LaCl3-NaCl | LaCl3-RbCl | Li2CO3-Li2SO4 | Li2CO3-LiF | Li2CO3-LiNO3 |
| Li2CO3-LiOH | Li2CO3-Na2CO3 | Li2SO4-Na2SO4 | LiAlCl4-NaAlCl4 | LiBr-LiCl |
| LiBr-LiF | LiBr-LiI | LiBr-LiNO3 | LiBr-LiOH | LiBr-NaBr |
| LiBr-RbBr | LiCl-Li2CO3 | LiCl-Li2SO4 | LiCl-LiF | LiCl-LiI |
| LiCl-LiNO3 | LiCl-LiOH | LiCl-MgCl2 | LiCl-MnCl2 | LiCl-NaCl |

(continued)

| | | | | |
|---|---|---|---|---|
| LiCl-NiCl2 | LiCl-RbCl | LiCl-SrCl2 | LiF-Li2SO4 | LiF-LiI |
| LiF-LiNO3 | LiF-LiOH | LiF-MgF2 | LiF-NaCl | LiF-NaF |
| LiF-RbF | LiI-LiOH | LiI-NaI | LiI-RbI | LiNO3-Li2SO4 |
| LiNO3-LiOH | LiNO3-NaNO3 | LiNO3-RbNO3 | LiOH-Li2SO4 | LiOH-NaOH |
| LiOH-RbOH | MgCl2-MgF2 | MgCl2-MgO | MgCl2-MnCl2 | MgCl2-NaCl |
| MgCl2-NiCl2 | MgCl2-RbCl | MgCl2-SrCl2 | MgCl2-ZnCl2 | MgF2-MgO |
| MgF2-NaF | MnCl2-NaCl | MnCl2-NiCl2 | Na2CO3-Na2SO4 | Na2CO3-NaF |
| Na2CO3-NaNO3 | Na2CO3-NaOH | NaBr-NaCl | NaBr-NaF | NaBr-NaI |
| NaBr-NaNO3 | NaBr-NaOH | NaBr-RbBr | NaCl-Na2CO3 | NaCl-Na2SO4 |
| NaCl-NaF | NaCl-NaI | NaCl-NaNO3 | NaCl-NaOH | NaCl-NiCl2 |
| NaCl-PbCl2 | NaCl-RbCl | NaCl-SrCl2 | NaCl-ZnCl2 | NaF-Na2SO4 |
| NaF-NaI | NaF-NaNO3 | NaF-NaOH | NaF-RbF | NaI-NaNO3 |
| NaI-NaOH | NaI-RbI | NaNO3-Na2SO4 | NaNO3-NaOH | NaNO3-RbNO3 |
| NaOH-Na2SO4 | NaOH-RbOH | RbBr-RbCl | RbBr-RbF | RbBr-RbI |
| RbBr-RbNO3 | RbCl-RbF | RbCl-RbI | RbCl-RbOH | RbCl-SrCl2 |
| RbF-RbI | RbNO3-RbOH | CaCl2-CaH2 | | |

The molten salt electrolyte such as the exemplary salt mixtures given in TABLE 4 are $H^-$ ion conductors. In embodiments, it is implicit in the disclosure that a source of $H^-$ such as an alkali hydride such as LiH, NaH, or KH is added to the molten salt electrolyte to improve the $H^-$ ion conductivity. In other embodiments, the molten electrolyte may be an alkali metal ion conductor or a proton conductor.

In an embodiment, the reaction mixture comprises an electrolyte that supports hydride ion, $H^-$, as a migrating counterion wherein the counterion balances the positive ion created by the ionization of the catalyst during the hydrino reaction. The heat of formation of KCl and LiCl are -436.50 kJ/mole and -408.60 kJ/mole, respectively. In an embodiment, the reaction mixture comprises a molten salt electrolyte such a mixture of alkali halide salts such as KCl and LiCl. The mixture may be a eutectic mixture. The cell temperature is maintained above the salt melting point. The reaction mixture further comprises a source of hydride ion such as an alkali metal hydride such as LiH, KH, or NaH. The reaction mixture may further comprise at least one of a support such as TiC or C and a reductant such as an alkaline earth metal or its hydride such as Mg or $MgH_2$.

The reaction mixture may comprise (1) a catalyst or a source of catalyst and a source of hydrogen such as one of LiH, NaH, KH, RbH, CsH, BaH, and at least one H, (2) a eutectic salt mixture that may serve as an electrolyte that may have a high ion conductivity and may selectively allow hydride ion to pass comprising at least two cations from the group of Li, Na, K, Rb, Cs, Mg, Ca, Sr, and Ba and at least one halide from the group of F, Cl, Br, and I, (3) a support that may be electrically conductive such as carbide such as TiC, and (4) optionally a reductant and hydride exchange reactant such as an alkaline earth metal or alkaline earth hydride.

Exemplary CIHT cells comprise a (i) reductant or a source of reductant, such as an element or compound comprising an element from the list of aluminum, antimony, barium, bismuth, boron, cadmium, calcium, carbon (graphite), cerium, cesium, chromium, cobalt, copper, dysprosium, erbium, europium, gadolinium, gallium, germanium, gold, hafnium, holmium, indium, iridium, iron, lanthanum, lead, lithium, lutetium, magnesium, manganese, mercury, molybdenum, neodymium, nickel, niobium, osmium, palladium, phosphorous, platinum, potassium, praseodymium, promethium, protactinium, rhenium, rhodium, rubidium, ruthenium, samarium, scandium, selenium, silicon, silver, sodium, strontium, sulfur, tantalum, technetium, tellurium, terbium, thulium, tin, titanium, tungsten, vanadium, ytterbium, yttrium, zinc, and zirconium; (ii) an electrolyte such as one of those given in TABLE 4, (iii) an oxidant such as the compounds given in TABLE 4 (iv) conducting electrodes such as metals, metal carbides such as TiC, metal borides such as $TiB_2$ and $MgB_2$, metal nitrides such as titanium nitride, and those elements or materials comprising elements from the list of aluminum, antimony, barium, bismuth, boron, cadmium, calcium, carbon (graphite), cerium, cesium, chromium, cobalt, copper, dysprosium, erbium, europium, gadolinium, gallium, germanium, gold, hafnium, holmium, indium, iridium, iron, lanthanum, lead, lithium, lutetium, magnesium, manganese, mercury, molybdenum, neodymium, nickel, niobium, osmium, palladium, phosphorous, platinum, potassium, praseodymium, promethium, protactinium, rhenium, rhodium, rubidium, ruthenium, samarium, scandium, selenium, silicon, silver, sodium, strontium, sulfur, tantalum, technetium, tellurium, terbium, thulium, tin, titanium, tungsten, vanadium, ytterbium, yttrium, zinc, and zirconium. The metals may be from the list of aluminum, antimony, barium, bismuth, cadmium, calcium, cerium, cesium, chromium, cobalt, copper, dysprosium, erbium, europium, gadolinium, gallium, germanium, gold, hafnium, holmium, indium, iridium, iron, lanthanum, lead, lithium, lutetium, magnesium, manganese, mercury, molybdenum, neodymium, nickel, niobium, osmium, palladium,

platinum, potassium, praseodymium, promethium, protactinium, rhenium, rhodium, rubidium, ruthenium, samarium, scandium, selenium, silicon, silver, sodium, strontium, tantalum, technetium, tellurium, terbium, thulium, tin, titanium, tungsten, vanadium, ytterbium, yttrium, zinc, and zirconium, and (v) hydrogen or a source of hydrogen such as a hydride such as an alkali or alkaline earth hydride, and a source of catalyst or source of catalyst such as Li, NaH, K, $Rb^+$, Cs, and at least one H. In an embodiment, the cell further comprises a system to regenerate the reactants or cell chemicals to species and concentrations that restore the cell to a state that the reactions to form hydrino reactants and then hydrinos occur at a faster rate than before regeneration. In an embodiment, the regeneration system comprises an electrolysis system. In an embodiment, the electrodes do not under go significant corrosion during regeneration. For example, the electrolysis anode does not undergo substantial oxidation. In an embodiment, the electrolyte contains a hydride such as MH (M is an alkali metal) or $MH_2$ (M is an alkaline earth metal) wherein hydride is oxidized during electrolysis. In an embodiment, the electrolysis voltage is below that which oxidizes the electrolysis anode. A suitable voltage for a Cu, Fe, or Ni electrolysis anode is below 1.5 V versus a $Li^+$/Li reference electrode. In another embodiment, the cell comprises cell components, reactants, and systems to maintain conditions that form hydrino reactants and then from hydrinos. In an embodiment, a metal hydride such as LiH is electrolyzed to regenerate the corresponding metal such as Li and hydrogen gas. The regenerated metal may be formed in a half-cell compartment comprising a salt bridge to confine the metal such as Li to the half-cell. Alternatively, the electrolysis cathode (CIHT cell anode) may comprise a metal that forms an alloy with the electrolyzed metal. For example Li may form alloys during electrolytic regeneration such as $Li_3Mg$, LiAl, LiSi, LiSn, LiBi, LiTe, LiSe, LiCd, LiZn, LiSb, and LiPb.

Each cell comprises reactants that form the reactants to form hydrino by the transport of electrons through and external circuit and the transport of ions through the electrolyte or salt bridge. The hydrino reactants comprise at least atomic hydrogen or source of atomic hydrogen and a catalyst or source of catalyst such as Li, NaH, K, $Rb^+$, Cs, and at least one H. Specific exemplary cells are [LiAl/LiCl-LiCl LiH/Ni($H_2$)], [LiAl/LiF-LiCl-LiBr LiH/Ni($H_2$)], [Li/LiOH Li2SO4/Nb($H_2$)], [Na/LiCl-KCl LiH/Nb($H_2$)], [Na/LiCl-LiF/Nb($H_2$)], [Na/NaCl-KCl/Nb($H_2$)], [Na/NaCl-NaF/Nb($H_2$)], [Na/Na-Br-NaI/Nb($H_2$)], [Na/NaBr-NaI/Fe($H_2$)], [Na/NaI-NaNO3/Nb($H_2$)], [K/LiCl-KCl/Nb($H_2$)], [K/LiCl-LiF/Nb($H_2$)], [K/NaCl-KCl/Nb($H_2$)], and [K/KCl-KF/Nb($H_2$)]. Other exemplary cels are [Pt/C($H_2$)/HCl-LiCl-KCl/CB], [Pt/C($H_2$)/HCl-LiCl-KCl/Pt/Ti], [R-Ni/Celgard LP 30/CoO(OH)], [Mg/Celgard LP 30/CoO(OH)], [PdLi alloy/Celgard LP 30/hydride such as $ZrH_2$], [PdLi alloy/LiCl-KCl/hydride such as $ZrH_2$], and [PtC(H2)/aqueous $LiNO_3$/$HNO_3$ intercalated carbon graphite (CG)].

Further exemplary cells comprise a source of hydrogen such as $H_2$ or a hydride and components of the group of [LiAl/LiCl-KCl/Al], [LiAl/LiF-LiCl/Al], [LiAl/LiF-LiCl-LiBr/Al], [LiSi/LiCl-KCl/LiAl], [LiSi/LiCl-KCl/Al], [LiSi/LiF-LiCl/LiAl], [LiSi/ LiF-LiCl /Al], [LiSi/LiF-LiCl-LiBr/LiAl], [LiSi/ LiF-LiCl-LiBr /Al], [LiPb/LiCl-KCl/LiAl], [LiPb/LiCl-KCl/Al], [LiPb/LiF-LiCl/LiAl], [LiPb/ LiF-LiCl/Al], [LiPb/LiF-LiCl-LiBr/LiAl], [LiPb/ LiF-LiCl-LiBr /Al], [LiPb/LiCl-KCl/LiSi], [LiPb/LiF-LiCl/LiSi], [LiPb/LiF-LiCl-LiBr/LiSi], [LiC/LiCl-KCl/LiAl], [LiC/LiCl-KCl/Al], [LiC/LiF-LiCl/LiAl], [LiC/ LiF-LiCl /Al], [LiC/LiF-LiCl-LiBr/LiAl], [LiC/ LiF-LiCl-LiBr /Al], [LiC/LiCl-KCl/LiSi], [LiC/LiF-LiCl/LiSi], [LiC/LiF-LiCl-LiBr/LiSi], [BiNa/NaCl-NaF/Bi], [Na/NaF-NaCl-NaI/NaBi], [BiK/KCl-KF/Bi], [BiNa/NaCl-NaF NaH (0.02 mol%)/Bi], [Na/NaF-NaCl-NaI NaH (0.02 mol%)/NaBi], [BiK/KCl-KF KH (0.02 mol%)/Bi], [LiAl/LiCl-KCl LiH (0.02 mol%)/Al], [LiAl/LiF-LiCl LiH (0.02 mol%)/Al], [LiAl/LiF-LiCl-LiBr LiH (0.02 mol%)/Al], [LiSi/LiCl-KCl LiH (0.02 mol%)/LiAl], [LiSi/LiCl-KCl LiH (0.02 mol%)/Al], [LiSi/LiF-LiCl LiH (0.02 mol%)/LiAl], [LiSi/ LiF-LiCl LiH (0.02 mol%)/Al], [LiSi/LiF-LiCl-LiBr LiH (0.02 mol%)/LiAl], [LiSi/ LiF-LiCl-LiBr LiH (0.02 mol%)/Al], [LiPb/LiCl-KCl LiH (0.02 mol%)/LiAl], [LiPb/LiCl-KCl LiH (0.02 mol%)/Al], [LiPb/LiF-LiCl LiH (0.02 mol%)/LiAl], [LiPb/ LiF-LiCl LiH (0.02 mol%)/Al], [LiPb/LiF-LiCl-LiBr LiH (0.02 mol%)/LiAl], [LiPb/ LiF-LiCl-LiBr LiH (0.02 mol%)/Al], [LiPb/LiCl-KCl LiH (0.02 mol%)/LiSi], [LiPb/LiF-LiCl LiH (0.02 mol%)/LiSi], [LiPb/LiF-LiCl-LiBr LiH (0.02 mol%)/LiSi], [LiC/LiCl-KCl LiH (0.02 mol%)/LiAl], [LiC/LiCl-KCl LiH (0.02 mol%)/Al], [LiC/LiF-LiCl LiH (0.02 mol%)/LiAl], [LiC/ LiF-LiCl LiH (0.02 mol%)/Al], [LiC/LiF-LiCl-LiBr LiH (0.02 mol%)/LiAl], [LiC/ LiF-LiCl-LiBr LiH (0.02 mol%) /Al], [LiC/LiCl-KCl LiH (0.02 mol%)/LiSi], [LiC/LiF-LiCl LiH (0.02 mol%)/LiSi], [LiC/LiF-LiCl-LiBr LiH (0.02 mol%)/LiSi], and [K/KH KOH/K in graphite], [K/K-beta alumina/KH in graphite solvent such as a eutectic salt], [K/K-glass/KH in graphite solvent such as a eutectic salt], [Na/NaH NaOH/Na in graphite], [Na/Na-beta alumina/NaH in graphite solvent such as a eutectic salt], [Na/Na-glass/NaH in graphite solvent such as a eutectic salt], [Na/NaH $NaAlEt_4$/Na in graphite], [Li/LiH LiOH/Li in graphite], [Li/Li-beta alumina/LiH in graphite solvent such as a eutectic salt], [Li/Li-glass/LiH in graphite solvent such as a eutectic salt], [Na/NaH $NaAlEt_4$/$NaNH_2$], [Na/NaH NaOH/$NaNH_2$], [Na/Na-beta alumina/$NaNH_2$], [Na/Na-glass/$NaNH_2$], [K/KH KOH/$KNH_2$], [K/K-beta alumina/$KNH_2$], and [K/K-glass/$KNH_2$]. Additional cells comprising (i) at least one electrode from the set of $Li_3Mg$, LiAl, Al, LiSi, Si, LiC, C, LiPb, Pb, LiTe, Te, LiCd, Cd, LiBi, Bi, LiPd, Pd, LiSn, Sn, Sb, LiSb, LiZn, Zn, Ni, Ti, and Fe, (ii) a eutectic electrolyte comprising a mixture of at least two of LiF, LiCl, LiBr, LiI, and KCl, and (iii) a source of hydrogen such as $H_2$ gas or a hydride such as LiH wherein a suitable concentration of LiH is about 0.001 to 0.1 mole %. In embodiments having a metal amide such as $NaNH_2$ or $LiNH_2$ or a metal imide such as $Li_2NH$, the system may be closed with $NH_3$ gas applied to the half-cell to maintain an equilibrium with the corresponding metal and the amide.

Additional exemplary cells may comprise a support that may support atomic H wherein the consumed atomic H is replaced by addition of H in cell such as [LiAl/LiCl-LiF LiH (0.2 mol%)/NbC]; [Li/LiCl-LiF LiH (0.2 mol%)/NbC], [Li/LiCl-LiF/NbC], [LiAl/LiCl-KCl LiH (0.2 mol%)/NbC]; [Li/LiCl-KCl LiH (0.2 mol%)/NbC], [Li/LiCl-KCl/NbC], [LiAl/LiCl-LiF LiH (0.2

mol%)/TiC]; [Li/LiCl-LiF LiH (0.2 mol%)/TiC], [Li/LiCl-LiF/TiC], [LiAl/LiCl-KCl LiH (0.2 mol%)/TiC]; [Li/LiCl-KCl LiH (0.2 mol%)/TiC], and [Li/LiCl-KCl/NbC].

The cell further comprises a current collector for the anode and cathode wherein the current collectors may comprise solid foils or mesh materials. Suitable uncoated current collector materials for the anode half-cell may be selected from the group of stainless steel, Ni, Ni-Cr alloys, Al, Ti, Cu, Pb and Pb alloys, refractory metals and noble metals. Suitable uncoated current collector materials for the cathode half-cell may be selected from the group of stainless steel, Ni, Ni-Cr alloys, Ti, Pb-oxides ($PbO_x$), and noble metals. Alternatively, the current collector may comprise a suitable metal foil such as Al, with a thin passivation layer that will not corrode and will protect the foil onto which it is deposited. Exemplary corrosion resistant layers that may be used in either half-cell are TiN, CrN, C, CN, NiZr, NiCr, Mo, Ti, Ta, Pt, Pd, Zr, W, FeN, and CoN. In an embodiment, the cathode current collector comprises Al foil coated with TiN, FeN, C, CN. The coating may be accomplished by any method known in the Art. Exemplary methods are physical vapor deposition such as sputtering, chemical vapor deposition, electrodeposition, spray deposition, and lamination.

The chemical potential or activity of a species such as a catalyst, source of catalyst, or source of H such as $Li^+$, Li, LiH, $H^+$, or $H^-$ may be changed by changing the electrodes or electrolyte, adding hydrides or $H_2$ to cause hydriding, and adding other chemicals that interact with species. For example, the cathode may be a metal or metal hydride such as titanium hydride or niobium hydride that may be resistant to deactivation by excess Li or LiH activity. In another embodiment wherein LiH in the electrolyte reduces the voltage, the cathode is a metal hydride that is more stable than LiH. LiH present in the electrolyte may react with the corresponding metal to reform the hydride and Li. An exemplary hydride is lanthanum hydride. An exemplary cell is [Li/LiCl-KCl/$LaH_2$ or $LaH_{2-x}$]. Other suitable hydrides are rare earth hydrides such as those of La, Ce, Eu, and Gd, yttrium hydride, and zirconium hydride. Additional suitable exemplary hydrides demonstrating high electrical conductivity are one or more of the group of $CeH_2$, $DyH_2$, $ErH_2$, $GdH_2$, $HoH_2$, $LaH_2$, $LuH_2$, $NdH_2$, $PrH_2$, $ScH_2$, $TbH_2$, $TmH_2$, and $YH_2$. In an embodiment, the surface area of at least one of the hydride and corresponding metal is increased to cause a faster rate of reaction during cell operation. Hydrogen may be added to one or more of the cathode or anode compartments. The addition may be as hydrogen gas, or hydrogen may be delivered by permeation through a membrane. The membrane may be comprised of the metal of the hydride. For example, a rare earth metal tube such as a lanthanum tube may comprise the cathode wherein the tube is sealed such that $H_2$ can only be supplied by permeation through the tube. Lanthanum hydride forms on the surface in contact with the electrolyte.

Preferably, the metal hydride, comprising at least one of a cathode reactant and an anode reactant, is an electrical conductor. Exemplary electrically conductive hydrides are titanium hydride and lanthanum hydride. Other suitable electrically conductive hydrides are $TiH_2$, VH, $VH_{1.6}$, $LaNi_5H_6$, $La_2Co_1Ni_9H_6$, $ZrCr_2H_{3.8}$, $LaNi_{3.55}Mn_{0.4}Al_{0.3}Co_{0.75}$, $ZrMn_{0.5}Cr_{0.2}V_{0.1}Ni_{1.2}$, CrH, $CrH_2$, NiH, CuH, $YH_2$, $YH_3$, $ZrH_2$, NbH, $NbH_2$, $PdH_{0.7}$, $LaH_2$, $LaH_3$, TaH, the lanthanide hydrides: $MH_2$ (fluorite) M = Ce, Pr, Nb, Sm, Gd, Tb, Dy, Ho, Er, Tm, Lu; $MH_3$ (cubic) M = Ce, Pr, Nd, Yb; $MH_3$ (hexagonal) M = Sm, Gd, Tb, Dy, Ho, Er, Tm, Lu; actinide hydrides: $MH_2$ (fluorite) M = Th, Np, Pu, Am; $MH_3$ (hexagonal) M = Np, Pu, Am, and $MH_3$ (cubic, complex structure) M = Pa, U. In an embodiment, the cell anode reactants comprise a source of Li and the cathode reactants comprise an electrically conductive hydride that is about as thermally stable or more stable than LiH. The half-cell reactants may further comprise a support of any kind or an electrically conductive support such as a carbide such as TiC, a boride such as $TiB_2$ or $MgB_2$, a carbon, or other support such as TiCN. Suitable exemplary lithium sources are Li metal, a lithium alloy, or a lithium compound.

Exemplary cells are [Li/LiCl-KCl/$LaH_2$], [Li/LiCl-KCl/$CeH_2$], [Li/LiCl-KCl/$EuH_2$], [Li/LiCl-KCl/$GdH_2$], [Li/LiCl-KCl/$YH_2$], [Li/LiCl-KCl/$YH_3$], [Li/LiCl-KCl/$ZrH_2$], [Li/LiCl-KCl/$LaH_2$ TiC], [Li/LiCl-KCl/$CeH_2$ TiC], [Li/LiCl-KCl/$EuH_2$ TiC], [Li/LiCl-KCl/$GdH_2$ TiC], [Li/LiCl-KCl/$YH_2$ TiC], [Li/LiCl-KCl/$YH_3$ TiC], [Li/LiCl-KCl/$ZrH_2$ TiC], [Li/molten alkali carbonate electrolyte/hydride such as $ZrH_2$, $TiH_2$, $CeH_2$ or $LaH_2$], [MLi/LiCl-KCl/$LaH_2$], [MLi/LiCl-KCl/$CeH_2$], [MLi/LiCl-KCl/$EuH_2$], [MLi/LiCl-KCl/$GdH_2$], [MLi/LiCl-KCl/$YH_2$], [MLi/LiCl-KCl/$YH_3$], [MLi/LiCl-KCl/$ZrH_2$], [MLi/LiCl-KCl/$LaH_2$ TiC], [MLi/LiCl-KCl/$CeH_2$ TiC], [MLi/LiCl-KCl/$EuH_2$ TiC], [MLi/LiCl-KCl/$GdH_2$ TiC], and [MLi/LiCl-KCl/$YH_2$ TiC], [MLi/LiCl-KCl/$YH_3$ TiC], [MLi/LiCl-KCl/$ZrH_2$ TiC] (M is one or more elements such as a metal that forms an alloy or compound with Li and serves as a source of Li. Suitable exemplary alloys MLi are $Li_3Mg$, LiAl, LiSi, LiB, LiC, LiPb, LiTe, LiSe such as $Li_2Se$, LiCd, LiBi, LiPd, LiSn, $Li_2CuSn$, $Li_xIn_{1-y}Sb$ (0<x<3, 0<y<1), LiSb, LiZn, Li metal-metalloid alloys such as oxides, nitrides, borides, and silicides, and mixed-metal-Li alloys. Suitable exemplary compounds MLi are $LiNH_2$, $Li_2NH$, $Li_3N$, $Li_2S$, $Li_2Te$, $Li_2Se$, lithium-intercalated carbon, and a lithium intercalated chalcogenide.

The electrolyte may provide a favorable activity for the catalyst or source of catalyst such as Li or LiH that prevents inactivation of the hydrino reaction wherein the inactivation may be due to an excess activity of the catalyst or source of catalyst such as Li or LiH. In an embodiment, the ratio of two or more salts of a mixture may be changed to decrease the activity of a first hydride such as LiH. Alternatively, another metal or a compound of another metal may be added that forms a second hydride to decrease the activity of the first hydride. For example, an alkali metal such as K or its salt such as an alkali halide such as KCl having a corresponding second hydride such as KH with a lower thermal decomposition temperature may be added to shift the equilibrium from the first to the second hydride. The second hydride may thermally decompose to release hydrogen. The hydrogen may be recycled by pumping. In another embodiment,

a hydroxide of the same or another metal may be added such as LiOH or KOH that may catalytically eliminate the first hydride such as LiH. Exemplary reactions are

$$LiH + K \text{ to } Li + KH \text{ to } K + 1/2H_2 \quad (234)$$

$$LiH + KOH \text{ to } LiOH + KH \text{ (-30.1 kJ/mole) to } K + 1/2H_2 \quad (235)$$

$$K + LiOH \text{ to } KOH + Li \text{ (+62.9 kJ/mole)} \quad (236)$$

In another embodiment, the cell temperature may be changed to alter the activity of a species such as the catalyst or source of catalyst such as Li or LiH to control the hydrino reaction and the cell power. The temperature may be controlled such the temperature is higher at one electrode compared to the other. For example, the cathode may be selectivity heated to elevate its temperature relative to the anode to favorably affect the activity of the species such as Li or LiH to propagate the hydrino reaction at a high rate.

In an embodiment, the activity of the catalyst or source of catalyst such as Li or LiH may be controlled by using a cathode that forms an alloy or compound with the catalyst or source of catalyst. For example, the cathode may comprise Sn or Sb that forms and alloy with Li. The anode may be a source of Li such as Li or a different alloy having a higher oxidation potential that the cathode such as LiAl. An exemplary cell is Li/LiCl-KCl LiH/LiSn.

In an embodiment, the activity of a species to be limited such as LiH decreases with temperature, and its activity is lower by lowering the temperature of the electrolyte. The lower activity may be due to the decreased solubility of the species in the eutectic salt with temperature. The salt may be maintained at about its melting point. In an embodiment, a species whose activity to be controlled is a metal such as Li, and its activity is decreased by reacting it with hydrogen to form the hydride such as LiH that has a limited solubility and precipitates out of the electrolyte. Thus, the metal such as Li may be partially removed by sparging with hydrogen. The reaction may be reversed by electrolysis to regenerate the metal such as Li and hydrogen. The activity of a metal such as Li may be decreased by selecting an electrolyte having a lower Li solubility such as eutectic electrolyte LiF-LiCl over LiCl-KCl. In an embodiment, preferred cathodes are vanadium and iron, the anode may be an open Li metal anode. The hydrogen pressure may be high to lower the Li concentration. The cathode may have H2 applied or be hydrided before contacting the Li dissolved in the electrolyte. Excess Li may be converted to LiH by reaction with hydrogen supplied to the cell.

In an embodiment, the activity of the species such as a metal or hydride is controlled by using a metal or hydride buffer system. In an embodiment the metal is Li, the hydride is LiH, and at least one of the metal or hydride activities are controlled by a buffer comprising at least one of an amide, imide, or nitride. The reaction mixture may comprise one or more of the group of Li, LiH, $LiNH_2$, $Li_2NH$, $Li_3N$, $H_2$, and $NH_3$ that controls the activity. The system may comprise a mixture of metals such as alkali and alkaline earth metals such as Li, Na, and K, elements or compounds that react with or form compounds with Li such as boron, Mg, Ca, aluminum, Bi, Sn, Sb, Si, S, Pb, Pd, Cd, Pd, Zn, Ga, In, Se, and Te, $LiBH_4$, and $LiAlH_4$, hydrides such as alkali and alkaline earth hydrides such as LiH, NaH, KH, and $MgH_2$, and amides, imides, and nitrides or comprise at least one of an amide, imide, or nitride of another metal such as $NaNH_2$, $KNH_2$, $Mg(NH_2)_2$, $Mg_3N_2$, and elements that react with Li to form Li metal-metalloid alloys such as oxides, nitrides, borides, and silicides or mixed-metal-Li alloys. The system may further comprise $LiAlH_4$ and $Li_3AlH_6$ or similar hydrides such as Na and K aluminum hydrides and alkali borohydrides. Exemplary suitable hydrides are $LiAlH_4$, $LiBH_4$, $Al(BH_4)_3$, $LiAlH_2(BH_4)_2$, $Mg(AlH_4)_2$, $Mg(BH_4)_2$, $Ca(AlH_4)_2$, $Ca(BH_4)_2$, $NaAlH_4$, $NaBH_4$, $Ti(BH_4)_3$, $Ti(AlH_4)_4$, $Zr(BH_4)_3$, and $Fe(BH_4)_3$. The reaction mixture may comprise a mixture of hydrides to control the activity. An exemplary mixture is LiH and another alkali hydride such as NaH or KH. The mixture may comprise alkaline earth metals or hydrides. Exemplary mixed hydrides are $LiMgH_3$, $NaMgH_3$, and $KMgH_3$. The reaction may comprise a reactant with the species such as a reactant to form a hydride such as $LiBH_4$ wherein the reactant may be boron. The activity may be controlled by controlling at least one of the cell temperature and pressure. In an embodiment, the cell is operated at a temperature and pressure that controls the activity by controlling the mole percent of hydride relative to that of the metal. The decomposition temperature and pressure of a hydride may be changed by using a mixed hydride. The activity may be controlled, by controlling the hydrogen pressure. The hydrogen pressure in the electrolyte, in any half-cell compartment, and in any permeable membrane source, or other cell component may be controlled. Exemplary cells are [LiAl/LiCl-KCl LiH $LiNH_2$/Ti], [LiAl/LiCl-KCl LiH $LiNH_2$/Nb], [LiAl/LiCl-KCl LiH $LiNH_2$/Fe], [LiAl/LiCl-KCl LiH $Li_2NH$ /Ti], [LiAl/LiCl-KCl LiH $Li_2NH$/Nb], [LiAl/LiCl-KCl LiH $Li_2NH$/Fe], [LiAl/LiCl-KCl LiH $Li_3N$/Ti], [LiAl/LiCl-KCl LiH $Li_3N$/Nb], [LiAl/LiCl-KCl LiH $Li_3N$/Fe], [LiAl/LiCl-KCl LiH $LiNH_2$ $Li_2NH$/Ti], [LiAl/LiCl-KCl LiH $LiNH_2$ $Li_2NH$/Nb], [LiAl/LiCl-KCl LiH $LiNH_2$ $Li_2NH$/Fe], [LiAl/LiCl-KCl $MgH_2$ LiH $LiNH_2$/Ti], [LiAl/LiCl-KCl $MgH_2$ LiH $LiNH_2$/Nb], and [LiAl/LiCl-KCl $MgH_2$ LiH $LiNH_2$/Fe]. The cathode may comprise a metal, element, alloy or compound that forms and alloy with Li. The cathode may be a source of hydrogen by permeation. The cathode reactants may comprise a metal, element, alloy or compound that forms and alloy with Li. The reactants may comprise a powder. Exemplary cathode reactants are Al, Pb, Si, Bi, Sb, Sn, C, and B powders that may form alloys with Li. In an embodiment, at least one source of H may be a metal hydride that may be dissolved in the electrolyte and

may be a species wherein control of its activity is desired. The hydride may be LiH that may react with the cathode or cathode reactants to form an alloy and may also release H at the cathode or the cathode reactants.

In addition adding amide, imide, and nitride compounds to the electrolyte, the activity of reactant or species may be changed by adding at least one compound of the group of phosphides, borides, oxides, hydroxide, silicides, nitrides, arsenides, selenides, tellurides, antimonides, carbides, sulfides, and hydrides compounds. In an embodiment, the activity of the species such as Li or LiH or other source of catalyst or catalyst such as K, KH, Na, and NaH is controlled by using a buffer involving an anion that may bind to the species. The buffer may comprise a counter ion. The counter ion may be at least one of the group of halides, oxides, phosphides, borides, hydroxides, silicides, nitrides, arsenides, selenides, tellurides, antimonides, carbides, sulfides, hydrides, carbonate, hydrogen carbonate, sulfates, hydrogen sulfates, phosphates, hydrogen phosphates, dihydrogen phosphates, nitrates, nitrites, permanganates, chlorates, perchlorates, chlorites, perchlorites, hypochlorites, bromates, perbromates, bromites, perbromites, iodates, periodates, iodites, periodites, chromates, dichromates, tellurates, selenates, arsenates, silicates, borates, cobalt oxides, tellurium oxides, and other oxyanions such as those of halogens, P, B, Si, N, As, S, Te, Sb, C, S, P, Mn, Cr, Co, and Te. At least one CIHT half-cell compartment may contain a compound of the counter ion, the cell may comprise a salt bridge, and the salt bridge may selective to the counter ion.

In the case that a species such as LiH inhibits the hydrino reaction, its activity may be reduced by using a component of the reaction mixture such as a support that decreases its activity. The activity may be deceased by one or more of multiple effects. It may be removed by a reaction that consumes the species. For example, a carbon support may intercalate Li to consume one or more of Li or LiH to form the intercalation compound. The species may be physically or thermodynamically excluded from the hydrino reactants. For example, Li or LiH may partition in the electrolyte over a support such as carbon or carbide due to the more favorable solubility in the former than absorption, intercalation, or presence in the latter. In an exemplary embodiment, LiH may not readily intercalate or absorb on carbon such that it is not be present to inhibit the hydrino reaction.

Alternatively, the salt bridge may be selective to the cation of the counterion wherein the cation may be a source of the species such as the catalyst. A suitable salt bridge for $Li^+$, $Na^+$, and $K^+$, a source of the catalyst Li, NaH, and K, respectively, is beta alumina complexed with $Li^+$, $Na^+$, and $K^+$, respectively. The $Li^+$ salt bridge or solid electrolyte may be halide stabilized $LiBH_4$ such as $LiBH_4$-LiX (X = halide), $Li^+$ impregnated $Al_2O_3$ (Li-$\beta$-alumina), $Li_2S$ based glasses, $Li_{0.29+d}La_{0.57}TiO_3$ (d =0 to 0.14), $La_{0.51}Li_{0.34}TiO_{2.94}$, $Li_9AlSiO_8$, $Li_{14}ZnGe_4O_{16}$ (LISICON), $Li_xM_{1-y}M'_yS_4$ (M = Si, Ge, and M' = P, Al, Zn, Ga, Sb)(thio-LISICON), $Li_{2.68}PO_{3.73}N_{0.14}$ (LIPON), $Li_5La_3Ta_2O_{12}$, $Li_{1.3}Al_{0.3}Ti_{1.7}(PO_4)_3$, $LiM_2(PO_4)_3$, $M^{IV}$= Ge, Ti, Hf, and Zr, $Li_{1+x}Ti_2(PO_4)_3$ ($0 \leq x \leq 2$) $LiNbO_3$, lithium silicate, lithium aluminate, lithium aluminosilicate, solid polymer or gel, silicon dioxide ($SiO_2$), aluminum oxide ($Al_2O_3$), lithium oxide ($Li_2O$), $Li_3N$, $Li_3P$, gallium oxide ($Ga_2O_3$), phosphorous oxide ($P_2O_5$), silicon aluminum oxide, and solid solutions thereof and others known in the art. An exemplary cell is [Li/Li solid electrolyte/R-Ni]. The conductivity may be enhanced with Li salts such as $Li_3PO_4$ or $Li_3BO_3$. Li glass may also serve as the $Li^+$ salt bridge. For example, Whatman GF/D borosilicate glass-fiber sheet saturated with a 1 M $LiPF_6$ electrolyte solution in 1:1 dimethyl carbonate (DMC)/ethylene carbonate (EC) also known as LP 30 or 1 M $LiPF_6$ in 1:1 diethyl carbonate (DEC)/ethylene carbonate (EC) also known as LP 40 may serve as the separator/electrolyte. Halide-stabilized $LiBH_4$ may serve as a fast $Li^+$ ion conductor even at room temperature. The halide may be LiF, LiCl, LiBr, or LiI. The separator may be a membrane such as a single or multilayer polyolefin or aramid. The membrane may provide a barrier between the anode and cathode and may further enable the exchange of lithium ions from one side of the cell to the other. A suitable membrane separator is polypropylene (PP), polyethylene (PE), or trilayer (PP/PE/PP) electrolytic membrane. A specific exemplary membrane is Celgard 2400 polypropylene membrane (Charlotte, NC) having a thickness of 25 $\mu$m and a porosity of 0.37. The electrolyte may be 1 M $LiPF_6$ electrolyte solution in 1:1 dimethyl carbonate (DMC)/ethylene carbonate (EC). Another suitable separator/electrolyte is Celgard 2300 and 1 M $LiPF_6$ electrolyte solution in 30:5:35:30 v/v EC-PC-EMC-DEC solvent. Other suitable solvents and electrolytes are lithium chelated borate anion electrolytes such as lithium [bis(oxalato)borate], dioxolane, tetahydrofuran derivatives, hexamethylphosphoramide (HMPA), dimethoxyethane (DME), 1,4-benzodioxane (BDO), tetrahydrofuran (THF), and lithium perchlorate in dioxolane such as 1,3-dioxolane. Other solvents known by those skilled in the Art that are appropriate for operation of a Li based anode are suitable. These solvents range from organic such as propylene carbonate to inorganic such as thionyl chloride and sulfur dioxide and typically have polar groups such as at least one of carbonyl, nitrile, sulfonyl, and ether groups. The solvent may further comprise an additive to increase the stability of the solvent or increase at least one of the extent and rate of the hydrino reaction.

In embodiments, organic carbonates and esters may comprise electrolyte solvents. Suitable solvents are ethylene carbonate (EC), propylene carbonate (PC), butylene carbonate (BC), $\gamma$-butyrolactone ($\gamma$BL), $\delta$-valerolactone ($\delta$VL), *N*-methylmorpholine-*N*-oxide (NMO), dimethyl carbonate (DMC), diethyl carbonate (DEC), ethyl methyl carbonate (EMC), ethyl acetate (EA), methyl butanoate (MB), and ethyl butanoate (EB). In embodiments, organic ethers may comprise electrolyte solvents. Suitable solvents are dimethoxymethane (DMM), 1,2-dimethoxyethane (DME), 1,2-diethoxyethane (DEE), tetrahydrofuran (THF), 2-methyl-tetrahydrofuran (2-Me-THF), 1,3-dioxolane (1,3-DL), 4-methyl-1,3-dioxolane (4-Me-1,3-DL), 2-methyl-1,3-dioxolane (2-Me-1,3-DL). Lithium salts may comprise electrolyte solutes. Suitable solutes are

lithium tetrafluoroborate ($LiBF_4$), lithium hexafluorophosphate ($LiPF_6$), lithium hexafluoroarsenate ($LiAsF_6$), lithium percolate ($LiClO_4$), lithium triflate ($Li^+CF_3SO_3^-$), lithium imide ($Li^+[N(SO_2CF_3)_2]^-$), and lithium beti ($Li^+[N(SO_2CF_2CF_3)_2]^-$). In embodiments, performance-enhancing additives are added for bulk properties such as 12-crown-4, 15-crown-5, aza-ethers, borates, boranes, and boronates. In embodiments, the electrolyte may further comprise anode solid electrolyte interface (SEI) additives such as $CO_2$, $SO_2$, 12-crown-4, 18-crown-6, catechole carbonate (CC), vinylene carbonate (VC), ethylene sulfite (ES), $\alpha$ -bromo-$\gamma$-butyrolactone, methyl choloroformate, 2-acetyloxy-4,4-dimethyl-4-butanolide, succinimide, *N*-benzyloxycarbonyloxysuccinimide, and methyl cinnamate. In embodiments, the electrolyte may further comprise cathode surface layer additives such as $I^-/I_2$, *n*-butylferrocene, 1,1'-dimethylferrocene, ferrocene derivatives, a salt such as a Na of *1,2,4*-triazole, a salt such as a Na of imidazole, 1,2,5,-tricyanobenzene (TCB), tetracyanoquinodimethane (TCNQ), substituted benzenes, pyrocarbonate, and cyclohexylbenzene. In embodiments, the electrolyte may further comprise novel nonaqueous solvents such as cyclic carbonates, $\gamma$BL, linear esters, fluorinated esters, fluorinated carbonates, fluorinated carbamates, fluorinated ethers, glycol borate ester (BEG), sulfones, and sulfamides. In embodiments, the electrolyte may further comprise novel lithium salts such as aromatic Li borates, non-aromatic Li borates, chelated Li phosphates, Li FAP, Li azolate, and Li imidazolide. In an embodiment, the hydrino product such as molecular hydrino is soluble in the solvent such as DMF. An exemplary cell is [Li/solvent comprising at least some DMF $LiPF_6$/CoO(OH)].

The chemical potential or activity of the species such as a catalyst, source of catalyst, or source of H such as $Li^+$, Li, LiH, $H^+$, or $H^-$ may be adjusted in order to facilitate at least one of an electrochemical reaction, electron transport, and ion transport to form the hydrino reactants and hydrinos. The adjustment may be the external potential change caused by the presence of at least one internal reactant or species inside of an electrically conductive chamber in contact with the external reactants of at least one of the half-cells. The electrically conductive chamber may be an electrode of the cell such as the cathode or anode. The internal reactant or species may be a hydride such as an alkali hydride such as KH, alkaline earth hydride such as $MgH_2$, transition metal hydride such as $TiH_2$, an inner transition element hydride such as $NbH_2$, or a noble hydride such as Pd or Pt hydride. The conductive chamber comprising the cathode or anode may contain the metal hydride. The internal reactant or species may be a metal such as an alkali metal such as K, alkaline earth metal such as Mg or Ca, a transition metal such as Ti or V, an inner transition element metal such as Nb, a noble metal such as Pt or Pd, Ag, a compound, or a metalloid. Exempary compounds are metal halides, oxides, phosphides, borides, hydroxides, silicides, nitrides, arsenides, selenides, tellurides, antimonides, carbides, sulfides, hydrides, carbonate, hydrogen carbonate, sulfates, hydrogen sulfates, phosphates, hydrogen phosphates, dihydrogen phosphates, nitrates, nitrites, permanganates, chlorates, perchlorates, chlorites, perchlorites, hypochlorites, bromates, perbromates, bromites, perbromites, iodates, periodates, iodites, periodites, chromates, dichromates, tellurates, selenates, arsenates, silicates, borates, cobalt oxides, tellurium oxides, and having other oxyanions such as those of halogens, P, B, Si, N, As, S, Sb, C, S, P, Mn, Cr, Co, and Te. The internal reactant or species may be at least one of metals such as In, Ga, Te, Pb, Sn, Cd, or Hg, compounds such as hydroxides or nitrates, elements such as P, S, and I, and metalloids such as Se, Bi, and As that may a be liquid at the cell temperature. The molten metal may provide an electrical contact with the chamber. Other conductors may be mixed with the internal reactant or species such as at least one of a metal powder or matrix, a molten metal, a carbide such as TiC, a boride such as $MgB_2$, or a carbon such as carbon black. Exemplary cells are [Li bell/LiF-LiCl/Fe(Pd)($H_2$)], [LiAl/LiF-LiCl/Fe(Pd)($H_2$)], [Li bell/LiF-LiCl/Ni(Pd)($H_2$)], [LiAl/LiF-LiCl/Ni(Pd)($H_2$)], [Li bell/LiF-LiCl/Ni(Cd)($H_2$)], [LiAl/LiF-LiCl/Ni(Cd)($H_2$)], [Li bell/LiF-LiCl/Ni(Se)($H_2$)], [LiAl/LiF-LiCl/Ni(Se)($H_2$)], [Li bell/LiF-LiCl/Ti(Pd)($H_2$)], [LiAl/LiF-LiCl/Ti(Pd)($H_2$)], [Li bell/LiF-LiCl/Ti(Cd)($H_2$)], [LiAl/LiF-LiCl/Ti(Cd)($H_2$)], [Li bell/LiF-LiCl/Ti(Se)($H_2$)], [LiAl/LiF-LiCl/Ti(Se)($H_2$)], [Li bell/LiF-LiCl/Ti(TiC Bi)($H_2$)], and [LiAl/LiF-LiCl/Ti (TiC Bi)($H_2$)] wherein () designates inside of the tube or chamber.

The conductive chamber comprising the anode may contain the metal. In an embodiment, the potential of an internal hydride such as at least one of KH, TiH, and NbH inside of the cathode is matched to that of the Li activity of LiH at saturation of 8 mol% to permit the hydrino reaction. The potential of the internal hydride can be controlled by controlling the extent of hydriding. The latter can be controlled by controlling the pressure of applied hydrogen gas. In addition the chemical potential or activity of the external species may be adjusted to a desired value by selecting a metal or other electrically conducting material that contains the internal reactant or species. A desired potential or activity achieves a high rate of the hydrino reaction. In an embodiment, a desired potential corresponds to a theoretical cell voltage of about zero based on the chemistry not including hydrino formation. The range about zero may be within 1 V. The metal or conduction material may be selected from the group of metals, metal carbides such as TiC, metal borides such as $TiB_2$ and $MgB_2$, metal nitrides such as titanium nitride, and those elements or materials comprising elements from the list of aluminum, antimony, barium, bismuth, boron, cadmium, calcium, carbon (graphite), cerium, cesium, chromium, cobalt, copper, dysprosium, erbium, europium, gadolinium, gallium, germanium, gold, hafnium, holmium, indium, iridium, iron, lanthanum, lead, lithium, lutetium, magnesium, manganese, mercury, molybdenum, neodymium, nickel, niobium, osmium, palladium, phosphorous, platinum, potassium, praseodymium, promethium, protactinium, rhenium, rhodium, rubidium, ruthenium, samarium, scandium, selenium, silicon, silver, sodium, strontium, sulfur, tantalum, technetium, tellurium, terbium, thulium, tin, titanium, tungsten, vanadium, ytterbium, yttrium, zinc, and zirconium. The

metals may be from the list of aluminum, antimony, barium, bismuth, cadmium, calcium, cerium, cesium, chromium, cobalt, copper, dysprosium, erbium, europium, gadolinium, gallium, germanium, gold, hafnium, holmium, indium, iridium, iron, lanthanum, lead, lithium, lutetium, magnesium, manganese, mercury, molybdenum, neodymium, nickel, niobium, osmium, palladium, platinum, potassium, praseodymium, promethium, protactinium, rhenium, rhodium, rubidium, ruthenium, samarium, scandium, selenium, silicon, silver, sodium, strontium, tantalum, technetium, tellurium, terbium, thulium, tin, titanium, tungsten, vanadium, ytterbium, yttrium, zinc, and zirconium. In an embodiment, the hydride in the conductive compartment such as a hollow, H-permeable cathode or anode diffuses through the wall into the half cell or electrolyte. The hydride may be regenerated by pumping the unreacted hydrogen gas into the compartment. Alternatively, the chamber may be cooled or allowed to cool such that the hydride forms spontaneous. The hydrogen may flow to the internal reactant or species such as the corresponding metal through a gas line from at least one half-cell compartment through a valve to the inside of the conductive chamber where it reacts to regenerate the hydride.

The electrolyte may comprise additionally a metal or hydride such as an alkali or alkaline earth metal or hydride. A suitable alkaline earth metal and hydride is Mg and $MgH_2$, respectively. At least one electrode may comprise a support such as TiC, $YC_2$, $Ti_3SiC_2$, and WC, and the half cell may further comprise a catalyst such as K, NaH, or may be Li from migration of $Li^+$, a reductant such a Mg or Ca, a support such as TiC, $YC_2$, $Ti_3SiC_2$, or WC, an oxidant such as LiCl, $SrBr_2$, $SrCl_2$, or $BaCl_2$, and a source of H such as a hydride such as R-Ni, $TiH_2$, $MgH_2$, NaH, KH, or LiH. Hydrogen may permeate through the wall of the half-cell compartment to form the catalyst or serve as the source of H. The source of permeating H may be from the oxidation of $H^-$.

In an embodiment, $Mg2^+$ serves as a catalyst by the reaction given in TABLE 1. The source of $Mg^{2+}$ may be the cathode or anode reactant or the electrolyte. The electrolyte may be a molten salt such as a hydride ion conductor such as eutectic mixture comprising at least one magnesium salt such as a halide such as iodide. The electrolyte may be aqueous such as an aqueous magnesium halide or other soluble magnesium salt. Exemplary cells are [$Li_3Mg/MgI_2$ or $MgX_2$-MX' or $MX'_2$ (X,X'= halide, M = alkali or alkaline earth)/$CeH_2$, $TiH_2$, or $LaH_2$] and [R-Ni, $LaNi_5H_6$, $La_2Co_1Ni_9H_6$, $ZrCr_2H_{38}$, $LaNi_{3.55}Mn_{0.4}Al_{0.3}Co_{0.75}$, $ZrMn_{0.5}Cr_{0.2}V_{0.1}Ni_{1.2}$/at least one of a magnesium salt such as $MgI_2$, $MgSO_4$, and $Mg(NO_3)_2$ and MOH (M=alkali)/carbon such as CB, PtC, PdC].

In an embodiment of the CIHT cell, a bulk catalyst such as Mg, Ca, or Mg plus a support, or Ca plus a support, wherein a suitable support is chosen from TiC, $Ti_3SiC_2$, WC, TiCN, $MgB_2$, $B_4C$, SiC, and $YC_2$, comprises the reductant of the anode compartment. The electrolyte may comprise a salt such as a eutectic mixture that conducts hydride ions. The cathode and optionally the anode compartment may comprise a hydrogen permeable membrane. Hydrogen may be supplied to the cathode compartment such that it permeates through the membrane and forms hydride ions that migrate through the electrolyte to the anode compartment where they may be oxidized to H. The H may diffuse through the anode membrane and react with the bulk catalyst to from hydrinos. In another embodiment of the CIHT cell, an alkali metal or alkali metal hydride comprises the catalyst or source of catalyst, and the anode reaction mixture may further comprise at least one of a reductant such as an alkaline earth metal such as Mg or Ca and a support, wherein a suitable support is chosen from TiC, $Ti_3SiC_2$, WC, TiCN, $MgB_2$, $B_4C$, SiC, and $YC_2$. This reaction mixture may comprise the reductant of the anode compartment. The electrolyte may comprise a salt such as a eutectic mixture that conducts hydride ions. In an embodiment, the electrolyte comprises a molten alkali metal hydroxide such as KOH that may conduct hydride ions. The cathode and optionally the anode compartment may comprise a hydrogen permeable membrane. Hydrogen may be supplied to the cathode compartment such that it permeates through the membrane and forms hydride ions that migrate through the electrolyte to the anode compartment where they may be oxidized to H. The H may diffuse through the anode membrane and react with the catalyst to from hydrinos. Alternatively, the H may react with a catalyst formed or present at the cathode or anode membrane or in the electrolyte.

In an embodiment, the salt bridge comprises a solid with a high conductance for hydride ions. The salt bridge may also serve as the electrolyte. At least one of the salt bride and electrolyte may comprise a mixture of a hydride such as an alkali or alkaline earth hydride such as $MgH_2$ or $CaH_2$, a halide such as an alkali or alkaline earth halide such as LiF, and a matrix material such as $Al_2O_3$ powder. The mixture may be sintered wherein the sintering may be in a $H_2$ atmosphere. Alternatively, the salt bridge and optionally the electrolyte is a liquid such as a molten salt wherein at least one of the cathode and anode half-cell reactants is insoluble in the salt bridge or electrolyte. An example of a molten hydride conductor salt bridge is LiH in LiCl/KCl eutectic molten salt. Exemplary hydrino reactants are a source of catalyst and a source of hydrogen such as NaH or KH, a support such as TiC, C, Pd/C, and Pt/C, and an alkaline earth hydride such as $MgH_2$ or other thermally regenerated hydride such as at least one of LiH, $MBH_4$, and $MAlH_4$ (M = Li, Na, K, Rb, Cs). The half-cell compartments may be isolated and connected by an electrically insulating separator. The separator may also serve as a support for the salt bridge. The salt bridge may comprise a molten salt supported by the separator. The separator may be MgO or BN fiber. The latter may be as a woven fabric or nonwoven felt. In an embodiment, the catalyst or source of catalyst and source of hydrogen such as NaH or KH is substantially insoluble in the salt bridge. Each half-cell reactant mixture may be pressed into a plaque and attached to the current collector of the anode and cathode. The plaque may be secured with at least one perforated sheet such as a metal sheet. Alternatively, the separator may be permeable to H wherein $H^-$ reacts to form H at the cathode half-cell interface, H passes through the separator

and forms $H^-$ at the anode half-cell interface. Suitable separators that transport $H^-$ by forming H are refractory base metals such as V, Nb, Fe, Fe-Mo alloy, W, Rh, Ni, Zr, Be, Ta, Rh, Ti, Th, and rare earths as well as noble metals and alloys such as Pd and Pd/Ag alloy. The metal comprising a H membrane may be biased to increase the activity of $H^-$/H conversion at the interfaces. The activity may also be increased by using a concentration gradient.

In an embodiment, the CIHT cell comprises a cathode compartment and an anode compartment wherein the both compartments may contain at least one of the same reactants except that the anode compartment exclusively contains one or more selective reactants needed to maintain the hydrino reaction at a favorable rate to develop a voltage between the cells. The anode and cathode compartments are in contact by a salt bridge that is an ion conductor, but substantially an insulator for electrons. In an embodiment, the salt bridge is selective for hydride ion conductivity. In an embodiment, the salt bridge may allow the migration or exchange of reactant materials amongst the compartments except for the selective reactant(s). In an embodiment, the anode compartment contains a catalyst or source of catalyst and a source of hydrogen such as NaH, KH, or at least one H, optionally a reductant such as an alkaline earth metal or hydride such as Mg and $MgH_2$, and one or more selective reactants such as at least one support that may also serve as a hydrogen dissociator. The support may comprise carbon, carbide, or a boride. Suitable carbon, carbides and borides are carbon black, TiC, $Ti_3SiC_2$, TiCN, SiC, $YC_2$, TaC, $Mo_2C$, WC, C, HfC, $Cr_3C_2$, ZrC, VC, NbC, $B_4C$, $CrB_2$, $ZrB_2$, $GdB_2$, $MgB_2$, and $TiB_2$. Suitable supports that may also serve as hydrogen dissociators are Pd/C, Pt/C Pd/MgO, Pd/$Al_2O_3$, Pt/MgO, and Pt/$Al_2O_3$. The half-cell compartments may be isolated and connected by an electrically insulating separator that may also serve as a support for the salt bridge. The salt bridge may comprise a molten salt supported by the separator. The molten salt may be at least one of an electrolyte, an electrolyte comprising a hydride, and a hydride dissolved in an electrolyte. Alternatively, the salt bridge is replaced by a separator that is not permeable to the selective reactant(s). The separator may be permeable to one or more ions or compounds of either of the anode-compartment or cathode-compartment reaction mixtures while being impermeable to the selective reactants(s). In an embodiment, the separator is not permeable to the support. The separator may be MgO or BN fiber. The latter may be as a woven fabric or nonwoven felt. The hydrino reaction to form ionized catalyst selectively forms in the anode compartment due to the anode compartment reactants exclusively comprising the selective reactants and the impermeability of the separator or salt bridge to the selective reactant(s).

In an embodiment, the transport of ions and electrons causes the hydrino reactants to be formed in a region other than in at least one of the cathode or anode compartments. The hydrino reactants may form in the electrolyte such that the hydrino reaction occurs at the location of at least one of the electrolyte, the salt bridge, an interface of the electrolyte and the salt bridge, the electrolyte-cathode interface, and the anode-electrolyte interface. The cathode may comprise a hydrogen-permeable membrane such as a nickel foil or tube or porous nickel electrode, and the electrolyte may comprise a eutectic salt that transports hydride ions such as LiH dissolved in LiCl-KCl. The hydrogen may permeate through the membrane, and a catalyst ion such as $Li^+$ or $K^+$ may be reduced to the catalyst such as Li or K at the electrolyte interface such that Li or K and H are formed at the interface and further react to form hydrinos. In this case, the reduction potential is increased. In an embodiment, the concentration of LiCl-KCl is about 58.5 + 41.2 mol%, the melt temperature is about 450 °C, and the LiH concentration is about 0.1 mol% or lower. In other embodiments, the LiH concentration may be any desirable mole percent to the saturation limit of about 8.5%. In another exemplary embodiment, the electrolyte may comprise LiH + LiF + KF or NaF and optionally a support such as TiC. Other suitable electrolytes are mixtures of alkali hydrides and alkali and alkaline earth borohydrides wherein the cell reaction may be a metal exchange. Suitable mixtures are the eutectic mixtures of NaH-$KBH_4$ at about 43 + 57 mol % having the melt temperature is about 503 °C, KH-$KBH_4$ at about 66 + 34 mol % having the melt temperature is about 390 °C, NaH-$NaBH_4$ at about 21 + 79 mol % having the melt temperature is about 395 °C, $KBH_4$ -$LiBH_4$ at about 53 + 47 mol % having the melt temperature is about 103 °C, $NaBH_4$ -$LiBH_4$ at about 41.3 + 58.7 mol % having the melt temperature is about 213 °C, and $KBH_4$ -$NaBH_4$ at about 31.8 + 68.2 mol % having the melt temperature is about 453 °C wherein the mixture may further comprise an alkali or alkaline earth hydride such as LiH, NaH, or KH. A suitable concentration of the hydride is 0.001 to 10 mol %. Exemplary cells are [K/ KH $KBH_4$ -$NaBH_4$/Ni], [Na/ NaH $NaBH_4$ -$LiBH_4$/Ni], [LiAl/ LiH $KBH_4$-$LiBH_4$/Ni], [K/ $KBH_4$ -$NaBH_4$/Ni], [Na/ $NaBH_4$ -$LiBH_4$/Ni], and [LiAl/ $KBH_4$-$LiBH_4$/Ni]. Aluminum hydride may replace borohydride.

The electrolyte may comprise a catalyst or source of catalyst other than LiH and other suitable electrolytes such as KH or NaH with one of NaBr + NaI, KOH + KBr, KOH + KI, NaH + $NaAlEt_4$, NaH + $NaAlCl_4$, NaH + $NaAlCl_4$ + NaCl, NaH + NaCl + $NaAlEt_4$, and other salts such a halides. The cation of at least one salt may be that of the catalyst or source of catalyst. In an embodiment, the catalyst and source of H may be HCl formed by the oxidation of $Cl^-$ or H. The $Cl^-$ may be from the electrolyte.

An embodiment of a thermal cell comprises a reaction mixture distribution to cause a regional localization of the catalysis reaction to locally produce ions and electrons. The reactants are distributed such that a first area in the cell exclusively contains one or more selective reactants needed to maintain the hydrino reaction at a favorable rate in order to develop a voltage between this at least one first region and at least one, second region of the cell. The cell comprises conductive walls in an embodiment, or may comprise a conductive circuit. An electron current may flow through the walls of the cell or the circuit due to the voltage. The electrons reduce a reactant in the second region such as a hydride

to produce an anion such as a hydride ion. The anion may migrate from the second to the first region to complete the circuit. The migration may be through a solvent or molten salt. The molten salt may be at least one of an electrolyte, an electrolyte comprising a hydride, and a hydride dissolved in an electrolyte. A separator or salt bridge may maintain the selective reactants in the first region. The separator or salt bridge may also maintain separation of other reactants that are desired to be separated. The separator or salt bridge may be selective to hydride ions.

In an exemplary embodiment, the anode and cathode reactants are the same except that the anode compartment or region exclusively contains the support. No salt bridge is required and a physical separator and ion conductor may optionally confine the support in the cathode compartment or region. For example, the anode and cathode reaction mixtures comprise NaH or KH and Mg, and the anode reaction mixture further comprises TiC. In other exemplary embodiments, the reactant mixture of both cells comprises one or more of a catalyst, source of catalyst, and source of hydrogen such as at least one of Li, LiH, Na, NaH, K, KH, Rb, RbH, Cs, CsH, Mg, $MgH_2$, and at least one H, and at least one of a reductant or hydride exchange reactant such as an alkaline earth metal or hydride such as Mg, LiH, $MBH_4$, $MAlH_4$ (M = Li, Na, K, Rb, Cs), and $M_2(BH_4)_2$ (M=Mg, Ca, Sr, Ba). A support is localized exclusively at the anode compartment or region. Suitable supports that may also serve as a hydrogen dissociator include carbon, carbide, or a boride. Suitable carbon, carbides and borides include carbon black, TiC, $Ti_3SiC_2$, $YC_2$, TiCN, $MgB_2$, SiC, TaC, $Mo_2C$, WC, C, $B_4C$, HfC, $Cr_3C_2$, ZrC, $CrB_2$, VC, $ZrB_2$, NbC, and $TiB_2$. Suitable supports that may also serve as hydrogen dissociators include Pd/C, Pt/C Pd/MgO, Pd/$Al_2O_3$, Pt/MgO, and Pt/$Al_2O_3$. Suitable anode reaction mixtures include NaH Pd/$Al_2O_3$ TiC + $H_2$, NaH $NaBH_4$ TiC, NaH $KBH_4$ TiC, NaH $NaBH_4$ Mg TiC, NaH $KBH_4$ Mg TiC, KH $NaBH_4$ TiC, KH $KBH_4$ TiC, KH $NaBH_4$ Mg TiC, KH $KBH_4$ Mg TiC, NaH $RbBH_4$ Mg TiC, NaH $CsBH_4$ Mg TiC, KH $RbBH_4$ Mg TiC, KH $CsBH_4$ Mg TiC, NaH Mg TiC $Mg(BH_4)_2$, NaH Mg TiC $Ca(BH_4)_2$, KH Mg TiC $Mg(BH_4)_2$, KH Mg TiC $Ca(BH_4)_2$, NaH Mg TiC, KH Mg TiC, LiH Mg TiC, NaH Mg Pd/C, KH Mg Pd/C, LiH Mg Pd/C, NaH Mg Pt/C, KH Mg Pt/C, NaH Mg LiCl, KH Mg LiCl, KH KOH TiC, and LiH Mg Pt/C. In an embodiment, the cathode reactants may be the same absent the support. Alternatively, in an embodiment, the anode reactants may be the same absent the support.

Hydrino chemistry can be localized at one electrode of two comprised of different metals. The selectivity to form hydrinos at one may be due to a specific preferred chemical reaction that gives rise to hydrino reactants such as catalyst or atomic hydrogen. For example, one electrode may dissociate $H_2$ to H such that the hydrino reaction may occur. The reaction mixture may comprise an alkali hydride such as LiH in a hydride conducting eutectic salt such as a mixture of compounds comprising at least one of different alkali metals and halides such as a mixture of LiCl and KCl. With one electrode comprising a $H_2$ dissociator such as Ni, Ti, or Nb relative to a less dissociative active electrode such as Cu or Fe, the half-cell reactions may be

Cathode Reaction ($H_2$ dissociator)

$$M^+ + e^- + H \text{ to } M + H(1/p) \qquad (237)$$

Anode Reaction

$$H^- \text{ to } 1/2H_2 + e^- \qquad (238)$$

Net

$$MH \text{ to } M + H(1/p) \qquad (239)$$

wherein M is a catalyst metal such as Li, Na, or K.

In an embodiment, the redox reactions to form hydrinos involve the cathode reaction of Eq. (237) wherein M is an alkali metal such as Li. Suitable cathode dissociator metals are Nb, Fe, Ni, V, Fe-Mo alloy, W, Rh, Zr, Be, Ta, Rh, Ti, and Th foils. Exemplary reactions are Cathode Reaction (e.g. Nb foil)

$$Li^+ + e^- + H \text{ to } Li + H(1/4) \qquad (240)$$

Anode Reaction

$$Li \text{ to } Li^+ + e- \qquad (241)$$

Net

$$H \text{ to } H(1/4) + 19.7 \text{ MJ} \qquad (242)$$

The Li metal anode may comprise an inverted bell or cup in an electrolyte wherein Li is maintained in the cup

by its buoyancy in the electrolyte, a porous electrode, a Li alloy such as LiAl alloy, or Li metal in a chamber such as a metal tube such as a Ni tube. The salt may be a eutectic salt such as 79-21 wt% LiCl-LiF or 51.9-47.6 wt% LiCl-KCl. The operating temperature may be above the melting point of the salt electrolyte such as above about 485 °C for the LiF/LiCl eutectic or above about 350°C for the LiCl/KCl eutectic. Other suitable eutectics and the melting points are LiCl-CsCl (59.3 + 40.7 mol %, mp = 200 °C) and LiCl-KCl-CsCl (57.5 + 13.3 + 29.2 mol %, mp = 150 °C). In an embodiment, the Li and $Li^+$ concentrations remain substantially constant over time due to the counter diffusion of Li and $Li^+$ consumed and formed by the reactions given by Eqs. (240-241). The hydrogen may be supplied by diffusing through a diaphragm from a chamber or through a tube comprising an electrode such as the cathode. In a cell comprising a metal anode such as a Li metal anode further comprising an inverted bell or cup in an electrolyte to hold the metal, the hydrogen may be supplied from a diaphragm located beneath the cup, and the diaphragm may be oriented horizontally relative to the electrolyte surface and the cup. The hydrogen source may be hydrogen gas or a hydride such as a metal hydride such as an alkali metal hydride or at least one electrode may comprise a metal hydride. A suitable metal hydride is MH wherein M is an alkali metal. A suitable concentration is 0.001 to 1 wt%. The concentration of at least one of Li or LiH may be maintained below that which decreases the catalyst reaction to form hydrinos. For example, the concentration in a LiCl-KCl eutectic electrolyte may be maintained below 1 wt%, preferably below 0.1 wt%, and most preferably below 0.05 wt%. The Li and LiH concentration may be monitored with a detector or sensor. The sensor may be optical such as an optical absorption sensor. The sensor for LiH may be an infrared absorption sensor. The analysis may comprise a reporter or indicator such as a binding species. The sensor may be a selective electrode. The sensor may comprise electrodes responsive to the Li or LiH concentration according to the Nernst equation wherein the concentration is determined from the voltage. Suitable electrodes would not significantly support the catalysis of H to hydrino. The sensor may be a calibrated apparatus for voltammetry such as cyclic voltammetry, polarography, or amperometry. The concentration may be increased or decreased to maintain an optimal concentration to permit the hydrino reaction. The addition or elimination of Li or LiH may be by applying electrolysis to the cell. The concentration of the Li or LiH may be controlled by using an electrode that absorbs Li or LiH. A suitable exemplary metal is copper.

In an embodiment, the cell comprises electrodes comprising two metals. Suitable metals are those selected from transition metals, inner transition metals, Al, Sn, In, and rare earth metals. The cell may further comprise a eutectic salt electrolyte such as at least two metal halides such as LiCl-KCl or LiCl-LiF and may additionally comprise a source of hydride such as 0.01 wt% LiH.

In another embodiment, one electrode, the anode, may comprise a more electropositive metal that provides electrons to reduce an ionic source of catalyst or $H^+$ to form the catalyst or H of the catalyst mixture at the cathode. In exemplary reactions, $M_a$ is the anode metal that has a more favorable reduction couple potential than that of the cathode and M is a catalyst metal such as Li, Na, or K:

Cathode Reaction

$$M^+ + e^- + H \text{ to } M + H(1/p) \qquad (243)$$

Anode Reaction

$$M_a \text{ to } M_a^+ + e^- \qquad (244)$$

And in solution

$$M_a^+ + M \text{ to } M_a + M^+ \qquad (245)$$

Net

$$H \text{ to } H(1/p) + \text{energy at least partially as electricity} \qquad (246)$$

In an embodiment, the redox reactions to form hydrinos involve the anode reaction of Eq. (244) wherein $M_a$ is the anode metal that is has a more favorable reduction couple potential than that of the cathode. Suitable anode and cathode, and catalyst metals are V, Zr, Ti, or Fe, and Li. Exemplary reactions are

Cathode Reaction

$$Li^+ + e^- + H \text{ to } Li + H(1/4) \qquad (247)$$

Anode Reaction

$V$ to $V^+ + e^-$ (248)

And in solution

$V^+ + Li$ to $Li^+ + V$ (249)

Net

H to H(1/4) + 19.7 MJ (250)

In an embodiment, the metal $M_a$ such as V may be separated from the salt mixture and added to the anode to reconstitute it. A suitable method to reconstitute the anode is to use a paramagnetic or ferromagnetic anode metal and collect the metal particles by a magnetic field. In an embodiment, the anode is magnetized such that reduced material is collected at the anode. Suitable ferromagnetic anode metals are Ni and Fe. In another embodiment, the anode is positioned at the bottom of the cell and may be comprised of a dense metal such that any reduced metal formed in the electrolyte may precipitate and redeposit on the anode surface to reconstitute it. Suitable electropositive metals for the anode are one or more of the group of an alkaline or alkaline earth metal, Al, V, Zr, Ti, Mn, Se, Zn, Cr, Fe, Cd, Co, Ni, Sn, and Pb. The anode material may be a hydride that is decomposed such that the metal is free of an oxide coat and is active for oxidation. Exemplary electropositive anode cells are [Ti/LiF-LiCl/LiAl-$H_x$], [V/LiF-LiCl/LiAl-$H_x$], [Zr/LiF-LiCl/LiAl-$H_x$], [V/LiF-LiCl/Nb ($H_2$)], [Zr/LiF-LiCl/Zr ($H_2$)], [Ti/LiF-LiCl/Ti($H_2$)], [V/LiF-LiCl-LiH (0.02 mol %)/Nb ($H_2$)], [Zr/ LiF-LiCl-LiH (0.02 mol %)/Zr ($H_2$)], [Ti/ LiF-LiCl-LiH (0.02 mol %)/Ti($H_2$)], and [V/LiCl-KCl/Fe($H_2$)]. The electrical power may be optimized by changing the temperature, $H_2$ sparging the electrolyte, electro-purification of the electrolyte, adding $H_2$, hydriding or changing the amount of hydride of either half-cell by adding anode metal hydride such as $TiH_2$, $VH_2$, or $ZrH_2$, cathode metal hydride such as LiH, or adding $H_2$ gas.

In an embodiment, suitable metals are selected from the list of aluminum, antimony, barium, carbon (graphite), cerium, chromium, cobalt, copper, dysprosium, erbium, europium, gadolinium, germanium, hafnium, holmium, iron, lanthanum, lutetium, magnesium, manganese, molybdenum, neodymium, nickel, niobium, praseodymium, promethium, protactinium, samarium, scandium, silver, strontium, tantalum, technetium, tellurium, terbium, thulium, titanium, tungsten, vanadium, ytterbium, yttrium, and zirconium. The cell may further comprise a eutectic salt and may further comprise at least one of a hydride such as an alkali hydride and hydrogen. At least one of the metal electrodes may be hydrided, or hydrogen may be permeated through the metal from a hydrogen supply. In an embodiment, the metal may comprise an alkali or alkaline earth metal. The metal may be a source of the catalyst. The electrode such as the anode may comprise an open or porous electrode or a closed electrode. In the former case, a metal such as an alkali or alkaline earth metal is in contract with the electrolyte, and in the latter case, it is enclosed in an electrically conductive chamber that is in contact with the electrolyte. Suitable chambers are comprised of aluminum, antimony, barium, carbon (graphite), cerium, chromium, cobalt, copper, dysprosium, erbium, europium, gadolinium, germanium, hafnium, holmium, iron, lanthanum, lutetium, magnesium, manganese, molybdenum, neodymium, nickel, niobium, praseodymium, promethium, protactinium, samarium, scandium, silver, strontium, tantalum, technetium, tellurium, terbium, thulium, titanium, tungsten, vanadium, ytterbium, yttrium, and zirconium. The metal such as Li, Na, or K may enter the solution when the electrode is open. The metal may enter as an ion. In an embodiment, the cell may comprise an anode and cathode and an electrolyte. Suitable electrolytes comprise a mixture of at least one of a metal hydride and a metal halide and metal halide mixtures such as combinations of MH, M'X M"X" wherein M, M', and M" are alkali metals and X and X' are halides. Exemplary electrolytes are mixtures of NaH LiCl KCl, LiCl NaCl, and LiH LiCl NaCl. In an embodiment, the CIHT cathode metal may be hydrided or have hydrogen present before the metal from the open or porous anode comes into contact with it. Suitable exemplary cathode hydrides are niobium and titanium hydrides. In an embodiment, the anode metal may bind to the surface of the cathode and may be removed by electrolysis. Hydrogen may react with the metal from the anode such as Li and may precipitate out of the electrolyte. The precipitate such as LiH may be regenerated to the anode metal by methods such as electrolysis and thermal regeneration.

In an embodiment, the redox reactions to form hydrinos involve $H^-$ as the migrating ion. The cathode reaction may comprise the reduction of a hydride to form $H^-$, and the anode reaction may comprise oxidation of $H^-$ to H. Hydrinos may form at either electrode depending on the presence a catalyst with H. Exemplary reactions are
Cathode Reaction

$MH_2$ + e- to M + $H^-$ + H(1/p) (251)

Anode Reaction

$H^-$ to H + e- (252)

After H diffusion in electrolyte

M + 2H to $MH_2$ (253)

Net

$MH_2$ to M + 2H(1/p) + energy at least partially as electricity (254)

$MH_2$ may be reformed by adding $H_2$ to M. A metal hydride may form at the anode as well at the step given by Eq. (252). The hydride may at least partially thermally decompose at the operating temperature of the cell.

In an embodiment, the redox reactions to form hydrinos involve $H^+$ as the migrating ion. The cathode reaction may comprise the reduction of $H^+$ to form H, and the anode reaction may comprise oxidation of H to $H^+$. Hydrinos may form at either electrode depending on the presence a catalyst with H. Exemplary reactions are
Cathode Reaction

$$MH \text{ to } M + H^+ + e- \quad (255)$$

Anode Reaction

$$H^+ + e\text{-to } H \text{ to } H(1/p) \quad (256)$$

Net

$$MH \text{ to } M + H(1/p) + \text{energy at least partially as electricity} \quad (257)$$

MH may be reformed by adding $H_2$ to M. In another exemplary embodiment, the reactions are
Cathode Reaction

$$MH_2 \text{ to } M + e- + H^+ + H(1/p) \quad (258)$$

Anode Reaction

$$H^+ + e- \text{ to } H \quad (259)$$

After H diffusion in electrolyte

$$M + 2H \text{ to } MH_2 \quad (260)$$

Net

$$MH_2 \text{ to } M + 2H(1/p) + \text{energy at least partially as electricity} \quad (261)$$

$MH_2$ may be reformed by adding $H_2$ to M. A metal hydride may form at the anode as well at the step given by Eq. (259). The hydride may at least partially thermally decompose at the operating temperature of the cell.

In another embodiment, the anode half-cell comprises a source of $H^+$ such as a hydride such as at least one of an alkaline or alkaline earth hydride, a transition metal hydride such as Ti hydride, an inner transition metal hydride such as Nb, Zr, or Ta hydride, palladium or platinum hydride, and a rare earth hydride. Alternatively, the source of $H^+$ may be from hydrogen and a catalyst. The catalyst may be a metal such as a noble metal. The catalyst may be an alloy such as a one comprising at least one noble metal and another metal such as $Pt_3Ni$. The catalyst may comprise a support such as carbon, an example being Pt/C. The catalyst may comprise those of proton exchange membrane (PEM) fuel cells, phosphoric acid fuel cells, or similar fuel cells comprising a migrating proton formed by a catalyst such as ones known to those skilled in the Art. The source of $H^+$ may be from a hydrogen permeable anode and a source of hydrogen such as a $Pt(H_2)$, $Pd(H_2)$, $Ir(H_2)$, $Rh(H_2)$, $Ru(H_2)$, noble metal $(H_2)$, $Ti(H_2)$, $Nb(H_2)$, or $V(H_2)$ anode ($(H_2)$ designates a source of hydrogen such as hydrogen gas that permeates through the anode). The source of $H^+$ may be from hydrogen in contact with the anode half-cell reactants such as Pd/C, Pt/C, Ir/C, Rh/C, and Ru/C. The source of $H_2$ that forms $H^+$ may be a hydride such as an alkali hydride, an alkaline earth hydride such as $MgH_2$, a transition metal hydride, an inner transition metal hydride, and a rare earth hydride that may contact the anode half-cell reactants such as Pd/C, Pt/C, Ir/C, Rh/C, and Ru/C. The catalyst metal may be supported by a material such as carbon, a carbide, or a boride. The $H^+$ migrates to the cathode half-cell compartment. The migration may be through a salt bridge that is a proton conductor such as beta alumina or a non-aqueous proton-exchange membrane. The cell may further comprise an electrolyte. In another embodiment, the salt bridge may be replaced by an electrolyte such as a molten eutectic salt electrolyte. In the cathode half-cell compartment, the $H^+$ is reduced to H. The H may serve as a reactant to from hydrinos with a catalyst. At least some H may also react with a source of catalyst to form the catalyst. The source of catalyst may be a nitride or imide such as an alkali metal nitride or imide such as $Li_3N$ or $Li_2NH$. The imide or amide cathode half-cell product may be decomposed and the hydrogen may be returned to the metal of the anode half-cell compartment to reform the corresponding hydride. The source of catalyst may be atomic H. Hydrogen reacted to form hydrinos may be made up.

The hydrogen may be transferred by pumping or electrolytically. In exemplary reactions, $M_aH$ is the anode metal hydride and M is a catalyst metal such as Li, Na, or K:

Cathode Reaction

$$2H^+ + 2e^- + Li_3N \text{ or } Li_2NH \text{ to } Li + H(1/p) + Li_2NH \text{ or } LiNH_2 \quad (262)$$

Anode Reaction

$$M_aH \text{ to } M_a + H^+ + e- \quad (263)$$

Regeneration

$$Li + Li_2NH \text{ or } LiNH_2 + M_a \text{ to } M_aH + Li_3N \text{ or } Li_2NH \quad (264)$$

Net

$$H \text{ to } H(1/p) + \text{energy at least partially as electricity} \quad (265)$$

The cell may further comprise an anode or cathode support material such as a boride such as $GdB_2$, $B_4C$, $MgB_2$, $TiB_2$, $ZrB_2$, and $CrB_2$, a carbide such as TiC, $YC_2$, or WC or TiCN. Suitable exemplary cells are [LiH/beta alumina/$Li_3N$], [NaH/beta alumina/$Li_3N$], [KH/beta alumina/$Li_3N$], [$MgH_2$/beta alumina/$Li_3N$], [$CaH_2$/beta alumina/$Li_3N$], [$SrH_2$/beta alumina/$Li_3N$], [$BaH_2$/beta alumina/$Li_3N$], [$NbH_2$/beta alumina/$Li_3N$], [$MgH_2$/beta alumina/$Li_3N$], [$ZrH_2$/beta alumina/$Li_3N$], [$LaH_2$/beta alumina/$Li_3N$], [LiH/beta alumina/$Li_2NH$], [NaH/beta alumina/$Li_2NH$], [KH/beta alumina/$Li_2NH$], [$MgH_2$/beta alumina/$Li_2NH$], [$CaH_2$/beta alumina/$Li_2NH$], [$SrH_2$/beta alumina/$Li_2NH$], [$BaH_2$/beta alumina/$Li_2NH$], [$NbH_2$/beta alumina/$Li_2NH$], [$MgH_2$/beta alumina/$Li_2NH$], [$ZrH_2$/beta alumina/$Li_2NH$], [$LaH_2$/beta alumina/$Li_2NH$], [LiH/beta alumina/$Li_3N$ TiC], [NaH/beta alumina/$Li_3N$ TiC], [KH/beta alumina/$Li_3N$ TiC], [$MgH_2$/beta alumina/$Li_3N$ TiC], [$CaH_2$/beta alumina/$Li_3N$ TiC], [$SrH_2$/beta alumina/$Li_3N$ TiC], [$BaH_2$/beta alumina/$Li_3N$ TiC], [$NbH_2$/beta alumina/$Li_3N$ TiC], [$MgH_2$/beta alumina/$Li_3N$ TiC], [$ZrH_2$/beta alumina/$Li_3N$ TiC], [$LaH_2$/beta alumina/$Li_3N$ TiC], [LiH/beta alumina/$Li_2NH$ TiC], [NaH/beta alumina/$Li_2NH$ TiC], [KH/beta alumina/$Li_2NH$ TiC], [$MgH_2$/beta alumina/$Li_2NH$ TiC], [$CaH_2$/beta alumina/$Li_2NH$ TiC], [$SrH_2$/beta alumina/$Li_2NH$ TiC], [$BaH_2$/beta alumina/$Li_2NH$ TiC], [$NbH_2$/beta alumina/$Li_2NH$ TiC], [$MgH_2$/beta alumina/$Li_2NH$ TiC], [$ZrH_2$/beta alumina/$Li_2NH$ TiC], [$LaH_2$/beta alumina/$Li_2NH$ TiC], [Ti($H_2$)/beta alumina/$Li_3N$], [Nb($H_2$)/beta alumina/$Li_3N$], [V($H_2$)/beta alumina/$Li_3N$], [Ti($H_2$)/beta alumina/$Li_2NH$], [Nb($H_2$)/beta alumina/$Li_2NH$], [V($H_2$)/beta alumina/$Li_2NH$], [Ti($H_2$)/beta alumina/$Li_3N$ TiC], [Nb($H_2$)/beta alumina/$Li_3N$ TiC], [V($H_2$)/beta alumina/$Li_3N$ TiC], [Ti($H_2$)/beta alumina/$Li_2NH$ TiC], [Nb($H_2$)/beta alumina/$Li_2NH$ TiC], [V($H_2$)/beta alumina/$Li_2NH$ TiC], and [PtC($H_2$) or PdC($H_2$)/$H^+$ conductor such as solid proton conductor such as $H^+Al_2O_3$,/$Li_3N$].

In embodiments, the source of $H^+$ is an organic or inorganic compound comprising a proton such as an alkali or alkaline earth hydrogen oxyanion such as phosphate or sulfate. An acid such as silicic acid, an alkyl aluminum compound or borane with H such as those with bridging H bonds, ammonium or an alkyl ammonium compound. Further suitable H soureces are amine borane complexes such as amine borane, boron hydride ammoniates, hydrazine-borane complexes, diborane diammoniate, borazine, and ammonium octahydrotriborates or tetrahydroborates, imidazolium ionic liquids such as alkyl(aryl)-3-methylimidazolium N-bis(trifluoromethanesulfonyl)imidate salts, phosphonium borate, and carbonite substances. Further exemplary compounds are ammonia borane, alkali ammonia borane such as lithium ammonia borane, and borane alkyl amine complex such as borane dimethylamine complex, borane trimethylamine complex, and amino boranes and borane amines such as aminodiborane, n-dimethylaminodiborane, tris(dimethylamino)borane, di-n-butylboronamine, dimethylaminoborane, trimethylaminoborane, ammonia-trimethylborane, and triethylaminoborane. Suitable ammonium compounds are ammonium or alkyl ammonium halides, and aromatic compounds such as imidazole, pyridine, pyrimidine, pyrazine, perchlorates, $PF_6^-$, and other anions of the disclosure that are compatible with any component of the cell which is in contact those components comprising at least the electrolyte, salt bridge, the reactants of each of the half-cells, and electrodes. The electrolyte or salt bridge may also comprise these compounds. Exemplary ambient temperature $H^+$ conducting molten salt electrolytes are 1-ethyl-3-methylimidazolium chloride-$AlCl_3$ and pyrrolidinium based protic ionic liquids. In an embodiment, the source of $H^+$ is a protonated zeolite such as HY. The source of $H^+$ may also comprise an organometallic compound such aromatic transition metal compounds such as compounds comprising ferrocene such as polyvinylferrorcene, nickelocene, cobaltocene, and other similar compounds that are protonated in an embodiment.

In embodiments, the source of $H^+$ is a compound having a metal-H bond (M-H) such as a transition metal, rutermium, rhenium, platinum, or osmium complex with other ligands such as CO, halogen, cyclopentadienyl, and triphenylphosphine. Additional suitable sources comprises metals with hydrogen bridges such as W, Lu, Ru, Mo, Co, Mn, and Y further comprising ligands such as CO, NO, and cyclopentadienyl. The source may comprise metals polyhydrides such Ir, W, Re, Pt, Os, and Rh with ligands such as tertiary phosphines and cyclopentadienyl. In another embodiment, the source of $H^+$ is a compound comprising H bound to a Group V, VI, or VII element.

The cell having $H^+$ as the migrating ion may comprise a suitable $H^+$ conducting electrolyte. Exemplary electrolytes inorganic salts with protonated cations such as ammonium. The electrolytes may comprise an ionic liquid. The electrolyte may have a low melting point such as in the range of 100-200°C. Exemplary electrolytes are ethylammonium nitrate, ethylammonium nitrate doped with dihydrogen phosphate such as about 1% doped, hydrazinium nitrate, $NH_4PO_3$-$TiP_2O_7$, and a eutectic salt of $LiNO_3$-$NH_4NO_3$. Other suitable electrolytes may comprise at least one salt of the group of $LiNO_3$, ammonium triflate (Tf = $CF_3SO_3^-$), ammonium trifluoroacetate (TFAc =$CF_3COO^-$) ammonium tetrafluorobarate ($BF_4^-$ ), ammonium methanesulfonate ($CH_3SO_3^-$), ammonium nitrate ($NO_3^-$), ammonium thiocyanate (SCN), ammonium sulfamate ($SO_3NH_2^-$), ammonium bifluoride ($HF_2^-$) ammonium hydrogen sulfate ($HSO_4^-$) ammonium bis(trifluoromethanesulfonyl)imide (TFSI = $CF_3SO_2)_2N^-$), ammonium bis(perfluoroehtanesulfonyl)imide (BETI = $CF_3CF_2SO_2)_2N^-$), hydrazinium nitrate and may further comprise a mixture such as a eutectic mixture further comprising at least one of $NH_4NO_3$, $NH_4Tf$, and $NH_4TFAc$. Other suitable solvents comprise acids such as phosphoric acid. In an embodiment, $H^+$ is generated at the anode and reduced to H at the cathode such as a non-reactive conductor such as a metal such as stainless steel (SS). The theoretical cell voltage from nonhydrino-based chemistry may be essentially zero, but a practical voltage is developed due to the formation of hydrinos during the formation of H. Exemplary cells are [Pt($H_2$), Pt/C($H_2$), borane, amino boranes and borane amines, $AlH_3$, or H-X compound X=Group V,VI, or VII element)/inorganic salt mixture comprising a liquid electrolyte such as ammonium nitrate-trifluoractetate/$Li_3N$, $Li_2NH$, or M (M=metal such as SS, a transition, inner transition, or rare earth metal)], [R-Ni/$H^+$ conductor electrolyte/at least one of Ni, Pd, Nb], [hydrogenated Pt/C/$H^+$ conductor electrolyte such as ammonium salt or Nafion/at least one of Ni, Pd, Nb], [hydrogenated Pt/C/$H^+$ conductor electrolyte such as ammonium salt or Nafion/Pd-Ag (one of $Li_3N$, alkali metal such as Li, alkaline earth metal, rare earth metal, Ti, Zr)], [$H_2$ and gas fuel cell anode comprising Pt/C/$H^+$ conductor electrolyte such as ammonium salt or Nafion/ at least one of Li, Pd, Nb, Pd-Ag (one of $Li_3N$, alkali metal such as Li, alkaline earth metal, rare earth metal, Ti, Zr)] wherein () designates inside of an H permeable chamber such as a tube, and [$H_2$ and gas fuel cell anode comprising Pt/C, R-Ni, Pt or Pd/R-Ni, hydrogenated Pt/C/$H^+$ conductor electrolyte such as ammonium salt/$Al_2O_3$/alkali metal such as Li, alkaline earth metal, $Li_3N$, rare earth metal, Ti, Zr].

In an embodiment, the cathode may comprise a hydrogen permeable membrane such as a metal tube. The $H^+$, reduced to H at the cathode, may diffuse through the membrane such as the membrane 473 shown in FIGURE 20. The membrane may separate an inner chamber 474 from the electrolyte 470. The chamber may contain a reactant such as an element, alloy, compound or other material that reacts with the H that diffuses inside of the chamber. The inner reactant may be a metal that forms a hydride such as at least one of an alkali metal such as Li, an alkaline earth metal such as Ca, Sr, and Ba, a transition metal such as Ti, an inner transition metal such as Zr, and a rare earth metal such as La. The reactant may also be a compound such as at least one of $Li_3N$ and $Li_2NH$. Exemplary cells are [Pt($H_2$), Pt/C($H_2$), borane, amino boranes and borane amines, $AlH_3$, or H-X compound X=Group V,VI, or VII element)/inorganic salt mixture comprising a liquid electrolyte such as ammonium nitrate-trifluoractetate/SS, Nd, Ni, Ta, Ti, V, Mo ($Li_3N$, $Li_2NH$, or M; M=metal such as SS, a transition, inner transition, or rare earth metal)] wherein () denotes inside of the chamber.

In an embodiment, the anode comprises a source of protons, and the cathode comprises a sink for protons. The cathode may comprise an organic molecule that is reversibly reduced by reaction with electrons and protons. Suitable exemplary organic molecules are methylene blue (methylthioninium chloride), diphenylbenzidine sulfonate, diphenylamine sulfonate, dichlorophenolindophenol, indophenol, N-phenylanthranilic acid, N-ethoxychrysoidine (4-(4-Ethoxyphenylazo)-1,3-phenylenediamine monohydrochloride), dianisidine (4-(4-amino-3-methoxyphenyl)-2-methoxyaniline), diphenylamine sulfonate, diphenylamine, viologens (bipyridinium derivatives of 4,4'bipyridyl), thionine, indigotetrasulfonic acid, indigotrisulfonic acid, indigo carmine (5,5'-indigodisulfonic acid), indigomonosulfonic acid, phenosafranin, safranin T, compounds of 2,8-dimethyl-3,7-diamino-phenazine, neutral red (eurhodin dyes), anthraquinone, and similar compounds known in the Art. In an embodiment, the cell further comprises a compound or material that comprises hydrogen such as a hydride or hydrogen intercalated in a support such as carbon. The cell comprises the components of other cells of the disclosure having a migrating $H^+$. Exemplary cells are [Pt/C($H_2$) or Pd/C($H_2$)/separator proton conductor such as Nafion, aqueous salt electrolyte, or ionic liquid/organic molecule proton acceptor such as methylene blue, diphenylbenzidine sulfonate, diphenylamine sulfonate, dichlorophenolindophenol, indophenol, N-phenylanthranilic acid, N-ethoxychrysoidine (4-(4-Ethoxyphenylazo)-1,3-phenylenediamine monohydrochloride), dianisidine (4-(4-amino-3-methoxyphenyl)-2-methoxyaniline), diphenylamine sulfonate, diphenylamine, viologens (bipyridinium derivatives of 4,4'bipyridyl), thionine, indigotetrasulfonic acid, indigotrisulfonic acid, indigo carmine (5,5'-indigodisulfonic acid), indigomonosulfonic acid, phenosafranin, safranin T, compounds of 2,8-dimethyl-3,7-diamino-phenazine, neutral red (eurhodin dyes), or

anthraquinone, a metal hydride such as a rare earth, transition, inner transition, alkali, alkaline earth metal hydride, or $C(H_2)$].

In another embodiment, the cathode half-cell comprises a source of $H^-$ such as a hydrogen permeable cathode and a source of hydrogen such as a $Ti(H_2)$, $Nb(H_2)$, or $V(H_2)$ cathode (($H_2$) designates a source of hydrogen such as hydrogen gas that permeates through the cathode to contact the electrolyte) or hydride such as at least one of an alkaline or alkaline earth hydride, a transition metal hydride such as Ti hydride, an inner transition metal hydride such as Nb, Zr, or Ta hydride, palladium or platinum hydride, and a rare earth hydride. The $H^-$ migrates to the anode half-cell compartment. The migration may be through a salt bridge that is a hydride conductor. The cell may further comprise an electrolyte. In another embodiment, the salt bridge may be replaced by an electrolyte such as a molten eutectic salt electrolyte such as LiCl-KCl or LiF-LiCl. In the anode half-cell compartment, the $H^-$ is oxidized to H. The H may serve as a reactant to from hydrinos with a catalyst. At least some H may also react with a source of catalyst to form the catalyst or at least one H may comprise the catalyst. The source of catalyst may be a nitride or imide such as an alkali metal nitride or imide such as $Li_3N$ or $Li_2NH$. In an embodiment, the anode reactants such as at least one of a nitride and imide such as $Li_3N$ and $Li_2NH$ may be contained in a chamber such as a H permeable chamber such as a tube, or the chamber may comprise a H permeable membrane in contact with the electrolyte. The hydride ion in the electrolyte may be oxidized at the wall of the chamber or membrane and diffuse through the wall or membrane to react with the reactants in the chamber wherein the hydrino reaction may occur between the formed catalyst such as Li and H. The imide or amide anode half-cell product may be decomposed and the hydrogen may be returned to the metal of the cathode half-cell compartment to reform the corresponding hydride. Hydrogen reacted to form hydrinos may be made up. The hydrogen may be transferred by pumping or electrolytically. In exemplary reactions, $M_aH$ is the cathode metal hydride and M is a catalyst metal such as Li, Na, or K:

Cathode Reaction

$$M_aH + e^- \text{ to } M_a + H^- \qquad (266)$$

Anode Reaction

$$2H^- + Li_3N \text{ or } Li_2NH \text{ to } Li + H(1/p) + Li_2NH \text{ or } LiNH_2 + 2e^- \qquad (267)$$

Regeneration

$$Li + Li_2NH \text{ or } LiNH_2 + M_a \text{ to } M_aH + Li_3N \text{ or } Li_2NH \qquad (268)$$

Net

$$H \text{ to } H(1/p) + \text{energy at least partially as electricity} \qquad (269)$$

The cell may further comprise an anode or cathode support material such as a boride such as $GdB_2$, $B_4C$, $MgB_2$, $TiB_2$, $ZrB_2$, and $CrB_2$, a carbide such as TiC, $YC_2$, or WC or TiCN. Suitable exemplary cells are [$Li_3N$/LiCl-KCl/$Ti(H_2)$], [$Li_3N$/LiCl-KCl/$Nb(H_2)$], [$Li_3N$/LiCl-KCl/$V(H_2)$], [$Li_2NH$/LiCl-KCl/$Ti(H_2)$], [$Li_2NH$/LiCl-KCl/$Nb(H_2)$], [$Li_2NH$/LiCl-KCl/$V(H_2)$], [$Li_3N$ TiC/LiCl-KCl/$Ti(H_2)$], [$Li_3N$ TiC/LiCl-KCl/$Nb(H_2)$], [$Li_3N$ TiC/LiCl-KCl/$V(H_2)$], [$Li_2NH$ TiC/LiCl-KCl/$Ti(H_2)$], [$Li_2NH$ TiC/LiCl-KCl/$Nb(H_2)$], [$Li_2NH$ TiC/LiCl-KCl/$V(H_2)$], [$Li_3N$/LiCl-KCl/LiH], [$Li_3N$/LiCl-KCl/NaH], [$Li_3N$/LiCl-KCl/KH], [$Li_3N$/LiCl-KCl/$MgH_2$], [$Li_3N$/LiCl-KCl/$CaH_2$], [$Li_3N$/LiCl-KCl/$SrH_2$], [$Li_3N$/LiCl-KCl/$BaH_2$], [$Li_3N$/LiCl-KCl/$NbH_2$], [$Li_3N$/LiCl-KCl/$ZrH_2$], [$Li_3N$/LiCl-KCl/$LaH_2$], [$Li_2NH$/LiCl-KCl/LiH], [$Li_2NH$/LiCl-KCl/NaH], [$Li_2NH$/LiCl-KCl/KH], [$Li_2NH$/LiCl-KCl/$MgH_2$], [$Li_2NH$/LiCl-KCl/$CaH_2$], [$Li_2NH$/LiCl-KCl/$SrH_2$], [$Li_2NH$/LiCl-KCl/$BaH_2$], [$Li_2NH$/LiCl-KCl/$NbH_2$], [$Li_2NH$/LiCl-KCl/$ZrH_2$], [$Li_2NH$/LiCl-KCl/$LaH_2$], [$Li_3N$ TiC/LiCl-KCl/LiH], [$Li_3N$ TiC/LiCl-KCl/NaH], [$Li_3N$ TiC/LiCl-KCl/KH], [$Li_3N$ TiC/LiCl-KCl/$MgH_2$], [$Li_3N$ TiC/LiCl-KCl/$CaH_2$], [$Li_3N$ TiC/LiCl-KCl/$SrH_2$], [$Li_3N$ TiC/LiCl-KCl/$BaH_2$], [$Li_3N$ TiC/LiCl-KCl/$NbH_2$], [$Li_3N$ TiC/LiCl-KCl/$ZrH_2$], [$Li_3N$ TiC/LiCl-KCl/$LaH_2$], [$Li_2NH$ TiC/LiCl-KCl/LiH], [$Li_2NH$ TiC/LiCl-KCl/NaH], [$Li_2NH$ TiC/LiCl-KCl/KH], [$Li_2NH$ TiC/LiCl-KCl/$MgH_2$], [$Li_2NH$ TiC/LiCl-KCl/$CaH_2$], [$Li_2NH$ TiC/LiCl-KCl/$SrH_2$], [$Li_2NH$ TiC/LiCl-KCl/$BaH_2$], [$Li_2NH$ TiC/LiCl-KCl/$NbH_2$], [$Li_2NH$ TiC/LiCl-KCl/$ZrH_2$], [$Li_2NH$ TiC/LiCl-KCl/$LaH_2$], [Ni($Li_3N$)/LiCl-KCl/$CeH_2$ CB], [Ni($Li_3N$ TiC)/LiCl-KCl/$CeH_2$ CB], and [Ni(Li LiCl-KCl)/LiCl-KCl LiH/Fe(H2)] wherein () designates inside of an H permeable chamber such as a tube.

In an embodiment comprising the M-N-H system such as a cell having at least one half-cell reactant or product comprising at least one of $MNH_2$, $M_2NH$, and $M_3N$, at least one H serves as a catalyst for another. The catalyst mechanism is supported by the NMR peaks corresponding to $H_2(1/2)$, $H_2(1/3)$ and $H_2(1/4)$ at 2.2, 1.65, and 1.2 ppm , respectively.

In other embodiments, the source of catalyst may be another compound that releases the catalyst upon reaction

with H formed by the oxidation of $H^-$ at the anode. Suitable compounds are salts that form hydrogen acid anions or acids such as $Li_2SO_4$ that can form $LiHSO_4$ or $Li_3PO_4$ that can form $Li_2HPO_4$, for example. Exemplary reactions are
Cathode Reaction

$$M_aH + e^- \text{ to } M_a + H^- \quad (270)$$

Anode Reaction

$$2H^- + Li_2SO_4 \text{ to } Li + H(1/p) + LiHSO_4 + 2e^- \quad (271)$$

Regeneration

$$LiHSO_4 + M_a \text{ to } M_aH + Li_2SO_4 \quad (272)$$

Net

$$H \text{ to } H(1/p) + \text{energy at least partially as electricity} \quad (273)$$

The H transfer reactions involving these systems may be the source of the catalyst as well as detail in the disclosure.

In another embodiment, the anode half-cell comprises a source of metal cation such as an alkali metal cation such as $Li^+$. The source may be the corresponding metal such as Li or an alloy of the metal such as at least one of $Li_3Mg$, LiAl, LiSi, LiB, LiC, LiPb, LiTe, LiSe such as $Li_2Se$, LiCd, LiBi, LiPd, LiSn, $Li_2CuSn$, $Li_xIn_{1-y}Sb$ ($0<x<3$, $0<y<1$), LiSb, LiZn, Li metal-metalloid alloys such as oxides, nitrides, borides, and silicides, and mixed-metal-Li alloys. The cation such as $Li^+$ migrates to the cathode half-cell compartment. The cell may have an electrolyte. The cation such as $Li^+$ may migrate through a molten salt electrolyte such as a eutectic molten salt mixture such as a mixture of alkali metal halides such as LiF-LiCl or LiCl-KCl. Exemplary cells are [LiSb/LiCl-KCl/Se $TiH_2$], [LiSb/LiCl-KCl/Se $ZrH_2$], [LiSn/LiCl-KCl/Se $TiH_2$], [LiSn/LiCl-KCl/Se $ZrH_2$], [LiH + at least one of LiAl, LiSi, LiB, LiC, LiPb, LiTe, LiSe, LiCd, LiBi, LiPd, LiSn, $Li_2CuSn$, $Li_xIn_{1-y}Sb$ ($0<x<3$, $0<y<1$), LiSb, LiZn, and Li metal-metalloid alloys/LiCl-KCl/LiH], [LiH + at least one of LiAl, LiSi, LiB, LiC, LiPb, LiTe, LiSe, LiCd, LiBi, LiPd, LiSn, $Li_2CuSn$, $Li_xIn_{1-y}Sb$ ($0<x<3$, $0<y<1$), LiSb, LiZn, and Li metal-metalloid alloys + support/LiCl-KCl/LiH], [LiH + at least one of LiAl, LiSi, LiB, LiC, LiPb, LiTe, LiSe, LiCd, LiBi, LiPd, LiSn, $Li_2CuSn$, $Li_xIn_{1-y}Sb$ ($0<x<3$, $0<y<1$), LiSb, LiZn, and Li metal-metalloid alloys/LiCl-KCl/LiH + support], and [LiH + at least one of LiAl, LiSi, LiB, LiC, LiPb, LiTe, LiSe, LiCd, LiBi, LiPd, LiSn, $Li_2CuSn$, $Li_xIn_{1-y}Sb$ ($0<x<3$, $0<y<1$), LiSb, LiZn, and Li metal-metalloid alloys + support/LiCl-KCl/LiH + support] wherein suitable exemplary supports are a carbide, boride, or carbon.

Alternatively, the migration may be through a salt bridge that is a cation conductor such as beta alumina. An exemplary $Li^+$ salt bridge/electrolyte comprises borosilicate glass-fiber sheet saturated with a 1 M $LiPF_6$ electrolyte solution in 1:1 dimethyl carbonate/ethylene carbonate. In the cathode half-cell compartment, the cation such as $Li^+$ is reduced. The reduction product such as an atom such as Li may serve as a catalyst and may also reserve as a reactant to from hydrogen from a source wherein the catalyst and H may react to form hydrinos. The source of hydrogen may be an amide or imide such as an alkali metal amide or imide such as $LiNH_2$ or $Li_2NH$. The source of hydrogen may be a hydrogen storage material. The imide or nitride cathode half-cell product may be hydrided by addition of hydrogen, and the source of cation such as Li may be returned to the anode compartment electrolytically or by physical or chemical means. In exemplary reactions, Li is the anode metal and Li is the catalyst. In other embodiments, Na, or K may replace Li.
Cathode Reaction

$$2Li^+ + 2e^- + LiNH_2 \text{ or } Li_2NH \text{ to } Li + H(1/p) + Li_2NH \text{ or } Li_3N \quad (274)$$

Anode Reaction

$$Li \text{ to } Li^+ + e- \quad (275)$$

Regeneration with Li to anode compartment

$$Li_2NH \text{ or } Li_3N + H \text{ to } LiNH_2 \text{ or } Li_2NH + Li \quad (276)$$

Net

$$H \text{ to } H(1/p) + \text{energy at least partially as electricity} \quad (277)$$

The cell may further comprise an anode or cathode support material such as a boride such as $GdB_2$, $B_4C$, $MgB_2$, $TiB_2$, $ZrB_2$, and $CrB_2$, a carbide such as TiC, $YC_2$, or WC or TiCN. Suitable exemplary cells are [Li/borosilicate glass-fiber sheet saturated with a 1 M $LiPF_6$ electrolyte solution in 1:1 dimethyl carbonate/ethylene carbonate/$LiNH_2$], [Li or Li alloy such as $Li_3Mg$ or LiC/ olefin separator $LiBF_4$ in tetrahydrofuran (THF)/$LiNH_2$], [Li/borosilicate glass-fiber sheet saturated with a 1 M $LiPF_6$ electrolyte solution in 1:1 dimethyl carbonate/ethylene carbonate/ $Li_2NH$], [LiAl/borosilicate glass-fiber sheet saturated with a 1 M $LiPF_6$ electrolyte solution in 1:1 dimethyl carbonate/ethylene carbonate/ $LiNH_2$], [LiAl/borosilicate glass-fiber sheet saturated with a 1 M $LiPF_6$ electrolyte solution in 1:1 dimethyl carbonate/ethylene carbonate/$Li_2NH$], [Li/Li-beta alumnia/$LiNH_2$], [Li/Li-beta alumnia/$LiNH_2$], [LiAl/Li-beta alumnia/$LiNH_2$], [LiAl/ Li-beta alumnia/$Li_2NH$], [Li/borosilicate glass-fiber sheet saturated with a 1 M $LiPF_6$ electrolyte solution in 1:1 dimethyl carbonate/ethylene carbonate/$LiNH_2$ TiC], [Li/borosilicate glass-fiber sheet saturated with a 1 M $LiPF_6$ electrolyte solution in 1:1 dimethyl carbonate/ethylene carbonate/ $Li_2NH$ TiC], [LiAl/borosilicate glass-fiber sheet saturated with a 1 M $LiPF_6$ electrolyte solution in 1:1 dimethyl carbonate/ethylene carbonate/ $LiNH_2$ TiC],[LiAl/borosilicate glass-fiber sheet saturated with a 1 M $LiPF_6$ electrolyte solution in 1:1 dimethyl carbonate/ethylene carbonate/$Li_2NH$ TiC], [Li/Li-beta alumnia/$LiNH_2$ TiC], [Li/Li-beta alumnia/$LiNH_2$ TiC], [LiAl/Li-beta alumnia/$LiNH_2$ TiC], [LiAl/ Li-beta alumnia/$Li_2NH$ TiC], [Li/LiCl-KCl/$LiNH_2$], [Li/LiCl-KCl/$Li_2NH$], [LiAl/LiCl-KCl/$LiNH_2$], [LiAl/LiCl-KCl/$Li_2NH$], [Li/LiF-LiCl/$LiNH_2$], [Li/LiF-LiCl/$LiNH_2$], [LiAl/LiF-LiCl/$LiNH_2$], [LiAl/LiF-LiCl/$Li_2NH$], [Li/LiCl-KCl/$LiNH_2$ TiC], [Li/LiCl-KCl/$Li_2NH$ TiC], [LiAl/LiCl-KCl/$LiNH_2$ TiC],[LiAl/LiCl-KCl/$Li_2NH$ TiC], [Li/LiF-LiCl/$LiNH_2$ TiC], [Li/LiF-LiCl/$LiNH_2$ TiC], [LiAl/LiF-LiCl/$LiNH_2$ TiC], [LiAl/LiF-LiCl/$Li_2NH$ TiC], [$Li_2Se$/LiCl-KCl/$LiNH_2$], [$Li_2Se$/LiCl-KCl/$Li_2NH$], [$Li_2Se$/LiCl-KCl/$LiNH_2$ TiC], [$Li_2Se$/LiCl-KCl/$Li_2NH$ TiC]. Another alkali metal may replace Li, and mixtures of reactants may be used in at least one of the cathode or anode. Additional exemplary cells are [M (M = alkali metal) or M alloy such as an Li alloy as given in the disclosure/BASE/$MNH_2$ and optionally a metal hydride such as $CaH_2$, $SrH_2$, $BaH_2$, $TiH_2$, $ZrH_2$, $LaH_2$, $CeH_2$ or other rare earth hydride].

Alternatively, the anode may comprise as a source of Li that forms a compound such as a selenide or telluride at the cathode. Exemplary cells are [$LiNH_2$/LiCl-KCl/Te], [$LiNH_2$/LiCl-KCl/Se], [$LiNH_2$/LiCl-KCl/Te $TiH_2$], [$LiNH_2$/LiCl-KCl/Se $TiH_2$], and [$LiNH_2$/LiCl-KCl/Te $ZrH_2$], [$LiNH_2$/LiCl-KCl/Se $ZrH_2$], and [LiBH4 Mg/Celgard LP 30/Se].

In other embodiments analogous to the Li-N-H system, another catalyst or source of catalyt such as Na, K, or Ca replaces Li corresponding to the Na-N-H, K-N-H, and Ca-N-H systems, respectively.

In another embodiment, the anode half-cell comprises a source of metal cation such as an alkali metal cation such as $Li^+$. The source may at least one of a metal such as Li, a hydride such as LiH, $LiBH_4$, and $LiAlH_4$, and an intercalation compound such as one of carbon, hexagonal boron nitride, and metal chalcogenides. Suitable lithiated chalcogenides are those having a layered structure such as $MoS_2$ and $WS_2$. The layered chalcogenide may be one or more from the group of $TiS_2$, $ZrS_2$, $HfS_2$, $TaS_2$, $TeS_2$, $ReS_2$, $PtS_2$, $SnS_2$, SnSSe, $TiSe_2$, $ZrSe_2$, $HfSe_2$, $TaSe_2$, $TeSe_2$, $ReSe_2$, $PtSe_2$, $SnSe_2$, $TiTe_2$, $ZrTe_2$, $VTe_2$, $NbTe_2$, $TaTe_2$, $MoTe_2$, $WTe_2$, $CoTe_2$, $RhTe_2$, $IrTe_2$, $NiTe_2$, $PdTe_2$, $PtTe_2$, $SiTe_2$, $NbS_2$, $TaS_2$, $MoS_2$, $WS_2$, $NbSe_2$, $NbSe_3$, $TaSe_2$, $MoSe_2$, $VSe_2$, $WSe_2$, and $MoTe_2$. The source of the metal cation may further comprise at least one lithium transition metal nitrides such as $Li_{2.6}M_{0.4}N$ (M=Co, Cu, Ni), $Li_{2.6}Co_{0.4}N$, $Li_{2.6}Co_{0.2}Cu_{0.2}N$, $Li_{2.6}Co_{0.2}Ni_{0.2}N$, $Li_{2.6}Cu_{0.2}Ni_{0.2}N$, $Li_{2.6}Co_{0.25}Cu_{0.15}N$, $Li_{2.6}Co_{0.2}Cu_{0.1}Ni_{0.1}N$, $Li_{2.6}Co_{0.25}Cu_{0.1}Ni_{0.05}N$, and $Li_{2.6}Co_{0.2}Cu_{0.15}Ni_{0.05}N$, composites such as compounds such as $Li_{2.6}M_{0\cdot4}N$ and at least one of SiC, silicon oxides, and metal oxides such as $CO_30_4$ and $LiTi_2O_4$, and alloys such as SnSb, lithium transition metal oxides such as $LiTi_2O_4$, lithium tin oxides, an alloy of the metal such as at least one of lithium alloys such as $Li_3Mg$, LiAl, LiSi, LiB, LiC, LiPb, LiTe, LiSe such as $Li_2Se$, LiCd, LiBi, LiPd, LiSn, $Li_2CuSn$, $Li_xIn_{1-y}Sb$ ($0<x<3$, $0<y<1$), LiSb, LiZn, Li metal-metalloid alloys such as oxides, nitrides, borides, and silicides, and mixed-metal-Li alloys, compounds of the Li-N-H system such as $LiNH_2$, $Li_2NH$, and $Li_3N$, and lithium compounds such as chalcogenides such as $Li_2Se$, $Li_2Te$, and $Li_2S$. The cation such as $Li^+$ migrates to the cathode half-cell compartment. The cell may have an electrolyte or a solvent. The cation such as $Li^+$ may migrate through a molten salt electrolyte such as a eutectic molten salt mixture such as a mixture of alkali metal halides such as LiF-LiCl or LiCl-KCl. The cell may have a salt bridge for the migrating ion such as $Li^+$. Then, the salt bridge may be a glass such as borosilicate glass saturated with $Li^+$ electrolyte or a ceramic such as $Li^+$ impregnated beta alumina. At least one half cell may further comprise a source of Li comprising oxides such as $LiWO_2$, $Li_6Fe_2WO_3$, $Li_xWO_3$, $Li_xV_2O_5$, $LiCoO_2$, $LiFePO_4$, $LiMn_2O_4$, $LiNiO_2$, $Li_2FePO_4F$, $LiMnPO_4$, $VOPO_4$ system, $LiV_2O_5$, $LiMgSO_4F$, $LiMSO_4F$ (M=Fe, Co, Ni, transition metal), $LiMPO_4F$ (M=Fe, Ti), $Li_x[Li_{0.33}Ti_{1.67}O_4]$, or $Li_4Ti_5O_{12}$, layered transition metal oxides such as Ni-Mn-Co oxides such as $LiNi_{1/3}Co_{1/3}Mn_{1/3}O_2$, and $Li(Li_aNi_xCo_yMn_z)O_2$, and $LiTi_2O_4$. At least one half-cell may further comprise a sink for Li comprising lithium deficient versions of these compounds such as these oxides. In general, the oxide ions may have a face-centered cubic packing including those with the spinel structure (e.g. $LiMn_2O_4$ and variants containing more than one redox ion) and those with ordered cation distributions. The latter are categorized as having layered structure. $LiCoO_2$ and $LiNiO_2$ are exemplary compounds. Additional suitable materials have hexagonal close-packed oxide packing including some with olivine-related structures such as $LiFePO_4$. Whereas, others have more open crystal structures that may be refereed to as framework or skeleton structures. These are further regarded as containing polyanions. Exemplary materials are some sulfates, tungstates, phosphates, Nasicon, and Nasicon-related materials such as $Li_3V_2(PO_4)_3$ and $LiFe_2(SO_4)_3$, mixtures, and polyanion mixtures. The lithium ions may occupy more that one type of interstitial position.

Suitable exemplary phosphate based CIHT compounds for electrode materials that may serve as a source or sink of the migrating ion such as $Li^+$ or $Na^+$ that may be a source of the catalyst. They may act to displace H in embodiments to cause the formation of hydrinos whereby one or more H atoms may serve as the catalyst are $LiFePO_4$, $LiFe_{1-x}M_xPO_4$, $Li_3V_2(PO_4)_3$, $LiVPO_4F$, $LiVPO_4OH$, $LiVP_2O_7$, $Li_2MPO_4F$, $Na_2MPO_4F$, $Li_4V_2(SiO_4)(PO_4)_2$, $Li_3V_{1.5}Al_{0.5}(PO_4)_3$, $\beta$-$LiVOPO_4$, $NaVPO_4F$, $Na_3V_2(PO_4)_2F_3$, Novel Phase A, Novel Phase B, Novel Phase C, and these compounds with the alkali metal replaced by another such as Li replaced by Na or vice versa. In general, the CIHT cell material may comprise the general formula $A_2FePO_4F$ wherein A may be either Li or Na or mixtures, OH may substitute for F in these compounds. These materials may be at least one of depleted in the alkali metal and have H at least partially substituted for the alkali in embodiments.

The cell may comprise at least one of the anode, electrolyte, salt bride, separator, and cathode of lithium ion batteries known to those skilled in the Art and further comprise a source of hydrogen and other reactants such as one or more supports to facilitate the formation of hydrinos. The catalyst Li may be formed in the presence of H formed in or present in the corresponding half-cell with Li. The cell may comprise Li source anode such as a Li intercalation compound, nitride, or chalcogenide, at least one of an electrolyte, separator, and salt bridge, and a cathode comprising at least one of a metal hydride such as a rare earth hydride, transition metal hydride such as R-Ni or $TiH_2$, or inner transition metal hydride such as $ZrH_2$, a hydrogenated matrix material such as hydrogenated carbon such as active carbon, a Li intercalation compound such as a transition metal oxide, tungsten oxide, molybdenum oxide, niobium oxide, vanadium oxide, a metal oxide or metal oxyanion such as $LiCoO_2$, or $LiFePO_4$, or other chalcogenide. Exemplary lithiated cathode materials are a sink of Li comprising oxides such as $Li_xWO_3$, $Li_xV_2O_5$, $LiCoO_2$, $LiFePO_4$, $LiMn_2O_4$, $LiNiO_2$, $Li_2FePO_4F$, $LiMnPO_4$, $VOPO_4$ system, $LiV_2O_5$, $LiMgSO_4F$, $LiMSO_4F$ (M=Fe, Co, Ni, transition metal), $LiMPO_4F$ (M=Fe, Ti), $Li_x[Li_{0.33}Ti_{1.67}O_4]$, or $Li_4Ti_5O_{12}$, layered transition metal oxides such as Ni-Mn-Co oxides such as $LiNi_{1/3}Co_{1/3}Mn_{1/3}O_2$, and $Li(Li_aNi_xCo_yMn_z)O_2$, and $LiTi_2O_4$. Exemplary lithiated anode materials are a source of Li such as graphite ($LiC_6$), hard carbon ($LiC_6$), titanate ($Li_4Ti_5O_{12}$), Si ($Li_{4.4}Si$), and Ge ($Li_{4.4}Ge$). The cathode may comprise amino boranes and borane amines that react with the reduced migrating ion. Exemplary cells are [LiC/ polypropylene membrane saturated with a 1 M $LiPF_6$ electrolyte solution in 1:1 dimethyl carbonate/ethylene carbonate/$CoO_2$ R-Ni], [$Li_3N$/ polypropylene membrane saturated with a 1 M $LiPF_6$ electrolyte solution in 1:1 dimethyl carbonate/ethylene carbonate/$CoO_2$ R-Ni], [Li/polyolefin separator LP 40/$MH_x$] wherein $MH_x$ is a hydride such as one of an alkali metal, alkaline earth metal, transition metal, inner transition metal, rare earth metal, R-Ni, hydrogenated carbon, carbon MH (M=alkali metal)], [Li source such as Li metal or alloy/lithium solid electrolyte or molten salt electrolyte such as a eutectic salt/H source such as a hydride ($MH_x$) or $M(H_2)$ wherein M is a $H_2$ permeable metal or $H_2$ diffusion cathode], and [Li source such as Li metal or alloy/polyolefin separator LP 40/H source such as a hydride or $M(H_2)$ wherein M is a $H_2$ permeable metal or $H_2$ diffusion cathode]. In an embodiment, the $H_2$ permeable metal or $H_2$ diffusion cathode is embedded in a hydrogen dissociator and support such as at least one of carbon, Pt/C, Pd/C, Ru/C, Ir/C, a carbide, a boride, and a metal powder such as Ni, Ti, and Nb. Suitable hydrogen permeable metals are Pd, Pt, Nb, V, Ta, and Pd-Ag alloy. In the case, that the electrolyte is a molten salt, the salt may comprise a carbonate such as an alkali carbonate.

The migrating cation may undergo reduction at the cathode and form an alloy or compound with a reactant of the cathode compartment. The reduced cation may form a metal such as Li, a hydride such as LiH, $LiBH_4$, and $LiAlH_4$, and an intercalation compound such as one of carbon, hexagonal boron nitride, and metal chalcogenides. Suitable chalcogenides are those having a layered structure such as $MoS_2$ and $WS_2$. The layered chalcogenide may be one or more form the list of $TiS_2$, $ZrS_2$, $HfS_2$, $TaS_2$, $TeS_2$, $ReS_2$, $PtS_2$, $SnS_2$, SnSSe, $TiSe_2$, $ZrSe_2$, $HfSe_2$, $VSe_2$, $TaSe_2$, $TeSe_2$, $ReSe_2$, $PtSe_2$, $SnSe_2$, $TiTe_2$, $ZrTe_2$, $VTe_2$, $NbTe_2$, $TaTe_2$, $MoTe_2$, $WTe_2$, $CoTe_2$, $RhTe_2$, $IrTe_2$, $NiTe_2$, $PdTe_2$, $PtTe_2$, $SiTe_2$, $NbS_2$, $TaS_2$, $MoS_2$, $WS_2$, $NbSe_2$, $NbSe_3$, $TaSe_2$, $MoSe_2$, $WSe_2$, and $MoTe_2$. An exemplary Li cathode is $LiTiS_2$. The cathode half-cell reactants may comprise those of lithium ion batteries such as a transition metal oxide, tungsten oxide, molybdenum oxide, niobium oxide, vanadium oxide, $Li_xWO_3$, $Li_xV_2O_5$, $LiCoO_2$, $LiFePO_4$, $LiMn_2O_4$, $LiNiO_2$, $Li_2FePO_4F$, $LiMnPO_4$, $VOPO_4$ system, $LiV_2O_5$, $LiMgSO_4F$, $LiMSO_4F$ (M=Fe, Co, Ni, transition metal), $LiMPO_4F$ (M=Fe, Ti), $Li_x[Li_{0.33}Ti_{1.67}O_4]$, or $Li_4Ti_5O_{12}$, layered transition metal oxides such as Ni-Mn-Co oxides such as $LiNi_{1/3}Co_{1/3}Mn_{1/3}O_2$, and $Li(Li_aNi_xCo_yMn_z)O_2$, and $LiTi_2O_4$. In an embodiment, the charged negative electrode is a source of migrating $M^+$ such as $Li^+$, and electrons to the circuit comprising an alkali metal (e.g. lithium) intercalated chalcogenide. The alloy or compound formed may be a lithium alloy or compound such as at least one of $Li_3Mg$, LiAl, LiSi, LiB, LiC, LiPb, LiTe, LiSe such as $Li_2Se$, LiCd, LiBi, LiPd, LiSn, $Li_2CuSn$, $Li_xIn_{1-y}Sb$ ($0<x<3$, $0<y<1$), LiSb, LiZn, Li metal-metalloid alloys such as oxides, nitrides, borides, and silicides, and mixed-metal-Li alloys, compounds of the Li-N-H system such as $LiNH_2$, $Li_2NH$, and $Li_3N$, and lithium compounds such as chalcogenides such as $Li_2Se$, $Li_2Te$, and $Li_2S$. At least one of the anode or cathode compartment reactants comprises a source of hydrogen such as hydrogen gas or hydrogen from metal permeation, a hydride, or a compound of the Li-N-H or similar system. The hydrogen permeation source may be a tube of a metal that forms an alloy with the reduced migrating ion such as Li. The tube may be internally pressurized with hydrogen. The tube may be comprised of exemplary metals such as Sb, Pb, Al, Sn, and Bi. At least one of the cathode and anode reactants may further comprise a support such as a carbide, boride, or carbon. In other embodiments, other catalyst or sources of catalysts such as Na, K, Rb, or Cs substitute for Li.

The cell may comprise an intercalation or sandwich compound at least one of the cathode and anode, an electrolyte or salt bridge, and a source of hydrogen at least one of the cathode or anode. At least one of the cathode and anode half-cell reactants may comprise those of a lithium ion battery. The source of hydrogen may be a hydride, hydrogen via permeation through a membrane, and a hydrogenated support. The migrating ion may be $Li^+$, $Na^+$, or $K^+$ with a suitable electrolyte that may comprise an organic electrolyte such as $MPF_6$ (M is the corresponding alkali metal) in a carbonate solvent or a molten eutectic salt such as a mixture or alkali halides such as those of the same alkali metal M.

In an embodiment, the electrochemistry creates hydrino reactants of a catalyst and H at, at least one of the cathode or anode or their compartments. Exemplary reactions wherein metal M is the catalyst or source of catalyst and $M_a$ and Mb are metals that form an alloy or compound with M are

Cathode Reaction

$$M^+ + e^- + H + M_a \text{ to } MM_a + H(1/p) \text{ or } M^+ + e^- + H \text{ to } M + H(1/p) \quad (278)$$

Anode Reaction

$$M \text{ to } M^+ + e^- \text{ or } MM_b \text{ to } M^+ + e^- \quad (279)$$

Net

$M + H$ to $M + H(1/p)$ + energy at least partially as electricity $M + M_a + H$ to $MM_a + H(1/p)$ + energy at least partially as electricity

$$MM_b + H \text{ to } M_b + M + H(1/p) + \text{energy at least partially as electricity}$$

$$MM_b + M_a + H \text{ to } M_b + MM_a + H(1/p) + \text{energy at least partially as electricity} \quad (280)$$

Exemplary cells are [Li/LiCl-KCl/Sb or LiSb $TiH_2$], [Li/LiCl-KCl/Sb or LiSb LiH], [Li/LiCl-KCl/Sb or LiSb $ZrH_2$], [Li/LiCl-KCl/Sb or LiSb $MgH_2$], [LiSn/LiCl-KCl/Sb or LiSb $MgH_2$], [LiSn/LiCl-KCl/Sb or LiSb LiH], [LiH/LiCl-KCl/Sb or LiSb $TiH_2$], [LiH/LiCl-KCl/Sb or LiSb $ZrH_2$], [LiH/LiCl-KCl/Sb or LiSb $TiH_2$], [LiH/LiCl-KCl/Sb or LiSb LiH], [LiH/LiCl-KCl/Sb or LiSb $MgH_2$], [LiSn/LiCl-KCl/Sb or LiSb $MgH_2$], [LiSn/LiCl-KCl/Sb or LiSb LiH], [LiSn/LiCl-KCl/Sb or LiSb $TiH_2$], [LiSn/LiCl-KCl/Sb or LiSb $ZrH_2$], [LiPb/LiCl-KCl/Sb or LiSb $MgH_2$], [LiPb/LiCl-KCl/Sb or LiSb LiH], [LiPb/LiCl-KCl/Sb or LiSb $TiH_2$], [LiPb/LiCl-KCl/Sb or LiSb $ZrH_2$], [LiH $Li_3N$/LiCl-KCl/Se], [$Li_3N$/LiCl-KCl/Se $TiH_2$], [$Li_2NH$/LiCl-KCl/Se], [$Li_2NH$/LiCl-KCl/Se $TiH_2$], [LiH $Li_3N$/LiCl-KCl/MgSe], [$Li_3N$/LiCl-KCl/MgSe $TiH_2$], [$Li_2NH$/LiCl-KCl/MgSe], [$Li_2NH$/LiCl-KCl/MgSe $TiH_2$], [LiH $Li_3N$/LiCl-KCl/Te], [$Li_3N$/LiCl-KCl/Te $TiH_2$], [$Li_2NH$/LiCl-KCl/Te], [$Li_2NH$/LiCl-KCl/Te $TiH_2$], [LiH $Li_3N$/LiCl-KCl/MgTe], [$Li_3N$/LiCl-KCl/MgTe $TiH_2$], [$Li_2NH$/LiCl-KCl/MgTe], [$Li_2NH$/LiCl-KCl/MgTe $TiH_2$], [LiH $Li_3N$/LiCl-KCl/$LiNH_2$], [$Li_3N$/LiCl-KCl/$LiNH_2$], [LiH $Li_2NH$/LiCl-KCl/$Li_2NH$], [$Li_2NH$/LiCl-KCl/$Li_2NH$], [LiH $Li_3N$/LiCl-KCl/$LiNH_2$ $TiH_2$], [$Li_3N$/LiCl-KCl/$LiNH_2$ $TiH_2$], [LiH $Li_2NH$/LiCl-KCl/$Li_2NH$ $TiH_2$], [$Li_2NH$/LiCl-KCl/$Li_2NH$ $TiH_2$], [$Li_3N$ $TiH_2$/LiCl-KCl/$LiNH_2$], [$Li_2NH$ $TiH_2$/LiCl-KCl/$Li_2NH$], [at least one of Li, LiH, LiAl, LiSi, LiB, LiC, LiPb, LiTe, LiSe, LiCd, LiBi, LiPd, LiSn, $Li_2CuSn$, $Li_xIn_{1-y}Sb$ ($0<x<3$, $0<y<1$), LiSb, LiZn, Li metal-metalloid alloys, $Li_3N$, $Li_2NH$, $LiNH_2$, and a support/LiCl-KCl/at least one source of H such as LiH, $MgH_2$, $TiH_2$, $ZrH_2$, a support, and a material to form an alloy or compounds with Li such as at least of the following group of alloys or compound or the species without the Li: $Li_3Mg$, LiAl, LiSi, LiB, LiC, LiPb, LiTe, LiSe, LiCd, LiBi, LiPd, LiSn, $Li_2CuSn$, $Li_xIn_{1-y}Sb$ ($0<x<3$, $0<y<1$), LiSb, LiZn, Li metal-metalloid alloys, S, Se, Te, MgSe, MgTe, $Li_3N$, $Li_2NH$, $LiNH_2$], and [at least one of Li, LiH, LiAl, LiSi, LiB, LiC, LiPb, LiTe, LiSe, LiCd, LiBi, LiPd, LiSn, $Li_2CuSn$, $Li_xIn_{1-y}Sb$ ($0<x<3$, $0<y<1$), LiSb, LiZn, Li metal-metalloid alloys, $Li_3N$, $Li_2NH$, $LiNH_2$, and a support/a salt bridge such as borosilicate glass or Li impregnated beta alumina/at least one source of H such as LiH, $MgH_2$, $TiH_2$, $ZrH_2$, a support, and a material to form an alloy or compound with Li such as at least of the following group of alloys or compound or the species without the Li: $Li_3Mg$, LiAl, LiSi, LiB, LiC, LiPb, LiTe, LiSe, LiCd, LiBi, LiPd, LiSn, $Li_2CuSn$, $Li_xIn_{1-y}Sb$ ($0<x<3$, $0<y<1$), LiSb, LiZn, Li metal-metalloid alloys, S, Se, Te, MgSe, MgTe, $Li_3N$, $Li_2NH$, $LiNH_2$]. Cells comprising anode and cathode compartments reactants of a system such as the Li-N-H system may comprise a rocking chair design. At least one of H or Li supplied by one set of reactants to the other can react at the opposite compartment to release at least one of H or Li to establish cycle of reaction between two sets of reactants. For example, the anode reactants may comprise $Li_3N$ and the cathode reactants may comprise $LiNH_2$. The Li from the anode may react with the cathode $LiNH_2$ to form $Li_2NH$ + H. The H may react with $Li_3N$ at the anode compartment to form Li and $Li_2NH$ that continues the cycle. The reverse reaction to form the original reactants may be achieved by appropriately adding and removing at least one of H and Li or by via electrolysis.

In an embodiment of a cell having a solid electrolyte and $Li^+$ is the migrating ion, the $Li^+$ source is a lithium compound such as a lithium intercalation compound or a lithium hydride such as LiH or $LiBH_4$. Exemplary cells are [LiH/BASE/LiOH], [$LiBH_4$/BASE/LiOH], [$LiV_2O_5$/BASE/LiOH], and [LiC solvent such as LiI LiBr/BASE/LiOH]. Additional exemplary cells comprising $M^+$ (M = alkali metal) as the migrating ion are [Na/Na-BASE/LiOH], [Na/Na-BASE/$NaBH_4$],

[Li/Celgard LP 30/PtC($H_2$)], [$Li_3Mg$/Celgard LP 30/PtC($H_2$)], [$Li_3Mg$/Celgard LP 30/R-Ni], [Li1.6Ga/Celgard LP 30/R-Ni], [Na/BASE/PtC($H_2$) NaI NaBr], [Na/BASE/Pt$Al_2O_3$($H_2$) NaI NaBr], [Na/BASE/Pd$Al_2O_3$($H_2$) NaI NaBr], [Na/BASE/PtTi($H_2$) NaI NaBr], [Na/BASE/NaSH NaBr NaI], [Na/BASE/NaSH NaOH], [LiBH4/LiI CsI/Te], [LiBH4/LiI CsI/Se], [$LiBH_4$/LiI CsI/MgTe], and [LiBH4/LiI CsI/MgSe].

In an embodiment, the chemistry is regenerative by means such as electrolysis or spontaneously. In the latter case, a suitable example, according to Eqs. (278-280), is the formation of M at the cathode, the diffusion of M to the anode comprised of $M_a$, and the spontaneously reaction of M to form the alloy $MM_a$. Another exemplary embodiment further regarding Eq. (274), is the formation of M at the cathode, the reaction of M with $MNH_2$ or $M_2NH$ to form H and $M_2NH$ or $M_3N$, respectively, reaction of supplied H with $M_2NH$ or $M_3N$ to form either $MNH_2$ or $M_2NH$ and M, diffusion of M to the anode comprised of $M_a$, and the spontaneously reaction of M to form the alloy $MM_a$.

In an embodiment, the cell comprises a metal and ammonia in at least one of the cathode and anode half-cells wherein the metal forms the corresponding amide by reaction with ammonia gas. In an embodiment having a metal that reacts with nitrogen to form the corresponding metal nitride that further reacts with hydrogen to form the amide, the corresponding half-cell contains nitrogen and optionally hydrogen gas. In the absence of hydrogen gas, the amide may be formed by H in the half-cell or from hydrogen that migrates from another half-cell. The hydrogen source may be a hydride such as a metal hydride. The migrating hydrogen species may be $H^+$ or $H^-$. The cell may further comprise the other cell components of the disclosure such as an electrolyte, salt bridge or separator, support, hydrogen source, and other half-cell reactants. Exemplary cells are [M + $NH_3$/separator LP 40 or $LiBF_4$ in tetrahydrofuran (THF), ionic liquid electrolyte, solid electrolyte such as $LiAlO_2$ or BASE, eutectic salt electrolyte/M' + $NH_3$] wherein M and M' are each a metal that forms an amide by reaction with $NH_3$ such as an alkali or alkaline earth metal. Preferably, M and M' are different metals. Further exemplary cells are [M + $NH_3$ or $N_2$ and $H_2$ optionally Pt/C($H_2$)/separator LP 40 or $LiBF_4$ in tetrahydrofuran (THF), ionic liquid electrolyte, solid electrolyte such as $LiAlO_2$ or BASE, eutectic salt electrolyte/M' + $NH_3$ or $N_2$ and $H_2$ optionally a metal hydride such as $TiH_2$, $ZrH_2$, or a rare earth hydride] wherein M and M' are each a metal that forms an amide by reaction with $NH_3$ or such as an alkali or alkaline earth metal or react with $N_2$ and $H_2$ to form the corresponding amide. Preferably, M and M' are different metals. The cell may also comprise a conducting matrix. In an embodiment, the conducting matrix is a metal such as an alkali metal. Exemplary cells are [Li/ separator LP 40 or $LiBF_4$ in tetrahydrofuran (THF), ionic liquid electrolyte, solid electrolyte such as $LiAlO_2$ or BASE, eutectic salt electrolyte/$NaNH_2$ Na] and [LiC/Celgard LP 40/$N_2$ and $H_2$ gas mixture and conducting matrix such as TiC, metal powder such as Al, R-Ni, or reduced Ni, or CB or PtC].

In an embodiment, lithium amide is formed by the reaction of Li with ammonia. The anode is a source of Li, and the cathode is a source of $NH_3$. A suitable source of Li is Li metal or a Li alloy such as $Li_3Mg$. A suitable source of ammonia is $NH_3$ intercalated in carbon such as carbon black, zeolite, carbon zeolite mixtures and other materials that absorb $NH_3$. Exemplary cells are [Li or $Li_3Mg$/ olefin separator LP40/$NH_3$ intercalated carbon or $NH_3$ absorbed on zeolte]. In other embodiments, another alkali metal such as Na or K replaces Li.

In an embodiment, the migrating ion may be one of a metal ion such as an alkali metal ion such as $Li^+$, or $H^+$, or $H^-$. At least one of the cathode and anode half-cell reactants comprises amino boranes and borane amines that react with the migrating ion undergoing reduction. The reaction results in vacancies of H or H addition that cause hydrinos to be formed wherein one or more H atoms serve as a catalyst for another. In another embodiment, the reaction results in the formation of H in the presence of catalyst such as Li, K, or NaH that react to form hydrinos. Exemplary cells are [Li or Li alloy such as LiC or $Li_3Mg$/olefin separator LP 40/amino borane and borane amine], [Pt/C($H_2$)/proton conductor such as Nafion or ionic liquid/amino borane and borane amine], [amino borane and borane amine /eutectic salt $H^-$ conductor such as LiCl-KCl/hydride such as a rare earth, transition, inner transition, alkali, and alkaline earth metal]. The cell may further comprise at least one of a conductive support, matrix and binder.

In an embodiment, a cation exchange may occur between the half-cell reactants and the eutectic salt. In an example, $Li_2NH$ reacts with a cation of the electrolyte, and it is replaced by a cation from the anode half-cell. The source may be a metal or a hydride such as that designated by MH.

Cathode Reaction

$$Li^+ + Li_2NH + e^- \text{ to } Li_3N + H(1/p) \qquad (281)$$

Anode Reaction

$$MH \text{ to } M^+ + e^- + H \qquad (282)$$

Regeneration

$$Li_3N + H \text{ to } Li + Li_2NH \qquad (283)$$

$$Li + M+ \text{ to } Li^+ + M \quad (284)$$

Net

$$H \text{ to } H(1/p) + \text{energy at least partially as electricity} \quad (285)$$

In an embodiment, an ion such as $Li^+$ may be formed by the oxidation of the corresponding imide at the anode. The reaction of the migrating ion at the cathode may also involve the formation of a compound or alloy comprising the reduced migrating ion. Exemplary reactions are

Anode Reaction

$$2Li_2NH \text{ to } Li_3N + 2H + 1/2N_2 + Li^+ + e^- \text{ (Li and H react to hydrinos)} \quad (286)$$

Cathode Reaction

$$Li^+ + e^- \text{ to } Li \quad (287)$$

Net

$$2Li_2NH \text{ to } Li_3N + 2H + 1/2N_2 + Li \quad (288)$$

Anode Reaction

$$Li_2NH \text{ to } H + 1/2N_2 + 2Li^+ + 2e^- \text{ (Li and H react to hydrino H(1/4))} \quad (289)$$

Cathode Reaction

$$2Li^+ + 2e^- + Se \text{ to } Li_2Se \quad (290)$$

Net

$$Li_2NH + Se \text{ to } 1/2N_2 + Li_2Se + H(1/4) \quad (291)$$

Exemplary cells are [$Li_2NH$/LiCl-KCl/Se], [$Li_2NH$/LiCl-KCl/Se + $H_2$], [$LiNH_2$/LiCl-KCl/Se], [$LiNH_2$/LiCl-KCl/Se + $H_2$], [$Li_2NH$/LiCl-KCl/Te], [$Li_2NH$/LiCl-KCl/Te + $H_2$], [$LiNH_2$/LiCl-KCl/Te], and [$LiNH_2$/LiCl-KCl/Te + $H_2$].

In an embodiment, LiH that may act as a catalyst with the Li-N-H system. In an exemplary system, the reversible reactions are

Cathode Reaction

$$LiH + LiNH_2 + 2e^- \text{ to } Li_2NH + 2H^- \quad (292)$$

$$LiH + Li_2NH + 2e^- \text{ to } Li_3N + 2H^- \quad (293)$$

Anode Reaction

$$4H^- + Li_3N \text{ to } LiNH_2 + 2LiH + 4e^- \quad (294)$$

as H is reduced and H- is oxidized hydrinos H(1/p) are formed. In effect, $LiNH_2$ moves from cathode to anode and the chemistry is reversible to cause hydrinos to form with the production of electrical power. The H carrier may be $H^-$ that migrates from the cathode to anode.

In an embodiment, at least one H atom created by reactions between species of the M-N-H system serve as catalyst for another formed by these reactions. Exemplary reversible reactions are LiH + $LiNH_2$ to $Li_2NH$ + $H_2$, LiH + $Li_2NH$ to $Li_3N$ + $H_2$, Li + $LiNH_2$ to $Li_2NH$ + 1/2$H_2$, Li + $Li_2NH$ to $Li_3N$ + 1/2$H_2$. Na or K may replace Li. The $H_2$ NMR peak at 3.94 ppm and the reaction product peaks of the cell [$Li_3N$/LiCl-KCl/$CeH_2$] at 2.2 ppm, 1.63 ppm, and 1.00 ppm with the largest initially being the 1.63 ppm peak is consistent with H acting as the catalyst to form H(1/2), H(1/3), and then H(1/4) having the corresponding molecular NMR peaks $H_2(1/2)$, $H_2(1/3)$, and $H_2(1/4)$. Li may also serve as a catalyst. Based on the intensity of the $H_2(1/4)$ peaks in $NaNH_2$, NaH may serve as a catalyst as well in this material.

In an embodiment, the anode comprises a source of Li that may also comprise a source of hydrogen such as

at least one of Li metal, LiH, $Li_2Se$, $Li_2Te$, $Li_2S$, $LiNH_2$, $Li_2NH$, and $Li_3N$. The cathode comprises iodine and may further comprise a composite of iodine and a matrix such poly-2-vinylpyridine (P2VP). A suitable composite comprises about 10% P2VP. The cell further comprises a source of hydrogen that may be from the anode reacts or may be a reactant of the cathode compartment. Suitable sources of hydrogen are $H_2$ gas added directly or by permeation through a membrane such as a hydrogen permeable metal membrane. Exemplary cells are [Li/LiI formed during operation/$I_2$ P2VP $H_2$], [Li/LiI formed during operation/$I_2$ P2VP SS($H_2$)], [LiH/LiI formed during operation/$I_2$ P2VP], [$LiNH_2$/LiI formed during operation/$I_2$ P2VP], [$Li_2NH$/LiI formed during operation/$I_2$ P2VP], [$Li_3N$/LiI formed during operation/$I_2$ P2VP], [$Li_2Se$/LiI formed during operation/$I_2$ P2VP SS($H_2$)], [$Li_2Te$/LiI formed during operation/$I_2$ P2VP SS($H_2$)], and [$Li_2S$/LiI formed during operation/$I_2$ P2VP SS($H_2$)].

In an embodiment, the electrochemistry creates hydrino reactants of the halide-hydride exchange reactions of the present disclosure. In an embodiment, the redox reactions to form hydrinos involve the cathode reaction of Eq. (243) wherein $M^+$ + H is reduced to MH that is a reactant of a halide hydride exchange reaction that forms hydrinos as a result of the exchange reaction. Exemplary reactions are

Cathode Reaction

$$Li^+ + e^- + H \text{ to } LiH \qquad (295)$$

Anode Reaction

$$Li \text{ to } Li^+ + e^- \qquad (296)$$

And in solution

$$nLiH + MX \text{ or } MX_n \text{ to } nLiX + M \text{ and } MH_n \text{ and } H(1/4) \qquad (297)$$

Net Hydrino Reaction

$$H \text{ to } H(1/4) + 19.7 \text{ MJ} \qquad (298)$$

The eutectic mixture comprising the electrolyte may be a source of the hydrino reactants of a halide-hydride exchange reaction. A suitable eutectic mixture may comprise at least one first salt such as halide salt and a salt that is a source of a hydride. The source of hydride may be a source of catalyst. An alkali halide may serve as a source of catalyst. For example, LiX, NaX, or KX (X is a halide) may serve as a source of catalyst comprising LiH, NaH, and KH, respectively. Alternatively, at least one H may serve as the catalyst. The first salt may comprise a rare earth, transition metal, alkaline earth, alkali and other metals such a those of Ag and alkali salts. Exemplary halide-salt mixtures are $EuBr_2$-LiX (X=F, Cl, Br), $LaF_3$-LiX, $CeBr_3$-LiX, AgCl-LiX. Others are given in TABLE 4. In a further embodiment, at least one electrode may be a reactant or product of the halide-hydride exchange reaction. For example, the cathode may be Eu or $EuH_2$ that is the product of the halide exchange reaction of a europium halide such as $EuBr_2$ and an alkali metal hydride such as LiH. Other rare earth or transition metals or their hydrides such as La, $LaH_2$, Ce, $CeH_2$, Ni, NiH, and Mn may comprise the cathode. These are the products of halide-hydride exchange reactions of the present disclosure such as those between an alkali metal hydride MH such as LiH, NaH, and KH and metal halides such as $LaF_3$, $CeBr_3$, $NiBr_2$, and $MnI_2$, respectively. In an embodiment, the halide hydride exchange reactants may be regenerated by electrolysis or thermally. In an embodiment, the cell may be operated at elevated temperature such that thermal regeneration occurs in the cell. The reverse reaction of the halide-hydride exchange may occur thermally wherein the heat energy is at least partially from the reaction to form hydrinos.

In an embodiment, a conductive species such as Li metal from a porous or open electrode may accumulate in the cell such as in the electrolyte. The conductive species may cause a short circuit of the voltage developed between the cathode and anode. The short may be eliminated by breaking the continuity of the conducting circuit between the electrodes. The electrolyte may be stirred to break the circuit. The concentration of the conductive species may be controlled to prevent a short. In an embodiment, the release of the species is controlled by controlling the solubility of the species in the electrolyte. In an embodiment, the reaction conditions such as the temperature, electrolyte composition, and hydrogen pressure and hydride concentration are controlled. For example, the metal concentration such as that of Li may be controlled by altering its solubility by the amount of LiH present and vice versa. Alternatively, the conductive species such as Li may be removed. The removal may be by electroplating using electrolysis. In an embodiment, excess metal such as an alkali or alkaline earth metal such as Li can be removed by electrolysis by first forming the hydride. Then, the ions can be removed. $M^+$ such as $Li^+$ can be plated out as metal such as Li and $H^-$ removed as $H_2$ gas. The electroplating may be onto a counter electrode. The counter electrode may form a Li alloy such as LiAl. The electrolysis may remove the Li from the CIHT cathode. During electrolysis Li metal deposited on the CIHT cathode may be anodized

(oxidized) to $Li^+$ that migrates to the electrolysis cathode (CIHT anode) where it is electroplated. Or $Li^+$ may go into solution at the electrolysis anode, and an anion may form at the electrolysis cathode. In an embodiment, H may be reduced to $H^-$ at the electrolysis cathode. In another embodiment, Li may be deposited at the electrolysis cathode and H may be formed at the electrolysis anode. The H may be formed by oxidation of $H^-$. The H may react with Li on the surface of the electrolysis anode to form LiH. The LiH may dissolve into the electrolyte such that Li is removed from the electrolysis anode (CIHT cathode) to regenerate the CIHT cell voltage and power due to the return of the catalysis of H to form hydrinos when operated in the CIHT cell mode. During operation of the CIHT cell, a hydride such as LiH may precipitate from the electrolyte and be separated based on a buoyancy difference between it, the electrolyte, and optionally the Li metal. It may also be selectively precipitated onto a material. The hydride layer may be pumped or otherwise mechanically transferred to an electrolysis cell wherein Li metal and $H_2$ are generated and returned to the CIHT cell. The electrolysis electrical power may be provided by another CIHT cell. Other metals may substitute for Li in other embodiments.

In an embodiment, a voltage is generated from a reaction that forms hydrino reactants that then react to form hydrinos, and the polarity is periodically reversed by applying an external power source to regenerate the conditions to form hydrinos. The regeneration may comprise at least one of partially regenerating the original reactants or their concentrations, and removing a reactant, or intermediate, or other species such as a contaminant or one or more products. Removing one or more products may at least partially eliminate product inhibition. Electrolysis may be performed by applying a voltage to remove hydrino and other inhibiting products. In an embodiment, excess alkali metal such as Li, Na, or K may be electroplated out of solution. In an embodiment, the ions such as $Li^+$, $Na^+$, or $K^+$ are electrolyzed to the metals at a cathode using an external power source that may be another CIHT cell working in the direction of forming hydrinos to at least partially supply the electrolysis power. The electrolysis may be on a cathode to form an alloy such as a $Li_3Mg$, LiAl, LiSi, LiB, LiC, LiPb, LiTe, LiCd, LiBi, LiPd, LiSn, LiSb, LiZn, LiGa, LiIn, Li metal-metalloid alloys such as oxides, nitrides, borides, and silicides, mixed-metal-Li alloys such as Cu(5.4wt%)Li(1.3wt%)Ag(0.4wt%)Mg(0.4wt%)Zr(0.14wt%)Al(balance), Cu(2.7wt%)Li(2.2wt%) Zr(0.12wt%)Al(balance), Cu(2.1wt%)Li(2.0wt%) Zr(0.10wt%)Al(balance), and Cu(0.95wt%)Li(2.45wt%) Zr(0.12wt%)Al(balance), NaSn, NaZn, NaBi, KSn, KZn, or KBi alloys. Other CIHT cell anodes that may be regenerated by electrolysis as a cathode are lithium impregnated (lithiated) boride anodes such as LiB alloy and lithiated $TiB_2$, $MgB_2$, $GdB_2$, $CrB_2$, $ZrB_2$. Other suitable alloys such as those of alkaline earth metals are MgNi and MgCu alloys. The electrolysis at an anode may form hydrogen or a metal hydride of the anode metal such as nickel, titanium, niobium, or vanadium hydride. The electrolysis cathode and anode may be CIHT cell anode and cathode where the roles are reversed in switching from CIHT to electrolysis cell and back again after the cell is regenerated. The reverse voltage may be applied as a pulse. The pulsed reverse polarity and waveform may be in any frequency range, peak voltage, peak power, peak current, duty cycle, and offset voltage. The pulsed reversal may be DC, or the applied voltage may have be alternating or have a waveform. The application may be pulsed at a desired frequency and the waveform may have a desired frequency. Suitable pulsed frequencies are within the range of about 1 to about 1000 Hz and the duty cycle may be about 0.001% to about 95% but may be within narrower ranges of factor of two increments within this range. The peak voltage may be within the range of at least one of about 0.1 V to 10 V, but may be within narrower ranges of a factor of two increments within this range. In another, embodiment a high voltage pulse is applied that may in the range of about 10 V to 100 kV, but may be within narrower ranges of order magnitude increments within this range. The waveform may have a frequency within the range of at least one of about 0.1 Hz to about 100 MHz, about 100 MHz to 10 GHz, and about 10 GHz to 100 Ghz, but may be within narrower ranges of order magnitude increments within this range. The duty cycle may be at least one of the range of about 0.001% to about 95%, and about 0.1% to about 10%, but may be within narrower ranges of order magnitude increments within this range. The peak power density of the pulses may be in the range of about 0.001 $W/cm^2$ to 1000 $W/ cm^2$ but may be within narrower ranges of order magnitude increments within this range. The average power density of the pulses may be in the range of about 0.0001 $W/cm^2$ to 100 $W/ cm^2$, but may be within narrower ranges of order magnitude increments within this range.

In an embodiment, reactants that may be short lived are generated during electrolysis that result in the formation of hydrinos and corresponding electrical power during the CIHT cell discharge phase of a repeated cycle of charge and discharge. The electrolysis power may be applied to optimize the energy from the formation of hydrinos relative to the input energy. The electrolysis conditions of voltage, waveform, duty cell, frequency and other such parameters may be adjusted to increase the electrical energy gain from the cell.

Exemplary cells for pulsed electrolysis are [Li/olefin separator LP40/hydrogenated C], [LiC/olefin separator LP40/hydrogenated C], [Li/olefin separator LP40/metal hydride], [LiC/olefin separator LP40/metal hydride].

In another embodiment, the removal of inhibiting agents or regeneration of the hydrino reaction is performed by mechanical agitation such as stirring. In another embodiment, the removal of inhibiting agents or regeneration of the hydrino reaction is performed by thermally cycling the cell. Alternatively, a reactant may be added to remove the source of inhibition. A source of protons may be added in the case that the inhibiting species is a hydride such as hydrino hydride. The source may be HCl. The product may be a metal halide such as an alkali metal halide that may further be

regenerated by electrolysis. The electrolysis may be in the molten electrolyte such as a eutectic. In the case that the inhibiting agent is an alkali metal of hydride such as Li, a reactant may be added that selectively reacts with it to change its activity. For example, a suitable reactant for Li is nitrogen that favors formation of a nitride with Li.

In an embodiment, Li can be regenerated and collected into a vessel such as an inverted electrolyte-immersed bell that pools the metal at the top of the electrolyte inside of the bell due to the lower density of the metal relative to that of the electrolyte. In an embodiment, the metal concentration in the electrolyte may be controlled by an actuated system such as a thermally or electrically controlled release system such as a Knudsen cell or piezoelectric release system. In another embodiment, the metal such as Li is controlled by controlling the reaction conditions such as cell temperature, concentration of at least one reactant, or hydrogen pressure. For example, the formation of LiAl or LiSi alloys is spontaneous from LiH with a metal counter electrode such as Ti that forms a metal hydride such as TiH. The reaction is formed by high LiH concentration. Then, the cell can be run in the CIHT mode having the lithium alloy as the anode and the metal hydride such as TiH as the cathode when the LiH concentration is lowered.

In embodiments, the half-cell reactants are regenerated. The regeneration may be in batch mode by means such as electrolysis of products to reactants or by the thermal reaction of products to reactants. Alternatively, the system may regenerate spontaneously in batch-mode or continuously. The reaction to form the hydrino reactants occurs by the flow of electrons and ions involving the corresponding reactants that undergo oxidation in the anode half-cell and reduction in the cathode half-cell. In an embodiment, the overall reaction to form the hydrino reactants is not thermodynamically favorable. For example, it has a positive free energy, and the reaction in the reverse direction is spontaneous or can be made spontaneous by changing the reaction conditions. Then, the forward direction of the reaction is driven by the large energy release in forming hydrinos in a manner that may be a concerted reaction. Since the reaction to form hydrinos is not reversible, the products may spontaneously convert to the reactants after hydrinos have been formed. Or, one or more reaction conditions such a temperature, hydrogen pressure, or concentration of one or more reactants or products is changed to regenerate the initial reactants of the cell. In an exemplary cell, the anode comprises an alloy or compound of the source of catalyst such as Li, such as LiPb or LiSb and $Li_2Se$, $Li_2Te$, an amide, imide or nitride such as those of Li, respectively, and the cathode comprises a source of hydrogen and a reactant that reacts with the source of catalyst that may also be the source of hydrogen. The source of hydrogen and reactant that may also be a source of hydrogen may be as at least one of a hydride, a compound, an element such as a metal, an amide, an imide, or a nitride. In additional embodiments having an alkali metal alloy such as a Li alloy, the alloy may be hydrided (i.e. the corresponding alloy hydride). The metal of any of the cathode half-cell reactants may form an alloy or other compound such as a selenide, telluride, or hydride with the source of catalyst. The transport of the source of catalyst from the anode with the formation of an alloy or compound at the cathode is not thermodynamically favorable, but is driven by the hydrino reaction. Then, the reverse spontaneous reaction involving just the products other than hydrinos may occur to regenerate the reactants. Exemplary cells are [LiSb/LiCl-KCl/Ti(KH)], [LiSb/LiCl+KCl LiH/Ti(KH)], [LiSi/LiCl-KCl LiH/$LiNH_2$], [LiSi/LiCl-KCl/$LiNH_2$], [LiPb/LiCl-KCl/Ti(KH)], [LiPb/LiCl-KCl LiH/Ti(KH)], [$Li_2Se$/LiCl-KCl/$LiNH_2$ or $Li_2NH$], [$Li_2Se$/LiCl-KCl/$LiNH_2$ or $Li_2NH$ + support such as TiC], [$Li_2Te$/LiCl-KCl/$LiNH_2$ or $Li_2NH$], [$Li_2Te$/LiCl-KCl/$LiNH_2$ or $Li_2NH$ + support such as TiC], [LiSi/LiCl-KCl LiH/Ti($H_2$)], [LiPb/LiCl-KCl/ Ti($H_2$)], [$Li_2Se$/LiCl-KCl/ Ti($H_2$)], [$Li_2Te$/LiCl-KCl/ Ti($H_2$)], [LiSi/LiCl-KCl LiH/Fe($H_2$)], [LiPb/LiCl-KCl/ Fe($H_2$)], [$Li_2Se$/LiCl-KCl/ Fe($H_2$)], and [$Li_2Te$/LiCl-KCl/Ni($H_2$)]. An exemplary regeneration reaction involving the reactant amide with a product imide or nitride is the addition of hydrogen that reacts with the imide or nitride to from the hydrogenated imide or amide, respectively.

In an embodiment, the hydrino hydride inhibits the reaction, and regeneration is achieved by reacting the hydride to form molecular hydrino that may be vented from the cell. The hydride may be present on at least one of the cathode and anode, and in the electrolyte. The reaction of hydride to molecular hydrino may be achieved by electrolysis. The electrolysis may have a polarity opposite that of the CIHT cell operation. The electrolysis may form protons or H that reacts with hydrino hydride to form molecular hydrino. The reaction may occur at the electrolysis anode. In an embodiment, the hydrino hydride ion has a high mobility such that it migrates to the anode and reacts with $H^+$ or H to form molecular hydrino.

In an embodiment, the half-cell reactants are selected such that the energy in the redox reactions better matches the integer multiple of about 27.2 eV energy transfer between the H atom and the catalyst to increase the reaction rate to form hydrinos. The energy in the redox reactions may provide activation energy to increase the rate of reaction to form hydrinos. In an embodiment, the electrical load to the cell is adjusted to match the redox reactions coupled through the flow of electricity and ions to the integer multiple of about 27.2 eV energy transfer between the H atom and the catalyst to increase the reaction rate to form hydrinos.

In an embodiment, a positive bias voltage is applied to at least the anode to collect electrons from the ionizing catalyst. In an embodiment, an electron collector at the anode collects the ionizing electrons at an increased rate than in the absence of the collector. A suitable rate is one faster than the rate that electrons would react with surrounding reactants such as metal hydrides to form anions such as hydride ions locally. Thus, the collector forces the electrons through the external circuit wherein the voltage is increased due to the energy release to form hydrinos. Thus, the electron collector such as an applied positive potential acts as a source of activation energy for the hydrino reaction that

powers the CIHT cell. In an embodiment, the bias acts as a current amplifier such as a transistor wherein the injection of a small current causes the flow of a large current powered by the hydrino reaction. The applied voltage as well as other conditions such as temperature and hydrogen pressure can be controlled to control the power output of the cell.

In an embodiment, the cell comprises an anode compartment containing a hydrino catalyst reaction mixture being without H or H limited, a cathode compartment comprising a source of hydrogen such hydrogen gas or a hydride, a salt bridge connecting the compartments by ion conduction wherein the conducting ion may be a hydride ion, and an anode and cathode electrically connected by an external circuit. Power may be delivered to a load connected with the external circuit, or power may be delivered to the cell with an applied power source in series or parallel with the external circuit. The applied power source may provide the activation energy of the hydrino reaction such that an amplified power is output from the cell due to the applied power. In other embodiments, the applied electrolysis power causes migration of another ion such as a halide or oxide wherein the mass transport induces the hydrino reaction to occur in a compartment.

In an embodiment of the CIHT cell, the products are regenerated by electrolysis. A molten salt may comprise the electrolyte. The products may be an alkali halide of the catalyst metal and a hydride of at least a second metal such as an alkali metal or alkaline earth hydride. The products may be oxidized by applying a voltage to reduce the halide to metal at the electrolysis cathode and the halide to halogen at the electrolysis anode wherein the polarity is opposite that of the CIHT cell. The catalyst metal may react with hydrogen to form the alkali hydride. The halogen may react with the metal hydride such as an alkali hydride or alkaline earth hydride to form the corresponding halide. In an embodiment, the salt bridge is selective for halide ion and the catalyst metal is in the CIHT anode compartment and the second metal is in the CIHT cathode compartment. Since the electrical energy released to form hydrinos is much greater then that required for regeneration, a second CIHT cell may regenerate the first CIHT cell and vice versa so that constant power may be output from a plurality of cells in a cycle of power and regeneration. An exemplary CIHT cell is NaH or KH Mg and support such as TiC// MX wherein MX is a metal halide such as LiCl and the salt bridge designated by // is a halide ion conductor. Suitable halide ion conductors are a halide salt such as a molten electrolyte comprising an alkali halide, an alkaline earth halide, and mixtures, a solid rare earth oxychloride, and an alkali halide or alkaline earth halide that is a solid at the cell operating parameters. In an embodiment, the $Cl^-$ solid electrolyte may comprise metal chlorides, metal halides, and other halide compounds such as $PdCl_2$ that may be doped with KCl, as well as $PbF_2$, $BiCl_3$, and ion exchange polymers (silicates, sodium phosphotungstates, and sodium polyphosphates). The solid electrolyte may comprise an impregnated support. An exemplary solid electrolyte is woven glass cloth impregnated with doped $PbCl_2$. In another embodiment, the counter ion is an ion other than a halide such as at least one of the group of oxides, phosphides, borides, hydroxides, silicides, nitrides, arsenides, selenides, tellurides, antimonides, carbides, sulfides, hydrides, carbonate, hydrogen carbonate, sulfates, hydrogen sulfates, phosphates, hydrogen phosphates, dihydrogen phosphates, nitrates, nitrites, permanganates, chlorates, perchlorates, chlorites, perchlorites, hypochlorites, bromates, perbromates, bromites, perbromites, iodates, periodates, iodites, periodites, chromates, dichromates, tellurates,selenates, arsenates, silicates, borates, cobalt oxides, tellurium oxides, and other oxyanions such as those of halogens, P, B, Si, N, As, S, Te, Sb, C, S, P, Mn, Cr, Co, and Te, the CIHT cathode compartment contains a compound of the counter ion, and the salt bridge is selective to the counter ion. An exemplary CIHT cell that may be regenerated by electrolysis comprises an alkali metal hydride at the anode and a metal halide at the cathode such as an alkali or alkaline earth halide and a metal halide electrolyte such as a molten eutectic salt. The anode and cathode may further comprise the metal of the hydride and the halide, respectively.

Based on the Nernst equation, an increase in $H^-$ causes the potential to be more positive. A more negative potential favors that stabilization of the catalyst ion transition state. In an embodiment, the reaction mixture comprises a hydride exchangeable metal to cause the Nernst potential to be more negative. Suitable metals are Li and an alkaline earth metal such as Mg. The reaction mixture may also comprise an oxidant such as an alkali, alkaline earth or transition metal halide to decrease the potential. The oxidant may accept electrons as the catalyst ion is formed.

The support may serve as a capacitor and charge while accepting the electrons from the ionizing catalyst during the energy transfer from H. The capacitance of the support may be increased by adding a high-permittivity dielectric that may be mixed with the support, or the dielectric material is gaseous at the cell operating temperature. In another embodiment, a magnetic field is applied to deflect the ionized electrons from the catalyst to drive the hydrino reaction forward.

In another embodiment, the catalyst becomes ionized and is reduced in an anode half-cell reaction. The reduction may be by hydrogen to form $H^+$. The $H^+$ may migrate to cathode compartment by a suitable salt bridge. The salt bridge may be a proton conducting membrane, proton exchange membrane, and/or a proton conductor such as solid state perovskite-type proton conductors based on $SrCeO_3$ such as $SrCe_{0.9}Y_{0.08}Nb_{0.02}O_{2.97}$ and $SrCeO_{0.95}Yb_{0.05}O_3$ - *alpha.* The $H^+$ may react in the cathode compartment to form $H_2$. For example, $H^+$ may be reduced at the cathode or react with a hydride such as $MgH_2$ to form $H_2$. In another embodiment, the cation of the catalyst migrates. In the case that the migrating ion is a cation such $Na^+$, the salt bridge may be beta-alumina solid electrolyte. A liquid electrolyte such as $NaAlCl_4$ may also be used to transport the ions such as $Na^+$.

In a double-membrane three-compartment cell shown in FIGURE 20, the salt bridge may comprise an ion-conducting electrolyte 471 in a compartment 470 between the anode 472 and cathode 473. The electrodes are held apart and may be sealed to the inner vessel wall so that the vessel wall and electrodes form the chamber 470 for the electrolyte 471. The electrodes are electrically insulated from the vessel so that they are isolated from each other. Any other conductors that may electrically short the electrodes must also be electrically insulated from the vessel to avoid the shorting. The anode and cathode may comprise a metal that has a high permeability to hydrogen. The electrode may comprise a geometry that provides a higher surface area such as a tube electrode, or it may comprise a porous electrode. Hydrogen from the cathode compartment 474 may diffuse through the cathode and undergo reduction to $H^-$ at the interface of the cathode and salt bridge electrolyte 471. The $H^-$ migrates through the electrolyte and is oxidized to H at the electrolyte-anode interface. The H diffuses through the anode and reacts with the catalyst in the anode compartment 475 to form hydrinos. The $H^-$ and catalyst ionization provides the reduction current at the cathode that is carried in the external circuit 476. The H permeable electrodes may comprise V, Nb, Fe, Fe-Mo alloy, W, Mo, Rh, Ni, Zr, Be, Ta, Rh, Ti, Th, Pd, Pd-coated Ag, Pd-coated V, Pd-coated Ti, rare earths, other refractory metals, and others such metals known to those skilled in the Art. The electrodes may be metal foils. The chemicals may be regenerated thermally by heating any hydride formed in the anode compartment to thermally decompose it. The hydrogen may be flowed or pumped to the cathode compartment to regenerate the initial cathode reactants. The regeneration reactions may occur in the anode and cathode compartments, or the chemicals in one or both of the compartments may be transported to one or more reaction vessels to perform the regeneration.

In another embodiment, the catalyst undergoes H catalysis and becomes ionized in the cathode compartment and also becomes neutralized in the cathode compartment such that no net current flows directly due to the catalysis reaction. The free energy to produce an EMF is from the formation of hydrinos that requires the mass transport of ions and electrons. For example, the migrating ion may be $H^+$ that is formed by oxidation of a species such as $H_2$ in the anode compartment. $H^+$ migrates to the cathode compartment through at least one of an electrolyte and a salt bridge such as a proton exchange membrane and is reduced to H or a hydride in the cathode compartment to cause the hydrino reaction to occur. Alternatively, $H_2$ or a hydride may be reduced to form $H^-$ in the cathode compartment. The reduction further forms at least one of the catalyst, a source of catalyst, and atomic H that permits the hydrino reaction to occur. The $H^-$ migrates to the anode compartment wherein it or another species is ionized to provide the electrons to the external circuit to complete the cycle. The oxidized H may from $H_2$ that may be recycled to the cathode compartment using a pump.

In another embodiment, a metal is oxidized at the anode. The metal ion migrates through an electrolyte such as a molten-salt or solid electrolyte. Suitable molten electrolytes are halides of the migrating metal ion. The metal ion is reduced at the cathode wherein the metal undergoes a reaction that changes its activity. In suitable reactions, the metal is dissolved into another metal, forms an intermetallic compound with at least one other metal, chemiabsorbs or physiabsorbs onto a surface or intercalates into a material such as carbon, and forms a metal hydride. The metal may serve as the catalyst or source of catalyst. The cathode reactants also comprise hydrogen and may comprise other reactants to cause the hydrino reaction to occur. The other reactants may comprise a support such as TiC and a reductant, catalyst, and hydride exchange reactant. Suitable exemplary Mg intermetallics include Mg-Ca, Mg-Ag, Mg-Ba, Mg-Li, Mg-Bi, Mg-Cd, Mg-Ga, Mg-In, Mg-Cu, and Mg-Ni and their hydrides. Suitable exemplary Ca intermetallics include Ca-Cu, Ca-In, Ca-Li, Ca-Ni, Ca-Sn, Ca-Zn, and their hydrides. Exemplary Na and K alloys or amalgams include those of Hg, Pb, and Bi. Others include Na-Sn and Li-Sn. A hydride may be decomposed thermally. An intermetallic may be regenerated by distillation. The regenerated metals may be recycled.

In another embodiment, the catalyst or source of catalyst in the anode compartment undergoes ionization, and the corresponding cation migrates through the salt bridge that is selective for the cation. A suitable cation is $Na^+$, and a $Na^+$ selective membrane is beta alumina. The cation is reduce at the cathode compartment that contains hydrogen or a source of hydrogen and optionally other reactants of the hydrino reaction mixture such as one or more of a support, a reductant, an oxidant, and a hydride exchange agent. The cell may be operated as a CIHT cell, an electrolysis cell, or a combination wherein the applied electrolysis power is amplified by the hydrino reaction.

In another embodiment, the cathode compartment comprises a source of catalyst and a source of H. The catalyst and H form from the reaction of the sources with the reduced cation that migrated from the anode compartment. The catalyst and H further undergo reaction to form hydrinos.

In an embodiment, positive ions of the electrolyte such as $Li^+$ of the eutectic salt LiCl/KCl and optionally LiH migrate from the anode compartment to the cathode compartment through the salt bridge and are reduced to the metal or hydride such as Li and LiH. Another exemplary electrolyte comprises $LiPF_6$ in dimethyl carbonate/ethylene carbonate. Borosilicate glass may the separator. In other embodiments, one or more alkali metals substitute for at least one of Li and K. In the case that $K^+$ replaces $Li^+$ as the migrating ion, a solid potassium-glass electrolyte may be used. In an embodiment, due to the migration of the ion such as $Li^+$, its reduction, and any subsequent reaction such as hydride formation, and the catalysis of H to hydrino states occurs in the cathode compartment to provide a contribution to the cell EMF. The source of hydrogen to form the hydride and H for the hydrino reaction may be a hydride with a less negative heat of formation than that of the hydride of the migrating ion. Suitable hydrides in the case of $Li^+$ as the migrating ion include $MgH_2$, $TiH_2$, LiH, NaH, KH, RbH, CsH, BaH, $LaNi_xMn_yH_z$, and $Mg_2NiH_x$ wherein x,y, and z are rational numbers.

A suitable hydride for K or Na replacing Li is $MgH_2$.

In an embodiment, the anode half-cell reactants comprise at least one oxidizable metal, and the cathode half-cell reactants comprise at least one hydride that can react with the metal of the anode. At least one of the cathode and anode half-cell reactants may further comprise a conductive matrix or support material such as a carbon such as carbon black, a carbide such as TiC, $YC_2$, or WC, or a boride such as $MgB_2$ or $TiB_2$, and both half-cells comprise a conductive electrode. The reactants may be in any molar ratio, but a suitable ratio is about a stiochiometric mixture of the metals for hydrogen exchange and up to 50 mole % support. The anode metal is oxidized in the anode half-cell compartment, the cation such as $Li^+$ migrates to the cathode half-cell compartment and is reduced, and the metal atom such as Li reacts with the hydride in the cathode compartment. In an embodiment, the reaction is a hydride exchange reaction. The hydrogen content of the cathode half-cell compartment also serves as a source of H to form hydrinos. At least one of the migrated cation, the reduced cation, a reaction product of the migrated cation, at least one H, and one or more reactants of the cathode half-cell compartment or their products from reaction with the migrated cation or the reduced cation serves as a catalyst or source of catalyst to form hydrinos. Since the cell reaction may be driven by the large exothermic reaction of H with the catalyst to form hydrinos, in an embodiment, the cathode compartment hydride that undergoes H exchange with the reduced migrated cation from the anode compartment has a free energy of formation that is similar or more negative than that of the hydride of the reduced migrated cation. Then, the free energy due to the reaction of the reduced migrated cation such as Li with the cathode metal hydride may be slightly negative, zero, or positive. Excluding the hydrino reaction, in embodiments, the free energy of the hydride exchange reaction may be any value possible. Suitable ranges are about +1000 kJ/mole to -1000 kJ/mole, about +1000 kJ/mole to -100 kJ/mole, about +1000 kJ/mole to -10 kJ/mole, and about +1000 kJ/mole to 0 kJ/mole. Suitable hydrides for hydride exchange that further serve as a source of H to form hydrinos are at least one of a metal, semi-metal, or an alloy hydride. In the case that the migrating ion is a catalyst or source of catalyst such as $Li^+$, $Na^+$, or $K^+$, the hydride may comprise any metal, semi-metal, or alloy different from that corresponding to the migrating ion. Suitable exemplary hydrides are an alkaline or alkaline earth hydride, a transition metal hydride such as Ti hydride, an inner transition metal hydride such as Nb, Zr, or Ta hydride, palladium or platinum hydride, and a rare earth hydride. Due to negative free energy to form hydrinos, the cell voltage is higher than that due to the free energy of any hydride exchange reaction that can contribute to the voltage. This applies to the open circuit voltage and that with a load. Thus, the CIHT cell is distinguished over any prior Art by having a voltage higher than that predicted by the Nernst equation for the non-hydrino related chemistry such as the hydride exchange reaction including the correction of the voltage due to any polarization voltage when the cell is loaded.

In an embodiment, the anode half-cell reactants comprise a source of catalyst such as an alkali metal or compound wherein the alkali metal ion migrates to the cathode compartment and may undergoes a hydride exchange reaction with a hydride of the cathode compartment. An exemplary overall conventional cell reaction wherein the anode reactants comprise a source of Li may be represented by

$$M_nH_m + me^- + mLi^+ \square\ nM^0 + mLiH \text{ (n,m are integers)} \quad (299)$$

wherein M designates a single element or several elements (in a mixture, intermetallic compound, or an alloy form) chosen from metals or semi-metals capable of forming a hydride. These hydrides could also be replaced by a compound designated "M hydride" that means an element M in which hydrogen atoms are absorbed (for example, chemically combined). M hydride may be designated hereafter $MH_m$, where m is the number of H atoms absorbed or combined by M. In an embodiment, the free enthalpy of formation per H of the hydride $M_nH_m$ or $MH_m$ is higher, equivalent, or less than that of the hydride of the catalyst such as LiH. Alternatively, at least one H may serve as the catalyst. Exemplary metals or semi-metals comprise alkali metals (Na, K, Rb, Cs), alkaline earth metals (Mg, Ca, Ba, Sr), elements from the Group IIIA such as B, Al, Ga, Sb, from the Group IVA such as C, Si, Ge, Sn, and from the Group VA such as N, P, As. Further examples are transition metal alloys and intermetallic compounds $AB_n$, in which A represents one or more element(s) capable of forming a stable hydride and B is an element that forms an unstable hydride. Examples of intermetallic compounds are given in TABLE 5.

TABLE 5. Elements and combinations that form hydrides.

| A | B | n | $AB_n$ |
|---|---|---|---|
| Mg, Zr | Ni, Fe, Co | 1/2 | $Mg_2Ni$, $Mg_2Co$, $Zr_2Fe$ |
| Ti, Zr | Ni, Fe | 1 | TiNi, TiFe, ZrNi |
| La, Zr, Ti, Y, Ln | V, Cr, Mn, Fe, Ni | 2 | $LaNi_2$, $YNi_2$, $YMn_2$, $ZrCr_2$, $ZrMn_2$, $ZrV_2$, $TiMn_2$ |
| La, Ln, Y, Mg | Ni, Co | 3 | $LnCo_3$, $YNi_3$, $LaMg_2Ni_9$ |
| La, rare earths | Ni, Cu, Co, Pt | 5 | $LaNi_5$, $LaCo_5$, $LaCu_5$, $LaPt_5$ |

Further examples are the intermetallic compounds wherein part of sites A and/or sites B are substituted with another element. For example, if M represents $LaNi_5$, the intermetallic alloy may be represented by $LaNi_{5-x}A_x$, where A is, for example, Al, Cu, Fe, Mn, and/or Co, and La may be substituted with Mischmetal, a mixture of rare earth metals containing 30% to 70% of cerium, neodymium and very small amounts of elements from the same series, the remainder being lanthanum. In other embodiments, lithium may be replaced by other catalysts or sources of catalyst such as Na, K, Rb, Cs, Ca,and at least one H. In embodiments, the anode may comprise an alloy such as $Li_3Mg$, $K_3Mg$, $Na_3Mg$ that forms a mixed hydride such as $MMgH_3$ (M=alkali metal). Exemplary cells are [$Li_3Mg$, $K_3Mg$, $Na_3Mg$/LiCl-KCl/hydride such as $CeH_2$, $LaH_2$, $TiH_2$, $ZrH_2$ or $M(H_2)$ wherein M is a $H_2$ permeable metal or $H_2$ diffusion cathode].

In exemplary reactions, Li is the anode metal and $M_nH_m$ is a hydride reactant of the cathode half-cell compartment:

Cathode Reaction

$$mLi^+ + me^- + M_nH_m \text{ to } (m-1)LiH + Li + H(1/p) + nM \qquad (300)$$

Anode Reaction

$$Li \text{ to } Li^+ + e- \qquad (301)$$

In other embodiments, Li may be replaced by another catalyst or source of catalyst such as Na or K. M may also be a catalyst or a source of catalyst. The H consumed to form hydrinos may be replaced. The Li and $M_mH_n$ may be regenerated by electrolysis or other physical or chemical reactions. Net electrical and heat energy is given off due to the formation of hydrinos:

Net

$$H \text{ to } H(1/p) + \text{energy at least partially as electricity} \qquad (302)$$

The cell may comprise a salt bridge suitable or selective for the migrating ion and may further comprise an electrolyte suitable for the migrating ion. The electrolyte may comprise the ion of the migrating ion such as a $Li^+$ electrolyte such as a lithium salt such as lithium hexafluorophosphate in an organic solvent such as dimethyl or diethyl carbonate and ethylene carbonate for the case that the migrating ion is $Li^+$. Then, the salt bridge may be a glass such as borosilicate glass saturated with $Li^+$ electrolyte or a ceramic such as $Li^+$ impregnated beta alumina. The electrolyte may also comprise at least one or more ceramics, polymers, and gels. Exemplary cells comprise (1) a 1 $cm^2$, 75 um-thick disc of composite positive electrode containing 7-10 mg of metal hydride such as R-Ni, Mg mixed with TiC, or NaH mixed with 15% carbon SP (black carbon from MM), (2) a 1 $cm^2$ Li metal disc as the negative electrode, and (3) a Whatman GF/D borosilicate glass-fiber sheet saturated with a 1 M $LiPF_6$ electrolyte solution in 1:1 dimethyl carbonate/ethylene carbonate as the separator/electrolyte. Other suitable electrolytes are lithium hexafluorophosphate ($LiPF_6$), lithium hexafluoroarsenate monohydrate ($LiAsF_6$), lithium perchlorate ($LiClO_4$), lithium tetrafluoroborate ($LiBF_4$), and lithium triflate ($LiCF_3SO_3$) in an organic solvent such as ethylene carbonate. Additionally, $H_2$ gas may be added to the cell such as to the cathode compartment. In another cell, the electrolyte and source of catalyst may comprise a radical anion such as naphthalene-lithium or lithium naphthalenide in naphthalene or other suitable organic solvent. An exemplary cell comprises [a source of Li or naphthalide ion such as lithium naphthalenide/naphthalene/a souce of Li or H such as LiH]. The cell may further comprise a binder of the anode or cathode reactants. Suitable polymeric binders include, for example, poly(vinylidine fluoride), co-poly(vinylidine fluoride-hexafluoropropylene), poly(tetrafluoroethylene, poly(vinyl chloride), or poly(ethylene-propylene-diene monomer), EPDM. The electrodes may be suitable conductors such as nickel in contact with the half-cell reactants.

In an embodiment, the anode half-cell reactants may comprise an alkali metal such as Li intercalated into a matrix such as carbon that may serve as the catalyst or source of catalyst. In an exemplary embodiment, the anode comprises a Li-carbon (LiC) anode of lithium ion battery such as Li-graphite. The cell may further comprise an electrolyte such as a molten salt electrolyte and a cathode that comprises a source of H. Exemplary cells are [LiC/LiCl-KCl/$Ni(H_2)$], [LiC/LiF-LiCl/$Ni(H_2)$], [LiC/LiCl-KCl/$Ti(H_2)$], [LiC/LiF-LiCl/$Ti(H_2)$], [LiC/LiCl-KCl/$Fe(H_2)$], [LiC/LiF-LiCl/$Fe(H_2)$], [LiC/LiCl-KCl LiH (0.02 mol%)/$Ni(H_2)$], [LiC/LiF-LiCl LiH (0.02 mol%)/$Ni(H_2)$], [LiC/LiCl-KCl LiH (0.02 mol%)/$Ti(H_2)$], [LiC/LiF-LiCl LiH (0.02 mol%)/$Ti(H_2)$], and [LiC/LiCl-KCl LiH (0.02 mol%)/$Fe(H_2)$], [LiC/LiF-LiCl LiH (0.02 mol%)/$Fe(H_2)$].

In another embodiment, carbon is replaced by another material that reacts with the catalyst or source of catalyst such as Li, Na, or K to form the corresponding ionic compound like $MC_x$ (M is an alkali metal comprising $M^+$ and $C_x^-$). The material may form an intercalation compound with at least one of the catalyst, source of catalyst, and source of

hydrogen such as K, Na, Li, NaH, LiH, BaH, and KH and also H alone. Suitable intercalating materials are hexagonal boron nitride and metal chalcogenides. Suitable chalcogenides are those having a layered structure such as $MoS_2$ and $WS_2$. The layered chalcogenide may be one or more form the list of $TiS_2$, $ZrS_2$, $HfS_2$, $TaS_2$, $TeS_2$, $ReS_2$, $PtS_2$, $SnS_2$, SnSSe, $TiSe_2$, $ZrSe_2$, $HfSe_2$, $VSe_2$, $TaSe_2$, $TeSe_2$, $ReSe_2$, $PtSe_2$, $SnSe_2$, $TiTe_2$, $ZrTe_2$, $VTe_2$, $NbTe_2$, $TaTe_2$, $MoTe_2$, $WTe_2$, $CoTe_2$, $RhTe_2$, $IrTe_2$, $NiTe_2$, $PdTe_2$, $PtTe_2$, $SiTe_2$, $NbS_2$, $TaS_2$, $MoS_2$, $WS_2$, $NbSe_2$, $NbSe_3$, $TaSe_2$, $MoSe_2$, $WSe_2$, and $MoTe_2$. Other suitable exemplary materials are silicon, doped silicon, silicides, boron, and borides. Suitable borides include those that form double chains and two-dimensional networks like graphite. The two-dimensional network boride that may be conducting may have a formula such as $MB_2$ wherein M is a metal such as at least one of Cr, Ti, Mg, Zr, and Gd ($CrB_2$, $TiB_2$, $MgB_2$, $ZrB_2$, $GdB_2$). The compound formation may be thermally or electrolytically reversible. The reactants may be regenerated thermally by removing the catalyst of source of catalyst. In an embodiment, the charged negative electrode is a source of migrating $M^+$ such as $Li^+$, and electrons to the circuit comprising an alkali metal (e.g. lithium) intercalated chalcogenide.

In another embodiment, metal-carbon of the negative electrode such as lithium carbon is replaced by a source of the metal ion such as $Li^+$ comprising at least one compound comprising the metal and one or more elements other than just carbon. The metal containing compound may comprise a metal oxide such as an oxide of Co, Ni, Cu, Fe, Mn, or Ti, a transition metal oxide, tungsten oxide, molybdenum oxide, niobium oxide, vanadium oxide, a sulphide such as those of iron, nickel, cobalt, and manganese, a nitride, a phosphide, a fluoride, and a compound of another metal or metals of an intermetallic or alloy. The negative electrode of the CIHT cell may comprise a known negative electrode of a lithium ion battery. The ion releasing reaction may be a conversion reaction or an intercalation reaction. In this case, the catalyst may be Li. The catalyst may be formed at the cathode. The reaction may be reduction of $Li^+$. The cathode half-cell reactants may further comprise H from a source such as a hydride or $H_2$ gas supplied by permeation of H through a membrane. The catalyst and H react to form hydrinos to provide a contribution to the CIHT cell power.

In an embodiment, the cell may further comprise a salt bridge for the migrating intercalated ion such as $Li^+$. Suitable salt bridges are glasses saturated with a salt of the migrating ion and a solvent and ceramics such as beta alumina impregnated with the migrating ion. Exemplary cells are [LiC/borosilicate glass-fiber sheet saturated with a 1 M $LiPF_6$ electrolyte solution in 1:1 dimethyl carbonate/ethylene carbonate/Ni(H2)], [LiC/borosilicate glass-fiber sheet saturated with a 1 M $LiPF_6$ electrolyte solution in 1:1 dimethyl carbonate/ethylene carbonate/Ni(H2)], [LiC/borosilicate glass-fiber sheet saturated with a 1 M $LiPF_6$ electrolyte solution in 1:1 dimethyl carbonate/ethylene carbonate/Ti($H_2$)], [LiC/borosilicate glass-fiber sheet saturated with a 1 M $LiPF_6$ electrolyte solution in 1:1 dimethyl carbonate/ethylene carbonate/Ti($H_2$)], [LiC/borosilicate glass-fiber sheet saturated with a 1 M $LiPF_6$ electrolyte solution in 1:1 dimethyl carbonate/ethylene carbonate/Fe($H_2$)], and [LiC/borosilicate glass-fiber sheet saturated with a 1 M $LiPF_6$ electrolyte solution in 1:1 dimethyl carbonate/ethylene carbonate/Fe($H_2$)].

The at least one of the cathode or anode reaction mixture may comprise other reactants to increase the rate of the hydrino reaction such as at least one of a support such as a carbide such as TiC an oxidant such as an alkali or alkaline earth metal halide such as LiCl or $SrBr_2$, and a reductant such as an alkaline earth metal such as Mg. The cathode compartment may comprise a catalyst such as K, NaH, or may be Li from migration of $Li^+$, reductant such a Mg or Ca, a support such as TiC, $YC_2$, $Ti_3SiC_2$, or WC, an oxidant such as LiCl, $SrBr_2$, $SrCl_2$, or $BaCl_2$, and a source of H such as a hydride such as R-Ni, $TiH_2$, $MgH_2$, NaH, KH, or LiH.

In an embodiment, one or more H atoms serve as the catalyst of the power or CIHT cell to form hydrinos. The mechanism may comprise at least one of the creation of H vacancies (holes) or H's in a material such that multiple H atoms interact to form hydrinos. In the present disclosure, it is implicit that the negative and positive electrodes of different embodiments can be used in different combinations by one skilled in the Art. Alternatively, the reduced migrating ion or its hydride may serve as the catalyst or source of catalyst. The hydrino product may be identified by solid or liquid NMR showing peaks given by Eqs. (12) and (20) for molecular hydrino and hydrino hydride ion, respectively. Specifically, the H catalyst reaction products of exemplary cell [$Li_3N$ TiC/LiCl-KCl/$CeH_2$ carbon black (CB)] showed liquid H NMR peaks following solvent extraction of the anode reaction products in dDMF at 2.2 ppm, 1.69 ppm, 1 ppm, and -1.4 ppm corresponding to $H_2(1/2)$, $H_2(1/3)$, $H_2(1/4)$, and $H^-(1/2)$, respectively. In an embodiment, a getter such as an alkali halide such as KI is added to the half-cell to serve as a getter for molecular hydrino and hydrino hydride.

For example, a migrating ion such as a metal ion such as $Li^+$ may migrate from the anode to the cathode of the CIHT cell, undergo reduction at the cathode, and the exemplary Li may displace H such as an H in a lattice to create one or more free H atoms and optionally H vacancies that cause the formation of free H wherein the free H's react to form hydrinos. Alternatively, the reduced migrating ion or its hydride may serve as the catalyst or source of catalyst. The H containing lattice may be hydrogenated carbon, a hydride such as a metal hydride such as an alkali, alkaline earth, transition, inner transition, noble, or rare earth metal hydride, $LiAlH_4$, $LiBH_4$, and other such hydrides or R-Ni, for example. In other embodiments, the H lattice may be a hydrogen dissociator and an H source such as at least one of Pd/C, Pt/C, $Pt/Al_2O_3$, $Pd/Al_2O_3$, Pt/Ti, Ni powder, Nb powder, Ti powder, $Ni/SiO_2$, $Ni/SiO_2$-$Al_2O_3$, with $H_2$ gas, or a hydride such as

an alkali, alkaline earth, transition, inner transition, noble, or rare earth metal hydride, $LiAlH_4$, $LiBH_4$, and other such hydrides. In other embodiments, the H containing lattice is an intercalation compound with the intercalating species such as an alkali metal or ion such a Li or $Li^+$ replaced by H or $H^+$. The compound may comprise intercalated H. The compound may comprise a layered oxide compound such as $LiCoO_2$ with at least some Li replaced by H such as CoO(OH) also designated $HCoO_2$. The cathode half-cell compound may be a layered compound such as a layered chalcogenide such as a layered oxide such as $LiCoO_2$ or $LiNiO_2$ with at least some intercalated alkali metal such as Li replaced by intercalated H. In an embodiment, at least some H and possibly some Li is the intercalated species of the charged cathode material and Li intercalates during discharge. Other alkali metals may substitute for Li. Suitable intercalation compounds with H replacing at least some of the Li's are those that comprise the anode or cathode of a Li ion battery such as those of the disclosure. Suitable exemplary intercalation compounds are Li graphite, $Li_xWO_3$, $Li_xV_2O_5$, $LiCoO_2$, $LiFePO_4$, $LiMn_2O_4$, $LiNi0_2$, $Li_2FePO_4F$, $LiMnPO_4$, $VOPO_4$ system, $LiV_2O_5$, $LiMgSO_4F$, $LiMSO_4F$ (M=Fe, Co, Ni, transition metal), $LiMPO_4F$ (M=Fe, Ti), $Li_x[Li_{0.33}Ti_{1.67}O_4]$, or $Li_4Ti_5O_{12}$, layered transition metal oxides such as Ni-Mn-Co oxides such as $LiNi_{1/3}Co_{1/3}Mn_{1/3}O_2$, and $Li(Li_aNi_xCo_yMn_z)O_2$, and $LiTi_2O_4$, and other Li layered chalcogenides. The cell may comprise at least one of a salt bridge, a separator such as an olefin membrane, and an electrolyte. The electrolyte may be a Li salt in an organic solvent, a eutectic salt, a lithium solid electrolyte, or an aqueous electrolyte. Exemplary cells are [Li or Li alloy such as $Li_3Mg$ or Li graphite/separator such as olefin membrane and organic electrolyte such as $LiPF_6$ electrolyte solution in DEC, $LiBF_4$ in tetrahydrofuran (THF), low-melting point eutectic salt such as a mixture of alkali hydrides, $LiAlCl_4$, a mixture of alkali aluminum or borohydrides with an $H_2$ atmosphere, or a lithium solid electrolyte such as LiPON, lithium silicate, lithium aluminate, lithium aluminosilicate, solid polymer or gel, silicon dioxide ($SiO_2$), aluminum oxide ($Al_2O_3$), lithium oxide ($Li_2O$), gallium oxide ($Ga_2O_3$), phosphorous oxide ($P_2O_5$), silicon aluminum oxide, and solid solutions thereof, or an aqueous electrolyte/$MNH_2$, $M_2NH$ (M = alkali metal), and mixture of M-N-H compounds with optionally mixed metal, MOH, MHS, MHSe, MHTe, hydroxides, oxyhydroxides, compounds comprising metals and hydrogen acid anions such as $NaHCO_3$ or $KHSO_4$, hydrides such as NaH, $TiH_2$, $ZrH_2$, $CeH_2$, $LaH_2$, $MgH_2$, $SrH_2$, $CaH_2$, $BaH_2$, $LiAlH_4$, $LiBH_4$, R-Ni, compounds comprising $H_xLi_y$ or H substituting for Li in at least one of the group of Li-graphite, $Li_xWO_3$, $Li_xV_2O_5$, $LiCoO_2$, $LiFePO_4$, $LiMn_2O_4$, $LiNi0_2$, $Li_2FePO_4F$, $LiMnPO_4$, $VOPO_4$ system, $LiV_2O_5$, $LiMgSO_4F$, $LiMSO_4F$ (M=Fe, Co, Ni, transition metal), $LiMPO_4F$ (M=Fe, Ti), $Li_x[Li_{0.33}Ti_{1.67}O_4]$, or $Li_4Ti_5O_{12}$, layered transition metal oxides such as Ni-Mn-Co oxides such as $LiNi_{1/3}Co_{1/3}Mn_{1/3}O_2$, and $Li(Li_aNi_xCo_yMn_z)O_2$, and $LiTi_2O_4$, other Li layered chalcogenides, and an intercalation compound with hydrogenated support such as hydrogenated carbon, and Pd/C, Pt/C, $Pt/Al_2O_3$, $Pd/Al_2O_3$, Pt/Ti, Ni powder, Nb powder, Ti powder, $Ni/SiO_2$, $Ni/SiO_2$-$Al_2O_3$, with $H_2$ gas, or a hydride such as an alkali, alkaline earth, transition, inner transition, noble, or rare earth metal hydride, $LiAlH_4$, $LiBH_4$, and other such hydrides]. The H source may be HY (protonated zeolite) wherein an exemplary cell is [Na or Li/Celgard organic electrolyte such as LP 30/HY CB]. To improve performance, a conductive material and binder may be added to at least one of the cathode and anode half-cell reactants of the cells of the disclosure. An exemplary conductive material and a binder are carbon black that may be about 10% by weight and ethylene propylene diene monomer binder that may be about 3% by weight; although, other proportions may be used as known in the Art. The conductive material may further serve as at least one of a hydrogen dissociator and a hydrogen support. Suitable conductors that are also dissociators are Pd/C, Pt/C, Ir/C, Rh/C, and Ru/C, $Pt/Al_2O_3$, $Pd/Al_2O_3$, Pt/Ti, Ni powder, Nb powder, Ti powder, $Ni/SiO_2$, and $Ni/SiO_2$-$Al_2O_3$.

In an embodiment, CoH may serve as a MH type hydrogen catalyst to produce hydrinos provided by the breakage of the Co-H bond plus the ionization of 2 electrons from the atom Co each to a continuum energy level such that the sum of the bond energy and ionization energies of the 2 electrons is approximately $m \cdot 27.2\ eV$ where $m$ is 1 as given in TABLE 3. CoH may be formed by the reaction of a metal M such as an alkali metal with cobalt oxyhydroxide such as the reaction of 4M with 2CoOOH to form CoH, $MCoO_2$, MOH, and $M_2O$ or the reaction of 4M and CoOOH to form CoH and $2M_2O$. CoH may also be formed by the reaction of M with cobalt hydroxide such as the reaction of 5M with $2Co(OH)_2$ to form CoH, $MCoO_2$, $2M_2O$, and $1.5H_2$ or the reaction of 3M with $Co(OH)_2$ to form CoH, MOH, and $M_2O$.

In an embodiment, the cathode reactant comprises a mixture of at least two different compounds from the group of oxyhydroxides, hydroxides, and oxides to favor M intercalation rather than MOH (M is alkali) formation. The formation of an intercalated product such as $LiCoO_2$ from CoOOH is rechargeable.

Hydrogen intercalated chalcogenides such as those comprising O, S, Se, and Te may be formed by hydrogen treating the metal chalcogenide. The treatment may be at elevated temperature and pressure. A dissociator such as Pt/C or Pd/C may be used to create atomic hydrogen that spills over on a support such as carbon to intercalate into the chalcogenide. Suitable chalcogenides are at least one of the group of $TiS_2$, $ZrS_2$, $HfS_2$, $TaS_2$, $TeS_2$, $ReS_2$, $PtS_2$, $SnS_2$, SnSSe, $TiSe_2$, $ZrSe_2$, $HfSe_2$, $TaSe_2$, $TeSe_2$, $ReSe_2$, $PtSe_2$, $SnSe_2$, $TiTe_2$, $ZrTe_2$, $VTe_2$, $NbTe_2$, $TaTe_2$, $MoTe_2$, $WTe_2$, $CoTe_2$, $RhTe_2$, $IrTe_2$, $NiTe_2$, $PdTe_2$, $PtTe_2$, $SiTe_2$, $NbS_2$, $TaS_2$, $MoS_2$, $WS_2$, $NbSe_2$, $NbSe_3$, $TaSe_2$, $MoSe_2$, $VSe_2$, $WSe_2$, and $MoTe_2$.

In other embodiments, the alkali metal (M) intercalating compound such as a Li intercalating compound is deficient M wherein the deficiency may be achieved by charging. The M sink may be an element or compound that

reacts with M such as S, Se, Te, $Li_2NH$ or $LiNH_2$. The source of M such as Li may be an alkali metal aluminum or borohydride such as $LiAlH_4$, $LiBH_4$. Exemplary cells are [$LiAlH_4$ or $LiBH_4$/separator such as olefin membrane and organic electrolyte such as $LiPF_6$ electrolyte solution in DEC or $LiBF_4$ in tetrahydrofuran (THF)/NaH, $TiH_2$, $ZrH_2$, $CeH_2$, $LaH_2$, $MgH_2$, $SrH_2$, $CaH_2$, $BaH_2$, S, Se, Te, $Li_2NH$, $LiNH_2$, R-Ni, Li deficiency in at least one of the group of Li-graphite, $Li_xWO_3$, $Li_xV_2O_5$, $LiCoO_2$, $LiFePO_4$, $LiMn_2O_4$, $LiNi0_2$, $Li_2FePO_4F$, $LiMnPO_4$, $VOPO_4$ system, $LiV_2O_5$, $LiMgSO_4F$, $LiMSO_4F$ (M=Fe, Co, Ni, transition metal), $LiMPO_4F$ (M=Fe, Ti), $Li_x[Li_{0.33}Ti_{1.67}O_4]$, or $Li_4Ti_5O_{12}$, layered transition metal oxides such as Ni-Mn-Co oxides such as $LiNi_{1/3}Co_{1/3}Mn_{1/3}O_2$, and $Li(Li_aNi_xCo_yMn_z)O_2$, and $LiTi_2O_4$, other Li layered chalcogenides, and an intercalation compound with optionally a hydrogenated support such as hydrogenated carbon, and Pd/C, Pt/C, $Pt/Al_2O_3$, $Pd/Al_2O_3$, Pt/Ti, Ni powder, Nb powder, Ti powder, $Ni/SiO_2$, $Ni/SiO_2$-$Al_2O_3$, with $H_2$ gas, or a hydride such as an alkali, alkaline earth, transition, inner transition, noble, or rare earth metal hydride, $LiAlH_4$, $LiBH_4$, and other such hydrides] and [$MBH_4$ (M=Li, Na, K)/BASE/ S, Se, Te, hydrogen chalcogenides such as NaOH, NaHS, NaHSe, and NaHTe, hydroxides, oxyhydroxides such as CoO(OH) or $HCoO_2$ and NiO(OH), hydrides such as NaH, $TiH_2$, $ZrH_2$, $CeH_2$, $LaH_2$, $MgH_2$, $SrH_2$, $CaH_2$, and $BaH_2$, $Li_2NH$, $LiNH_2$, R-Ni, Li deficiency in at least one of the group of Li-graphite, $Li_xWO_3$, $Li_xV_2O_5$, $LiCoO_2$, $LiFePO_4$, $LiMn_2O_4$, $LiNi0_2$, $Li_2FePO_4F$, $LiMnPO_4$, $VOPO_4$ system, $LiV_2O_5$, $LiMgSO_4F$, $LiMSO_4F$ (M=Fe, Co, Ni, transition metal), $LiMPO_4F$ (M=Fe, Ti), $Li_x[Li_{0.33}Ti_{1.67}O_4]$, or $Li_4Ti_5O_{12}$, layered transition metal oxides such as Ni-Mn-Co oxides such as $LiNi_{1/3}Co_{1/3}Mn_{1/3}O_2$, and $Li(Li_aNi_xCo_yMn_z)O_2$, and $LiTi_2O_4$, other Li layered chalcogenides, and an intercalation compound with optionally a hydrogenated support such as hydrogenated carbon, and Pd/C, Pt/C, $Pt/Al_2O_3$, $Pd/Al_2O_3$, Pt/Ti, Ni powder, Nb powder, Ti powder, $Ni/SiO_2$, $Ni/SiO_2$-$Al_2O_3$, with $H_2$ gas, or a hydride such as an alkali, alkaline earth, transition, inner transition, noble, or rare earth metal hydride, $LiAlH_4$, $LiBH_4$, and other such hydrides]. Further exemplary suitable oxyhyroxides are at least one of the group of bracewellite (CrO(OH)), diaspore (AlO(OH)), ScO(OH), YO(OH), VO(OH), goethite ($\alpha$-$Fe^{3+}$O(OH)), groutite ($Mn^{3+}$O(OH)), guyanaite (CrO(OH)), montroseite ((V,Fe)O(OH)), CoO(OH), NiO(OH), $Ni_{1/2}Co_{1/2}O(OH)$, and $Ni_{1/3}Co_{1/3}Mn_{1/3}O(OH)$, RhO(OH), InO(OH), tsumgallite (GaO(OH)), manganite ($Mn^{3+}$O(OH)), yttrotungstite-(Y) $YW_2O_6(OH)_3$, yttrotungstite-(Ce) ((Ce, Nd, Y)$W_2O_6(OH)_3$), unnamed (Nd-analogue of yttrotungstite-(Ce)) ((Nd, Ce, La)$W_2O_6(OH)_3$), frankhawthorneite ($Cu_2[(OH)_2[TeO_4]$), khinite $(Pb^{2+}Cu_3^{2+}(TeO_6)(OH)_2)$, and parakhinite $(Pb^{2+}Cu_3^{2+}TeO_6(OH)_2)$.

In an embodiment comprising R-Ni and a migrating alkali metal ion such as $Li^+$, R-Ni hydride may be regenerated by first hydriding any Li-R-Ni product incorporated in the material by H reduction to form LiH followed by electrolysis wherein $Li^+$ and R-Ni hydride are formed from oxidation of LiH. The then $Li^+$ is reduced at the electrolysis cathode (CIHT cell anode).

In an embodiment comprising R-Ni, the R-Ni may be doped with another compound to form hydrogen or a hydride. A suitable dopant is MOH (M=alkali metal). The reaction with the reduced migrating ion comprising an alkali metal is 2M + MOH to $M_2O$ + MH; MH reacts to form hydrinos and the MOH may be regenerated by addition of hydrogen (e.g. Eqs. (217) and (220)). Exemplary cells are [Li/ polypropylene membrane saturated with a 1 M $LiPF_6$ electrolyte solution in 1:1 dimethyl carbonate/ethylene carbonate/R-Ni], [Li/ polypropylene membrane saturated with a 1 M $LiPF_6$ electrolyte solution in 1:1 dimethyl carbonate/ethylene carbonate/LiOH-doped R-Ni], [Na/ polypropylene membrane saturated with a 1 M $NaPF_6$ electrolyte solution in 1:1 dimethyl carbonate/ethylene carbonate/NaOH-doped R-Ni], and [K/ polypropylene membrane saturated with a 1 M $KPF_6$ electrolyte solution in 1:1 dimethyl carbonate/ethylene carbonate/KOH-doped R-Ni].

In an embodiment, the incorporation of H into a material such as an intercalation compound may be by electrolysis. The intercalation compound comprising H and optionally a metal such as Li may be formed by the electrolysis of an electrolyte comprising protons or a source of protons or the oxidation of hydride ions or a source of hydride ions. The protons or source of protons or the hydride ions or source of hydride ions may be the counter half-cells and the electrolytes of electrochemical cells such as those of the present disclosure. For example, the former may be provided by the half-cell and electrolyte [Pt($H_2$), Pt/C($H_2$), borane, amino boranes and borane amines, $AlH_3$, or H-X compound X=Group V,VI, or VII element)/inorganic salt mixture comprising a liquid electrolyte such as ammonium nitrate-trifluoractetate/. The latter may be provided by the electrolyte and half-cell /$H^-$ conducting electrolyte such as a molten eutectic salt such a LiCl-KCl/H permeable cathode and $H_2$ such as Ni($H_2$) and Fe($H_2$), hydride such as an alkali, alkaline earth, transition, inner transition, or rare earth metal hydride, the latter being for example, $CeH_2$, $DyH_2$, $ErH_2$, $GdH_2$, $HoH_2$, $LaH_2$, $LuH_2$, $NdH_2$, $PrH_2$, $ScH_2$, $TbH_2$, $TmH_2$, and $YH_2$, and a M-N-H compound such as $Li_2NH$ or $LiNH_2$]. In an embodiment, compounds such as $H_xLi_y$ or H substituting for Li in Li-graphite, $Li_xWO_3$, $Li_xV_2O_5$, $LiCoO_2$, $LiFePO_4$, $LiMn_2O_4$, $LiNi0_2$, $Li_2FePO_4F$, $LiMnPO_4$, $VOPO_4$ system, $LiV_2O_5$, $LiMgSO_4F$, $LiMSO_4F$ (M=Fe, Co, Ni, transition metal), $LiMPO_4F$ (M=Fe, Ti), $Li_x[Li_{0.33}Ti_{1.67}O_4]$, or $Li_4Ti_5O_{12}$, layered transition metal oxides such as Ni-Mn-Co oxides such as $LiNi_{1/3}Co_{1/3}Mn_{1/3}O_2$, and $Li(Li_aNi_xCo_yMn_z)O_2$, and $LiTi_2O_4$, other Li layered chalcogenides can be synthesized by reacting the Li chalcogenide with a source of protons such as ammonium salt such as ammonium nitrate followed by decomposition such as decomposition with release of $NH_3$ or by reaction with an acid with the formation of the Li compound of the anion. The synthesis may be in aqueous solution or in an ionic liquid. An exemplary reaction is

$$Li_xCoO_2 + yHCl \text{ to } Li_{x-y}CoO_2 + yLiCl \quad (303)$$

$$LiCoO_2 + HCl \text{ to } + LiCl + CoO(OH) \text{ or } HCoO_2 \quad (304)$$

A desired product is CoO(OH), heterogenite, or $HCoO_2$. In the case that the migrating ion of the cell is $Li^+$ with reduction at the cathode, the reaction to form hydrino may be

$$CoO(OH) \text{ or } HCoO_2 + 2Li \text{ to } LiH + LiCoO_2 \quad (305)$$

$$LiH \text{ to } H(1/p) + Li \quad (306)$$

wherein Li may serve as the catalyst. Other products are $Co(OH)_2$, and $Co_3O_4$. The LiCl may be removed by filtration of the solid product. In other embodiments, another acid may be substituted for HCl with the corresponding Li acid anion compound formed. Suitable acids are those known in the Art such as HF, HBr, HI, $H_2S$, nitric, nitrous, sulfuric, sulfurous, phosphoric, carbonic, acetic, oxalic, perchloric, chloric, chlorous, and hypochlorous acid. In an embodiment, H may replace F an intercalation compound such as $LiMSO_4F$ (M=Fe, Co, Ni, transition metal) by the reaction of LiH with $MSO_4$ in an ionic liquid at elevated temperature. During cell discharge the H may react to from hydrinos. The incorporation of the migrating ion such as $Li^+$ during discharge may give rise to free or reactive H to form hydrinos. In other embodiments, the alkali may be substituted with another.

In other embodiments, a cathode reactant comprises at least one of a hydroxide or oxyhydroxide that may be synthesized by methods known to those skilled in the art. The reactions may be given by Eqs. (303-304). Another exemplary oxyhydroxide hydrino reaction involving NiO(OH) is given by

$$NiO(OH) + 2Li \text{ to } LiH + LiNiO_2 \quad (307)$$

$$LiH \text{ to } H(1/p) + Li \quad (308)$$

Further exemplary suitable oxyhyroxides are at least one of the group of bracewellite (CrO(OH)), diaspore (AlO(OH)), ScO(OH), YO(OH), VO(OH), goethite ($\alpha$-$Fe^{3+}O(OH)$), groutite ($Mn^{3+}O(OH)$), guyanaite (CrO(OH)), montroseite ((V,Fe)O(OH)), CoO(OH), NiO(OH), $Ni_{1/2}Co_{1/2}O(OH)$, and $Ni_{1/3}Co_{1/3}Mn_{1/3}O(OH)$, RhO(OH), InO(OH), tsumgallite (GaO(OH)), manganite ($Mn^{3+}O(OH)$), yttrotungstite-(Y) $YW_2O_6(OH)_3$, yttrotungstite-(Ce) ((Ce, Nd, Y)$W_2O_6(OH)_3$), unnamed (Nd-analogue of yttrotungstite-(Ce)) ((Nd, Ce, La)$W_2O_6(OH)_3$), frankhawthorneite ($Cu_2[(OH)_2[TeO_4]$), khinite ($Pb^{2+}Cu_3^{2+}(TeO_6)(OH)_2$), and parakhinite ($Pb^{2+}Cu_3^{2+}TeO_6(OH)_2$). The reactants may be regenerated from the products by electrolysis. Alternatively, the products may be converted to the initial reactants using chemical processing steps known in the art, and may use methods of the disclosure such as the step given by Eq. (304). In an embodiment, a combination of electrolysis and chemical steps may be used. For example, the product may be delithiated by electrolysis, and the resulting $CoO_2$ may be converted to CoO(OH) or $HCoO_2$.

In an embodiment, the oxyhydroxide is regenerated by at least one of electrolysis and chemical regeneration. Hydrogen consumed to form hydrinos may be replaced by adding hydrogen gas or a hydrogen source such as a hydride such as LiH. Li may be extracted by heating and evaporation or sublimation with H replacement using applied hydrogen. For example, $LiCoO_2$ may be at least partially converted to CoO(OH) or $HCoO_2$ by treatment with acid such as HCl (Eqs. (303-304)). Alternatively, the oxyhydroxide may be regenerated by electrolysis in aqueous solution with the removed Li forming lithium oxide. In another embodiment, the H is replaced by treating the product with a gaseous acid such as a hydrohalous acid such as HBr or HI. The intercalated Li may react with the acid to form the corresponding halide such as LBr or LiI. The lithium halide may be removed by sublimation or evaporation.

In an embodiment, the regeneration is achieved using a CIHT cell comprising three half-cells as shown in FIGURE 21. The primary anode 600 and cathode 601 half-cells comprise the principle cell comprising the standard reactants such as a source of Li and CoO(OH), respectively, separated by a separator 602 and an organic electrolyte. Each has its corresponding electrode 603 and 604, respectively. The power of the discharging principle cell is dissipated in the load 605 following closing the switch 606. In addition, the third or regeneration half-cell 607 interfaces the primary cathode half-cell 601 and comprises a source of protons. The primary cathode and regeneration half-cells are separated by a proton conductor 608. The regeneration half-cell has its electrode 609. During recharging of the principle cell power

is supplied by source 610 with switch 611 closed and switch 606 opened. The regeneration half-cell 607 serves as the secondary anode and the primary anode 600 serves as a secondary cathode. Protons are formed by oxidation of H and migrate from the regeneration cell 607 to the primary cathode 601. $Li^+$ ions are displaced from $LiCoO_2$ by $H^+$ ions to form CoO(OH) or $HCoO_2$ as the $Li^+$ ions migrate to the secondary cathode 600 and are reduced to Li. In a three chamber cell embodiment, the recharge anode may comprise a proton source such as Pt/C($H_2$) and a proton conductor. Then the recharge cell could be [Pt/C($H_2$) with proton conductor interface/LiCoO2/Li]. Exemplary cells are [Li source such as Li or an Li alloy such as $Li_3Mg$ or LiC/olefin separator and organic electrolyte such as Celgard and LP 40/CoO(OH) or $HCoO_2$/proton conductor/ $H^+$ source such as Pt($H_2$), Pt/C($H_2$)]. In another embodiment, hydrogen is supplied to chamber 607 that comprises a hydrogen dissociation catalyst such as Pt/C and a membrane separator at 608 that may be Nafion whereby H atoms diffuse into the cathode product material in chamber 601 while an electrolysis voltage is applied between electrodes 604 and 603. The positive applied voltage on electrode 604 causes Li to migrate to chamber 600 to be reduced at electrode 603 while H is incorporated into the cathode material during electrolysis. In another embodiment, the separator 608 is electrically isolated from the cell body and comprises the electrode 609. The chamber 607 comprises an H source such as a hydride. The electrode 609 may oxidize $H^-$ of a source such as the hydride. The conductivity may be increased by a molten eutectic salt $H^-$ conductor in chamber 607. The electrolysis causes H to migrate to chamber 601 to become intercalated in the oxyhydroxide.

In an embodiment, the migrating ion may be reduced during electrolysis such that the reduced species forms a compound of the reduced form and further comprises hydrogen in any form such as at least one of hydrogen, protons, hydride ions, and a source of hydrogen, protons, and hydride ions. For example, $Li^+$ may be reduced at an electrode comprising carbon as a half-cell reactant. The Li may intercalate into the carbon. The intercalation may displace some of the H atoms. The creation of H's in the material is such that multiple H atoms interact to form hydrinos. Furthermore, during discharge the migration of an ion such as a metal ion such as $Li^+$ creates vacancies in a composite material comprising a source of the migrating ion such as the migrating ion in a different oxidation state and hydrogen, protons, hydride ions or a source of hydrogen, protons, hydride ions. The vacancies created by the movement of the migrating ion have the effect of creating H vacancies (holes) or H's in a material such that multiple H atoms interact to form hydrinos. Alternatively, the reduced migrating ion or its hydride may serve as the catalyst or source of catalyst. The cathode for the migrating ion may be a reactant that forms a compound with the reduced migration ion such as a reactant that forms an intercalation compound with the reduced migration ion. Suitable intercalation compounds for exemplary Li are those that comprise the anode or cathode of a Li ion battery such as those of the disclosure. Suitable exemplary intercalation compounds are Li graphite, $Li_xWO_3$, $Li_xV_2O_5$, $LiCoO_2$, $LiFePO_4$, $LiMn_2O_4$, $LiNi0_2$, $Li_2FePO_4F$, $LiMnPO_4$, $VOPO_4$ system, $LiV_2O_5$, $LiMgSO_4F$, $LiMSO_4F$ (M=Fe, Co, Ni, transition metal), $LiMPO_4F$ (M=Fe, Ti), $Li_x[Li_{0.33}Ti_{1.67}O_4]$, or $Li_4Ti_5O_{12}$, layered transition metal oxides such as Ni-Mn-Co oxides such as $LiNi_{1/3}Co_{1/3}Mn_{1/3}O_2$, and $Li(Li_aNi_xCo_yMn_z)O_2$, and $LiTi_2O_4$, and other Li layered chalcogenides. Suitable anodes form a compound of the migrating ion and further comprise hydrogen. The anode may be a mixture of materials or compounds. For example, hydrogen may be present as a hydride such as LiH, and the compound of the migrating ion may comprise an intercalation compound such as carbon or other negative electrode of a Li ion battery. Alternatively, the compound of the migrating ion may comprise an alloy such as at least one of $Li_3Mg$, LiAl, LiSi, LiB, LiC, LiPb, LiGa, LiTe, LiSe such as $Li_2Se$, LiCd, LiBi, LiPd, LiSn, $Li_2CuSn$, $Li_xIn_{1-y}Sb$ ($0<x<3$, $0<y<1$), LiSb, LiZn, Li metal-metalloid alloys such as oxides, nitrides, borides, and silicides, and mixed-metal-Li alloys or a compound that is a source of Li such as one that releases Li upon reaction with the hydride. Exemplary compounds of the latter type are $Li_3N$ and $Li_2NH$ that can react with LiH for example to give Li ions, electrons, and $Li_2NH$ or $LiNH_2$. Exemplary cells are [at least one of a composite of H and Li graphite that may be formed by electrolysis, a mixture of a hydride and a species that is a Li source and supports H such as lithiated carbon, a carbide, boride, or silicon, a mixture of a hydride such as LiH and an alloy such as at least one of $Li_3Mg$, LiAl, LiSi, LiB, LiC, LiPb, LiGa, LiTe, LiSe such as $Li_2Se$, LiCd, LiBi, LiPd, LiSn, $Li_2CuSn$, $Li_xIn_{1-y}Sb$ ($0<x<3$, $0<y<1$), LiSb, LiZn, Li metal-metalloid alloys such as oxides, nitrides, borides, and silicides, and mixed-metal-Li alloys, and a mixture of a hydride such as LiH and $Li_3N$ or $Li_2NH$/separator such as olefin membrane and organic electrolyte such as $LiPF_6$ electrolyte solution in DEC or eutectic salt/graphite, $Li_xWO_3$, $Li_xV_2O_5$, $LiCoO_2$, $LiFePO_4$, $LiMn_2O_4$, $LiNi0_2$, $Li_2FePO_4F$, $LiMnPO_4$, $VOPO_4$ system, $LiV_2O_5$, $LiMgSO_4F$, $LiMSO_4F$ (M=Fe, Co, Ni, transition metal), $LiMPO_4F$ (M=Fe, Ti), $Li_x[Li_{0.33}Ti_{1.67}O_4]$, or $Li_4Ti_5O_{12}$, layered transition metal oxides such as Ni-Mn-Co oxides such as $LiNi_{1/3}Co_{1/3}Mn_{1/3}O_2$, and $Li(Li_aNi_xCo_yMn_z)O_2$, and $LiTi_2O_4$, $LiMgSO_4F$, $LiMSO_4F$ (M=Fe, Co, Ni, transition metal), $LiMPO_4F$ (M=Fe, Ti), other Li layered chalcogenides].

In an embodiment, the H that is consumed to form hydrinos of an electrode material such as the composite comprising H and product or source of the migrating ion may be replaced by hydrogen gas. The application of hydrogen gas may displace molecular hydrino.

In embodiments, the cathode may comprise a hydrogen permeable membrane such as metal tube that is coated with the reduced migrating ion such as a metal ion such as reduced $Li^+$ ion. The reduced migrating ion such as Li metal may be electroplated onto the membrane by electrolysis. The source of the migrating ion may be a Li ion battery electrode material such as those of the disclosure. Suitable Li sources are at least one of Li graphite, $Li_xWO_3$, $Li_xV_2O_5$, $LiCoO_2$, $LiFePO_4$, $LiMn_2O_4$, $LiNi0_2$, $Li_2FePO_4F$, $LiMnPO_4$, $VOPO_4$ system, $LiV_2O_5$, $LiMgSO_4F$, $LiMSO_4F$ (M=Fe, Co, Ni, transition

metal), $LiMPO_4F$ (M=Fe, Ti), $Li_x[Li_{0.33}Ti_{1.67}O_4]$, or $Li_4Ti_5O_{12}$, layered transition metal oxides such as Ni-Mn-Co oxides such as $LiNi_{1/3}Co_{1/3}Mn_{1/3}O_2$, and $Li(Li_aNi_xCo_yMn_z)O_2$, and $LiTi_2O_4$, and other Li layered chalcogenides. The electroplating may occur in the absence of hydrogen. Then, hydrogen may be applied to the inside of the tube with no electrolysis voltage wherein the electrode then serves as the CIHT cell cathode. Other suitable Li sources are Li metal, Li alloys and Li compounds such as a Li-N-H compound.

In an embodiment, a compound comprising H releases atomic H that undergoes catalysis to from hydrinos wherein at least one H serves as the catalyst for at least another H. The H compound may be H intercalated into a matrix such as H in carbon or H in a metal such as R-Ni. The compound may be a hydride such as an alkali, alkaline earth, transition, inner transition, noble, or rare earth metal hydride, $LiAlH_4$, $LiBH_4$, and other such hydrides. The release may be by the incorporation of the migrating ion of the cell such as an alkali ion such as $Li^+$ into the compound. Alternatively, the reduced migrating ion or its hydride may serve as the catalyst or source of catalyst. The cathode may comprise carbon, a carbon coated conductor such as a metal or other material capable of absorbing H and intercalating a metal that displaces H or changes its chemical potential or oxidation state in the lattice. For example, K and H in a carbon matrix exists as a three-layer of carbon, K ions and hydride ions, and carbon (C/..,$K^+$ $H^-$ $K^+$ $H^-$.../C), and Li and H exist as LiH in the carbon layers. In general, the metal-carbon compound such as those known as hydrogen-alkali-metal-graphite-ternary intercalation compounds may comprise $MC_x$ (M is a metal such as an alkali metal comprising $M^+$ and $C_x^-$ ). During operation, H and at least one of an atom or ion other than a species of H such as K, $K^+$, Li, or $Li^+$ may be incorporated in the carbon lattice such that H atoms are created that can undergo catalysis to form hydrinos wherein at least one H may serve as the catalyst for at least one other H atom, or the atom or ion other than a species of H may serve as the catalyst or source of catalyst. In other embodiments, other intercalation compounds may substitute for carbon such as hexagonal boronitride (hBN), chalcogenides, carbides, silicon, and borides such as $TiB_2$ and $MgB_2$. Exemplary cells are [hydrogen-alkali-metal-graphite-ternary intercalation compounds, Li, K, Li alloy/separator such as olefin membrane and organic electrolyte such as $LiPF_6$ electrolyte solution in DEC or eutectic salt/ hydrogen-alkali-metal-graphite-ternary intercalation compounds, or H incorporated into at least one of the group of hBN, Li hBN, graphite, Li graphite, $Li_xWO_3$, $Li_xV_2O_5$, $LiCoO_2$, $LiFePO_4$, $LiMn_2O_4$, $LiNi0_2$, $Li_2FePO_4F$, $LiMnPO_4$, $VOPO_4$ system, $LiV_2O_5$, $LiMgSO_4F$, $LiMSO_4F$ (M=Fe, Co, Ni, transition metal), $LiMPO_4F$ (M=Fe, Ti), $Li_x[Li_{0.33}Ti_{1.67}O_4]$, or $Li_4Ti_5O_{12}$, layered transition metal oxides such as Ni-Mn-Co oxides such as $LiNi_{1/3}Co_{1/3}Mn_{1/3}O_2$, and $Li(Li_aNi_xCo_yMn_z)O_2$, and $LiTi_2O_4$, other Li layered chalcogenides] and [Li/Celgard LP 30/hydrogenated PtC or PdC] wherein the hydrogen may be replaced as consumed to form hydrinos.

In embodiments, at least one of the cathode and anode half-cell reactants comprises modified carbon. The modified carbon may comprise physi-absorbed or chemi-absorbed hydrogen. The modified carbon may comprise intercalation compounds of graphite given in M. S. Dresselhaus and G. Dresselhaus, "Intercalation compounds of graphite", Advances in Physics, (2002), Vol. 51, No. 1, pp. 1-186 which is incorporated herein by reference. The modified carbon may comprise or further comprise an intercalated species such as at least one of K, Rb, Cs, Li, Na, KH, RbH, CsH, LiH, NaH, Sr, Ba, Co, Eu, Yb, Sm, Tm, Ca, Ag, Cu, $AlBr_3$, $AlCl_3$, $AsF_3$, $AsF_5$, $AsF_6$, $Br_2$, $Cl_2$, $Cl_2O_7$, $Cl_3Fe_2Cl_3$, $CoCl_2$, $CrCl_3$, $CuCl_2$, $FeCl_2$, $FeCl_3$, $H_2SO_4$, $HClO_4$, $HgCl_2$, $HNO_3$, $I_2$, ICl, IBr, KBr, $MoCl_5$, $N_2O_5$, $NiCl_2$, $PdCl_2$, $SbCl_5$, $SbF_5$, $SO_3$, $SOCl_2$, $SO_2Cl_2$, $TlBr_3$, $UCl_4$, $WCl_6$, MOH, $M(NH_3)_2$, wherein the compound may be $C_{12}M(NH_3)_2$ (M=alkali metal), a chalcogenide, a metal, a metal that forms an alloy with an alkali metal, and metal hydride, a lithium ion battery anode or cathode reactant, and M-N-H compound wherein M is a metal such as Li, Na, or K, $MAlH_4$ (M=alkali metal), $MBH_4$ (M=alkali metal), and other reactants of the disclosure. The lithium ion battery reactant may be at least one of the group of $Li_xWO_3$, $Li_xV_2O_5$, $LiCoO_2$, $LiFePO_4$, $LiMn_2O_4$, $LiNi0_2$, $Li_2FePO_4F$, $LiMnPO_4$, $VOPO_4$ system, $LiV_2O_5$, $LiMgSO_4F$, $LiMSO_4F$ (M=Fe, Co, Ni, transition metal), $LiMPO_4F$ (M=Fe, Ti), $Li_x[Li_{0.33}Ti_{1.67}O_4]$, or $Li_4Ti_5O_{12}$, layered transition metal oxides such as Ni-Mn-Co oxides such as $LiNi_{1/3}Co_{1/3}Mn_{1/3}O_2$, and $Li(Li_aNi_xCo_yMn_z)O_2$, and $LiTi_2O_4$, and other Li layered chalcogenides. Suitable chalcogenides are at least one of the group of $TiS_2$, $ZrS_2$, $HfS_2$, $TaS_2$, $TeS_2$, $ReS_2$, $PtS_2$, $SnS_2$, SnSSe, $TiSe_2$, $ZrSe_2$, $HfSe_2$, $TaSe_2$, $TeSe_2$, $ReSe_2$, $PtSe_2$, $SnSe_2$, $TiTe_2$, $ZrTe_2$, $VTe_2$, $NbTe_2$, $TaTe_2$, $MoTe_2$, $WTe_2$, $CoTe_2$, $RhTe_2$, $IrTe_2$, $NiTe_2$, $PdTe_2$, $PtTe_2$, $SiTe_2$, $NbS_2$, $TaS_2$, $MoS_2$, $WS_2$, $NbSe_2$, $NbSe_3$, $TaSe_2$, $MoSe_2$, $VSe_2$, $WSe_2$, and $MoTe_2$.

The modified carbon may comprise negative centers that bind $H^+$. The negative centers may comprise an intercalated species such as a negative ion. The modified carbon may comprise oxide centers formed by oxidation or by intercalation. The modified cabon may comprise intercalated $HNO_3$ or $H_2SO_4$. Exemplary cells are [Li or Li alloy such as $Li_3Mg$ or LiC/Celgard organic electrolyte such as LP 30 or eutectic salt/$HNO_3$ intercalated carbon], [Li/Celgard LP 30/$H_2SO_4$ intercalated carbon], [$LiTi_2(PO_4)_3$, $Li_xVO_2$, $LiV_3O_8$, $Li_2Mn_4O_9$, or $Li_4Mn_5O_{12}$/aqueous $LiNO_3$/$HNO_3$ intercalated carbon], and [Li/Celgard LP 30/carbon nanotubes ($H_2$)]. Further examples of modified carbon may comprise $N_2O$, $SF_6$ $CF_4$, $NF_3$ $PCl_3$, $PCl_5$, $CS_2$, $SO_2$, $CO_2$, $P_2O_5$, absorbed or intercalated in carbon. Exemplary cells are Li/Celgard LP 30 or eutectic salt/modified carbon such as at least one of the group of $N_2O$, $SF_6$ $CF_4$, $NF_3$ $PCl_3$, $PCl_5$, $CS_2$, $SO_2$, $CO_2$,

and $P_2O_5$ absorbed in carbon].

In an embodiment, the modified carbon is graphite oxide. Hydrogen as atoms and molecules may intercalate into the graphite oxide. H intercalated graphite oxide may comprise a cathode half-cell reactant. The H may be displaced by an alkali metal to form hydrinos. An exemplary cell is [Li/Celgard LP 30/H intercalated graphite oxide].

The modified carbon may also comprise a complex of an intercalation species such as an alkali metal such as K, Rb, or Cs or an alkaline earth metal and an acceptor such as an aromatic acceptor. In an embodiment, the acceptor forms a charge-transfer complex with the donor and further absorbs or binds hydrogen by means such as physisorption or chemisorption. Suitable exemplary acceptors are tetracyanopyrene, tetranitropyrene, tetracyanoethylene, phthalonitrile, tetraphthalonitrile, Violanthrene B, graphite, and similar molecules or materials. The modified carbon may be graphene or modified graphene with at least bound H and optionally other species of modified carbon. The anode may comprise a source of alkali metal ion $M^+$ that serves as the migrating ion such as $Li^+$, $Na^+$, or $K^+$. The source may be an alkali metal, hydrogen-alkali-metal-graphite-ternary intercalation compound, alkali metal alloy, or other such source of the disclosure. The cell may comprise an electrolyte such as an organic or aqueous electrolyte and a salt and may further comprise a salt bridge or separator. In other embodiments, the anode may comprise a source of alkali or alkaline earth metals or at least one of the metals and the modified carbon may comprise one of these metals. Exemplary cells are [at least one of a modified carbon such as a hydrogen-alkali-metal-graphite-ternary intercalation compound and an alkali metal or alkaline earth metal M or alloy/separator such as olefin membrane and organic electrolyte such as $MPF_6$ electrolyte solution in DEC or eutectic salt/modified carbon].

In an embodiment, the cathode and anode may comprise at least one of carbon, hydrogenated carbon, and modified carbon. In an embodiment comprising a form of carbon at both half-cells, the migrating ion may be $H^+$ or $H^-$ wherein the anode and cathode half-cell reactants, respectively, comprise hydrogen. For example, the cathode may comprise a hydrogen-alkali-metal-graphite-ternary intercalation compound that is reduced to a hydride ion that migrates through a $H^-$ conducting electrolyte such as a molten eutectic salt such as an alkali halide mixture such as LiCl-KCl. The hydride ion may be oxidized at the anode to form hydrogenated carbon from carbon or a hydrogen-alkali-metal-graphite-ternary intercalation compound from an alkali-metal-graphite-ternary intercalation compound. Alternatively, hydrogenated carbon or a hydrogen-alkali-metal-graphite-ternary intercalation compound may be oxidized at the anode to $H^+$ that migrates through a $H^+$ conducting electrolyte such as Nafion, an ionic liquid, a solid proton conductor, or an aqueous electrolyte to the cathode half-cell wherein it is reduced to H. The H may react to form hydrogenated carbon or a hydrogen-alkali-metal-graphite-ternary intercalation compound from an alkali-metal-graphite-ternary intercalation compound. Exemplary cells are [carbon such as carbon black or graphite/ eutectic salt such as LiCl-KCl/hydrogen-alkali-metal-graphite-ternary intercalation compound or hydrogenated carbon], [alkali-metal-graphite-ternary intercalation compound/eutectic salt such as LiCl-KCl/hydrogen-alkali-metal-graphite-ternary intercalation compound or hydrogenated carbon], and [hydrogenated carbon/proton conducting electrolyte such as Nafion or an ionic liquid/ carbon such as carbon black or graphite].

In an embodiment, an alkali hydride such as KH in graphite has some interesting properties that could serve cathode or anode of the CIHT cell where $H^-$ migration to the anode or $K^+$ migration to the cathode comprising a compound such as $C_8KH_x$ results in charge transfer and H displacement or incorporation to give rise to a reaction to form hydrinos. Exemplary cells are [K/separator such as olefin membrane and organic electrolyte such as $KPF_6$ electrolyte solution in DEC/at least one of carbon($H_2$) and $C_8KH_x$], [Na/separator such as olefin membrane and organic electrolyte such as $NaPF_6$ electrolyte solution in DEC/ at least one of carbon ($H_2$) and $C_yNaH_x$], [at least one of carbon($H_2$) and $C_8KH_x$/eutectic salt/hydride such as metal hydride or $H_2$ through a permeable membrane], [at least one of carbon ($H_2$) and $C_yNaH_x$ /eutectic salt/ at least one of hydride such as metal hydride and $H_2$ through a permeable membrane], and [at least one of carbon($H_2$), $C_yLiH_x$, and $C_yLi$/eutectic salt/ at least one of hydride such as metal hydride and $H_2$ through a permeable membrane].

In an embodiment, the anode may comprise a polythiophene-derivative (PthioP), and the cathode may comprise polypyrrole (PPy). The electrolyte may be $LiClO_4$ such as 0.1M in an organic solvent such as acetonitrile. An exemplary reversible reaction that drives the creation of vacancies and H addition in hydrogenated carbon that form hydrinos is

$$\left[-Py_3^+ - A^-\right] + \left[-Th_3-\right] \rightleftharpoons \left[-Py_3-\right] + \left[-Th_3^+ - A^-\right] \tag{309}$$

where *-Py-* is the pyrrole monomer and *-Th-* is the thiophene monomer and A is the anion involved in the anion shuttle between half-cells. Alternatively, the anode may comprise polypyrrole, and the cathode may comprise graphite. The electrolyte may be an alkali salt such as a Li-salt in an electrolyte such as propylenecarbonate (PC). At least one of the electrodes may comprise hydrogenated carbon wherein the electron and ion transfer reactions cause atomic H to react to form hydrinos. Exemplary cells are [PthioP CB($H_2$)/0.1M $LiClO_4$ acetonitrile /PPy CB($H_2$)] and [PPy CB($H_2$)/Li salt PC/graphite($H_2$)] wherein CB is carbon black.

In another embodiment, the anode and cathode may be carbon that may be hydrogenated such as hydrogenated

carbon black and graphite, respectively. The electrolyte may be an acid such as $H_2SO_4$. The concentration may be high such as 12 M. An exemplary reversible reaction that drives the creation of vacancies and H addition in hydrogenated carbon that form hydrinos is

$$C_{48}^{(+)}HSO_4^{(-)}2H_2SO_4 + C_{10}^{(-)}H^{(+)} \rightleftharpoons 58C + 3H_2SO_4 \tag{310}$$

An exemplary cell is [CB($H_2$)/12 M $H_2SO_4$/ graphite($H_2$)].

In an embodiment, the cell comprises an aqueous electrolyte. The electrolyte may be an alkali metal salt in solution such an alkali sulfate, hydrogen sulfate, nitrate, nitrite, phosphate, hydrogen phosphate, dihydrogen phosphate, carbonate, hydrogen carbonate, halide, hydroxide, permanganate, chlorate, perchlorate, chlorite, perchlorite, hypochlorite, bromate, perbromate, bromite, perbromite, iodate, periodate, iodite, periodite, chromate, dichromate, tellurate, selenate, arsenate, silicate, borate, and other oxyanion. Another suitable electrolyte is an alkali borohydride such as sodium borohydride in concentrated base such as about 4.4 M $NaBH_4$ in about 14 M NaOH. The negative electrode may be carbon such as graphite or activated carbon. During charging the alkali metal such as Na is incorporated into the carbon. The positive electrode may comprise a compound or material comprising H where the migrating ion displaces H to release H that further undergoes reaction to form hydrinos. The positive electrode may comprise H substituted $Na_4Mn_9O_{18}$, similar such manganese oxide compounds, similar ruthenium oxide compounds, similar nickel oxide compounds, and at least one such compound in a hydrogenated matrix such as hydrogenated carbon. The compound or material comprising H may be at least one of H zeolite (HY wherein Y = zeolite comprising NaY with some Na replaced by H). HY may be formed by reaction NaY with $NH_4Cl$ to form HY, NaCl, and $NH_3$ that is removed. Poorly conducting half-cell reactants may be mixed with a conducting matrix such as carbon, carbide, or boride. The cathode may be a silicic acid derivative. In another embodiment, the cathode may be R-Ni wherein Na may form sodium hydroxide or aluminate at the cathode and release H. The cathode and anode may comprise carbon with different stages of alkali intercalation and hydrogenation such that there is a transport of at least one of $H^+$ or alkali ion from one electrode to the other to cause H displacement or incorporation that further gives rise to the reaction to form hydrinos. In an embodiment, water may be oxidized at one electrode and reduced at another due to different activities of the materials of the electrodes or half-cells. In an embodiment, $H^+$ may be formed at the negative electrode and be reduced at the positive electrode wherein the H flux causes hydrinos to be formed at one or both of the electrodes. Exemplary cells are [at least one of CNa and $C_yNaH_x$, optionally R-Ni/aqueous Na salt/at least one of CNa, $C_{y'}NaH_{x'}$, HY, R-Ni, and $Na_4Mn_9O_{18}$ + carbon($H_2$) or R-Ni]. In other embodiments, Na may be replaced by another alkali metal such as K or Li. In other embodiments, another alkali metal such as K or Li replaces Na. An exemplary K, inercalaion compound in aqueous electrolytes such as KCl(aq) is $K_xMnO_y$ (x = 0.33 and y~2). The crystal type may be selected for the selected cation such as birnessite for K. $H^+$ may exchange for the alkali metal ion. The reduction of $H^+$ to H may cause the formation of hydrinos.

In embodiments having an aqueous electrolyte, the cathode is stable to $O_2$ evolution and the anode is stable to $H_2$ evolution. Exemplary suitable cathode materials are $LiMn_{0.05}Ni_{0.05}Fe_{0.9}PO_4$, $LiMn_2O_4$, $LiNi_{1/3}Co_{1/3}Mn_{1/3}O_2$, $LiCoO_2$. In other embodiments, the H containing lattice such as the cathode material is an intercalation compound with the intercalating species such as an alkali metal or ion such a Li or $Li^+$ replaced by H or $H^+$. The compound may comprise intercalated H. The compound may comprise a layered oxide compound such as $LiCoO_2$ with at least some Li replaced by H such as CoO(OH) also designated $HCoO_2$. The cathode half-cell compound may be a layered compound such as a layered chalcogenide such as a layered oxide such as $LiCoO_2$ or $LiNiO_2$ with at least some intercalated alkali metal such as Li replaced by intercalated H. In an embodiment, at least some H and possibly some Li is the intercalated species of the charged cathode material and Li intercalates during discharge. Other alkali metals may substitute for Li. Suitable intercalation compounds with H replacing at least some of the Li's are those that comprise the anode or cathode of a Li ion battery such as those of the disclosure. Suitable exemplary intercalation compounds comprising $H_xLi_y$ or H substituting for Li are Li graphite, $Li_xWO_3$, $Li_xV_2O_5$, $LiCoO_2$, $LiFePO_4$, $LiMn_2O_4$, $LiNiO_2$, $Li_2FePO_4F$, $LiMnPO_4$, $VOPO_4$ system, $LiV_2O_5$, $LiMgSO_4F$, $LiMSO_4F$ (M=Fe, Co, Ni, transition metal), $LiMPO_4F$ (M=Fe, Ti), $Li_x[Li_{0.33}Ti_{1.67}O_4]$, or $Li_4Ti_5O_{12}$, layered transition metal oxides such as Ni-Mn-Co oxides such as $LiNi_{1/3}Co_{1/3}Mn_{1/3}O_2$, and $Li(Li_aNi_xCo_yMn_z)O_2$, and $LiTi_2O_4$, and other Li layered chalcogenides.

Exemplary suitable anode materials are $LiTi_2(PO_4)_3$, $Li_xVO_2$, $LiV_3O_8$, $Li_2Mn_4O_9$, $Li_4Mn_5O_{12}$. Suitable exemplary electrolytes are alkali or ammonium halides, nitrates, perchlorates, and sulfates such as $LiNO_3$, LiCl, and $NH_4X$, X = halide, nitrate, perchlorate, and sulfate. The aqueous solution may be basic to favor Li intercalation over formation of LiOH. The pH may be increased by addition of LiOH such as 0.0015 M LiOH. In other embodiments, $H_2$ evolution is promoted by adjusting the pH wherein the H evolution facilitates the formation of hydrinos. In other embodiments, the formation of oxyhydroxyides, hydroxides, alkali oxides, and alkali hydrides occurs wherein the formation of alkali hydride results in hydrino formation according to reactions such as those of Eqs. (305-306).

A lithium ion-type cell may have an aqueous electrolyte having a salt such as $LiNO_3$. This is possible by using a typical positive cathode such as $LiMn_2O_4$ with an intercalation compound with a much more positive potential than

$LiC_6$, such as vanadium oxide such that the cell voltage is less than the voltage for the electrolysis of water considering any overpotential for oxygen or hydrogen evolution at the electrodes. Other suitable electrolytes are an alkali metal halide, nitrate, sulfate, perchlorate, phosphate, carbonate, hydroxide, or other similar electrolyte. In order to make hydrinos the cell further comprises a hydrogenated material. The cell reactions cause H additions or vacancies to be formed that result in hydrino formation. The hydrogenated material may be a hydride such as R-Ni or a hydrogenated material such as $CB(H_2)$. Further exemplary metals or semi-metals of suitable hydrides comprise alkali metals (Na, K, Rb, Cs), alkaline earth metals (Mg, Ca, Ba, Sr), elements from the Group IIIA such as B, Al, Ga, Sb, from the Group IVA such as C, Si, Ge, Sn, from the Group VA such as N, P, As, and transition metals and alloys. Further examples are intermetallic compounds $AB_n$, in which A represents one or more element(s) capable of forming a stable hydride and B is an element that forms an unstable hydride. Examples of intermetallic compounds are given in TABLE 5. Exemplary cells are [$L_1V_2O_5$ $CB(H_2)$ or R-Ni/aqueous $LiNO_3$ with optionally $LiOH/CB(H_2)$ or R-Ni $LiMn_2O_4$], [$LiV_2O_5$/aqueous LiOH/R-Ni], [$LiV_2O_5$/aqueous $LiNO_3$ with optionally LiOH/R-Ni], [$LiTi_2(PO_4)_3$, $Li_xVO_2$, $LiV_3O_8$, $Li_2Mn_4O_9$, or $Li_4Mn_5O_{12}$/ aqueous $LiNO_3$ or $LiClO_4$ with optionally LiOH or KOH (saturated aq)/Li layered chalcogenides and at least one of these compounds with some H replacing Li or ones deficient in Li, compounds comprising $H_xLi_y$ or H substituting for Li in at least one of the group of Li-graphite, $Li_xWO_3$, $Li_xV_2O_5$, $LiCoO_2$, $LiFePO_4$, $LiMn_2O_4$, $LiNiO_2$, $Li_2FePO_4F$, $LiMnPO_4$, $VOPO_4$ system, $LiV_2O_5$, $LiMgSO_4F$, $LiMSO_4F$ (M=Fe, Co, Ni, transition metal), $LiMPO_4F$ (M=Fe, Ti), $Li_x[Li_{0.33}Ti_{1.67}O_4]$, or $Li_4Ti_5O_{12}$, layered transition metal oxides such as Ni-Mn-Co oxides such as $LiNi_{1/3}Co_{1/3}Mn_{1/3}O_2$, and $Li(Li_aNi_xCo_yMn_z)O_2$, and $LiTi_2O_4$, other Li layered chalcogenides], and [$LiTi_2(PO_4)_3$, $Li_xVO_2$, $LiV_3O_8$, $Li_2Mn_4O_9$, or $Li_4Mn_5O_{12}$/aqueous $LiNO_3$ or $LiClO_4$ with optionally LiOH or KOH (saturated aq)/$HCoO_2$ or CoO(OH)]. Another alkali such as K may substitute for Li.

In an embodiment, the electrolyte is a hydride such as $MBH_4$ (M is a metal such as an alkali metal). A suitable electrolyte is an alkali borohydride such as sodium borohydride in concentrated base such as about 4.4 M $NaBH_4$ in about 14 M NaOH. The anode comprises a source of ions $M^+$ that are reduced to the metal M such as Li, Na, or K at the cathode. In an embodiment, M reacts with the hydride such as $MBH_4$ whereby hydrinos are formed in the process. M, MH, or at least one H may serve as the catalysts for another. The H source is the hydride and may further include another source such as another hydride, H compound, or $H_2$ gas with optionally a dissociator. Exemplary cells are [R-Ni/14 M NaOH 4.4 M $NaBH_4$/carbon ($H_2$)], [$NaV_2O_5$ $CB(H_2)$ /14 M NaOH 4.4 M $NaBH_4$/carbon ($H_2$)], and [R-Ni/4.4 M $NaBH_4$ in about 14 M NaOH/oxyhydroxide such as AlO(OH), ScO(OH), YO(OH), VO(OH), CrO(OH), MnO(OH) ($\alpha$-MnO(OH) groutite and $\gamma$-MnO(OH) manganite), FeO(OH), CoO(OH), NiO(OH), RhO(OH), GaO(OH), InO(OH), $Ni_{1/2}CO_{1/2}O(OH)$, and $Ni_{1/3}Co_{1/3}Mn_{1/3}O(OH)$ or hydroxide such as $Co(OH)_2$, $Ni(OH)_2$, $La(OH)_3$, $Ho(OH)_3$, $Tb(OH)_3$, $Yb(OH)_3$, $Lu(OH)_3$, $Er(OH)_3$].

In another embodiment comprising an aqueous electrolyte, the cell comprises a metal hydride electrode such as those of the present disclosure. Suitable exemplary hydrides are R-Ni, Raney cobalt (R-Co), Raney copper (R-Cu), transition metal hydrides such as CoH, CrH, $TiH_2$, FeH, MnH, NiH, ScH, VH, CuH, and ZnH, intermetallic hydrides such as $LaNi_5H_6$, $La_2Co_1Ni_9H_6$, $ZrCr_2H_{3.8}$, $LaNi_{3.55}Mn_{0.4}Al_{0.3}Co_{0.75}$, $ZrMn_{0.5}Cr_{0.2}V_{0.1}Ni_{1.2}$, and AgH, $CdH_2$, PdH, PtH, NbH, TaH, $ZrH_2$, $HfH_2$, $YH_2$, $LaH_2$, $CeH_2$, and other rare earth hydrides. Further exemplary metals or semi-metals of suitable hydrides comprise alkali metals (Na, K, Rb, Cs), alkaline earth metals (Mg, Ca, Ba, Sr), elements from the Group IIIA such as B, Al, Ga, Sb, from the Group IVA such as C, Si, Ge, Sn, and from the Group VA such as N, P, As, and transition metals and alloys. The hydride may be an intermetallic compound. Further examples are intermetallic compounds $AB_n$, in which A represents one or more element(s) capable of forming a stable hydride and B is an element that forms an unstable hydride. Examples of intermetallic compounds are given in TABLE 5 and the corresponding section of the disclosure. The hydride may be at least one of the type $AB_5$, where A is a rare earth mixture of lanthanum, cerium, neodymium, praseodymium and B is nickel, cobalt, manganese, and/or aluminum, and $AB_2$ where A is titanium and/or vanadium and B is zirconium or nickel, modified with chromium, cobalt, iron, and/or manganese. In an embodiment, the anode material serves the role of reversibly forming a mixture of metal hydride compounds. Exemplary compounds are $LaNi_5$ and $LaNi_{3.6}Mn_{0.4}Al_{0.3}Co_{0.7}$. An exemplary anode reaction of the metal hydride R-Ni is

$$R\text{-}NiH_x + OH^- \text{ to } R\text{-}NiH_{x-1}, + H_2O + e^- \qquad (311)$$

In an embodiment, nickel hydride may serve as a half-cell reactant such as the anode. It may be formed by aqueous electrolysis using a nickel cathode that is hydrided. The electrolyte may be a basic one such as KOH or $K_2CO_3$, and the anode may also be nickel. The cathode may comprise an oxidant that may react with water such as a metal oxide such as nickeloxyhydroxide (NiOOH). An exemplary cathode reaction is

$$NiO(OH) + H_2O + e^- \text{ to } Ni(OH)_2 + OH^- \qquad (312)$$

Vacancies or additions of H formed during cell operation such as during discharge cause hydrino reactions to release

electrical power in addition to any from the non-hydrino-based reactions. The cell may comprise an electrolyte such as an alkali hydroxide such as KOH and may further comprise a spacer such as a hydrophilic polyolefin. An exemplary cell is [R-Ni, Raney cobalt (R-Co), Raney copper (R-Cu), $LaNi_5H_6$, $La_2Co_1Ni_9H_6$, $ZrCr_2H_{3.8}$, $LaNi_{3.55}Mn_{0.4}Al_{0.3}Co_{0.75}$, $ZrMn_{0.5}Cr_{0.2}V_{0.1}Ni_{1.2}$, CoH, CrH, FeH, MnH, NiH, ScH, VH, CuH, ZnH, AgH / polyolefin KOH(aq), NaOH(aq), or LiOH(aq)/ NiO(OH)]. Additional suitable oxidants are $WO_2(OH)$, $WO_2(OH)_2$, VO(OH), $VO(OH)_2$, $VO(OH)_3$, $V_2O_2(OH)_2$, $V_2O_2(OH)_4$, $V_2O_2(OH)_6$, $V_2O_3(OH)_2$, $V_2O_3(OH)_4$,$V_2O_4(OH)_2$, FeO(OH), MnO(OH), $MnO(OH)_2$, $Mn_2O_3(OH)$, $Mn_2O_2(OH)_3$, $Mn_2O(OH)_5$, $MnO_3(OH)$, $MnO_2(OH)_3$, $MnO(OH)_5$, $Mn_2O_2(OH)_2$, $Mn_2O_6(OH)_2$, $Mn_2O_4(OH)_6$, NiO(OH), TiO(OH), $TiO(OH)_2$, $Ti_2O_3(OH)$, $Ti_2O_3(OH)_2$, $Ti_2O_2(OH)_3$, $Ti_2O_2(OH)_4$, and NiO(OH). Further exemplary suitable oxyhyroxides are at least one of the group of bracewellite (CrO(OH)), diaspore (AlO(OH)), ScO(OH), YO(OH), VO(OH), goethite ($\alpha$-$Fe^{3+}O(OH)$), groutite ($Mn^{3+}O(OH)$), guyanaite (CrO(OH)), montroseite ((V,Fe)O(OH)), CoO(OH), NiO(OH), $Ni_{1/2}Co_{1/2}O(OH)$, and $Ni_{1/3}Co_{1/3}Mn_{1/3}O(OH)$, RhO(OH), InO(OH), tsumgallite (GaO(OH)), manganite ($Mn^{3+}O(OH)$), yttrotungstite-(Y) $YW_2O_6(OH)_3$, yttrotungstite-(Ce) ((Ce, Nd, Y)$W_2O_6(OH)_3$), unnamed (Nd-analogue of yttrotungstite-(Ce)) ((Nd, Ce, La)$W_2O_6(OH)_3$), frankhawthorneite ($Cu_2[(OH)_2[TeO_4]$), khinite $(Pb^{2+}Cu_3^{2+}(TeO_6)(OH)_2)$, and parakhinite $(Pb^{2+}Cu_3^{2+}TeO_6(OH)_2)$. In general, the oxidant may be $M_xO_yH_z$ wherein x, y, and z are integers and M is a metal such as a transition, inner transition, or rare earth metal such as metal oxyhydroxides. In other embodiments, other hydrogenated chalcogenides or chalcogenides may replace oxyhydroxides. S, Se, or Te may replace O and other such chalcogenides may replace those comprising O. Mixtures are also suitable. Exemplary cells are [hydride such as NiH, R-Ni, $ZrH_2$, $TiH_2$, $LaH_2$, $CeH_2$, PdH, PtxH, hydride of TABLE 5, $LaNi_5$ and $LaNi_{3.6}Mn_{0.4}Al_{0.3}Co_{0.7}$/aqueous MOH/ $M'_xO_yH_z$] (M = alkali metal and M' = transition metal), [unprocessed commercial R-Ni/aqueous KOH/unprocessed commercial R-N charged to NiO(OH)], and [metal hydride/aqueous KOH/unprocessed commercial R-Ni charged to NiO(OH)]. The cell may be regenerated by charging or by chemical processing such as rehydriding the metal hydride such as R-Ni. In alkaline cells, a cathode reactant may comprise a Fe(VI) ferrate salt such as $K_2FeO_4$ or $BaFeO_4$.

In an embodiment, mH's (m = integer), $H_2O$, or OH serves as the catalyst (TABLE 3). OH may be formed by the oxidation of $OH^-$ at the anode. The electrolyte may comprise concentrated base such as MOH (M =alkali) in the concentration range of about 6.5 M to saturated. The active material in the positive electrode may comprise nickel hydroxide that is charged to nickel oxyhydroxide. Alternatively, it may be another oxyhydroxide, oxide, hydroxide, or carbon such as CB, PtC, or PdC, or a carbide such as TiC, a boride such as $TiB_2$, or a carbonitride such as TiCN. The cathode such as nickel hydroxide may have a conductive network composed of cobalt oxides and a current collector such as a nickel foam skeleton, but may alternately be nickel fiber matrix or may be produced by sintering filamentary nickel fibers. The active material in the negative electrode may be an alloy capable of storing hydrogen, such as one of the $AB_5$ (LaCePrNdNiCoMnAl) or $AB_2$ (VTiZrNiCrCoMnAlSn) type, where the "$AB_x$" designation refers to the ratio of the A type elements (LaCePrNd or TiZr) to that of the B type elements (VNiCrCoMnAlSn). Suitable hydride anodes are those used in metal hydride batteries such as nickel-metal hydride batteries that are known to those skilled in the Art. Exemplary suitable hydride anodes comprise the hydrides of the group of R-Ni, $LaNi_5H_6$, $La_2Co_1Ni_9H_6$, $ZrCr_2H_{3.8}$, $LaNi_{3.55}Mn_{0.4}Al_{0.3}Co_{0.75}$, $ZrMn_{0.5}Cr_{0.2}V_{0.1}Ni_{1.2}$, and other alloys capable of storing hydrogen, such as one of the $AB_5$ (LaCePrNdNiCoMnAl) or $AB_2$ (VTiZrNiCrCoMnAlSn) type, where the "$AB_x$" designation refers to the ratio of the A type elements (LaCePrNd or TiZr) to that of the B type elements (VNiCrCoMnAlSn). In other embodiments, the hydride anode comprises at least one of $MmNi_5$ (Mm = misch metal) such as $MmNi_{3.5}Co_{0.7}Al_{0.8}$, the $AB_5$-type: $MmNi_{3.2}Co_{1.0}Mn_{0.6}Al_{0.11}Mo_{0.09}$ (Mm = misch metal: 25 wt% La, 50 wt% Ce, 7 wt% Pr, 18 wt% Nd), $La_{1-y}R_yNi_{5-x}M_x$, $AB_2$-type: $Ti_{0.51}Zr_{0.49}V_{0.70}Ni_{1.18}Cr_{0.12}$ alloys, magnesium-based alloys such as $Mg_{1.9}Al_{0.1}Ni_{0.8}Co_{0.1}Mn_{0.1}$ alloy, $Mg_{0.72}Sc_{0.28}(Pd_{0.012} + Rh_{0.012})$, and $Mg_{80}Ti_{20}$, $Mg_{80}V_{20}$, $La_{0.8}Nd_{0.2}Ni_{2.4}Co_{2.5}Si_{0.1}$, $LaNi_{5-x}M_x$ (M= Mn, Al), (M= Al, Si, Cu), (M= Sn), (M= Al, Mn, Cu) and $LaNi_4Co$, $MmNi_{3.55}Mn_{0.44}Al_{0.3}Co_{0.75}$, $LaNi_{3.55}Mn_{0.44}Al_{0.3}Co_{0.75}$, $MgCu_2$, $MgZn_2$, $MgNi_2$, AB compounds such as TiFe, TiCo, and TiNi, $AB_n$ compounds (n = 5, 2, or 1), $AB_{3-4}$ compounds, and $AB_x$ (A = La, Ce, Mn, Mg; B = Ni, Mn, Co, Al). Other suitable hydrides are $ZrFe_2$, $Zr_{0.5}Cs_{0.5}Fe_2$, $Zr_{0.8}Sc_{0.2}Fe_2$, $YNi_5$, $LaNi_5$, $LaNi_{4.5}Co_{0.5}$, (Ce, La, Nd, Pr)$Ni_5$, Mischmetal-nickel alloy, $Ti_{0.98}Zr_{0.02}V_{0.43}Fe_{0.09}Cr_{0.05}Mn_{1.5}$, $La_2Co_1Ni_9$, and $TiMn_2$. In either case, the materials may have complex microstructures that allow the hydrogen storage alloys to operate in the aggressive environment within the cell where most of the metals are thermodynamically more stable as oxides. Suitable metal hydride materials are conductive, and may be applied to a current collector such as one made of perforated or expanded nickel or nickel foam substrate or one made of copper.

In embodiments, the aqueous solvent may comprise $H_2O$, $D_2O$, $T_2O$, or water mixtures and isotope mixtures. In an embodiment, the temperature is controlled to control the rate of the hydrino reaction and consequently the power of the CIHT cell. A suitable temperature range is about ambient to 100°C. The temperature may be maintained about >100°C by sealing the cell so that pressure is generated and boiling is suppressed.

In an embodiment, the at least one of OH and $H_2O$ catalyst is formed at the anode from the oxidation of $OH^-$ in the presence of H or a source of H. A suitable anode half-cell reactant is a hydride. In an embodiment, the anode may comprise a hydrogen storage material such as a metal hydride such as metal alloy hydrides such as $BaReH_9$, $La_2Co_1Ni_9H_6$, $LaNi_5H_6$ or $LaNi_5H$ (in the disclosure, $LaNi_5H$ is defined as the hydride of $LaNi_5$ and may comprise $LaNi_5H_6$, and other hydride stoichiometries, and the same applies to other hydrides of the disclosure wherein other stoichiometries than those presented are also within the scope of the present disclosure), $ZrCr_2H_{3.8}$, $LaNi_{3.55}Mn_{0.4}Al_{0.3}Co_{0.75}$, $ZrMn_{0.5}Cr_{0.2}V_{0.1}Ni_{1.2}$, $FeTiH_{1.7}$, $TiFeH_2$, and $MgNiH_4$. In an embodiment comprising a $LaNi_5H_6$, $La_2Co_1Ni_9H_6$, $ZrCr_2H_{3.8}$, $LaNi_{3.55}Mn_{0.4}Al_{0.3}Co_{0.75}$, or $ZrMn_{0.5}Cr_{0.2}V_{0.1}Ni_{1.2}$ anode or similar anode and KOH or NaOH electrolyte, LiOH is added to the electrolyte to passivate any oxide coating to facilitate the uptake of $H_2$ to hydride or rehydride the $LaNi_5H_6$, $La_2Co_1Ni_9H_6$, $ZrCr_2H_{3.8}$, $LaNi_{3.55}Mn_{0.4}Al_{0.3}Co_{0.75}$, or $ZrMn_{0.5}Cr_{0.2}V_{0.1}Ni_{1.2}$. Exemplary cells are [$BaReH_9$, $LaNi_5H_6$, $La_2Co_1Ni_9H_6$, $ZrCr_2H_{3.8}$, $LaNi_{3.55}Mn_{0.4}Al_{0.3}Co_{0.75}$, $ZrMn_{0.5}Cr_{0.2}V_{0.1}Ni_{1.2}$, $FeTiH_{1.7}$, $TiFeH_2$, and $MgNiH_4$/MOH (saturated aq) (M = alkali)/carbon, PdC, PtC, oxyhydroxide, carbide, or boride] and [$LaNi_5H_6$, $La_2Co_1Ni_9H_6$, $ZrCr_2H_{3.8}$, $LaNi_{3.55}Mn_{0.4}Al_{0.3}Co_{0.75}$, or $ZrMn_{0.5}Cr_{0.2}V_{0.1}Ni_{1.2}$/KOH (sat aq) $EuBr_2$ or $EuBr_3$/CB].

OH formed as an intermediate of a reduction reaction of reactant(s) to $OH^-$ may serve as a catalyst or a source of catalyst such as OH or $H_2O$ to form hydrinos. In an embodiment, the oxidant of the cell comprising an alkaline electrolyte such as an aqueous MOH or $M_2CO_3$ electrolyte (M = alkali) comprises a source of oxygen such as at least one of a compound comprising oxygen, an oxygen containing conducting polymer, an oxygen containing compound or polymer added to a conducting matrix such as carbon, $O_2$, air, and oxidized carbon such as steam treated carbon. The reduction reaction of oxygen may form reduced oxygen compounds and radicals that may comprise at least O and possibly H such as hydrogen peroxide ion, superoxide ion, hydroperoxyl radical, $O_2^-$, $O_2^{2-}$, HOOH, $HOO^-$, OH and $OH^-$. In an embodiment, the cell further comprises a separator that prevents or retards the migration of oxygen from the cathode to the anode and is permeable to the migrating ion such as $OH^-$. The separator may also retard or prevent oxides or hydroxides such as $Zn(OH)_4^{2-}$, $Sn(OH)_4^{2-}$, $Sn(OH)_6^{2-}$, $Sb(OH)_4^-$, $Pb(OH)_4^{2-}$, $Cr(OH)_4^-$, and $Al(OH)_4^-$, formed in the anode half-cell compartment from migrating to the cathode compartment. In an embodiment, the anode comprises an H source such as a hydride such as R-Ni, $LaNi_5H_6$, $La_2Co_1Ni_9H_6$, $ZrCr_2H_{3.8}$, $LaNi_{3.55}Mn_{0.4}Al_{0.3}Co_{0.75}$, or $ZrMn_{0.5}Cr_{0.2}V_{0.1}Ni_{1.2}$, or $H_2$ gas and a dissociator such as Pt/C. In this embodiment and others of the disclosure that comprise R-Ni, another Raney metal such as Raney cobalt (R-Co), Raney copper (R-Cu), and other forms of R-Ni comprising activators that may comprise other metals, metal oxides, alloys, or compounds may be substituted for R-Ni to comprise further embodiments. An exemplary cell comprises a metal hydride $M'H_x$ (M'=metal or alloy such as R-Ni or $LaNi_5$) and an oxygen cathode such as $O_2$ gas or air at the cathode such as a carbon cathode or oxygen absorbed in carbon $C(O_2)_x$ that releases $O_2$ giving $C(O_2)_{x-1}$. In an embodiment similar to Eq. (315), at least one of water and oxygen are reduced to at least one of $OH^-$, H, and $H_2$ at the cathode. Corresponding exemplary reactions are

Anode

$$M'H_x + OH^- \text{ to } M'H_{x-1} + H_2O + e^- \quad (313)$$

wherein OH may be formed as an intermediate and serve as a catalyst to form hydrinos. Cathode

$$1/2O_2 + H_2O + 2e^- \text{ to } 2OH^- \quad (314)$$

Alternatively, the cathode reaction may involve water alone at the positive electrode:

$$H_2O + e- \text{ to } 1/2H_2 + OH^- \quad (315)$$

The cathode to perform reaction Eq. (315) may be a water reduction catalyst, and optionally an $O_2$ reduction (Eq. (314)) catalyst, such as supported metals, zeolites, and polymers that may be conductive such as polyaniline, polythiophen, or polyacetylene, that may be mixed with a conductive matrix such as carbon. Suitable $H_2O$ reduction catalysts efficiently reduce $H_2O$ to $H_2$ in solutions such as alkaline solutions. Exemplary catalysts are those of the group of Ni, porous Ni, sintered Ni powder, Ni-Ni$(OH)_2$, R-Ni, Fe, intermetallics of transition metals, $Hf_2Fe$, Zr-Pt, Nb-Pd(I), Pd-Ta, Nb-Pd(II), Ti-Pt, nanocrystalline $Ni_xMo_{1-x}$ (x= 0.6, 0.85 atomic percent), Ni-Mo, Mm alloy such as $MmNi_{3.6}Co_{0.75}Mn_{0.42}Al_{0.27}$, Ni-Fe-Mo alloy (64:24:12) (wt%), Ni-S alloy, and Ni-S-Mn alloy. The electrolyte may further comprise activators such as ionic activators such as each or the combination of tris(ethylenediamine)Co(III) chloride complex and $Na_2MoO_4$ or EDTA (ethylenediaminetetraacetic acid) with iron. Exemplary cells are [M/KOH (saturated aq)/water reduction catalyst and possibility an $O_2$ reduction catalyst]; M = alloy or metals such as those of Zn, Sn, Co, Sb, Te, W, Mo, Pb, Ge; water reduction catalyst and possibility an $O_2$ reduction catalyst = at least one of Pt/Ti, Pt/$Al_2O_3$, steam carbon, perovskite, Ni, porous Ni, sintered Ni powder, Ni-Ni$(OH)_2$, R-Ni, Fe, intermetallics of transition metals, $Hf_2Fe$, Zr-Pt, Nb-Pd(I), Pd-Ta, Nb-Pd(II), Ti-Pt, nanocrystalline $Ni_xMo_{1-x}$ (x= 0.6, 0.85 atomic percent), Ni-Mo, Mm alloy such as $MmNi_{3.6}Co_{0.75}Mn_{0.42}Al_{0.27}$, Ni-Fe-Mo alloy (64:24:12) (wt%), Ni-S alloy, and Ni-S-Mn alloy.

In an embodiment the cathode comprises a source of oxygen such as an oxide, oxyhydroxide, oxygen gas, or air. Oxygen from the source is reduced at the cathode in aqueous solution to form a negative ion that comprises O and may comprise H. The reduction reaction of oxygen may form reduced oxygen compounds and radicals that may comprise at least O and possibly H such as hydrogen peroxide ion, superoxide ion, hydroperoxyl radical, $O_2^-$, $O_2^{2-}$, HOOH, $HOO^-$, OH and $OH^-$. In an embodiment, at least one of these species or a product species formed at the anode may comprise the catalyst. The catalyst reaction may involve the oxidation of OOH' to OH and metal oxide wherein $OOH^-$ serves as a source of catalyst. Exemplary reactions of metal M are

Cathode

$$O_2 + H_2O + 2e^- \text{ to } OOH^- + OH^- \quad (316)$$

Anode:

$$M + OOH^- \text{ toMO} + OH + e^- \quad (317)$$

$$MH \text{ or } MOH + OOH^- \text{ to } M \text{ or } MO + HOOH + e^- \quad (318)$$

wherein $OOH^-$ and possibly HOOH serves as a source of catalyst. $OOH^-$ may also serve as the source of catalyst in a cell comprising a hydroxide cathode or anode reactant that forms an oxide and may further comprise a solid electrolyte such as BASE. An exemplary cell is [Na/BASE/NaOH] and an exemplary reactions involving superoxide, peroxide, and oxide are

$$Na + 2NaOH \text{ to } NaO_2 + 2NaH \text{ to } NaOOH + 2Na \text{ to } Na_2O + NaOH + 1/2H_2 \quad (319)$$

$$2Na + 2NaOH \text{ to } Na_2O_2 + 2NaH \text{ to } NaOOH + 2Na + NaH \quad (320)$$

$$2NaOH \text{ to } NaOOH + NaH \text{ to } Na_2O + H_2O \quad (321)$$

In the latter reaction, $H_2O$ may react with Na. The reaction to form intermediate MOOH such as NaOOH (M = alkali) that may react to form $Na_2O$ and OH may involve supplied hydrogen. Exemplary cells are [Ni($H_2$ such as in the range of about 1 to 1.5 atm) NaOH/BASE/NaCl-$NiCl_2$ or NaCl-$MnCl_2$ or LiCl-$BaCl_2$] and .) [Ni($H_2$) at least one of $Na_2O$ and NaOH/BASE/ NaCl-$NiCl_2$ or NaCl-$MnCl_2$ or LiCl-$BaCl_2$] that may produce electrical power by forming hydrinos via reactions such as

Cathode:

$$2Na^+ + 2e^- + M'X_2 \text{ to } 2NaCl + M' \quad (322)$$

Anode:

$$1/2H_2 + 3NaOH \text{ to } NaOOH + NaH + H_2O + Na^+ + e^- \quad (323)$$

$$NaOOH + NaH \text{ to } Na_2O + H_2O \quad (324)$$

$$Na_2O + NaOH \text{ to } NaOOH + 2Na^+ + 2e^- \quad (325)$$

wherein M' is a metal, X is halide, other alkali metals may be substituted for Na, and NaH or $OOH^-$ may serve as a source of catalyst, or OH may be formed as an intermediate and serve as a catalyst.

In an embodiment, the electrolyte comprises or additionally comprises a carbonate such as an alkali carbonate. During electrolysis, peroxy species may form such as peroxocarbonic acid or an alkali percarbonate that may be a source of $OOH^-$ or OH that serve as a source of catalyst or catalyst to form hydrinos. Exemplary cells are [Zn, Sn, Co, Sb, Te, W, Mo, Pb, Ge /KOH (saturated aq) + $K_2CO_3$/carbon + air] and [Zn, Sn, Co, Sb, Te, W, Mo, Pb, Ge /KOH (saturated aq) + $K_2CO_3$/Ni powder + carbon (50/50 wt%) + air].

In an embodiment, the matrix such as steam activated carbon comprises a source of oxygen such as carboxylate groups that react with the electrolyte such as a hydroxide such as KOH to form the corresponding carboxylate such as $K_2CO_3$. For example, $CO_2$ from carboxylate groups may react as follows:

$$2KOH + CO_2 \text{ to } K_2CO_3 + H_2O \qquad (326)$$

wherein $OH^-$ is oxidized and $CO_2$ is reduced. The process may comprise a mechanism to form hydrinos. Activated carbon and PtC comprising activated carbon may react in this manner to form hydrinos. Similarly, R-Ni reacts with $OH^-$ to form $H_2O$ and $Al_2O_3$ which involves the oxidation of $OH^-$ and provides a direct mechanism to form hydrinos. Thus, hydrinos may be formed at a carbon cathode or R-Ni anode by direct reaction. This is evidenced by a large 1.25 ppm NMR peak of the product following extraction in dDMF.

An embodiment comprises a fuel cell with a source of hydrogen such as $H_2$ gas and a source of oxygen such as $O_2$ gas or air. At least one of $H_2$ and $O_2$ may be generated by electrolysis of water. The electricity for the electrolysis may be supplied by a CIHT cell that may be driven by the gasses supplied to it directly from the electrolysis cell. The electrolysis may further comprise gas separators for $H_2$ and $O_2$ to supply purified gases to each of the cathode and anode. Hydrogen may be supplied to the anode half-cell, and oxygen may be supplied to the cathode half-cell. The anode may comprise an $H_2$ oxidation catalyst and may comprise an $H_2$ dissociator such as Pt/C, Ir/C, Ru/C, Pd/C, and others of the disclosure. The cathode may comprise a $O_2$ reduction catalyst such as those of the disclosure. The cell produces species that may form OH that may serve as the catalyst to form hydrinos and produce energy such as electrical energy in excess of that from the reaction of hydrogen and oxygen to form water.

In an embodiment, a cell comprising an $O_2$ or air reduction reaction at the cathode comprises an anode that is resistant to $H_2$ evolution such as a Pb, In, Hg, Zn, Fe, Cd or hydride such as $LaNi_5H_6$ anode. The anode metal M may form a complex or ion such as $M(OH)_4^{2-}$ that is at least partially soluble in the electrolyte such that the anode reaction proceeds unimpeded by a coating such as an oxide coating. The anode may also comprise other more active metals such a Li, Mg, or Al wherein inhibitors may be used to prevent direct reaction with the aqueous electrolyte, or a nonaqueous electrolyte such as an organic electrolyte or an ionic liquid may be used. Suitable ionic liquid electrolytes for anodes such as Li are 1-methyl-3-octylimidazolium bis(trifluormethylsulonyl)amide, 1-ethyl-3-methylimidazolium bis(pentafluoroethylsulfonyl)amide, and 1-ethyl-3-methylimidazolium bis(trifluormethylsulonyl)amide. The anode may be regenerated in aqueous solution by electrolysis wherein Pb, Hg, or Cd may be added to suppress $H_2$ evolution. Metals with a high negative electrode potential such as Al, Mg, and Li can be used as anodes with an aprotic organic electrolyte.

In an embodiment, the reduction of $O_2$ proceeds through the peroxide pathway involving two-electrons. Suitable cathodes that favor the peroxide pathway are graphite and most other carbons, gold, oxide covered metals such as nickel or cobalt, some transition metal macrocycles, and transition metal oxides. Manganese oxide such as $MnO_2$ may serve as an $O_2$ reduction catalyst. Alternatively, oxygen may be reduced directly to $OH^-$ or $H_2O$ by four electrons. This pathway is predominant on noble metals such as platinum and platinum group metals, some transition metal oxides having the perovskite or pyrochlore structure, some transition metal macrocycles such as iron phthalocyanine, and silver.

The electrode may comprise a compound electrode for oxygen reduction and evolution. The latter may be used for regeneration. The electrode may be bifunctional capable of oxygen reduction and evolution wherein the activity is provided by corresponding separate catalyst layers, or the electrocatalyst may be bifunctional. The electrode and cell designs may be those known in the Art for metal-air batteries such as Fe or Zn-air batteries or a suitable modification thereof known by those skilled in the Art. A suitable electrode structure comprises a current collector, a gas diffusion layer that may comprise carbon and a binder, and an active layer that may be a bifunctional catalyst. Alternatively, the electrode may comprise the $O_2$ reduction layers on one side of the current collector and $O_2$ evolution layers on the other side. The former may comprise an outer gas diffusion layer in contact with the source of oxygen and a porous, hydrophobic catalyst layer in contact with the current collector; whereas, the latter may comprise a porous, hydrophilic catalyst layer in contact with the electrolyte on one side of the layer and the current collector on the other side.

Suitable perovskite-type oxides that may serve as catalysts to reduce oxygen from a source may have the general formula $ABO_3$, and such substituted perovskites can have the general formula $A_{1-x}A'_xB_{1-y}B'_yO_3$. A may be La, Nd; A' may be strontium, barium, calcium; and B may be nickel, cobalt, manganese, ruthenium. Other suitable catalysts

for reducing oxygen at the cathode are a perovskite-type catalyst such as $La_{0.6}Ca_{0.4}CoO_3$ doped with metal oxide, $La_{1-x}Ca_xCoO_3$, $La_{1-x}Sr_xCoO_3$ ($0 \leq x \leq 0.5$), or $La_{0.8}Sr_{0.2}Co_{1-y}B_yO_3$ (B =Ni, Fe, Cu, or Cr; $0 \leq y \leq 0.3$), $La_{0.5}Sr_{0.5}CoO_3$,$LaNiO_3$, $LaFe_xNi_{1-x}O_3$, substituted $LaCoO_3$, $La_{1-x}Ca_xMO_3$, $La_{0.8}Ca_{0.2}MnO_3$, $La_{1-x}A'_xCo_{1-y}B'_yO_3$ (A' = Ca; B' = Mn, Fe, Co, Ni, Cu), $La_{0.6}Ca_{0.4}Co_{0.8}Fe_{0.2}O_3$, $La_{1-x}A'_xFe_{1-y}B'_yO_3$ (A' = Sr, Ca, Ba, La; B' = Mn), $La_{0.8}Sr_{0.2}Fe_{1-y}Mn_yO_3$, and perovskite-type oxides based on Mn and some transition metal or lanthanoid, or a spinel such as $Co_3O_4$ or $NiCo_2O_4$, a pyrochlore such as $Pb_2Ru_2Pb_{1-x}O_{1-y}$ or $Pb_2Ru_2O_{6.5}$, other oxides such as $Na_{0.8}Pt_3O_4$, organometallic compounds such as colbalt porphyrin, or pyrolyzed macrocycles with Co additives. Suitable pyrochlore-type oxides have the general formula $A_2B_2O_7$ or $A_2B_{2-x}A_xO_{7-y}$ (A = Pb/Bi, B = Ru/Ir) such as $Pb_2Ir_2O_{7-y}$, $PbBiRu_2O_{7-y}$, $Pb_2(Pb_xIr_{2-x})O_{7-\delta}$, and $Nd_3IrO_7$. Suitable spinels are nickel cobalt oxides, pure or lithium-doped cobalt oxide ($Co_3O_4$), cobaltite spinels of the type $M_xCO_{3-x}O_4$ (M = Co, Ni, Mn oxygen reduction) and (M = Co, Li, Ni, Cu, Mn oxygen evolution). The oxygen evolution catalyst may be nickel, silver, noble metal such as Pt, Au, Ir, Rh, or Ru, nickel cobalt oxide such as $NiCo_2O_4$, and copper cobalt oxide such as $CuCo_2O_4$. The oxygen reduction or evolution catalyst may further comprise a conducting support such as carbon such as carbon black, graphitic carbon, Ketjen black, or graphitized Vulcan XC 72. Exemplary cells are [Zn, Sn, Co, Sb, Te, W, Mo, Pb, Ge /KOH (saturated aq)/air + carbon + $O_2$ reduction catalyst such as perovskite-type catalyst such as $La_{0.6}Ca_{0.4}CoO_3$ doped with metal oxide, $La_{1-x}Ca_xCoO_3$, $La_{1-x}Sr_xCoO_3$ ($0 \leq x \leq 0.5$), or $La_{0.8}Sr_{0.2}Co_{1-y}B_yO_3$ (B =Ni, Fe, Cu, or Cr; $0 \leq y \leq 0.3$), or a spinel such as $Co_3O_4$ or $NiCo_2O_4$, a pyrochlore such as $Pb_2Ru_2Pb_{1-x}O_{1-y}$ or $Pb_2Ru_2O_{6.5}$, other oxides such as $Na_{0.8}Pt_3O_4$, or pyrolyzed macrocycles with Co additives]. In another embodiment, the cathode comprises a water reduction catalyst.

The cathode is capable of supporting the reduction of at least one of $H_2O$ and $O_2$. The cathode may comprise a high-surface area conductor such as carbon such as carbon black, activated carbon, and steam activated carbon. The cathode may comprise a conductor having a low over potential for the reduction of at least one of $O_2$ or $H_2O$ or $H_2$ evolution such as Pt, Pd, Ir, Ru, Rh, Au, or these metals on a conducting support such as carbon or titanium as the cathode with $H_2O$ as the cathode half-cell reactant. The electrolyte may be concentrated base such as in the range of about 6.1 M to saturated. Exemplary cells are [dissociator and hydrogen such as PtCB, PdC, or Pt(20%)Ru(10%) ($H_2$, ~1000 Torr), or metal hydride such as R-Ni of various compositions, R-Co, R-Cu, $LaNi_5H_6$, $La_2Co_1Ni_9H_6$, $ZrCr_2H_{3.8}$, $LaNi_{3.55}Mn_{0.4}Al_{0.3}Co_{0.75}$, $ZrMn_{0.5}Cr_{0.2}V_{0.1}Ni_{1.2}$ or hydride of TABLE 5/aqueous base such as KOH (aq) electrolyte (>6.5 M to saturated or >11 M to saturated)/carbon, oxygen electrode such as $O_2$ or air at carbon, $C(O_2)_x$ or oxidized carbon such as steam activated carbon, or CB, PtC, PdC, CB($H_2$), PtC($H_2$), PdC($H_2$), conductor having a low over potential for reduction of at least one of $O_2$ or $H_2O$ or $H_2$ evolution such as Pt, Pd, Ir, Ru, Rh, Au, or these metals on a conducting support such as carbon or titanium as the cathode with at least one of $H_2O$ and $O_2$ as the cathode half-cell reactant].

In an embodiment, the anion can serve as a source of oxygen at the cathode. Suitable anions are oxyanions such as $CO_3^{2-}$, $SO_4^{2-}$, and $PO_4^{3-}$. The anion such as $CO_3^{2-}$ may form a basic solution. An exemplary cathode reaction is

Cathode

$$CO_3^{2-} + 4e^- + 3H_2O \text{ to } C + 6OH^- \quad (327)$$

The reaction may involve a reversible half-cell oxidation-reduction reaction such as

$$CO_3^{2-} + H_2O \text{ to } CO_2 + 2OH^- \quad (328)$$

The reduction of $H_2O$ to $OH^-$ + H may result in a cathode reaction to from hydrinos wherein $H_2O$ serves as the catalyst. The large 1.23 ppm NMR peak corresponding to $H_2(1/4)$ isolated from cathode products of cells such as [Zn, Sn, Pb, Sb/KOH (sat aq) + $K_2CO_3$/CB-SA] having KOH-$K_2CO_3$ electrolytes supports this mechanism. In an embodiment, $CO_2$, $SO_2$, $PO_2$ and other similar reactants may be added to the cell as a source of oxygen.

The anode may comprise a metal capable of reacting with an oxygen species such as $OOH^-$ or $OH^-$. Suitable metals are Al, V, Zr, Ti, Mn, Se, Zn, Cr, Fe, Cd, Co, Ni, Sn, In, Pb, Cu, Sb, Bi, Au, Ir, Hg, Mo, Os, Pd, Re, Rh, Ru, Ag, Tc, Te, Tl, and W that may be powders. The anode may comprise short hydrophilic fibers such as cellulose fibers to prevent densification during recharging. The anode may be formed in a discharged state and activated by charging. An exemplary zinc anode may comprise a mixture of zinc oxide powder, cellulose fibers, polytetrafluorethylene binder, and optionally some zinc powder and additives such as lead (II) oxide or oxides of antimony, bismuth, cadmium, gallium, and indium to prevent $H_2$ evolution. The mixture may be stirred on a water-acetone mixture, and the resulting homogeneous suspension may be filtered, the filter cake pressed into a current collector such as lead-plated copper net and dried at temperature slightly >100°C. The electrode having a porosity of about 50% may be wrapped in a micro-porous polymer membrane such as Celgard that holds the electrode together and may serve as the separator. In other embodiments, the anode may be assembled using primarily Zn powder that avoids the initial charging step.

The cell may comprise a stack of cells connected in series or in parallel that may have a reservoir to accommodate volume changes in the electrolyte. The cell may further comprise at least one of humidity and $CO_2$ management systems. The metal electrode may be sandwiched between to oxygen electrodes to double the surface area. Oxygen may diffuse from air through a porous Teflon-laminated air electrode comprising an oxygen diffusion electrode. In an embodiment, the electrons from the anode react with oxygen at catalytic sites of a wetted part of the oxygen diffusion electrode to form reduced water and oxygen species.

In an embodiment, the metal-air cell such as a Zn-air cell may be comprise a metal-air fuel cell wherein metal is continuously added and oxidized metal such as metal oxide or hydroxide is continuously removed. Fresh metal is transported to and waste oxidized metal away from the anode half-cell by means such a pumping, auguring, conveying, or other mechanical means of moving these materials known by those skilled in the Art. The metal may comprise pellets that can be pumped.

In an embodiment, an oxyhydroxide may serve as the source of oxygen to form $OH^-$. The oxyhydroxide may form a stable oxide. Exemplary cathode reactions comprise at least one of a reduction of an oxyhydroxide or a reduction reaction of an oxyhdroxide such as one of the group of MnOOH, CoOOH, GaOOH, and InOOH and lanthanide oxyhydroxides such as LaOOH with at least one of $H_2O$ and $O_2$ to form a corresponding oxide such as $La_2O_3$, $Mn_2O_3$, CoO, $Ga_2O_3$, and $In_2O_3$. Exemplary reactions of metal M are given by
Cathode:

$$MOOH + e^- \text{ to } MO + OH^- \quad (329)$$

$$2MOOH + 2e^- + H_2O \text{ to } M_2O_3 + 2OH^- + H_2 \quad (330)$$

$$2MOOH + 2e^- + 1/2O_2 \text{ to } M_2O_3 + 2OH^- \quad (331)$$

Alternatively, an oxide may serve as the source of oxygen to form $OH^-$. The reduced metal product may be an oxide, oxyhydroxide, or hydroxide having the metal in a lower oxidation state. An exemplary cathode reaction involving metal M is
Cathode:

$$yMO_x + re^- + qH_2O \text{ to } M_yO_{yx+q-r} + rOH^- + (2q-r)/2H_2 \quad (332)$$

wherein y, x, r, and q are integers. Suitable exemplary oxides are $MnO_2$, $Mn_2O_3$, $Mn_3O_4$, M'O (M' = transition metal), $SeO_2$, $TeO_2$, $P_2O_5$, $SO_2$, $CO_2$, $N_2O$, $NO_2$, NO, SnO, PbO, $La_2O_3$, $Ga_2O_3$, and $In_2O_3$ wherein the gases may be maintained in a matrix such as absorbed in carbon. The electrolyte may be concentrated base such as in the range of about 6.1 M to saturated. Exemplary cells are [dissociator and hydrogen such as PtCB, PdC, or Pt(20%)Ru(10%) ($H_2$, ~1000 Torr), or metal hydride such as R-Ni of various compositions, R-Co, R-Cu, $LaNi_5H_6$, $La_2Co_1Ni_9H_6$, $ZrCr_2H_{3.8}$, $LaNi_{3.55}Mn_{0.4}Al_{0.3}Co_{0.75}$, $ZrMn_{0.5}Cr_{0.2}V_{0.1}Ni_{1.2}$ or hydride of TABLE 5/aqueous base such as KOH (aq) electrolyte (>6.5 M to saturated or > 11 M to saturated)/oxyhydroxide or oxide such as $MnO_2$, $Mn_2O_3$, $Mn_3O_4$, M'O (M' = transition metal), $SeO_2$, $TeO_2$, $P_2O_5$, $SO_2$, $CO_2$, $N_2O$, $NO_2$, NO, SnO, PbO, $La_2O_3$, $Ga_2O_3$, and $In_2O_3$ wherein the gases may be maintained in a matrix such as absorbed in carbon or CoOOH, MnOOH, LaOOH, GaOOH, or InOOH], [M/KOH (sat aq)/$MO_x$ (x =1 or 2) suitable metals M = Zn, Sn, Co, Sb, Te, W, Mo, Pb, Ge], and [M/KOH (sat aq)/M'OOH suitable metals M = Zn, Sn, Co, Sb, Te, W, Mo, Pb, Ge; M' = Mn, Co, La, Ga, In.

OH formed as an intermediate of an oxidation reaction of $OH^-$ may serve as a catalyst or source of catalyst such as OH or $H_2O$ to form hydrinos. In an embodiment, a metal that forms a hydroxide or oxide may serve as the anode. Alternatively, a hydroxide starting reactant may serve as the anode. At least one of the oxidized metal, the metal oxide, and the metal hydroxide may oxidize $OH^-$ to OH as an intermediate to form a compound comprising at least two of the metal, oxygen, and hydrogen such as the metal hydroxide, oxide, or oxyhydroxide. For example, the metal may oxidize to form a hydroxide that may further react to an oxide. At least one hydroxide H may be transferred to $OH^-$ as it is oxidized to form water. Thus, a metal hydroxide or oxyhydroxide may react in similar manner as a hydride (Eq. (313)) to form an OH intermediate that can serve as a catalyst to form hydrinos. Exemplary reactions of metal M are
Anode:

$$M + OH^- \text{ to } M(OH) + e^- \quad (333)$$

then

$$M(OH) + OH^- \text{ to } MO + H_2O + e^- \quad (334)$$

$$M + 2OH^- \text{ to } M(OH)_2 + 2e^- \quad (335)$$

then

$$M(OH)_2 \text{ to } MO + H_2O \quad (336)$$

$$M + 2OH^- \text{ to } MO + H_2O + 2e^- \quad (337)$$

wherein OH of the water product may be initially formed as an intermediate and serve as a catalyst to form hydrinos. The anode metal may be stable to direct reaction with concentrated base or may react at a slow rate. Suitable metals are a transition metal, Ag, Cd, Hg, Ga, In, Sn, Pb, and alloys comprising one or more of these and other metals. The anode may comprise a paste of the metal as a powder and the electrolyte such as a base such as MOH (M= alkali). Exemplary paste anode reactants are Zn powder mixed with saturated KOH or Cd powder mixed with KOH. Suitable electropositive metals for the anode are one or more of the group of Al, V, Zr, Ti, Mn, Se, Zn, Cr, Fe, Cd, Co, Ni, Sn, In, and Pb. Alternatively, suitable metals having low water reactivity are Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, and W. In other embodiments, the anode may comprise a hydroxide or oxyhydroxide such as one of these metals such as $Co(OH)_2$, $Zn(OH)_2$, $Sn(OH)_2$, and $Pb(OH)_2$. Suitable metal hydroxides form oxides or oxyhydroxides. The electrolyte may be concentrated base such as in the range of about 6.1 M to saturated. Exemplary cells are [metal such as Sc, Ti, V, Cr, Mn, Fe, Co, Ni, Cu, Zn, Ag, Cd, Hg, Ga, In, Sn, Pb, or metals having low water reactivity such as one from the group of Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, and W, or these metals as paste with saturated MOH or a metal hydroxide such as $Co(OH)_2$, $Zn(OH)_2$, $Sn(OH)_2$, or $Pb(OH)_2$/aqueous base such as KOH (aq) electrolyte (>6.5 M to saturated or >11 M to saturated)/oxyhydroxide or oxide such as $MnO_2$, $Mn_2O_3$, $Mn_3O_4$, M'O (M' = transition metal), $SeO_2$, $TeO_2$, $P_2O_5$, $SO_2$, $CO_2$, $N_2O$, $NO_2$, NO, SnO, PbO, $La_2O_3$, $Ga_2O_3$, and $In_2O_3$ wherein the gases may be maintained in a matrix such as absorbed in carbon or CoOOH, MnOOH, LaOOH, GaOOH, or InOOH, or carbon, oxygen electrode such as $O_2$ or air at carbon, $C(O_2)_x$ or oxidized carbon such as steam activated carbon, or CB, PtC, PdC, $CB(H_2)$, $PtC(H_2)$, $PdC(H_2)$, conductor having a low over potential for reduction of at least one of $O_2$ or $H_2O$ or $H_2$ evolution such as Pt, Pd, Ir, Ru, Rh, Au, or these metals on a conducting support such as carbon or titanium as the cathode with at least one of $H_2O$ and $O_2$ as the cathode half-cell reactant], [hydroxide of Zn, Sn, Co, Sb, Te, W, Mo, Pb, or Y/KOH (saturated aq)/steam carbon], and [Zn-saturated MOH paste/MOH (saturated aq)/CB, activated carbon or steam activated carbon with $O_2$].

In an embodiment, the cathode may comprise a metal oxide such as an oxide or oxyhydroxide, and the anode may comprise a metal or a reduced oxide relative to the oxidized metal of the cathode. The reduction of water given in Eq. (314) may involve the oxygen of the oxide or oxyhydroxide. The cathode and anode may comprise the same metal in different oxidation or oxide states. The anode reaction may be given by at least one of Eqs. (333-337). Exemplary cells are [M/KOH (saturated aq)/MOOH (M = transition metal, rare earth metal, Al, Ga, or In)], [M/KOH (saturated aq)/$MO_2$ (M = Se, Te, or Mn)], and [M/KOH (saturated aq)/MO (M = Zn, Sn, Co, Sb, Te, W, Mo, Pb, or Ge)]. Hydrogen may be added to at least one half-cell to initiate and propagate the water oxidation and reduction reactions (e.g. Eqs. (314-315) and (346)) that maintain some OH or other catalyst comprising at least one of O and H. The source of hydrogen may be a hydride such as R-Ni or $LaNi_5H_6$. Carbon such as steam carbon may also be added to an electrode such as the cathode to facilitate the reduction of water to $OH^-$ and $OH^-$ oxidation to OH and possibly $H_2O$. At least one electrode may comprise a mixture comprising carbon. For example, the cathode may comprise a mixture of carbon and a metal oxide such as a mixture of steam carbon and an oxide of Zn, Sn, Co, Sb, Te, W, Mo, Pb, or Ge. The anode may comprise the corresponding metal of the cathode metal oxide. Other suitable catalysts for reducing $O_2$ at the cathode are a perovskite-type catalyst such as $La_{0.6}Ca_{0.4}CoO_3$ doped with metal oxide, $La_{1-x}Ca_xCoO_3$, $La_{1-x}Sr_xCoO_3$ ($0 \leq x \leq 0.5$), or $La_{0.8}Sr_{0.2}Co_{1-y}B_yO_3$ (B =Ni, Fe, Cu, or Cr; $0 \leq y \leq 0.3$), or a spinel such as $Co_3O_4$ or $NiCo_2O_4$, a pyrochlore such as $Pb_2Ru_2Pb_{1-x}O_{1-y}$ or $Pb_2Ru_2O_{6.5}$, other oxides such as $Na_{0.8}Pt_3O_4$, or pyrolyzed macrocycles with Co additives. The oxygen reduction catalyst may further comprise a conducting support such as carbon such as carbon black or graphitic carbon. Exemplary cells are [Zn, Sn, Co, Sb, Te, W, Mo, Pb, Ge /KOH (saturated aq)/air + carbon + $O_2$ reduction catalyst such as perovskite-type catalyst such as $La_{0.6}Ca_{0.4}CoO_3$ doped with metal oxide, $La_{1-x}Ca_xCoO_3$, $La_{1-x}Sr_xCoO_3$ ($0 \leq x \leq 0.5$), or $La_{0.8}Sr_{0.2}Co_{1-y}B_yO_3$ (B =Ni, Fe, Cu, or Cr; $0 \leq y \leq 0.3$), or a spinel such as $Co_3O_4$ or $NiCo_2O_4$, a pyrochlore such as $Pb_2Ru_2Pb_{1-x}O_{1-y}$ or $Pb_2Ru_2O_{6.5}$, other oxides such as $Na_{0.8}Pt_3O_4$, or pyrolyzed macrocycles with Co additives]. In another embodiment, the cathode comprises a water reduction catalyst.

In an embodiment, the cell further comprises a source of oxygen that serves as a reactant to directly or indirectly participate in the formation of a catalyst and a source of H that further reacts to form hydrinos. The cell may comprise a metal M that serves as the anode such that the corresponding metal ion serves as the migrating ion. Suitable exemplary metals are at least one of the group of Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, and W, and metal alloys thereof or alloys of other metals. OH may serve as the catalyst according to the reactions given in TABLE 3. In addition to the metal ion such as $M^{2+}$, some OH may be formed at least transiently from

$OH^-$. Oxygen may be reduced at the cathode. Water may also participate in the reduction reaction to form at least some OH that may serve as the catalyst to form hydrinos. Exemplary reactions are
Anode:

$$M \text{ to } M^{2+} + 2e^- \quad (338)$$

$$M + 2OH^- \text{ to } M(OH)_2 + 2e^- \quad (339)$$

Cathode:

$$M^{2+} + 2e^- + 1/2O_2 \text{ to } MO \quad (340)$$

$$M^{2+} + 2e^- + H_2O + 1/2O_2 \text{ to } M^{2+} + 2OH^- \text{ to } M(OH)_2 \quad (341)$$

wherein some OH radical intermediate is formed at the anode or cathode to further react to form hydrinos. In another embodiment, the source of oxygen to react with water is an oxyhydroxide such as MnOOH or CoOOH. OH may be formed by oxidation of $OH^-$ at the anode and reduction of O or $O_2$ to $OH^-$ at the cathode. The O may be that of an oxyhydroxide. The energy balance may facilitate the formation of OH under conditions to propagate the reaction to form hydrinos. In other embodiments, the oxidant may be a mixture of oxygen and another oxidant that may be a gas or may be inert. Suitable exemplary mixtures are $O_2$ mixed with at least one of $CO_2$, $NO_2$, NO, $N_2O$, $NF_3$, $CF_4$, $SO_2$, $SF_6$, $CS_2$, He, Ar, Ne, Kr, and Xe.

The base concentration such as MOH (M =alkali) such as KOH (aq) may be in any desired range such as in the range of about 0.01 M to saturated (sat), about 6.5 M to saturated, about 7 M to saturated, about 8 M to saturated, about 9 M to saturated, about 10 M to saturated, about 11 M to saturated, about 12 M to saturated, about 13 M to saturated, about 14 M to saturated, about 15 M to saturated, about 16 M to saturated, about 17 M to saturated, about 18 M to saturated, about 19 M to saturated, about 20 M to saturated, and about 21 M to saturated. Other suitable exemplary electrolytes alone, in combination with base such as MOH (M = alkali), and in any combinations are alkali or ammonium halides, nitrates, perchlorates, carbonates, $Na_3PO_4$ or $K_3PO_4$, and sulfates and $NH_4X$, X = halide, nitrate, perchlorate, phospate, and sulfate. The electrolyte may be in any desired concentration. When R-Ni is used as the anode, a local high concentration of $OH^-$ may form due to the base composition of R-Ni or the reaction of Al with water or base. The Al reaction may also supply hydrogen at the anode to further facilitate the reaction of Eq. (313).

The anode powder particles may have a protective coating to prevent alkaline corrosion of the metal that are known in the Art. A suitable zinc corrosion inhibitor and hydrogen evolution inhibitor is a chelating agent such as one selected from the group of aminocarboxylic acid, polyamine, and aminoalcohol added to the anode in sufficient amount to achieve the desired inhibition. Suppression of Zn corrosion may also be achieved by amalgamating zinc with up to 10% Hg and by dissolving ZnO in alkaline electrolytes or Zn salts in acidic electrolytes. Other suitable materials are organic compounds such as polyethylene glycol and those disclosed in U.S. Patent 4,377,625 incorporated herein by reference, and inhibitors used in commercial Zn-$MnO_2$ batteries known to those skilled in the Art. Further suitable exemplary inhibitors for Zn and possibliy other metals are organic or inorganic inhibitors, organic compounds such as surfactants, and compounds containing lead, antimony, bismuth, cadmium, and gallium that suppress $H_2$ formation as well as orresponding metal oxides, and chelating agents such as 5%CoO + 0.1% diethylanetriaminepentaacetic acid, 5% $SnO_2$ + 0.1% diethylanetriaminepentaacetic acid, ethylenediaminetretraacetic acid (EDTA) or a similar chelating agent, ascorbic acid, Laponite or other such hydroxide-ion-transporting clay, a surfactant and indium sulphate, aliphatic sulfides such as ethyl butyl sulphide, dibutyl sulphide, and allyl methyl sulphide, complexing agents such as alkali citrate, alkali stannate, and calcium oxide, metal alloys and additives such as metals of groups III and V, polyethylene glycol, ethylene-polyglycol such as those of different molecular mass such as PEG 200 or PEG 600, fluoropolietoksyalkohol, ether with ethylene oxide, polyoxyethylene alkyl phosphate ester acid form, polyethylene alkyl phosphate, ethoxylated-polyfluoroalcohol, and alkyl-polyethylene oxide. In further embodiments, other electropositive metals such as Sc, Ti, V, Cr, Mn, Fe, Co, Ni, Cu, Ag, Cd, Hg, Ga, In, Sn, and Pb or suitable metals having low water reactivity are Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, and W are protected by a corrosion inhibitor. In an embodiment, the protective coating material may be supported to comprise a salt bridge selective for $OH^-$. A suitable cell comprising the salt bridge is a fuel cell type as given in the disclosure. The salt bridge may be a membrane having quaternary ammonium groups of similar groups that provide selectivity for $OH^-$. Alternatively, it could be an oxide or hydroxide selective to $OH^-$. A commercial separator that is resistant to $H_2$ permeation for use with a hydrogen anode is Nafion 350 (DuPont).

The cell may be regenerated by electrolysis or by reaction with hydrogen and by other chemical processing and separation methods and systems given in the disclosure or known in the Art. The oxidized metal such as the metal oxide may be regenerated by electrolysis at a lower voltage by supplying $H_2$ to the anode wherein the metal is deposited

at the cathode. For another example, the Zn anode may be removed and replaced with a new canister with chemically regenerated Zn. In an embodiment comprising a Zn, Pb, or Sn anode that forms ZnO, PbO, and SnO, respectively, during discharge, the product ZnO, PbO, and SnO may be treated with carbon or CO to from zinc, lead, and tin and $CO_2$ or treated with sulfuric acid to from $ZnSO_4$, $PbSO_4$, $SnSO_4$, that may be electrolyzed to form Zn, Pb, and Sn and sulfuric acid that may be recycled. In the case of a cell comprising initial reactants of a metal anode and the corresponding oxidized metal such as an oxide, oxyhydroxide, and hydroxide, the cell products are oxidized metal at both electrodes. The cell may be regenerated by electrolysis or by removing the electrodes, combining the electrode reactants comprising a mixture of metal and oxidized metal compound(s) and separating the mixture into metal and oxidized metal compound(s). An exemplary method is to heat the mixture such that the metal melts and forms a separable layer based on density. Suitable metals are Pb (MP = 327.5°C), Sb (MP = 630.6°C), Bi (MP = 271.4°C), Cd (MP = 321°C), Hg (MP = -39°C), Se (MP = 221°C), and Sn (MP = 232°C). In another embodiment, the anode comprises a magnetic metal such as a ferromagnetic metal such as Co or Fe, and the cathode comprises the corresponding oxide such as CoO and NiO. Following discharge, the cathode and anode may comprise a mixture of the metal and the corresponding oxide. The metal and oxide of each half-cell may be separated magnetically since the metal is ferromagnetic. The separated metal may be returned to the anode, and the separated metal oxide may be returned to the cathode to form a regenerated cell.

In a general reaction, $OH^-$ undergoes oxidation to OH to serve as a catalyst to form hydrinos and may form $H_2O$ from a source of H such as a hydride (Eq. (313)) or hydroxide (Eq. (334)) wherein $H_2O$ may serve as the catalyst to form hydrinos. The reaction of a hydroxide to provide H may be a reaction of two $OH^-$ groups under oxidization to form a metal oxide and $H_2O$. The metal oxide may be a different metal or the same metal as the source of at least one $OH^-$ group. As given by Eq. (334) a metal M' may react with a source of $OH^-$ from MOH such as M is alkali to form OH and $H_2O$. Whereas, Eq. (355) is an example of the reaction of metal M as the source of $OH^-$ and the metal that forms the metal oxide. Another form of the reactions of Eqs. (355) and (217) involving the exemplary cell [Na/BASE/NaOH] that follows the same mechanism as that of Eq. (334) is

$$Na + 2NaOH \text{ to } Na_2O + OH + NaH \text{ to } Na_2O + NaOH + 1/2H_2 \quad (342)$$

In an embodiment of the electrolysis cell comprising a basic aqueous electrolyte, the reaction mechanism to form OH and hydrinos follows that of Eqs. (313-342) and (355). For example, the electrolyte may comprise an alkali (M) base such as MOH or $M_2CO_3$ that provides $OH^-$ and alkali metal ions $M^+$ that may form $M_2O$ and OH as an intermediate to $H_2O$. For example, an exemplary cathode reaction following Eq. (342) is

$$K^+ + e^- + 2KOH \text{ to } K_2O + OH + KH \text{ to } K_2O + KOH + 1/2H_2 \quad (343)$$

In another embodiment of the aqueous electrolysis cell, the oxygen from the anode reacts with a metal or metal hydride at the cathode to form $OH^-$ (Eq. (314)) that is oxidized at the anode to form OH. OH may also be formed as an intermediate at the cathode. OH further reacts to form hydrinos. The reduction of $O_2$ and $H_2O$ to $OH^-$ at the cathode may be facilitated by using a carbon or carbon-coated metal cathode. The carbon may be electroplated from a carbonate electrolyte such as an alkali carbonate such as $K_2CO_3$. The cell may be operated without an external recombiner to increase the $O_2$ concentration to increase the $O_2$ reduction rate.

In other embodiments of cell that produce OH, at least one of H and O formed during at least one of the oxidation and reduction reactions may also serve as a catalyst to form hydrinos.

In a further generalized reaction having a hydrogen chalcogenide ion electrolyte, the cathode reaction comprises a reaction that performs at least one of accepts electrons and accepts H. The anode reaction comprises a reaction that performs at least one of donates electrons, donates H, and oxidizes the hydrogen chalcogenide ion.

In another embodiment, a cell system shown in FIGURE 21 may comprise an anode compartment 600, an anode 603 such as Zn, a cathode compartment 601, a cathode 604 such as carbon, and a separator 602 such as a polyolefin membrane selectively permeable to the migrating ion such as $OH^-$ of an electrolyte such as MOH (6.5 M to saturated) (M=alkali). A suitable membrane is Celgard 3501. The electrodes are connected through switch 606 by a load 605 to discharge the cell such that an oxide or hydroxide product such as ZnO is formed at the anode 603. The cell comprising electrodes 603 and 604 may be recharged using electrolysis power supply 612 that may be another CIHT cell. The cell may further comprise an auxiliary electrode such as an auxiliary anode 609 in an auxiliary compartment 607 shown in FIGURE 21. When the cell comprising anode 603 and cathode 604 is suitably discharged, electrode 603 comprising an oxidized product such as ZnO may serve as the cathode with the auxiliary electrode 609 serving as the anode for electrolysis regeneration of anode 603 or for spontaneous discharge. A suitable electrode in the latter case with a basic electrolyte is Ni or Pt/Ti. In the latter case, suitable hydride anodes are those used in metal hydride batteries such as nickel-metal hydride batteries that are known to those skilled in the Art. Exemplary suitable auxiliary electrode anodes are those of the disclosure such as a metal such as Sc, Ti, V, Cr, Mn, Fe, Co, Ni, Cu, Zn, Ag, Cd, Hg, Ga, In, Sn, Pb, or suitable metals having low water reactivity are Cu, Ni, Pb, Sb, Bi, Co, Cd, Ge, Au, Ir, Fe, Hg, Mo, Os, Pd, Re,

Rh, Ru, Se, Ag, Tc, Te, Tl, Sn, or W, or these metals as paste with saturated MOH, a dissociator and hydrogen such as $PtC(H_2)$, or metal hydride such as R-Ni, $LaNi_5H_6$, $La_2Co_1Ni_9H_6$, $ZrCr_2H_{3.8}$, $LaNi_{3.55}Mn_{0.4}Al_{0.3}Co_{0.75}$ $ZrMn_{0.5}Cr_{0.2}V_{0.1},Ni_{1.2}$, and other alloys capable of storing hydrogen, such as one of the $AB_5$ (LaCePrNdNiCoMnAl) or $AB_2$ (VTiZrNiCrCoMnAlSn) type, where the "$AB_x$" designation refers to the ratio of the A type elements (LaCePrNd or TiZr) to that of the B type elements (VNiCrCoMnAlSn). In other embodiments, the hydride anode comprises at least one of the $AB_5$-type: $MmNi_{3.2}Co_{1.0}Mn_{0.6}Al_{0.11}Mo_{0.09}$ (Mm = misch metal: 25 wt% La, 50 wt% Ce, 7 wt% Pr, 18 wt% Nd), $AB_2$-type: $Ti_{0.5},Zr_{0.49}V_{0.70}Ni_{1.18}Cr_{0.12}$ alloys, magnesium-based alloys such as $Mg_{1.9}Al_{0.1}Ni_{0.8}Co_{0.1}Mn_{0.1}$ alloy, $Mg_{0.72}Sc_{0.28}(Pd_{0.012}) + Rh_{0.12})$, and $Mg_{80}Ti_{20}$, $Mg_{80}V_{20}$, $La_{0.8}Nd_{0.2}Ni_{2.4}Co_{2.5}Si_{0.1}$, $LaNi_{5-x}M_x$ (M= Mn, Al), (M= Al, Si, Cu), (M= Sn), (M= Al, Mn, Cu) and $LaNi_4Co$, $MmNi_{3.55}Mn_{0.44}Al_{0.3}Co_{0.75}$, $LaNi_{3.5}MgCu_2$, $MgZn_2$, $MgNi_2$, AB compounds such as TiFe, TiCo, and TiNi, $AB_n$ compounds (n = 5, 2, or 1), $AB_{3-4}$ compounds, and $AB_x$ (A = La, Ce, Mn, Mg; B = Ni, Mn, Co, Al). The cell comprising anode 609 and cathode 603 may be discharged through load 613 when switch 611 is closed and switch 606 is opened. The cell comprising electrodes 603 and 609 may be recharged using power supply 610 that may be another CIHT cell. Alternatively, following closing switch 614 and opening switch 611, the recharging of the discharged cell comprising electrodes 604 and 609 may occur using power source 616 that may be another CIHT cell. Furthermore, the auxiliary anode 609 such a hydride such as R-Ni, $LaNi_5H_6$, $La_2Co)Ni_9H_6$, $ZrCr_2H_{3.8}$, $LaNi_{3.55}Mn_{0.4}Al_{0.3}Co_{0.75}$, or $ZrMn_{0.5}Cr_{0.2}V_{0.1}Ni_{1.2}$ may be recharged electrolytically or regenerated by addition of hydrogen in situ or by removal, hydrogenation, and replacement. Suitable exemplary anodes that form oxides or hydroxides during discharge having thermodynamically favorable regeneration reactions of $H_2$ reduction to the metal are Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, and W. These and other such electrodes may be run with $H_2$ in the half-cell to batch or continuously regenerate the electrode. Electrodes can be alternately recycled. For example, the discharged metal hydride anode such as $LaNi_5$ from $LaNi_5H_6$ may be used as the cathode in another aqueous cell wherein water or $H^+$ reduction to hydrogen at the cathode will rehydride the $LaNi_5$ to $LaNi_5H_6$ that in turn can serve as an anode. The energy source that drives the discharge and recharge cycles is the formation of hydrinos from hydrogen. Other anodes, cathodes, auxiliary electrodes, electrolytes, and solvents of the disclosure may be interchanged by one skilled in the Art to comprise other cells capable of causing the regeneration of at least one electrode such as the initial anode.

In other embodiments, at least one of the anode 603 and cathode 604 may comprise a plurality of electrodes wherein each further comprises a switch to electrically connect or disconnect each of the plurality of electrodes to or from the circuit. Then, one cathode or anode may be connected during discharge, and another may be connected during recharge by electrolysis, for example. In an exemplary embodiment having a basic electrolyte such as MOH (M = alkali) such as KOH (saturated aq), the anode comprises a metal such as suitable metals having low water reactivity are Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, W, or Zn or a hydride such as R-Ni or $LaNi_5H_6$, and the cathode comprises a plurality of at least two electrodes such as a carbon electrode that is connected to the circuit during discharge and nickel that is connected during recharge. In another embodiment, the electrolyte may be changed in at least one half-cell before electrolysis. For example, saturated MOH may be diluted to allow $H_2$ evolution at the electrolysis cathode and then concentrated again for discharge. In another embodiment, at least one of the solvent and solute may be changed to permit the cell reactants to be regenerated. The electrolysis voltage of the cell products may exceed that of the solvent; then the solvent change is selected to permit the regeneration of the reactants by electrolysis. In an embodiment, the anode such as metal or hydride may be removed from a first cell comprising the anode and a cathode following discharge and regenerated by electrolysis in a second cell having a counter electrode and returned to the first cell as the regenerated anode. In an embodiment, the CIHT cell comprising a hydride anode further comprises an electrolysis system that intermittently charges and discharges the cell such that there is a gain in the net energy balance. An exemplary cell is [$LaNi_5H_6$/KOH (sat aq)/SC] pulsed electrolysis with constant discharge and charge current wherein the discharge time is about 1.1 to 100 times the charge time and the discharge and charge currents may be the same within a factor of about 10. In an embodiment, the cells are intermittently charged and discharged. In exemplary embodiments, the cells have metal anodes or metal hydride (MH) anodes such as [Co/KOH (sat aq)/SC], [Zn/KOH (sat aq)/SC], [Sn/KOH (sat aq)/SC], and [MH/KOH (sat aq)/SC] wherein MH may be $LaNi_5H_x$, $TiMn_2H_x$, or $La_2Ni_9CoH_x$. The intermittently charged and discharged CIHT cells may also comprise a molten electrolyte such as at least one hydroxide and a halide or other salt and may further comprise a source of H at the anode such as a hydride MH or $H_2O$ that may be in the electrolyte. Suitable exemplary cells are [MH/M'$(OH)_n$-M"$X_m$/M'''] and [M/M'$(OH)_n$-M"$X_m$($H_2O$)/M] wherein n, m are integers, M, M', M", and M''' may be metals, suitable metals M may be Ni, M' and M" may be alkali and alkaline earth metals, and suitable anions X may be hydroxide, halide, sulfate, nitrate, carbonate, and phosphate. In an exemplary embodiment, the CIHT cell is charged at constant current such as 1 mA for 2 s, then discharged such as at constant current of 1 mA for 20 s. The currents and times may be adjusted to any desirable values to achieve maximum energy gain.

In an embodiment, the anode comprises a metal that forms an oxide or a hydroxide that may be reduced by hydrogen. The hydrogen may be formed at the cathode by a reaction such as the reaction of water such as that given by Eq. (315). The oxide or hydroxide may also be reduced by added hydrogen. In an embodiment, an oxide or hydroxide

is formed at the anode wherein water is the source of hydroxide, and hydrogen reduces the hydroxide or oxide wherein water is at least partially the source hydrogen. Hydrinos are formed during the dynamic reaction involving the oxidation of $OH^-$ or the metal of the anode, the reduction of water to hydrogen gas, and the reaction hydrogen with the anode oxide or hydroxide to regenerate the anode metal. Then, the anode may comprise a metal whose oxide or hydroxide may be reduced by hydrogen such as a one of the group of transition metals, Ag, Cd, Hg, Ga, In, Sn, and Pb or suitable metals having low water reactivity from the group of Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, and W. In an embodiment, the transition metal Zn may also serve as a catalyst according to the reactions given in TABLE 1.

The cell may be regenerated by electrolysis of water with add-back for any hydrogen consumed in forming hydrinos or lost from the cell. In an embodiment, the electrolysis is pulsed such that a hydride such as metal hydride such as nickel hydride is formed during electrolysis that produces a voltage in the reverse direction of the electrolysis voltage and electrolyzes water during the time interval of the duty cycle having an absence of applied voltage. The electrolysis parameters such as peak voltage, current, and power, offset voltage, current, and power, and duty cycle, and frequency are optimized to increase the energy gain. In an embodiment, the cell generates electricity and hydrogen gas (Eq. (315)) that may be collected as a product. Alternatively, the hydrogen gas may be recycled to hydride the R-Ni to continue the cell discharge with the production of electricity wherein the formation of hydrinos provides a contribution to at least one of the cell voltage, current, power, and energy. The cell may also be recharged by an external source of electricity that may be another CIHT cell to cause the generation of hydrogen to replace any consumed in the formation of hydrinos or lost from the cell. In an embodiment, the hydride material may be rehydrided by $H_2$ addition in situ or in a separate vessel following removal from the anode compartment. In the former case, the anode may be sealed and pressurized with hydrogen. Alternatively, the cell may be pressurized with hydrogen wherein the hydrogen is preferentially absorbed or retained by the anode reactant. In an embodiment, the cell may be pressurized with $H_2$ during operation.

In another embodiment of a cell comprising a hydride such as a metal hydride half-cell reactant and the other half-cell reactants comprising an oxyhydroxide, the electrolyte may be a hydride conductor such as a molten eutectic salt. An exemplary cell is [R-Ni/LiCl KCl 0.02wt% LiH/CoOOH].

In addition to metal hydride such as R-Ni, the anode may comprise anthraquinone, polypyrrole, or specially passivated lithium. In an exemplary embodiment, the anode may comprise anthraquinone (AQ) mixed with hydrogenated carbon wherein the anode reaction creates H atoms that react to from hydrinos. The cell may further comprise nickel-oxy hydroxide as the cathode with anthrahydroquinone ($AQH_2$) as the anode wherein the electrolyte may be basic. An exemplary reversible cell reaction is

$$NiOOH + 0.5AQH_2 \square Ni(OH)_2 + 0.5AQ \qquad (344)$$

An exemplary cell is [$AQH_2$/separator KOH/NiOOH]. In embodiments, nickel-oxy hydroxide may be replaced by another oxide or oxyhydroxide such as lead or manganese oxides such as $PbO_2$ or $MnO_2$.

In other aqueous electrolyte embodiments, $OH^-$ is a half-cell reactant. $OH^-$ may be oxidized to $H_2O$ with a metal ion reduced at the cathode. An organometallic compound may contain the metal ion. Suitable organometallic compound are aromatic transition metal compounds such as compounds comprising ferrocene ($Fe(C_5H_5)_2$), nickelocene, and cobaltocene. Other organometallics that can undergo an oxidation-reduction reaction known by those skilled in the Art may be substituted for these examples and their derivatives. The oxidant form of ferrocene is ferrocenium ($[Fe(C_5H_5)_2]^+$). The organometallic compound may comprise ferrocenium hydroxide or halide such as chloride that is reduced to ferrocene. The ferrocenium may comprise an electroconducting polymer such as polyvinylferrocenium. The polymer may be attached to a conducting electrode such as Pt or other metal as given in the disclosure. An exemplary anode reaction of the metal hydride R-Ni is given by Eq. (311). An exemplary cathode reaction is

$$\text{ferrocenium(OH)} + e- \text{ to ferrocene} + OH^- \qquad (345)$$

Vacancies or additions of H formed during cell operation such as during discharge cause hydrino reactions to release electrical power in addition to any from the non-hydrino-based reactions. The electrolye may comprise an aqueous alkali hydroxide. An exemplary cell is [R-Ni/ polyolefin KOH(aq), NaOH(aq), or LiOH(aq)/polyvinylferrocenium(OH)]. Other polar solvents or mixtures of the present disclosure may be used as well as an aqueous solution.

In an embodiment, the source of H comprises hydrogen. Atomic hydrogen may be formed on a dissociator such as and Pd/C, Pt/C, Ir/C, Rh/C, or Ru/C. The hydrogen source may also be a hydrogen permeable membrane and $H_2$ gas such as $Ti(H_2)$, Pd-Ag alloy ($H_2$), $V(H_2)$, Ta ($H_2$), $Ni(H_2)$, or $Nb(H_2)$. The cell may comprise an aqueous anion exchange membrane such as a hydroxide ion conducting membrane such as one with quaternary alkyl ammonium hydroxide groups and a basic aqueous solution. The cell may comprise a membrane or salt bridge that is ideally impermeable to $H_2$. The membrane or salt bridge may be selective for $OH^-$ transport. The basic electrolyte may be aqueous hydroxide solution such as aqueous alkali hydroxide such as KOH or NaOH. The anode may be an oxyhydroxide such

as AlO(OH), ScO(OH), YO(OH), VO(OH), CrO(OH), MnO(OH) ($\alpha$-MnO(OH) groutite and $\gamma$-MnO(OH) manganite), FeO(OH), CoO(OH), NiO(OH), RhO(OH), GaO(OH), InO(OH), $Ni_{1/2}Co_{1/2}O(OH)$, and $Ni_{1/3}Co_{1/3}Mn_{1/3}O(OH)$, or may be a high-surface area conductor such as carbon such as CB, Pt/C or Pd/C, a carbide such as TiC, or a boride such as $TiB_2$. In basic solution, the reactions are

Anode

$$H_2 + 2OH^- \text{ to } 2H_2O + 2e^- \text{ or } H_2 + OH^- \text{ to } H_2O + e^- + H(1/p) \quad (346)$$

Cathode

$$2(CoOOH + e^- + H_2O \text{ to } Co(OH)_2 + OH^-)$$

or

$$CoOOH + 2e^- + 2H_2O \text{ to } Co(OH)_2 + 2OH^- + H(1/p) \quad (347)$$

Exemplary cells are [R-Ni, $H_2$ and Pd/C, Pt/C, Ir/C, Rh/C, or Ru/C or metal hydride such as a transition metal, inner transition metal, rare earth hydride, or alloy such as one of the $AB_5$ or $AB_2$ types of alkaline batteries/MOH (M is an alkali metal) such as KOH (about 6M to saturated) wherein the base may serve as a catalyst or source of catalyst such as K or 2K+, or other base such as $NH_4OH$, $OH^-$ conductor such as a basic aqueous electrolyte, separator such as one with quaternary alkyl ammonium hydroxide groups and basic aqueous solution, ionic liquid, or solid $OH^-$ conductor/ MO(OH) (M = metal such as Co, Ni, Fe, Mn, Al), such as AlO(OH), ScO(OH), YO(OH), VO(OH), CrO(OH), MnO(OH) ($\alpha$-MnO(OH) groutite and $\gamma$-MnO(OH) manganite), FeO(OH), CoO(OH), NiO(OH), RhO(OH), GaO(OH), InO(OH), $Ni_{1/2}Co_{1/2}O(OH)$, and $Ni_{1/3}CO_{1/3}Mn_{1/3}O(OH)$, or other H intercalated chalcogenide, or HY]. In another embodiment, Mg such as $Mg^{2+}$ may serve as the catalyst. Exemplary cells are [1 wt % $Mg(OH)_2$ mixed with R-Ni/KOH (saturated aq)/CB] and [R-Ni/ $Mg(OH)_2$ crown ether/CB]. In other embodiments, the electrolyte may be an ionic liquid or salt in an organic solvent. The cell may be regenerated by charging or by chemical processing.

In a fuel cell system embodiment having supplied $H_2$, the $H_2$ is caused to selectively or preferentially react at the anode. The reaction rate of $H_2$ at the anode is much higher than at the cathode. Restricting $H_2$ to the anodehalf-cell or using a material that favors the reaction at the anode over the cathode comprise two methods to achieve the selectivity. The cell may comprise a membrane or salt bridge that is ideally impermeable to $H_2$. The membrane or salt bridge may be selective for $OH^-$ transport.

In an embodiment wherein oxygen or a compound comprising oxygen participates in the oxidation or reduction reaction, $O_2$ may serve as a catalyst or a source of a catalyst. The bond energy of the oxygen molecule is 5.165 eV, and the first, second, and third ionization energies of an oxygen atom are 13.61806 *eV*, 35.11730 *eV*, and 54.9355 *eV*, respectively. The reactions $O_2 \rightarrow O + O^{2+}$, $O_2 \rightarrow O + O^{3+}$, and $2O \rightarrow 2O^+$ provide a net enthalpy of about 2, 4, and 1 times $E_h$, respectively, and comprise catalyst reactions to from hydrino by accepting these energies from H to cause the formation of hydrinos. In an embodiment, OH may serve as a MH type hydrogen catalyst to produce hydrinos provided by the breakage of the O-H bond plus the ionization of 2 or 3 electrons from the atom O each to a continuum energy level such that the sum of the bond energy and ionization energies of the 2 or 3 electrons is approximately $m \cdot 27.2\ eV$ where $m$ is 2 or 4, respectively, as given in TABLE 3. OH may be formed by the reaction of $OH^-$ at the anode as given by exemplary Eqs. (311), (313), and (346) or at the cathode by the reduction of $H_2O$ as given by exemplary Eqs. (315) and (347). The large 1.2 ppm peak from analysis of the reaction product of cells such as [R-Ni/KOH(saturated)/CoOOH CB] and [R-Ni/KOH(saturated)/PdC] is consistent with m=3 in Eq. (5) for OH catalyst with an additional 27.2 eV from the decay energy of the $H_2(1/4)$ intermediate matching the 108.8 eV of OH catalyst. The increased intensity from the R-Ni anode product supports the mechanism of OH as the catalyst formed by the oxidation of $OH^-$.

Alternatively, O-H may serve as the catalyst to cause a transition to the H(1/3) state as given in TABLE 3 that rapidly transitions to the H(1/4) state by catalysis with H as given by Eq. (10). The presence of a small $H_2(1/3)$ NMR peak at 1.6 ppm and the large $H_2(1/4)$ NMR peak at 1.25 ppm supports this mechanism.

In an embodiment, the over potential of at least one electrode can cause a better match the catalyst's energy to m27.2 eV (m = integer). For example, as shown in TABLE 3A, OH may be a catalyst wherein m=2 in Eq. (47). The overpotential of the cathode for at least one of $O_2$ and water reduction and at least one of the overpotential of the metal, metal hydroxide, metal oxyhydroxide, metal hydride, or the $H_2$ electrode to accept an electron, release H, and oxidize $OH^-$ to OH (Eqs. (313-347)) causes a more exact match to m27.2 eV such as 54.4 eV. A suitable cathode material is carbon that has an overpotential >0.6 V at $10A/m^{-2}$ and increases with current density. The current density may be adjusted by controlling the load to optimize the contribution of hydrino production to the cell power. The overpotential may also be adjusted by modifying the surface of the electrode such as the cathode. Carbon's overpotential may be increased by partial oxidation or activation by methods such as steam treatment.

Furthermore, atomic oxygen is a special atom with two unpaired electrons at the same radius equal to the Bohr radius of atomic hydrogen. When atomic H serves as the catalyst, 27.2 eV of energy is accepted such that the kinetic energy of each ionized H serving as a catalyst for another is 13.6 eV. Similarly, each of the two electrons of O can be ionized with 13.6 eV of kinetic energy transferred to the O ion such that the net enthalpy for the breakage of the O-H bond of OH with the subsequent ionization of the two outer unpaired electrons is 80.4 eV as given in TABLE 3. During the ionization of $OH^-$ to OH, the energy match for the further reaction to H(1/4) and $O^{2+} + 2e^-$ may occur wherein the 204 eV of energy released contributes to the CIHT cell's electrical power. The reaction is given as follows:

$$80.4\ eV + OH + H\left[\frac{a_H}{p}\right] \to O_{fast}^{2+} + 2e^- + H\left[\frac{a_H}{(p+3)}\right] + [(p+3)^2 - p^2]\cdot 13.6\ eV \tag{348}$$

$$O_{fast}^{2+} + 2e^- \to O + 80.4\ eV \tag{349}$$

And, the overall reaction is

$$H\left[\frac{a_H}{p}\right] \to H\left[\frac{a_H}{(p+3)}\right] + [(p+3)^2 - p^2]\cdot 13.6\ eV \tag{350}$$

where $m$ = 3 in Eq. (5). The kinetic energy could also be conserved in hot electrons. The observation of H population inversion in water vapor plasmas is evidence of this mechanism.

In the case that $OH^-$ is oxidized to form OH that further reacts to form hydrino, the concentration of $OH^-$ may be high to increase the reaction rate to form OH and thus hydrino as given by the following reaction:

$$OH^- \text{ to } OH + e^- \text{ to } 1/2O_2 + e^- + H(1/p) \tag{351}$$

The concentration of $OH^-$ corresponding to that of the electrolyte such as MOH (M=alkali) such as KOH or NaOH may be any desired concentration, but preferably it is high such as 1 M to saturated. An exemplary cell is [R-Ni/MOH (saturated aq)/CB].

In another embodiment, the pH may be lower such as neutral to acidic. In the case that $H_2O$ is oxidized to form OH that further reacts to form hydrino, the concentration of the electrolyte may be high to increase the activity and conductivity to increase the reaction rate to form OH and thus hydrino as given by the following reaction:

anode

$$H_2O \text{ to } OH + e^- + H^+ \text{ to } 1/2O_2 + e^- + H^+ + H(1/p) \tag{352}$$

$$MH_x + H_2O \text{ to } OH + 2e^- + 2H^+ \text{ to } 1/2O_2 + 2H^+ + 2e^- + H(1/p) \tag{353}$$

cathode

$$H^+ + e^- \text{ to } 1/2H_2 \text{ or } H^+ + e^- \text{ to } H(1/p) \tag{354}$$

The presence of an anode reactant hydride such as $MH_x$ (M is an element other than H such as a metal) favors the formation of OH over the evolution of $O_2$ by the competing reaction given by Eq. (353). The reaction to form hydrinos may be limited by the availability of H from the hydride; so, the conditions to increase the H concentration may be optimized. For example, the temperature may be increased or $H_2$ may be supplied to the hydride to replenish any consumed. The separator may be Teflon in cells with an elevated temperature. The electrolyte may be a salt other than a base such as at least one of the group of $MNO_3$, MNO, $MNO_2$, MX (X = halide), $NH_3$, $M_2S$, MHS, $M_2CO_3$, $MHCO_3$, $M_2SO_4$, $MHSO_4$, $M_3PO_4$, $M_2HPO_4$, $MH_2PO_4$, $M_2MoO_4$, $MNbO_3$, $M_2B_4O_7$ (M tetraborate), $MBO_2$, $M_2WO_4$, $M_2CrO_4$, $M_2Cr_2O_7$, $M_2TiO_3$, $MZrO_3$, $MAlO_2$, $MCoO_2$, $MGaO_2$, $M_2GeO_3$, $MMn_2O_4$, $M_4SiO_4$, $M_2SiO_3$, $MTaO_3$, $MVO_3$, $MIO_3$, $MFeO_2$, $MIO_4$, $MClO_4$, $MScO_n$, $MTiO_n$, $MVO_n$, $MCrO_n$, $MCr_2O_n$, $MMn_2O_n$, $MFeO_n$, $MCoO_n$, $MNiO_n$, $MNi_2O_n$, $MCuO_n$, $MZnO_n$, (M is alkali or ammonium and n=1, 2,3, or 4), and an organic basic salt such as M acetate or M

carboxylate wherein M is an alkali metal or ammonium. An exemplary cell is [R-Ni/ $M_2SO_4$ (saturated aq)/CB]. The electrolyte may also comprise these and other anions with any cation that is soluble in the solvent such as alkaline earth, transition metal, inner transition metal, rare earth, and other cations of Groups III, IV, V, and VI such as Al, Ga, In, Sn, Pb, Bi, and Te. Exemplary cells are [R-Ni/$MgSO_4$ or $Ca(NO_3)_2$ (saturated aq)/activated carbon (AC)]. The electrolyte concentration may be any desired concentration, but preferably it is high such as 0.1 M to saturated.

In an embodiment, the anode or cathode may comprise an additive such as a support such as a carbide such as TiC or TaC or carbon such as Pt/C or CB, or an inorganic compound or getter such as LaN or KI. Exemplary cells are [Zn LaN/KOH (sat aq)/SC], [Sn TaC/KOH (sat aq)/SC], [Sn KI/KOH (sat aq)/SC], [Pb CB/KOH (sat aq)/SC], [W CB/KOH (sat aq)/SC]. In another embodiment, the electrolyte may comprise a mixture of bases such as saturated ammonium hydroxide to made saturated in KOH. Exemplary cells are [Zn/KOH (sat aq) $NH_4OH$ (sat aq)/SC], and [Co/KOH (sat aq) $NH_4OH$ (sat aq)/SC].

In an embodiment, at least one of the cathode and anode half-cell reactions form at least one of OH and $H_2O$ that serves as a catalyst to form hydrinos. OH may be formed by the oxidation of $OH^-$, or OH may be formed by the oxidation of a precursor such as a source of at least one of OH, H, and O. In the latter two cases, the H reacts with a source of O to form OH and O reacts with a source of H to form OH, respectively. The precursor may be a negative or neutral species or compound. The negative species may be an ion that comprises OH, $OH^-$, or a moiety that comprises OH or $OH^-$ such as $Al(OH)_4^-$ that comprises $OH^-$, or a superoxide or peroxide ion $(HO_2^-)$ that comprises OH. The negative species may be an ion that comprises H, $H^-$, or a moiety that comprises H or $H^-$ such as $AlH_4^-$ that comprises $H^-$, or a peroxide ion that comprises H. The H product of oxidation of the negative species then reacts with a source of O to form OH. In an embodiment, OH may be formed by a reaction of H or source of H with an oxide or oxyhydroxide that may form $OH^-$ as an intermediate to forming OH. The negative species may be an ion that comprises an element or elements other than H such as O, $O^-$, $O^{2-}$, $O_2^-$, $O_2^{2-}$, or a moiety that comprises O, $O^-$, $O^{2-}$, $O_2^-$, or $O_2^{2-}$ such as metal oxide such as $CoO_2^-$ or $NiO_2^-$ that comprises an oxide ion, or a peroxide ion that comprises O. The O product of oxidation of the negative species then reacts with a source of H to form OH. The neutral species or compound may comprise OH, $OH^-$, or a moiety that comprises OH or $OH^-$ such a hydroxide or oxyhydroxide such as NaOH, KOH, $Co(OH)_2$ or CoOOH that comprise $OH^-$, or $H_2O$, an alcohol, or peroxide that comprise OH. The neutral species or compound may comprise H, $H^-$, or a moiety that comprises H or $H^-$ such as a metal hydride that comprises $H^-$, or $H_2O$, an alcohol, or peroxide that comprises H. The H product of oxidation then reacts with a source of O to form OH. The neutral species or compound may comprise an element or elements other than H such as O, $O^-$, $O^{2-}$, $O_2^-$, $O_2^{2-}$, or a moiety that comprises O, $O^-$, $O^{2-}$, $O_2^-$, or $O_2^{2-}$ such as metal oxide, hydroxide, or oxyhydroxide that comprises an oxide ion or source thereof, or $H_2O$, an alcohol, or peroxide that comprises O. The O product of oxidation then reacts with a source of H to form OH.

OH may be formed by the reduction of $OH^+$, or OH may be formed by the reduction of a precursor such as a source of at least one of OH, H, and O. In the latter two cases, the H reacts with a source of O to form OH and O reacts with a source of H to form OH, respectively. The precursor may be a positive or neutral species or compound. The positive species may be an ion that comprises OH or a moiety that comprises OH such as $Al(OH)_2^+$ that comprises $OH^-$, or a peroxide ion that comprises OH. The positive species may be an ion that comprises H, $H^+$, or a moiety that comprises H or $H^+$ such as $H_3O^+$ that comprises $H^+$, or a peroxide ion that comprises H. The H product of reduction of the positive species then reacts with a source of O to form OH. The positive species may be an ion that comprises an element or elements other than H such as O, $O^-$, $O^{2-}$, $O_2^-$, $O_2^{2-}$, or a moiety that comprises O, $O^-$, $O^{2-}$, $O_2^-$, or $O_2^{2-}$ such as metal oxide such as $AlO^+$ that comprises an oxide ion, or a peroxide ion that comprises O. The O product of reduction of the positive species then reacts with a source of H to form OH. The neutral species or compound may comprise OH or a moiety that comprises OH such as $H_2O$, an alcohol, or peroxide. The neutral species or compound may comprise H, $H^+$, or a moiety that comprises H or $H^+$ such as an acidic salt or acid such as $MHSO_4$, $MH_2PO_4$, $M_2HPO_4$ (M = alkali) and HX (X = halide), respectively, that comprises $H^+$, or $H_2O$, an alcohol, or peroxide that comprises H. The H product of reduction then reacts with a source of O to form OH. The neutral species or compound may comprise an element or elements other than H such as O or a moiety that comprises O such as $H_2O$, an alcohol, or peroxide. The

O product of reduction then reacts with a source of H to form OH.

OH may be formed as an intermediate or by a concerted or secondary chemical reaction involving oxidation or reduction of a compound or species. The same applies for $H_2O$ catalyst. The reactants may comprise OH or a source of OH such as at least one of $OH^-$, O, and H. Suitable sources of OH formed as an intermediate in the formation or consumption of $OH^-$ are metal oxides, metal hydroxides, or oxyhydroxides such as CoOOH. Exemplary reactions are given in the disclosure wherein OH transiently forms during a reaction involving $OH^-$, and some of the OH reacts to form hydrinos. Examples of OH formed by a secondary reaction involve a hydroxide or oxyhydroxide such as NaOH, KOH, $Co(OH)_2$ or CoOOH that comprise $OH^-$. For example, Na may form by the reduction of $Na^+$ in a cell such as [Na/BASE/NaOH] wherein the reaction with NaOH can form OH as a transient intermediate as follows:

$$Na^+ + e^- \text{ to } Na; \; Na + NaOH \text{ to } Na_2 + OH \text{ to } Na_2O + 1/2H_2 \quad (355)$$

In an embodiment such as [Na/BASE/NaOH], the transport rate of $Na^+$ is maximized by means such as decreasing the BASE resistance by elevating the temperature or decreasing its thickness in order to increase the rate of at least one of $Na_2$ and H formation. Consequently, the rates of OH and then hydrino formation occur.

Similarly, Li may form by the reduction of $Li^+$ in a cell such as [Li/Celgard LP 30/CoOOH] wherein the reaction with CoOOH can form OH as a transient intermediate as follows:

$$Li^+ + e^- \text{ to } Li \;;$$

$$3Li + 2CoOOH \text{ to } LiCoO_2 + Co + Li_2 + 2OH \text{ to } LiCoO_2 + Co + 2LiOH \quad (356)$$

Alternatively, in the organic electrolyte cell [Li/Celgard LP 30/CoOOH], the $H_2(1/4)$ NMR peak at 1.22 ppm is predominantly at the anode. The mechanism may be $OH^-$ migration to the anode wherein it is oxidized to OH that serves as the reactant to form hydrino. Exemplary reactions are

Cathode

$$CoOOH + e^- \text{ to } CoO + OH^- \quad (357)$$

Anode

$$OH^- \text{ to } OH + e^-; \; OH \text{ to } O + H(1/p) \quad (358)$$

The O may react with Li to form $Li_2O$. The oxyhydroxide and electrolyte may be selected to favor $OH^-$ as the migrating ion. In an embodiment, the electrolyte that facilitates migration of $OH^-$ is an ionic electrolyte such as a molten salt such as a eutectic mixture of alkali halides such as LiCl-KCl. The anode may be a reactant with $OH^-$ or OH such as a metal or hydride, and the cathode may be a source of $OH^-$ such as an oxyhydroxide or hydroxide such as those given in the disclosure. Exemplary cells are [Li/LiCl-KCl/CoOOH, MnOOH, $Co(OH)_2$, $Mg(OH)_2$].

In an embodiment, at least one of $O_2$, 2O, OH, and $H_2O$ serves as a catalyst to form hydrinos in at least one of the solid fuels reactions and the CIHT cells. In an embodiment, OH may be formed by the reaction of a source of oxygen such as $P_2O_5$, $SO_2$, $KNO_3$, $KMnO_4$, $CO_2$, $O_2$, NO, $N_2O$, $NO_2$, $O_2$, and $H_2O$, and a source of H such as MH (M=alkali), $H_2O$, or $H_2$ gas and a dissociator.

The cell may be regenerated by electrolysis or by $H_2$ addition. The electrolysis may be pulsed under conditions given in the disclosure. One CIHT cell may provide the electrolysis power from another as their charge-recharge cycles of a cyclic process are phased to output net electrical power beyond that of recharging. The cell may be a rocking-chair type with H shuttled back and forth between the anode and cathode. The migrating ion comprising H may be $OH^-$ or $H^+$ in embodiments. Consider a cell that has a source of H at the anode and a sink for H at the cathode such as [R-Ni/KOH (sat aq)/AC]. Exemplary discharge and recharging reactions are given by

Discharge

Anode:

$$R\text{-}NiH_x + OH^- \text{ to } H_2O + R\text{-}NiH_{x-1} + e^- \quad (359)$$

Cathode

$$H_2O + e^- \text{ to } OH^- + 1/2\, H_2 \text{ in carbon } (C(H_x)) \quad (360)$$

Electrolysis Recharge

Cathode:

$$R\text{-}NiH_{x-1} + H_2O + e^- \text{ to } OH^- + R\text{-}NiH_x \quad (361)$$

Anode

$$C(H_x) + OH^- \text{ to } H_2O + C(H_{x-1}) + e^- \quad (362)$$

wherein at least one H or OH produced during these reactions (Eqs. (359-360)) serves as the catalyst to form hydrinos. The cell may be operated to consume water to replace hydrogen that formed hydrinos. The oxygen may be selectively gettered by a selective reactant for oxygen or removed. Alternatively, hydrogen may be added back to the cell. The cell may be sealed to otherwise contain the balance of H inventory between the electrodes. At least one electrode may be rehydrided continuously or intermittently during cell operation. The hydrogen may be supplied by a gas line that flows $H_2$ into an electrode. The cell may comprise another line to remove $H_2$ to maintain a flow through at least one electrode. The rehydriding by at least one of the internal hydrogen inventory, hydrogen generated internally by electrolysis, and externally supplied hydrogen, may be by the direct reaction of hydrogen with the cathode or anode or reactants. In an embodiment, the anode reactant such as a hydride further comprises an agent to perform at least one of increase the amount of and rate of $H_2$ absorption by the anode reactant such as a hydride such as R-Ni, $LaNi_5H_6$, $La_2Co_1Ni_9H_6$, $ZrCr_2H_{3.8}$, $LaNi_{3.55}Mn_{0.4}Al_{0.3}Co_{0.75}$, or $ZrMn_{0.5}Cr_{0.2}V_{0.1}Ni_{1.2}$. The agent may be a hydrogen spillover catalyst. Suitable agents are CB, PtC, PdC, and other hydrogen dissociators and hydrogen dissociators on support materials. The hydrogen pressure may be in the range of about 0.01 to 1000 atm. A suitable range for rehydriding $LaNi_5$ is about 1 to 3 atm.

The migrating ion may be $OH^-$ wherein the anode comprises a source of H such as an H intercalated layered chalcogenide such as an oxyhydroxide such as CoOOH, NiOOH, $HTiS_2$, $HZrS_2$, $HHfS_2$, $HTaS_2$, $HTeS_2$, $HReS_2$, $HPtS_2$, $HSnS_2$, HSnSSe, $HTiSe_2$, $HZrSe_2$, $HHfSe_2$, $HTaSe_2$, $HTeSe_2$, $HReSe_2$, $HPtSe_2$, $HSnSe_2$, $HTiTe_2$, $HZrTe_2$, $HVTe_2$, $HNbTe_2$, $HTaTe_2$, $HMoTe_2$, $HWTe_2$, $HCoTe_2$, $HRhTe_2$, $HIrTe_2$, $HNiTe_2$, $HPdTe_2$, $HPtTe_2$, $HSiTe_2$, $HNbS_2$, $HTaS_2$, $HMoS_2$, $HWS_2$, $HNbSe_2$, $HNbSe_3$, $HTaSe_2$, $HMoSe_2$, $HVSe_2$, $HWSe_2$, and $HMoTe_2$. The electrolyte may be an $OH^-$ conductor such as a basic aqueous solution such as aqueous KOH wherein the base may serve as a catalyst or source of catalyst such as OH, K, or $2K^+$. The cell may further comprise an $OH^-$ permeable separator such as CG3401. Exemplary cells are [an H intercalated layered chalcogenide such as CoOOH, NiOOH, $HTiS_2$, $HZrS_2$, $HHfS_2$, $HTaS_2$, $HTeS_2$, $HReS_2$, $HPtS_2$, $HSnS_2$, HSnSSe, $HTiSe_2$, $HZrSe_2$, $HHfSe_2$, $HTaSe_2$, $HTeSe_2$, $HReSe_2$, $HPtSe_2$, $HSnSe_2$, $HTiTe_2$, $HZrTe_2$, $HVTe_2$, $HNbTe_2$, $HTaTe_2$, $HMoTe_2$, $HWTe_2$, $HCoTe_2$, $HRhTe_2$, $HIrTe_2$, $HNiTe_2$, $HPdTe_2$, $HPtTe_2$, $HSiTe_2$, $HNbS_2$, $HTaS_2$, $HMoS_2$, $HWS_2$, $HNbSe_2$, $HNbSe_3$, $HTaSe_2$, $HMoSe_2$, $HVSe_2$, $HWSe_2$, and $HMoTe_2$/KOH (6.5 M to saturated) + CG3401 /carbon such as CB, PtC, PdC, $CB(H_2)$, $PtC(H_2)$, $PdC(H_2)$, a carbide such as TiC, and a boride such as $TiB_2$]. The anode may be regenerated by supplying hydrogen or by electrolysis.

In an embodiment, at least one of the cathode or anode half-cell reactants or the electrolyte comprises an OH stabilizing species or an initiator species such as a free radical catalyst that serves as a free radical accelerator. Suitable OH stabilizing species are those that stabilize free radicals or prevent their degradation, and suitable initiators of free radicals are compounds that react to form free radicals such as peroxides or a $Co^{2+}$ salt that provides $Co^{2+}$ ions to react with $O_2$ to form superoxide. The free radical source or a source of oxygen may further comprise at least one of a peroxo compound, a peroxide, $H_2O_2$, a compound containing an azo group, $N_2O$, NO, $NO_2$, NaOCl, Fenton's reagent, or a similar reagent, OH radical or a source thereof, perxenate ion or a source thereof such as an alkali or alkaline earth perxenate, preferably, sodium perxenate ($Na_4XeO_6$) or potassium perxenate ($K_4XeO_6$), xenon tetraoxide ($XeO_4$), and perxenic acid ($H_4XeO_6$), and a source of metal ions such as a metal salt. The metal salt may be at least one of $FeSO_4$, $AlCl_3$, $TiCl_3$, and, preferably, a cobalt halide such as $CoCl_2$ that is a source of $Co^{2+}$. The electrolyte may comprise a cation of the anode material that may serve as an intitaor of OH. In an exemplary embodiment comprising a nickel anode such as R-Ni or Ni hydride or alloy, the electrolyte comprises a nickel salt additive such as $Ni(OH)_2$, $NiCO_3$, $Ni_3(PO_4)_2$, or $NiSO_4$ wherein the electrolyte may be an alkali hydroxide, carbonate, phosphate, or sulfate, respectively. Exemplary cells are [R-Ni, Raney cobalt (R-Co), Raney copper (R-Cu), CoH, $LaNi_5H_6$, $La_2Co_1Ni_9H_6$, $ZrCr_2H_{3.8}$, $LaNi_{3.55}Mn_{0.4}Al_{0.3}Co_{0.75}$, $ZrMn_{0.5}Cr_{0.2}V_{0.1}Ni_{1.2}$, CrH, FeH, MnH, NiH, ScH, VH, CuH, ZnH, AgH/KOH or NaOH (saturated) at least one of $FeSO_4$, $AlCl_3$, $TiCl_3$, $CoCl_2$, $Ni(OH)_2$, $NiCO_3$, $Ni_3(PO_4)_2$, and $NiSO_4$ /PdC,CB, or CoOOH + CB].

Exemplary electrolytes alone, in combination with base such as MOH (M = alkali), and in any combinations are alkali or ammonium halides, nitrates, perchlorates, carbonates, $Na_3PO_4$ or $K_3PO_4$, and sulfates and $NH_4X$, X = halide, nitrate, perchlorate, phospate, and sulfate. The electrolyte may comprise a mixture or hydroxides or other salts such as halides, carbonates, sulfates, phosphates, and nitrates. In general, exemplary suitable solutes alone or in combination are $MNO_3$, MNO, $MNO_2$, MX (X = halide), $NH_3$, MOH, $M_2S$, MHS, $M_2CO_3$, $MHCO_3$, $M_2SO_4$, $MHSO_4$, $M_3PO_4$, $M_2HPO_4$, $MH_2PO_4$, $M_2MoO_4$, $MNbO_3$, $M_2B_4O_7$ (M tetraborate), $MBO_2$, $M_2WO_4$, $M_2CrO_4$, $M_2Cr_2O_7$, $M_2TiO_3$, $MZrO_3$, $MAlO_2$, $MCoO_2$, $MGaO_2$, $M_2GeO_3$, $MMn_2O_4$, $M_4SiO_4$, $M_2SiO_3$, $MTaO_3$, $MVO_3$, $MIO_3$, $MFeO_2$, $MIO_4$, $MClO_4$, $MScO_n$, $MTiO_n$, $MVO_n$, $MCrO_n$, $MCr_2O_n$, $MMn_2O_n$, $MFeO_n$, $MCoO_n$, $MNiO_n$, $MNi_2O_n$, $MCuO_n$, $MZnO_n$, (M is alkali or ammonium and

n=1, 2,3, or 4), and an organic basic salt such as M acetate or M carboxylate. The electrolyte may also comprise these and other anions with any cation that is soluble in the solvent such as alkaline earth, transition metal, inner transition metal, rare earth, and other cations of Groups III, IV, V, and VI such as Al, Ga, In, Sn, Pb, Bi, and Te. Other suitable solutes are a peroxide such as $H_2O_2$ (that may be added continuously in dilute amounts such as about < 0.001 wt% to 10 wt%), an amide, organic base such as urea or similar compound or salt and guanidine or similar compound such as a derivative of arginine or salts thereof, imide, aminal or aminoacetal, hemiaminal, ROH (R is an organic group of an alcohol) such as ethanol, erythritol ($C_4H_{10}O_4$), galactitol (Dulcitol), (2R,3S,4R,5S)-hexane-1,2,3,4,5,6-hexol, or polyvinyl alcohol (PVA), RSH such as thiols, MSH, MHSe, MHTe, $M_xH_yX_z$ (X is an acid anion, M is a metal such as an alkali, alkaline earth, transition, inner transition, or rare earth metal, and x,y,z are integers including 0). The concentration may be any desired, such as a saturated solution. A suitable solute causes the solution such as an aqueous to be basic. Preferably the $OH^-$ concentration is high. Exemplary cells are [R-Ni/aqueous solution comprising a solute or combinations of solutes from the group of KOH, KHS, $K_2S$, $K_3PO_4$, $K_2HPO_4$, $KH_2PO_4$, $K_2SO_4$, $KHSO_4$, $K_2CO_3$, $KHCO_3$, KX (X = halide), $KNO_3$, KNO, $KNO_2$, $K_2MoO_4$, $K_2CrO_4$, $K_2Cr_2O_7$, $KAlO_2$, $NH_3$, $K_2S$, KHS, $KNbO_3$, $K_2B_4O_7$, $KBO_2$, $K_2WO_4$, $K_2TiO_3$, $KZrO_3$, $KCoO_2$, $KGaO_2$, $K_2GeO_3$, $KMn_2O_4$, $K_4SiO_4$, $K_2SiO_3$, $KTaO_3$, $KVO_3$, $KIO_3$, $KFeO_2$, $KIO_4$, $KClO_4$, $KScO_n$, $KTiO_n$, $KVO_n$, $KCrO_n$, $KCr_2O_n$, $KMn_2O_n$, $KFeO_n$, $KCoO_n$, $KNiO_n$, $KNi_2O_n$, $KCuO_n$, and $KZnO_n$, (n=1, 2,3, or 4) (all saturated) and Kactetate, dilute $H_2O_2$ additive, dilute $CoCl_2$ additive, amide, organic base, urea, guanidine, imide, aminal or aminoacetal, hemiaminal, ROH (R is an organic group of an alcohol) such as ethanol, erythritol ($C_4H_{10}O_4$), galactitol (Dulcitol), (2R,3S,4R,5S)-hexane-1,2,3,4,5,6-hexol, or polyvinyl alcohol (PVA), RSH such as thiols, MSH, MHSe, and MHTe/CB or CoOOH + CB].

The OH may be solvated by an H bonding medium. The H and possibly the O may undergo exchange in the medium. The hydrino reaction may be initiated during the exchange reaction(s). To increase the H bonding, the medium may comprise an H bonding solvent such as water or alcohol and optionally an H bonding solute such as hydroxide. The concentration may be high to favor the H bonding and to increase the rate of the hydrino reaction.

Other solvents or mixtures of the present disclosure and those of the Organic Solvents section of Mills PCT US 09/052072 which is incorporated herein by reference may be used as well as, or in combination with, an aqueous solution. The solvent may be polar. The solvent may comprise pure water or a mixture of water and one or more additional solvents such as at least one of an alcohol, amine, ketone, ether, and nitrile. Suitable exemplary solvents may be selected from the group of at least one of water, dioxolane, dimethoxyethane (DME), 1,4-benzodioxane (BDO), tetrahydrofuran (THF), dimethylformamide (DMF), dimethylacetamide (DMA), dimethylsulfoxide (DMSO), 1,3-dimethyl-2-imidazolidinone (DMI), hexamethylphosphoramide (HMPA), N-methyl-2-pyrrolidone (NMP), methanol, ethanol, amines such as tributylamine, triethyamine, triisopropylamine, N,N-dimethylaniline, furan, thiophene, imidazole, pyridine, pyrimidine, pyrazine, quinoline, isoquinoline, indole, 2,6-lutidine (2,6-dimethylpyridine), 2-picoline (2-methylpyridine), and nitriles such as acetonitrile and propanenitrile, 4-dimethylaminobenzaldehyde, acetone, and dimethyl acetone-1,3-dicarboxylate. Exemplary cells are [R-Ni/solution comprising a solvent or combination of solvents from the group of water, alcohol, amine, ketone, ether, and nitrile, and a solute or combinations of solutes from the group of KOH, $K_3PO_4$, $K_2HPO_4$, $KH_2PO_4$, $K_2SO_4$, $KHSO_4$, $K_2CO_3$, $K_2C_2O_4$, $KHCO_3$, KX (X = halide), $KNO_3$, KNO, $KNO_2$, $K_2MoO_4$, $K_2CrO_4$, $K_2Cr_2O_7$, $KAlO_2$, $NH_3$, $K_2S$, KHS, $KNbO_3$, $K_2B_4O_7$, $KBO_2$, $K_2WO_4$, $K_2TiO_3$, $KZrO_3$, $KCoO_2$, $KGaO_2$, $K_2GeO_3$, $KMn_2O_4$, $K_4SiO_4$, $K_2SiO_3$, $KTaO_3$, $KVO_3$, $KIO_3$, $KFeO_2$, $KIO_4$, $KClO_4$, $KScO_n$, $KTiO_n$, $KVO_n$, $KCrO_n$, $KCr_2O_n$, $KMn_2O_n$, $KFeO_n$, $KCoO_n$, $KNiO_n$, $KNi_2O_a$, $KCuO_n$, and $KZnO_n$, (n=1, 2,3, or 4) (all saturated) and Kactetate/CB or CoOOH + CB]. Further exemplary cells are [R-Ni/KOH (saturated aq)/Pt/Ti], [R-Ni/$K_2SO_4$ (saturated aq)/Pt/Ti], [PtC($H_2$)/KOH (saturated aq)/MnOOH CB], [PtC($H_2$)/KOH (saturated aq)/$FePO_4$ CB], [R-Ni/$NH_4OH$ (saturated aq)/CB].

In an embodiment, at least two solvents are immiscible. The cell is oriented such that the layers separate providing a different solvent to each of the cathode and anode half-cell compartments. The solvents and cell orientation relative to centrally-directed gravity is selected to provide each half-cell with the solvent that stabilizes a specific species such as OH or H to enhance the cell performance. The cell orientation is selected that distributes the immiscible solvents to favor reactivity of at least one reactant or intermediate of a reaction that promotes hydrino formation.

The cathode and anode materials may have a very high surface area to improve the kinetics and thereby the power. OH may be decomposed or reacted very quickly on a metal cathode such that a carbon cathode may be preferable. Other suitable cathodes comprise those that do not degrade OH or have a lower rate of degradation such as carbides, borides, nitrides, and nitriles. The anode may also comprise a support as one of the components. The support in different embodiments of the disclosure may be a fluorinated carbon support. Exemplary cells are [R-Ni, Raney cobalt (R-Co), Raney copper (R-Cu), $LaNi_5H_6$, $La_2Co_1Ni_9H_6$, $ZrCr_2H_{3.8}$, $LaNi_{3.55}Mn_{0.4}Al_{0.3}Co_{0.75}$, $ZrMn_{0.5}Cr_{0.2}V_{0.1}Ni_{1.2}$, CoH, CrH, FeH, MnH, NiH, ScH, VH, CuH, ZnH, AgH/KOH or NaOH (saturated)/carbon, carbides, borides, and nitriles, CB, PdC, PtC, TiC, $Ti_3SiC_2$, $YC_2$, TaC, $Mo_2C$, SiC, WC, C, $B_4C$, HfC, $Cr_3C_2$, ZrC, $CrB_2$, VC, $ZrB_2$, $MgB_2$, $NiB_2$, NbC, $TiB_2$, hexagonal boronitride (hBN), and TiCN]. The anode may comprise a metal such as Zn, Sn, Pb, Cd, or Co or a hydride such as $LaNi_5H_6$ and a support such as carbon, carbides, borides, and nitriles, CB, steam carbon, activated carbon, PdC, PtC, TiC, $Ti_3SiC_2$, $YC_2$, TaC, $Mo_2C$, SiC, WC, C, $B_4C$, HfC, $Cr_3C_2$, ZrC, $CrB_2$, VC, $ZrB_2$, $MgB_2$, $NiB_2$, NbC, $TiB_2$, hexagonal boronitride (hBN), and TiCN.

Hydrated MOH (M = alkali such as K) may react directly to form hydrinos at a low rate by the same mechanism as given by Eqs. (346) and (315) comprising the reactions of the oxidation with $OH^-$ and H to $H_2O$ and the reduction of $H_2O$ to H and $OH^-$. OH may serve as an MH type catalyst given in TABLE 3, or H may serve as a catalyst for another H. The NMR peaks in dDMF at 1.22 ppm and 2.24 ppm match the corresponding catalyst products of $H_2(1/4)$ and $H_2(1/2)$. In an embodiment, the reaction rate is dramatically increased by using a scheme to supply H to the oxidation reaction of $OH^-$ at an anode and by using a large surface area cathode to facilitate the reduction of water at a cathode such that the accelerated reaction is harnessed to produce electricity.

By the same mechanism as OH catalyst, SH given in TABLE 3 may serve as a catalyst to form H(1/4). The subsequent reaction to form $H^-(1/4)$ is consistent with the observed -3.87 ppm peak in the liquid NMR of compounds such as NaHS and reaction mixtures that may form SH.

In an embodiment, SH may be formed in the cell to serve as the hydrino catalyst according to the reaction given in TABLE 3 wherein m=7. Since H(1/4) is a preferred state, it may form with the balance of the energy of the hydrino transition over 81.6 eV transferred to the SH catalyst. In an embodiment, the catalyst SH may be formed by the oxidation of $SH^-$ at the anode. The cell electrolyte may comprise at least a SH salt such as MSH (M =alkali). The electrolyte may comprise $H_2O$. The anode reaction may be at least one of

Anode reaction:

$$SH^- \text{ to } SH + e^- \text{ to } S + H(1/p) \qquad (363)$$

and

$$MH_x + SH^- \text{ to } H_2S + R\text{-}MH_{x-1} + e^- \qquad (364)$$

$$1/2H_2 + SH^- \text{ to } H_2S + e^- \qquad (365)$$

wherein $MH_x$ is a hydride or a source of H and some of the H is converted to hydrino during the anode reaction. In the latter reaction, $H_2S$ may dissociate, and the $H^+$ may be reduced to $H_2$ at the cathode. The hydrogen that is unreacted to from hydrinos may be recycled. Exemplary cells are [$LaNi_5H_6$, $La_2Co_1Ni_9H_6$, $ZrCr_2H_{3.8}$, $LaNi_{3.55}Mn_{0.4}Al_{0.3}Co_{0.75}$, $ZrMn_{0.5}Cr_{0.2}V_{0.1}Ni_{1.2}$, or R-Ni/MSH (saturated aq) (M =alkali)/CB]. In another embodiment, SH is formed by reduction of a species at the cathode in addition to or comprising H. The species may be sulfur or a sulfur oxide such as sulfurous acid, sulfuric acid, $SO_2$, sulfite, hydrogen sulfite, sulfate, hydrogen sulfate, or thiosulfate. The anode may be a hydride or acid-stable metal such as Pt/Ti appropriate for the pH. Other compounds may form SH in the cell such as $SF_6$. An exemplary cathode reaction is

Cathode reaction:

$$SOxHy + qe^- \text{ to } SH + rH_2O \text{ to } S + H(1/p) \qquad (366)$$

Exemplary cells are [$LaNi_5H_6$, $La_2Co_1Ni_9H_6$, $ZrCr_2H_{3.8}$, $LaNi_{3.55}Mn_{0.4}Al_{0.3}Co_{0.75}$, $ZrMn_{0.5}Cr_{0.2}V_{0.1}Ni_{1.2}$, R-Ni, or Pt/Ti/$M_2SO_4$, $MHSO_4$, or $H_2SO_4$ (M = alkali)/CB]. The concentration of the source of SH may be any soluble concentration. The optimal concentration optimizes the power output due to hydrino formation. In other embodiments of the disclosure, SH and $SH^-$ may substitute for OH and $OH^-$, respectively.

Hydrated MSH (M = alkali such as Na) may react directly to form hydrinos at a low rate by the same mechanism as given by Eqs. (365) and (354) comprising the reactions of the oxidation with $SH^-$ and H to $H_2S$ and the reduction of $H_2S$ to H and $SH^-$. SH may serve as an MH type catalyst given in TABLE 3, or H may serve as a catalyst for another H. The NMR peak in dDMF at -3.87 ppm matches the corresponding catalyst product of $H^-(1/4)$. In an embodiment, the reaction rate is dramatically increased by using a scheme to supply H to the oxidation reaction of $SH^-$ at an anode and by using a large surface area cathode to facilitate the reduction of $H^+$ at a cathode such that the accelerated reaction is harnessed to produce electricity. Since S is a stable solid, the hydrino hydride ion may be a favored low-energy product as $Na^+$ $H^-(1/4)$ having interstitial S.

In an embodiment, ClH may be formed in the cell to serve as the hydrino catalyst according to the reaction given in TABLE 3 wherein m=3. In an embodiment, the catalyst ClH may be formed by the oxidation of $Cl^-$ at the anode that also supplies H. The cell electrolyte may comprise at least a Cl salt such as MCl (M =alkali). The electrolyte may comprise $H_2O$. The anode reaction may be at least one of

Anode reaction:

$$MH_x + Cl^- \text{ to } ClH + R\text{-}MH_{x-1} + e^- \qquad (367)$$

and

$$1/2H_2 + Cl^- \text{ to } ClH + e^- \quad (368)$$

wherein $MH_x$ is a hydride or a source of H and some of the H is converted to hydrino during the anode reaction. In the latter reaction, ClH may dissociate, and the $H^+$ may be reduced to $H_2$ at the cathode. The hydrogen that is unreacted to from hydrinos may be recycled. Exemplary cells are [$LaNi_5H_6$, $La_2Co_1Ni_9H_6$, $ZrCr_2H_{3.8}$, $LaNi_{3.55}Mn_{0.4}Al_{0.3}Co_{0.75}$, $ZrMn_{0.5}Cr_{0.2}V_{0.1}Ni_{1.2}$, or R-Ni/MCl (saturated aq) (M =alkali)/CB]. In another embodiment, ClH is formed by reduction of a species at the cathode in addition to or comprising H. The species may be chlorine oxide such as chlorates, perchlorates, chlorites, perchlorites, or hypochlorites. The anode may be a hydride or acid-stable metal such as Pt/Ti appropriate for the pH. Other compounds may form ClH in the cell such as $SbCl_5$. An exemplary cathode reaction is
Cathode reaction:

$$ClOxHy + qe^- \text{ to } ClH + rH_2O \text{ to } Cl + H(1/p) \quad (369)$$

Exemplary cells are [$LaNi_5H_6$, $La_2Co_1Ni_9H_6$, $ZrCr_2H_{3.8}$, $LaNi_{3.55}Mn_{0.4}Al_{0.3}Co_{0.75}$, $ZrMn_{0.5}Cr_{0.2}V_{0.1}Ni_{1.2}$, R-Ni, or Pt/Ti/$HClO_4$, $HClO_3$, $HClO_2$, HClO, $MClO_4$, $MClO_3$, $MClO_2$, MClO, (M = alkali)/CB]. The concentration of the source of ClH may be any soluble concentration. The optimal concentration optimizes the power output due to hydrino formation. In other embodiments of the disclosure, ClH and may substitute for OH.

Hydrated MCl (M = alkali such as Cs) may react directly to form hydrinos at a low rate by the same mechanism as given by Eqs. (367) and (368) and (354) comprising the reactions of the oxidation with $Cl^-$ and H to ClH and the reduction of HCl to H and $Cl^-$. ClH may serve as an MH type catalyst given in TABLE 3, or H may serve as a catalyst for another H. The e-beam excitation emission spectroscopy results of a series of peaks in CsCl having a constant spacing of 0.25 eV matches the corresponding catalyst product of $H_2(1/4)$. In an embodiment, the reaction rate is dramatically increased by using a scheme to supply H to the oxidation reaction of $Cl^-$ at an anode and by using a large surface area cathode to facilitate the reduction of $H^+$ at a cathode such that the accelerated reaction is harnessed to produce electricity.

In an embodiment, SeH may be formed in the cell to serve as the hydrino catalyst according to the reaction given in TABLE 3 wherein m=4. Since H(1/4) is a preferred state, it may form with the balance of the energy of the hydrino transition over 81.6 eV transferred to the SeH catalyst. In an embodiment, the catalyst SeH may be formed by the oxidation of $SeH^-$ at the anode. The cell electrolyte may comprise at least a SeH salt such as MSeH (M =alkali). The anode reaction may be at least one of
Anode reaction:

$$SeH^- \text{ to } SeH + e^- \text{ to } Se + H(1/p) \quad (370)$$

and

$$MH_x + SeH^- \text{ to } H_2Se + R\text{-}MH_{x-1} + e^- \quad (371)$$

$$1/2H_2 + SeH^- \text{ to } H_2Se + e^- \quad (372)$$

wherein $MH_x$ is a hydride or a source of H and some of the H is converted to hydrino during the anode reaction. In the latter reaction, $H_2Se$ may dissociate, and the $H^+$ may be reduced to $H_2$ at the cathode or $H_2Se$ may be reduced to $SeH^-$. The hydrogen that is unreacted to from hydrinos may be recycled. Exemplary cells are [$LaNi_5H_6$, $La_2Co_1Ni_9H_6$, $ZrCr_2H_{3.8}$, $LaNi_{3.55}Mn_{0.4}Al_{0.3}Co_{0.75}$, $ZrMn_{0.5}Cr_{0.2}V_{0.1}Ni_{1.2}$, or R-Ni/MSeH (sat aq) (M =alkali)/CB]. In another embodiment, SeH is formed by reduction of a species at the cathode in addition to or comprising H. The species may be Se or a selenium oxide such as $SeO_2$ or $SeO_3$, a compound such as $M_2SeO_3$, $M_2SeO_4$, $MHSeO_3$ (M = alkali), or an acid such as $H_2SeO_3$ or $H_2SeO_4$. The anode may be a hydride or acid-stable metal such as Pt/Ti appropriate for the pH. Other compounds may form SeH in the cell such as $SeF_4$. An exemplary cathode reaction is
Cathode reaction:

$$SeOxHy + qe^- \text{ to } SeH + rH_2O \text{ to } Se + H(1/p) \quad (373)$$

Exemplary cells are [$LaNi_5H_6$, $La_2Co_1Ni_9H_6$, $ZrCr_2H_{3.8}$, $LaNi_{3.55}Mn_{0.4}Al_{0 \cdot 3}Co_{0.75}$, $ZrMn_{0.5}Cr_{0.2}V_{0.1}Ni_{1.2}$, R-Ni, or Pt/Ti/$SeO_2$ or $SeO_3$, $M_2SeO_3$, $M_2SeO_4$, $MHSeO_3$ (M = alkali), $H_2SeO_3$, or $H_2SeO_4$ (aq)/CB]. SeH may be formed at the anode by oxidation of $SeH^-$ that may further react with H to form $SeH_2$. Alternatively, SeH may form by the reaction of H and $Se^{2-}$ with oxidation to SeH. Possibly some $H_2Se$ may form. The source of H may be an H permeable membrane and $H_2$ gas. The cell may comprise a salt bridge such as BASE and a cathode reactant that may comprise a molten salt such

as a eutectic mixture. Exemplary cells are [Ni($H_2$) $Na_2Se$/BASE/LiCl-$BaCl_2$ or NaCl-$NiCl_2$ or NaCl-$MnCl_2$]. The concentration of the source of SeH may be any soluble concentration. The optimal concentration optimizes the power output due to hydrino formation. In other embodiments of the disclosure, SeH and $SeH^-$ may substitute for OH and $OH^-$, respectively.

In a general embodiment, $H_2O$ serves to supply or accept H from at least one of a reductant and an oxidant to form a catalyst of the MH type of TABLE 3. In an embodiment, $H_2O$ serves as the solvent of the reactants and products. In an embodiment, $H_2O$ is not consumed in the reaction; rather a source of H is consumed to form hydrinos such as a hydride or hydrogen and a dissociator. In other embodiments, the role of $H_2O$ may be replaced by another suitable solvent of the disclosure that would be known to one ordinarily skilled in the Art.

By the same general mechanism of exemplary catalysts OH, SH, ClH, and SeH, MH such as the species given in TABLE 3 may serve as a catalyst to form H(1/p). In an embodiment, MH may be formed in the cell to serve as the hydrino catalyst according to the reaction given in TABLE 3 by the oxidation of $MH^-$ at the anode. The cell electrolyte may comprise at least a MH salt or a source thereof $MH^-$. The anode reaction may be at least one of

Anode reaction:

$$MH^- \text{ to } MH + e^- \qquad (374)$$

and

$$MH_x + MH^- \text{ to } H_2M + MH_{x-1} + e^- \qquad (375)$$

$$1/2H_2 + MH^- \text{ to } H_2M + e^- \qquad (376)$$

wherein $MH_x$ is a hydride or a source of H and some of the H is converted to hydrino during the anode reaction. In the latter reaction, $H_2M$ may dissociate, and the $H^+$ may be reduced to $H_2$ at the cathode or $H_2M$ may be reduced to $MH^-$. The hydrogen that is unreacted to from hydrinos may be recycled. Exemplary cells are [$LaNi_5H_6$, $La_2Co_1Ni_9H_6$, $ZrCr_2H_{3.8}$, $LaNi_{3.55}Mn_{0.4}Al_{0.3}Co_{0.75}$, $ZrMn_{0.5}Cr_{0.2}V_{0.1}Ni_{1.2}$, or R-Ni/source of $MH^-$ (nonreactive solvent)/CB]. In another embodiment, MH is formed by reduction of a species at the cathode alone or with a source of H. The species may be M or a compound comprising M capable of reduction to MH alone or with a source of H. The anode may be a hydride or acid-stable metal such as Pt/Ti appropriate for the pH. An exemplary cathode reaction is

Cathode reaction:

$$MHX + qe^- \text{ to } MH + X' \qquad (377)$$

wherein some of the H is converted to hydrino during the cathode reaction, X comprises one or more elements of the oxidant, and X' is a reduction product. Exemplary cells are [$LaNi_5H_6$, $La_2Co_1Ni_9H_6$, $ZrCr_2H_{3.8}$, $LaNi_{3.55}Mn_{0.4}Al_{0.3}Co_{0.75}$, $ZrMn_{0.5}Cr_{0.2}V_{0.1}Ni_{1.2}$, R-Ni, or Pt/Ti/compound that reduces to MH alone or with a source of H (nonreactive solvent)/CB]. The concentration of the source of MH may be any soluble concentration. The optimal concentration optimizes the power output due to hydrino formation. Exemplary cells are [Zn, $H_2RuS_2$, R-Ni, $LaNi5H_6$/KOH, NaHS or NaHSe, or KCl (sat aq, organic, or mixtures)/steam carbon].

At least one of the half-cell reactions and net reactions of the CIHT cells of the disclosure may comprise reactions for production of thermal energy. In embodiments both thermal and electrical energy may be produced. The thermal power may also be converted to electricity by systems of the current disclosure and those known in the Art.

In an embodiment, at least one of OH, SH, and ClH catalysts and hydrinos are formed by the reaction of H with a source of O, S, and Cl, respectively. The H may be formed by the oxidation of $H^-$ at the anode. A source of H is a cathode comprising a hydride such as a transition, inner transition, or rare earth hydride, hydrogen gas and a dissociator, or a hydrogen gas and a H-permeable membrane as given with other suitable sources in the disclosure. The cell may comprise an electrolyte to conduct $H^-$ such as a molten salt such as a eutectic mixture of alkali halides. The source of O, S, or Cl at the anode may be a compound or these elements in contact with the anode or in a sealed chamber permeable to H as shown in FIGURE 20. Exemplary cells are [Ni, V, Ti, SS, or Nb ($O_2$, S, or $Cl_2$), or S/LiCl-KCl/$TiH_2$, $ZrH_2$, $CeH_2$, $LaH_2$, or Ni, V, Ti, SS, or Nb($H_2$)]. Alternatively, the H to react with a source of O, S, and Cl may be formed by the reduction of $H^+$ at the cathode. A source of H may be an anode comprising hydrogen gas and a dissociator as given in the disclosure. The cell may comprise a proton-conducting electrolyte such as Nafion. The source of O, S, or Cl at the cathode may be a compound or these elements in contact with the cathode or in a sealed chamber permeable to H as shown in FIGURE 20. Exemplary cells are [PtC($H_2$) or PdC($H_2$)/Nafion/$O_2$, S, or $Cl_2$].

In an embodiment, $MH^-$ is a source of MH catalyst that forms upon oxidation. For example, $OH^-$, $SH^-$, or $Cl^-$ may be oxidized at the anode to form OH, SH, and ClH catalysts, respectively, and hydrinos. The anode half-cell reactants may comprise at least one of NaOH, NaHS, or NaCl. The anode half-cell reactants may further comprise a source of H

such as a hydride, hydrogen and a dissociator, or hydrogen and a hydrogen-permeable membrane such as a $Ni(H_2)$, $V(H_2)$, $Ti(H_2)$, $Fe(H_2)$, or $Nb(H_2)$ membrane or tube that may be an electrode such as the anode. The cell may comprise a solid electrolyte salt bridge such as BASE such as Na BASE in the case that the migrating ion is $Na^+$. The oxidation reactions to form the catalysts are given in the disclosure. OH, for example, is formed by the anode reaction of Eqs. (346) or (359). $M^+$ of the base MOH (M = alkali) migrates through the salt bridge such as BASE and is reduced to Na and may react in a concerted manner or subsequently with at least one cathode reactant. The reactants may be molten at an elevated cell temperature maintained at a least the melting point of the cell reactants. The cathode half-cell reactants comprise at least one compound that reacts with the reduced migrating ion. The product sodium compound may be more stable than the sodium compound of the anode half-cell reactants. The cathode product may be NaF. The cathode reactant may comprise a fluorine source such as fluorocarbons, $XeF_2$, $BF_3$, $NF_3$, $SF_6$, $Na_2SiF_6$, $PF_5$, and other similar compounds such as those of the disclosure. Another halogen may replace F in the cathode. For example, the cathode reactant may comprise $I_2$. Other cathode reactants comprise other halides such as metal halides such as transition metal, inner transition metal, rare earth, Al, Ga, In, Sn, Pb, Sb, Bi, Se, and Te halides such as $NiCl_2$, $FeCl_2$, $MnI_2$, AgCl, $EuBr_2$, $EuBr_3$, and other halides of the solid fuels of the disclosure. Either cell compartment may comprise a molten salt electrolyte such as a eutectic salt such as a mixture of alkali halide salts. The cathode reactant may also be a eutectic salt such as a mixture of halides that may comprise a transition metal halide. Suitable eutectic salts that comprise a metal such as a transition metal are $CaCl_2$-$CoCl_2$, $CaCl_2$-$ZnCl_2$, $CeCl_3$-RbCl, $CoCl_2$-$MgCl_2$, $FeCl_2$-$MnCl_2$, $FeCl_2$-$MnCl_2$, $KAlCl_4$-$NaAlCl_4$, $AlCl_3$-$CaCl_2$, $AlCl_3$-$MgCl_2$, NaCl-$PbCl_2$, $CoCl_2$-$FeCl_2$, and others in TABLE 4. Exemplary cells are [at least one of the group of NaOH, NaHS, NaCl, R-Ni, $LaNi_5H_6$, $La_2Co_1Ni_9H_6$, $ZrCr_2H_{3.8}$, $LaNi_{3.55}Mn_{0.4}Al_{0.3}Co_{0.75}$, $ZrMn_{0.5}Cr_{0.2}V_{0.1}Ni_{1.2}$, $CeH_2$, $LaH_2$, $PtC(H_2)$, $PdC(H_2)$, $Ni(H_2)$, $V(H_2)$, $Ti(H_2)$, $Fe(H_2)$, or $Nb(H_2)$/BASE/$I_2$, $I_2$ + NaI, fluorocarbons, $XeF_2$, $BF_3$, $NF_3$, $SF_6$, $Na_2SiF_6$, $PF_5$, metal halides such as transition metal, inner transition metal, rare earth, Al, Ga, In, Sn, Pb, Sb, Bi, Se, and Te halides such as $NiCl_2$, $FeCl_2$, $MnI_2$, AgCl, $EuBr_2$, and $EuBr_3$, eutectic salts such as $CaCl_2$-$CoCl_2$, $CaCl_2$-$ZnCl_2$, $CeCl_3$-RbCl, $CoCl_2$-$MgCl_2$, $FeCl_2$-$MnCl_2$, $FeCl_2$-$MnCl_2$, $KAlCl_4$-$NaAlCl_4$, $AlCl_3$-$CaCl_2$, $AlCl_3$-$MgCl_2$, NaCl-$PbCl_2$, $CoCl_2$-$FeCl_2$, and others of TABLE 4] and [NaOH + $PtC(H_2)$, $PdC(H_2)$, $Ni(H_2)$, $V(H_2)$, $Ti(H_2)$, $Fe(H_2)$, or $Nb(H_2)$/BASE/NaX (X is anion such as halide, hydroxide, sulfate, nitrate, carbonate) + one or more of the group of NaCl, AgCl, $AlCl_3$, $AsCl_3$, AuCl, $AuCl_3$, $BaCl_2$, $BeCl_2$, $BiCl_3$, $CaCl_2$, $CdCl_3$, $CeCl_3$, $CoCl_2$, $CrCl_2$, CsCl, CuCl, $CuCl_2$, $EuCl_3$, $FeCl_2$, $FeCl_3$, $GaCl_3$, $GdCl_3$, $GeCl_4$, $HfCl_4$, HgCl, $HgCl_2$, InCl, $InCl_2$, $InCl_3$, IrCl, $IrCl_2$, KCl, $KAgCl_2$, $KAlCl_4$, $K_3AlCl_6$, $LaCl_3$, LiCl, $MgCl_2$, $MnCl_2$, $MoCl_4$, $MoCl_5$, $MoCl_6$, $NaAlCl_4$, $Na_3AlCl_6$, $NbCl_5$, $NdCl_3$, $NiCl_2$, $OsCl_3$, $OsCl_4$, $PbCl_2$, $PdCl_2$, $PrCl_3$, $PtCl_2$, $PtCl_4$, $PuCl_3$, RbCl, $ReCl_3$, RhCl, $RhCl_3$, $RuCl_3$, $SbCl_3$, $SbCl_5$, $ScCl_3$, $SiCl_4$, $SnCl_2$, $SnCl_4$, $SrCl_2$, $ThCl_4$, $TiCl_2$, $TiCl_3$, TlCl, $UCl_3$, $UCl_4$, $VCl_4$, $WCl_6$, $YCl_3$, $ZnCl_2$, and $ZrCl_4$]. Another alkali metal may be substituted for Na, other halidies may be substituted for Cl, and the BASE may match the migrating ion.

The cell may be regenerated by electrolysis or mechanically. For example, the cell [$Ni(H_2$ 1atm) NaOH/BASE/NaCl-$MgCl_2$ eutectic] produces $H_2O$ that, in an embodiment, is vented from the half-cell. At the cathode, Na from migrating $Na^+$ may react with $MgCl_2$ to form NaCl and Mg. Representative cell reactions are

Anode

$$NaOH + 1/2H_2 \text{ to } H_2O + Na^+ + e^- \qquad (378)$$

Cathode

$$Na^+ + e^- + 1/2MgCl_2 \text{ to } NaCl + 1/2Mg \qquad (379)$$

The anode half-cell may additionally contain a salt such as an alkaline or alkaline earth halide such as a sodium halide. Following discharge, the anode may be regenerated by adding water or a source of water. The cell may also run spontaneously in reverse with the addition of $H_2O$ since the free energy for the reaction given by Eq. (379) is +46 kJ/mole (500 °C). The source of water may be steam wherein the half-cell is sealed. Alternatively, the source of water may be a hydrate. Exemplary hydrates are magnesium phosphate penta or octahydrate, magnesium sulfate heptahydrate, sodium salt hydrates, aluminum salt hydrates, and alkaline earth halide hydrates such as $SrBr_2$, $SrI_2$, $BaBr_2$, or $BaI_2$. The source may comprise a molten salt mixture comprising NaOH. In an alternative exemplary mechanical regeneration method, $MgCl_2$ is regenerated by evaporating Na as NaCl reacts with Mg to form $MgCl_2$ and Na. Na can be reacted with water to form NaOH and $H_2$ that are the regenerated anode reactants. The cell may comprise a flow system wherein cathode and anode reactants flow though the corresponding half cells and are regenerated in separate compartments and returned in the flow stream. Alternatively, Na may be used directly as the anode reactant in the cell [Na/BASE/NaOH]. The cells may be cascaded.

In an embodiment, the anode comprises a metal chalcogenide such as MOH, MSH, or MHSe (M = alkali metal) wherein the catalyst or source of catalyst may be OH, SH, or HSe. The cathode may further comprise a source of hydrogen such as a hydride such as a rare earth or transition metal hydride or others of the disclosure, or a permeable membrane and hydrogen gas such as $Ni(H_2)$, $Fe(H_2)$, $V(H_2)$, $Nb(H_2)$, and others of the disclosure. The catalyst or source

of catalyst may be from by the oxidation of $OH^-$, $SH^-$, or $HSe^-$, respectively. The anode oxidation product involving the further reaction with H may be $H_2O$, $H_2S$, and $H_2Se$, respectively. The cell may comprise at least one of an electrolyte and a salt bridge that may be a solid electrolyte such as BASE (β-alumina). The cathode may comprise at least one of an element, elements, a compound, compounds, metals, alloys, and mixtures thereof that may react with the migrating ion or reduced migrating ion such as $M^+$ or M, respectively, to form a solution, alloy, mixture, or compound. The cathode may comprise a molten element or compound. Suitable molten elements are at least one of In, Ga, Te, Pb, Sn, Cd, Hg, P, S, I, Se, Bi, and As. In an exemplary embodiment having $Na^+$ as the migrating ion through a salt bridge such as beta alumina solid electrolyte (BASE), the cathode comprises molten sulfur, and the cathode product is $Na_2S$. Exemplary cells are [NaOH + H source such as $LaH_2$, $CeH_2$, $ZrH_2$, $TiH_2$, or $Ni(H_2)$, $Fe(H_2)$, $V(H_2)$, $Nb(H_2)$/BASE/at least one of S, In, Ga, Te, Pb, Sn, Cd, Hg, P, I, Se, Bi, and As, and optionally a support]. In another embodiment, the cell is absent the salt bridge such as BASE since the reductant such as $H_2$ or hydride is confined to the anode, and the reaction between the half-cell reactants is otherwise unfavorable energetically or kinetically. In an embodiment having no salt bridge, the anode half-cell reactants do not react with the cathode half-cell reactant exergonically. Exemplary cells are [H source such as $LaH_2$, $CeH_2$, $ZrH_2$, $TiH_2$, or $Ni(H_2)$, $Fe(H_2)$, $V(H_2)$, $Nb(H_2$/hydroxide molten salt such as NaOH/at least one of S, In, Ga, Te, Pb, Sn, Cd, Hg, P, I, Se, Bi, and As and alloys, and optionally a support].

In an embodiment, the catalyst comprises any species such as an atom, positively or negatively charged ion, positively or negatively charged molecular ion, molecule, excimer, compound, or any combination thereof in the ground or excited state that is capable of accepting energy of $m.27.2eV$, $m$ = 1, 2, 3, 4,.... (Eq. (5)). It is believed that the rate of catalysis is increased as the net enthalpy of reaction is more closely matched to $m \cdot 27.2\ eV$. It has been found that catalysts having a net enthalpy of reaction within ±10%, preferably ±5%, of $m{\cdot}27.2\ eV$ are suitable for most applications. In the case of the catalysis of hydrino atoms to lower energy states, the enthalpy of reaction of $m \cdot 27.2\ eV$ (Eq. (5)) is relativistically corrected by the same factor as the potential energy of the hydrino atom. In an embodiment, the catalyst resonantly and radiationless accepts energy from atomic hydrogen. In an embodiment, the accepted energy decreases the magnitude of the potential energy of the catalyst by about the amount transferred from atomic hydrogen. Energetic ions or electrons may result due to the conservation of the kinetic energy of the initially bound electrons. At least one atomic H serves as a catalyst for at least one other wherein the 27.2 eV potential energy of the acceptor is cancelled by the transfer or 27.2 eV from the donor H atom being catalyzed. The kinetic energy of the acceptor catalyst H may be conserved as fast protons or electrons. Additionally, the intermediate state (Eq. (7)) formed in the catalyzed H decays with the emission of continuum energy in the form of radiation or induced kinetic energy in a third body. These energy releases may result in current flow in the CIHT cell.

In an embodiment, at least one of a molecule or positively or negatively charged molecular ion serves as a catalyst that accepts about m27.2 eV from atomic H with a decrease in the magnitude of the potential energy of the molecule or positively or negatively charged molecular ion by about m27.2 eV. For example, the potential energy of $H_2O$ given in Mills GUTCP is

$$V_e = \left(\frac{3}{2}\right)\frac{-2e^2}{8\pi\varepsilon_0\sqrt{a^2-b^2}}\ln\frac{a+\sqrt{a^2-b^2}}{a-\sqrt{a^2-b^2}} = -81.8715\ eV \qquad (380)$$

In an embodiment, the reaction to form the catalyst comprises a reaction to form $H_2O$ that serves as the catalyst for another H. The energy may be released as heat or light or as electricity wherein the reactions comprise a half-cell reaction. In an embodiment wherein the reactants form $H_2O$ that serves as a catalyst, the reactants may comprise $OH^-$ that may be oxidized to $H_2O$. Exemplary reactions are given in the disclosure. The reaction may occur in the CIHT cell or the electrolysis cell. The catalyst reaction may be favored with $H_2O$ in a transition state to product. The cell further comprises a source of atomic H. The source may be a hydride, hydrogen gas, hydrogen produced by electrolysis, hydroxide, or other sources given in the disclosure. For example, the anode may comprise a metal such as Zn or Sn wherein the half-cell reaction comprises the oxidation of $OH^-$ to water and metal oxide. The reaction also forms atomic H in the presence of the forming $H_2O$ wherein $H_2O$ serves as a catalyst to form hydrinos. The anode may comprise a hydride such as $LaNi_5H_6$ wherein the half-cell reaction comprises the oxidation of $OH^-$ to $H_2O$ with H provided by the hydride. The oxidation reaction occurs in the presence of H from the hydride that is catalyzed to hydrino by the formed $H_2O$. The anode may comprise a combination of a metal and a hydride wherein $OH^-$ is oxidized to $H_2O$ with the formation of a metal oxide or hydroxide, and H is provided by the hydride. The H is catalyzed to hydrino by the forming $H_2O$ serving as the catalyst. In another embodiment, an oxidant such as $CO_2$ or a reductant such as Zn or Al of R-Ni may react with $OH^-$ to form $H_2O$ and H as an intermediate wherein some of the H is catalyzed to hydrino by $H_2O$ during the reaction.

In another embodiment, at least one of $H_2O$ and H may form by a reduction reaction of at least one of species comprising at least one of O and H such as $H_2$, H, $H^+$, $O_2$, $O_3$, $O_3^+$, $O_3^-$, O, $O^+$, $H_2O$, $H_3O^+$, OH, $OH^+$, $OH^-$, HOOH, $OOH^-$, $O^-$, $O^{2-}$, $O_2^-$, and $O_2^{2-}$. In another embodiment, at least one of $H_2O$ and H may form by an oxidation reaction involving at least one of species comprising at least one of O and H such as $H_2$, H, $H^+$, $O_2$, $O_3$, $O_3^+$, $O_3^-$, O, $O^+$, $H_2O$, $H_3O^+$, OH, $OH^+$, $OH^-$, HOOH, $OOH^-$, $O^-$, $O^{2-}$, $O_2^-$, and $O_2^{2-}$. The reaction may comprise one of those of the disclosure. The reaction may occur in the CIHT cell or electrolysis cell. The reactions may be those that occur in fuel cells such as proton exchange membrane, phosphoric acid, and solid oxide fuel cells. The reactions may occur at the CIHT cell anode. The reactions may occur at the CIHT cell cathode. Representative cathode reactions occurring in aqueous media to form $H_2O$ catalyst and H or form intermediate species that may form $H_2O$ catalyst and H at one or both of the cathode and anode are

$$O_2 + 4H^+ + 4e^- \text{ to } 2H_2O \quad (381)$$

$$O_2 + 2H^+ + 2e^- \text{ to } H_2O_2 \quad (382)$$

$$O_2 + 2H_2O + 4e^- \text{ to } 4OH^- \quad (383)$$

$$O_2 + H^+ + e^- \text{ to } HO_2 \quad (384)$$

$$O_2 + H_2O + 2e^- \text{ to } HO_2^- + OH^- \quad (385)$$

$$O_2 + 2H_2O + 2e^- \text{ to } H_2O_2 + 2OH^- \quad (386)$$

$$O_2 + e^- \text{ to } O_2^- \quad (387)$$

$$HO_2^- + H_2O + 2e^- \text{ to } + 3OH^- \quad (388)$$

$$2HO_2^- \text{ to } 2OH^- + O_2 \quad (389)$$

$$H_2O_2 + 2H^+ + 2e^- \text{ to } 2H_2O \quad (390)$$

$$2H_2O_2 \text{ to } 2H_2O + O_2 \quad (391)$$

In an embodiment, the H bonding of a catalyst capable of such bonding may alter the energy that it may accept from atomic H when acting as a catalyst. H bonding may influence catalysts comprising H bond to an electronegative atom such as O, N, and S. Ionic bonding may alter the energy as well. In general, the net enthalpy that the catalyst may accept from H may change based on its chemical environment. The chemical environment and interactions with other species including other catalyst species may be altered by changing the reaction composition or conditions. The composition of the reaction mixture such as that of a solid fuel or of a CIHT half-cell may be adjusted to adjust the catalyst energy. For example, the composition of solutes and solvents as well as conditions such as temperature may be adjusted as given in the disclosure. Thereby, the catalyst rate and power from the formation of hydrinos may be adjusted. In the CIHT cell, additionally the current may be adjusted to control the catalysis rate. For example, the current may be optimized by adjusting the load to provide a high concentration of $H_2O$ and H formed by the half-cell reactions so that the forming product $H_2O$ may catalyze the H to form hydrinos at a high rate. The presence of a large $H_2(1/4)$ NMR peak at 1.25 ppm following extraction in dDMF from CIHT cells such as [M/KOH (saturated aq)/steam carbon + air]; M = metals such as Zn, Sn, Co, $LaNi_5H_6$, La, Pb, Sb, In, and Cd that form $H_2O$ at the anode by the oxidation of $OH^-$ supports this mechanism.

Other exemplary cells are [M/$K_2CO_3$ (sat aq)/SC], [M/KOH 10-22M + $K_2CO_3$ (sat aq)/SC] M = R-Ni, Zn, Co, Cd, Pb, Sn, Sb, In, Ge, [$LaNi_5H_6$/LiOH (sat aq) LiBr/ CB-SA], and [$LaNi_5H_6$/KOH (sat aq) $Li_2CO_3$/CB-SA]. In addition to hydrinos, a product of $H_2O$ serving as a catalyst is ionized $H_2O$ that may recombine into $H_2$ and $O_2$; thus, $H_2O$ catalysis may generate these gases that may be used commercially. This source of $H_2$ may be used to maintain the power output of the CIHT cell. It may supply $H_2$ directly or as a reactant to regenerate the CIHT half-cell reactants such as an anode hydride or metal. In an embodiment, R-Ni serves as a source of $H_2O$ and H that react to form hydrinos. The source of $H_2O$ and optionally H may be hydrated alumina such as $Al(OH)_3$. In an embodiment, the R-Ni may be rehydrated and rehydrided to serve in repeated cycles to form hydrinos. The energy may be released as heat or electricity. In the former case, the reaction may be initiated by heating.

In an embodiment, the reduced oxygen species is a source of HO such as $OH^-$ that may be oxidized at the anode of the CIHT cell or produced chemically in the solid fuel reactions. The cell reactants such as the anode reactants of the CIHT cell further comprise $H_2$. The $H_2$ reacts with OH to form H and $H_2O$ in an active state for the $H_2O$ to serve as a catalyst to form hydrinos by reaction with the H. Alternatively, the reactants comprise a source of H such as a hydride or $H_2$ and a dissociator such that H reacts with OH to form the active $H_2O$ hydrino catalyst that further reacts with another H to form hydrinos. Exempalry cells are [M + $H_2$/KOH (saturated aq)/steam carbon + $O_2$] and [M + $H_2$ + dissociator such as PtC or PdC/KOH (saturated aq)/steam carbon + $O_2$]; M = Zn, Sn, Co, $LaNi_5H_6$, Cd, Pb, Sb, and In. In an embodiment of a thermal reactor, hydrogen and oxygen are combined on a metal surface to form $H_2O$ catalyst and H that react to form hydrinos. The metal promotes H and O oxidative recombination to form water that serves as a catalyst for H to form hydrinos wherein the oxidized metal may form a hydroxide or oxide. Suitable exemplary metals are Zn, Sn, Co, $LaNi_5H_6$, Cd, Pb, Sb, and In.

The loaded steady state voltages of the [Na/BASE/NaOH] and [NaOH + Ni($H_2$)/BASE/$MgCl_2$ + NaCl] cells are about 0.4 V that matches the H bond energy of $H_2O$. Thus, in an embodiment, the CIHT cell is active when the cell voltage disrupts the H bonding such that $H_2O$ molecules may act autonomously to cause H to be catalyzed to hydrino wherein the enthalpy accepted by $H_2O$ is 3X27.2 eV.

In an embodiment, the ionic strength of the electrolyte is adjusted to break H bonding between water molecules such that each can serve as a catalyst with H. The ionic strength may be adjusted by adding other solutes or solvents. Alternatively, the reactants comprise a support that absorbs isolated $H_2O$ molecules and H. The support may be carbon nanotubes, fullerene, or similar cage or cavity compound. The support may be a cage compound comprised of elements other than carbon such as at least one of Al and Si such as zeolites. The zeolites may be doped with a conductor. The support may be an anode half-cell reactant that may further comprise a reductant that reacts with $OH^-$ to form $H_2O$ such as at least one of Zn, Co, Pb, $LaNi_5H_6$, Cd, Sn, Sb, and In. The support may comprise a medium with a dielectric constant that reduces that of $H_2O$ by interaction with $H_2O$.

In an embodiment, isolated $H_2O$ molecules are formed by a chemical reaction such as an oxidation or reduction reaction of reactants comprising at least one of O and H to form $H_2O$ in an active catalytic state to catalyze H to hydrinos. In an embodiment, the reaction may comprise a step of dehydration to at least transiently form isolated $H_2O$ molecules. Biological systems may use water formation in the electron transport chain and in photosynthesis as an energy source wherein the formed water reacts with H to form hydrinos. In embodiments, similar chemical systems are used to make electricity in the CIHT cell.

In an embodiment, $H_2O$ is formed in an isolated environment from other water molecules to avoid H bonding such that they may serve as catalysts to form hydrinos. $OH^-$ may undergo oxidization and react with H to form $H_2O$ inside of a channel, cage, or other geometrical structure or hydrophobic or other thermodynamic environment that excludes aggregate water. Suitable anode reactants that may absorb individual $H_2O$ molecules or otherwise exclude aggregate water are carbon nanotubes, fullerene, or similar cage or cavity compounds such as zeolites that may be mixed with a conductor such as carbon or doped with a conductor such as Pt/nanoTi, Pt/$Al_2O_3$, zeolite, Y zeolite, HY zeolite, and Ni-$Al_2O_3$-$SiO_2$. Steam or activated carbon having some hydrophilic functionalities may serve as a support such as that of the anode. Cellulose, carbon fiber, Nafion, a cation or anion exchange resin, molecular sieve such as 4A or 13X, or a conducting polymer such a polyaniline, polythiophene, polyacetlylene, polypyrrole, polyvinylferrocene, polyvinylnickelocene, or polyvinylcobaltocene may be added to the anode. A source of H may be added such as $H_2$ gas. OH may be formed by the oxidation of $OH^-$. The $H_2$ gas may react with the OH to from $H_2O$. Alternatively, H atoms may be provided by a $H_2$ dissociator such as Pt/C or Pd/C that may be activated.

In an embodiment, at least one half-cell reaction mixture comprises a surfactant. The surfactant may be ionic such as anionic or cationic. Suitable anionic surfactants are based on permanent anions (sulfate, sulfonate, phosphate) or pH-dependent anions (carboxylate). Exemplary sulfates are alkyl sulfates such as ammonium lauryl sulfate, sodium lauryl sulfate or sodium dodecyl sulfate (SDS), alkyl ether sulfates such as sodium lauryl ether sulfate (SLES) and sodium myreth sulfate. Exemplary sulfonates are docusates such as dioctyl sodium sulfosuccinate, sulfonate fluorosurfactants such as perfluorooctanesulfonate (PFOS) and perfluorobutanesulfonate, and alkyl benzene sulfonates. Exemplary phosphates are alkyl aryl ether phosphate, and alkyl ether phosphate. Exemplary carboxylates are alkyl carboxylates such as fatty acid salts (soaps) such as sodium stearate and sodium lauroyl sarcosinate, carboxylate fluorosurfactants such

as perfluorononanoate and perfluorooctanoate (PFOA or PFO). Suitable cationic surfactants are those based on pH-dependent primary, secondary or tertiary amines wherein, for example, primary amines become positively charged at pH < 10, secondary amines become charged at pH < 4 such as octenidine dihydrochloride, permanently charged quaternary ammonium cations such as alkyltrimethylammonium salts such as cetyl trimethylammonium bromide (CTAB), and cetyl trimethylammonium chloride (CTAC), cetylpyridinium chloride (CPC), polyethoxylated tallow amine (POEA), benzalkonium chloride (BAC), benzethonium chloride (BZT), 5-bromo-5-nitro-1,3-dioxane, dimethyldioctadecylammonium chloride, and dioctadecyldimethylammonium bromide (DODAB). Exemplary zwitterionic (amphoteric) surfactants are based on primary, secondary or tertiary amines or quaternary ammonium cation with sulfonates such as CHAPS (3-[(3-cholamidopropyl)dimethylammonio]-1-propanesulfonate), sultaines such as cocamidopropyl hydroxysultaine, carboxylates such as amino acids, imino acids, betaines such as cocamidopropyl betaine, and phosphates such as lecithin. The surfactant may be nonionic such as fatty alcohols such as cetyl alcohol, stearyl alcohol, cetostearyl alcohol such as consisting predominantly of cetyl and stearyl alcohols, oleyl alcohol, polyoxyethylene glycol alkyl ethers such as octaethylene glycol monododecyl ether, pentaethylene glycol monododecyl ether; polyoxypropylene glycol alkyl ethers, glucoside alkyl ethers such as decyl glucoside, lauryl glucoside, and octyl glucoside, polyoxyethylene glycol octylphenol ethers such as Triton X-100, polyoxyethylene glycol alkylphenol ethers such as nonoxynol-9, glycerol alkyl esters such as glyceryl laurate, polyoxyethylene glycol sorbitan alkyl esters such as polysorbates, sorbitan alkyl esters such as spans, cocamide MEA, cocamide DEA, dodecyldimethylamine oxide, and block copolymers of polyethylene glycol and polypropylene glycol such as poloxamers. The cations may comprise metals such as alkali metal, alkaline earth metal, and transition metals, and polyatomic or organic such as ammonium, pyridinium, and triethanolamine (TEA). The anion may be inorganic such as a halide or organic such as tosyls, trifluoromethanesulfonates, and methylsulfate.

The temperature of the cell may be maintained at any desired. In an embodiment wherein $H_2O$ serves as the catalyst, the H bonding is disrupted in order that the potential energy of $H_2O$ better matches an integer of 27.2 eV. The H bonding may be disrupted by at least one of maintaining the electrolyte concentration high, maintaining the cell at an elevated temperature such as in the range of about 30°C to 100°C, and by adding other gases or solvents to the water such as $NH_3$, amine, or a noble gas and DMSO, respectively, as well as others given in the disclosure. Other suitable gases are at least one of $CO_2$, $NO_2$, NO, $N_2O$, $NF_3$, $CF_4$, $SO_2$, $SF_6$, $CS_2$, He, Ar, Ne, Kr, and Xe. In an embodiment, the molarity of $NH_3$ added to the electrolyte is in the range of about 1 mM to 18 M. An exemplary electrolyte is a mixture of saturated KOH such as up to about 22 M and saturated $NH_3$ such as up to about 18 M. The dissolved gas concentration may be elevated by applying elevated pressure gas such as in the pressure range of about 1 atm to 500 atm. The H bonding may also be disrupted by application of external excitation such as the sources given in the disclosure. A gas mixture may comprise $O_2$ or a source of oxygen.

In an embodiment, a boost potential is applied to the cell that may be above or below the threshold for electrolysis of water. Considering the overpotential of the electrodes, the potential may be in the range of about 1 V to 3.5 V. The boost potential source may be loaded with a high resistance and connected to the CIHT electrodes, or its current may be limited to a low value relative to that of the loaded CIHT cell in the absence of the boost potential. The potential may be applied intermittently when the CIHT cell is open circuit. Then, the boost potential may be made open circuit while the CIHT cell is loaded. The voltage contribution provided by the CIHT cell when it is connected to the load causes current to flow in its circuit through its load of much less relative resistance such that the dissipated power is essentially that of the CIHT cell. In an embodiment, the reaction that forms the catalyst such as $H_2O$ and H may be propagated under circumstances where the rate may be undesirably or prohibitory low. In an embodiment, $H_2O$ may be reduced to $OH^-$ at the cathode, and $OH^-$ may be oxidized to $H_2O$ at the anode with the charging assistance of the external boost potential power source. Hydrinos are produced during the reactions wherein useful power is produced by the CIHT cell and dissipated in its load with minimum power drawn from the boost potential source. An exemplary cell is [$LaNi_5H_6$/KOH (sat aq)/SC boost potential]. The frequency of the application of the boost potential may be that which increases the net output energy of the CIHT cell and may be in the range of 1 mHz to 100 GHz.

In an embodiment, an electric field is produced by catalysis of H to form hydrinos that manifests as a cell voltage of the CIHT cell. The voltage and the corresponding field changes with loading and unloading the cell wherein current flows with the cell loaded. The circuit is opened and closed at a frequency that causes water molecules to disperse and break H bonding in response to the changing electric field such that $H_2O$ may serve as catalyst to form hydrinos. Alternatively, a voltage is applied at a frequency that causes water molecules to disperse and break H bonding in response to the changing electric field such that $H_2O$ may serve as catalyst to form hydrinos.

In an embodiment of the CIHT cell, the H bonding of $H_2O$ may be decreased to form $H_2O$ in an active state as a catalyst by applying a pulsed or alternating electric field to the electrodes. The frequency, voltage, and other parameters may be those given in the disclosure. In an embodiment, the applied field is at a frequency that decreases the permittivity of at least one of $H_2O$ and the electrolyte. A suitable frequency is that corresponding to about the minimum permittivity.

In an embodiment comprising excitation by electromagnetic radiation such as RF or microwaves, the water vapor pressure is maintain at a low pressure and temperature is maintained at an elevated value to minimize H bonding to better favor the formation of isolated $H_2O$ molecules that are in an active state to catalyze H also present to form

hydrinos. The reactants may comprise a water vapor plasma comprising isolated $H_2O$ molecules and H atoms wherein $H_2$ serves as the catalyst to accept about 3X27.2 eV from H to form H(1/4). The temperature may be for 35°C to 1000°C and the pressure may be form 600 Torr to 1 microTorr.

Similarly to $H_2O$, the potential energy of the amide functional group $NH_2$ given in Mills GUTCP is -78.77719 eV. From the CRC, $\Delta H$ for the reaction of $NH_2$ to form $KNH_2$ calculated from each corresponding $\Delta H_f$ is (-128.9-184.9) kJ/mole = -313.8 kJ/mole (3.25 eV). From the CRC, $\Delta H$ for the reaction of $NH_2$ to form NaNH2 calculated from each corresponding $\Delta H_f$ is (-123.8-184.9) kJ/mole = -308.7 kJ/mole (3.20 eV). From the CRC, $\Delta H$ for the reaction of $NH_2$ to form $LiNH_2$ calculated from each corresponding $\Delta H_f$ is (-179.5-184.9) kJ/mole = -364.4 kJ/mole (3.78 eV). Thus, the net enthalpy that may be accepted by alkali amides $MNH_2$ (M = K, Na, Li) serving as H catalysts to form hydrinos are about 82.03 eV, 81.98 eV, and 82.56 eV (m=3 in Eq. (5)), respectively, corresponding to the sum of the potential energy of the amide group and the energy to form the amide from the amide group. The presence of a large $H_2(1/4)$ NMR peak at 1.25 ppm from $MNH_2$ following extraction in dDMF supports this mechanism. In an embodiment, $NH_4^+$ may be the source of $NH_2$. An exemplary cell wherein $H^+$ is reduced at the cathode, and H is oxidized at the anode is [$LaNi_5H_6$ or $Ni(H_2)/CF_3CO_2NH_4/PtC$].

Similarly to $H_2O$, the potential energy of the $H_2S$ functional group given in Mills GUTCP is -72.81 eV. The cancellation of this potential energy also eliminates the energy associated with the hybridization of the 3p shell. This hybridization energy of 7.49 eV is given by the ratio of the hydride orbital radius and the initial atomic orbital radius times the total energy of the shell. Additionally, the energy change of the S3p shell due to forming the two S-H bonds of 1.10 eV is included in the catalyst energy. Thus, the net enthalpy of $H_2S$ catalyst is 81.40 eV (m=3 in Eq. (5)). $H_2S$ catalyst may be formed from MHS (M = alkali) by the reaction

$$2MHS \text{ to } M_2S + H_2S \qquad (392)$$

This reversible reaction may form $H_2S$ in an active catalytic state in the transition state to product $H_2S$ that may catalyze H to hydrino. The reaction mixture may comprise reactants that form $H_2S$ and a source of atomic H. The presence of a large $H^-(1/4)$ NMR peak at -3.86 ppm from MHS following extraction in dDMF supports this mechanism.

The cell or reactor may comprise a catalyst such as $H_2O$, $MNH_2$, or $H_2S$, or a source thereof, a source of H, and a means to cause $H_2O$, $MNH_2$, or $H_2S$, or a source thereof to serve as catalyst to form hydrinos. In an embodiment, the catalyst such as $H_2O$, $MNH_2$, or $H_2S$ is activated by an external excitation. The suitable exemplary external excitation comprises application of ultrasound, heat, light, RF radiation, or microwaves. The applied excitation may cause rotational, vibrational, or electronic excitation of the catalyst such as $H_2O$. The microwave or RF excitation may be that of an aqueous electrolyte such as an aqueous base such as MOH or an aqueous alkali halide such as NaCl. The RF excitation frequency may be about 13.56 MHz and may comprise polarized RF radiation. The solution may be any concentration. A suitable exemplary concentration is about 1 M to saturated. The external excitation may also form H from a source such as $H_2$ or $H_2O$. H may also be a product of $H_2O$ serving as a catalyst wherein the $H_2O$ molecule is ionized in the process of accepting energy from H. H may also be formed by other systems and methods of the disclosure such as H formation from $H_2$ and a dissociator.

The continuous or pulsed DC or other frequency plasma comprising $H_2O$, $H_2S$, or $MNH_2$ (M = alkali metal) may have any desired waveform, frequency range, peak voltage, peak power, peak current, duty cycle, and offset voltage. The plasma may be DC, or the applied voltage may have be alternating or have a waveform. The application may be pulsed at a desired frequency and the waveform may have a desired frequency. Suitable pulsed frequencies are within the range of about 1 to about 1000 Hz and the duty cycle may be about 0.001% to about 95%. The peak voltage may be within the range of at least one of about 0.1 V to 10 V. In another, embodiment a high voltage pulse is applied that may in the range of about 10 V to 100 kV, but may be within narrower ranges of order magnitude increments within this range. The waveform may have a frequency within the range of at least one of about 0.1 Hz to about 100 MHz, about 100 MHz to 10 GHz, and about 10 GHz to 100 GHz. The duty cycle may be in the range of about 0.001% to about 95%, and about 0.1% to about 10%, but may be within narrower ranges of factors of 2 increments within this range. In an embodiment, the frequency disrupts the H bonding or causes a dispersion of the H2O permittivity. The frequency is within a range that causes the real part of the permittivity of water to be decreased. A suitable value is within a factor of 2 of the minimum permittivity. The frequency may be in the range of 1 GHz to 50 GHz. The peak power density of the pulses may be in the range of about 0.001 W/$cm^3$ to 1000 W/ $cm^3$, but may be within narrower ranges of order magnitude increments within this range. The average power density of the pulses may be in the range of about 0.0001 W/$cm^3$ to 100 W/ $cm^3$, but may be within narrower ranges of order magnitude increments within this range. The gas pressure may be in the range of about 1 microTorr to 10 atm, but may be within narrower ranges of order magnitude increments within this range such as within the range of about 1 mTorr to 10 mTorr.

In an embodiment, the concerted reaction between the anode and cathode half-cell reactants cause at least one of a match of the energy between H and the $H_2O$ catalyst such that hydrinos form and provide the activation energy for the hydrino catalysis reaction. In an exemplary embodiment, the CIHT comprising [M /KOH (saturated aq)/$H_2O$ or $O_2$ reduction catalyst + air]; M = Zn, Co, Pb, $LaNi_5H_6$, Cd, Sn, Sb, In, or Ge, the $H_2O$ or $O_2$ reduction catalyst such as steam carbon (SC) or carbon black (CB) serves the function of at least one of causing the energy match and providing the activation energy. In an embodiment, the reactants that form $H_2O$ in an active catalytic state and H may serve to generate thermal energy. The half-cell reactant may be mixed to directly cause the release of thermal energy. The exemplary reactants may be a mixture of M + KOH (sat aq) + $H_2O$ or $O_2$ reduction catalyst + air; M may be Zn, Co, Pb, $LaNi_5H_6$, Cd, Sn, Sb, In, or Ge and the $H_2O$ or $O_2$ reduction catalyst may be carbon, a carbide, boride, or nitrile. In another embodiment, the anode may be a metal M' such as Zn and the cathode may be a metal hydride $MH_x$ such as $LaNi_5H_6$. The exemplary CIHT cell may comprise [Zn/KOH (saturated aq)/$LaNi_5H_6$, R-Ni, or PtC + air or $O_2$]. Exemplary general electrode reactions are

Cathode:

$$MH_x + 1/2O_2 + e^- \text{ to } MH_{x-1} + OH^- \quad (393)$$

Anode:

$$2M' + 3OH^- \text{ to } 2M'O + H + H_2O + 3e^-;\ H \text{ to } H(1/p) \quad (394)$$

Suitable exemplary thermal reaction mixtures are Sn + KOH (sat aq) + CB or SC + air and Zn + KOH (sat aq) + $LaNi_5H_6$, R-Ni, or PtC + air.

In addition to the oxidation of $OH^-$ and reaction with H, the reaction to form $H_2O$ catalyst may be a dehydration reaction. A suitable exemplary reaction is the dehydration of a metal hydroxide to a metal oxide such as $Zn(OH)_2$ to ZnO + $H_2O$, $Co(OH)_2$ to CoO + $H_2O$, $Sn(OH)_2$ to SnO + $H_2O$, or $Pb(OH)_2$ to ZnO + $H_2O$. Another example is $Al(OH)_3$ to $Al_2O_3$ + $H_2O$ wherein R-Ni may comprise $Al(OH)_3$ and also serve as a source of H that may be catalyzed to form hydrinos with at least one of OH and $H_2O$ acting as the catalyst. The reaction may be initiated and propagated by heating.

In an embodiment, the cell comprises a molten salt electrolyte that comprises a hydroxide. The electrolyte may comprise a salt mixture. In an embodiment, the salt mixture may comprise a metal hydroxide and the same metal with another anion of the disclosure such as halide, nitrate, sulfate, carbonate, and phosphate. Suitable salt mixtures are $CsNO_3$-CsOH, CsOH-KOH, CsOH-LiOH, CsOH-NaOH, CsOH-RbOH, $K_2CO_3$-KOH, KBr-KOH, KCl-KOH, KF-KOH, KI-KOH, $KNO_3$-KOH, KOH-$K_2SO_4$, KOH-LiOH, KOH-NaOH, KOH-RbOH, $Li_2CO_3$-LiOH, LiBr-LiOH, LiCl-LiOH, LiF-LiOH, LiI-LiOH, $LiNO_3$-LiOH, LiOH-NaOH, LiOH-RbOH, $Na_2CO_3$-NaOH, NaBr-NaOH, NaCl-NaOH, NaF-NaOH, NaI-NaOH, $NaNO_3$-NaOH, NaOH-$Na_2SO_4$, NaOH-RbOH, RbCl-RbOH, and $RbNO_3$-RbOH. The mixture may be a eutectic mixture. The cell may be operated at a temperature of about that of the melting point of the eutectic mixture but may be operated at higher temperatures. The catalyst $H_2O$ may be formed by the oxidation of $OH^-$ at the anode and the reaction with H from a source such as $H_2$ gas permeated through a metal membrane such as Ni, V, Ti, Nb, Pd, PdAg, or Fe designated by Ni($H_2$), V($H_2$), Ti($H_2$), Nb($H_2$), Pd($H_2$), PdAg($H_2$), or Fe($H_2$). The metal of the hydroxide, the cation of the hydroxide such as a metal, or another cation M may be reduced at the cathode. Exemplary reactions are

Anode

$$1/2H_2 + OH^- \text{ to } H_2O + e^- \text{ or } H_2 + OH^- \text{ to } H_2O + e^- + H(1/p) \quad (395)$$

Cathode

$$M^+ + e^- \text{ to } M \quad (396)$$

M may be a metal such as an alkali, alkaline earth, transition, inner transition, or rare earth metal, Al, Ga, In, Ge, Sn, Pb, Sb, Bi, Se, and Te and be another element such as S or P. The reduction of a cation other than that of the hydroxide may result in an anion exchange between the salt cations. Exemplary cells are [M'($H_2$)/MOH M"X/M'''] wherein M, M', M", and M''' are cations such as metals, X is an anion that may be hydroxide or another anion such as halide, nitrate, sulfate, carbonate, and phosphate, and M' is $H_2$ permeable. Another example is [Ni($H_2$)/M$(OH)_2$-M'X/Ni] wherein M = alkaline earth metal, M' = alkali metal, and X = halide such as [Ni($H_2$)/Mg$(OH)_2$-NaCl/Ni], [Ni($H_2$)/Mg$(OH)_2$-$MgCl_2$-NaCl/Ni], [Ni($H_2$)/Mg$(OH)_2$-MgO-$MgCl_2$/Ni], and [Ni($H_2$)/Mg$(OH)_2$-NaF/Ni]. $H_2O$ and H form and react at the anode to further form hydrinos, and Mg metal is the thermodynamically the most stable product from the cathode reaction. Other suitable exemplary cells are [Ni($H_2$)/MOH-M'halide/Ni], [Ni($H_2$)/M$(OH)_2$-M'halide/Ni], [M"($H_2$)/MOH-M'halide/M"], and [M"($H_2$)/M$(OH)_2$-M'halide/M"] where M = alkali or alkaline earth metal, M' = metal having hydroxides and oxides that are at least one of less stable than those of alkali or alkaline earth metals or have a low reactivity with water such as one

from the group of Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, and W, and M" is a hydrogen permeable metal. Alternatively, M' may be electropositive metal such as one or more of the group of Al, V, Zr, Ti, Mn, Se, Zn, Cr, Fe, Cd, Co, Ni, Sn, In, and Pb. In another embodiment, at least one of M and M' may comprise one from the group of Li, Na, K, Rb, Cs, Mg, Ca, Sr, Ba, Al, V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W. In an embodiment, the cation may be common to the anions of the salt mixture electrolyte, or the anion may be common to the cations. Alternatively, the hydroxide may be stable to the other salts of the mixture. Exemplary cells are [Ni($H_2$), V($H_2$), Ti($H_2$), Nb($H_2$), Pd($H_2$), PdAg($H_2$), or Fe($H_2$)/LiOH-LiX, NaOH-NaX, KOH-KX, RbOH-RbX, CsOH-CsX, $Mg(OH)_2$-$MgX_2$, $Ca(OH)_2$-$CaX_2$, $Sr(OH)_2$-$SrX_2$, or $Ba(OH)_2$-$BaX_2$ wherein X =F, Cl, Br, or I/Ni], [Ni($H_2$), V($H_2$), Ti($H_2$), Nb($H_2$), Pd($H_2$), PdAg($H_2$), or Fe($H_2$)/$CsNO_3$-CsOH, CsOH-KOH, CsOH-LiOH, CsOH-NaOH, CsOH-RbOH, $K_2CO_3$-KOH, KBr-KOH, KCl-KOH, KF-KOH, KI-KOH, $KNO_3$-KOH, KOH-$K_2SO_4$, KOH-LiOH, KOH-NaOH, KOH-RbOH, $Li_2CO_3$-LiOH, LiBr-LiOH, LiCl-LiOH, LiF-LiOH, LiI-LiOH, $LiNO_3$-LiOH, LiOH-NaOH, LiOH-RbOH, $Na_2CO_3$-NaOH, NaBr-NaOH, NaCl-NaOH, NaF-NaOH, NaI-NaOH, $NaNO_3$-NaOH, NaOH-$Na_2SO_4$, NaOH-RbOH, RbCl-RbOH, and $RbNO_3$-RbOH/Ni], and [Ni($H_2$), V($H_2$), Ti($H_2$), Nb($H_2$), Pd($H_2$), PdAg($H_2$), or Fe($H_2$)/LiOH, NaOH, KOH, RbOH, CsOH, $Mg(OH)_2$, $Ca(OH)_2$, $Sr(OH)_2$, or $Ba(OH)_2$ + one or more of $AlX_3$, $VX_2$, $ZrX_2$, $TiX_3$, $MnX_2$, $ZnX_2$, $CrX_2$, $SnX_2$, $InX_3$, $CuX_2$, $NiX_2$, $PbX_2$, $SbX_3$, $BiX_3$, $CoX_2$, $CdX_2$, $GeX_3$, $AuX_3$, $IrX_3$, $FeX_3$, $HgX_2$, $MoX_4$, $OsX_4$, $PdX_2$, $ReX_3$, $RhX_3$, $RuX_3$, $SeX_2$, $AgX_2$, $TcX_4$, $TeX_4$, T1X, and $WX_4$ wherein X =F, Cl, Br, or I/Ni]. Other suitably $H_2$ permeable metals may replace the Ni anode and stable cathode electrodes may replace Ni. In an embodiment, the electrolyte may comprise an oxyhydroxide or a mixture of salts such as one or more of hydroxide, halide, nitrate, carbonate, sulfate, phosphate, and oxyhydroxide. In an embodiment, the cell may comprise a salt bridge such as BASE or NASICON.

In an embodiment, a source of at least one of oxygen and $H_2O$ is supplied to the cell and may be selectively supplied to the cathode. In an embodiment, $H_2$ may be selectively supplied to the anode such that the anode reaction is given by Eq. (395). In an embodiment, at least one of $O_2$ and $H_2O$ may be supplied to the cell. In an embodiment, $O_2$ or $H_2O$ may be added to the cathode half-cell such that the reactions are

Cathode

$$M^+ + e^- + H_2O \text{ to } MOH + 1/2H_2 \qquad (397)$$

$$M^+ + 2e^- + 1/2O_2 \text{ to } M_2O \qquad (398)$$

Then, $H_2O$ may be added such that the reaction is

$$M_2O + H_2O \text{ to } 2MOH \qquad (399)$$

In the case that $O_2$ is supplied, the overall balanced reaction may be combustion of $H_2$ that is regenerated by separate electrolysis of $H_2O$. In an embodiment, $H_2$ is supplied at the anode and $H_2O$ and optionally $O_2$ is supplied at the cathode. The $H_2$ may be selectively applied by permeation through a membrane and $H_2O$ may be selectively applied by bubbling steam. In an embodiment, a controlled $H_2O$ vapor pressure is maintained over the molten electrolyte. A $H_2O$ sensor may be used to monitor the vapor pressure and control the vapor pressure. The $H_2O$ vapor pressure may be supplied from a heated water reservoir carried by an inert carrier gas such as $N_2$ or Ar wherein the reservoir temperature and the flow rate determine the vapor pressure monitored by the sensor. The cell may run continuously by collecting steam and $H_2$ from the cell such as the unreacted supplies and the gases that form at the anode and cathode, respectively, separating the gases by means such as condensation of $H_2O$, and re-supplying the anode with the $H_2$ and the cathode with $H_2O$. In an embodiment, the cation may be common to the anions of the salt mixture electrolyte, or the anion may be common to the cations. Alternatively, the hydroxide may be stable to the other salts of the mixture. The electrodes may comprise high-surface area electrodes such as porous or sintered metal powders such as Ni powder. Exemplary cells are [Ni($H_2$)/$Mg(OH)_2$-NaCl/Ni wick ($H_2O$ and optionally $O_2$)], [Ni($H_2$)/$Mg(OH)_2$-$MgCl_2$-NaCl/Ni wick ($H_2O$ and optionally $O_2$)], [Ni($H_2$)/$Mg(OH)_2$-MgO-$MgCl_2$/Ni wick ($H_2O$ and optionally $O_2$)], [Ni($H_2$)/$Mg(OH)_2$-NaF/Ni wick ($H_2O$ and optionally $O_2$)], [Ni($H_2$), V($H_2$), Ti($H_2$), Nb($H_2$), Pd($H_2$), PdAg($H_2$), or Fe($H_2$)/LiOH-LiX, NaOH-NaX, KOH-KX, RbOH-RbX, CsOH-CsX, $Mg(OH)_2$-$MgX_2$, $Ca(OH)_2$-$CaX_2$, $Sr(OH)_2$-$SrX_2$, or $Ba(OH)_2$-$BaX_2$ wherein X =F, Cl, Br, or I/Ni wick ($H_2O$ and optionally $O_2$)], [Ni($H_2$), V($H_2$), Ti($H_2$), Nb($H_2$), Pd($H_2$), PdAg($H_2$), or Fe($H_2$)/$CsNO_3$-CsOH, CsOH-KOH, CsOH-LiOH, CsOH-NaOH, CsOH-RbOH, $K_2CO_3$-KOH, KBr-KOH, KCl-KOH, KF-KOH, KI-KOH, $KNO_3$-KOH, KOH-$K_2SO_4$, KOH-LiOH, KOH-NaOH, KOH-RbOH, $Li_2CO_3$-LiOH, LiBr-LiOH, LiCl-LiOH, LiF-LiOH, LiI-LiOH, $LiNO_3$-LiOH, LiOH-NaOH, LiOH-RbOH, $Na_2CO_3$-NaOH, NaBr-NaOH, NaCl-NaOH, NaF-NaOH, NaI-NaOH, $NaNO_3$-NaOH, NaOH-$Na_2SO_4$, NaOH-RbOH, RbCl-RbOH, and $RbNO_3$-RbOH/Ni wick ($H_2O$ and optionally $O_2$)], and [Ni($H_2$), V($H_2$), Ti($H_2$), Nb($H_2$), Pd($H_2$), PdAg($H_2$), or Fe($H_2$)/LiOH, NaOH, KOH, RbOH, CsOH, $Mg(OH)_2$, $Ca(OH)_2$, $Sr(OH)_2$, or $Ba(OH)_2$ + one or more of $AlX_3$, $VX_2$, $ZrX_2$, $TiX_3$, $MnX_2$, $ZnX_2$, $CrX_2$, $SnX_2$, $InX_3$, $CuX_2$, $NiX_2$, $PbX_2$, $SbX_3$, $BiX_3$, $CoX_2$, $CdX_2$, $GeX_3$, $AuX_3$, $IrX_3$, $FeX_3$, $HgX_2$, $MoX_4$, $OsX_4$, $PdX_2$, $ReX_3$, $RhX_3$, $RuX_3$, $SeX_2$, $AgX_2$, $TcX_4$, $TeX_4$, TlX, and $WX_4$ wherein X =F, Cl, Br, or I/Ni wick ($H_2O$ and

optionally $O_2$)]. Cells such as [Ni ($H_2$)/MOH (M =alkali) $M'X_2$ (M' = alkaline earth) and optionally MX (X = halide) /Ni] may be run at an elevated temperature such that the reactants are thermodynamically stable to hydroxide-halide exchange.

In an embodiment, the cell may comprise a salt bridge such as BASE or NASICON. The cathode may comprise an $H_2O$ or $O_2$ reduction catalyst. The $H_2O$ and optionally $O_2$ may be supplied by sparging through a porous electrode such as porous electrode consisting of a tightly bound assembly of a Ni porous body (Celmet #6, Sumitomo Electric Industries, Ltd.) within an outer alumina tube. In another embodiment, $H_2O$ is injected or dripped into the bulk of the electrolyte and is retained for sufficient time to maintain a cell voltage before it evaporates due to solvation of the electrolyte. $H_2O$ may be added back periodically or continuously. In an embodiment, the anode such as a hydrogen permeable anode is cleaned. The exemplary Ni($H_2$) anode may be clean by abrasion or by soaking in 3% $H_2O_2$/0.6 M $K_2CO_3$ followed by rinsing with distilled $H_2O$. The abrasion will also increase the surface area. Separately, at lest one of the morphology and geometry of the anode is selected to increase the anode surface area.

In an embodiment, the anode of the molten salt electrolyte cell comprises at least a hydride such as $LaNi_5H_6$ and others from the disclosure such as those of aqueous alkaline cells, and a metal such as one from the group of Li, Na, K, Rb, Cs, Mg, Ca, Sr, Ba, Al, V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W. Exemplary cells are [M or MH/$Mg(OH)_2$-NaCl/Ni wick ($H_2O$ and optionally $O_2$)], [M or MH/$Mg(OH)_2$-$MgCl_2$-NaCl/Ni wick ($H_2O$ and optionally $O_2$)], [M or MH/$Mg(OH)_2$-MgO-$MgCl_2$/Ni wick ($H_2O$ and optionally $O_2$)], [M or MH/$Mg(OH)_2$-NaF/Ni wick ($H_2O$ and optionally $O_2$)], [M or MH/LiOH-LiX, NaOH-NaX, KOH-KX, RbOH-RbX, CsOH-CsX, $Mg(OH)_2$-$MgX_2$, $Ca(OH)_2$-$CaX_2$, $Sr(OH)_2$-$SrX_2$, or $Ba(OH)_2$-$BaX_2$ wherein X =F, Cl, Br, or I/Ni wick ($H_2O$ and optionally $O_2$)], [M or MH/$CsNO_3$-CsOH, CsOH-KOH, CsOH-LiOH, CsOH-NaOH, CsOH-RbOH, $K_2CO_3$-KOH, KBr-KOH, KCl-KOH, KF-KOH, KI-KOH, $KNO_3$-KOH, KOH-$K_2SO_4$, KOH-LiOH, KOH-NaOH, KOH-RbOH, $Li_2CO_3$-LiOH, LiBr-LiOH, LiCl-LiOH, LiF-LiOH, LiI-LiOH, $LiNO_3$-LiOH, LiOH-NaOH, LiOH-RbOH, $Na_2CO_3$-NaOH, NaBr-NaOH, NaCl-NaOH, NaF-NaOH, NaI-NaOH, $NaNO_3$-NaOH, NaOH-$Na_2SO_4$, NaOH-RbOH, RbCl-RbOH, and $RbNO_3$-RbOH/Ni wick ($H_2O$ and optionally $O_2$)], and [M or MH/LiOH, NaOH, KOH, RbOH, CsOH, $Mg(OH)_2$, $Ca(OH)_2$, $Sr(OH)_2$, or $Ba(OH)_2$ + one or more of $AlX_3$, $VX_2$, $ZrX_2$, $TiX_3$, $MnX_2$, $ZnX_2$, $CrX_2$, $SnX_2$, $InX_3$, $CuX_2$, $NiX_2$, $PbX_2$, $SbX_3$, $BiX_3$, $CoX_2$, $CdX_2$, $GeX_3$, $AuX_3$, $IrX_3$, $FeX_3$, $HgX_2$, $MoX_4$, $OsX_4$, $PdX_2$, $ReX_3$, $RhX_3$, $RuX_3$, $SeX_2$, $AgX_2$, $TcX_4$, $TeX_4$, TlX, and $WX_4$ wherein X =F, Cl, Br, or I/Ni wick ($H_2O$ and optionally $O_2$)] wherein MH = $LaNi_5H_6$ and others from the disclosure; M = one from the group of Li, Na, K, Rb, Cs, Mg, Ca, Sr, Ba, Al, V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W. The gas pressures such as that of $H_2$, $O_2$, and air such as those applied to the cell, the $H_2$ permeation pressure, or the pressure of any gas sparged into the cell may be any desired pressure. Suitable pressures are in the ranges of about 0.001 Torr to 200,000 Torr, about 1 Torr to 50,000 Torr, and about 700 Torr to 10,000 Torr. The reactant concentration ratios may be any desired. Suitable concentration ratios are those that maximize power, minimize cost, increase the durability, increase the regeneration capability, and enhance other operational characteristics known by those skilled in the Art. These criteria also apply to other embodiments of the disclosure. Suitable exemplary concentration ratios for the electrolyte are about those of a eutectic mixture. In another embodiment, the cell is operated in batch mode being closed to the addition of $O_2$ or $H_2O$ for the duration. $H_2$ may be added to the cell, or it may also be closed to $H_2$ addition during the batch. $H_2O$ and $H_2$ formed at the anode may react at the cathode in an internal circulation, or anode gaseous products may be dynamically removed. The reaction mixture may be regenerated after the batch.

Another form of the reactions represented by Eqs. (355) and (217) involving the exemplary cell [Na/BASE/NaOH] and may also be operative in electrolysis cells that follows the similar mechanism as those of Eqs. (322-325) and (334) is

$$Na + 3NaOH \text{ to } 2Na_2O + H_2O + 1/2H_2; \ H \text{ to } H(1/p) \qquad (400)$$

At least one of OH and $H_2O$ may serve as the catalyst. In an embodiment, the cell comprising a hydroxide that may form $H_2O$ such as [Na/BASE/NaOH] may further comprise a hydrate such as $BaI_2$ $2H_2O$, or $H_2O$ may be added to the cathode. The cell may further comprise a source of H such as a hydride or $H_2$ gas supplied through a permeable membrane such as Ni($H_2$).

In an embodiment, the cathode comprises at least one of a source of water and oxygen. The cathode may be a hydrate, an oxide, a peroxide, a superoxide, an oxyhydroxide, and a hydroxide. The cathode may be a metal oxide that is insoluble in the electrolyte such as a molten salt electrolyte. Suitable exemplary metal oxides are $PbO_2$, $Ag_2O_2$, $RuO_2$, AgO, $MnO_2$, and those of the group of V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W. Suitable exemplary metal oxyhydroxides are AlO(OH), ScO(OH), YO(OH), VO(OH), CrO(OH), MnO(OH) ($\alpha$ - MnO(OH) groutite and y -MnO(OH) manganite), FeO(OH), CoO(OH), NiO(OH), RhO(OH), GaO(OH), InO(OH), $Ni_{1/2}Co_{1/2}O(OH)$, and $Ni_{1/3}Co_{1/3}Mn_{1/3}O(OH)$. Suitable exemplary hydroxides are those of Li, Na, K, Rb, Cs, Mg, Ca, Sr, Ba, Al, V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W. In an embodiment, the anode of the molten salt electrolyte cell comprises at least a hydride such as $LaNi_5H_6$ and others from the disclosure such as those of aqueous alkaline cells, and a metal such as one from the group of Li, Na, K, Rb, Cs, Mg, Ca, Sr, Ba, Al, V, Zr, Ti, Mn, Zn, Cr, Sn, In, Cu,

Ni, Pb, Sb, Bi, Co, Cd, Ge, Au, Ir, Fe, Hg, Mo, Os, Pd, Re, Rh, Ru, Se, Ag, Tc, Te, Tl, and W. A suitable hydride or metal is suitably insoluble in the molten electrolyte. Exemplary cells are [a hydride such as $LaNi_5H_6$/molten salt electrolyte comprising a hydroxide/Ni or Ni wick ($H_2O$ and optionally $O_2$)], [a hydride such as $LaNi_5H_6$ or $M(H_2)$/molten salt electrolyte comprising a hydroxide/an oxide such as one of the group of $PbO_2$, $Ag_2O_2$, $RuO_2$, AgO, $MnO_2$, and those of the group of V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W] wherein M is an $H_2$ permeable metal such as Ni, Ti, Nb, V, or Fe, [a hydride such as $LaNi_5H_6$ or $M(H_2)$/molten salt electrolyte comprising a hydroxide/an oxyhydroxide such as one of the group of AlO(OH), ScO(OH), YO(OH), VO(OH), CrO(OH), MnO(OH) ($\alpha$-MnO(OH) groutite and $\gamma$-MnO(OH) manganite), FeO(OH), CoO(OH), NiO(OH), RhO(OH), GaO(OH), InO(OH), $Ni_{1/2}Co_{1/2}O(OH)$, and $Ni_{1/3}CO_{1/3}Mn_{1/3}O(OH)$] wherein M is an $H_2$ permeable metal such as Ni, Ti, Nb, V, or Fe, and [a hydride such as $LaNi_5H_6$ or $M(H_2)$/molten salt electrolyte comprising a hydroxide/a hydroxide such as one of those comprising a cation from the group of Li, Na, K, Rb, Cs, Mg, Ca, Sr, Ba, Al, V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W] wherein M is an $H_2$ permeable metal such as Ni, Ti, Nb, V, or Fe.

In an embodiment, the electrolyte such as a molten salt or an aqueous alkaline solution may comprise an ionic compound such as salt having a cation that may exist in more than one oxidation state. Suitable exemplary cations capable of being multivalent are $Fe^{3+}$ ($Fe^{2+}$), $Cr^{3+}$ ($Cr^{2+}$), $Mn^{3+}$ ($Mn^{2+}$), $Co^{3+}$ ($Co^{2+}$) , $Ni^{3+}$ ($Ni^{2+}$), $Cu^{2+}$ ($Cu^{+}$), and $Sn^{4+}$ ($Sn^{2+}$), transition, inner transition, and rare earth cations such as $Eu^{3+}$ ($Eu^{2+}$). The anion may be halide, hydroxide, oxide, carbonate, sulfate, or another of the disclosure. In an embodiment, $OH^-$ may be oxidized and reacted with H at the anode to form $H_2O$. At least one of OH and $H_2O$ may serve as the catalyst. The hydride anode reaction may be given by Eq. (313). The cation capable of being multivalent may be reduced at the cathode. An exemplary net reaction is

$$LaNi_5H_6 + KOH + FeCl_3 \text{ or } Fe(OH)_3 \text{ to } KCl$$

or

$$KOH + FeCl_2 \text{ or } Fe(OH)_2 + LaNi_5H_5 + H_2O \quad (401)$$

In the case that the compound comprising a cation capable of being multivalent is insoluble, it may comprise a cathode half-cell reactant. It may be mixed with a conductive support such as carbon, a carbide, a boride, or a nitrile. Another hydride of the disclosure or a metal may serve as the anode such as one of the group of V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W wherein the anode reaction may be given by Eq. (337). The metal may react with the electrolyte such as hydroxide to form hydrogen and catalyst such as at least one of OH and $H_2O$. Other hydroxides that may serve as the electrolyte such as those of the disclosure and may replace KOH. Other salts having a cation capable of being multivalent such as $K_2Sn(OH)_6$ or $Fe(OH)_3$ may replace $FeCl_3$. In an embodiment, the reduction potential of the compound is greater that that of $H_2O$. Exemplary cells are [an oxidizable metal such as one of V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W, a metal hydride such as $LaNi_5H_6$, or $H_2$ and a hydrogen permeable membrane such as one of V, Nb, Fe, Fe-Mo alloy, W, Mo, Rh, Ni, Zr, Be, Ta, Rh, Ti, Th, Pd, Pd-coated Ag, Pd-coated V, and Pd-coated Ti/KOH (sat aq) + salt having a cation capable of being multivalent such as $K_2Sn(OH)_6$, $Fe(OH)_3$, or $FeCl_3$/conductor such as carbon or powdered metal], [an oxidizable metal such as one of V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W, a metal hydride such as $LaNi_5H_6$, or $H_2$ and a hydrogen permeable membrane such as one of V, Nb, Fe, Fe-Mo alloy, W, Mo, Rh, Ni, Zr, Be, Ta, Rh, Ti, Th, Pd, Pd-coated Ag, Pd-coated V, and Pd-coated Ti/KOH (sat aq)/ salt having a cation capable of being multivalent such as $Fe(OH)_3$, $Co(OH)_3$, $Mn(OH)_3$, $Ni_2O_3$, or $Cu(OH)_2$ mixed with a conductor such as carbon or powdered metal], [$Ni(H_2)$, $V(H_2)$, $Ti(H_2)$, $Nb(H_2)$, $Pd(H_2)$, $PdAg(H_2)$, or $Fe(H_2)$/LiOH-LiX, NaOH-NaX, KOH-KX, RbOH-RbX, CsOH-CsX, $Mg(OH)_2$-$MgX_2$, $Ca(OH)_2$-$CaX_2$, $Sr(OH)_2$-$SrX_2$, or $Ba(OH)_2$-$BaX_2$ wherein X =F, Cl, Br, or I and salt having a cation capable of being multivalent such as $K_2Sn(OH)_6$, $Fe(OH)_3$, or $FeCl_3$/Ni], [$Ni(H_2)$, $V(H_2)$, $Ti(H_2)$, $Nb(H_2)$, $Pd(H_2)$, $PdAg(H_2)$, or $Fe(H_2)$/$CsNO_3$-CsOH, CsOH-KOH, CsOH-LiOH, CsOH-NaOH, CsOH-RbOH, $K_2CO_3$-KOH, KBr-KOH, KCl-KOH, KF-KOH, KI-KOH, $KNO_3$-KOH, KOH-$K_2SO_4$, KOH-LiOH, KOH-NaOH, KOH-RbOH, $Li_2CO_3$-LiOH, LiBr-LiOH, LiCl-LiOH, LiF-LiOH, LiI-LiOH, $LiNO_3$-LiOH, LiOH-NaOH, LiOH-RbOH, $Na_2CO_3$-NaOH, NaBr-NaOH, NaCl-NaOH, NaF-NaOH, NaI-NaOH, $NaNO_3$-NaOH, NaOH-$Na_2SO_4$, NaOH-RbOH, RbCl-RbOH, and $RbNO_3$-RbOH + salt having a cation capable of being multivalent such as $K_2Sn(OH)_6$, $Fe(OH)_3$, or $FeCl_3$/Ni], [$Ni(H_2)$, $V(H_2)$, $Ti(H_2)$, $Nb(H_2)$, $Pd(H_2)$, $PdAg(H_2)$, or $Fe(H_2)$/LiOH, NaOH, KOH, RbOH, CsOH, $Mg(OH)_2$, $Ca(OH)_2$, $Sr(OH)_2$, or $Ba(OH)_2$ + one or more of $AlX_3$, $VX_2$, $ZrX_2$, $TiX_3$, $MnX_2$, $ZnX_2$, $CrX_2$, $SnX_2$, $InX_3$, $CuX_2$, $NiX_2$, $PbX_2$, $SbX_3$, $BiX_3$, $CoX_2$, $CdX_2$, $GeX_3$, $AuX_3$, $IrX_3$, $FeX_3$, $HgX_2$, $MoX_4$, $OsX_4$, $PdX_2$, $ReX_3$, $RhX_3$, $RuX_3$, $SeX_2$, $AgX_2$, $TcX_4$, $TeX_4$, TlX, and $WX_4$ wherein X =F, Cl, Br, or I + salt having a cation capable of being multivalent such as $K_2Sn(OH)_6$, $Fe(OH)_3$, or $FeCl_3$/Ni], [LaNi5H/KOH (sat aq)/organometallic such as ferrocenium SC], and [$LaNi_5H_6$/KOH (sat aq)/ organometallic such as ferrocenium]. The cell may regenerated by electrolysis or mechanically.

In an embodiment, the hydrogen source at an electrode of the CIHT cell such as a $H_2$ permeable membrane and $H_2$ gas such as $Ni(H_2)$ or a hydride such as $LaNi_5H_6$ may be replaced by a source of hydrogen gas such as a $H_2$ bubbling metal tube wherein the metal may be porous such as a $H_2$ porous tube comprised of scintered metal powder such as Ni powder. The $H_2$ bubbling electrode may replace the anode or cathode of cells having hydrogen as a reactant at the corresponding electrode or in the corresponding half-cell. For example, the $H_2$ bubbling electrode may replace electrodes of cell of the disclosure such as the anode of aqueous base cells, the anode of cells comprising a molten salt comprising a hydroxide, or the cathode of cells comoprising a molten salt having a $H^-$ migrating ion. Exemplary cells are [conductor (bubbling $H_2$)/KOH (sat aq)/SC + air] and [conductor (bubbling $H_2$)/eutectic salt electrolyte comprising an alkali hydroxide such as LiOH-NaOH, LiOH-LiX, NaOH-NaX (X = halide or nitrate) or $LiOH-Li_2X$ or $NaOH-Na_2X$ (X = sulfate or carbonate) /conductor + air that may be an $O_2$ reduction catalyst].

In an embodiment, the hydrino reaction is propagated by a source of activation energy. The activation energy may be provided by at least one of heating and a chemical reaction. In an embodiment comprising an aqueous cell or solvent or reactant that is volatile at the elevated operating temperature of the cell, the cell is pressurized wherein the cell housing or at least one half-cell compartment comprises a pressure vessel. The chemical reaction to provide the activation energy may be an oxidation or reduction reaction such as the reduction of oxygen at the cathode or the oxidation of $OH^-$ and reaction with H to $H_2O$ at the anode. The source of h may be a hydride such as $LaNi_5H_6$. The anode reaction may also comprise the oxidation of a metal such as Zn, Co, Sn, Pb, S, In, Ge, and others of the disclosure. The reduction of a cation capable of being multivalent such as one of $Fe^{3+}$ ($Fe^{2+}$), $Cr^{3+}$ ($Cr^{2+}$), $Mn^{3+}$ ($Mn^{2+}$), $Co^{3+}$ ($Co^{2+}$), $Ni^{3+}$ ($Ni^{2+}$), $Cu^{2+}$ ($Cu^+$), and $Sn^{4+}$ ($Sn^{2+}$) may provide the activation energy. The permeation of H formed at the cathode that permeates through a hydrogen permeable membrane and forms a compound such as a metal hydride such as LiH may provide the activation energy. In an embodiment, the reactions of the CIHT cell are also used to produce heat for purposes such as maintaining the operation of the cell such as supplying the activation energy of the reactions or maintaining the molten electrolyte where used. The thermal output may also be used for heating an external load. Alternatively, the reactions may be performed without electrodes to generate heat to maintain the hydrino reaction and supply heat to an external load.

In an embodiment, an oxygen species such as at least one of $O_2$, $O_3$, $O_3^+$, $O_3^-$, O, $O^+$, $H_2O$, $H_3O^+$, OH, $OH^+$, $OH^-$, HOOH, $OOH^-$, $O^-$, $O^{2-}$, $O_2^-$, and $O_2^{2-}$ may undergo an oxidative reaction with a H species such as at least one of $H_2$, H, $H^+$, $H_2O$, $H_3O^+$, OH, $OH^+$, $OH^-$, HOOH, and $OOH^-$ to form at least one of OH and $H_2O$ that serves as the catalyst to form hydrinos. The source of the H species may be at least one of a compound such as a hydride such as $LaNi_5H_6$, hydroxide, or oxyhydroxide compound, $H_2$ or a source of $H_2$, and a hydrogen permeable membrane such as $Ni(H_2)$, $V(H_2)$, $Ti(H_2)$, $Fe(H_2)$, or $Nb(H_2)$. The O species may be provided by a reduction reaction of $H_2O$ or $O_2$ at the cathode. The source of $O_2$ of the O species may be from air. Alternatively, the O species may be supplied to the cell.

Suitable sources of the O species such as $OH^-$, HOOH, $OOH^-$, $O^-$, $O^{2-}$, $O_2^-$, and $O_2^{2-}$ are oxides, peroxides such as those of alkali metals, superoxides such as those of alkali and alkaline earth metals, hydroxides, and oxyhydroxides such as those of the disclosure. Exemplary oxides are those of transition metals such as NiO and CoO and Sn such as SnO, alkali metals such as $Li_2O$, $Na_2O$, and $K_2O$, and alkaline earth metal such as MgO, CaO, SrO, and BaO. The source oxide such as NiO or CoO may be added to a molten salt electrolyte. Further exemplary oxides are one from the group of Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, and W. Exemplary cells are [$Ni(H_2)$, $V(H_2)$, $Ti(H_2)$, $Fe(H_2)$, or $Nb(H_2)$ or a hydride such as $LaNi_5H_6$/eutectic salt electrolyte comprising an alkali hydroxide such as LiOH-NaOH, LiOH-LiX, NaOH-NaX (X = halide or nitrate) or $LiOH-Li_2X$ or $NaOH-Na_2X$ (X = sulfate or carbonate) and $Li_2O$, $Na_2O$, $K_2O$, MgO, CaO, SrO, or BaO, or an oxide of, Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, or W, a peroxide such as those of alkali metals, or a superoxide such as those of alkali and alkaline earth metals/Ni or other metal that may be the same as that of the anode].

In an embodiment, $OH^-$ imay be oxidized and reacted with H at the anode to form $H_2O$ that may serve as the catalyst for H to form hydrinos. In both cases, the H may be from a source such as a hydride such as $LaNi_5H_6$ or $H_2$ that may permeate through a membrane such as Ni, Ti, V, Nb, Pd, PdAg, or Fe from a hydrogen source such as a tank or supply 640 flowed through a line 642 and a regulator 644 (FIGURE 22). The source may be an aqueous electrolysis cell 640 with a $H_2$ and $O_2$ separator to supply substantially pure $H_2$. $H_2O$ may be reduced to $H_2$ and $OH^-$ at the cathode. In an embodiment shown in FIGURE 22, the CIHT cell comprises $H_2O$ and $H_2$ collection and recycling systems. The CIHT 650 cell comprises a vessel 651, a cathode 652, an anode 653, a load 654, an electrolyte 655, and a system 657 to collect $H_2O$ vapor from the CIHT cell such as that formed at the anode. The $H_2O$ collection system comprises a first chamber 658 connected to the cell to receive $H_2O$ vapor through a vapor passage 659 from the cell to the $H_2O$ collection chamber 658. The collection system comprises at least one of an $H_2O$ absorber and a $H_2O$ condensor 660. The collected

water may be returned to the CIHT cell as $H_2O$ vapor or liquid water through a passage 661 assisted by pump 663 or by the pressure created by heating the collected water with heater 665. The flow of water and the pressure of any vapor may be controlled in the chamber by valves 666, 667, and 668, monitored by a gauge 669. The water may be returned to the cathode 652 which may be porous to the returned $H_2O$. The CIHT cell further comprises a system 671 to collect $H_2$ from the CIHT cell. The $H_2$ collection system comprises a second chamber 672 containing a $H_2$ getter 673 wherein un-reacted $H_2$ from the anode source and $H_2$ formed at the cathode may be collected by the $H_2$ getter. The $H_2$ having water at least partially removed by the $H_2O$ collection system flows from the first chamber to the second through gas passage 675. In an embodiment, a $H_2$ selective membrane exists between the chambers to prevent $H_2O$ from entering the second chamber and reacting with the getter. The getter may comprise a transition metal, alkali metal, alkaline earth metal, inner transition metal, rare earth metal, a combination of metals, alloys, and hydrogen storage materials such as those of the disclosure. The collected $H_2$ may be returned to the CIHT cell through a passage 676 assisted by pump 678 or by the pressure created by heating the getter or collected $H_2$ with heater 680. The flow of $H_2$ and the pressure may be controlled in the chamber by valves 681 and 682, monitored by a gauge 684. The getter may collect hydrogen with the value 681 open and valve 682 closed to the cell wherein the heater maintains it at one temperature suitable for reabsorbing $H_2$. Then, the value 681 may be closed and the temperature increased to a temperature that causes the hydrogen to be release to a desired pressure measured with gauge 684. Valve 682 may be opened to allow the pressurized hydrogen to flow to the cell. The flow may be to the anode 653 comprising a $H_2$ permeable wall. Valve 682 may be closed, the heater 680 reduced in temperature, and the valve 681 opened to collect $H_2$ with the getter 673 in a repeated cycle. In an embodiment, the power to the heater, valves, and gauges may be provided by the CIHT cell. In an embodiment, the temperature difference between the collection systems and cells may be used to achieve the desired pressures when introducing $H_2$ or $H_2O$ into the cell. For example, $H_2$ may be at a first temperature and pressure in a sealed chamber that is immersed in the hot salt to achieve a second higher pressure at the higher salt temperature. In an embodiment, the CIHT cell comprises a plurality of hydrogen permeable anodes that may be supplied hydrogen through a common gas manifold.

In another embodiment of the system shown in FIGURE 22, an $O_2$ source is supplied at the cathode 651 such as at least one of air, $O_2$, oxide, $H_2O$, HOOH, hydroxide, and oxyhydroxide. The source of oxygen may also be supplied to the cell through selective valve or membrane 646 that may be a plurality wherein the membrane is $O_2$ permeable such as a Teflon membrane. Then, system 657 comprises a separator of $H_2$ and other cell gases such as at least one of nitrogen, water vapor, and oxygen wherein system 671 collects the unused hydrogen and returns it to the cell such as through the $H_2$ permeable anode 653. The system 657 may condense water. System 667 may in addition or optionally comprise a selective $H_2$ permeable membrane and valve 668 that may be at the outlet of system 657 that retains $O_2$, $N_2$, and possibly water and permits $H_2$ to selectively pass to system 671.

In an embodiment, the $H_2$ permeable electrode is replaced with a $H_2$ bubbling anode 653. $H_2$ may be recycled without removing $H_2O$ using at least one pump such as 678. If oxygen is supplied to the cell such as through selective valve or membrane 646 or at the $O_2$ porous cathode 652, then it may be removed from the $H_2$ by system 657. An exemplary porous electrode to supply at least one of $H_2$, $H_2O$, air, and $O_2$ by sparging comprises a tightly bound assembly of a Ni porous body (Celmet #6, Sumitomo Electric Industries, Ltd.) within an outer alumina tube. If air is supplied to the cell than $N_2$ is optionally removed from the recirculated $H_2$ gas. Any $H_2$ consumed to form hydrinos or lost from the system may be replaced. The $H_2$ may be replaced from the electrolysis of $H_2O$. The power for the electrolysis may be from the CIHT cell.

In an embodiment to produce thermal energy, the cell shown in FIGURE 22 may comprise a hydrogen permeable membrane 653 to supply H and may be absent the cathode 652. The solution may comprise a base such as at least one of the group of MOH, $M_2CO_3$, (M is alkali) $M'(OH)_2$, $M'CO_3$, (M' is alkaline earth), $M''(OH)_2$, $MCO_3$, (M'' is a transition metal), rare earth hydroxides, $Al(OH)_3$, $Sn(OH)_2$, $In(OH)_3$, $Ga(OH)_3$, $Bi(OH)_3$, and other hydroxides and oxyhydroxides of the disclosure. The solvent may be aqueous or others of the disclosure. The hydrogen may permeate through the membrane and react with $OH^-$ to form at least one of OH and $H_2O$ that may serve as the catalyst to form hydrinos. The reaction mixture may further comprise an oxidant to facilitate the reaction to form at least one of OH and $H_2O$ catalyst. The oxidant may comprise $H_2O_2$, $O_2$, $CO_2$, $SO_2$, $N_2O$, NO, $NO_2$, $O_2$, or another compounds or gases that serve as a source of O or as an oxidant as given in the disclosure or known to those skilled in the Art. Other suitable exemplary oxidants are $M_2S_2O_8$, $MNO_3$, $MMnO_4$, MOCl, $MClO_2$, $MClO_3$, $MClO_4$ (M is an alkali metal), and oxyhydroxides such as $WO_2(OH)$, $WO_2(OH)_2$, VO(OH), $VO(OH)_2$, $VO(OH)_3$, $V_2O_2(OH)_2$, $V_2O_2(OH)_4$, $V_2O_2(OH)_6$, $V_2O_3(OH)_2$, $V_2O_3(OH)_4$, $V_2O_4(OH)_2$, FeO(OH), MnO(OH), $MnO(OH)_2$, $Mn_2O_3(OH)$, $Mn_2O_2(OH)_3$, $Mn_2O(OH)_5$, $MnO_3(OH)$, $MnO_2(OH)_3$, $MnO(OH)_5$, $Mn_2O_2(OH)_2$, $Mn_2O_6(OH)_2$, $Mn_2O_4(OH)_6$, NiO(OH), TiO(OH), $TiO(OH)_2$, $Ti_2O_3(OH)$, $Ti_2O_3(OH)_2$, $Ti_2O_2(OH)_3$, $Ti_2O_2(OH)_4$, and NiO(OH). The cell may be operated at elevated temperature such as in the temperature range of about 25° C to 1000°C, or about 200°C to 500°C. The vessel 651 may be a pressure vessel. The hydrogen may be supplied at high pressure such as in the range of about 2 to 800 atm or about 2 to 150 atm. An inert gas cover such as about 0.1 to 10 atm of $N_2$ or Ar may be added to prevent boiling of the solution such as an aqueous solution. The reactants may be in any desired molar concentration ratio. An exemplary cell is Ni($H_2$ 50-100 atm) KOH + $K_2CO_3$

wherein the KOH concentration is in the molar range of 0.1 M to saturated an the $K_2CO_3$ concentration is in the molar range of 0.1 M to saturated with the vessel at an operating temperature of about 200-400°C.

In an embodiment, the aqueous alkaline cell comprises a one-membrane, two-compartment cell shown in FIGURE 20 with the alteration that the anode membrane and compartment 475 may be absence. The anode may comprise a metal that is oxidized in the reaction with $OH^-$ to $H_2O$ as given by Eq. (337). At least one of OH and $H_2O$ may serve as the catalyst. The anode metal may be one of the group of V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W. Alternatively, the anode may comprise a hydride such as $LaNi_5H_6$ and others of the disclosure that provides H and oxidizes $OH^-$ to $H_2O$ as given by Eq. (313). The anode may also comprise a $H_2$ permeable membrane 472 and a source of hydrogen such as $H_2$ gas that may be in compartment 475 that provides H and oxidizes $OH^-$ to $H_2O$ as given by Eq. (346). At the cathode, $H_2O$ may be reduced to $H_2$ and $OH^-$ as given by Eq. (315). The cathode 473 may comprise a metal that has a high permeability to hydrogen. The electrode may comprise a geometry that provides a higher surface area such as a tube electrode, or it may comprise a porous electrode. To increase at least one of the rate and yield of the reduction of water, a water reduction catalyst may be used. In another embodiment, the cathode half cell reactants comprise a H reactant that forms a compound with H that releases energy to increase at least one of the rate and yield of $H_2O$ reduction. The H reactant may be contained in the cathode compartment 474. The H formed by the reduction of water may permeate the hydrogen permeable membrane 473 and react with the H reactant. The H permeable electrode may comprise V, Nb, Fe, Fe-Mo alloy, W, Mo, Rh, Ni, Zr, Be, Ta, Rh, Ti, Th, Pd, Pd-coated Ag, Pd-coated V, Pd-coated Ti, rare earths, other refractory metals, and others such metals known to those skilled in the Art. The H reactant may be an element or compound that forms a hydride such as an alkali, alkaline earth, transition, inner transition, and rare earth metal, alloy, or mixtures thereof, and hydrogen storage materials such as those of the disclosure. Exemplary reactions are

Cathode Outside Wall

$$H_2O + e- \text{ to } 1/2H_2 + OH^- \qquad (402)$$

Cathode Inside Wall

$$1/2H_2 + M \text{ to } MH \qquad (403)$$

The chemicals may be regenerated thermally by heating any hydride formed in the cathode compartment to thermally decompose it. The hydrogen may be flowed or pumped to the anode compartment to regenerate the initial anode reactants. The regeneration reactions may occur in the cathode and anode compartments, or the chemicals in one or both of the compartments may be transported to one or more reaction vessels to perform the regeneration. Alternatively, the initial anode metal or hydride and cathode reactant such as a metal may be regenerated by electrolysis in situ or remotely. Exemplary cells are [an oxidizable metal such as one of V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W, a metal hydride such as $LaNi_5H_6$, or $H_2$ and a hydrogen permeable membrane such as one of V, Nb, Fe, Fe-Mo alloy, W, Mo, Rh, Ni, Zr, Be, Ta, Rh, Ti, Th, Pd, Pd-coated Ag, Pd-coated V, and Pd-coated Ti/KOH (sat aq)/M(M')] wherein M = a hydrogen permeable membrane such as one of V, Nb, Fe, Fe-Mo alloy, W, Mo, Rh, Ni, Zr, Be, Ta, Rh, Ti, Th, Pd, Pd-coated Ag, Pd-coated V, and Pd-coated Ti and M' is a metal that forms a hydride such as one of an alkali, alkaline earth, transition, inner transition, and rare earth metal, alloy, or mixtures thereof, or a hydrogen storage material. The cell may be run at elevated temperature and pressure.

In an embodiment, the migrating ion is an oxide ion that reacts with a source of H to form at least one of OH and $H_2O$ that may serve as the catalyst with the source of H. The cathode may comprise a source of oxide ion such as oxygen or a compound comprising O such as an oxide. The cell may comprise at least one of an electrolyte and a salt bridge. The electrolyte may be a hydroxide such as an alkali hydroxide such as KOH that may have a high concentration such as in the range of about 12 M to saturated. The salt bridge may be selective for oxide ion. Suitable salt bridges are yttria-stabilized zirconia (YSZ), gadolinia doped ceria (CGO), lanthanum gallate, and bismuth copper vanadium oxide such as $BiCuVO_x$). Some perovskite materials such as $La_{1-x}Sr_xCo_yO_{3-\square}$ also show mixed oxide and electron conductivity. The source of H may be hydrogen gas and a dissociator, a hydrogen permeable membrane, or a hydride. Exemplary cells are [PtC($H_2$), Ni($H_2$), $CeH_2$, $LaH_2$, $ZrH_2$ or LiH/YSZ/$O_2$ or oxide].

In an embodiment, the CIHT cell comprises a cogeneration system wherein electricity and thermal energy are generated for a load. At least one of the electrical and thermal loads may be at least one of internal and external. For example, at least part of the thermal or electrical energy generated by forming hydrinos may maintain the cell temperature such as that of a molten salt of a CIHT cell comprising a molten salt electrolyte or molten reactants. The electrical energy may at least partially supply the electrolysis power to regenerate the initial cell reactants from the products. In an embodiment, the electrolyte such as the aqueous or molten salt electrolyte may be pumped through or over a heat exchanger that removes heat and transfers it ultimately to a load.

In an embodiment, an oxyhydroxide cathode reactant is stable in acidic solution such as an acidic aqueous, organic acidic, or inorganic acidic electrolytic solution. Exemplary acids are acetic, acrylic, benzoic, or propionic acid, or an acidic organic solvent. The salt may be one of the disclosure such as an alkali halide, nitrate, perchlorate, dihydrogen phosphate, hydrogen phosphate, phosphate, hydrogen sulfate or sulfate. Protons are formed by oxidation at the anode, and hydrogen is formed at the cathode wherein at least some of the hydrogen reacts to form hydrinos. Exemplary reactions are
Cathode

$$H^+ + MO(OH) + e^- \text{ to } MO_2 + H_2(1/_P) \quad (404)$$

Anode

$$M'H \text{ to } M' + H^+ + e^- \quad (405)$$

M is a metal such as a transition metal or Al, M' is a metal of a metal hydride. The cathode may comprise an oxyhydroxide, and the anode may comprise a source of $H^+$ such as at least one of a metal hydride, and hydrogen, and either with a dissociator such as Pt/C, Pd/C, Ir/C, Rh/C, or Ru/C. The hydrogen source may also be a hydrogen permeable membrane and $H_2$ gas such as $Ti(H_2)$, Pd-Ag alloy $(H_2)$, $V(H_2)$, Ta $(H_2)$, $Ni(H_2)$, or $Nb(H_2)$. At least one half-cell reactant may further comprise a support such carbon, a carbide, or boride. The cell comprising a cathode having an intercalated H material and $H^+$ as the migrating ion may be continuously regenerative wherein at least some of the migrating H is intercalated into the cathode material as other intercalated H is consumed to form at least hydrogen and hydrino. The cathode material may also comprise $H^+$ in a matrix such as $H^+$ doped zeolite such as HY. In other embodiements, the zeolite may be doped with a metal cation such as Na in NaY wherein the metal cation is displaced by the migrating H or reacts with the migrating H. Exemplary cells are [$H_2$ and Pd/C, Pt/C, Ir/C, Rh/C, or Ru/C or metal hydride such as an alkali, alkaline earth, transition metal, inner transition metal, or rare earth hydride/$H^+$ conductor such as an aqueous electrolyte, ionic liquid, Nafion, or solid proton conductor/ MO(OH) (M = metal such as Co, Ni, Fe, Mn, Al), HY, or NaY CB] and [proton source such as $PtC(H_2)$/proton conductor such as HCl-LiCl-KCl molten salt/oxyhydroxide such as CoO(OH)].

In an embodiment, the source of H comprises hydrogen. Atomic hydrogen may be formed on a dissociator such as and Pd/C, Pt/C, Ir/C, Rh/C, or Ru/C. The hydrogen source may also be a hydrogen permeable membrane and $H_2$ gas such as $Ti(H_2)$, Pd-Ag alloy $(H_2)$, $V(H_2)$, Ta $(H_2)$, $Ni(H_2)$, or $Nb(H_2)$. The cell may comprise an aqueous cation exchange membrane such as a $H^+$ ion conducting membrane such Nafion and an acidic aqueous solution. The acidic electrolyte may be aqueous acid solution such as aqueous HX (X = halide), $HNO_3$ or organic acid such as acetic acid. The anode may be an oxyhydroxide such as AlO(OH), ScO(OH), YO(OH), VO(OH), CrO(OH), MnO(OH) ($\alpha$-MnO(OH) groutite and $\gamma$-MnO(OH) manganite), FeO(OH), CoO(OH), NiO(OH), RhO(OH), GaO(OH), InO(OH), $Ni_{1/2}Co_{1/2}O(OH)$, and $Ni_{1/3}Co_{1/3}Mn_{1/3}O(OH)$. In acidic solution, the reactions are
anode

$$H_2 + \text{ to } 2H^+ + 2e \quad (406)$$

The cathode reaction of Eq. (404) or alternative the cathode reaction from any source of $H^+$ may be

$$CoOOH + 2e^- + 2H^+ \text{ to } Co(OH)_2 + H(1/p) \quad (407)$$

Exemplary cells are [$H_2$ and Pd/C, Pt/C, Ir/C, Rh/C, or Ru/C or metal hydride such as an alkali, alkaline earth, transition metal, inner transition metal, or rare earth hydride/aqueous acid such as HX (X = halide) or $HNO_3$, $H^+$ conductor such as Nafion, ionic liquid, solid $H^+$ conductor, or HCl-LiCl-KCl molten salt/ MO(OH) (M = metal such as Co, Ni, Fe, Mn, Al), such as AlO(OH), ScO(OH), YO(OH), VO(OH), CrO(OH), MnO(OH) ($\alpha$-MnO(OH) groutite and $\gamma$-MnO(OH) manganite), FeO(OH), CoO(OH), NiO(OH), RhO(OH), GaO(OH), InO(OH), $Ni_{1/2}Co_{1/2}O(OH)$, and $Ni_{1/3}Co_{1/3}Mn_{1/3}O(OH)$, or other H intercalated chalcogenide, HY, or NaY]. In other embodiments, the electrolyte may be an ionic liquid or salt in an organic solvent. The cell may be regenerated by charging or by chemical processing.

In another embodiment $H^+$, may migrate from the anode to cathode to form H by reduction at the cathode. The H may bind to a hydride acceptor or sink such as a metal to from a hydride, or it may bind to form a hydrogenated compound. The H atoms may interact in a suitable environment to form hydrinos. The environment may comprise a sink for the H atoms such as a metal such as an alkali, alkaline earth, transition, inner transition, noble, or rare earth metal that forms a hydride. Alternatively, the H sink may be a compound that is hydrogenated such as a compound of the M-N-H system such as $Li_3N$ or $Li_2NH$. The H sink may be an intercalation compound that may be deficient in metal. The H may substitute at metal sites such as Li site or may displace the metal such as Li. Suitable exemplary intercalation compounds are Li graphite, $Li_xWO_3$, $Li_xV_2O_5$, $LiCoO_2$, $LiFePO_4$, $LiMn_2O_4$, $LiNiO_2$, $Li_2FePO_4F$, $LiMnPO_4$, $VOPO_4$ system,

$LiV_2O_5$, $LiMgSO_4F$, $LiMSO_4F$ (M=Fe, Co, Ni, transition metal), $LiMPO_4F$ (M=Fe, Ti), $Li_x[Li_{0.33}Ti_{1.67}O_4]$, or $Li_4Ti_5O_{12}$, layered transition metal oxides such as Ni-Mn-Co oxides such as $LiNi_{1/3}Co_{1/3}Mn_{1/3}O_2$, and $Li(Li_aNi_xCo_yMn_z)O_2$, $LiTi_2O_4$, and other Li layered chalcogenides and at least one of these compounds with some H replacing Li or ones deficient in Li. The electrolyte may be an inorganic liquid proton conductor. The source of H may be Pt/C and $H_2$ gas and other negative electrodes of PEM fuel cells such as $H_2$ and Pd/C, Pt/C, Ir/C, Rh/C, and Ru/C. The hydrogen source may also be a hydrogen permeable membrane and $H_2$ gas such as Ti($H_2$), Pd-Ag alloy ($H_2$), V($H_2$), Ta ($H_2$), Ni($H_2$), or Nb($H_2$). The source of $H_2$ that forms $H^+$ may be a hydride such as an alkali hydride, an alkaline earth hydride such as $MgH_2$, a transition metal hydride, an inner transition metal hydride, and a rare earth hydride that may contact the anode half-cell reactants such as Pd/C, Pt/C, Ir/C, Rh/C, and Ru/C. Exemplary cells are [Pt($H_2$), Pt/C($H_2$), borane, amino boranes and borane amines, $AlH_3$, or $H^-X$ compound X=Group V, VI, or VII element)/inorganic salt mixture comprising a liquid electrolyte such as ammonium nitrate-trifluoractetate/$Li_3N$, $Li_2NH$, or M (M=metal such as a transition, inner transition, or rare earth metal), Li deficient compound comprising at least one of the group of $Li_xWO_3$, $Li_xV_2O_5$, $LiCoO_2$, $LiFePO_4$, $LiMn_2O_4$, $LiNiO_2$, $Li_2FePO_4F$, $LiMnPO_4$, $VOPO_4$ system, $LiV_2O_5$, $LiMgSO_4F$, $LiMSO_4F$ (M=Fe, Co, Ni, transition metal), $LiMPO_4F$ (M=Fe, Ti), $Li_x[Li_{0.33}Ti_{1.67}O_4]$, or $Li_4Ti_5O_{12}$, layered transition metal oxides such as Ni-Mn-Co oxides such as $LiNi_{1/3}Co_{1/3}Mn_{1/3}O_2$, and $Li(Li_aNi_xCo_yMn_z)O_2$, and $LiTi_2O_4$, and other Li layered chalcogenides].

In another embodiment $H^+$, may migrate from the anode to cathode to form an H intercalated compound by reduction at the cathode. A source of H such as $H_2$ gas and a dissociator such as Pt, Re, Rh, Ir, or Pd on a support such as carbon may be oxidized at the anode to $H^+$ that migrates through a $H^+$ conducting electrolyte such as Nafion, an ionic liquid, a solid proton conductor, or an aqueous electrolyte to the cathode half-cell wherein it is reduced to H as it intercalates. The cathode material is an intercalation compound capable of intercalating H. In an embodiment, $H^+$ replaces $Li^+$ or $Na^+$ as the migrating ion that intercalates and is reduced. The product compound may comprise intercalated H. The cathode compound may comprise a chalcogenide such as a layered oxide compound such as $CoO_2$ or NiO that forms the corresponding H intercalated product such as CoO(OH) also designated $HCoO_2$ and NiO(OH), respectively. The cathode material may comprise an alkali-intercalated chalcogenide with at least some and possibly all of the alkali removed. The cathode half-cell compound may be a layered compound such as an a alkali metal deficient or depleted layered chalcogenide such as a layered oxide such as $LiCoO_2$ or $LiNiO_2$ with at least some intercalated alkali metal such as Li removed. In an embodiment, at least some H and possibly some alkali metal such as Li intercalates during discharge. Suitable intercalation compounds with at least some of the Li removed are those that comprise the anode or cathode of a Li or Na ion battery such as those of the disclosure. Suitable exemplary intercalation compounds comprise at least one of the group of Li-graphite, $Li_xWO_3$, $Li_xV_2O_5$, $LiCoO_2$, $LiFePO_4$, $LiMn_2O_4$, $LiNiO_2$, $Li_2FePO_4F$, $LiMnPO_4$, $VOPO_4$ system, $LiV_2O_5$, $LiMgSO_4F$, $LiMSO_4F$ (M=Fe, Co, Ni, transition metal), $LiMPO_4F$ (M=Fe, Ti), $Li_x[Li_{0.33}Ti_{1.67}O_4]$, or $Li_4Ti_5O_{12}$, layered transition metal oxides such as Ni-Mn-Co oxides such as $LiNi_{1/3}Co_{1/3}Mn_{1/3}O_2$, and $Li(Li_aNi_xCo_yMn_z)O_2$, and $LiTi_2O_4$, other Li layered chalcogenides having with at least some and possibly all of the Li removed. Exemplary cells are [Pt/C($H_2$), Pd/C($H_2$), alkali hydride, R-Ni/proton conductor such as Nafion, eutectic such as LiCl-KCl, ionic liquid, aqueous electrolyte/H intercalation compound such as at least one of $CoO_2$, $NiO_2$, and at least one of the group of Li-graphite, $Li_xWO_3$, $Li_xV_2O_5$, $LiCoO_2$, $LiFePO_4$, $LiMn_2O_4$, $LiNiO_2$, $Li_2FePO_4F$, $LiMnPO_4$, $VOPO_4$ system, $LiV_2O_5$, $LiMgSO_4F$, $LiMSO_4F$ (M=Fe, Co, Ni, transition metal), $LiMPO_4F$ (M=Fe, Ti), $Li_x[Li_{0.33}Ti_{1.67}O_4]$, or $Li_4Ti_5O_{12}$, layered transition metal oxides such as Ni-Mn-Co oxides such as $LiNi_{1/3}Co_{1/3}Mn_{1/3}O_2$, and $Li(Li_aNi_xCo_yMn_z)O_2$, and $LiTi_2O_4$, other Li layered chalcogenides having with at least some and possibly all of the Li removed]. In other embodiments, the alkali metal is replaced by another.

In another embodiment, the cathode material may comprise an alkali-intercalated chalcogenide. The cathode half-cell compound may be a layered compound such as an alkali metal chalcogenide such as a layered oxide such as $LiCoO_2$ or $LiNiO_2$. In an embodiment, at least some H and possibly some alkali metal such as Li intercalates during discharge wherein H replaces Li, and Li may optionally form LiH. Suitable intercalation compounds are those that comprise the anode or cathode of a Li or Na ion battery such as those of the disclosure. Suitable exemplary intercalation compounds comprise at least one of the group of Li-graphite, $Li_xWO_3$, $Li_xV_2O_5$, $LiCoO_2$, $LiFePO_4$, $LiMn_2O_4$, $LiNiO_2$, $Li_2FePO_4F$, $LiMnPO_4$, $VOPO_4$ system, $LiV_2O_5$, $LiMgSO_4F$, $LiMSO_4F$ (M=Fe, Co, Ni, transition metal), $LiMPO_4F$ (M=Fe, Ti), $Li_x[Li_{0.33}Ti_{1.67}O_4]$, or $Li_4Ti_5O_{12}$, layered transition metal oxides such as Ni-Mn-Co oxides such as $LiNi_{1/3}Co_{1/3}Mn_{1/3}O_2$, and $Li(Li_aNi_xCo_yMn_z)O_2$, and $LiTi_2O_4$, and other Li layered chalcogenides. Exemplary cells are [Pt/C($H_2$), Pd/C($H_2$), alkali hydride, R-Ni/proton conductor such as Nafion, eutectic such as LiCl-KCl, ionic liquid, aqueous electrolyte/H intercalation compound such as at least one of $CoO_2$, $NiO_2$, and at least one of the group of Li-graphite, $Li_xWO_3$, $Li_xV_2O_5$, $LiCoO_2$, $LiFePO_4$, $LiMn_2O_4$, $LiNiO_2$, $Li_2FePO_4F$, $LiMnPO_4$, $VOPO_4$ system, $LiV_2O_5$, $LiMgSO_4F$, $LiMSO_4F$ (M=Fe, Co, Ni, transition metal), $LiMPO_4F$ (M=Fe, Ti), $Li_x[Li_{0.33}Ti_{1.67}O_4]$, or $Li_4Ti_5O_{12}$, layered transition metal oxides such as Ni-Mn-Co oxides such as $LiNi_{1/3}Co_{1/3}Mn_{1/3}O_2$, and $Li(Li_aNi_xCo_yMn_z)O_2$, and $LiTi_2O_4$, and other Li layered chalcogenides]. In other embodiments, the alkali metal is replaced by another.

In an embodiment, the H acceptor is a metal that forms a hydride such as a transition, inner transition, rare earth, or noble metal. In other embodiments, the H acceptor is a compound comprising a basic salt or having an anion of an acid. Exemplary compounds that may comprise cathode half-cell reactants wherein $H^+$ is the migrating ion, or the

anode half-cell reactants wherein $H^-$ is the migrating ion, are one or more of the group of $MNO_3$, MNO, $MNO_2$, $M_3N$, $M_2NH$, $MNH_2$, MX, $NH_3$, $MBH_4$, $MAlH_4$, $M_3AlH_6$, MOH, $M_2S$, MHS, MFeSi, $M_2CO_3$, $MHCO_3$, $M_2SO_4$, $MHSO_4$, $M_3PO_4$, $M_2HPO_4$, $MH_2PO_4$, $M_2MoO_4$, $MNbO_3$, $M_2B_4O_7$ (M tetraborate), $MBO_2$, $M_2WO_4$, $MAlCl_4$, $MGaCl_4$, $M_2CrO_4$, $M_2Cr_2O_7$, $M_2TiO_3$, $MZrO_3$, $MAlO_2$, $MCoO_2$, $MGaO_2$, $M_2GeO_3$, $MMn_2O_4$, $M_4SiO_4$, $M_2SiO_3$, $MTaO_3$, $MCuCl_4$, $MPdCl_4$, $MVO_3$, $MIO_3$, $MFeO_2$, $MIO_4$, $MClO_4$, $MScO_n$, $MTiO_n$, $MVO_n$, $MCrO_n$, $MCr_2O_n$, $MMn_2O_n$, $MFeO_n$, $MCoO_n$, $MNiO_n$, $MNi_2O_n$, $MCuO_n$, and $MZnO_n$, where M is a cation such as a metal such as Li, Na or K and n=1, 2,3, or 4, an oxyanion, an oxyanion of a strong acid, an oxidant, a molecular oxidant such as $V_2O_3$, $I_2O_5$, $MnO_2$, $Re_2O_7$, $CrO_3$, $RuO_2$, AgO, PdO, $PdO_2$, PtO, $PtO_2$, $I_2O_4$, $I_2O_5$, $I_2O_9$, $SO_2$, $SO_3$, $CO_2$, $N_2O$, NO, $NO_2$, $N_2O_3$, $N_2O_4$, $N_2O_5$, $Cl_2O$, $ClO_2$, $Cl_2O_3$, $Cl_2O_6$, $Cl_2O_7$, $PO_2$, $P_2O_3$, and $P_2O_5$, $NH_4X$ wherein X is a nitrate or other suitable anion known to those skilled in the art, and a compound having an anion that can form an H compound such as one of the group comprising $F^-$, $Cl^-$, $Br^-$, $I^-$, $NO_3^-$, $NO_2^-$, $SO_4^{2-}$, $HSO_4^-$, $CoO_2^-$, $IO_3^-$, $IO_4^-$, $TiO_3^-$, $CrO_4^-$, $FeO_2^-$, $PO_4^{3-}$, $HPO_4^{2-}$, $H_2PO_4^-$, $VO_3^-$, $ClO_4^-$ and $Cr_2O_7^{2-}$ and other such anions. The cell may further comprise a negative electrode that is a source of protons such as a hydrogen source such as a hydride such as a metal hydride or hydrogen gas and a dissociator such as Pt/C or Pd/C, a separator or salt bridge, and an electrolyte such as a proton conducting electrolyte such as Nafion or an ionic liquid. The hydrogen source may also be a hydrogen permeable membrane and $H_2$ gas such as $Ti(H_2)$, Pd-Ag alloy $(H_2)$, $V(H_2)$, Ta $(H_2)$, $Ni(H_2)$, or $Nb(H_2)$. Exemplary cells are [$Pt/C(H_2)$, $Pd/C(H_2)$, alkali hydride, R-Ni/proton conductor such as Nafion, eutectic such as LiCl-KCl, ionic liquid/rare earth metal such as La, basic salt such as $Li_2SO_4$, a metal that forms a hydride such as a transition, inner transition, rare earth, or noble metal, one or more of the group of $MNO_3$, MNO, $MNO_2$, $M_3N$, $M_2NH$, $MNH_2$, MX, $NH_3$, $MBH_4$, $MALH_4$, $M_3AlH_6$, MOH, $M_2S$, MHS, MFeSi, $M_2CO_3$, $MHCO_3$, $M_2SO_4$, $MHSO_4$, $M_3PO_4$, $M_2HPO_4$, $MH_2PO_4$, $M_2MoO_4$, $MNbO_3$, $M_2B_4O_7$ (M tetraborate), $MBO_2$, $M_2WO_4$, $MAlCl_4$, $MGaCl_4$, $M_2CrO_4$, $M_2Cr_2O_7$, $M_2TiO_3$, $MZrO_3$, $MAlO_2$, $MCoO_2$, $MGaO_2$, $M_2GeO_3$, $MMn_2O_4$, $M_4SiO_4$, $M_2SiO_3$, $MTaO_3$, $MCuCl_4$, $MPdCl_4$, $MVO_3$, $MIO_3$, $MFeO_2$, $MIO_4$, $MClO_4$, $MScO_n$, $MTiO_n$, $MVO_n$, $MCrO_n$, $MCr_2O_n$, $MMn_2O_n$, $MFeO_n$, $MCoO_n$, $MNiO_n$, $MNi_2O_n$, $MCuO_n$, and $MZnO_n$, where M is a cation such as a metal such as Li, Na or K and n=1, 2,3, or 4, an oxyanion, an oxyanion of a strong acid, an oxidant, a molecular oxidant such as $V_2O_3$, $I_2O_5$, $MnO_2$, $Re_2O_7$, $CrO_3$, $RuO_2$, AgO, PdO, $PdO_2$, PtO, $PtO_2$, $I_2O_4$, $I_2O_5$, $I_2O_9$, $SO_2$, $SO_3$, $CO_2$, $N_2O$, NO, $NO_2$, $N_2O_3$, $N_2O_4$, $N_2O_5$, $Cl_2O$, $ClO_2$, $Cl_2O_3$, $Cl_2O_6$, $Cl_2O_7$, $PO_2$, $P_2O_3$, and $P_2O_5$, $NH_4X$ wherein X is a nitrate or other suitable anion known to those skilled in the art, and a compound having an anion that can form an H compound such as one of the group comprising $F^-$, $Cl^-$, $Br^-$, $I^-$, $NO_3^-$, $NO_2^-$, $SO_4^{2-}$, $HSO_4^-$, $CoO_2^-$, $IO_3^-$, $IO_4^-$, $TiO_3^-$, $CrO_4^-$, $FeO_2^-$, $PO_4^{3-}$, $HPO_4^{2-}$, $H_2PO_4^-$, $VO_3^-$, $ClO_4^-$ and $Cr_2O_7^{2-}$ and other such anions].

Suitable compounds are salts of acids such as $Li_2SO_4$ that can form $LiHSO_4$ or $Li_3PO_4$ that can form $Li_2HPO_4$, for example. Exemplary reactions are

Cathode Reaction

$$2H^+ + Li_2SO_4 + 2e^- \text{ to } Li + H(1/p) + LiHSO_4 \qquad (408)$$

anode Reaction

$$H_2 + \text{ to } 2H^+ + 2e^- \qquad (409)$$

Regeneration

$$Li + LiHSO_4 + \text{ to } 1/2H_2 + Li_2SO_4 \qquad (410)$$

Net

$$H \text{ to } H(1/p) + \text{energy at least partially as electricity} \qquad (411)$$

In another embodiment, a metal hydride may be decomposed or formed in at least one of the half-cell reactions wherein the formation of H or H vacancies due to the half-cell reactions forms H atoms that react to form hydrinos. For example, a hydride such as a metal hydride at the cathode may undergo reduction to form $H^-$ with the formation of vacancies at lattice positions of the hydride that give rise to H interaction to form hydrinos. In addition or alternatively, the $H^-$ migrates to the anode, and undergoes oxidation to H. The H atoms may interact in a suitable environment to form hydrinos. The environment may comprise a sink for the H atoms such as a metal such as an alkali, alkaline earth, transition, inner transition, noble, or rare earth metal that forms a hydride. Alternatively, the H sink may be a compound that is hydrogenated such as a compound of the M-N-H system such as $Li_3N$ or $Li_2NH$. The H sink may be an intercalation compound that may be deficient in metal. The H may substitute at metal sites such as Li sites or may displace the metal such as Li. Suitable exemplary intercalation compounds are Li graphite, $Li_xWO_3$, $Li_xV_2O_5$, $LiCoO_2$, $LiFePO_4$, $LiMn_2O_4$, $LiNiO_2$, $Li_2FePO_4F$, $LiMnPO_4$, $VOPO_4$ system, $LiV_2O_5$, $LiMgSO_4F$, $LiMSO_4F$ (M=Fe, Co, Ni, transition metal), $LiMPO_4F$ (M=Fe, Ti), $Li_x[Li_{0.33}Ti_{1.67}O_4]$, or $Li_4Ti_5O_{12}$, layered transition metal oxides such as Ni-Mn-Co oxides such as

$LiNi_{1/3}Co_{1/3}Mn_{1/3}O_2$, and $Li(Li_aNi_xCo_yMn_z)O_2$, and $LiTi_2O_4$ and at least one of these compounds with some H replacing Li or ones deficient in Li. Further anode materials are chalcogenides that intercalate H or form hydrogenated chalcogenides such as layered transition metal oxides such as $CoO_2$ and $NiO_2$ that form CoO(OH) and NiO(OH), respectively. Exemplary cell are [$Li_3N$, $Li_2NH$, or M (M=metal such as an alkali, alkaline earth, transition, inner transition, or rare earth metal), Li deficient $Li_xWO_3$, $Li_xV_2O_5$, $LiCoO_2$, $LiFePO_4$, $LiMn_2O_4$, $LiNiO_2$, $Li_2FePO_4F$, $LiMnPO_4$, $VOPO_4$ system, $LiV_2O_5$, $LiMgSO_4F$, $LiMSO_4F$ (M=Fe, Co, Ni, transition metal), $LiMPO_4F$ (M=Fe, Ti), $Li_x[Li_{0.33}Ti_{1.67}O_4]$, or $Li_4Ti_5O_{12}$, layered transition metal oxides such as Ni-Mn-Co oxides such as $LiNi_{1/3}Co_{1/3}Mn_{1/3}O_2$, and $Li(Li_aNi_xCo_yMn_z)O_2$, and $LiTi_2O_4$, $LiMgSO_4F$, $LiMSO_4F$ (M=Fe, Co, Ni, transition metal), $LiMPO_4F$ (M=Fe, Ti), and other Li layered chalcogenides and layered oxides such as $CoO_2$ and $NiO_2/H^-$ conducting electrolyte such as a molten eutectic salt such a LiCl-KCl/H permeable cathode and $H_2$ such as $Ni(H_2)$ and $Fe(H_2)$, hydride such as an alkali, alkaline earth, transition, inner transition, or rare earth metal hydride, the latter being for example, $CeH_2$, $DyH_2$, $ErH_2$, $GdH_2$, $HoH_2$, $LaH_2$, $LuH_2$, $NdH_2$, $PrH_2$, $ScH_2$, $TbH_2$, $TmH_2$, and $YH_2$, and a M-N-H compound such as $Li_2NH$ or $LiNH_2$]. In another embodiment, the anode reactant may comprise an oxyhydroxide or the corresponding oxide or partially alkali-intercalated chalcogenide. Suitable exemplary oxyhydroxides are AlO(OH), ScO(OH), YO(OH), VO(OH), CrO(OH), MnO(OH) ($\alpha$-MnO(OH) groutite and $\gamma$-MnO(OH) manganite), FeO(OH), CoO(OH), NiO(OH), RhO(OH), GaO(OH), InO(OH), $Ni_{1/2}Co_{1/2}O(OH)$, and $Ni_{1/3}Co_{1/3}Mn_{1/3}O(OH)$. Exemplary cell are [at least one of the group of oxyhydroxides such as AlO(OH), ScO(OH), YO(OH), VO(OH), CrO(OH), MnO(OH) ($\alpha$-MnO(OH) groutite and $\gamma$-MnO(OH) manganite), FeO(OH), CoO(OH), NiO(OH), RhO(OH), GaO(OH), InO(OH), $Ni_{1/2}Co_{1/2}O(OH)$, and $Ni_{1/3}Co_{1/3}Mn_{1/3}O(OH)$, other layered chalcogenides , H intercalated layered chalcogenides, and layered oxides such as $CoO_2$ and $NiO_2/H^-$ conducting electrolyte such as a molten eutectic salt such a LiCl-KCl/H permeable cathode and $H_2$ such as $Ni(H_2)$ and $Fe(H_2)$, hydride such as an alkali, alkaline earth, transition, inner transition, or rare earth metal hydride, the latter being for example, $CeH_2$, $DyH_2$, $ErH_2$, $GdH_2$, $HoH_2$, $LaH_2$, $LuH_2$, $NdH_2$, $PrH_2$, $ScH_2$, $TbH_2$, $TmH_2$, and $YH_2$, and a M-N-H compound such as $Li_2NH$ or $LiNH_2$].

Thus, the cell comprises a source of hydrogen wherein hydrogen serves as the catalyst and the reactant to form hydrinos. The source of hydrogen may be hydrogen gas or a hydride. The hydrogen may permeate through a membrane. The cell reaction may involve the oxidation of $H^-$ to from H or the reduction of $H^+$ to form H. Exemplary cell reactions are

Cathode Reaction

$$H + e^- \text{ to } H^- \quad (412)$$

Anode Reaction

$$nH^- \text{ to } n\text{-}1H + H(1/p) + ne^- \quad (413)$$

Net

$$H \text{ to } H(1/p) \quad (414)$$

Cathode Reaction

$$nH^+ + ne^- \text{ to } n\text{-}1H + H(1/p) \quad (415)$$

Anode Reaction

$$H \text{ to } H^+ + e^- \quad (416)$$

Net

$$H \text{ to } H(1/p) \quad (417)$$

The cell may further comprise an electrolyte such as a molten salt such as a eutectic alkali halide mixture. At least one of the half-cell reactants may comprise a support such a high-surface-area electrically conductive support such as a carbide, boride, or carbon. In an embodiment, the anode reactants may comprise a reductant other than H or $H^-$ such as a metal such as Li or a Li alloy. The cathode reactants may comprise a source of H such as a hydride such as an electrically conducting hydride that is about as stable or more stable than LiH such as at least one of $CeH_2$, $DyH_2$, $ErH_2$, $GdH_2$, $HoH_2$, $LaH_2$, $LuH_2$, $NdH_2$, $PrH_2$, $ScH_2$, $TbH_2$, $TmH_2$, and $YH_2$. An exemplary cell is [Li/KCl-LiCl/$LaH_2$ TiC]. At least one half-cell reaction mixture comprises at least one of a mixture of hydrides, metals, metal hydrides and a source of hydrogen such as hydrogen gas or hydrogen supplied by permeation such through a metal membrane. The hydrogen

source or hydride may also be a component of an electrolyte or salt bridge. Exemplary cells are [Li/KCl-LiCl LiH/$LaH_2$ TiC], [Li/KCl-LiCl/$LaH_2$ Mg TiC], [Li/KCl-LiCl LiH/$LaH_2$ Mg TiC], [Li/KCl-LiCl /$LaH_2$ $ZrH_2$ TiC], [Li/KCl-LiCl LiH/$LaH_2$ $ZrH_2$ TiC], [LiM/LiX-LiH/$M_1H_2$ $M_2H_2$ support] wherein LiM is Li, a Li alloy, or compound of Li, LiX-LiH is a eutectic mixture of a lithium halide (X) wherein other eutectic salt electrolytes may substitute, $M_1H_2$ and $M_2H_2$ are a first and second hydride wherein each may be from the group of $CeH_2$, $DyH_2$, $ErH_2$, $GdH_2$, $HoH_2$, $LaH_2$, $LuH_2$, $NdH_2$, $PrH_2$, $ScH_2$, $TbH_2$, $TmH_2$, and $YH_2$, $TiH_2$, VH, $VH_{1.6}$, $LaNi_5H_6$, $ZrCr_2H_{3.8}$, $LaNi_{3.55}Mn_{0.4}Al_{0.3}Co_{0.75}$, $ZrMn_{0.5}Cr_{0.2}V_{0.1}Ni_{1.2}$, CrH, $CrH_2$, NiH, CuH, $YH_2$, $YH_3$, $ZrH_2$, NbH, $NbH_2$, $PdH_{0.7}$, $LaH_2$, $LaH_3$, TaH, the lanthanide hydrides: $MH_2$ (fluorite) M = Ce, Pr, Nb, Sm, Gd, Tb, Dy, Ho, Er, Tm, Lu; $MH_3$ (cubic) M = Ce, Pr, Nd, Yb; $MH_3$ (hexagonal) M = Sm, Gd, Tb, Dy, Ho, Er, Tm, Lu; actinide hydrides: $MH_2$ (fluorite) M = Th, Np, Pu, Am; $MH_3$ (hexagonal) M = Np, Pu, Am, and $MH_3$ (cubic, complex structure) M = Pa, U, alkali hydrides, alkaline earth hydrides, transition metal hydrides, inner transition metal hydrides, rare earth hydrides, noble metal hydrides, $LiAlH_4$, $LiBH_4$, and similar hydrides. At least one hydride or metal such as LiH, Li, NaH, Na, KH, K, RbH, Rb, CsH, or Cs may serve as the catalyst or source of catalyst. The catalyst or H that react to form hydrinos may be formed during the cell operation. Alternatively, the reduced migrating ion or its hydride may serve as the catalyst or source of catalyst.

In an embodiment, an integer number of H atoms serve as a catalyst for at least one other. Alternatively, the reduced migrating ion or its hydride may serve as the catalyst or source of catalyst. The cell may comprise a source of H that may form hydride ions at the cathode. The H source may be a hydride, hydrogen that may be from the permeation through a metal such as a metal tube or membrane cathode, a hydrogen storage material, a hydrogenated material such as hydrogenated carbon, and a M-N-H system compound. The cell may comprise an electrolyte for the migration of $H^-$ ions. Suitable electrolytes are eutectic molten salts such as those comprising mixtures of alkali metal halides such as LiCl-KCl or LiF-LiCl, NaH $NaAlEt_4$, and KH-KOH. The anode may comprise a sink for at least one of hydride ions, hydrogen, and protons. The hydride ion may be oxidized to H at the anode. The H may serve as a reactant and catalyst to form hydrinos. The sink for H may be at least one of a metal that forms a hydride, a hydrogen storage material such as those of the present disclosure, M-N-H system compounds, a nitride or imide that forms at least one of an imide or amide, and intercalation compounds such as carbon, a chalcogenide, and other compounds of the present disclosure such as those of lithium ion batteries. An exemplary cell comprises a metal hydride at the cathode such as a rare earth hydride, $TiH_2$, or $ZrH_2$ and a metal at the anode that can form a hydride such as a rare earth, Ti, or Nb metal powder or an alkaline earth or alkaline metal. Alternatively, the anode reactants comprise a compound such as $Li_3N$ or activated carbon that is a H sink. The cell may further comprise a support in either half-cell such as a carbon, a carbide, or a boride such as carbon black, TiC, WC, $YC_2$, $TiB_2$, or $MgB_2$. Specific exemplary cells are [Mg, Ca, Sr, Ba, rare earth metal powder, hydrogen storage material, R-Ni, Ti, Nb, Pd, Pt, carbon, $Li_3N$, $Li_2NH$/molten eutectic salt $H^-$ conductor such as LiCl-KCl/$TiH_2$, $ZrH_2$, $MgH_2$, $LaH_2$, $CeH_2$, R-Ni, hydrogen permeable tube H source such as $Ni(H_2)$ or other metals including rare earth coated Fe].

In an embodiment, an integer number of H atoms serve as a catalyst for at least one other. Alternatively, the reduced migrating ion or its hydride may serve as the catalyst or source of catalyst. The cell may comprise a source of H that may form protons at the anode. The H source may be a hydride, hydrogen that may be from the permeation through a metal such as a metal tube or membrane cathode, a hydrogen storage material, a hydrogenated material such as hydrogenated carbon, and a M-N-H system compound. The cell may comprise an electrolyte for the migration of $H^+$ ions. The electrolyte may comprise a proton conductor. The system may be aqueous or non-aqueous. The cathode may comprise a sink for at least one of hydride ions, hydrogen, and protons. The migrating proton may be reduced to H or $H^-$ at the cathode. The H may serve as a reactant and catalyst to form hydrinos. The sink for H may be at least one of a metal that forms a hydride, a hydrogen storage material such as those of the present disclosure M-N-H system compounds, a nitride or imide that forms at least one of an imide or amide, and intercalation compounds such as carbon, a chalcogenide, and other compounds of the present disclosure such as those of lithium ion batteries. An exemplary cell comprises a metal hydride at the anode such as a rare earth hydride, $TiH_2$, or $ZrH_2$ and a metal at the cathode that can form a hydride such as a rare earth, Ti, or Nb metal powder or an alkaline earth or alkaline metal. Alternatively, the cathode reactants comprise a compound such as $Li_3N$ or activated carbon that is a H sink. The cell may further comprise a support in either half-cell such as a carbon, a carbide, or a boride such as carbon black, TiC, WC, $YC_2$, $TiB_2$, or $MgB_2$. Specific exemplary cells are [$TiH_2$, $ZrH_2$, $MgH_2$, $LaH_2$, $CeH_2$, R-Ni, hydrogen permeable tube H source such as $Ni(H_2)$ or other metals including rare earth coated Fe / $H^+$ conductor/ Mg, Ca, Sr, Ba, rare earth metal powder, hydrogen storage material, R-Ni, Ti, Nb, Pd, Pt, carbon, $Li_3N$, $Li_2NH$].

For systems that use H as the catalyst wherein the system may be absent an alkali metal or alkali metal hydride as the catalyst or source of catalyst, electrolytes such as $MAlCl_4$ (M is an alkali metal) that are reactive with these species can be used. Exemplary cells are [Li/$LiAlCl_4$/$TiH_2$ or $ZrH_2$], [K/$KAlCl_4$/$TiH_2$ or $ZrH_2$], [Na/$NaAlCl_4$/$TiH_2$ or $ZrH_2$], [Ti or Nb/$NaAlCl_4$/$Ni(H_2)$, $TiH_2$, $ZrH_2$, or $LaH_2$] and [$Ni(H_2)$, $TiH_2$, $ZrH_2$, or $LaH_2$ /$NaAlCl_4$/ Ti or Nb]. The H catalyst cells may be regenerated thermally by decomposition and addition of $H_2$ to the hydride and metal products respectively. Alternatively, the reduced migrating ion or its hydride may serve as the catalyst or source of catalyst.

In an embodiment, the cell comprises an electrolyte such as a molten eutectic salt electrolyte, the electrolyte

further comprising a hydride such as LiH. The molten eutectic salt electrolyte may comprise a mixture of alkali metal halides such as LiCl-KCl, LiF-LiCl, LiCl-CsCl, or LiCl-KCl-CsCl with LiH dissolved in the range of 0.0001 mol% to saturation, or the molten eutectic salt electrolyte may comprise a mixture of LiH and one or more alkali halides such as LiCl, LiBr, and LiI. The electrolyte may be selected to achieve a desired temperature of operation wherein the reaction to form hydrinos is favored. The temperature may be controlled to control the activity of one or more species, the thermodynamic equilibrium between species such as a mixture of hydrides, or the solubility of a species such as the solubility of LiH in the electrolyte. The cell cathode and anode may comprise two different materials, compounds, or metals. In an embodiment, the cathode metal may form a more stable hydride than the hydride of the electrolyte; whereas, the anode metal may form a less stable hydride. The cathode may comprise, for example, one or more of Ce, Dy, Er, Gd, Ho, La, Lu, Nd, Pr, Sc, Tb, Tm, and Y. The anode may comprise a transition metal such as Cu, Ni, Cr, or Fe or stainless steel. Hydrogen may be supplied as $H_2$ gas, by permeation such as through a membrane wherein the membrane may comprise the cathode or anode, or by sparging such as through a porous electrode such as porous electrode consisting of a tightly bound assembly of a Ni porous body (Celmet #6, Sumitomo Electric Industries, Ltd.) within an outer alumina tube.

In other embodiments, the electrolyte may comprise the ion of the migrating ion such as a $Li^+$ electrolyte such as a lithium salt such as lithium hexafluorophosphate in an organic solvent such as dimethyl or diethyl carbonate and ethylene carbonate for the case that the migrating ion is $Li^+$. Then, the salt bridge may be a glass such as borosilicate glass saturated with $Li^+$ electrolyte or a ceramic such as $Li^+$ impregnated beta alumina. The electrolyte may also comprise at least one or more ceramics, polymers, and gels. Exemplary cells comprise (1) a 1 $cm^2$, 75 um-thick disc of composite positive electrode containing 7-10 mg of metal hydride such as $LaH_2$ mixed with TiC, or $LaH_2$ mixed with 15% carbon SP (black carbon from MM), (2) a 1 $cm^2$ Li metal disc as the negative electrode, and (3) a Whatman GF/D borosilicate glass-fiber sheet saturated with a 1 M $LiPF_6$ electrolyte solution in 1:1 dimethyl carbonate/ethylene carbonate as the separator/electrolyte. Other suitable electrolytes are lithium hexafluorophosphate ($LiPF_6$), lithium hexafluoroarsenate monohydrate ($LiAsF_6$), lithium perchlorate ($LiClO_4$), lithium tetrafluoroborate ($LiBF_4$), and lithium triflate ($LiCF_3SO_3$) in an organic solvent such as ethylene carbonate. Additionally, $H_2$ gas may be added to the cell such as to the cathode compartment.

The cell may comprise an ion that is a catalyst or source of the catalyst such as an alkali metal ion such as $Li^+$ that is a source of Li catalyst. The source of the ion may be the corresponding metal, alkali alloy, or alkali compound. The cell may comprise a salt bridge or a separator and may further comprise an electrolyte and possibly a support such as a carbide, boride, or carbon all as given in the present disclosure. In an embodiment, m H atoms (m is an integer) serve as the catalyst for other H atoms. The H atoms may be maintained on the support such as a carbide, boride, or carbon. The source of H may be H gas, H permeated through a membrane, a hydride, or a compound such as an amide or imide. In an embodiment, the support has a large surface area and is in molar excess relative to the source of H such as a hydride or compound. Exemplary cell are [Li/borosilicate glass-fiber sheet saturated with a 1 M $LiPF_6$ electrolyte solution in 1:1 dimethyl carbonate/ethylene carbonate/TiC], [Li/borosilicate glass-fiber sheet saturated with a 1 M $LiPF_6$ electrolyte solution in 1:1 dimethyl carbonate/ethylene carbonate/Fe powder], [Li/polyolefin sheet saturated with a 1 M $LiPF_6$ electrolyte solution in 1:1 dimethyl carbonate/ethylene carbonate/TiC 10mol% LaH2], [Li/polyolefin sheet saturated with a 1 M $LiPF_6$ electrolyte solution in 1:1 dimethyl carbonate/ethylene carbonate/WC 10mol% LaH2], [Li/ polypropylene membrane saturated with a 1 M $LiPF_6$ electrolyte solution in 1:1 dimethyl carbonate/ethylene carbonate/TiC 10mol% $LaH_2$], [Li/ polypropylene membrane saturated with a 1 M $LiPF_6$ electrolyte solution in 1:1 dimethyl carbonate/ethylene carbonate/WC 10mol% $LaH_2$], and [Li source/ salt bridge or separator-electrolyte/support and H source].

In an embodiment, the cell forms a mixed metal M-N-H system compound such as an amide, imide, or nitride during discharge or charge wherein M is at least two metals in any ratio. Suitable metals are alkali metals such as Li, Na, and K, and alkaline earth metals such as Mg. Alternatively, a mixed metal M-N-H system compound is a starting material of at least one half-cell. During charge or discharge the compound reacts to gain or loose H. In an embodiment, at least one of the creation of H and catalyst, vacancies by means such as substitution, reaction, or displacement, and H addition causes the formation of hydrinos to create electrical power. In the latter case, one or more H may serve as a catalyst for another. In embodiments, a metal ion such as an alkali metal ion may be the migrating ion. In other embodiments, $H^-$ or $H^+$ may be the migrating ion. The cells may comprise the anodes, cathodes, salt bridges, supports, matrices, and electrolytes of the disclosure with the additional feature that the metals are a mixture. In other embodiments, a half cell reactants or product comprises a mixture of at least two of a M-N-H system compound, a borane, amino boranes and borane amines, aluminum hydride, alkali aluminum hydride, alkali borohydride, alkali metal hydride, alkaline earth metal hydride, transition metal hydride, inner transition metal hydride, and rare earth metal hydride. The cell may comprise an electrolyte and optionally a salt bridge that confines the electrolyte to at least one half-cell. The electrolyte may be a eutectic salt. The electrolyte may be an ionic liquid that may be in at least one half-cell. The ionic liquid may be at least one of the disclosure such as ethylammonium nitrate, ethylammonium nitrate doped with dihydrogen phosphate such as about 1% doped, hydrazinium nitrate, $NH_4PO_3$-$TiP_2O_7$, and a eutectic salt of $LiNO_3$-$NH_4NO_3$. Other suitable electrolytes may comprise at least one salt of the group of $LiNO_3$, ammonium triflate (Tf = $CF_3SO_3^-$), ammonium trifluoroacetate (TFAc =$CF_3COO^-$) ammonium tetrafluorobarate ($BF_4^-$ ), ammonium methanesulfonate ($CH_3SO_3^-$), ammonium

nitrate ($NO_3^-$), ammonium thiocyanate ($SCN^-$), ammonium sulfamate ($SO_3NH_2^-$), ammonium bifluoride ($HF_2^-$) ammonium hydrogen sulfate ($HSO_4^-$) ammonium bis(trifluoromethanesulfonyl)imide (TFSI = $CF_3SO_2)_2N^-$), ammonium bis(perfluoroehtanesulfonyl)imide (BETI = $CF_3CF_2SO_2)_2N$), hydrazinium nitrate and may further comprise a mixture such as a eutectic mixture further comprising at least one of $NH_4NO_3$, $NH_4Tf$, and $NH_4TFAc$. Other suitable solvents comprise acids such as phosphoric acid. Exemplary cells are [M=Li, Na, K/olefin separator M=Li, Na, K $PF_6$ EC DEC mixture, BASE, or eutectic salt/M'$NH_2$, M'$_2$NH M'=Li, Na, K wherein M is different from M' and optionally an electrolyte such as an ionic liquid or a eutectic salt such as an alkali halide salt mixture, a hydride such as M or M'$AlH_4$ or M or M'$BH_4$, M or M'H or M or M'$H_2$ wherein M and M' = alkali, alkaline earth, transition, inner transition, or rare earth metal, and a support such as carbon, a carbide, or boride] and [at least a mixture of two of the group of $M_3N$, $M_2NH$, M'$_3$N, and M'$_2$NH M, M'=Li, Na, K wherein M is different from M'/eutectic salt such as LiCl-KCl/, a hydride such as M or M'H or M or M'$H_2$ wherein M and M' = alkali, alkaline earth, transition, inner transition, or rare earth metal, M or M'$AlH_4$ or M or M'$BH_4$, and a support such as carbon, a carbide, or boride]. Since one or more H serve as the catalyst, the product is at least one of H(1/p), $H_2$(1/p), and $H^-$(/1/p) where p depends on the number of H atoms that serve as a catalyst for the other H undergoing a transition to form a hydrino (Eqs. (6-9) and (10)). The product such as $H_2$(1/p), and $H^-$(/1/p) may be identified by proton NMR according to Eqs. (20) and (12), respectively.

Other suitable intercalation compounds of the disclosure are $LiNi_{1/3}Al_{1/3}Mn_{1/3}O_2$, $LiAl_{1/3-x}Co_xNi_{1/3}Co_{1/3}O_2(0 \leq x \leq 1/3)$, $LiNi_xCo_{1-2x}Mn_xO_2$ $(0 \leq x \leq 1/3)$, $Li_xAl_yCo_{1-y}O_2$, $Li_xAl_yMn_{1-y}O_2$, $Li_xAl_yCo_zMn_{1-y-z}O_2$, $LiNi_{1/2}Mn_{1/2}O_2$, and other combinations and mixtures of metals that form intercalation compounds. Li may be at least partially replaced by H or may be at least partially to completely removed in embodiments as described in the disclosure for other such compounds. Another alkali metal such as Na may substitute for Li.

Suitable oxyhydroxides of the disclosure have octahedrally coordinated M ion such as $M^{3+}$ = Al, Sc, Y, V, Cr, Mn, Fe, Co, Ni, Rh, Ga, and In, and alloys and mixtures thereof such as $Ni_{1/2}Co_{1/2}$ and $Ni_{1/3}Co_{1/3}Mn_{1/3}$. Corresponding exemplary oxyhydroxides are AlO(OH), ScO(OH), YO(OH), VO(OH), CrO(OH), MnO(OH) ($\alpha$-MnO(OH) groutite and $\gamma$-MnO(OH) manganite), FeO(OH), CoO(OH), NiO(OH), RhO(OH), GaO(OH), InO(OH), $Ni_{1/2}Co_{1/2}O(OH)$, and $Ni_{1/3}Co_{1/3}Mn_{1/3}O(OH)$. The oxyhydroxides may comprise intercalated H. The oxyhydroxides may have strong hydrogen bonding. Suitable oxyhydroxides having strong H bonding are those of the group comprising Al, Sc, Y, V, Cr, Mn, Fe, Co, Ni, Rh, Ga, and In, and alloys and mixtures thereof such as $Ni_{1/2}Co_{1/2}$ and $Ni_{1/3}Co_{1/3}Mn_{1/3}$. The corresponding exemplary oxyhydroxides are AlO(OH), ScO(OH), YO(OH), VO(OH), CrO(OH), MnO(OH) ($\alpha$-MnO(OH) groutite and $\gamma$-MnO(OH) manganite), FeO(OH), CoO(OH), NiO(OH), RhO(OH), GaO(OH), InO(OH), $Ni_{1/2}Co_{1/2}O(OH)$, and $Ni_{1/3}Co_{1/3}Mn_{1/3}O(OH)$. Exemplary cell are [Li, Li alloy, K, K alloy, Na, or Na alloy/Celgard LP 30/at least one of the group of AlO(OH), ScO(OH), YO(OH), VO(OH), CrO(OH), MnO(OH) ($\alpha$-MnO(OH) groutite and $\gamma$-MnO(OH) manganite), FeO(OH), CoO(OH), NiO(OH), RhO(OH), GaO(OH), InO(OH), $Ni_{1/2}Co_{1/2}O(OH)$, and $Ni_{1/3}Co_{1/3}Mn_{1/3}O(OH)$]. The anode may comprise a reactant such as a metal that reacts with water to form a hydroxide during discharge. Exemplary CIHT cells comprising an aqueous electrolyte and an oxyhydroxide cathode are [PtC($H_2$), PdC($H_2$), or R-Ni/KOH (6 M to saturated aq) wherein the base may serve as a catalyst or source of catalyst such as K or $2K^+$, or ammonium hydroxide/ MO(OH) (M = metal such as Co, Ni, Fe, Mn, Al), such as oxyhydroxide such as AlO(OH), ScO(OH), YO(OH), VO(OH), CrO(OH), MnO(OH) ($\alpha$-MnO(OH) groutite and $\gamma$-MnO(OH) manganite), FeO(OH), CoO(OH), NiO(OH), RhO(OH), GaO(OH), InO(OH), $Ni_{1/2}Co_{1/2}O(OH)$, and $Ni_{1/3}Co_{1/3}Mn_{1/3}O(OH)$ and also HY], [NiAl/KOH/CoOOH], [R-Ni/$K_2CO_3$ (aq)/CoOOH], and [metal that forms a hydroxide or an oxide with water during discharge such as Al, Co, Ni, Fe, or Ag metal/aqueous KOH (6 M to saturated), or ammonium hydroxide/ MO(OH) (M = metal such as Co, Ni, Fe, Mn, Al), such as AlO(OH), ScO(OH), YO(OH), VO(OH), CrO(OH), MnO(OH) ($\alpha$-MnO(OH) groutite and $\gamma$-MnO(OH) manganite), FeO(OH), CoO(OH), NiO(OH), RhO(OH), GaO(OH), InO(OH), $Ni_{1/2}Co_{1/2}O(OH)$, and $Ni_{1/3}Co_{1/3}Mn_{1/3}O(OH)$ or HY]. In embodiments, the intercalated H in compounds such as oxyhydroxides and metal chalcogenides comprises at least one of $H^+$ and covalent O-H hydrogen bonded to O. The neutrality of the cathode material is achieved by at least by one of reduction of the migrating ion or reduction of the metal ion such as the reduction of metal ion $M^{3+}$ to $M^{2+}$. In other embodiments, another chalcogenide substitutes for O. In an embodiment, the $O - H \cdots H$ distance may be in the range of about 2 to 3 Å and preferably in the range of about 2.2 to 2.7 Å. In an embodiment, the H bonded cathode reactants such as oxyhydroxides or metal chalcogenides further comprises some crystalline water that provides for at least one of participates in the H bonding, alters the crystal structure wherein the alteration may increase the H bonding in the crystal, and increases the rate to form hydrinos. H bonding is temperature sensitive; thus, in an embodiment, the temperature of the H-bonded reactants is controlled to control the rate of the hydrino reaction and consequently, one of the voltage, current, power, and energy of the CIHT cell. The cell having an oxyhydroxide cathode may be operated at elevated temperature controlled by a heater.

In an embodiment, H intercalates into a chalcogenide wherein the reaction causes the formation of hydrinos and the energy released in turn contributes to the cell energy. Alternatively, the migrating ion reacts with an H intercalated chalcogenide wherein the reaction causes the formation of hydrinos, and the energy released in turn contributes to the cell energy. The migrating ion may be at least one of $OH^-$, $H^+$, $M^+$ (M = alkali metal), and $H^-$. Permutations of chalcogenide reactants that are capable of, and undergo intercalation of H during discharge and chalcogenide reactants that are at

least partially H intercalated and undergo reaction such as H displacement during discharge are embodiments of the present disclosure wherein the chalcogenide reactants and other reactants such as those involved in the intercalation or displacement reactions are those of the present disclosure that can be determined by one skilled in the Art.

Specifically, the migrating ion may be $OH^-$ wherein the anode comprises a source of H such as hydride such as at least one of an alkali, alkaline earth, transition metal, inner transition metal, and rare earth hydride and R-Ni, the cathode comprises a layered chalcogenide capable of intercalating H, and electrolyte is an $OH^-$ conductor such as a basic aqueous solution such as aqueous KOH wherein the base may serve as a catalyst or source of catalyst such as K or $2K^+$. The cell may further comprise a $OH^-$ permeable separator such as CG3401. Exemplary cells are [hydride such as R-Ni such as (4200#, slurry) or hydrogen source such as $PtC(H_2)$ or $PdC(H_2)$/ KOH (6 M to saturated) + CG3401 / layered chalcogenide capable of intercalating H such as $CoO_2$, $NiO_2$, $TiS_2$, $ZrS_2$, $HfS_2$, $TaS_2$, $TeS_2$, $ReS_2$, $PtS_2$, $SnS_2$, SnSSe, $TiSe_2$, $ZrSe_2$, $HfSe_2$, $TaSe_2$, $TeSe_2$, $ReSe_2$, $PtSe_2$, $SnSe_2$, $TiTe_2$, $ZrTe_2$, $VTe_2$, $NbTe_2$, $TaTe_2$, $MoTe_2$, $WTe_2$, $CoTe_2$, $RhTe_2$, $IrTe_2$, $NiTe_2$, $PdTe_2$, $PtTe_2$, $SiTe_2$, $NbS_2$, $TaS_2$, $MoS_2$, $WS_2$, $NbSe_2$, $NbSe_3$, $TaSe_2$, $MoSe_2$, $VSe_2$, $WSe_2$, and $MoTe_2$]. Alternatively, the cathode reactant comprises an H intercalated layered chalcogenide. Exemplary cells are [hydride such as R-Ni (4200#, slurry) or hydrogen source such as $PtC(H_2)$ or $PdC(H_2)$/ KOH (6 M to saturated) + CG3401 / an H intercalated layered chalcogenide such as CoOOH, NiOOH, $HTiS_2$, $HZrS_2$, $HHfS_2$, $HTaS_2$, $HTeS_2$, $HReS_2$, $HPtS_2$, $HSnS_2$, HSnSSe, $HTiSe_2$, $HZrSe_2$, $HHfSe_2$, $HTaSe_2$, $HTeSe_2$, $HReSe_2$, $HPtSe_2$, $HSnSe_2$, $HTiTe_2$, $HZrTe_2$, $HVTe_2$, $HNbTe_2$, $HTaTe_2$, $HMoTe_2$, $HWTe_2$, $HCoTe_2$, $HRhTe_2$, $HIrTe_2$, $HNiTe_2$, $HPdTe_2$, $HPtTe_2$, $HSiTe_2$, $HNbS_2$, $HTaS_2$, $HMoS_2$, $HWS_2$, $HNbSe_2$, $HNbSe_3$, $HTaSe_2$, $HMoSe_2$, $HVSe_2$, $HWSe_2$, and $HMoTe_2$].

The migrating ion may be $H^+$ wherein the anode comprises a source of H such as hydrogen gas and a dissociator such as Pd/C, Pt/C, Ir/C, Rh/C, or Ru/C, the cathode comprises a layered chalcogenide capable of intercalating H, and the electrolyte is an $H^+$ conductor. Exemplary cells are [$H_2$ and Pd/C, Pt/C, Ir/C, Rh/C, or Ru/C/$H^+$ conductor such as an acidic aqueous electrolyte, ionic liquid, Nafion, or solid proton conductor/ layered chalcogenide capable of intercalating H such as $CoO_2$, $NiO_2$, $TiS_2$, $ZrS_2$, $HfS_2$, $TaS_2$, $TeS_2$, $ReS_2$, $PtS_2$, $SnS_2$, SnSSe, $TiSe_2$, $ZrSe_2$, $HfSe_2$, $TaSe_2$, $TeSe_2$, $ReSe_2$, $PtSe_2$, $SnSe_2$, $TiTe_2$, $ZrTe_2$, $VTe_2$, $NbTe_2$, $TaTe_2$, $MoTe_2$, $WTe_2$, $CoTe_2$, $RhTe_2$, $IrTe_2$, $NiTe_2$, $PdTe_2$, $PtTe_2$, $SiTe_2$, $NbS_2$, $TaS_2$, $MoS_2$, $WS_2$, $NbSe_2$, $NbSe_3$, $TaSe_2$, $MoSe_2$, $VSe_2$, $WSe_2$, and $MoTe_2$]. Alternatively, the cathode reactant comprises an H intercalated layered chalcogenide. Exemplary cells are [$H_2$ and Pd/C, Pt/C, Ir/C, Rh/C, or Ru/C/$H^+$ conductor such as an acidic aqueous electrolyte, ionic liquid, Nafion, or solid proton conductor/ H intercalated layered chalcogenide such as CoOOH, NiOOH, $HTiS_2$, $HZrS_2$, $HHfS_2$, $HTaS_2$, $HTeS_2$, $HReS_2$, $HPtS_2$, $HSnS_2$, HSnSSe, $HTiSe_2$, $HZrSe_2$, $HHfSe_2$, $HTaSe_2$, $HTeSe_2$, $HReSe_2$, $HPtSe_2$, $HSnSe_2$, $HTiTe_2$, $HZrTe_2$, $HVTe_2$, $HNbTe_2$, $HTaTe_2$, $HMoTe_2$, $HWTe_2$, $HCoTe_2$, $HRhTe_2$, $HIrTe_2$, $HNiTe_2$, $HPdTe_2$, $HPtTe_2$, $HSiTe_2$, $HNbS_2$, $HTaS_2$, $HMoS_2$, $HWS_2$, $HNbSe_2$, $HNbSe_3$, $HTaSe_2$, $HMoSe_2$, $HVSe_2$, $HWSe_2$, and $HMoTe_2$].

The migrating ion may be $H^-$ wherein the cathode comprises a source of H such as at least one of a hydride such as at least one of an alkali, alkaline earth, transition metal, inner transition metal, and rare earth hydride and R-Ni, and hydrogen gas and a dissociator such as Pd/C, Pt/C, Ir/C, Rh/C, or Ru/C, and hydrogen gas and a hydrogen permeable membrane, the cathode comprises a layered chalcogenide capable of intercalating H, and the electrolyte is an $H^-$ conductor such as a molten eutectic salt such as a mixture of alkali halides. Exemplary cells are [layered chalcogenide capable of intercalating H such as $CoO_2$, $NiO_2$, $TiS_2$, $ZrS_2$, $HfS_2$, $TaS_2$, $TeS_2$, $ReS_2$, $PtS_2$, $SnS_2$, SnSSe, $TiSe_2$, $ZrSe_2$, $HfSe_2$, $TaSe_2$, $TeSe_2$, $ReSe_2$, $PtSe_2$, $SnSe_2$, $TiTe_2$, $ZrTe_2$, $VTe_2$, $NbTe_2$, $TaTe_2$, $MoTe_2$, $WTe_2$, $CoTe_2$, $RhTe_2$, $IrTe_2$, $NiTe_2$, $PdTe_2$, $PtTe_2$, $SiTe_2$, $NbS_2$, $TaS_2$, $MoS_2$, $WS_2$, $NbSe_2$, $NbSe_3$, $TaSe_2$, $MoSe_2$, $VSe_2$, $WSe_2$, and $MoTe_2$/ hydride conduction molten salt such as LiCl-KCl/H source such as a hydride such as $TiH_2$, $ZrH_2$, $LaH_2$, or $CeH_2$ or a $H_2$ permeable cathode and $H_2$ such as $Fe(H_2)$, $Ta(H_2)$ or $Ni(H_2)$]. Alternatively, the anode reactant comprises an H intercalated layered chalcogenide. Exemplary cells are [H intercalated layered chalcogenide such as CoOOH, NiOOH, $HTiS_2$, $HZrS_2$, $HHfS_2$, $HTaS_2$, $HTeS_2$, $HReS_2$, $HPtS_2$, $HSnS_2$, HSnSSe, $HTiSe_2$, $HZrSe_2$, $HHfSe_2$, $HTaSe_2$, $HTeSe_2$, $HReSe_2$, $HPtSe_2$, $HSnSe_2$, $HTiTe_2$, $HZrTe_2$, $HVTe_2$, $HNbTe_2$, $HTaTe_2$, $HMoTe_2$, $HWTe_2$, $HCoTe_2$, $HRhTe_2$, $HIrTe_2$, $HNiTe_2$, $HPdTe_2$, $HPtTe_2$, $HSiTe_2$, $HNbS_2$, $HTaS_2$, $HMoS_2$, $HWS_2$, $HNbSe_2$, $HNbSe_3$, $HTaSe_2$, $HMoSe_2$, $HVSe_2$, $HWSe_2$, and $HMoTe_2$/ hydride conduction molten salt such as LiCl-KCl/ H source such as a hydride such as $TiH_2$, $ZrH_2$, $LaH_2$, or $CeH_2$ or a $H_2$ permeable cathode and $H_2$ such as $Fe(H_2)$, $Ta(H_2)$ or $Ni(H_2)$].

The migrating ion may be $M^+$ (M = alkali metal) wherein the anode comprises a source of $M^+$ such M metal or alloy such as Li, Na, K, or an alloy such as LiC, $Li_3Mg$ or LiAl, the cathode comprises an H intercalated layered chalcogenide, and the electrolyte is an $M^+$ conductor. Exemplary cells are [alkali metal or source of alkali metal M such as Li, LiC, or $Li_3Mg$/$M^+$ conductor such Celgard with organic solvent and M salt such as LP 30/ H intercalated layered chalcogenide such as CoOOH, NiOOH, $HTiS_2$, $HZrS_2$, $HHfS_2$, $HTaS_2$, $HTeS_2$, $HReS_2$, $HPtS_2$, $HSnS_2$, HSnSSe, $HTiSe_2$, $HZrSe_2$, $HHfSe_2$, $HTaSe_2$, $HTeSe_2$, $HReSe_2$, $HPtSe_2$, $HSnSe_2$, $HTiTe_2$, $HZrTe_2$, $HVTe_2$, $HNbTe_2$, $HTaTe_2$, $HMoTe_2$, $HWTe_2$, $HCoTe_2$, $HRhTe_2$, $HIrTe_2$, $HNiTe_2$, $HPdTe_2$, $HPtTe_2$, $HSiTe_2$, $HNbS_2$, $HTaS_2$, $HMoS_2$, $HWS_2$, $HNbSe_2$, $HNbSe_3$, $HTaSe_2$, $HMoSe_2$, $HVSe_2$, $HWSe_2$, and $HMoTe_2$].

In other embodiments, $H^-$ or $H^+$ may migrate and become oxidized or reduced, respectively, with the H incorporated into an chalcogenide , not necessarily as an intercalated H. The H may reduce an oxide for example. Exemplary cells are [hydride such as R-Ni (4200#, slurry) or hydrogen source such as $PtC(H_2)$ or $PdC(H_2)$/ KOH (6 M to saturated)

+ CG3401 / $SeO_2$, $TeO_2$, or $P_2O_5$], [$H_2$ and Pd/C, Pt/C, Ir/C, Rh/C, or Ru/C/$H^+$ conductor such as an acidic aqueous electrolyte, ionic liquid, Nafion, or solid proton conductor/ $SeO_2$, $TeO_2$, or $P_2O_5$], and [$SeO_2$, $TeO_2$, or $P_2O_5$/$H^-$ conducting electrolyte such as a molten eutectic salt such a LiCl-KCl/hydride such as $ZrH_2$, $TiH_2$, $LaH_2$, or $CeH_2$ or H permeable cathode and $H_2$ such as Ni($H_2$) and Fe($H_2$)].

In embodiments, at least one of (i) the OH bond of the hydroxyl group or the OH bond of the hydride ion ($OH^-$) is broken to form H such that some further reacts to form hydrinos, (ii) an H reacts with O of a compound to form an OH or $OH^-$ group such that some of the H reacts to form hydrinos in the transition state rather than form the OH or $OH^-$ group, and (iii) H is formed from a source of H as well as OH or $OH^-$ wherein the latter reacts with an element or compound and at least some of the H further reacts to form hydrinos. The anode and electrolytes comprise those of the disclosure. The migrating ion may be a metal ion ($M^+$) such as an alkali metal ion or a species of H such as $OH^-$, $H^-$, or $H^+$ wherein at least one of the cathode and anode reactions involves one of these species. The source of $OH^-$, $H^-$, or $H^+$ as well as H may be water, and the source of $H^-$ or $H^+$ may be a hydride wherein at least one of the anode or cathode reactants may be a hydride. The anode reaction may form $H^+$, comprise a reaction of H or $H^-$ and $OH^-$ to form $H_2O$, comprise a reaction of $H^-$ to H, or comprise the oxidation of an element such as a metal. The cathode reaction may comprise the reaction of $M^+$ to M, $H^+$ to H, or $H_2O$ to $OH^-$. The anode may be a source of metal such as alkali metal or a metal that forms a hydroxide, or a source of H such as a hydride. The electrolyte such as an aqueous electrolyte that may be a source of at least one of H, $H^+$, $H_2O$, and $OH^-$. The electrolyte may be a salt and an organic solvent, aqueous such as an aqueous base, or a molten salt such as a eutectic salt such as a mixture of alkali halides.

The case (i) *supra* involving the breaking of the H-O bond, H may be broken away by reaction with a metal formed at the cathode from reduction of the corresponding migrating ion. The metal atom may be a catalyst or source of catalyst such as Li, Na, or K. The oxygen of the OH or $OH^-$ may then form a very stable compound with the source of the OH or $OH^-$ group. The very stable compound may be an oxide such as a transition metal, inner transition metal, alkali metal, alkaline earth metal, or rare earth metal as well as another stable oxide such as one of Al, B, Si, and Te. Exemplary cells are [Li, Na, or K or a source thereof such as an alloy/Celgard LP 30/ rare earth or alkaline earth hydroxide such as $La(OH)_3$, $Ho(OH)_3$, $Tb(OH)_3$, $Yb(OH)_3$, $Lu(OH)_3$, $Er(OH)_3$, $Mg(OH)_2$, $Ca(OH)_2$, $Sr(OH)_2$, $Ba(OH)_2$ or oxyhydroxide such as HoO(OH), TbO(OH), YbO(OH), LuO(OH), ErO(OH), YO(OH), AlO(OH), ScO(OH), YO(OH), VO(OH), CrO(OH), MnO(OH) ($\alpha$-MnO(OH) groutite and $\gamma$-MnO(OH) manganite), FeO(OH), CoO(OH), NiO(OH), RhO(OH), GaO(OH), InO(OH), $Ni_{1/2}Co_{1/2}O(OH)$, and $Ni_{1/3}CO_{1/3}Mn_{1/3}O(OH)$]. In the case (ii) *supra,* H sources such as $H^+$, $H^-$, or $H_2O$ may undergo reduction or oxidation at an electrode to form an OH group from an O group of a compound or directly form an OH or $OH^-$ group from a source such as $H_2O$. The compound comprising a reactant that forms at least one of a hydroxyl or hydroxide group may be an oxide or oxyhydroxide. The oxide may be at least one of an alkali metal intercalated layered oxide, the alkali metal intercalated layered oxide deficient in alkali metal, and the corresponding layered oxide absent the alkali metal. Suitable layered oxides or metal intercalated oxides are those of the disclosure such as those of Li ion batteries such as $CoO_2$, $NiO_2$, $Li_xWO_3$, $Li_xV_2O_5$, $LiCoO_2$, $LiFePO_4$, $LiMn_2O_4$, $LiNiO_2$, $Li_2FePO_4F$, $LiMnPO_4$, $VOPO_4$ system, $LiV_2O_5$, $LiMgSO_4F$, $LiMSO_4F$ (M=Fe, Co, Ni, transition metal), $LiMPO_4F$ (M=Fe, Ti), $Li_x[Li_{0.33}Ti_{1.67}O_4]$, or $Li_4Ti_5O_{12}$, layered transition metal oxides such as Ni-Mn-Co oxides such as $LiNi_{1/3}Co_{1/3}Mn_{1/3}O_2$, and $Li(Li_aNi_xCo_yMn_z)O_2$, and $LiTi_2O_4$ wherein the compound may be deficient in at least some or all Li. In other embodiments, another layered chalcogenide may substitute for an oxide, and another alkali metal may substitute for a given one. Exemplary cells are [hydride such as R-Ni/aqueous base such as KOH (6 M to saturated) wherein the base may serve as a catalyst or source of catalyst such as K or $2K^+$/oxyhydroxide such as HoO(OH), TbO(OH), YbO(OH), LuO(OH), ErO(OH), YO(OH)], [hydride such as R-Ni/aqueous base such as KOH (6 M to saturated)/oxyhydroxide such as AlO(OH), ScO(OH), YO(OH), VO(OH), CrO(OH), MnO(OH) ($\alpha$-MnO(OH) groutite and $\gamma$-MnO(OH) manganite), FeO(OH), CoO(OH), NiO(OH), RhO(OH), GaO(OH), InO(OH), $Ni_{1/2}Co_{1/2}O(OH)$, and $Ni_{1/3}Co_{1/3}Mn_{1/3}O(OH)$)], [hydride such as R-Ni/aqueous base such as KOH (6 M to saturated)/ oxide such as MgO, CaO, SrO, BaO, $TiO_2$, $SnO_2$, $Na_2O$, $K_2O$, $MNiO_2$ (M = alkali such as Li or Na) and $CoO_2$, $NiO_2$, $Li_xWO_3$, $Li_xV_2O_5$, $LiCoO_2$, $LiFePO_4$, $LiMn_2O_4$, $LiNiO_2$, $Li_2FePO_4F$, $LiMnPO_4$, $VOPO_4$ system, $LiV_2O_5$, $LiMgSO_4F$, $LiMSO_4F$ (M=Fe, Co, Ni, transition metal), $LiMPO_4F$ (M=Fe, Ti), $Li_x[Li_{0.33}Ti_{1.67}O_4]$, or $Li_4Ti_5O_{12}$, layered transition metal oxides such as Ni-Mn-Co oxides such as $LiNi_{1/3}Co_{1/3}Mn_{1/3}O_2$, and $Li(Li_aNi_xCo_yMn_z)O_2$, and $LiTi_2O_4$ wherein the compound may be deficient in at least some or all Li, or a Fe(VI) ferrate salt such as $K_2FeO_4$ or $BaFeO_4$], [PtC($H_2$), PdC($H_2$), or R-Ni/proton conductor such as $H^+Al_2O_3$/rare earth or alkaline earth hydroxide such as $La(OH)_3$, $Ho(OH)_3$, $Tb(OH)_3$, $Yb(OH)_3$, $Lu(OH)_3$, $Er(OH)_3$, $Mg(OH)_2$, $Ca(OH)_2$, $Sr(OH)_2$, $Ba(OH)_2$ or oxyhydroxide such as HoO(OH), TbO(OH), YbO(OH), LuO(OH), ErO(OH), YO(OH), AlO(OH), ScO(OH), YO(OH), VO(OH), CrO(OH), MnO(OH) ($\alpha$-MnO(OH) groutite and $\gamma$-MnO(OH) manganite), FeO(OH), CoO(OH), NiO(OH), RhO(OH), GaO(OH), InO(OH), $Ni_{1/2}Co_{1/2}O(OH)$, and $Ni_{1/3}Co_{1/3}Mn_{1/3}O(OH)$ or oxide such as MgO, CaO, SrO, BaO, $TiO_2$, $SnO_2$, $Na_2O$, $K_2O$, $MNiO_2$ (M = alkali such as Li or Na), and $CoO_2$, $NiO_2$, $Li_xWO_3$, $Li_xV_2O_5$, $LiCoO_2$, $LiFePO_4$, $LiMn_2O_4$, $LiNiO_2$, $Li_2FePO_4F$, $LiMnPO_4$, $VOPO_4$ system, $LiV_2O_5$, $LiMgSO_4F$, $LiMSO_4F$ (M=Fe, Co, Ni, transition metal), $LiMPO_4F$ (M=Fe, Ti), $Li_x[Li_{0.33}Ti_{1.67}O_4]$, or $Li_4Ti_5O_{12}$, layered transition metal oxides such as Ni-Mn-Co oxides such as $LiNi_{1/3}Co_{1/3}Mn_{1/3}O_2$, and $Li(Li_aNi_xCo_yMn_z)O_2$, and $LiTi_2O_4$ wherein the compound may be deficient in at least some or all Li, or a Fe(VI) ferrate salt such as $K_2FeO_4$ or $BaFeO_4$], and [rare earth or alkaline earth hydroxide such as $La(OH)_3$, $Ho(OH)_3$, $Tb(OH)_3$,

$Yb(OH)_3$, $Lu(OH)_3$, $Er(OH)_3$, $Mg(OH)_2$, $Ca(OH)_2$, $Sr(OH)_2$, $Ba(OH)_2$ or oxyhydroxide such as HoO(OH), TbO(OH), YbO(OH), LuO(OH), ErO(OH), YO(OH), AlO(OH), ScO(OH), YO(OH), VO(OH), CrO(OH), MnO(OH) ($\alpha$-MnO(OH) groutite and $\gamma$-MnO(OH) manganite), FeO(OH), CoO(OH), NiO(OH), RhO(OH), GaO(OH), InO(OH), $Ni_{1/2}Co_{1/2}O(OH)$, and $Ni_{1/3}Co_{1/3}Mn_{1/3}O(OH)$ or oxide such as MgO, CaO, SrO, BaO, $TiO_2$, $SnO_2$, $Na_2O$, $K_2O$, $MNiO_2$ (M = alkali such as Li or Na) and $CoO_2$, $NiO_2$, $Li_xWO_3$, $Li_xV_2O_5$, $LiCoO_2$, $LiFePO_4$, $LiMn_2O_4$, $LiNiO_2$, $Li_2FePO_4F$, $LiMnPO_4$, $VOPO_4$ system, $LiV_2O_5$, $LiMgSO_4F$, $LiMSO_4F$ (M=Fe, Co, Ni, transition metal), $LiMPO_4F$ (M=Fe, Ti), $Li_x[Li_{0.33}Ti_{1.67}O_4]$, or $Li_4Ti_5O_{12}$, layered transition metal oxides such as Ni-Mn-Co oxides such as $LiNi_{1/3}Co_{1/3}Mn_{1/3}O_2$, and $Li(Li_aNi_xCo_yMn_z)O_2$, and $LiTi_2O_4$ wherein the compound may be deficient in at least some or all Li, or a Fe(VI) ferrate salt such as $K_2FeO_4$ or $BaFeO_4$/LiCl-KCl/hydride such as $TiH_2$, $ZrH_2$, $LaH_2$, or $CeH_2$]. Alternatively, in the case (iii) *supra,* the $OH^-$ group may form a hydroxide with an element such as a metal such as a transition, inner transition, alkali, alkaline earth, and rare earth metal, and Al. Exemplary cells are [Al, Co, Ni, Fe, Ag/aqueous base such as KOH (6 M to saturated) wherein the base may serve as a catalyst or source of catalyst such as K or $2K^+$/ oxide such as MgO, CaO, SrO, BaO, $TiO_2$, $SnO_2$, $Na_2O$, $K_2O$, $MNiO_2$ (M = alkali such as Li or Na) and $CoO_2$, $NiO_2$, $Li_xWO_3$, $Li_xV_2O_5$, $LiCoO_2$, $LiFePO_4$, $LiMn_2O_4$, $LiNiO_2$, $Li_2FePO_4F$, $LiMnPO_4$, $VOPO_4$ system, $LiV_2O_5$, $LiMgSO_4F$, $LiMSO_4F$ (M=Fe, Co, Ni, transition metal), $LiMPO_4F$ (M=Fe, Ti), $Li_x[Li_{0.33}Ti_{1.67}O_4]$, or $Li_4Ti_5O_{12}$, layered transition metal oxides such as Ni-Mn-Co oxides such as $LiNi_{1/3}Co_{1/3}Mn_{1/3}O_2$, and $Li(Li_aNi_xCo_yMn_z)O_2$, and $LiTi_2O_4$ wherein the compound may be deficient in at least some or all Li, or a Fe(VI) ferrate salt such as $K_2FeO_4$ or $BaFeO_4$, or oxyhydroxide such as HoO(OH), TbO(OH), YbO(OH), LuO(OH), ErO(OH), YO(OH), AlO(OH), ScO(OH), YO(OH), VO(OH), CrO(OH), MnO(OH) ($\alpha$-MnO(OH) groutite and $\gamma$-MnO(OH) manganite), FeO(OH), CoO(OH), NiO(OH), RhO(OH), GaO(OH), InO(OH), $Ni_{1/2}Co_{1/2}O(OH)$, and $Ni_{1/3}Co_{1/3}Mn_{1/3}O(OH)$]. In the reaction of the oxyhydroxide to hydroxide, hydrino formation mechanism (ii) *supra* may occur as well.

In an embodiment, the reactants of at least one half-cell are magnetized. Magnetic material such as magnetized particles such as iron, Alnico, rare earth such as neodymium or samarium-cobalt, or other such magnetic particles may be mixed with the reactants. In an embodiment, the magnetic particles do not particpate in the half-cell reaction, but provide a source of magnetic field. In another embodiment, the reactants are magnetized with a magnet external to the reactants. The magnetization may increase the rate of the hydrino reaction.

Reactant H and catalyst (H is included in the term catalyst of the disclosure) are formed by the migration of ions and electrons of the CIHT cell to cause the formation of hydrinos. The transition of H to lower states than n=1 results in the emission of continuum radiation. In an embodiment, the emission is converted to the flow of electrons at the anode. The positive anode can oxidize an anode half-cell reactant, and the electrons can reduce a cathode half-cell reactant. Exemplary cells are those of the disclosure having the anode in contact with a photo-assisted electrolysis material such as a semiconductor such as $SrTiO_3$ such as [Na $SrTiO_3$/BASENaOH], [Li $SrTiO_3$/olefin separator LP 40/CoO(OH)], [at least one of CNa and $C_yNaH_x$ $SrTiO_3$/aqueous Na salt/at least one of CNa, $C_{y'}NaH_{x'}$, HY, R-Ni, and $Na_4Mn_9O_{18}$ + carbon($H_2$)], [$LiV_2O_5$ CB($H_2$) or R-Ni $SrTiO_3$/aqueous $LiNO_3$/CB($H_2$) $LiMn_2O_4$] and [$LiV_2O_5$ $SrTiO_3$/aqueous LiOH/R-Ni].

In an embodiment, hydrinos formed from the disclosed hydrino reaction mixtures by the catalysis of hydrogen serve as the oxidant. Hydrinos, $H\left[\frac{a_H}{p}\right]$, react with electrons at the cathode 405 of the fuel cell to form hydrino hydride ions, $H^-(1/p)$. A reductant reacts with the anode 410 to supply electrons to flow through the load 425 to the cathode 405, and a suitable cation completes the circuit by migrating from the anode compartment 402 to the cathode compartment 401 through the salt bridge 420. Alternatively, a suitable anion such as a hydrino hydride ion completes the circuit by migrating from the cathode compartment 401 to the anode compartment 402 through the salt bridge 420.

The cathode half reaction of the cell is:

$$H\left[\frac{a_H}{p}\right]+e^- \rightarrow H^-\left(1/p\right) \qquad (418)$$

The anode half reaction is:

$$\text{reductant} \rightarrow \text{reductant}^+ + e^- \qquad (419)$$

The overall cell reaction is:

$$H\left[\frac{a_H}{p}\right]+\text{reductant} \rightarrow \text{reductant}^+ + H^-\left(1/p\right) \qquad (420)$$

The reductant may be any electrochemical reductant, such as zinc. In one embodiment, the reductant has a high oxidation potential and the cathode may be copper. In an embodiment, the reductant includes a source of protons wherein the protons may complete the circuit by migrating from the anode compartment 402 to the cathode compartment 401 through the salt bridge 420, or hydride ions may migrate in the reverse direction. Sources of protons include hydrogen, compounds comprising hydrogen atoms, molecules, and/or protons such as the increased binding energy hydrogen compounds, water, molecular hydrogen, hydroxide, ordinary hydride ion, ammonium hydroxide, and $HX$ wherein $X^-$ is a halogen ion. In an embodiment, oxidation of the reductant comprising a source of protons generates protons and a gas that may be vented while operating the fuel cell.

In another fuel cell embodiment, a hydrino source 430 communicates with vessel 400 via a hydrino passage 460. Hydrino source 430 is a hydrino-producing cell according to the present invention. In an embodiment, the cathode compartment is supplied with hydrinos or increased binding energy compounds produced by the hydrino reactions from reactants disclosed herein. The hydrinos may also be supplied to the cathode from the oxidant source by thermally or chemically decomposing increased binding energy hydrogen compounds. An exemplary source of oxidant 430 produced by the hydrino reactants comprises $M^{n+}$ $H^-\left(\frac{1}{p}\right)_n$ having a cation $M^{n+}$ (where $n$ is an integer) bound to a hydrino hydride ion such that the binding energy of the cation or atom $M^{(n-1)+}$ is less than the binding energy of the hydrino hydride ion $H^-\left(\frac{1}{p}\right)$. Other suitable oxidants undergo reduction or reaction to produce at least one of (a) increased binding energy hydrogen compound with a different stoichiometry than the reactants, (b) an increased binding energy hydrogen compound having the same stoichiometry comprising one or more increased binding energy species that have a higher binding energy than the corresponding species of the reactant(s), (c) hydrino or hydrino hydride, (d) dihydrino having a higher binding energy than the reactant dihydrino, or (e) hydrino having a higher binding energy than the reactant hydrino.

In certain embodiments, the power, chemical, battery and fuel cell systems disclosed herein that regenerate the reactants and maintain the reaction to form lower-energy hydrogen can be closed except that only hydrogen consumed in forming hydrinos need be replaced wherein the consumed hydrogen fuel may be obtained from the electrolysis of water. The fuel cell may be used for broad applications such as electric power generation such as utility power, cogeneration, motive power, marine power, and aviation. In the latter case, the CIHT cell may charge a battery as power storage for an electric vehicle.

The power may be controlled by controlling the cathode and anode half-cell reactants and reaction conditions. Suitable controlled parameters are the hydrogen pressure and operating temperature. The fuel cell may be a member of a plurality of cells comprising a stack. The fuel cell members may be stacked and may be interconnected in series by an interconnect at each junction. The interconnect may be metallic or ceramic. Suitable interconnects are electrically conducting metals, ceramics, and metal-ceramic composites.

In an embodiment, the cell is periodically reversed in polarity with an optional applied voltage to cause at least one of oxidation-reduction reaction products and hydrino products to be removed to eliminate product inhibition. The products may also be removed by physical and thermal methods such as ultrasound and heating, respectively.

## X. Chemical Reactor

The present disclosure is also directed to other reactors for producing increased binding energy hydrogen compounds of the present disclosure, such as dihydrino molecules and hydrino hydride compounds. Further products of the catalysis are power and optionally plasma and light depending on the cell type. Such a reactor is hereinafter referred to as a "hydrogen reactor" or "hydrogen cell." The hydrogen reactor comprises a cell for making hydrinos. The cell for making hydrinos may take the form of a chemical reactor or gas fuel cell such as a gas discharge cell, a plasma torch cell, or microwave power cell, and an electrochemical cell. Exemplary embodiments of the cell for making hydrinos may take the form of a liquid-fuel cell, a solid-fuel cell, a heterogeneous-fuel cell, and a CIHT cell. Each of these cells comprises: (i) a source of atomic hydrogen; (ii) at least one catalyst chosen from a solid catalyst, a molten catalyst, a liquid catalyst, a gaseous catalyst, or mixtures thereof for making hydrinos; and (iii) a vessel for reacting hydrogen and the catalyst for making hydrinos. As used herein and as contemplated by the present disclosure, the term "hydrogen," unless specified otherwise, includes not only proteum ($^1H$), but also deuterium ($^2H$) and tritium ($^3H$). In the case of the use of deuterium as a reactant of the hydrino reaction, relatively trace amounts of tritium or helium products of the heterogeneous fuels and solid fuels are expected.

Since alkali metals are covalent diatomic molecules in the gas phase, in an embodiment, the catalyst to form increased-binding-energy hydrogen compounds is formed from a source by a reaction with at least one other element.

The catalyst such as K or Li may be generated by the dispersion of K or Li metal in an alkali halide such as the KX or LiX to form KHX LiHX wherein X is halide. The catalyst K or Li may also be generated by the reaction of vaporized $K_2$ or $Li_2$ with atomic H to form KH and K or LiH and Li, respectively. The increased-binding-energy hydrogen compounds may be MHX wherein M is an alkali metal, H is hydrino hydride, and X is a singly negatively charged ion, preferably X is one of a halide and $HCO_3^-$. In an embodiment, the reaction mixture to form KHI or KHCl wherein H is hydrino hydride comprises K metal covered with the KX (X=Cl, I) and a dissociator, preferably nickel metal such as nickel screen and R-Ni, respectively. The reaction is carried out by maintaining the reaction mixture at an elevated temperature preferably in the range of 400-700 °C with the addition of hydrogen. Preferably the hydrogen pressure is maintained at a gauge pressure of about 5 PSI. Thus, MX is placed over the K such that K atoms migrate through the halide lattice and the halide serves to disperse K and act as a dissociator for $K_2$ that reacts at the interface with H from the dissociator such as nickel screen or R-Ni to form KHX.

A suitable reaction mixture for the synthesis of hydrino hydride compounds comprises at least two species of the group of a catalyst, a source of hydrogen, an oxidant, a reductant, and a support wherein the oxidant is a source of at least one of sulfur, phosphorous, and oxygen such as $SF_6$, $S$, $SO_2$, $SO_3$, $S_2O_5Cl_2$, $F_5SOF$, $M_2S_2O_8$, $S_xX_y$ such as $S_2Cl_2$, $SCl_2$, $S_2Br_2$, $S_2F_2$, $CS_2$, $Sb_2S_5$, $SO_xX_y$ such as $SOCl_2$, $SOF_2$, $SO_2F_2$, $SOBr_2$, P, $P_2O_5$, $P_2S_5$, $P_xX_y$ such as $PF_3$, $PCl_3$, $PBr_3$, $PI_3$, $PF_5$, $PCl_5$, $PBr_4F$, or $PCl_4F$, $PO_xX_y$ such as $POBr_3$, $POI_3$, $POCl_3$ or $POF_3$, $PS_xX_y$ such as $PSBr_3$, $PSF_3$, $PSCl_3$, a phosphorous-nitrogen compound such as $P_3N_5$, $(Cl_2PN)_3$, or $(Cl_2PN)_4$, $(Br_2PN)_x$ (*M* is an alkali metal, x and y are integers, X is halogen), $O_2$, $N_2O$, and $TeO_2$. The oxidant may further comprise a source of a halide, preferable fluorine, such as $CF_4$, $NF_3$, or $CrF_2$. The mixture may also comprise a getter as a source of phosphorous or sulfur such as MgS, and MHS (*M* is an alkali metal). A suitable getter is an atom or compound that gives rise to an upfield shifted NMR peak with ordinary H and a hydrino hydride peak that is upfield of the ordinary H peak. Suitable getters comprise elemental S, P, O, Se, and Te or comprise compounds comprising S, P, O, Se, and Te. A general property of a suitable getter for hydrino hydride ions is that it forms chains, cages, or rings in elemental form, in doped elemental form, or with other elements that traps and stabilizes hydrino hydride ions. Preferably, the $H^-(1/p)$ can be observed in solid or solution NMR. In another, embodiment, either NaH, BaH, or HCl serves as the catalyst. A suitable reaction mixture comprises MX and M'HSO4 wherein M and M' are alkali metals, preferably Na and K, respectively, and X is a halogen, preferably Cl.

The reaction mixtures comprising at least one of (1) NaH catalyst, $MgH_2$, $SF_6$, and activated carbon (AC), (2) NaH catalyst, $MgH_2$, S, and activated carbon (AC), (3) NaH catalyst, $MgH_2$, $K_2S_2O_8$, Ag, and AC, (4) KH catalyst, $MgH_2$, $K_2S_2O_8$, and AC, (5) MH catalyst (M=Li, Na, K), Al or $MgH_2$, $O_2$, $K_2S_2O_8$, and AC, (6) KH catalyst, Al, $CF_4$, and AC, (7) NaH catalyst, Al, $NF_3$, and AC, (8) KH catalyst, $MgH_2$, $N_2O$, and AC, (9) NaH catalyst, $MgH_2$, $O_2$, and activated carbon (AC), (10) NaH catalyst, $MgH_2$, $CF_4$, and AC, (11) MH catalyst, $MgH_2$, (M=Li, Na, or K) $P_2O_5$ ($P_4O_{10}$), and AC, (12) MH catalyst, $MgH_2$, $MNO_3$, (M=Li, Na, or K) and AC, (13) NaH or KH catalyst, Mg, Ca, or Sr, a transition metal halide, preferably, $FeCl_2$, $FeBr_2$, $NiBr_2$, $MnI_2$, or a rare earth halide such as $EuBr_2$, and AC, and (14) NaH catalyst, Al, $CS_2$, and AC are suitable systems for generating power and also for producing lower-energy hydrogen compounds. In other embodiments of the exemplary reaction mixtures given supra, the catalyst cation comprises one of Li, Na, K, Rb, or Cs and the other species of the reaction mixture are chosen from those of reactions 1 through 14. The reactants may be in any desired ratios.

The hydrino reaction product is at least one of a hydrogen molecule and a hydride ion having a proton NMR peak shifted upfield of that or ordinary molecular hydrogen or hydrogen hydride, respectively. In an embodiment, the hydrogen product is bound to an element other than hydrogen wherein the proton NMR peak is shifted upfield of that of the ordinary molecule, species, or compound that has the same molecular formula as the product, or the ordinary molecule, species, or compound is not stable at room temperature.

The product molecular hydrino and hydrino hydride ion having a preferred 1/4 state may be observed using liquid NMR at about 1.22 ppm and -3.86 ppm, respectively, following extraction of the product mixture with an NMR solvent, preferably deuterated DMF.

In another embodiment, power and increased binding energy hydrogen compounds are produced by a reaction mixture comprising two or more of the following species; LiH, NaH, KH, Li, Na, K, $H_2$, a metal or metal hydride reductant, preferably $MgH_2$ or Al powder, a support such as carbon, preferably activated carbon, and a source of at least one of sulfur, phosphorous, and oxygen, preferably S or P powder, $SF_6$, $CS_2$, $P_2O_5$, and $MNO_3$ (M is an alkali metal). The reactants can be in any molar ratio. Preferably the reaction mixture comprises 8.1 mole % MH, 7.5 mole % $MgH_2$ or Al powder, 65 mole % AC, and 19.5 mole % S (M is Li, Na, or K) wherein the molar % of each species can be varied within a range of plus or minus a factor of 10 of that given for each species. A suitable reaction mixture comprises NaH, $MgH_2$ or Mg, AC, and S powder in these molar ratios. The product molecular hydrino and hydrino hydride ion having a preferred 1/4 state may be observed using liquid NMR at about 1.22 ppm and -3.86 ppm, respectively, following extraction of the product mixture with an NMR solvent, preferably deuterated DMF.

In another embodiment, power and increased binding energy hydrogen compounds are produced by a reaction

mixture comprising NaHS. The hydrino hydride ion may be isolated from NaHS. In an embodiment, a solid state reaction occurs within NaHS to form $H^-$ (1/4) that may be further reacted with a source of protons such as a solvent, preferably $H_2O$, to form $H_2(1/4)$.

Exemplary reaction mixtures to form molecular hydrino are 8 g NaH + 8 g Mg + 3.4 g LiCl, 8 g NaH + 8 g Mg + 3.4 g LiCl + 32 g WC, 4 g AC + 1 g $MgH_2$ + 1 g NaH + 0.01 mol $SF_6$, 5 g Mg + 8.3 g KH + 2.13 g LiCl, 20 g TiC + 5 g NaH, 3 g NaH + 3 g Mg + 10 g C nano, 5 g NaH + 20 g $Ni_2B$, 8 g TiC + 2 g Mg + 0.01 g LiH + 2.5 g LiCl + 3.07 g KCl, 4.98 g KH + 10 g C nano, 20 g TiC + 8.3 g KH + 5 g Mg + 0.35 g Li, 5 g Mg + 5 g NaH + 1.3 g LiF, 5 g Mg + 5 g NaH + 5.15 g NaBr, 8 g TiC + 2 g Mg + 0.01 g NaH + 2.5 g LiCl + 3.07 g KCl, 20 g KI + 1 g K + 15 g R-Ni, 8 g NaH + 8 g Mg + 16.64 g $BaCl_2$ + 32 g WC, 8 g NaH + 8 g Mg + 19.8 g $SrBr_2$ + 32 g WC, 2.13 g LiCl + 8.3 g KH + 5 g Mg + 20 g $MgB_2$, 8 g NaH + 8 g Mg + 12.7 g $SrCl_2$ + 32 g WC, 8 g TiC + 2 g Mg + 0.01 g LiH + 5.22 g LiBr + 4.76 g KBr, 20 g WC + 5 g Mg + 8.3 g KH +2.13 g LiCl, 12.4 g $SrBr_2$ + 8.3 g KH + 5 g Mg + 20 g WC, 2 g NaH + 8 g TiC + 10 g KI, 3.32g + KH + 2g Mg + 8g TiC 2.13g + LiCl, 8.3 g KH + 12 g Pd / C, 20 g TiC + 2.5 g Ca + 2.5 g CaH2, 20 g TiC + 5 g Mg, 20 g TiC + 8.3 g KH, 20 g TiC + 5 g Mg + 5 g NaH, 20 g TiC + 5 g Mg + 8.3 g KH + 2.13 g LiCl, 20 g TiC + 5 g Mg + 5 g NaH + 2.1 g LiCl, 12 g TiC + 0.1 g Li + 4.98 g KH, 20 g TiC + 5 g Mg + 1.66 g LiH, 4.98 g KH + 3g NaH + 12g TiC, 1.66 g KH + 1 g Mg + 4 g AC + 3.92 g $EuBr_3$, 1.66 g KH + 10 g KCl + 1 g Mg + 3.92 g $EuBr_3$, 5 g NaH + 5 g Ca + 20 g CA 11-300 + 15.45 g $MnI_2$, 20 g TiC + 5 g Mg + 5 g NaH + 5 g Pt/Ti, 3.32 g KH + 2 g Mg + 8 g TiC + 4.95 g $SrBr_2$, and 8.3 g KH + 5 g Mg + 20 g TiC + 10.4 g $BaCl_2$. The reaction may be run in the temperature range 100 °C to 1000 °C for 1 minutes to 24 hours. Exemplary temperature and time are 500 °C or 24 hours.

In an embodiment, hydrino hydride compounds may be purified. The purification method may comprise at least one of extraction and recrystallization using a suitable solvent. The method may further comprise chromatography and other techniques for separation of inorganic compounds known to those skilled in the art.

In an embodiment, the product molecular hydrino is trapped and stored in a cryogenically cooled membrane such as liquid-nitrogen cooled Mylar. In an embodiment, molecular hydrino $H_2(1/p)$, preferably $H_2(1/4)$, is a product that is further reduced to form the corresponding hydrides ions that may be used in applications such as hydride batteries and surface coatings. The molecular hydrino bond may be broken by a collisional method. $H_2(1/p)$ may be dissociated via energetic collisions with ions or electrons in a plasma or beam. The dissociated hydrino atoms may then react to form the desired hydride ions.

In a molten salt embodiment, power and increased binding energy hydrogen compounds are produced by a reaction mixture comprising an M-N-H system wherein M may be an alkali metal. Suitable metals are Li, Na, and K. For example, the reaction mixture may comprise at least one of $LiNH_2$, $Li_2NH$, $Li_3N$, and $H_2$ in a molten salt such as a molten eutectic salt such as a LiCl-KCl eutectic mixture. An exemplary reaction mixture is $LiNH_2$ in a molten eutectic salt such as LiCl-KCl (400-500C). Molecular hydrino and hydrino hydride product may be extracted with a solvent such as d-DMF and analyzed by proton NMR to identify the hydrino species products.

In an embodiment, hydrino hydride compounds are formed by a CIHT cell or a reaction mixture of the cathode and anode half-cell reactants. Exemplary CIHT cells or reaction mixtures of the cathode and anode half-cell reactants for forming hydrinos and hydrino hydride compounds are [M / KOH (saturated aq) + CG3401 / steam carbon + air or $O_2$] M = R-Ni, Zn, Sn, Co, Sb, Pb, In, Ge, [NaOH Ni($H_2$)/BASE/NaCl $MgCl_2$], [Na/BASE/NaOH], [$LaNi_5H_6$/ KOH (saturated aq) + CG3401 / steam carbon + air or $O_2$], [Li/Celgard LP 30/CoO(OH)], [$Li_3Mg$/LiCl-KCl/$TiH_2$ or $ZrH_2$], [$Li_3N$ TiC/LiCl-KCl/$CeH_2$ CB], and [Li/LiCl-KCl/$LaH_2$]. The product molecular hydrino and hydrino hydride ion having a preferred 1/4 state may be observed using liquid NMR at about 1.22 ppm and -3.86 ppm, respectively, following extraction of the product mixture with an NMR solvent, preferably deuterated DMF.

The anode may be a getter and a source of a migrating ion such as $Li^+$. A suitable anode is $Li_3Mg$. The cathode may be a modified carbon such as $HNO_3$ intercalated carbon and may further comprise hydrogen. The $HNO_3$ may react with hydrino hydride ions at a slower rate according to their stability to select for those with high p quantum number such as the hydrino hydride ion $H^-(1/9)$.

In an embodiment, a hydrino species such as molecular hydrino or hydrino hydride ion is synthesized by the reaction of H and at least one of OH and $H_2O$ catalyst. The hydrino species may be produced by at least two of the group of a metal such as an alkali, alkaline earth, transition, inner transition, and rare earth metal, Al, Ga, In, Ge, Sn, Pb, As, Sb, and Te, a metal hydride such as $LaNi_5H_6$ and others of the disclosure, an aqueous hydroxide such as an alkaline hydroxide such as KOH at 0.1 M up to saturated concentration, a support such as carbon, Pt/C, steam carbon, carbon black, a carbide, a boride, or a nitrile, and oxygen. Suitable reaction mixtures to form hydrino species such as molecular hydrino are (1) Co PtC KOH (sat) with and without $O_2$; (2) Zn or Sn + $LaNi_5H_6$ + KOH (sat), (3) Co, Sn, Sb, or Zn + $O_2$ + CB + KOH (sat), (4) Al CB KOH (sat), (5) Sn Ni-coated graphite KOH (sat) with and without $O_2$, (6) Sn + SC or CB + KOH (sat) + $O_2$, (7) Zn Pt/C KOH (sat) $O_2$, (8) Zn R-Ni KOH (sat) $O_2$, (9) Sn $LaNi_5H_6$ KOH (sat) $O_2$, (10) Sb $LaNi_5H_6$ KOH (sat) $O_2$, and (11) Co, Sn, Zn, Pb, or Sb + KOH (Sat aq) + $K_2CO_3$ + CB-SA. The production of $H_2(1/4)$ was confirmed by the large 1.23 ppm peak in dDMF from these reaction mixtures. In an embodiment, the reaction mixture comprises and oxidant such as at least one of $PtO_2$, $Ag_2O_2$, $RuO_2$, $Li_2O_2$, YOOH, LaOOH, GaOOH, InOOH, MnOOH, AgO, and $K_2CO_3$. In an embodiment, the gas collection may occur after any $H_2$ and $H_2O$ evolution occur wherein $H_2(1/p)$

gas is still being evolved from the reactants. The evolution may be due to the slow reaction of $H^-(1/p)$ with water to form $H_2(/p)$ such as the reaction $H^-(1/4) + H_2O$ to $H_2(1/4)$.

In an embodiment, a hydrino species such as molecular hydrino or hydrino hydride ion is synthesized by the reaction of H and at least one of $MNH_2$ (M =alkali) or $SH_2$ catalyst. The hydrino species may be produced by at least two of the group of a metal such as an alkali, alkaline earth, transition, inner transition, and rare earth metal, Al, Ga, In, Ge, Sn, Pb, As, Sb, and Te, a source of hydrogen such as a metal hydride such as an alkali hydride such as LiH, NaH, or KH and others of the disclosure or $H_2$ gas, a source of sulfur such as $SF_6$, S, $K_2S_2O_8$, $CS_2$, $SO_2$, $M_2S$, MS, (M is a metal such as alkali or transition metal), $Sb_2S_5$, or $P_2S_5$, a source of N such as $N_2$ gas, urea, $NF_3$, $N_2O$, $LiNO_3$, NO, $NO_2$, $Mg(NH_2)_2$, $Mg_3N_2$, $Ca_3N_2$, $M_3N$, $M_2NH$, or $MNH_2$ (M is an alkali metal), a support such as carbon, Pt/C, steam carbon, carbon black, a carbide, a boride, or a nitrile. Suitable reaction mixtures to form hydrino species such as molecular hydrino are LiH, KH, or NaH, one of $SF_6$, S, $K_2S_2O_8$, $CS_2$, $SO_2$, $M_2S$, MS, (M is a metal such as alkali or transition metal), $Sb_2S_5$, $P_2S_5$, $N_2$ gas, urea, $NF_3$, $N_2O$, $LiNO_3$, NO, $NO_2$, $Mg(NH_2)_2$, $Mg_3N_2$, $Ca_3N_2$, $M_3N$, $M_2NH$, and $MNH_2$ (M is an alkali metal), and a support such as carbon, Pt/C, steam carbon, carbon black, a carbide, a boride, or a nitrile.

In an embodiment the hydrino gas is released from a solid or liquid containing hydrinos such a hydrino reaction product by heating. Any gas other than molecular hydrino such as solvent such as $H_2O$ may be condensed using for example a condensor. The condensate may be refluxed. The molecular hydrino gas may be collected free of other gases by fractional distillation. Also, ordinary hydrogen may be removed with a recombiner or by combustion and removal of $H_2O$ by distillation. Hydrino species such as molecular hydrino may be extracted in a solvent such as an organic solvent such as DMF and purified from the solvent by means such as heating and optionally distillation of the molecular hydrino gas from the solvent. In an embodiment, the hydrino species-containing product is extracted with a solvent such as an organic solvent such as DMF, and the solvent is heated and optionally refluxed to release hydrino gas that is collected. The hydrino gas may also be obtained by using a reaction mixture comprising a support or additive that does not absorb the gas extensively such as a carbide such as TiC or TaC or LaN.

The transfer of an integer of 27.2 eV from atomic H or hydrino to another H or hydrino causes the formation of fast protons in order to conserve kinetic energy. In an embodiment, the hydrino reaction is used to create fast $H^+$, $D^+$, or $T^+$ in order to cause fusion of the high-energy nuclei. The reaction system may be a solid fuel of the disclosure that may further comprise hydrinos such as at least one of molecular hydrino, hydrino hydride compounds, and hydrino atoms that undergo further catalysis to form fast H when the hydrino reaction is initiated. The initiation may be by heating, or by particle, plasma, or photon bombardment. An exemplary reaction is a solid fuel of potassium-doped iron oxide in a chamber of low-pressure deuterium gas wherein the hydrino reaction involving some inherent hydrino species is initiated by a high-power laser pulse. An exemplary pressure range is about $10^{-5}$ to 1 mbar. An exemplary laser is a Nd:YAG laser with a power of about 100 mJ at 10 Hz, 564 nm light, with a lens with f= 400 mm. Other high power density lasers are sufficient as known by those skilled in the Art.

## XI. Experimental

### A. Water-Flow. Batch Calorimetry

The energy and power balance of the catalyst reaction mixtures listed on the righthand side of each entry infra was obtained using cylindrical stainless steel reactors of approximately 130.3 $cm^3$ volume (1.5" inside diameter (ID), 4.5" length, and 0.2" wall thickness) or 1988 $cm^3$ volume (3.75" inside diameter (ID), 11" length, and 0.375" wall thickness) and a water flow calorimeter comprising a vacuum chamber containing each cell and an external water coolant coil that collected 99+% of the energy released in the cell to achieved an error < $\pm$1%. The energy recovery was determined by integrating the total output power $P_T$ over time. The power was given by

$$P_T = \dot{m} C_p \Delta T \quad (421)$$

where $\dot{m}$ was the mass flow rate, $C_p$ was the specific heat of water, and $\Delta T$ was the absolute change in temperature between the inlet and outlet. The reaction was initiated by applying precision power to external heaters. Specially, 100-200 W of power (130.3 $cm^3$ cell) or 800-1000 W (1988 $cm^3$ cell) was supplied to the heater. During this heating period, the reagents reached a hydrino reaction threshold temperature wherein the onset of reaction was typically confirmed by a rapid rise in cell temperature. Once the cell temperature reached about 400-500 °C the input power was set to zero. After 50 minutes, the program directed the power to zero. To increase the rate of heat transfer to the coolant, the chamber was re-pressurized with 1000 Torr of helium, and the maximum change in water temperature (outlet minus inlet) was approximately 1.2 °C. The assembly was allowed to fully reach equilibrium over a 24-hour period as confirmed by the observation of full equilibrium in the flow thermistors.

In each test, the energy input and energy output were calculated by integration of the corresponding power.

The thermal energy in the coolant flow in each time increment was calculated using Eq. (421) by multiplying volume flow rate of water by the water density at 19 °C (0.998 kg/liter), the specific heat of water (4.181 kJ/kg °C), the corrected temperature difference, and the time interval. Values were summed over the entire experiment to obtain the total energy output. The total energy from the cell $E_T$ must equal the energy input $E_{in}$ and any net energy $E_{net}$. Thus, the net energy was given by

$$E_{net} = E_T - E_{in}. \quad (422)$$

From the energy balance, any excess heat $E_{ex}$ was determined relative to the maximum theoretical $E_{mt}$ by

$$E_{ex} = E_{net} - E_{mt}. \quad (423)$$

The calibration test results demonstrated a heat coupling of better than 98% of the resistive input to the output coolant, and zero excess heat controls demonstrated that the with calibration correction applied, the calorimeter was accurate to within less than 1% error. The results are given as follows where Tmax is the maximum cell temperature, Ein is the input energy, and dE is the measured output energy in excess of the input energy. All energies are exothermic. Positive values where given represent the magnitude of the energy. In experiments with bulk catalysts such as Mg with a support such as TiC, $H_2$ was present from dehydriding of the metal of the vessel as confirmed by mass spectroscopy and gas chromatography.

**Calorimetry Results**

Cell#4056-092310WFCKA4: 1.5" LDC; 5.0g NaH-16+5.0g Mg-17+19.6g BaI2-6+20.0g TiC-141; TSC: No; Tmax: 459 C; Ein: 193 kJ; dE: 7kJ; Theoretical Energy: 1.99 kJ; Energy Gain: 3.5

Cell#3017-080210WFCKA2: 1.5" LDC; 5.0g NaH-16+5.0g Mg-16+10.45g EuF3-1+20.0g TiC-135; TSC: Small; Tmax: 474 C; Ein: 179 kJ; dE: 16 kJ; Theoretical Energy: 8.47 kJ; Energy Gain: 1.9

Cell#3004-072810WFCKA1: 1.5" LDC; 8.0g NaH-17+8.0g Mg-2+3.4g LiCl-3+32.0g TiC-133 1g of mixture for XRD; TSC: No; Tmax: 408 C; Ein: 174 kJ; dE: 10 kJ; Theoretical Energy: 2.9 kJ; Energy Gain: 3.4

Cell#2088-072310WFCKA2: 1.5" LDC; 5.0g NaH-16+5.0g Mg-16+15.6g EuBr2-3+20.0g TiC-137; TSC: No; Tmax: 444 C; Ein: 179 kJ; dE: 12 kJ; Theoretical Energy: 1.48 kJ; Energy Gain: 8.1

Cell#2087-072310WFCKA3: 1.5" LDC; 5.0g NaH-16+5.0g Mg-16+15.6g EuBr2-3+20.0g TiC-137; TSC: No; Tmax: 449 C; Ein: 179 kJ; dE: 10 kJ; Theoretical Energy: 1.48 kJ; Energy Gain: 6.7

Cell#2005-062910WFCKA1: 1.5" LDC; 8.3g KH-32+5.0g Mg-15+7.2g AgCl-AD-6+20.0g TiC-132; TSC:200-430C; Tmax: 481 C; Ein: 177kJ; dE: 21 kJ; Theoretical Energy: 14.3 kJ; Energy Gain: 1.5

Cell# 4870-062410WFJL3 (1.5" HDC): 20g TiC#129 + 8.3g KH#32 + 2.13g LiCl#6;□TSC: No.; Tmax: 434C; Ein: 244.2 kJ; dE: 5.36 kJ; Theoretical: -3.03 kJ; Gain: 1.77.

Cell#1885-62310WFCKA4: 1.5" LDC; 8.3g KH-32+5.0g Mg-15+10.4g BaCl2-7+20.0g TiC-129; TSC: No; Tmax: 476 C; Ein: 203 kJ; dE: 8 kJ; Theoretical Energy: 4.1 kJ; Energy Gain: 1.95

Cell#1860-061610WFCKA3: 1.0" HDC; 3.0g NaH-19+3.0g Mg-14+7.42g SrBr2-5+12.0g TiC-128; TSC: No; Tmax: 404 C; Ein: 137 kJ; dE: 4 kJ; Theoretical Energy: 2.1 kJ; Energy Gain: 2.0

Cell# 579-061110WFRC1: (< 500 C) 8.3 g KH-32 + 5 g KOH-1 + 20 g TiC-127; TSC: no; Tmax: 534 C ; Ein: 292.4 kJ; dE: 8 kJ; Theoretical Energy: 0 kJ; Energy gain, infinity.

Cell#1831-060810WFCKA4: 1.5" LDC; 8.3g KH-31+5.0g Mg-13+12.37g SrBr2-4+ 20.0g TiC-126; TSC: No; Tmax: 543 C; Ein: 229 kJ; dE: 17 kJ; Theoretical Energy: 6.7 kJ; Energy Gain: 2.5

Cell#1763-051410WFCKA2: 1.5" HDC; 13.2g KH-24+8.0g Mg-9+16.64g BaCl2-SD-7Testing+32.0g TiC-105 ; TSC: No; Tmax: 544 C; Ein: 257 kJ; dE: 17 kJ; Theoretical Energy: 6.56 kJ; Energy Gain: 2.6

Cell# 4650-051310WFGH2 (1.5" HDC): 20g MgB2#4 + 8.3g KH#28 + 0.83g KOH#1; TSC: No.; Tmax: 544C; Ein: 311.0 kJ; dE: 9.31 kJ; Theoretical: 0.00 kJ; Gain: ~.

Cell# 4652-051310WFGH5 (1.5" HDC): 20g TiC#120 + 5g Mg#12 + 1g LiH#2 + 2.5g LiCl#4 + 3.07g KCl#2; TSC: No.; Tmax: 589C; Ein: 355.0 kJ; dE: 8.15 kJ; Theoretical: 0.00 kJ; Gain: ~.

Cell#1762-051310WFCKA1: 1.5" HDC; 13.2g KH-24+8.0g Mg-9+19.8g SrBr2-AD-3+32.0g TiC-124 testing; TSC: No; Tmax: 606 C; Ein: 239 kJ; dE: 20 kJ; Theoretical Energy: 10.7 kJ; Energy Gain: 1.87

Cell# 504-043010WFRC4: 0.83 g KOH-1 + 8.3 g KH-27 + 20 g CB-S-1; TSC: no; Tmax: 589 C; Ein: 365.4 kJ; dE: 5 kJ; Theoretical Energy: 0 kJ; Energy Gain: infinity.

Cell# 4513-041210WFGH5 (1.5" HDC): 20g B4C#1 + 8.3g KH#26 + 0.83g KOH#1; TSC: not observed; Tmax: 562C; Ein: 349.2 kJ; dE: 8.85 kJ; Theoretical: 0.00 kJ; Gain: ~.

Cell # 403-032510WFRC3: 8.3 g KH-23 + 5 g KOH-1 + 20 g TiC-112; TSC: no; Tmax: 716 C; Ein: 474.9 kJ; dE: 13 kJ; Theoretical Energy: 0 kJ; Energy Gain: Infinity.

B. Fuels Solution NMR

Representative reaction mixtures for forming hydrino comprise (i) at least one catalyst or source of catalyst and hydrogen such as one chosen from Li, Na, K, LiH, NaH, and KH, (ii) at least one oxidant such as one chosen from $SrCl_2$, $SrBr_2$, $SrI_2$, $BaCl_2$, $BaBr_2$, $MgF_2$, $MgCl_2$, $CaF_2$, $MgI_2$, $CaF_2$, $CaI_2$, $EuBr_2$, $EuBr_3$, $FeBr_2$, $MnI_2$, $SnI_2$, $PdI_2$, InCl, AgCl, $Y_2O_3$, KCl, LiCl, LiBr, LiF, KI, RbCl, $Ca_3P_2$, $SF_6$, $Mg_3As_2$, and AlN, (iii) at least one reductant such as one chosen from Mg, Sr, Ca, $CaH_2$, Li, Na, K, KBH4, and $NaBH_4$, and (iv) at least one support such as one chosen from TiC, TiCN, $Ti_3SiC_2$, $YC_2$, $CrB_2$, $Cr_3C_2$, $GdB_6$, Pt/Ti, Pd/C, Pt/C, AC, Cr, Co, Mn, Si nanopowder (NP), MgO, and TiC. In other embodiments, the electrolyte of CIHT cell comprised the reaction product. 50 mg of reaction product of the reaction mixtures were added to 1.5 ml of deuterated N,N-dimethylformamide-d7 ($DCON(CD_3)_2$) DMF-d7, (99.5% Cambridge Isotope Laboratories, Inc.) in a vial that was sealed with a glass TEFLON™ valve, agitated, and allowed to dissolve over a 12 hour-period in a glove box under an argon atmosphere. The solution in the absence of any solid was transferred to an NMR tube (5 mm OD, 23 cm length, Wilmad) by a gas-tight connection, followed by flame-sealing of the tube. The NMR spectra were recorded with a 500 MHz Bruker NMR spectrometer that was deuterium locked. The chemical shifts were referenced to the solvent frequency such as DMF-d7 at 8.03 ppm relative to tetramethylsilane (TMS).

The hydrino hydride ion $H^-(1/4)$ was predicted to be observed at about -3.86 ppm, and molecular hydrino $H_2(1/4)$ was predicted to be observed at 1.21 ppm relative to TMS. The position of occurrence of these peaks with the shift and intensity for a specific reaction mixture are given in TABLE 6.

TABLE 6. The $^1$H solution NMR following DMF-d7 solvent extraction of the products of the hydrino catalyst systems.

| Reactants | $H_2(1/4)$ or $H^-(1/4)$ Peak Position and Intensity |
|---|---|
| 20 g TiC + 5 g Mg + 5 g NaH + 2.13 g LiCl | 1.21 ppm medium |
| 7.95 g $SrCl_2$ + 8.3 g KH + 5 g Mg + 20 g TiC | 1.21 ppm medium |
| 20 g TiC + 8.3 g KH + 5 g Mg + 12.4 g $SrBr_2$ | 1.20 ppm medium |
| 1.66 g KH + 15 g KCl + 1 g Mg + 3.92 g EuBr3 | 1.22 ppm strong |
| 3.32 g KH + 8 g AC | 1.21 ppm very strong |
| 1.66 g KH + 1 g Mg pow. + 3.92 g $EuBr_3$ | 1.22 ppm strong |
| 1.66 g KH + 1 g Mg pow. + 1g AC + 3.92 $EuBr_3$ | 1.22 ppm, strong |
| 20 g AC + 5 g Mg + 8.3 g KH + 15.6 g $EuBr_2$ | 1.22 ppm peak |
| 3.32 g KH + 2 g Mg + 8 g TiC + 6.18 g $MnI_2$ | 1.24 ppm |
| 3 g NaH + 11.1 g Sr + 12 g AC + 8.4 g $SnBr_2$ | 1.22 ppm, clear |
| 1 g NaH + 1 g $MgH_2$ + 4 g AC + 2.2 g $NiBr_2$ | 1.23 ppm, clear |
| 1.5 g InCl + 1.66 g KH + 1 g Mg + 4 g $YC_2$ | 1.22 ppm strong |
| 8.3 g KH + 5 g Mg + 20 g TiC + 10.4 g $BaCl_2$ | 1.22 ppm |
| 1 g NaH + 1 g $MgH_2$ + 4 g CA + 0.01 mol $SF_6$ | strong -3.85 ppm |

(continued)

| Reactants | $H_2(1/4)$ or $H^-(1/4)$ Peak Position and Intensity |
|---|---|
| 8.3 g KH + 5.0 g Mg + 20 g CA + 9.36 g AgCl | 1.22 ppm strong and -3.85 ppm weak |

C. Exemplary Regeneration Reactions

Alkaline earth or lithium halides were formed by reacting an alkaline earth metal or lithium hydride (or lithium) with the corresponding alkali halide. The reactant loadings, reaction conditions, and XRD results are given in TABLE 7. Typically, a two-to-one molar mixture of alkali halide and alkaline earth metal or a one-to-one molar mixture of alkali halide and Li or LiH were placed in the bottom of a crucible made with a ~25.4 cm long, 1.27-1.9 cm OD stainless steel (SS) tube (open at one end) in a 2.54 cm OD vacuum-tight quartz tube (open at one end). The open end of the SS tube was placed about ~2.54 cm outside of the furnace such that any alkali metal formed during the reaction cooled and condensed outside the heating zone to avoid any corrosion reaction between the alkali metal and quartz tube. The setup was oriented horizontally to increase the surface area of the heated chemicals. The reaction was run at 700-850 °C for 30 minutes either under vacuum, or under 1 atm of Ar gas followed by evacuating the alkali metal for 30 minutes at a similar temperature. In another setup, the reactants were placed in the SS crucible, and the melt was sparged (10 sccm) with dry Ar for mixing. The Ar was supplied through a needle having its opening at the bottom of the melt. Alkali metal was evaporated from the hot zone. After reaction, the reactor was cooled down to room temperature and transferred to a glove box for product collection. XRD was used to identify the product. The sample was prepared in a glove box by pulverizing the product and loading it into a Panalytical holder that was sealed with a plastic cover film. The reactant amounts, temperature, duration, and XRD results are given in TABLE 7 demonstrating that the halide hydride exchange reaction is thermally reversible.

TABLE 7. Reactant amounts, temperature, duration, and XRD results of regeneration reactions. Oxide was from pan XRD holder air leak.

| Regeneration Reactants | XRD (wt %) | | Notes |
|---|---|---|---|
| | | | |
| 0.84g Ca + 5.0g KBr, 730°C, 3h, vacuum. | $CaBr_2$<br>Ca<br>CaBrH<br>KOH | 87.0 ± 1.1% (814 Å)<br>4.5 ± 0.1% (308 Å)<br>1.8 ± 0.2% (904 Å)<br>6.7 ± 0.1% (922 Å) | 4.0g white solid, 1.5g K deposit |
| | | | |
| 1.3g Sr + 3.5g KBr; 780C, 30 min, 1 atm Ar; 780C, 30 min, vacuum; | Major:<br>Minor:<br>Trace: | $SrBr_2$ (307 Å)<br><br>Unknown (234 Å) | 2.8g light purple powder. |
| 7.1g (0.060 mol) KBr + 2.6g (0.030 mole) Sr in SS crucible at 780°C at under vacuum for 0.5 hour. | $SrBr_2$<br>SrO<br>$Sr_4OBr_6$ | 92.3 ± 1.4% (>1,000 Å)<br>2.1 ± 0.1% (736 Å)<br>5.6 ± 0.3% (332 Å) | 2.0 g, purple colored crystalline. |
| | | | |
| 3.68g Ba + 4.00g KCl, 780C, 1 atm Ar, 30 min; 780C, vacuum, 30 min; 2.8 product, white solid | $BaCl_2$<br>$BaCl_2(H_2O)_2$<br>KCl<br>K | 81.5 ± 1.2% (446 Å)<br>15.9 ± 0.2% (912 Å)<br>1.5 ± 0.2% (>1,000 Å)<br>1.1 ± 0.2% (>1,000 Å) | 2.8g white powder. |
| | | | |
| 2.2g Ba + 4.1g KBr+ 1.0g Mg, 3.65g SS wool, in SS vessel, Ar was bubbled through the chemical (10 sccm) | Major:<br>Unknown<br>Minor: | $BaBr_2$ (741 Å)<br>(300 Å)<br>KBr (305 Å) | 1.5g product was collected. |
| | | | |
| 4.00g KCl + 0.426g LiH --> LiCl + K + H2; 760C, 1 atm Ar for 30 min; followed by 720C, vacuum, 30 min | LiCl<br>KCl<br>LiCl(H2O) | 87.5 ± 1.2% (611 Å)<br>9.6 ± 0.4% (326 Å)<br>2.9 ± 0.2% (209Å) | 1.8g grey powder |
| | | | |

(continued)

| Regeneration Reactants | XRD (wt %) | | Notes |
|---|---|---|---|
| 0.35g Li + 5.95g KBr -> LiBr + K; 730C, 30 min, 1 atm Ar; followed by 600C, 30 min, evacuation | LiBr<br>KBr | 72.9 ± 0.4% (709Å)<br>27.1 ± 0.2% (652 Å) | 1.5 g product, white solid. |
| | | | |
| 0.544g LiH + 4.00g NaCl 780C, 1atm, Ar, 30 min; followed by 720C, vacuum, 30 min. | LiCl<br>NaCl | 91.0 ± 1.1% (220 Å)<br>9.0 ± 0.2% (361 Å) | 2.6g white powder, 1.2g Na. |

D. Exemplary CIHT Cell Test Results

Molten-salt CIHT cells, each comprising an anode, a eutectic molten salt electrolyte, and a cathode contained in an inert alumina crucible were assembled in a glove box having an oxygen-free argon atmosphere and were heated under an argon atmosphere in a glove box. Other molten cells assembled and discharged in an argon atmosphere each comprised a molten Na anode in a BASE tube and a NaOH cathode in a Ni crucible with Ni electrodes. In a third-type of CIHT cell, Na was replaced by NaOH and a H source, Ni($H_2$), and the cathode comprised a eutectic mixture such as $MgCl_2$-NaCl or an molten element such as Bi. A fourth type comprised a saturated aqueous KOH electrolyte, a metal or metal hydride anode and an oxygen reduction cathode such as steam carbon with the cell sealed in a membrane to retain $H_2O$ but allow $O_2$ permeation. A fifth type comprised a hydrogen permeable anode such as Ni($H_2$), a molten hydroxide electrolyte such as LiOH-LiBr, and a Ni cathode open to air. The results from exemplary cells designated [anode/electrolyte/cathode] such as [Ni($H_2$)/MOH or M$(OH)_2$-M'X or M'$X_2$/Ni] M and M' are one of Li, Na, K, Rb, Cs, Mg, Ca, Sr, and Ba; X is one of hydroxide, halide, sulfate, and carbonate, [M/KOH (saturated aq) + CG3401 / steam carbon air] M is one of R-Ni, Zn, Sn, Co, Cd, Sb, and Pb, [NaOH Ni($H_2$)/BASE/NaCl $MgCl_2$], [Na/BASE/NaOH], [$LaNi_5H_6$/KOH (saturated aq) + CG3401/steam carbon air], [Li/Celgard LP 30/CoO(OH)], [$Li_3Mg$/LiCl-KCl/$TiH_2$], [$Li_3N$ TiC/LiCl-KCl/$CeH_2$ CB], and [Li/LiCl-KCl/$LaH_2$] are given as follows:

031111XY1-421(Ni(H2)/NaOH-NaI/Ni): molten salt cell

- Anode: Ni tube (1/8 inch) flow through H2.
- Cathode: Ni foil
- Electrolyte: 64.14 g NaOH +59.46 g NaI (mol ratio 0.8:0.2)
- Temperature: 500 °C (real T inside the cell 450°C)

Voltage 0-5h with 499 ohm load = 0.85-0.86 V; >5h on steady voltage = 0.55-0.58 V

031011XY5-420(LaNi5/KOH/SC): Demo cell, fourth unit

- Anode: LaNi5 taken from commercial Ni-MH battery.
- Cathode: Steam carbon mixed with saturated KOH
- Separator: Celgard 3501
- Electrolyte: saturated KOH
- Discharge functions: constant current 400 mA
  Discharge capacity, 7.62 Ah, discharge energy, 4.46Wh.
- 031111GZC1-428: NaOH + Ni(H2)/Na-BASE/NaCl + SrCl2(MP=565C)
- 2.75" Alumina Crucible
- Electrolyte Mix: 28.3gNaCl + 82g SrCl2(MP=565)
- Electrode: H2 in 1/8" Ni tube(anode), Ni foil(cathode)
- T=650C (real T in the melt: 600C), PH2=1Psig.

(1) OCV=1.44V with H2.
(2) with 106.5 ohm, CCV=0.2V (stable).

- 030911GZC6-423: Ni(H2)/Sr(OH)2(MP=375C)/Ni
- 2.75" Alumina Crucible
- Electrolyte Mix: 80g Sr(OH)2(MP=375C)
- Electrode: H2 in 1/8" Ni tube(anode), Ni foil(cathode)
- T=600C (real T in the melt: 378C), PH2=800torr

  (1) OCV=0.96V.
  (2) With 100.1 ohm load, CCV stabilized at ~0.8V. Added H2O to replace that lost to dehydration.

030911XY2-409(TiMn2/KOH/SC): Unsealed

- Anode: TiMn2 powder mixed with saturated KOH, net TiMn2 =0.097 g.
- Cathode: Steam carbon mixed with saturated KOH, net SC =0.132 g
- Separator: Celgard 3501
- Electrolyte: saturated KOH
- Discharge function: constant current

The cell was frequently discharged/charged. The cell was charged at constant current of 1 mA for 2 s, then discharged at constant current of 1 mA for 20 s.
Total Energy = 32.8 J; Specific energy = 93.8 Wh/kg; Specific Capacity = 139.2 mAh/; Energy gain = 10X.

030811XY1-396(Sn+KI/KOH/SC): Unsealed

- Anode: Sn powder and KI powder (90:10 mass ratio) mixed with saturated KOH, net Sn=0.11 g.
- Cathode: Steam carbon mixed with saturated KOH, net SC =0.182 g
- Separator: Celgard 3501
- Electrolyte: saturated KOH
- Discharge load: 1000 ohms

Total Energy = 91.6 J; Specific Energy = 231.4 Wh/kg

030711XY1-391(Ni(H2)/LiOH-LiF/Ni): molten salt cell

- Anode: Ni tube (1/8 inch) flow through H2.
- Cathode: Ni foil
- Electrolyte: 38.40 g LiOH + 10.40 g LiF (0.8:0.2 Mol ratio)
- Temperature: 550 °C (real T inside the cell 500 °C)

Discharge at 499 ohm, the cell voltage is between 0.90-1.0V.
Discharge at 249 ohm, the cell voltage is between 0.80-0.9V.
Discharge at 100 ohm, the cell voltage is between 0.55-0.65V.
Steady voltage >45h, and running.

HT cell: (Hydroxide molten eutectic system)

- 030911GZC6-423: Ni(H2)/Sr(OH)2(MP=375C)/Ni
- 2.75" Alumina Crucible
- Electrolyte Mix: 80g Sr(OH)2(MP=375C)
- Electrode: H2 in 1/8" Ni tube(anode), Ni foil(cathode)
- T=600C (real T in the melt: 378C), PH2=800torr

  (1) OCV=0.96V.
  (2) With 100.1 ohm load, CCV stabilized at ~0.8V.

CIHT# 022211JL1: [NaOH + Ni(H2) / Na-BASE / Bi] (E° Theo = -0.6372V)

- Anode: 1.5g NaOH#5 + 1/16 Ni tube @ ~0.8 PSIg H2
- Cathode: 5g Bi

- OCV -> 0.8706V
- CCV(1000) -> Stable at 0.2634V
- Data collected >1400 mins and stopped.

Cell# 030411RC1-363: [La2Co1Ni9Hx (x<2)/KOH+ TBAC/SC+PVDF] sealed in the plastic bag (O2 permeable) at RT.

- Electrolyte: Saturated KOH solution + 0.5 wt% TBAC (tetrabutylammonium chloride, cationic detergents).
- Separator: CG3501.
- Anode: 250 mg wet La2Co1Ni9Hx (containing ~ 200 mg La2Co1Ni9Hx) with SS disc current collector.
- Cathode: Pellet of 126 mg SC + 14 mg PVDF with Ni disc current collector.
- Resistor: 499 Ohm.
- Vrange: 0 to 1.37 V.
- V10min = 0.9 V, V1h = 0.9 V, V3h = 0.91 V, V25h = 0.15 V.
- Electrical Energy: 142.4 J.

030711XY5-395(LaNi5/KOH/SC): Demo cell, first unit

- Anode: LaNi5 taken from commercial Ni-MH battery.
- Cathode: Steam carbon mixed with saturated KOH
- Separator: Celgard 3501
- Electrolyte: saturated KOH
- Discharge functions: constant current 500 mA 0.72 V

6.4 Ah capacity, 4.3Wh discharged energy was obtained. The cell is rechargeable at a constant current of 1A.

030611XY2-390(Ni(H2)/LiOH/Ni): molten salt cell

- Anode: Ni tube (1/8 inch) flow through H2.
- Cathode: Ni foil
- Electrolyte: 50.0 g LiOH
- Temperature: 550 °C (real T inside the cell 500 °C)

Discharge at 499 ohm, the cell voltage is between 0.90-1.0V for over 100 h.

022711XY4-348(Zn/KOH/SC): This cell was prepared with newly designed plastic cell with O-ring at the anode side, but without O-ring at cathode side.

- Anode: Zn paste taken from commercial Zn/air battery, 0.381 g, net Zn=0.201 g.
- Cathode: Steam carbon mixed with saturated KOH, net SC =0.178 g
- Separator: Celgard 3501
- Electrolyte: Saturated KOH
- Discharge load: 1000 ohm

Energy 717.3J; Specific Energy: 991.3Wh kg-1; Energy Efficiency: 75.6%; Specific Capacity: 827.5mAh g-1; Columbic Efficiency: 106.3 %

030111JH1-400: Ni(H2) |LiOH-NaOH | Ni (H2O)

- Anode: H2 in Ni tube
- Cathode: LiOH-NaOH (Ni mesh)
- Temperature at 350C, later increase to 400C (setting point).
  OCV: ~1.10V
- 500 ohm, the load voltage is still 1.00V after 3 days.
  100h, Energy: 533J

030211GC1/H2 (~ 760 Torr) Ni tube / LiBr (99.4 g) + LiOH (20.6 g) / Ni foil wrapped crucible (open) T = 440 °C; OCV: introduced H2 to 760 Torr, OCV increase gradually to 0.99V, load 499 ohm, loading voltage remained between

0.9 and 1 V for 48 hours and running steady. Switched load to 249 ohm, V ~ 0.88V >350h still running. Control cells show no voltage and the H2 permeation rate is significantly too low to support this power.

022811GC1/H2 (~ 1000 Torr) Ni tube / LiBr (99.4 g) + LiOH (20.6 g) / H2O (< 1 ml) in Ni sheet wrapped/(open) T = 440 °C; resistance = 1K ohm
OCV: Vin = 0.27V, added H2 and 4 drops H2O, OCV suddenly increased to Vmax = 1.02V after 5 min; 1000 ohm loading voltage was 0.82V that dropped to ~ 0.4 V in 17 hrs, added 3 drops H2O 3 and loading voltage increased to ~0.6 V. added 4 drops water voltage declined quickly. Stopped at 40 hrs V = 0.2 V.
Eout = 27.9 J

022411XY8-334(LaNi5/KOH/SC): Intermittent discharge-charge each cycle at constant current. Unsealed

- Anode: LaNi5 taken from commercial battery, net LaNi5=0.255 g.
- Cathode: Steam carbon mixed with saturated KOH, net SC =0.195 g
- Separator: Celgard 3501
- Electrolyte: Saturated KOH
- Discharge current: 1 mA

The cell was frequently discharged/charged. The cell was charged at constant current of 1 mA for 20 s, then discharged at constant current of 1 mA for 2 s.
V (1 min)= 0.951 V; Specific Energy = 310.2 Wh/kg; theoretical specific energy based on measured composition LaNi5H3 is 227 Wh/kg.

022211GC3/Co (0.30 g) + LaNi5H6 B (B designates battery source) (0.2 g) / KOH (sat'd) NH3 + CG3501 / SC (paste) (50 mg)/RT cell; resistance = 499 ohm plastic film sealed flat square cell, run outside
OCV: Vmax = 0.92; load 499 ohm.
Eout = 464.7 J;
Specific energy: 430.2 Wh/Kg for Co
Capacity: 608.3 mAh/g for Co

030111XY1-357(Ni(H2)/NaOH-NaBr/Ni): molten salt cell (open)

- Anode: Ni tube (1/8 inch) flow through H2.
- Cathode: Ni foil
- Electrolyte: 65.92 g NaOH + 36.28 g NaBr (0.82:0.18 Mol ratio)
- Temperature: 400 °C (real T inside the cell 350 °C)

OCV of the cell is 0.96V. At 1000 ohm discharge load (without water addition to the cathode), the voltage plateau was maintained at about 0.75 V for a while, then dropped to another discharge plateau at about 0.4-0.3 V. After addition of 4 drops of water to the cathode container, the cell voltage increased to 0.36V and was steady for 17 hour. Added 8 drops of water an voltage rose to 0.9 V was stable for 3 hours and dropped to 0.55V and remained stable >30 hrs.

030111XY2-358(Ni(H2)/LiOH-LiI/Ni): molten salt cell (open)

- Anode: Ni tube (1/8 inch) flow through H2.
- Cathode: Ni foil
- Electrolyte: 10.30 g LiOH + 73.03 g LiI (0.45:0.55 Mol ratio)
- Temperature: 350 °C (real T inside the cell 300 °C)
  OCV of the cell is 0.75V. At 1000 ohm discharge load, the voltage plateau was maintained at about 0.55 V, for 55h and still running steady.
- 022111GZC3-367: 0.2g Co/G3501+KOH+Li2CO3/60mg CB-SA (not airtight sealing)
- Separator: CG3501
- Electrolyte Mix: 3g Saturated KOH + 0.1g Li2CO3
- Electrode: 0.2g Co (anode), 60mg CB-SA (cathode)
- resistor=lk ohms; T=RT
  Results based on 100% Co consumed: E=329J, coulomb=450.8C, capacity=456.9Wh/kg, Energy efficiency=45.4%, coulomb efficiency=68.9%. Li2CO3 significantly enhances the efficiency of a Co anode. Analysis

show 30% Co unreacted.

- 022411GZC5-378: 1g NaOH + IPsi H2/Na-BASE/42g NaCl+86.7g CaCl2(MP=504C) (glove box)
- 2.75" Alumina Crucible
- Electrolyte Mix: 1mm thick Na-BASE tube (newer smaller tube)
- Electrode: NaOH + ¼"Ni tube(anode), NaCl+CaCl2 molten salt with nickel foil as current collector (cathode)
- resistor=100ohms; T=600C (real T in the melt: 550C)

    (1) OCV=1.392V.
    (2) with load, CCV drops slowly and it is stabilized at 0.49V
    (3) 2NaOH + CaCl2 + H2 = 2NaCl + Ca + 2H2O dG = +198.5kJ/mol CaCl2 at 550C. Theoretical energy is 0; E=436.5J, coulomb=1043.7C

- 020411GZC5-311: 6g NaOH + IPsi H2/Na-BASE/49.9g NaCl+61.4g MgCl2(MP=459C) (glove box)
- 2.75" Alumina Crucible
- Electrolyte Mix: 1.3mm thick Na-BASE tube
- Electrode: NaOH + ¼"Ni tube(anode), NaCl+MgCl2 molten salt with nickel foil as current collector (cathode)
- resistor=100ohms; T=550C (real T in the melt: 500C)
  E=815J, coulomb=3143C, capacity=37Wh/kg anode, Energy efficiency=inf., coulomb efficiency=22%.

020311XY3-186(MH-KOH-SC): Unsealed.

- Anode: LaNi5 taken from Ni-MH battery, net MH=0.900 g.
- Cathode: Steam carbon mixed with saturated KOH, net SC =0.160 g
- Separator: Celgard 3501
- Electrolyte: Saturated KOH
- Discharge load: 249 ohm

Results: E=506.4J, Specific energy=156.3Wh/kg, Based on measured consumption of LaNi5H3: Energy efficiency=72%, coulomb efficiency=145%.

6. RT Cell: (not Airtight sealing)

- 020811GZC6-321: 0.5g Zn paste from Alkaline battery/CG3501+KOH/60mg CB-SA (not airtight sealing)
- Separator: CG3501
- Electrolyte Mix: Saturated KOH
- Electrode: 0.5g Zn paste (anode), 60mg CB-SA (cathode)
- resistor=lk ohms; T=RT

Results: E=967.6J, coulomb=904C, capacity=1306.7Wh/kg, Energy efficiency=74.1%, coulomb efficiency=115%.

Na-BASE cell:

- 020911GZC1-322: 7.62g Na in 1.33mm thick BASE tube/Na-BASE/120g NaOH in 2" Ni crucible (glove box)
- 2.75" Alumina Crucible
- Electrolyte Mix: 1.3mm thick Na-BASE tube
- Electrode: 7.62g Na in 1.33mm thick BASE tube (anode), 120g NaOH in 2" Ni crucible (cathode)
- resistor=10.2ohm; T=500C (real T in the melt: 450C)

Results: Total E=5.9kJ.

021111XY10-237(Sn+TaC-KOH-SC): Unsealed.

- Anode: Sn powder and TaC powder mixed with saturated KOH (Net Sn:TaC=50:50), net Sn+TaC=0.601 g.
- Cathode: Steam carbon mixed with saturated KOH, net SC =0.154 g
- Separator: Celgard 3501
- Electrolyte: Saturated KOH
- Discharge load: 499 ohms

Vavg = 0.89 V, E total = 530 J; 491 Wh/kg, 84% energy efficiency

020911XY9-214(Zn+LaN-KOH-SC): Unsealed.

- Anode: Zn paste (from commercial battery) and LaN powder mixed with saturated KOH (Net Zn:LaN=50:50), net Zn+LaN=0.664 g.
- Cathode: Steam carbon mixed with saturated KOH, net SC =0.177 g
- Separator: Celgard 3501
- Electrolyte: Saturated KOH
- Discharge load: 499 ohms

Vavg =1.1 V, E total = 974 J; 815 Wh/kg, 62% energy efficiency

012811JH2-357: NaOH+Ni(KH) |BASE| LiCl+CsCl (glove box)

- Anode: NaOH (4.0g) + 1g KH in Ni tube
- Cathode: 60g LiCl-47 + 172.6g CsCl
- Separator/Electrolyte: Na-BASE
- OCV: 1.3-1.5 V
- 200 ohm; CCV = 0.234 V; Energy = 45.6 J

Na-BASE-HT cell

- 020111GZC3-294: 6g NaOH + IPsi H2/Na-BASE/35.1g NaCl+135g NaI(MP=573C) (glove box)
- 2.75" Alumina Crucible
- Electrolyte Mix: 5 Na-BASE tubes
- Electrode: NaOH + ¼"Ni tube(anode), NaCl+NaI molten salt with nickel foil as current collector (cathode)
- resistor=100ohms; T=650C (real T in the melt: 600C)

    (1) OCV=0.937V. Day 2 E=35J. Theoretical energy: 0.

011011XY4-103(Zn-KOH-SC):

- Anode: Zn paste, 1.62 g (include electrolyte) (0.81 g Zn net)
- Cathode: Steam carbon mixed with saturated KOH, net SC=0.188 g
- Separator: Celgard 3501
- Electrolyte: Saturated KOH
- Discharged at 500 ohm

V1min=1.281V, V5min=1.201V, V30min=1.091V, V24h=1.026V, V48h=1.169V, V72h=1.216V, V96h=1.236V, V168h=1.220V, V192h=1.201V, V216h=1.173V, 2350 J, 805 Wh/kg, 60% energy efficiency, 90% Coulomb efficiency

Na-BASE-HT cell.

- 010611GZC1-233: 36g Na/5 Na-BASE tubes in parallel/50g NaOH (glove box)
- 2.75" Alumina Crucible
- Electrolyte Mix: 5 Na-BASE tubes
- Electrode: Na(anode), 5*10g NaOH (cathode)
- resistor=10ohms; T=500C

    (1) CCV~0.1V at with Total E:11.3kJ.

012011JH1-342: NaOH+Ni(KH) |BASE| LiCl+BaCl2 (glove box)

- Anode: NaOH (~4g) + 1g KH in Ni tube
- Cathode: 40g LiCl-47 + 64.5g BaCl2-3
- Separator/Electrolyte: Na-BASE
- OCV: 0.57 - 0.62 V

- 200 ohm
- V1min=0.369V, V10min= 0.301 V, V20min= 0.281 V, V30min= 0.269 V, V1h=0.252 V, V2h=0.253V, V3h=0.261 V. Energy = 475.3J

Na-BASE-HT cell.

- 010611GZC1-233: 36g Na/5 Na-BASE tubes in parallel/50g NaOH (glove box)
- 2.75" Alumina Crucible
- Electrolyte Mix: 5 Na-BASE tubes
- Electrode: Na(anode), 5*10g NaOH (cathode)
- resistor=10ohms; T=500C

    (1) It is running, CCV~0.26V. ~5kJ energy collected.

122010-Rowan Validation-Na-BASE: 1gNa/Na-BASE/3.24g NaOH (glove box)

- 2.75" Alumina Crucible
- Electrolyte Mix: Na-BASE
- Electrode: Na(anode), 3.24g NaOH (cathode)
- resistor=107ohms; T=500C
- Total E=1071J. energy gain:53

CIHT# 121310JL2: [RNi(4200)/CG3401 + Sat'd KOH/CoOOH+CB+PVDF] (E° Theo=0.6300V)

- Room Temp; Square cell design -- semi-sealed
- Anode: ~500mg RNi(4200); Used Dry RNi(4200) from glove box and added saturated KOH as the electrolyte via a syringe and sealed vial
- Cathode: ~80mg CoOOH + 20mg CB#4 + ~15mg PVDF; Pressed with IR press to pellet @ 23 kPSI
- OCV: 0.826V and slowly increasing
- CCV(1000):

    - Fairly slow and smooth decay toward 0V from full loaded voltage with a slight slope change at ~11000min and ~0.5V

- Total Energy: 327.6 J
- C-SED: 1137.5 Wh/Kg
- A-SED: 182.0 Wh/Kg

CIHT# 122210JL2: [RNi(2400) /CG3501 + Sat'd KOH/Pd/C-H1+PVDF] (E° Theo=0V)

- Room Temp; Square cell design -- sealed; no clamp; Ni electrodes;
- Anode: 150mg RNi(2400)#185 + 10mg PVDF using dry and adding sat'd KOH;
- Cathode: 53mg Pd/C-H1 + 14mg PVDF; Pressed with IR press to pellet @ 23 kPSI
- OCV ~0.9249V and steady
- CCV(1000):

    - Dropped to about 0.89 with load and slowly decreasing
    - Fairly slow and smooth decay toward 0V from full loaded voltage with a slight slope change at ~3100min and ~0.6V

- Total Energy: 128.8 J
- C-SED: 675.2 Wh/Kg
- A-SED: 238.6 Wh/Kg

120110GZC1-185: 1gNa/Na-BASE/3.3g NaOH + 0.82g MgCl2 + 0.67g NaCl (glove box)

- 2.75" Alumina Crucible
- Electrolyte Mix: Na-BASE

- Electrode: Na(anode), 3.3g NaOH + 0.82g $MgCl_2$ + 0.67g NaCl (cathode)
- resistor=107ohms; T=500C

(1) Stopped, E=548J, 46kWhr/kgNaOH.

Sandwich cell 112910XY1-1-20: Li/LP30-CG2400/CoOOH (held on Ni nesh/Nafion/PtC(H2)

- Anode: Li metal (excess capacity)
- Cathode: 75% CoOOH + 25 CB; net CoOOH 10 mg)
- Separator between Li/CoOOH: Celgard 2400
- Separator between CoOOH/PtC(H): Nafion membrane
- Third layer: PtC(H)
- Discharge at 2000 ohm
- V1min= 2.2V, V1h= 1.5V, V2h= 1.18V, V10h=1.0V, V20h=0.99V, V25h=0.89V, V30h=0.72V, V35h=0.54V.

measured >1800 Whr/kg capacity.

110910GZC1-159: 1gNa/Na-BASE/3.24g NaOH#3 + 0.94g NaBr#1 + 1.5g NaI#1 (glove box)

- 2.75" Alumina Crucible
- Electrolyte Mix: Na-BASE
- Electrode: Na(anode), .24g NaOH#3 + 0.94g NaBr#1 + 1.5g NaI#1, MP=260C
- resistor=100ohms; T=450C

(1) Total energy: 523 J (45 Whr/kg).

1102910JH1-1: Li|1M LiPF6-DEC-EC| CoOOH

- Anode: Li (~25mg)
- Cathode: CoOOH (freshly prepared, oven dried, 150mg)
- Separator: Celgard 2400
- OCVrange = 3.6 - 3.5 V

2000 ohm (when OCV=3.5V); CCV = 1.08V
Total Energy: 520.6 J; Total specific Energy: 964 Wh/kg. The cell was opened and cathode CoOOH material involved as the cathode was determined to weight less than 125 mg. Thus the specific energy is 1156 Wh/kg.

102710GZC1-143: 1gNa3Mg/Na-BASE/3.28g NaOH (glove box)

- 2.75" Alumina Crucible
- Electrolyte Mix: Na-BASE
- Electrode: Na3Mg(anode), 3.28g NaOH (cathode), MP=323C
- resistor=100ohms; T=450C(real T in the melt: 400C)

(1) It is still running. CCV=0.300V.
(2) checked OCV=0.557V

Total energy is: 0.69kJ. Na-BASE tube is intact.

102110GZC1-138: 1gNa/Na-BASE/1.85g NaBr + 3.28g NaOH (glove box)

- 2.75" Alumina Crucible
- Electrolyte Mix: Na-BASE
- Electrode: Na(anode), 1.85g NaBr + 3.28g NaOH (cathode), MP=260C
- resistor=107ohms; T=450C(real T in the melt: 400C)

(1) Total energy of ~0.83kJ is collected, which corresponds to 37 Whr/kg electrode materials.

102810JH3-1: Li3Mg |LiCl+KCl-LiH|TiH2

- 2.84" Alumina Cylinder
- Eutectic 96.8 g LiCl + 120.0 g KCl; MP: 352 C
- Cell Temperature: 415 C
- Anode: Li3Mg(0.5g) in SS mesh wrap
- Cathode: TiH2(0.8g)
- OCVrange = 1.51 - 198 V

106 ohm load, it is to test long duration operation. CCV =0.35 V. Energy = 300.4 J.

ID# 102810GH2 Li/KCl+LiCl/NaNH2

- 2.75" Alumina Crucible;
- 0.05g Li in a mesh SS cup (anode); 0.1g NaNH2 in another mesh SS cup (cathode);
- Electrolyte Mix: 56.3g LiCl + 69.1g KCl, MP=352C;
- T = 400C;
- Resistor = 100 ohm;
- Total loading time: 90min.

OCV = 0.6496 V
V10s = 0.6186V, V20s = 0.6104V, V30s = 0.6052V, V1m = 0.5979V, V5m = 0.5815V, V90m = 0.4975V

102210JH2-2: Li3Mg |LiCl+KCl-LiH|TiH2

- 2.84" Alumina Cylinder
- Eutectic Mix: continued from 102110JH2-1; (96.8 g LiCl + 120.0 g KCl + 0.098g LiH; MP: 352 C)
- Cell Temperature: 440 C
- Anode: Li3Mg(0.3g) in SS mesh wrap
- Cathode: TiH2(0.3g)
- OCVrange = 0.51 - 0.545 V
  200 ohm (when OCV= 0.537 V)
- V20s= 0.525V, V1min= 0.514V, V10min= 0.466V, V20min= 0.449 V, V30min= 0.430 V, V1h=0.405V, V2h=0.380V
- Vrecover=0.410V from 0.377V in about 7 min.
  100 ohm (OCV=0.408V)
- V20s= 0.391 V, V1min= 0.383V, V10min= 0.362V, V20min= 0.357 V, V30min= 0.354V, V1h=0.349V

Run Time : 5513 min
Load: 100 ohm
Voltage: 0.223 V (appears to stable at this voltage over 2 days)
Energy: 218 J
Etheory=0.11 V

CIHT# 102210JL1: [Li/CG2400+4MeDO+LiClO4/RNi(2800)] (E° Theo=~0.7078V)

- Room Temp
- Anode: ~30mg Li Disc
- Cathode: 200mg RNi(2800)#186
- OCV: 2.2912V and slowly decreasing
- CCV(1000):
  - V20s = 2.3730V
  - V1min = 2.2137V
  - V10min = 2.1048V
  - V20min = 2.0445V
  - V30min = 2.0005V
  - V4146min = 0.1058V

- OCV(9 min recovery) = 0.8943V
- Total Energy = 112.45J
- Theo = 33.7J
- Gain = 3.34X
- Specific Energy Density of Cathode Material = 156 Wh/kg
- Total time of run before voltage approached 0V = -4000 min

101510GZC1-132: 1gK/K-BASE/KOH + KI (glove box)

- 2.75" Alumina Crucible
- Electrolyte Mix: 57.5g KI#1 + 45.2g KOH#1, MP=240C
- Electrode: K(anode), KOH+KI in SS crucible(cathode)
- resistor=100ohms; T=450C(real T in the melt: 400C) (1) up to now, 1.1kJ electrical energy is collected. It is still running and CCV keeps constant at 0.6V.

093010GZC1-117: Na/BASE/NaI+NaOH (glove box)

- 2.75" Alumina Crucible
- Electrolyte Mix: 60g NaI#1 + 64g NaOH#2, MP=230C
- Electrode: Na(anode), 60g NaI#1 + 64g NaOH#2(cathode)
- resistor=100ohms; T=500C(real T in the melt: 450C)

Cell is still running. Up to now, 0.975kJ electrical energy was collected.
CCV=0.876V with 100ohm load, now.

100410GZC1-120: 1gNa/BASE/NaI+NaOH/1.5g RNi4200 in SS mesh wrap (glove box)

- 2.75" Alumina Crucible
- Electrolyte Mix: 60g NaI#1 + 64g NaOH#2, MP=230C
- Electrode: Na(anode), 1.5g RNi4200 in SS mesh wrap(cathode)
- resistor=100ohms; T=500C(real T in the melt: 450C)

Total electrical energy: 1.67kJ, CCV=0.442V, more energy can be obtained if run longer. Theoretical voltage=0.001 V for Na + NaOH = Na2O + NaH

082610GC2: Li3N in wrapped SS foil/ LiCl + KCl / CeH2 + TiC-136 in SS wrapped foil

- 2.75" Alumina Crucible
- Electrolyte eutectic mixture: 67.6g LiCl + 82.9g KCl;
- Electrode: anode: Li3N in wrapped SS foil ;
- cathode: CeH2 + TiC-136 (1:1) in wrapped SS foil;
- resistor 100 ohm;
- cell temperature= 460 C

Theoretical calculation:

anode: 4H- + Li3N to LiNH2 + 2LiH + 4e-
cathode: 2CeH2 + 4e- to 2Ce + 4H-
overall: 2CeH2 + Li3N to 2Ce + 2 LiH + LiNH2
DG = 164.4 kJ / mol, endothermic, DE should be zero.

Data:

OCV Vmax = 1.30V; Vloadmax = 0.58V;
V1min = 0.50V; V10min = 0.57V; V20min = 0.57V; V40min = 0.51V; V60min = 0.53V (not stable); Iloadmax = 0.0058A; Ploadmax = 3.4 mW;
Recovery: Vmax = 0.84V

082410GC1: Li in wrapped SS foil / LiCl + KCl / CeH2 + TiC-136 in SS wrapped foil

- 2.75" Alumina Crucible
- Electrolyte eutectic mixture: 67.6g LiCl + 82.9g KCl;
- Electrode: anode: Li in wrapped SS foil;
- cathode: CeH2 + TiC-136 (1:1) in wrapped SS foil;
- resistor 100 ohm;
- cell temperature= 460 C

Theoretical calculation:

anode: 2 Li to 2Li+ + 2e-
cathode: CeH2 + 2Li + 2e- to Ce + 2LiH
overall: CeH2 + 2 Li to Ce + 2 LiH
DG = 15.6 kJ / mol, endothermic, DE should be zero.
Data: OCV Vmax= 1.94V; Vloadmax = 1.37V; V1min = 1.23V; V10min = 1.06V; V20min = 0.95V; V40min = 0.86V; Iloadmax = 0.014A; Ploadmax = 19 mW;
Recovery: Vmax = 1.11 V

Cell# 082010RCC2-108: [Li/LiCl-KCl-LiH-NaCl/ZrH2] at 450 C

- 2.75" OD x 6" Alumina Crucible
- Eutectic Mix: 56.3 g LiCl-26 + 69.1 g KCl-27 + 0.018 g LiH-4 + 0.13 g NaCl-2
- Anode 0.35 g Li-7 in SS foil crucible wired w/ SS.
- Cathode: 1.9 g ZrH2-1 + 0.9 g TiC-138 in SS foil crucible wired w/ SS.
- Resistors = 100 Ohm
- Vrange 0.168 to 1.299 V.
- Vmax 1.299 V @ 450 C,
- 100 Ohm resistor was connected with the cell
  VLoadMax = 1.064 V, ILoadMax = 0.01064 A, PLoadMax = 11.3 mW,
  V10s = 0.849 V, V20s = 0.819 V, V30s = 0.796 V,
  V1min = 0.748 V, V10min = 0.731 V, V21.6h = 0.168 V.
- OCV (Open Circuit Voltage, after 21.6 h Load + 43.4 min Recovery) = 0.265.
- Comments:
  The resistor of 100 Ohm was connected with the CIHT cell when the OCV reached 1.299 V. For reaction ZrH2 + 2Li = 2LiH + Zr,
  At 700 K (427 C), DG = DH - TDS = -1,910 J/reaction, E = - DG/zF = 0.01 V.

E = E0 +
At 800 K (527 C), DG = DH - TDS = - 835 J/reaction, E = -DG/zF = 0.004 V,
At 500 C (real T of the liquid eutectic salt: 422 C), assuming volume of liquid salt is 100 ml, [H-] = 0.018/(0.1*8) = 2.25 x10-2 (M).

E = E0 -R*T*Ln(H-)/(nF) = E0 -8.314* 695* Ln(2.25 x 10-2)/(2*96485) = E0 + 0.114 = 0.01 + 0.114 = 0.124 (V).

Cell# 082010RCC1-107: [Li/LiCl-KCl-LiH-NaCl/TiH2] at 450 C

- 2.75" OD x 6" Alumina Crucible
- Eutectic Mix: 56.3 g LiCl-26 + 69.1 g KCl-27 + 0.018 g LiH-4 + 0.13 g NaCl-2
- Anode 0.35 g Li-7 in SS foil crucible wired w/ SS.
- Cathode: 0.9 g TiH2-1 + 0.9 g TiC-136 in SS foil crucible wired w/ SS.
- Resistors = 100 Ohm
- Vrange 0.462 to 0.831 V.
- Vmax 0.831 V @ 450 C,
- 100 Ohm resistor was connected with the cell
  VLoadMax = 0.808 V, ILoadMax = 0.00808 A,

PLoadMax = 6.5 mW, V10s = 0.594 V, V20s = 0.582 V, V30s = 0.574 V,V1min = 0.564 V, V10min = 0.539 V, V162min = 0.577 V.

- OCV (Open Circuit Voltage, after 162 min Load + 54.2 min Recovery) = 0.908 V.
- 100 Ohm resistor was connected with the cell again
  V'LoadMax = 0.899 V, I'LoadMax = 0.00899 A, P'LoadMax = 8.1 mW, V'1min = 0.631 V, V'10min = 0.581 V .
- Comments:
  The resistor of 100 Ohm was connected with the CIHT cell when the OCV reached 0.818 V. After the resistor of 100 Ohm was taken off, the load of 100 Ohm was connected with the cell again when OCV was 0.907 V.

For reaction TiH2 + 2Li = 2LiH + Ti,
At 700 K (427 C), DG = DH - TDS = -28,015 J/reaction, E = - DG/zF = 0.15 V.
At 800 K (527 C), DG = DH - TDS = - 25,348 J/reaction, E = -DG/zF = 0.13 V,
At 450 C (real T of the liquid eutectic salt: 388 C), assuming volume of liquid salt is 100 ml, [H-] = 0.018/(0.1*8) = 2.25 x10-2 (M).

$$E = E0 - R*T*Ln(H-)/(nF) = E0 - 8.314*661*Ln(2.25 \times 10\text{-}2)/(2*96485) = E0 + 0.114 = 0.15 + 0.108 = 0.258\ (V).$$

072210GZC1-40: Li bell(Li in 3/8" SS tube)/LiCl+KCl/H2 in Ni tube

- 2.75" Alumina Crucible
- Electrolyte Mix: 56.3g LiCl#15 + 69.1g KCl#12, MP=350C
- Electrode: Li bell(anode), H2 in Ni tube(cathode)
- resistor=N/A; T=450C.

Results:

(1) OCV changes with the amount of LiH added into the electrolyte:
LiH, g OCV, V

| | |
|---|---|
| 0 | 2.1 |
| 0.003 | 2.025 |
| 0.006 | 1.969 |
| 0.009 | 1.88 |
| 0.014 | 1.041 |
| 0.021 | 0.899 |
| 0.03 | 0.672 |
| 0.038 | 0.616 |
| 0.06 | 0.569 |
| 0.073 | 0.551 |
| 0.084 | 0.546 |
| 0.144 | 0.499 |
| 0.266 | 0.457 |
| 0.339 | 0.431 |
| 0.418 | 0.428 |
| 0.482 | 0.424 |
| 0.813 | 0.396 |
| 1.182 | 0.379 |
| 1.64 | 0.372 |

Comments

(1) V=0.215-0.0571lnC(LiH, mol%); Nernst equation slope: -0.0580

(2) Data at the amount of LiH added less than 14mg are obviously off from the line of Nernst equation, in other words, obvious spurious voltage was observed at LiH concentration <0.1%(mol) in the electrolyte.

E. CIHT Cell Solution NMR

The hydrino products of the CIHT cells were also identified by liquid NMR showing peaks given by Eqs. (12) and (20) for molecular hydrino and hydrino hydride ion, respectively. For example, hydrino reaction products following solvent extraction of the half-cell reaction products in dDMF were observed by proton NMR at about 1.2 ppm and 2.2 ppm relative to TMS corresponding to $H_2(1/4)$ and $H_2(1/2)$ respectively. Specific half-cell reaction mixtures showing the $H_2(1/4)$ peak and possibly the $H_2(1/2)$ peak are given in TABLE 8.

TABLE 8. The $^1H$ solution NMR following DMF-d7 solvent extraction of the products of the CIHT cells. $H_2(1/4)$ was observed as a broad peak typically at 1.2 ppm that may be shifted by and broadened by excess water in dDMF. $H_2(1/2)$ was also observed in most cases as a sharper peak at 2.2 ppm.

**Anode Hydrino Peak**

R-Ni/KOH (sat aq)/CoOOH
R-Ni/KOH (sat aq)/MnOOH
R-Ni/KOH (sat aq)/InOOH
R-Ni/KOH (sat aq)/GaOOH
R-Ni/KOH (sat aq)/LaOOH
R-Ni/KOH (sat aq)/steam carbon
Co/KOH (sat aq)/CoO SC
Zn/KOH (sat aq)/steam carbon
Pb/KOH (sat aq)/steam carbon
In/KOH (sat aq)/steam carbon
Sb/KOH (sat aq)/steam carbon
LaNi5H/KOH(sat aq)/MnOOH CB
Zn/KOH (sat aq)/CoOOH CB
Zn/KOH (sat aq)/MnOOH CB
CoH/KOH (sat aq)/PdC
Ni nano slurry/KOH (sat aq)/steam carbon
R-Ni/KOH (sat aq)/TiC
R-Ni/KOH (sat aq)/TiCN
R-Ni/KOH (sat aq)/NbC
R-Ni/KOH (sat aq)/TiB2
R-Ni/KOH (sat aq)/MgB2
R-Ni/KOH (sat aq)/B4C
Cd/KOH (sat aq)/PtC
La/KOH (sat aq)/ steam carbon
Cd/KOH (sat aq)/steam carbon
Sn/KOH (sat aq)/MnOOH CB
Co/KOH (sat aq)/ SC
R-Ni + M/KOH (sat aq)/MnOOH (closed) M= Pb, Mo, Zn, Co, Ge CB-SA
HWS2/KOH (sat aq)/ CB
Co/KOH (sat aq)/ MnOOH SC
Sm-Co/KOH (sat aq)/ CB SA
Co/KOH (sat aq) CoO DTPA/ SC
Co/KOH (sat aq) DTPA/ Ni SC
Pb/KOH (sat aq)/ CB SC
Zn/KOH (sat aq)/ ZnO SC
Co/KOH (sat aq) CoO DTPA/SC
Ni nano powder/KOH (sat aq)/NiO CB (open, but no energy, direct reaction)
Co/KOH (sat aq)/ CuO CB (open, but no energy, direct reaction)
Ti|CG3501, Sat'd KOH| SC

Zn-KOH-SC+I2O5
Co/KOH (sat aq)/CoO + SC (O2 sealed, but air leak)
Zn/15M KOH/SC
Ge pow. (0.16 g) / KOH (saturated) + CG3501 / CuO + CB + PVDF
Cell# 012811RC2-290: [Zn/KOH+EDTA/Ag2O2+CB+PVDF] (glove box)
Cell# 012811RC3-291: [Zn/KOH+EDTA/PtO2+CB+PVDF] (glove box)
Cell# 013111RC1-292: [Co/KOH+EDTA/PtO2+CB+PVDF] (glove box)
Cd/KOH (sat aq)/CB-SA
Cd/KOH (sat aq)/SC
Zn KOH (sat aq)PtC mixed in glove box
Ni($H_2$) NaOH/BASE/MgCl2-NaCl

**Cathode Hydrino Peak**

Na/Na-base/NaI + NaOH

## Claims

1. An electrochemical power system including a fuel cell comprising:

   an anode capable of oxidizing a species comprising hydrogen, a cathode capable of reducing at least one of $O_2$ or $H_20$, **characterised by**
   a molten eutectic salt electrolyte represented by MOH-M'X or MOH-M'X', and
   wherein M is an alkali or alkaline earth metal,

      M' is a metal having hydroxides and oxides that are at least one of less stable than those of alkali or alkaline earth metals or have a low reactivity in water, and
      X is halide, X' is an anion.

2. The electrochemical power system of claim 1, wherein said anode comprises a hydrogen permeable membrane.

3. The electrochemical power system of claim 1 or 2, wherein M' is less stable than M.

4. The electrochemical power system of any one of claims 1-3, wherein M' has low reactivity with water.

5. The electrochemical power system of any one of claims 1-4, wherein M' is selected from Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, W, Al, V, Zr, Ti, Mn, Zn, Cr, and In.

6. The electrochemical power system according to any one of claims 1-5, wherein X' is selected from hydroxides, halides, nitrates, sulfates, carbonates, and phosphates.

7. The electrochemical power system according to any one of claims 1-5, wherein X' is halide.

## Patentansprüche

1. Elektrochemisches Energiesystem, das eine Brennstoffzelle enthält, mit:

   einer zum Oxidieren einer Wasserstoff aufweisenden Sorte geeigneten Anode,
   einer zum Reduzieren von $O_2$ und/oder $H_2O$ geeigneten Kathode,
   **gekennzeichnet durch**
   einen durch MOH-M'X oder MOH-M'X' dargestellten geschmolzenen eutektischen Salzelektrolyten, wobei M ein Alkali- oder Erdalkalimetall ist,

      M' ein Metall ist, das Hydroxide und Oxide hat, die weniger stabil als die von Alkali- oder Erdalkalimetallen sind und/oder eine niedrige Reaktivität in Wasser haben, und
      X Halid ist und X' ein Anion ist.

2. Elektrochemisches Energiesystem nach Anspruch 1, wobei die Anode eine für Wasserstoff permeable Membran aufweist.

3. Elektrochemisches Energiesystem nach Anspruch 1 oder 2, wobei M' weniger stabil ist als M.

4. Elektrochemisches Energiesystem nach einem der Ansprüche 1 bis 3, wobei M' eine niedrige Reaktivität mit Wasser hat.

5. Elektrochemisches Energiesystem nach einem der Ansprüche 1 bis 4, wobei M' ausgewählt ist aus Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, W, Al, V, Zr, Ti, Mn, Zn, Cr und In.

6. Elektrochemisches Energiesystem nach einem der Ansprüche 1 bis 5, wobei X' ausgewählt ist aus Hydroxiden, Haliden, Nitraten, Sulfaten, Carbonaten und Phospaten.

7. Elektrochemisches Energiesystem nach einem der Ansprüche 1 bis 5, wobei X' ein Halid ist.

## Revendications

1. Système de puissance électrochimique comportant une pile à combustible, qui comprend :

   - une anode capable d'oxyder une espèce comprenant de l'hydrogène,
   - et une cathode capable de réduire au moins une des espèces dioxygène ($O_2$) et eau ($H_2O$), **caractérisée par** un électrolyte eutectique de sels fondus, représenté par la formule

   MOH-M'X ou MOH-M'X',

   étant entendu que

   M symbolise un métal alcalin ou alcalino-terreux,
   M' symbolise un métal ayant des hydroxydes et des oxydes qui sont, pour au moins l'un d'entre eux, moins stables que ceux des métaux alcalins ou alcalino-terreux, ou présentent une réactivité faible dans l'eau, et X symbolise un ion halogénure et X' symbolise un anion.

2. Système de puissance électrochimique selon la revendication 1, dans lequel ladite anode comporte une membrane perméable à l'hydrogène.

3. Système de puissance électrochimique selon la revendication 1 ou la revendication 2, dans lequel le métal symbolisé par M' est moins stable que le métal symbolisé par M.

4. Système de puissance électrochimique selon n'importe laquelle des revendications 1 à 3, dans lequel le métal symbolisé par M' présente une réactivité faible avec l'eau.

5. Système de puissance électrochimique selon n'importe laquelle des revendications 1 à 4, dans lequel le métal symbolisé par M' est choisi parmi les métaux de symboles Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, W, Al, V, Zr, Ti, Mn, Zn, Cr et In.

6. Système de puissance électrochimique conforme à n'importe laquelle des revendications 1 à 5, dans lequel l'anion symbolisé par X' est choisi parmi les ions hydroxyde, halogénure, nitrate, sulfate, carbonate et phosphate.

7. Système de puissance électrochimique conforme à n'importe laquelle des revendications 1 à 5, dans lequel l'anion symbolisé par X' est un ion halogénure.

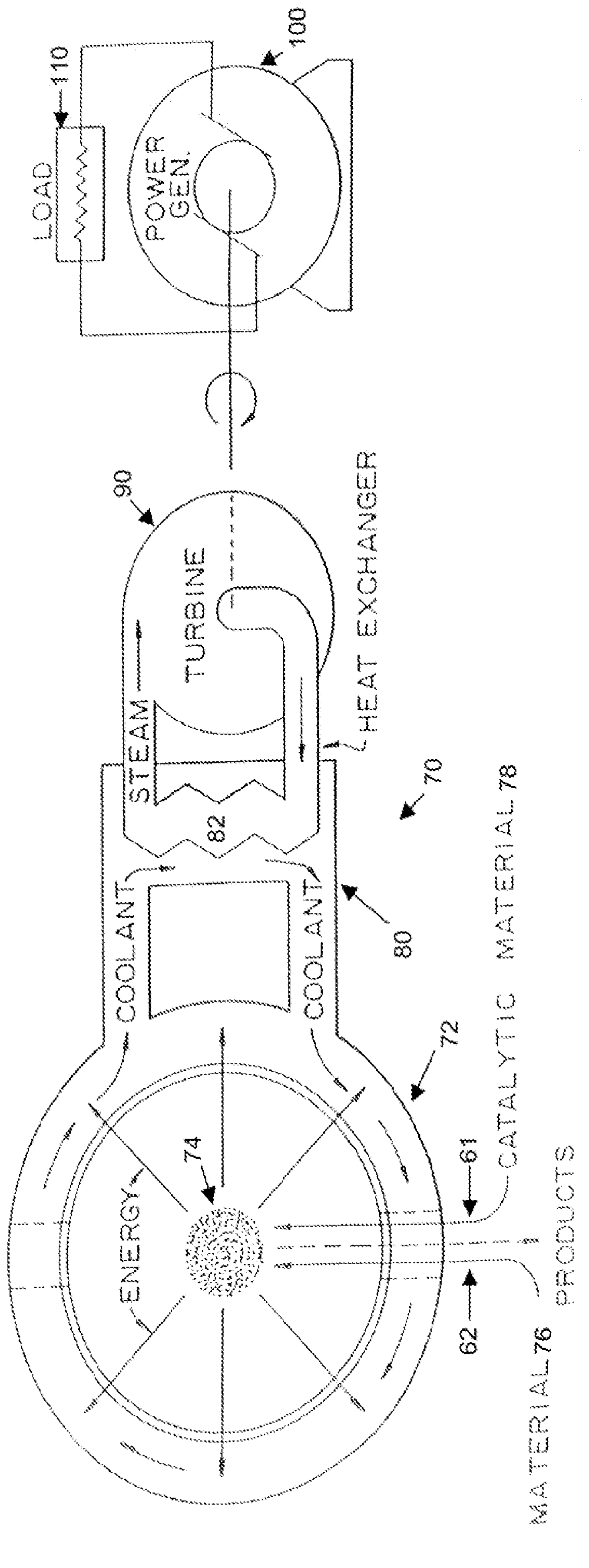
LOAD
110
POWER GEN.
100
90
TURBINE
STEAM
HEAT EXCHANGER
70
82
COOLANT
COOLANT
80
72
74
ENERGY
61
62
CATALYTIC MATERIAL 78
MATERIAL 76
PRODUCTS

Fig. 1

Fig. 2

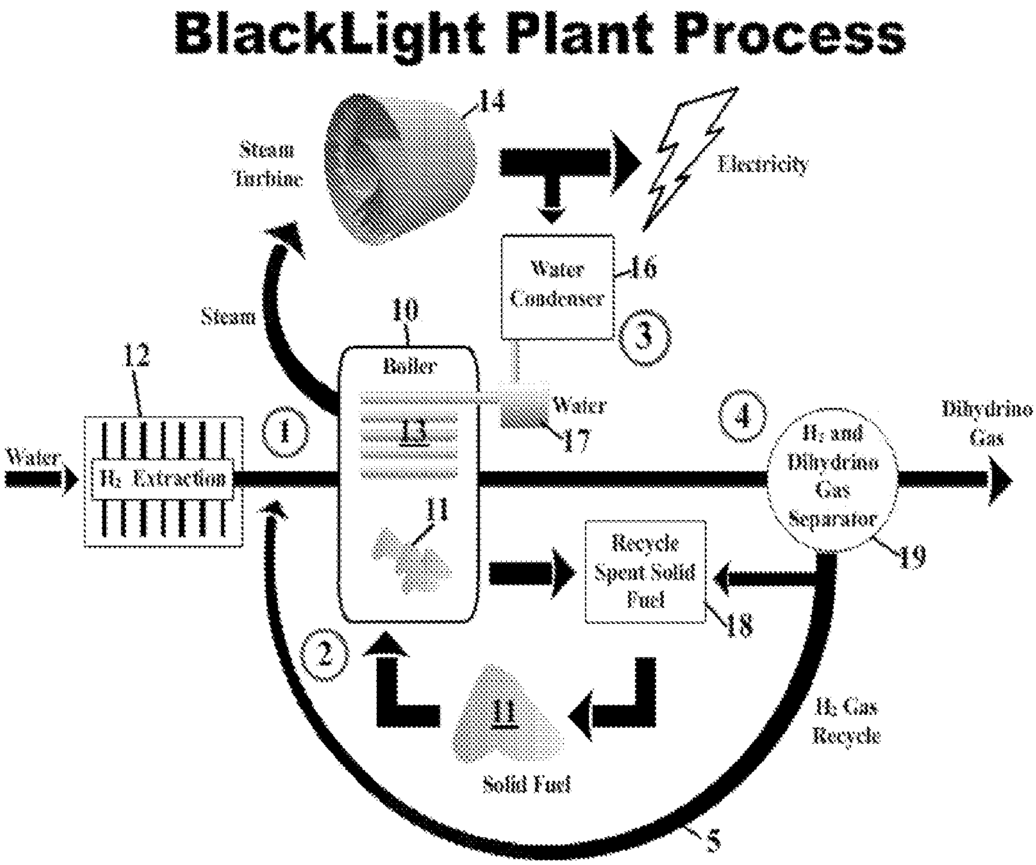
BlackLight Plant Process
14
Steam
Turbine
Electricity
Water
Condenser
16
3
Steam
10
Boiler
12
Water
17
4
Dihydrino
Gas
1
13
$H_2$ and
Dihydrino
Gas
Separator
Water
$H_2$ Extraction
11
Recycle
Spent Solid
Fuel
19
18
2
11
$H_2$ Gas
Recycle
Solid Fuel
5

Fig. 3

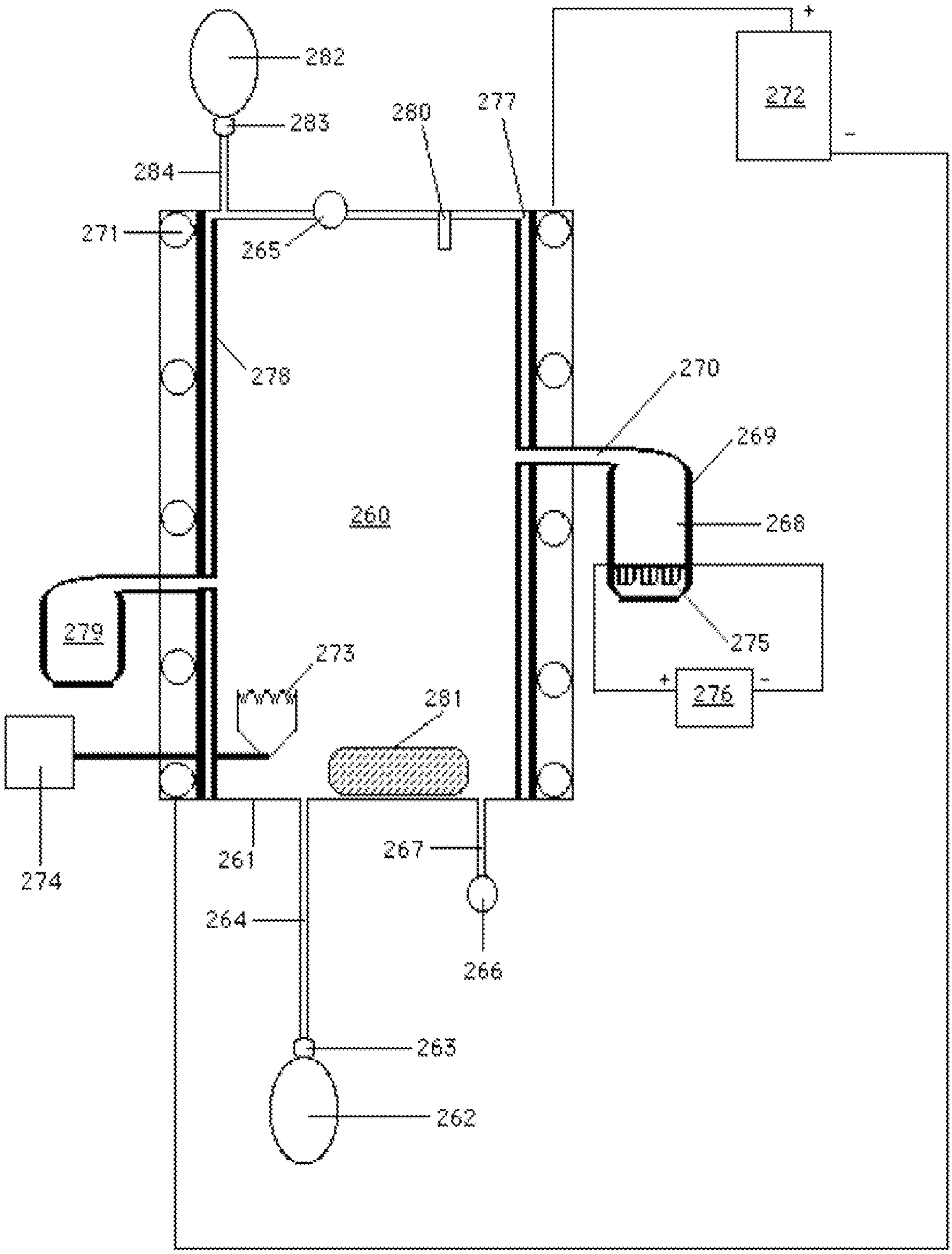
282
283
280
277
284
272
271
265
278
270
269
260
268
279
275
273
276
281
274
261
267
264
266
263
262

Fig. 4

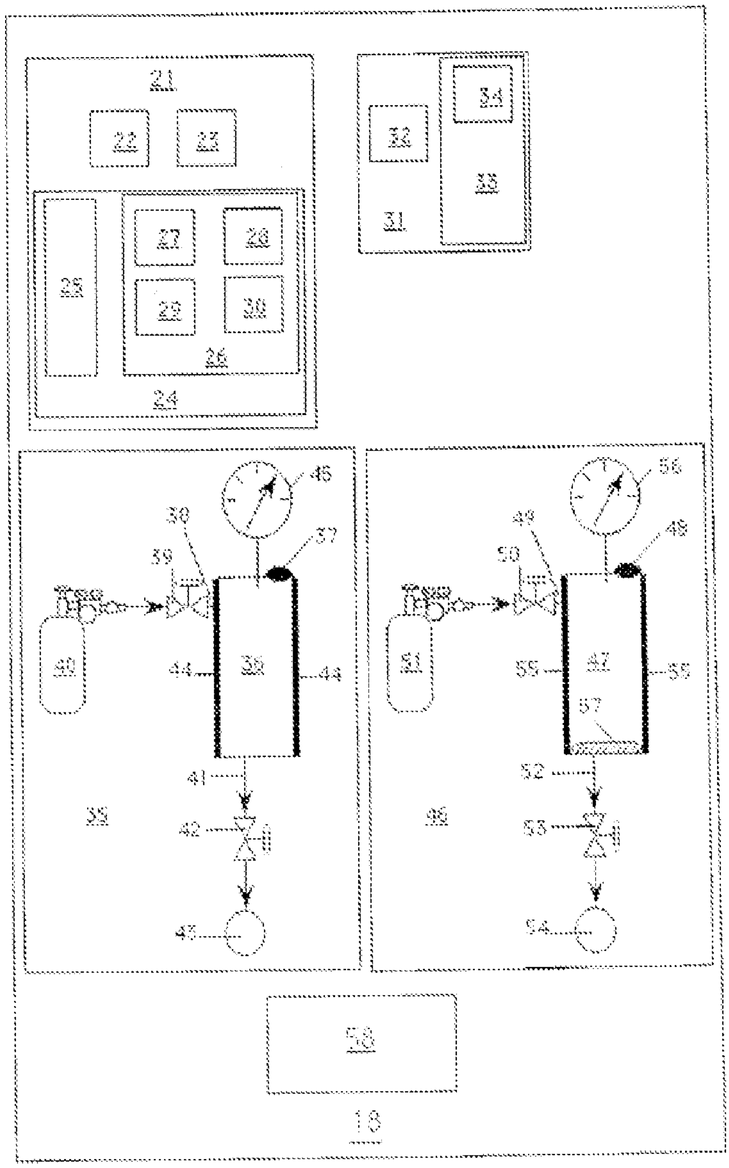
21
22
23
25
27
28
29
30
26
24
32
34
33
31
46
38
37
39
36
40
44
44
41
35
42
43
56
49
48
50
47
51
55
55
57
52
46
53
54
58
18

Fig. 5

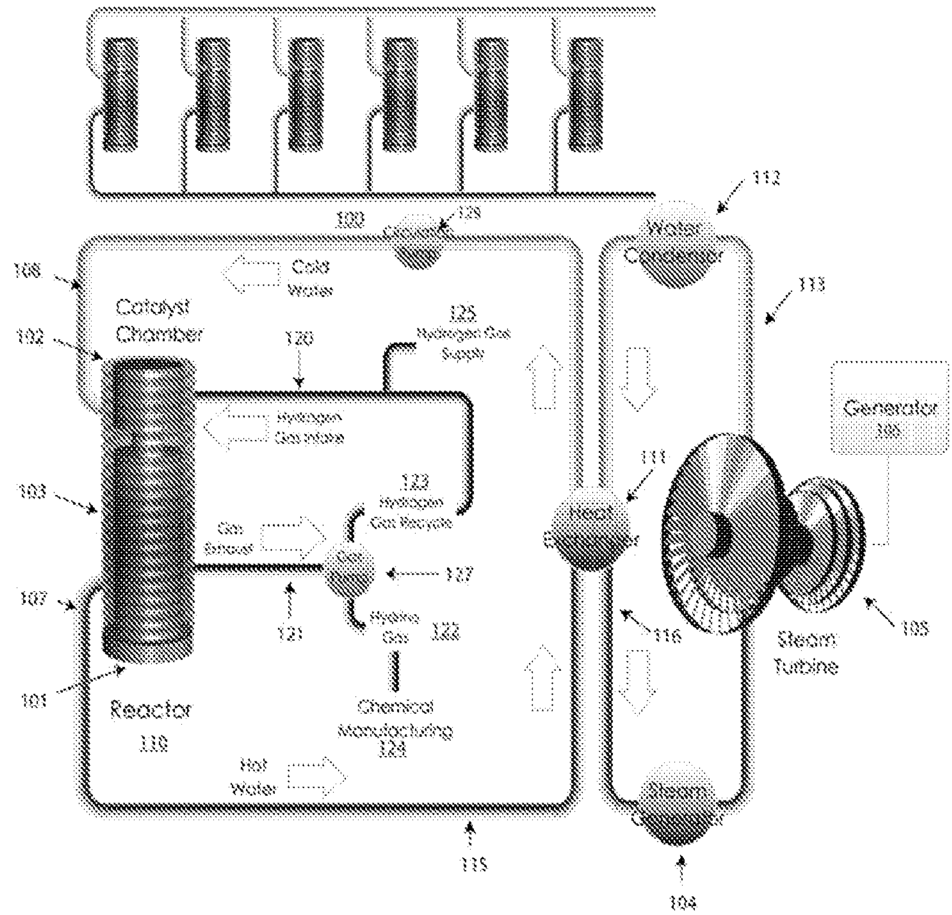
112
Water Condenser
113
Generator
100
128
108
Cold Water
Catalyst Chamber
102
120
125
Hydrogen Gas Supply
Hydrogen Gas Intake
103
123
Hydrogen Gas Recycle
Gas Exhaust
111
Heat Exchanger
127
107
121
Hydrino Gas
122
116
105
Steam Turbine
101
Reactor
110
Chemical Manufacturing
124
Hot Water
Steam Generator
115
104

Fig. 6

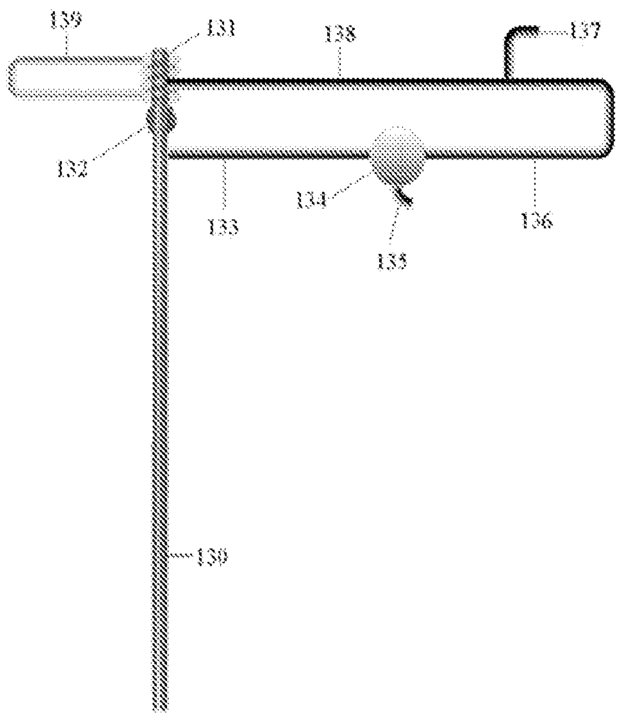

Fig. 7

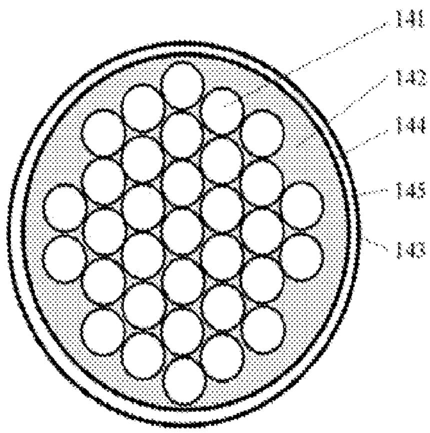

Fig. 8

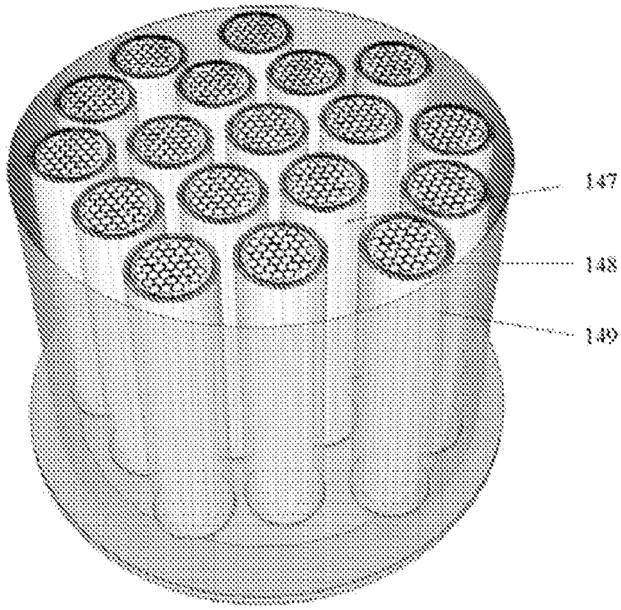

Fig. 9

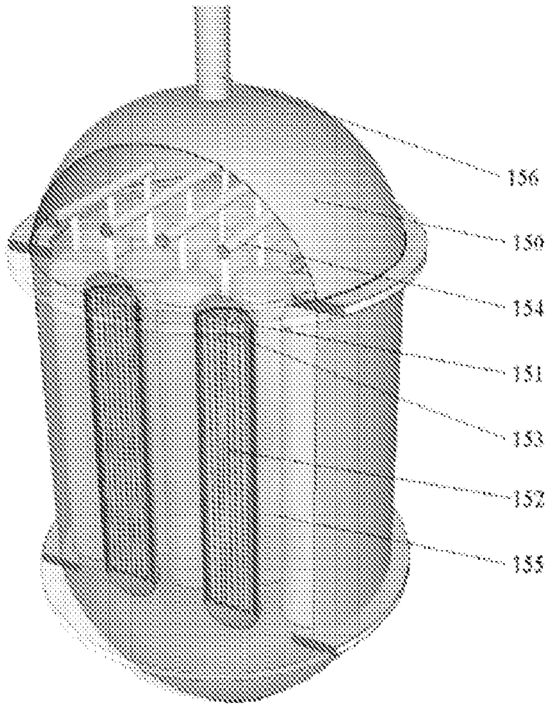

Fig. 10

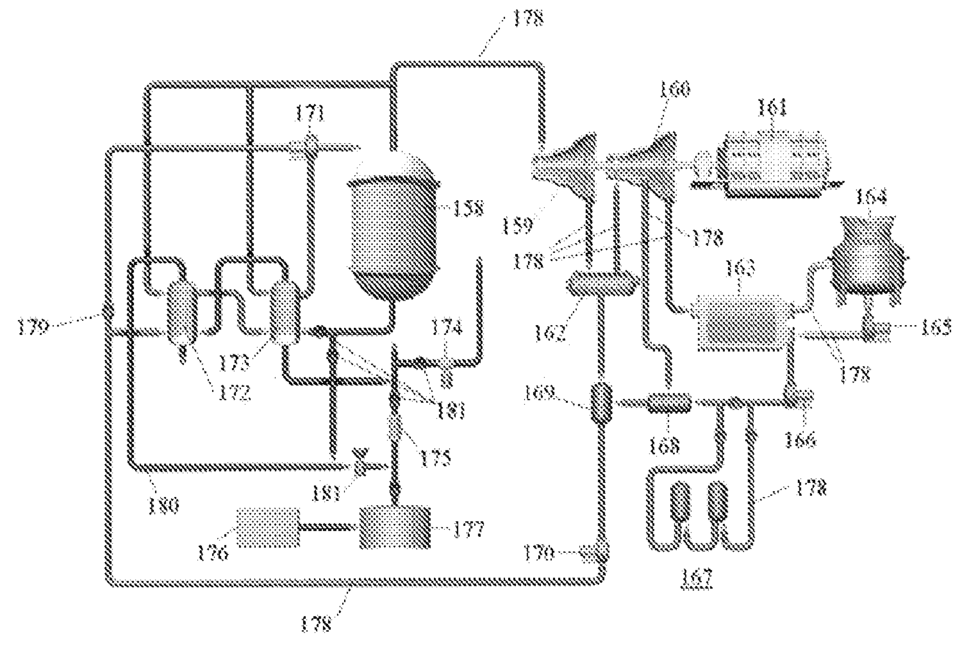
178
160
161
171
164
158
159
178
178
163
179
174
162
165
173
178
172
169
181
168
166
175
181
178
180
176
177
170
167
178

Fig. 11

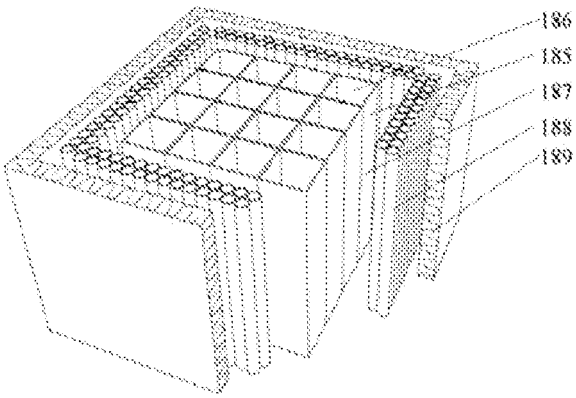

Fig. 12

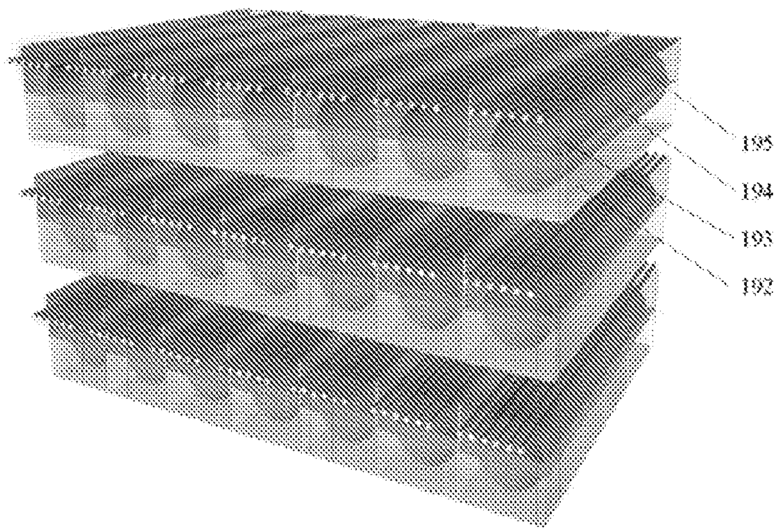

Fig. 13

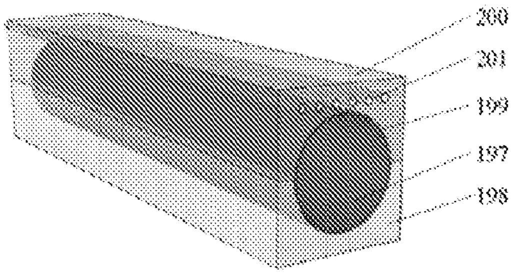

Fig. 14

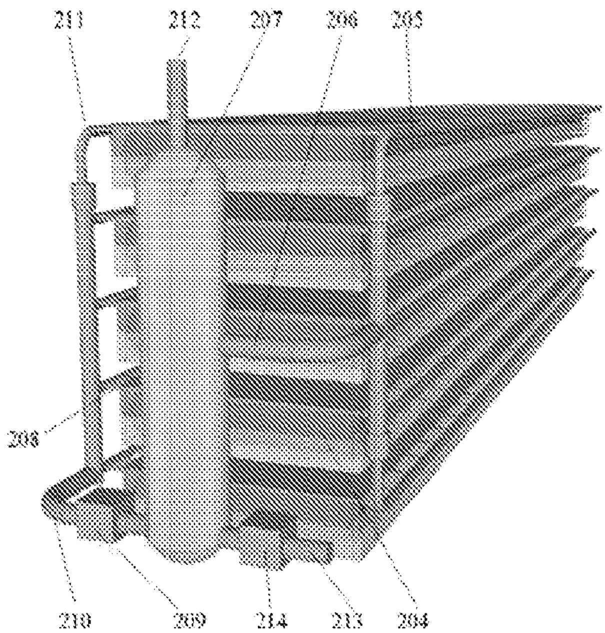

Fig. 15

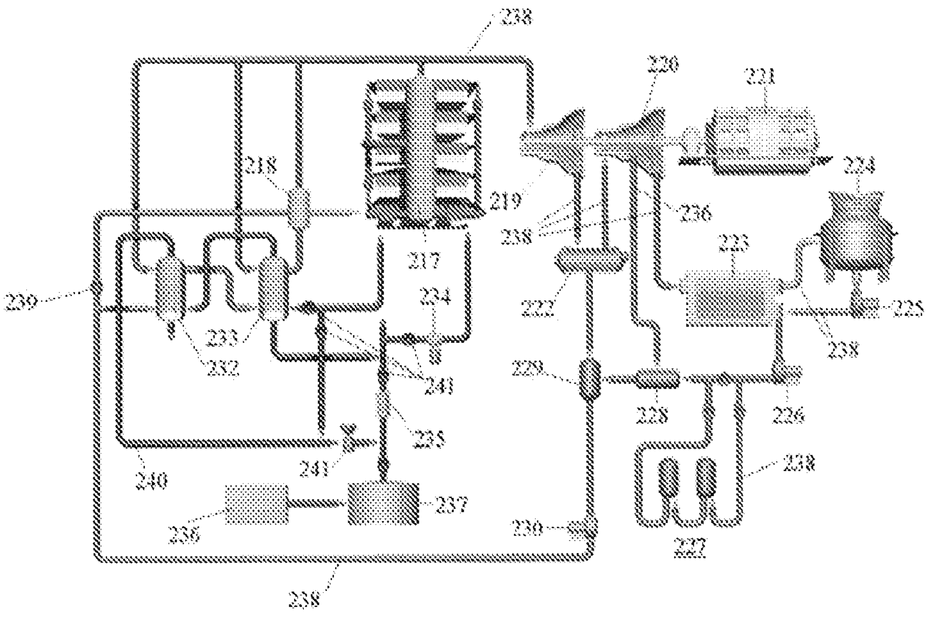
238
220
221
218
224
219
236
238
217
223
234
239
222
225
233
238
232
241
229
228
226
235
238
241
240
237
236
230
227
238

Fig. 16

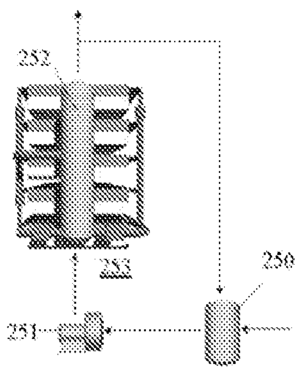

Fig. 17

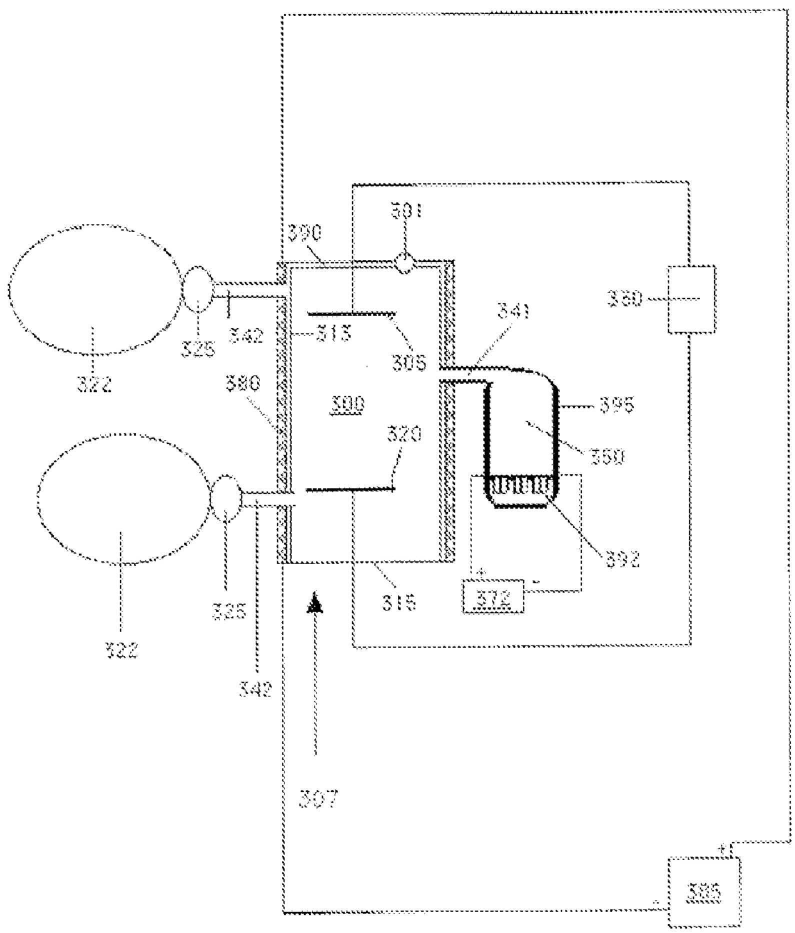
390
301
341
380
313
305
325
342
322
300
395
350
320
392
372
315
307
385

Fig. 18

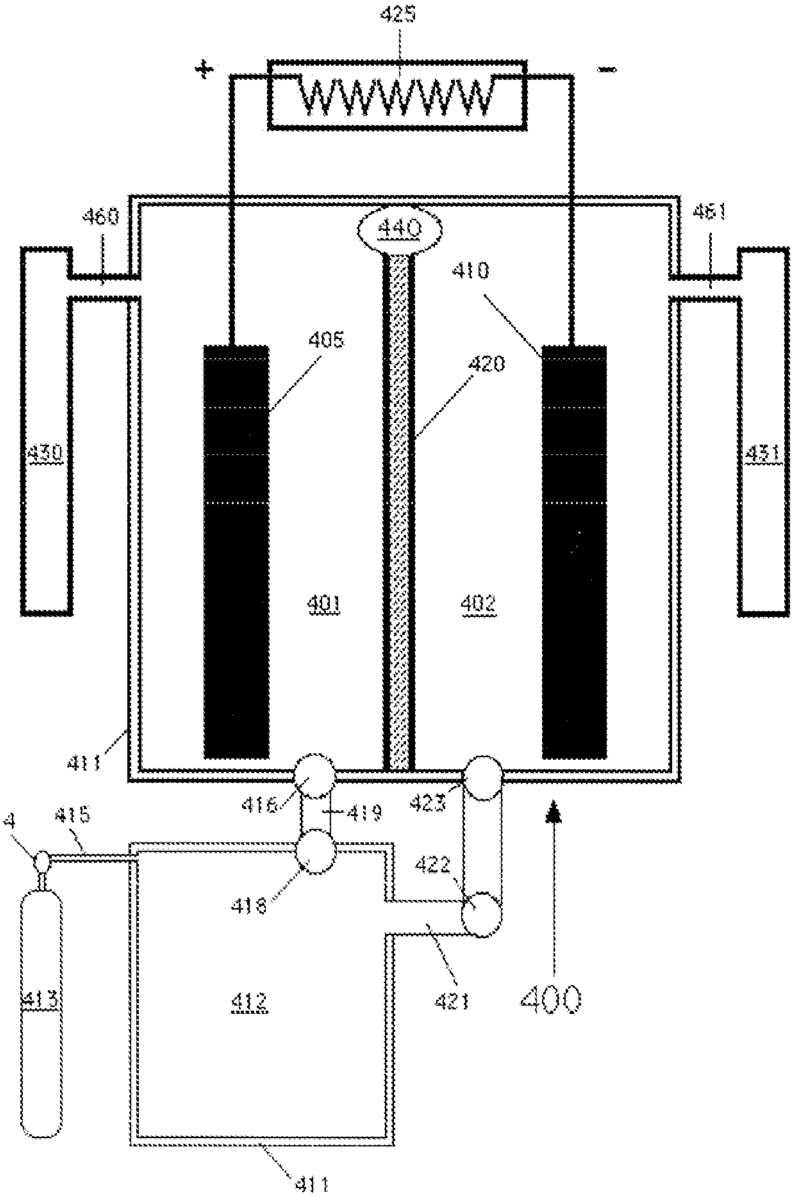
425
+
-
460
461
440
410
405
420
430
431
401
402
411
416
419
423
414
415
418
422
413
412
421
400
411

Fig. 19

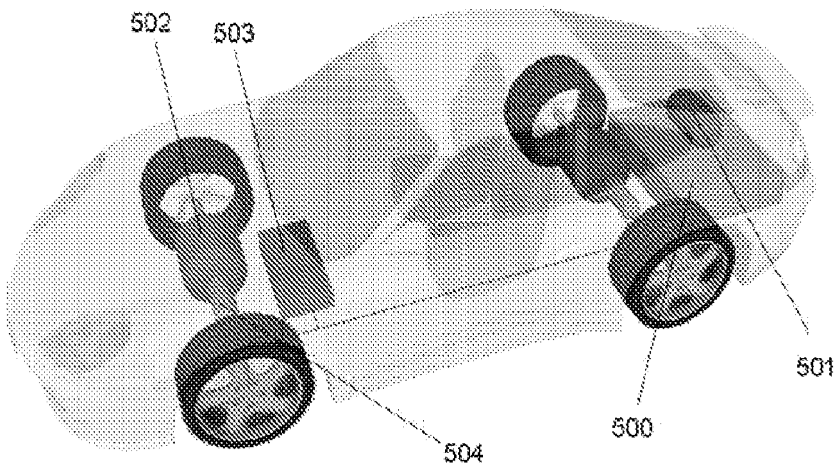

Fig. 20

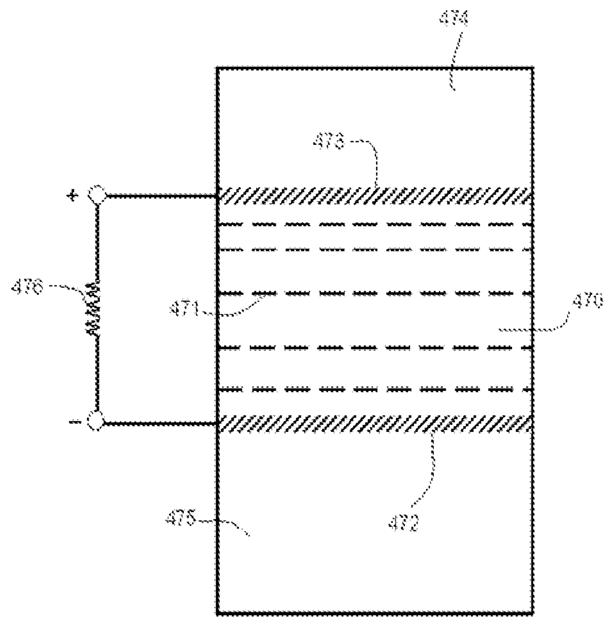

Fig. 21

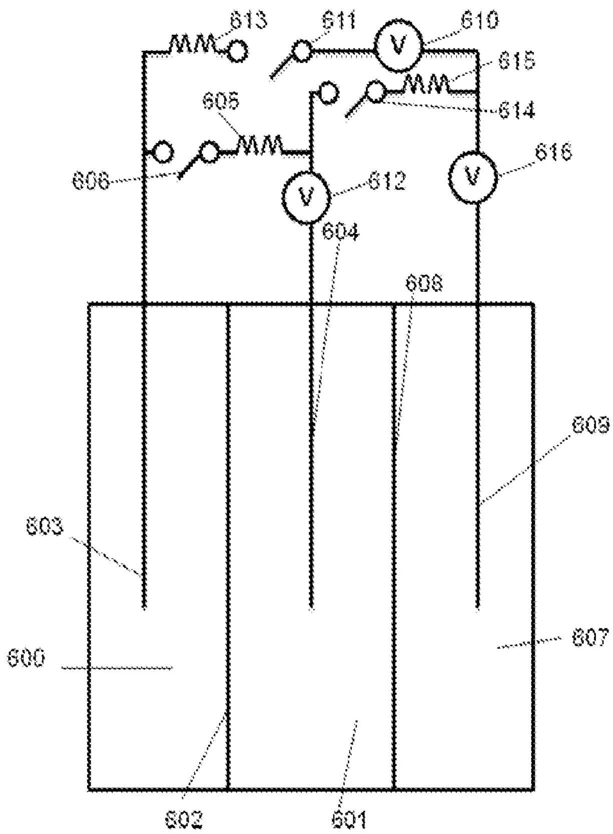
613
611
610
615
605
614
606
612
616
604
608
609
603
600
607
602
601

Fig. 22

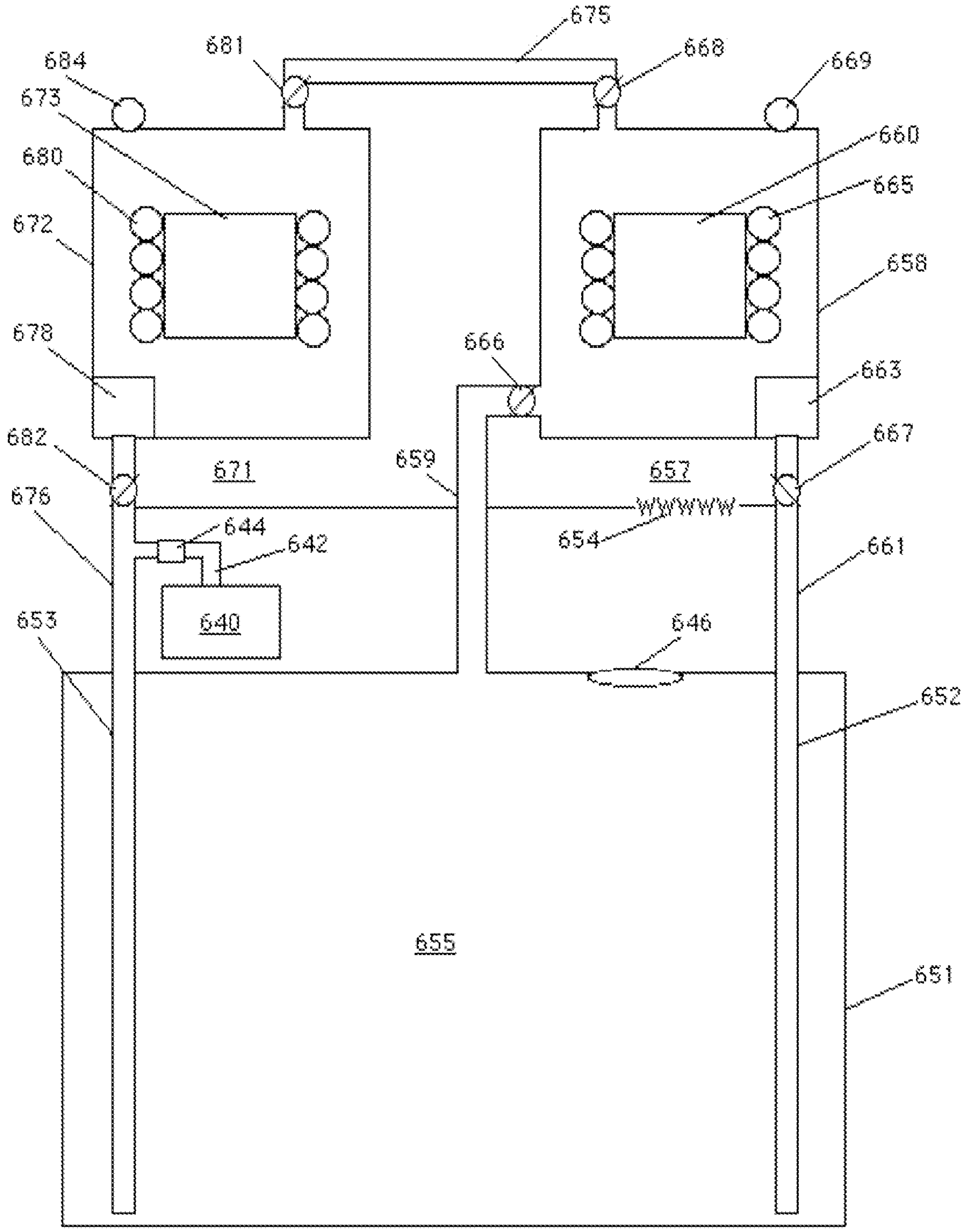
675
681
668
684
669
673
660
680
665
672
658
678
666
663
682
667
671
659
657
676
644
642
654
661
640
653
646
652
655
651

650

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 61315186 A
- US 61317176 B
- US 61329959 B
- US 61332526 B
- US 61347130 B
- US 61356348 B
- US 61358667 B
- US 61363090 B
- US 61365051 B
- US 61369289 B
- US 61371592 B
- US 61373495 B
- US 61377613 B
- US 61383929 B
- US 61389006 B
- US 61393719 B
- US 61408384 B
- US 61413243 B
- US 61419590 B
- US 61425105 B
- US 61430814 B
- US 61437377 B
- US 61442015 B
- US 61449474 B
- US 3057946 A
- US 5427657 A
- US 7759008 B2
- US 4377625 A
- US 09052072 W

### Non-patent literature cited in the description

- **M. S. DRESSELHAUS ; G. DRESSELHAUS.** Intercalation compounds of graphite. *Advances in Physics,* 2002, vol. 51 (1), 1-186